(19) Europäisches Patentamt
European Patent Office
Office européen des brevets

(11) EP 4 567 661 A1

(12) EUROPEAN PATENT APPLICATION
published in accordance with Art. 153(4) EPC

(43) Date of publication:
11.06.2025 Bulletin 2025/24

(21) Application number: 23852579.4

(22) Date of filing: 08.08.2023

(51) International Patent Classification (IPC):
G06F 40/45 (2020.01)    G06F 40/44 (2020.01)

(52) Cooperative Patent Classification (CPC):
G06F 40/44; G06F 40/45

(86) International application number:
PCT/JP2023/028984

(87) International publication number:
WO 2024/034617 (15.02.2024 Gazette 2024/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 10.08.2022 JP 2022128116

(71) Applicants:
• Sakaki, Hiroshi
Tokyo 166-0003 (JP)
• Tanaka, Takashi
Toda-shi, Saitama 335-0023 (JP)

(72) Inventor: SAKAKI Hiroshi
Tokyo 166-0003 (JP)

(74) Representative: Dragotti & Associati S.R.L.
Via Nino Bixio, 7
20129 Milano (IT)

(54) **EXAMPLE SENTENCE-DRIVEN MACHINE TRANSLATION ANALYSIS RESULT SELECTING DEVICE AND METHOD**

(57) This invention deals with improvement of example driven analysis part of filtering type which receives the OR tree which is a single tree expressing plural analysis trees obtained by application of grammar rules as a portion of input and exclusive trees which is the aggregation of temporal exclusive trees generated from example trees and exclusive trees stored in the system as another portion of input and composes single analysis tree. This invention has ability of obtaining plural common word sequences between the input sentence and example trees and ability of designating minimum common word number at the common word sequence and ability of decision of starting position of common word sequence at example trees and ability of replacing coincident words with coincident part of speech.

FIG.1

**Description**

Technical Field

This invention deals with analysis result selection apparatus and method at example sentence driven machine translation system or in more detailed explanation, this invention deals with analysis result selection apparatus and method at example sentence driven machine translation system where apparatus of this invention takes OR tree and exclusive tree as input and composes analysis tree of input sentence.

Background Art

Analysis result selection apparatus and method at example sentence driven machine translation system provided with coincident word string detection part which takes input sentence and example tree as input and obtains coincident word string between input sentence and leaf nodes of example tree and temporal exclusive tree generation part which takes example trees with leaf nodes designated as coincident words as input and generates temporal exclusive trees is conventionally known (e.g. Patent Literature 1).

Analysis result selection apparatus at example sentence driven machine translation system which receives the OR tree generated by grammar application part and temporal exclusive trees with tree value together with exclusive trees stored in the system as input has also been known (e.g. Non Patent Literature 1).

Following is detailed explanation utilizing drawings of conventional technology.

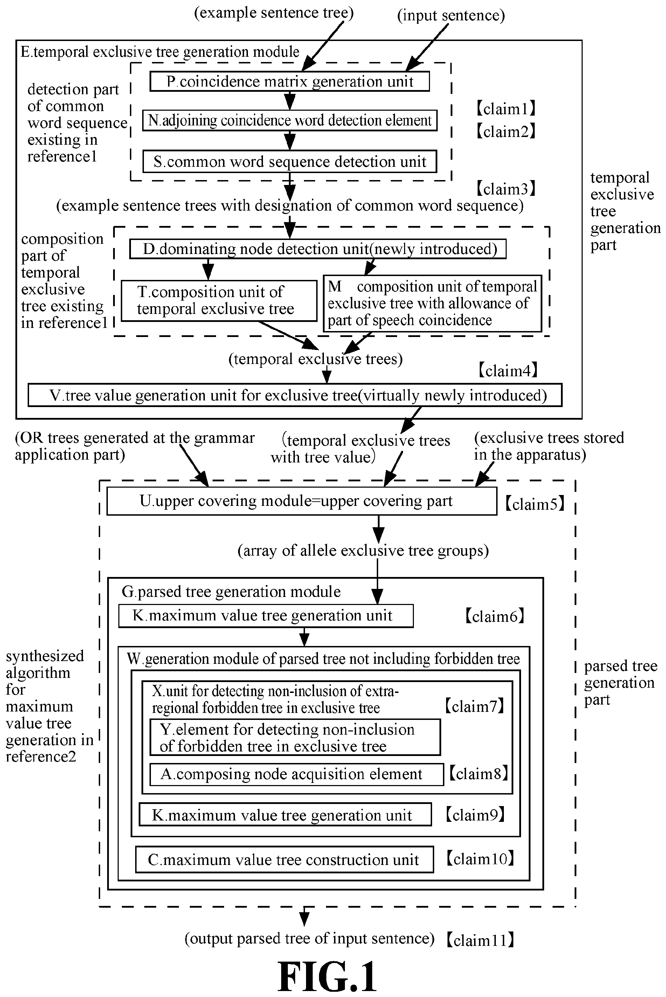

Fig.1 is to illustrate both conventional technology and this invention. The part enclosed by real line is composing portions of this invention and the part enclosed with dotted line is portions of conventional technology. Processing names of this invention are written in rectangles of real line and names of conventional technology are located to the left of rectangles of dotted line. The references associated with Fig.1 are Patent Literature 1 and Non Patent Literature 1.

The part of "detection part of common word sequence existing in reference 1" takes the input sentence and example trees as input and obtains coincident word strings between input sentence and word string made of leaf nodes of example trees. The part of "composition part of temporal exclusive tree existing in reference 1" receives input of example trees with leaf nodes designated as coincident word string and composes temporal exclusive trees. Also, "synthesized algorithm for maximum value tree generation in reference 2" takes temporal exclusive trees generated at precedent "composition part of temporal exclusive tree existing in reference 1" together with exclusive trees stored in the system and the OR tree generated at grammar application portion not treated in this patent application as input and generates the analysis tree not including forbidden trees as output of the conventional analysis result selection apparatus at example sentence driven machine translation system. As seen above, conventional technology is composed of 2 technologies. This invention conducts collective operation of operations in reference 1 and 2.

First, explanation is made for the operation of "detection part of common word sequence existing in reference 1" enclosed by rectangle of dotted line. This part takes input sentence and example trees as input and detects common word sequence or common part of speech sequence among leaf nodes of example trees. The "detection part of common word sequence existing in reference 1" utilize a stack of last in first out type and can obtain only single coincident word string with limitation of beginning position.

Next, explanation is made for the operation of "composition part of temporal exclusive tree existing in reference 1". This part generates temporal exclusive trees from example trees with marks of coincidence at their leaf nodes. The nodes on a path between a coincide leaf node and the topmost node of the example tree and nodes having brother relation with on-the-path nodes are also marked. This marking procedure is conducted for all the coincide nodes. Then nodes other than marked nodes are eliminated from the example tree generating a temporal exclusive tree. This method of "composition part of temporal exclusive tree existing in reference 1" has a defect in that only the exclusive tree with the topmost node identical with the topmost node of the example tree is obtainable.

Next, illustration is made for "synthesized algorithm for maximum value tree generation in reference 2". This part takes "OR tree generated at grammar application portion "," temporal exclusive trees with tree value", "exclusive trees stored in the system" as input and generates the output analysis tree treated as total output of analysis result selection apparatus and method at example sentence driven machine translation system and characterized as analysis tree of maximum tree value among analysis trees not including forbidden trees as its partial tree. Here, OR tree is defined to be a tree composed of plural number of analysis results aggregated in single tree by special kind of node called OR node. Temporal exclusive tree with tree value is defined to be exclusive tree generated at preceding process affiliated with tree value proportional to number of nodes in the tree. Exclusive trees stored in the system are defined to be exclusive trees stored in the analysis result selection apparatus at example sentence driven machine translation. The forbidden tree is also stored in the system but forbidden trees are not explicitly shown in Fig.1 because forbidden trees are included in the system.

As seen in Fig.1,"sythesized algorithm for maximum value tree generation in reference 2" has operation of "U.upper covering module" of this patent application as its part. Operation of upper covering succeeds when configuration of the exclusive tree coincides with the OR tree including its topmost node. In case of success, each node of exclusive tree is adjoined with the node number of OR tree node covered by the exclusive tree node. Operation of upper covering requires a lot of calculation. The "synthesized algorithm for maximum value tree generation in reference 2" has this upper covering operation in the loop of detection of inclusion of forbidden tree resulting in vast calculation effort. The reason why upper covering operation can not be separated from the algorithm in reference 2 is the situation that the tree order arrangement of allele exclusive tree array is realized by actually constructing "situation of covering at upper structure and maximum tree value tree connection at lower structure" causing recalculation of upper covering and modification of connection to lower structure when the forbidden tree extends the region of exclusive tree.

The difference between operation of conventional system and the operation of the system of this patent application is shown in the last portion of specification.

Consultation is made with reference 3 which is Non Patent Literature 2 and which does not exist in conventional system and consultation is also made with reference 4 which is Non Patent Literature 3 and witch deals with word sequence to word sequence transformation utilizing neural network, combined use of which with conventional system includes the method to increase performance of operation.

Citaiton List

Patent Literature

[Patent Literature 1] Japanese Patent No. 4389332

Non Patent Literature

[Non Patent Literature 1] Hiroshi SAKAKI, "Computer translation technique," The Institute of Electronics, Information and Communication Engineers, CORONA PUBLISHING CO., LTD, December 10, 1992, p.138-149
[Non Patent Literature 2] Hiroyuki SHINNOU, "PyTorch Natural language processing - Japanese text analysis with word2vec/LSTM/seq2seq/BERT ! (impress top gear),"Impress, March 18, 2021
[Non Patent Literature 3] Oriol Vinyals, Lukasz Kaiser, Terry Koo, Slav Petrov, Ilya Sutskever, Geoffrey Hinton,"Grammar as a foreign language,"2014, arXiv: 1412.7449

Summary of Invention

Technical Problem

The method of "detection part of common word sequence existing in reference 1" shown in Fig.1 has deficiency in that only single common word sequence with the leftmost word coincides with the leftmost word of example sentence. Generation of plural common word sequences, designation of minimum word number in the sequence, discretion of the start position of the sequence at example tree, easiness of substitute use of coincident part of speech for coincident word are necessitated.

The "composition part of temporal exclusive tree existing in reference 1" can generates only exclusive tree whose topmost node is identical with that of the example tree. Generation of exclusive tree which has topmost node identical with arbitral node of example tree and also, Interchangeability between the design policy of regarding coincidence of part of speech for coincidence as in the case of word coincidence and the policy of not including part of speech coincidence into coincidence is necessitated. This interchangeability needs alternation of structure of "detection part of common word sequence existing in reference 1" which exists at upstream of this exclusive tree generation.

Generation of exclusive tree, which has topmost node identical with arbitral node of example tree, is necessitated.

Acquisition of a score reflecting more precisely the effect of the temporal exclusive trees through calculation of the score from information possessed by coincident word or coincident part of speech is necessary.

Under the circumstance where temporal exclusive trees generated from example trees and exclusive trees stored in the system are commonly called exclusive tree, it is necessary to compose an allele exclusive tree group by upper covering a node in OR tree by generally plural exclusive trees entire nodes of which are attached with OR tree node covered and to conduct this allele tree group making process at entire OR tree nodes and to give these allele tree group the ability to be read and to be written from entire processing as to treat these tree groups as the object of entire stages existing downstream.

At an allele exclusive tree group which is aggregation of entire exclusive trees having identical topmost node, exclusive trees in the group are arranged in the order of accumulated tree value which is specific to each composing exclusive tree and which is addition of total sum of tree values of selected trees connected to leaf connecting nodes of the exclusive tree and the tree value of the exclusive tree. The alletic exclusive group in which exclusive trees are arranged in the descending order of accumulated tree value must be stored in the global memory.

The aim of this patent application is to generate an analysis tree of maximum tree value not including a forbidden tree. In this non-inclusion detection of a forbidden tree extending the range of the allele tree under survey, non-inclusion detection of lower part of the forbidden tree must be done through obtaining lower allele exclusive tree group stored in the global memory mentioned above. Above operation equipped in this patent application enables to avoid the need to include upper covering process in the loop of non inclusion detection and to avoid vast calculation which is inevitable in the system in reference 2.

On the other hand, combined use of word sequence to word sequence transformation through neural network and "analysis result selection apparatus and method at example sentence driven machine translation" treated in this patent application is necessary.

Solution to Problem

The measure to realize generation of plural common word sequences, designation of minimum word number in the sequence, discretion of the start position of the sequence at example tree, easiness of substitute use of coincident part of speech for coincident word is hereafter depicted.

Fig.1 is also the figure of this patent application. In this patent application, the part having similar function to "detection part of common word sequence existing in reference 1" is cascade connection of "P.coincidence matrix generation unit" and "N.adjoining coincidence word detection element" and "S.common word sequence detection unit". This cascade connection can generate plural common word sequence the minimum common word number of which can be designated and the start point of the sequence is not fixed.

At first, element positions where input sentence words are coincide with example sentence words are obtained and element values of these coincident elements are given by a recursion formula giving rise to matrix elements of coincident matrix through the action of "P.coincidence matrix generation unit". The operation of "N.adjoining coincidence word detection element" generates the parent child relation for every parent elements eligible to be a parent by obtaining generally plural child elements, which exist at upper left of the parent element and besides, which have the element value smaller by 1 of the parent element. From the adjacent node relations thus obtained as parent child relations "S.common word sequence detection unit" produces a tree of common word sequence" by merging nodes representing the same nodes using a recursive algorithm and selects the paths of the tree having the length lager or equal to the designated sequence length. The cascade connection are able to generate plural common word sequence of length lager or equal to designated word number with no restriction of start point.

The technical scope of the process using "P.coincidence matrix generation unit", "N.adjoining coincidence word detection element" and "S.common word sequence detection unit" is described in" claim 1.

Under the design policy where part of speech coincidence is also treated as coincidence in addition to original word coincidence, the operation of finding of common sequence between input sentence and example sequence at "P.coincidence matrix generation unit" is conducted through following process. First, the unit consults part of speech dictionary concerning with input word sequence and appends, after the word, generally plural pairs composed of part of speech name and part of speech information value to each word in word sequence and thus makes sequence of word followed by part of speech information value and composes row of the coincidence matrix with the sequence of word followed by part of speech information. Also the unit appends each leaf word in example tree the part of speech directly above in the example tree and makes sequence of word followed by part of speech name and composes column of the coincidence matrix with this sequence of word followed by part of speech name. Later, the unit finds positions of word coincidence and part of speech coincidence in the coincidence matrix. In the case of word coincidence, the unit append mark "+" to the concerning column word and in case of part of speech coincidence, the unit append symbol "+" to the coincident part of speech name and information value connected with the coincident part of speech after the concerning column word name. Then the unit gives each coincident element in the matrix coincident value through the method of recursion formula mentioned above thus completing the coincidence matrix. The operation of "N.adjoining coincidence word detection element" and "S.common word sequence detection unit" which follow "P.coincidence matrix generation unit" is the same as the case of word coincidence and this cascade processes including modification in "P.coincidence matrix generation unit" composes common sequence with allowance of part of speech coincidence which can be used as leaf nodes of the coincident example sentence tree.

The technical scope of the above process is described in "claim 2".

Regarding to acquisition of temporal exclusive tree from common word sequence of input sentence and example tree as seen in "composition part of temporal exclusive tree existing in reference 1", it become possible through the introduction of "D.dominant node detection unit" which is newly introduced in this patent application that composition of temporal exclusive tree with the topmost node not limited to the topmost node of the example tree but arbitrary chosen from the example sentence.

Under the design policy where coincidence is limited to word coincidence, the cascade connection of "D.dominant node detection unit" and "T.composition of temporal exclusive tree" receives coincident word sequence generated at the output of the method of claim 1 which regards only word coincidence as coincidence as input and finds the dominant node which is lowest among the nodes dominating all the coincident words. Further, this cascade connection obtains temporal exclusive tree by eliminating all the nodes other than nodes on the paths between coincide leaf nodes and the dominant node and nodes having brother relation with on-the-path nodes.

Cascade connection of "D.dominating node detection unit" and "M.composition unit of temporal exclusive tree with allowance of part of speech coincidence" adopting the design policy where part of speech coincidence is also treated as coincidence in addition to original word coincidence, the cascade connection receives the input including + adjoined nodes obtained by the processing of claim 2 and, in the case of word coincidence, the cascade connection designates the coincident word as the + adjoined node and ,in the case of part of speech coincidence, the cascade connection overwrites the node at part of speech position with the pair composed of part of speech name with mark "+" and information value and designates newly the part of speech name as + adjoined node. Then the cascade connection obtains temporal exclusive tree by eliminating all the nodes other than nodes on the paths between + adjoined nodes and the dominant node and nodes having brother relation with on-the-path nodes from the example tree.

The technical scope of the process concerned with cascade connection of "D.dominant node detection unit" and "T.composition of temporal exclusive tree" or "M.composition unit of temporal exclusive tree with allowance of part of speech coincidence" is described in " claim 3".

The "calculating function of the tree value of temporal exclusive tree" shown in reference 1 corresponds to "V.tree value generation unit for exclusive tree" in Fig.1, only the method where the exclusive tree value is obtained as the sum of node number of nodes in the exclusive tree is mentioned in reference 1. On the other hand, the part "V.tree value generation unit for exclusive tree" of this patent application gives, as the node value, value 1 which is word information value to coincident word node at the leaf position in the exclusive tree and part gives, as the node value, the part of speech information value adjoined to the part of speech to coincident part of speech node in the leaf position and subsequently the part gives node values to the nodes in the exclusive tree by the way where tree value of a parent node is sum of node values possessed by child nodes divided by number of child nodes and finally the part finds the tree value of the exclusive tree as the total sum of the node values of nodes in the exclusive tree which is treated as probability of existence of the exclusive tree in the sentence analysis tree finally obtained. There is another variation of tree value generation included in the part and these 2 variations are used properly according to the type of sentence concerned.

The technical scope of the process of "V.tree value generation unit for exclusive tree" is described in "claim 4".

Under the circumstance where temporal exclusive trees generated by "E.temporal exclusive tree generation module" of this patent application and exclusive trees stored in the system are commonly called exclusive tree, "U.upper covering module" of this patent application takes out an OR tree from "OR tree array" and tries to conduct sequential upper covering of the OR tree by entire exclusive trees. When upper covering succeeds, "U.upper covering module" produces the exclusive tree having nodes each of which is adjoined with the number of upper covered OR tree node which is abbreviated exclusive tree with covered nodes and outputs the exclusive tree with covered nodes to allele exclusive tree register specialized to the OR tree and adjoined with the topmost node number of the OR tree under treatment and also outputs generally plural OR trees outside of upper coverage to "OR tree array". Initial input to "U.upper covering module" is OR tree generated at grammar application part and "U.upper covering module" continues taking out avoiding duplicate treatment of OR trees, OR trees from the "OR tree array" until OR tree runs out of "OR tree array". As a result, "U.upper covering module" produces array of "allelic exclusive groups" containing exclusive trees with covered nodes.

The technical scope of the process using "U.upper covering module" is described in "claim 5.

For proper operation of "W.generation module of parsed tree not including forbidden tree" existing at downstream, it is necessary to arrange allelic exclusive trees in descending order of accumulated tree value at each allele tree group composing allele exclusive tree group array. Selected tree is defined to be the allele exclusive tree having maximum accumulated tree value among allele exclusive trees in the allele exclusive tree group and the accumulated tree value of selected tree is called selected tree value. The accumulated tree value of an allele exclusive tree is, on the other hand, defined to be aggregation of selected values of exclusive tree connected to leaf connecting nodes of the exclusive tree and the tree value of the exclusive tree. It is possible to arrange allele exclusive trees in descending order of accumulated tree value by upward tracing in OR tree in terms of choosing allele exclusive tree groups to be treated. This arrangement of allele exclusive trees in descending order of accumulated tree value is conducted by "K.maximum value tree generation unit" in "K.maximum value tree generation unit" of this patent application can arrange exclusive trees in descending order x of selected tree value without actually building, like reference 1, tree structure composed of allele e2 exclusive tree connected by lower selected trees at leaf connecting nodes of the allele exclusive tree.

The technical scope of the process using "K.maximum value tree generation unit" is described in "claim 6. The "Y.element for detecting non-inclusion of forbidden tree in exclusive tree" as a portion of "X.unit for detecting non-inclusion of extra-regional forbidden tree in exclusive tree" receives, as input, a pair composed of an exclusive tree and a forbidden tree and the element conducts coverage of the exclusive tree by the forbidden tree in the way that the topmost node of the forbidden tree covers the topmost node of the exclusive tree and the element outputs the decision of "locally no" when region of coverage by the forbidden tree is totally included in the exclusive tree and the decision of "locally yes" when coverage by forbidden tree fails and the decision of "locally uncertain" when forbidden tree covers the exclusive tree and furthermore part of the forbidden tree extends outside of the exclusive tree.

The "X.unit for detecting non-inclusion of extra-regional forbidden tree in exclusive tree" adopting recursive operation conducts coverage of an exclusive tree belonging to an exclusive tree group by a forbidden tree with the aid of "Y.element for detecting non-inclusion of forbidden tree in exclusive tree" and, when decision of "Y" is "locally yes", "X" shifts the object of processing to the next exclusive tree in the group and, when decision of "Y" is "locally no", "X" deletes the exclusive tree under processing and shifts the object of processing to the next exclusive tree and ,when decision of "Y" is "locally uncertain", "X" conducts the operation ,for all leaf nodes through which a portion of forbidden tree extends, in which "X" first obtains the pair composed of the portion of forbidden tree extending through a leaf connecting node of the exclusive tree and the allele exclusive tree group labeled by the OR node covered by the leaf connecting node and secondly "X" gives the pair to each respective lower recursive layer treating the OR node covered by the leaf connecting node and thirdly "X" waits for the decisions of all lower recursive layers and ,when some of lower layer returns the decision of "yes", "X" shifts the object of processing to the next exclusive tree in the group and ,when no lower layer returns the decision of "yes", "X" deletes the exclusive tree under processing and shifts the object of processing to the next exclusive tree.

The above description shows only the treatment of an element exclusive tree of "X.unit for detecting non-inclusion of extra-regional forbidden tree in exclusive tree" adopting recursive operation and this operation is applied to all exclusive trees in a allele exclusive tree group and, after application to all exclusive trees, "X" returns the decision of "yes" to upper layer when exclusive trees still remains in the allele exclusive tree group and "X" returns the decision of "no" to upper layer when exclusive trees are all deleted. "X" itself is designed to decide the inclusion of one forbidden tree in one allele exclusive tree group. Furthermore, operation of "X" is applied, from bottom to top order in OR tree, to all allele exclusive tree groups. Inclusion, in Fig. 1, of "Y.element for detecting non-inclusion of forbidden tree in exclusive tree" in the frame of "X.unit for detecting non-inclusion of extra-regional forbidden tree in exclusive tree" shows that "X" has "Y" as it's composing portion.

The technical scope of the process using "Y.element for detecting non-inclusion of forbidden tree in exclusive tree" and "X.unit for detecting non-inclusion of extra-regional forbidden tree in exclusive tree" is described in claim 7.

At the operation of "X.unit for detecting non-inclusion of extra-regional forbidden tree in exclusive tree" adopting recursive operation, after the 2nd time of recursion, needs to treat only one pair composed of part of forbidden tree extending from a leaf node of exclusive tree and partial exclusive tree having the leaf node of former recursion as topmost node. Nevertheless, at 1st recursion, "X" must take into consideration, as the partners to the exclusive tree, partial trees having topmost nodes chosen from any nodes other than leaf nodes of input forbidden tree. This type is expected to bring about more complete non-inclusion decision of forbidden tree.

To realize this operation, enumeration of composing nodes other than leaf nodes of input forbidden tree by "A.composing node acquisition element" shown in the frame of "X.unit for detecting non-inclusion of extra-regional forbidden tree in exclusive tree" is necessary. The type using "A.composing node acquisition element" is called "X" of total node type and the type using only total input forbidden tree for non inclusion decision is called "X" of topmost node type.

The technical scope of the process using "A.composing node acquisition element", "Y.element for detecting non-inclusion of forbidden tree in exclusive tree" and "X.unit for detecting non-inclusion of extra-regional forbidden tree in exclusive tree" with revision of operation is described in claim 8.

"X.unit for detecting non-inclusion of extra-regional forbidden tree in exclusive tree" adopting recursive operation is originally planned to be applied to entire exclusive trees in an allele exclusive tree group. To reduce calculation, there are two variations and, at first variation, decision of "yes" of the present layer is generated without further inspection at first "yes" decision in the course of sequential inspection of exclusive trees starting from the leftmost exclusive tree and, at the second variation, inclusion inspection is applied for entire exclusive trees when depth of recursion is small but further inspection is avoided, as in first variation, at first "yes" decision when recursion is larger than fixed threshold.

To restore the arrangement in descending order of accumulated tree value which is disturbed by elimination of exclusive trees and which is necessary for proper operation of variations, re-arrangement of exclusive trees in the descending order of accumulated tree value is conducted by "K.maximum value tree generation unit" after the non inclusion inspection is completed. This situation is expressed in Fig.1 by existence of "K.maximum value tree generation unit" in the frame of "W.generation module of parsed tree not including forbidden tree".

The technical scope of the process using "K.maximum value tree generation unit", is "Y.element for detecting non-inclusion of forbidden tree in exclusive tree" and "X.unit for detecting non-inclusion of extra-regional forbidden tree in exclusive tree" with revision of operation is described in claim 9.

As shown in Fig.1 depicting the configuration of this patent application, generation of all allele exclusive tree groups by "U.upper covering module" before operation start of "W.generation module of parsed tree not including forbidden tree" having, as its portion, "X.unit for detecting non-inclusion of extra-regional forbidden tree in exclusive tree" and storing of these tree groups in the global memory accessible from all processes of "X" enable to obtain and use the allelic exclusive tree group labeled by OR node of leaf connecting nodes under treatment.

At the system of reference 2, the arrangement of exclusive trees in the descending order of accumulated tree value is obtained by actually connecting a lower selected trees to each leaf connecting node At the system of reference 2 in addition, each connecting leaf node of exclusive tree is attached with the partial tree of the input OR tree having the leaf connecting node as the topmost node. At the decision of non-inclusion of a forbidden tree in an exclusive tree, construction of a new allele exclusive tree group from the partial OR tree is necessary in the case where forbidden tree extends outside of exclusive through a leaf connecting node and, moreover, the selected tree presently connected to the leaf node is not in the state of non-inclusion of forbidden tree. As in reference 2, placing upper covering operation in the processing loop where the decision of non-inclusion of forbidden tree is done brings about vast calculation. At this patent application, allelic exclusive tree groups for all OR tree nodes are constructed by "U.upper covering module" and stored in the global memory accessible from entire processing stages prior to the decision of non-inclusion and this revision makes separation of calculation consuming upper covering from decision of non inclusion of the forbidden tree.

As "G.parsed tree generation module" is dominantly composed of the deleting exclusive tree from the allele exclusive tree group array, there occurs the merit which brings about the situation that the result of an operation is reflected immediately to the subsequent operation by storing allele exclusive tree group in global memory.

As object of processing at entire processes in and after "U.upper covering module" is, in this patent application, allele exclusive tree group array, it becomes necessary to build the analysis tree which is the output of whole "analysis result selection apparatus at example sentence driven machine translation". The measure to build analysis tree is "C.maximum value tree construction unit" belonging to "W.generation module of parsed tree not including forbidden tree". "C" builds analysis tree by selecting, as the starting point, an exclusive tree in the allele exclusive tree group having the label of the topmost node of input OR tree and repeating merge of leaf nodes with the selected trees of the same OR tree node numbers.

The technical scope of the process using "C.maximum value tree construction unit" is described in claim 10.

Although example sentence trees are basically composed by human power, the analysis trees obtained by "analysis result selection apparatus at example sentence driven machine translation" are utilized as example trees through modification by human hand.

The technical scope of above process is described in claim 11.

The system of "analysis result selection apparatus at example sentence driven machine translation" (called as KATE) to which illustration has been made so far conducts sentence analysis by extracting, from the "example tree pool"(called as ETP) trees having common word sequences with the input sentence and utilizing them as portions of analysis tree. Recently, sentence analysis utilizing word sequence to word sequence (seq2seq) transformation both of KATE and STS after completion of learning by neural network (called as STS) is suggested. Identical output partial trees between outputs of KATE and STS after the process where STS first learns on ETP equipped by KATE and subsequently both of KATE and STS are fed with the same input sentences, are matching outputs of 2 systems with deferent operating principle and are considered to be trustworthy.

These identical output partial trees are utilized in 2 ways. The one is the way in which original ETP is augmented with the identical output partial trees making temporal example tree pool and sentence analysis, by KATE, of the same input sentence is conducted again. As identical output partial trees are reliable composing portion of completed analysis tree, generation of reliable analysis tree is expected. The technical scope of above process is described in claim 12.

The other is the way in which plenty of identical partial trees are generated for plenty of input sentences and thus generated identical partial trees are augmented to original ETP resulting in new "example tree pool"(ETP). This measure is expected to bring about more precise generation of analysis tree at KATE. On the other hand, learning on the identical partial trees by STS will bring about more precise analysis tree. The technical scope of the effect of identical partial trees is described in claim 12.

Comparison of conventional systems and systems of this patent application is explained at the end of the specification.

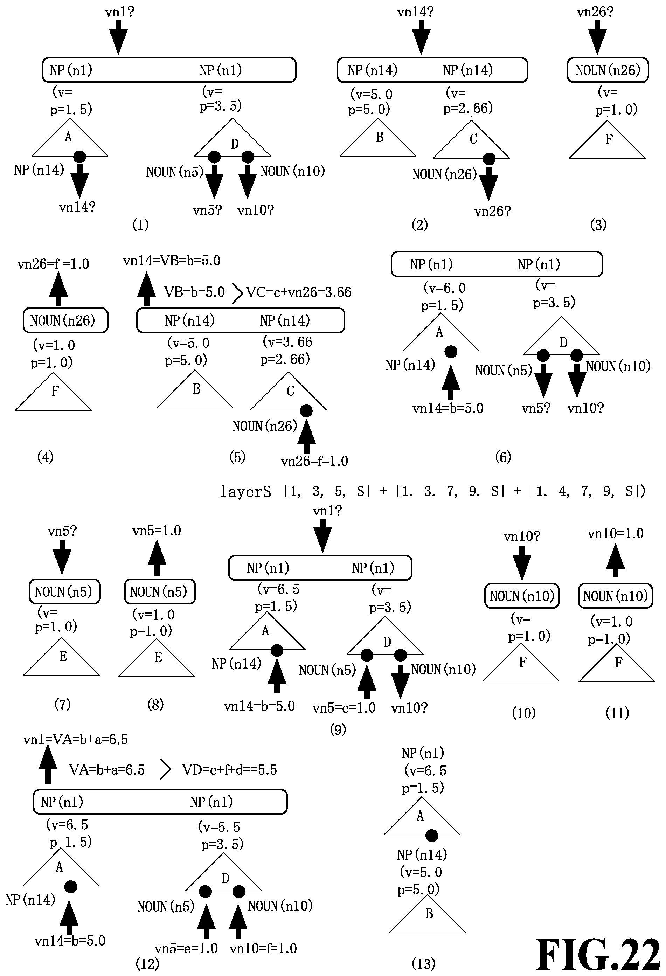

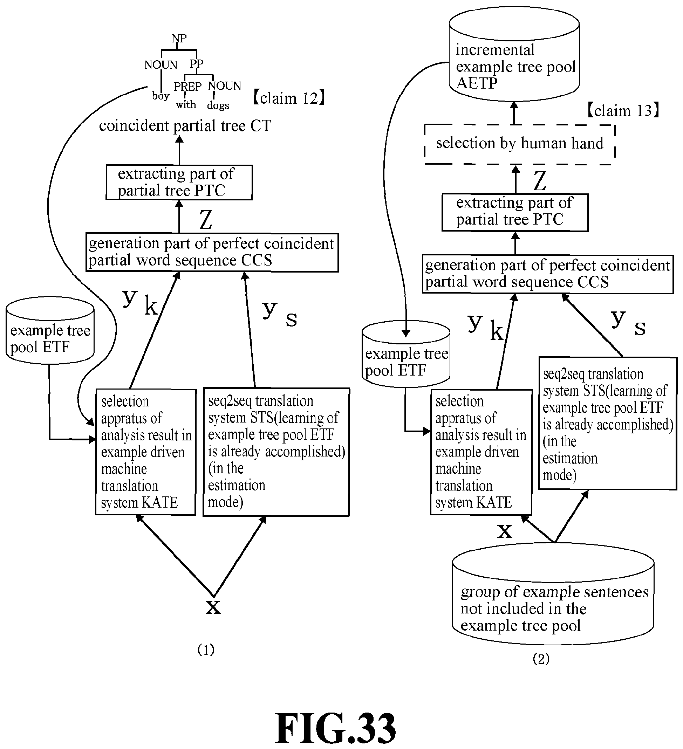

Annotations of claim 1 to claim 12 are attached to relevant portions in Fig. 1. It is also expressed that Fig.33(1) is related with claim 13 and Fig.22(2) is related with claim 14.


Brief Description of Drawings

    Fig.1 is a block diagram of translated result selection apparatus with the use of recursive process calling;

Fig.2 illustrates a coincidence matrix at coincidence matrix generation unit;

Fig.3 illustrates a method for acquisition of adjoining element in adjoining coincidence word detection element;

Fig.4 illustrates a whole structure of adjoining element designation in adjoining coincidence word detection element;

Fig.5 illustrates a tree expression of adjoining element designation in adjoining coincidence word detection element;

Fig.6 illustrates a path acquisition common word sequence detection unit;

Fig.7 illustrates a coincidence matrix between input sentence word sequence and example sentence word sequence;

Fig.8 illustrates a common word in example sentence tree and example sentence exclusive tree;

Fig.9 illustrates an acquisition of dominating node;

Fig. 10 illustrates an expansion to the treatment of part of speech sequence;

Fig.11 illustrates a node value of tree average type;

Fig.12 illustrates a node value of path average type;

Fig. 13 illustrates an input OR tree;

Fig.14 illustrates a result of OR node expansion at input OR tree;

Fig.15 illustrates an exclusive tree used at upper covering module;

Fig. 16 illustrates a result of 1st application of upper covering;

Fig.17 illustrates a result of 2nd application of upper covering;

Fig.18 illustrates a result of 3rd, 4th and 5tu application of upper covering;

Fig.19 illustrates a process of tree fabrication from array of allele exclusive tree groups;

Fig.20 illustrates a results of tree fabrication from array of allelic exclusive tree groups;

Fig.21 illustrates an abbreviated expression of array consisting of allelic exclusive tree groups used for acquisition of tree value;

Fig.22 illustrates a process example of algorithm to acquire maximum tree value tree;

Fig.23 illustrates an output of maximum value tree generation unit;

Fig.24 illustrates 3 parsed trees obtained as output of maximum value tree generation unit;

Fig.25 illustrates a procedure of element for detecting non-inclusion of forbidden tree in exclusive tree;

Fig.26 illustrates an examples of forbidden tree;

Fig.27 illustrates a topmost node type decision for non-inclusion of forbidden tree in exclusive tree;

Fig.28 illustrates an application result of topmost node type decision about non-inclusion of forbidden tree in exclusive tree;

Fig.29 illustrates an application result of all node type decision about non-inclusion of forbidden tree in exclusive tree;

Fig.30 illustrates an application result of all node type decision about non-inclusion of forbidden tree in exclusive tree (1st application);

Fig.31 illustrates an application result of all node type decision about non-inclusion of forbidden tree in exclusive tree (2nd application);

Fig.32 illustrates an array of allelic exclusive tree groups not including two forbidden trees;

Fig.33 illustrates a cooperative operation with neural network translation system;

Fig.34 illustrates a block diagram of translated result selection apparatus with the use of recursive process calling;

Fig.35 is a flow chart showing operation of coincidence matrix generation unit;

Fig.36 illustrates a trees expressing parent child relation at coincidence matrix;

Fig.37 is a flow chart of adjoining coincidence word detection element;

Fig.38 illustrates an input and output of common word sequence detection unit;

Fig.39 is a flow chart of common word sequence detection unit;

Fig.40 illustrates an expression of data at operation of common word sequence detection unit;

Fig.41 illustrates an operation trace of common word sequence detection unit;

Fig.42 illustrates an operation trace of common word sequence detection unit;

Fig.43 illustrates an operation trace of common word sequence detection unit;

Fig.44 illustrates an operation trace of common word sequence detection unit;

Fig.45 illustrates an input and output of common word sequence detection unit treating example sentence;

Fig.46 illustrates an operation trace of common word sequence detection unit treating example sentence;

Fig.47 illustrates a schematic illustration of operation of dominating node detection unit;

Fig.48 is a flow chart of dominating node detection unit;

Fig.49 illustrates an operation trace of 1st stage of dominating node detection unit;

Fig.50 illustrates an operation trace of 1st stage of dominating node detection unit;

Fig.51 illustrates an operation trace of 2nd stage of dominating node detection unit;

Fig.52 is a flow chart of composition unit of temporal exclusive tree;

Fig.53 illustrates an abbreviated expression used for illustration of composition unit of temporal exclusive tree;

Fig.54 illustrates an operation trace of composition unit of temporal exclusive tree;

Fig.55 illustrates an operation trace of composition unit of temporal exclusive tree;

Fig.56 illustrates an operation trace of composition unit of temporal exclusive tree in the case of 1 coincident node;

Fig.57 illustrates an example of part of speech dictionary;

Fig.58 illustrates an operation of composition unit of temporal exclusive tree with allowance of part of speech coincidence in case of word coincidence;

Fig.59 illustrates an operation of composition unit of temporal exclusive tree with allowance of part of speech coincidence where part of speech coincidence occurs;

Fig.60 is a flow chart of composition unit of temporal exclusive tree with allowance of part of speech coincidence;

Fig.61 illustrates a tree-average node value;

Fig.62 illustrates a path-average node value;

Fig.63 illustrates a square of path-average node value;

Fig.64 illustrates a data items produced at tree value generation unit for exclusive tree;

Fig.65 is a flow chart of tree value generation unit for exclusive tree;

Fig.66 illustrates an exclusive tree input to tree value generation unit for exclusive tree;

Fig.67 illustrates a values generated at the operation of tree value generation unit for exclusive tree;

Fig.68 illustrates a construction of data stored in register CR of tree value generation unit for exclusive tree;

Fig.69 illustrates an operation process of tree value generation unit for exclusive tree;

Fig.70 illustrates an operation process of tree value generation unit for exclusive tree;

Fig.71 illustrates an operation process of tree value generation unit for exclusive tree;

Fig.72 illustrates an operation process of tree value generation unit for exclusive tree;

Fig.73 illustrates an operation process of tree value generation unit for exclusive tree;

Fig.74 illustrates an input and output obtained through algorithm of V.tree value generation unit for exclusive tree;

Fig.75 illustrates a function of upper covering module;

Fig.76 illustrates an array of exclusive trees;

Fig.77 illustrates an upper covering of OR tree by exclusive tree;

Fig.78 illustrates an upper covering of OR tree by exclusive tree;

Fig.79 illustrates an upper covering of OR tree by exclusive tree;

Fig.80 illustrates an upper covering of OR tree by exclusive tree;

Fig.81 is a flow chart of upper covering module;

Fig.82 illustrates a correspondence between original expression and abbreviated expression respectively of input OR tree;

Fig.83 illustrates a correspondence between original expression and abbreviated expression at composing parts of input OR tree;

Fig.84 illustrates a correspondence between original expression and abbreviated expression of exclusive trees;

Fig.85 illustrates an operation of upper covering module;

Fig.86 illustrates an operation of upper covering module;

Fig.87 illustrates an operation of upper covering module;

Fig.88 illustrates an operation of upper covering module;

Fig.89 illustrates an operation of upper covering module;

Fig.90 illustrates an operation of upper covering module;

Fig.91 illustrates an operation of upper covering module;

Fig.92 illustrates an operation of upper covering module;

Fig.93 illustrates an operation of upper covering module;

Fig.94 illustrates an operation of upper covering module;

Fig.95 illustrates an operation of upper covering module;

Fig.96 illustrates an operation of upper covering module;

Fig.97 illustrates an operation of upper covering module;

Fig.98 illustrates an operation of upper covering module;

Fig.99 illustrates an operation of upper covering module;

Fig.100 illustrates an operation of upper covering module;

Fig.101 illustrates an operation of upper covering module;

Fig.102 illustrates an operation of upper covering module;

Fig.103 illustrates an operation of upper covering module;

Fig.104 illustrates an operation of upper covering module;

Fig.105 illustrates an operation of upper covering module;

Fig.106 illustrates an operation of upper covering module;

Fig.107 illustrates an operation of upper covering module;

Fig.108 illustrates an operation of upper covering module;

Fig.109 illustrates an operation of upper covering module;

Fig.110 illustrates an operation of upper covering module;

Fig.111 illustrates an operation of upper covering module;

Fig.112 illustrates an operation of upper covering module;

Fig.113 illustrates an operation of upper covering module;

Fig.114 illustrates an operation of upper covering module;

Fig.115 illustrates an operation of upper covering module;

Fig.116 illustrates an operation of upper covering module;

Fig.117 illustrates an operation of upper covering module;

Fig.118 illustrates an operation of upper covering module;

Fig.119 illustrates a block diagram of parsed tree generation part;

Fig.120 illustrates an output of upper covering part;

Fig.121 illustrates a trees made by connection of exclusive trees;

Fig.122 illustrates an original expression description of trees made by connection of exclusive trees;

Fig.123 illustrates a mechanism for obtaining tree of maximum tree value;

Fig.124 illustrates an operation example of algorithm obtaining tree of maximum tree value;

Fig.125 is a flow chart of maximum value tree generation unit;

Fig.126 illustrates an operation of maximum value tree generation unit;

Fig.127 illustrates an operation of maximum value tree generation unit;

Fig.128 illustrates an operation of maximum value tree generation unit;

Fig.129 illustrates an operation of maximum value tree generation unit;

Fig.130 illustrates a trees recorded in allele exclusive tree register ACR which consists output of K.maximum value tree generation unit;

Fig.131 illustrates an input to maximum value tree generation unit after partial deletion of exclusive tree;

Fig.132 illustrates an output from K.maximum value tree generation unit after partial deletion of exclusive tree;

Fig.133 illustrates a change of analysis tree as a result of exclusive tree deletion;

Fig.134 is a flow chart of subunit to arrange exclusive trees in descending order of tree value;

Fig.135 is a flow chart of maximum tree value tree assembly unit;

Fig.136 illustrates an output of maximum tree assembly unit when exclusive tree deletion does not take place;

Fig.137 illustrates an output of maximum value tree generation unit illustrated in original expression under the situation that exclusive tree deletion does not take place;

Fig.138 illustrates an output of maximum tree assembly unit as a tree with topmost node n1 illustrated in original expression under the situation that exclusive tree deletion does not take place;

Fig.139 illustrates a covering method to obtain maximum tree value tree with topmost node n1 generated from input OR tree;

Fig.140 illustrates an output of maximum tree assembly unit as a tree with topmost node n1 under the situation that exclusive tree elimination takes place;

Fig.141 illustrates an output of maximum tree assembly unit as a tree with topmost node n1 illustrated in original expression under the situation that exclusive tree elimination takes place;

Fig.142 illustrates an output of maximum value tree generation unit illustrated in abbreviated expression;

Fig.143 illustrates an output of maximum value tree generation unit illustrated in original expression;

Fig.144 illustrates a forbidden tree used in generation module of parsed tree not including forbidden tree;

Fig.145 is an illustration of node merge in output of upper covering module;

Fig.146 illustrates an allelic exclusive tree group at the output of detecting unit of non-inclusion of forbidden tree with out of range extension;

Fig.147 illustrates an analysis tree at the output of detection unit of non inclusion of forbidden tree with out of range extension;

Fig.148 illustrates an example of forbidden tree;

Fig.149 is a flow chart of decision element of non-inclusion of forbidden tree in exclusive tree;

Fig.150 illustrates an operation of decision element of non-inclusion of forbidden tree where decision of locally uncertain is output;

Fig.151 illustrates an operation of decision element of non-inclusion of forbidden tree where decision of locally no is output;

Fig.152 illustrates an operation of decision element of non-inclusion of forbidden tree where decision of locally yes is output;

Fig.153 is a flow chart of detection unit of non-inclusion of forbidden tree with out of range extension (topmost node type);

Fig.154 illustrates an exclusive tree input to detection unit of non-inclusion of forbidden tree with out of range extension;

Fig.155 illustrates a forbidden tree input to detection unit of non-inclusion of forbidden tree with out of range extension;

Fig.156 illustrates an operation of detection unit of non-inclusion of forbidden tree with out of range extension;

Fig.157 illustrates an operation of detection unit of non-inclusion of forbidden tree with out of range extension;

Fig.158 illustrates an operation of detection unit of non-inclusion of forbidden tree with out of range extension;

Fig.159 illustrates an output of maximum value tree generation unit;

Fig.160 illustrates an analysis tree obtained from example sentence tree;

Fig.161 is a flow chart of main decision process;

Fig 162 is a flow chart of detection unit of non-inclusion of forbidden tree with out of range extension including abbreviation of main decision process;

Fig 163 is a flow chart of entire node type configuration of the unit to detect non-inclusion of forbidden tree with out of range extension including abbreviation of main decision process;

Fig 164 illustrates a forbidden tree to illustrate entire node type configuration of unit to detect non-inclusion of forbidden tree with out of range extension;

Fig 165 illustrates an operation of entire node type configuration of unit to detect non-inclusion of forbidden tree with out of range extension;

Fig 166 illustrates an operation of entire node type configuration of unit to detect non-inclusion of forbidden tree with out of range extension;

Fig 167 illustrates an operation of entire node type configuration of unit to detect non-inclusion of forbidden tree with out of range extension;

Fig 168 illustrates an input trees for acquisition of component nodes;

Fig 169 is a flow chart of composition node acquisition element;

Fig 170 illustrates an operation of composition node acquisition element;

Fig 171 illustrates an operation of composition node acquisition element;

Fig 172 is a flow chart of generation module of parsed tree not including forbidden tree;

Fig.173 illustrates an output of maximum value tree generation unit illustrated in original expression;

Fig.174 illustrates a forbidden trees used for showing operation of generation module of parsed tree not including forbidden tree;

Fig.175 illustrates an operation of generation module of parsed tree not including forbidden tree;

Fig.176 illustrates an operation of generation module of parsed tree not including forbidden tree;

Fig.177 illustrates an operation of generation module of parsed tree not including forbidden tree;

Fig.178 illustrates an operation of generation module of parsed tree not including forbidden tree;

Fig.179 illustrates an operation of generation module of parsed tree not including forbidden tree;

Fig.180 illustrates an operation of generation module of parsed tree not including forbidden tree;

Fig.181 illustrates an analysis tree not including both of two forbidden trees;

Fig.182 illustrates an analysis tree output before application of forbidden tree inspection;

Fig.183 illustrates an analysis tree not including 1 out of 2 forbidden trees;

Fig.184 illustrates an estimation operation of basic type of seq2seq system;

Fig.185 illustrates a training operation of basic type of seq2seq system;

Fig.186 illustrates an estimation operation of seq2seq system with attention;

Fig.187 illustrates a training operation of seq2seq system with attention;

Fig.188 illustrates an expression way of tree configuration in linear character array;

Fig.189 illustrates an expression example of tree configuration in linear character array;

Fig.190 illustrates an adjustable part in analysis result selection apparatus in example sentence driven machine translation;

Fig.191 illustrates a seq2seq translation system in estimation phase;

Fig.192 illustrates a composition of coincident partial trees;

Fig.193 illustrates an utilization of coincident partial trees as additional example trees;

Fig.194 illustrates an augmentation of example tree pool;

Fig.195 illustrates a detection of perfectly coincident partial word sequence;

Fig.196 is a flow chart of generation part of perfectly coincident partial word string CCS;

Fig.197 is a flow chart of partial tree cutting out unit PTC;

Fig.198 illustrates a pursuit of operation of partial tree cutting out unit PTC;

Fig.199 illustrates an example word sequence and input word sequence in reference 1;

Fig.200 illustrates a detection operation of coincident word sequence in reference 1;

Fig.201 illustrates a block diagram of generation of synthetic maximum tree value expansion tree;

Fig.202 illustrates an input OR tree and synthetic maximum tree value expansion tree required;

Fig.203 illustrates an upper covering result of input OR tree;

Fig.204 illustrates an array of cover and maximum structure and covering by forbidden tree of synthetic maximum tree value expansion tree;

Fig.205 illustrates a cover and maximum structure represented by synthetic maximum tree value expansion tree and OR tree newly generated as object of processing;

Fig.206 illustrates a cover and maximum structure generated from lower OR trees designated as object of processing;

Fig.207 illustrates a cover and maximum cumulated in 2 layers;

Fig.208 illustrates an investigation concerning with forbidden tree covering to deleted maximum tree value expansion tree;

Fig.209 illustrates an example of new upper covering result of input OR tree;

Fig 210 is a flow chart explained herein of unit to detect non-inclusion of forbidden tree with out of range extension;

Fig 211 illustrates an input to unit to detect non-inclusion of forbidden tree with out of range extension;

Fig 212 illustrates a forbidden tree on which inclusion is investigated;

Fig 213 illustrates an operation summary of unit to detect non-inclusion of forbidden tree with out of range extension;

Fig.214 illustrates an output of maximum value tree generation unit;

Fig.215 illustrates an analysis trees generated from example sentence tree;

Fig.216 illustrates a seq2seq translation system of noun phrase separation type according to an embodiment of the invention;

Fig.217 illustrates an analysis tree and its S expression expressing according to an embodiment of the invention;

Fig.218 is a flow chart of a selection of noun phrase for separation according to an embodiment of the invention;

Fig.219 is an example of a selection of noun phrase for separation according to an embodiment of the invention;

Fig.220 is an example of a selection of noun phrase to be separated according to an embodiment of the invention;

Fig.221 is an example of a determination of scopes of noun phrase to be separated according to an embodiment of the invention;

Fig.222 is an example of a noun phrase extraction operation to be separated according to an embodiment of the invention; and

Fig.223 is an example of a language transformation according to an embodiment of the invention.

[Description of Embodiments]

Following is the detailed explanation with the consultation of figures to the status of this invention.

[The outline of individual method and function to solve problems]

First, the operation of "P. coincidence matrix generation unit" shown in the block diagram of Fig.1 is dealt with. The object treated here is obtaining common letter sequences between input letter array [a b c a c] and example letter array [a c b a c] with allowance of inclusion of non-coincident letters and "P. coincidence matrix generation unit" is in charge of the first stage of this processing.

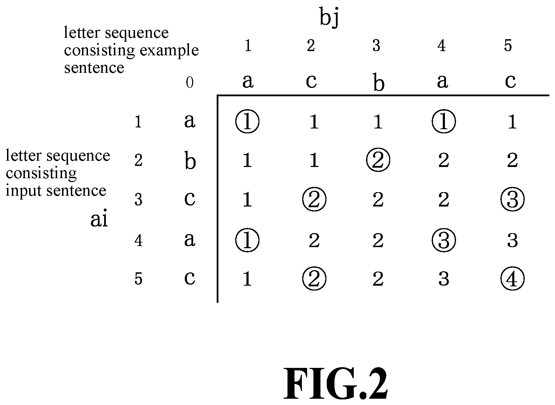

Here, aforementioned symbols a, b, c are treated as letters. At Fig.2, the input information composed of letter numbers (1,-, 5) and letters (a, b, c) are positioned at the vertical axis and the variable represents the input letter of ith number. For example a3 is letter c. The example information is positioned at the horizontal axis and, as at the vertical axis, is composed of letter numbers (1,-, 5) and letters (a, b, c). The variable bj represents the example letter of jth number. For example, b3 is letter b.

Hereafter, illustration for the outline of the operation of "analysis result selection apparatus and at example sentence driven machine translation" is made. The illustration follows the block diagram of "analysis result selection apparatus and at example sentence driven machine translation" and is concentrated on the outline of operation at composing elements and data transfer between these elements. The detailed description for the proof of feasibility is skipped. To keep correspondence between "detailed explanations of invention" made later, the same figures as the figures appearing in the detailed explanation, excepting a few figures, are used in this outline explanation.

Following the explanation on vertical and horizontal axis, the explanation on element values in the coincident matrix is made. The variable $p_{i,j}$ represents element values in Fig.2. The first suffix which is i represents letter number in the vertical axis and the 2nd suffix which is j represents letter number in the horizontal axis. For example, the value of the variable $p_{2,2}$ is 2 and the value of $p_{2,3}$ is 2. The circled elements exist at the positions where relation of $a_i=b_j$ is established. For example, $p_{2,3}$ shown above is located at the cross point of the position of variable a2 which is letter b and variable b3 which is also letter b and subsequently is circled.

Here, equation (1) is applied. Starting with the value 0 belonging to the variable p at the 0th position, in Fig.2, of vertical and horizontal axis's.

$$p_{i,j} = \begin{cases} p_{i-1,j-1} + 1 & if \quad a_i = b_j \\ max\{p_{i-1,j}, \; p_{i,j-1}\} & if \quad a_i \neq b_j \end{cases} \qquad (1)$$

The first line of this equation demands that p value at the position where ai equals to bj is obtained by addition of value 1 to the p value at upper left position. The second line of this equation demands that the p value at the position where ai and bj are different is obtained as the lager value among the p value at the position upper by 1 row and that of position 1 column to the left. Under the condition that p0,0 positioned outside of the matrix has value 0, application of equation (1) starts at the column 1 of 1st row and scans 1st row from column 1 to the last column and, after 1st row, scans 2nd row from 1st column to 1st column, and so on.

As a1 and b1 coincide, for example, the value of p1,1 is obtained as 1 by adding 1 to the value of p0,0, which is 0. The value of p2,5, which is not at coinciding position, is 2 which is the lager value among left value of 2 and upper value of 2.

The generation of this coincide matrix is conducted by "P.coincidence matrix generation unit".

Next, the operation of the second processing for "generation of common letter sequence with allowance of inclusion of non-coincide letters", which is conducted by "N.adjoining coincidence word detection element" is shown. This operation is consisted of finding, in the matrix of Fig.2, generally plural child elements each of which has element value smaller than 1 of the element value of the parent element and which, furthermore, is situated at the position satisfying the condition of m<i and n<j where position of child element is (m,n) and position of the parent element is (i,j). This operation is repeated choosing all coincident nodes as the parent nodes. The parent element p4,4, for example, has p value or element value of 3. Child elements having element value 2 and positioned upper left are p2,3 and p3,3. Here, arrows from the parent to child elements are drawn to express parent-child relation.

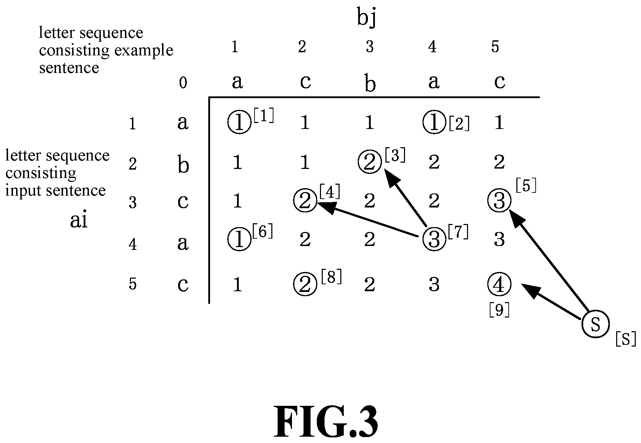

Starting element S is set, in Filg.3, at the position bottom right of all matrix elements. Arrows are extended from the starting element to generally plural elements which have element values lager than design value L and which are not child nodes of other parent node. At Fig.3, arrows are extended of elements p3, 5 and p5, 5 and arrow is not extended to element p5,2 which has the element value smaller than 3 which is minimum design length.

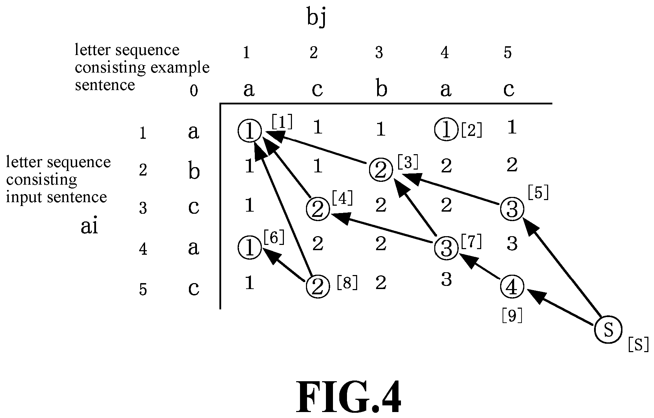

Designation of adjacent nodes in Fig.4 is obtained after above processing for all coincident nodes including the starting node S.

Numbers enclosed in square brackets in Fig.4 are attached to distinguish elements. For example the expression [4] is attached to the element p3,2. To the starting node S the expression of [S] is attached.

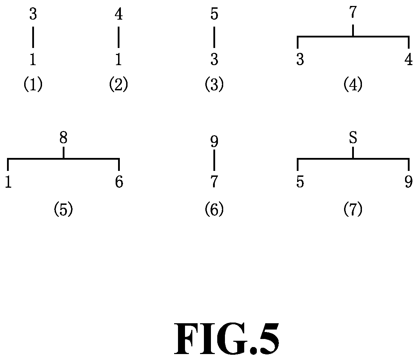

Fig.5 is the tree expression of the designation of parent-child relations in Fig.4. The processes of obtaining adjacent elements as shown in Fig.3 and obtaining total adjacent element designation shown in Fig.4 and obtaining tree expression in Fig.5 are conducted by "N.adjoining coincidence word detection element".

At Fig.4, paths [S, 5, 3, 1], [S, 9, 7, 3, 1] and [S, 9, 3, 4, 1] can be detected. These are "common letter sequence with allowance of inclusion of non-coincide letters" between input letter array ai and letter array of example sentence bj. Sequences [1, 3, 5], [1, 3, 7, 9], and [1, 4, 7, 9] which are common sequence are obtained by inversion of order at the paths and elimination of the element S.

The sequence [1, 3, 5], for example, shows that the letter a of 1st row, b of 2nd row and letter c of 3rd row respectively of input sentence constitute a common word sequence. Here, the sequence [a, b, c] is common letter sequence. At the sequence [1, 4, 7, 9], on the other hand, shows that the letter a of 1st row, the letter c of 3rd row, the letter a of 4th row and the letter c of 5th respectively of input sentence constitute a common word sequence [a, c, a, c].

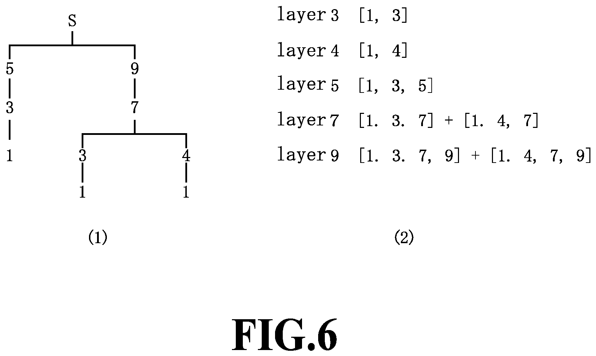

The operation of constituting common letter sequence is conducted by "S.common word sequence detection unit" shown in the block diagram of Fig.1. The outline of the operation is illustrated here with the aid of Fig.6. Fig.6(1) is obtained by merging the same nodes in Fig.5, which expresses designation of adjacent elements. The topmost node of the tree is S

The paths in Fig.6(1) are [S, 5, 3, 1], [S, 9, 7, 3, 1] and [S, 9, 3, 4, 1] and are the same as the paths in Fig.4. Therefore, common letter sequences are obtainable from the figure. The tree of the type of Fig.6(1) can be called tree of path.

At the recursion process treated here, correspondence of each node in Fig.6(a) to a layer is established. Each layer of the process receives generally plural paths from lower layers and extends these paths by adding its layer number and sends these extended paths to upper layer. Fig.6(2) shows the process. Here, layer 3 receives the path [1] sent from layer 1 and extends the path with its layer number making path [1, 3] and send to upper layer. Similarly layer 4 sends the path [1, 4] to upper layer. Layer 5 extends the path [1, 3] to [1, 3, 5] by addition of its number at the end of the path received and send to upper layer. Layer 7 receives 2 paths [1, 3] and [1, 4] from lower layers and extends these paths with its layer number making paths [1, 3, 7] and [1, 4, 7] and sends to upper. Layer 9 receives 2 paths [1, 3, 7] and [1, 4, 7] from lower layer and extends the paths with its number making [1, 3, 7, 9] and [1, 4, 7, 9] and sends upward. Lastly layer S receives paths [1, 3, 5], [1, 3, 7, 9] and [1, 4, 7, 9] and extends them with layer number S and outputs the result to outside of process.

At the end, the last layer number S is deleted and the paths [1, 3, 5}, [1, 3, 7, 9] and [1, 4, 7, 9] which are the same as paths received by S are obtained. These paths represent the common letter sequences. The "S.common word sequence detection unit" receives the tree expressing adjoining elements generated at "N.adjoining coincidence word detection element" and conducts path-finding operation shown above through recursive process.

To make explanation simple, letters instead words are used so far at the explanation for the operation of "P.coincidence matrix generation unit", "N.adjoining coincidence word detection element" and "S.common word sequence detection unit". As the principle of commonality between letter sequences is applicable for commonality of word sequences, commonality of word sequences is treated hereafter.

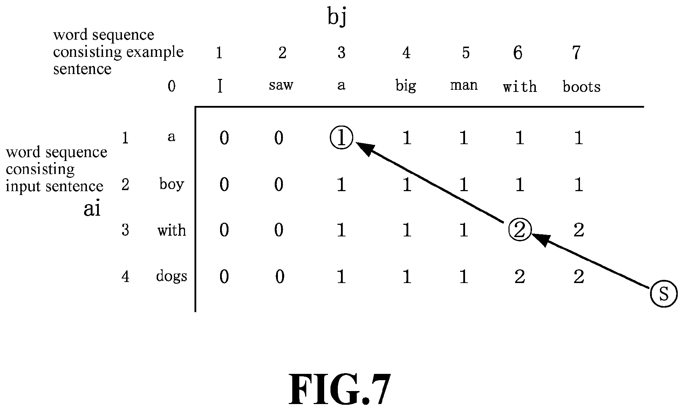

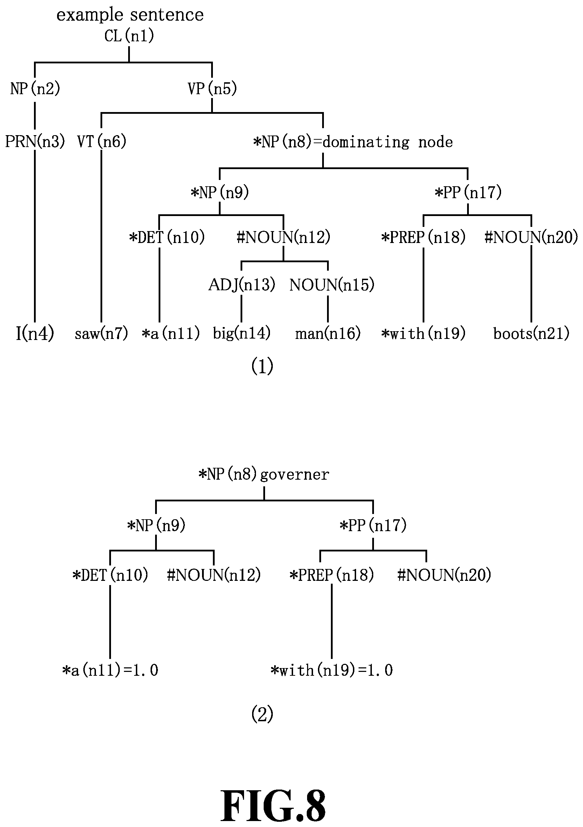

Fig.7 is the example of coincidence matrix used hereafter. Henceforth, coincidence matrix concerning with "common word sequence with allowance of inclusion of non-coincide words" is treated. The input sentence is the word array of (a boy with dogs) and the example tree is that of Fig.8(1) having leaf nodes of (I saw a big man with boots). In this case, a common word sequence having two coincident words is obtained through the function of "P.coincidence matrix generation unit", "N.adjoining coincidence word detection element" and "S.common word sequence detection unit" explained so far. Here, words "a" and "with" in the example tree of Fig.8(1) are designated as coincident words. Asterisk "*" are attached to the coincident words. Hereafter until the end of this specification, the example sentence introduced at Fig.7 is used for explanation.

Next, explanation is made for the part "D.dominating node detection unit" shown in Fig.1. To the node having node name "NP" and node number "n8", a note "dominating node" is attached. Dominating node is defined as "the node situated lowest among nodes dominating all coincident words".

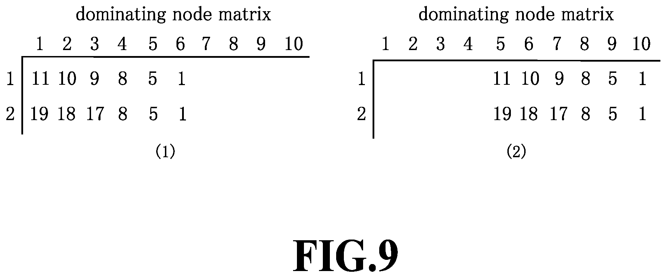

Fig.9(1) shows the trajectories of upward movement, in the tree of Fig.8(1), from 2 coincident words to the topmost word. Fig.9(1) belongs to the category of dominating node matrix. First line is trajectory of node number n11 of coincident word "a" to node number n11 of topmost node and second line is trajectory of coincident word "with". The dominating matrix of Fig.8(2) is obtained by rightward movement of the information in the dominating node matrix of Fig.9(1) to the right justification position. This movement aligns the positions of topmost nodes irrespective of the difference of path between coincident words to topmost nodes. The number of columns of dominating node matrix must be larger than trajectory length. The dominating node is found to be leftmost column at which elements of the all rows are the same. In the case of Fig.9(2), node n8 is the dominating node. As seen so far, "D.dominating node detection unit" detects the dominating node.

Next, operation of "T.composition unit of temporal exclusive tree" is dealt with.

As seen before, asterisks "*" are attached to the coincident words of a(n11) and with(n19) in Fig.8(1). The nodes on the trajectories from coincident words to the topmost node are also attached with asterisks "*". Then brother nodes of the nodes with asterisks "*" which themselves are not attached with asterisks "*" yet are attached with sharps "#". Fig.8(1) shows the situation. By deleting nodes without symbols "*", "#" from example trees with coincident word of the type of Fig.8(1), trees of the type of Fig.8(2) are obtained. This kind of tree is selected as temporal exclusive tree. The operation shown here which is the method to compose exclusive tree from example tree with designation of dominating node is conducted at "T.composition unit of temporal exclusive tree ".

The value 1.0's preceded by equal signs are given to coincident words. These are word values belonging to coincident words.

Next, the explanation is made on "M composition unit of temporal exclusive tree with allowance of part of speech coincidence" shown in Fig.1.

Henceforth, the cases where the input sentence and the example tree have coincident word are treated. Here, the expansion where not just coincident word but also coincident part of speech is regarded as the object of coincidence is introduced. At this expansion, part of speech names obtained by consultation of the part of speech dictionary are enclosed by parentheses and attached to the position after each word. Also, preprocessing where the part of speech name existing directly above each leaf node is enclosed in parenthesis and attached behind each leaf node is applied. For the input sentence, a word can have plural part of speech names.

As the first step of finding coincident elements, the marks "+" are attached to coincident words by the reason of priority of word coincidence. When coincidence at part of speech names enclosed in parentheses happens and word coincidence is not obtained, the mark "+" is attached to the part of speech name and, simultaneously, the part of speech value accompanying the part of speech name is obtained by the consultation of the part of speech dictionary and is attached, preceded by the equal sign, to the part of speech name in the parenthesis. Part of speech value is used at the calculation of the tree value of temporary exclusive tree explained later.

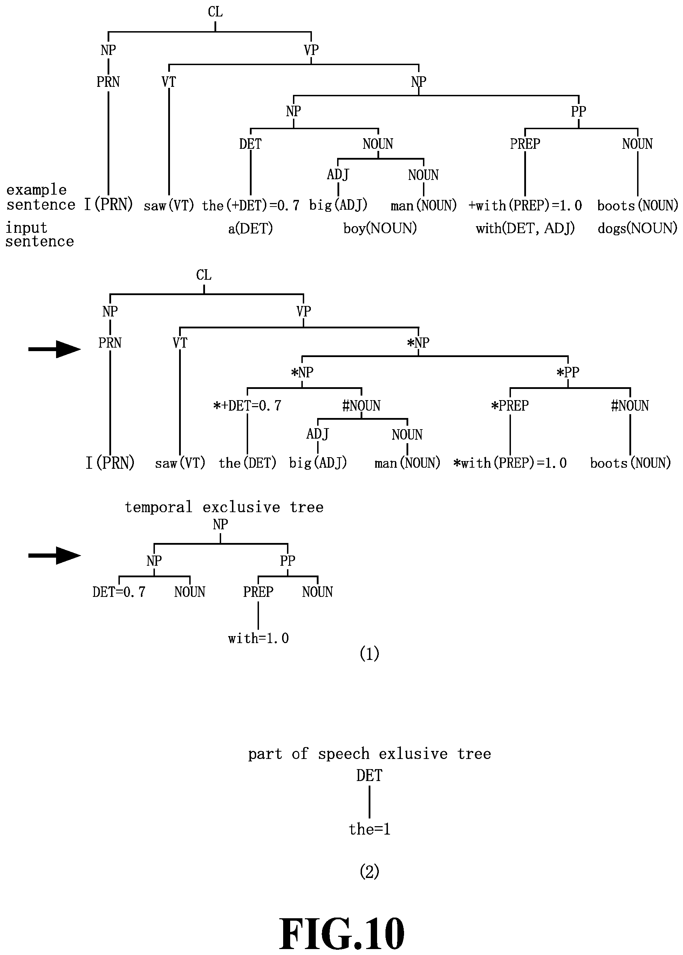

Fig.10 is to explain expansion the expansion by which not only coincident word but also coincident part of speech is designated as the object of coincidence. The figure shown at the upper portion of Fig.10(1) shows the state of coincident elements between the input sentence with annotation of part of speech which is "a(DET) boy(NOUN) with(PREP, ADJ) dogs(NOUN)" and example sentence with annotation of part of speech which is "I(PRN) saw(VT) the(DET) big(ADJ) man(NOUN) with(PREP) boots(NOUN)" Here, DET represents determiner, NOUN represents noun, PREP represents preposition and ADJ represents adjective.

In this case, as a(DET) and the(DET) have the relation of coincident part of speech and e(DET) and with(PREP) with with(PREP) have the relation of coincident **node, this** tree is adopted as example tree. In example tree, marks "+" are attached to coincident word or coincident part of speech and, furthermore, equal sign and part of speech value are attached. Part of speech value in the case of part of speech coincidence depends on the number of words belonging to part of speech. Determiners such as "a" or "the" have the part of value 0.7. Coincident word, as in the case of "with", the part of speech value is 1.0 irrespective of the kind of part of speech to which the word belongs. As shown in the figure of middle position in Fig. 10(1) illustrating the case of part of speech coincidence, the mark "+" and part of speech value are elevated to the position of part of speech node. In the case of word coincidence elevation of the mark "+" does not occur. After these processes, the temporal exclusive tree is composed by the method of Fig.8. The figure shown in lower position of Fig.10(1) is the temporal exclusive tree thus composed.

When example tree includes part of speech coincidence, the part of speech tree as shown in Fig.10(2) is mandatorily generated. As the word of exclusive tree and word node of example sentence coincides, the leaf node takes the shape of the word connected with the value 1.0 via equal sign.

As seen above, The composition of temporal exclusive trees with the expansion where not only word coincidence but also part of speech coincidence is the object of coincidence is conducted by "M composition unit of temporal exclusive tree with allowance of part of speech coincidence", The situation where either of "T.composition unit of temporal exclusive tree " treating only word coincidence or "M composition unit of temporal exclusive tree with allowance of part of speech coincidence" with the expansion to part of speech coincidence is expressed in Fig.1.

Here, the generic name including coincident word and coincident part of speech is given as coincident node. The coincident words or coincident nodes in Fig.8(2) have the word value 1.0 preceded by equal symbol. The coincident part of speech node DET in the Fig.10(1) has the part of speech value 0.7. Off course, the node "with" of the figure has the word value 1.0. As seen in the figure at the lower position of Fig.10(1), coincident value is shown preceded by the symbol "=". At the part of speech coincident tree such as shown in Fig.10(2), coincident value is defined to be 1.0.

As seen in Fig.8(2) and Fig.10(1), it is possible to define coincident values belonging to coincident word node or coincident part of speech node which together are defined as coincident nodes. The coincident values are the motive force for the existence of temporal exclusive trees.

The above is the explanation of the operation of "T.composition unit of temporal exclusive tree " and "M composition unit of temporal exclusive tree with allowance of part of speech coincidence" shown in the block diagram of Fig.1.

Next, The operation of "V.tree value generation unit for exclusive tree(virtually newly introduced) " which generates the tree value of temporal exclusive tree based on the temporal exclusive tree and coincident value obtained by "T.composition unit of temporal exclusive tree " or "M composition unit of temporal exclusive tree with allowance of part of speech coincidence". As seen in Fig.1, this is the final operation of the "E.temporal exclusive tree generation module".

The portion of "V.tree value generation unit for exclusive tree" obtains node values in the exclusive tree in the order where operation starts at coincident value and operation moves upward in the exclusive tree. The node value of coincident node is the coincident value of the node. 2 kinds of node value which are tree average type(TA) and path average type(PA) are defined. The acquisition method of these node values is explained henceforth. The TA node value belonging to a node in the exclusive tree is calculated as "sum of TA values of child nodes of the node under investigation divided by the number of child nodes". TA values for all nodes in the exclusive tree are obtainable by applying this calculation in the order where calculation for the child nodes precedes calculation for the parent node. This is illustration of acquisition of node value of TA type. Tree average value TA's are, off course, given to each node in temporal exclusive tree.

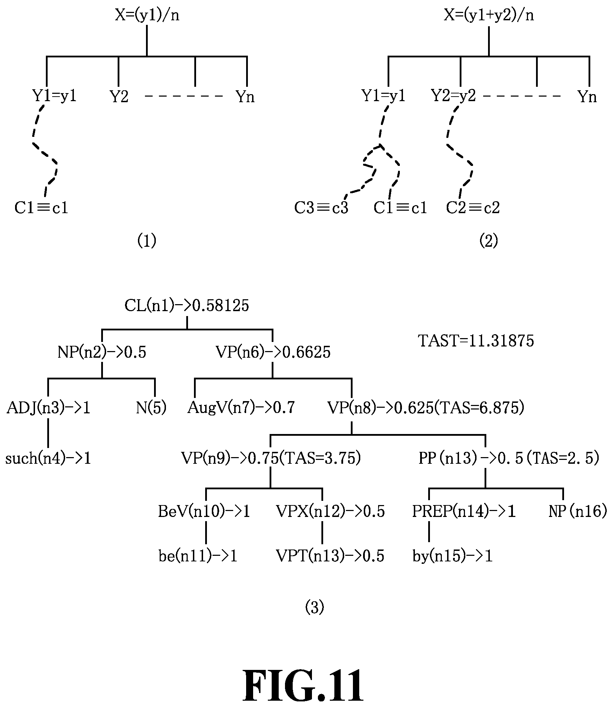

Fig.11(1) and Fig.11(2) are illustration of the way to obtain node value of the parent node from that of child nodes in a parent child relation in a temporal exclusive tree. Fig.11(1) shows the case at which generation of node value starts at coincident node C1 having coincident value c1 and progresses to the child node Y1 having node value y1. This example shows the case where only one child node, among child nodes, has node value and the node value of the parent node is the division result of node value of the child node by number of child nodes which is (y1)/n.

A node having lower tree structure or a node itself is a coincident node as is the case of node Y1 is called effective node. A node not having lower tree structure as is the cases of node Y2 and nodes positioned to the right of Y2 is called ineffective node.

Fig.11(2) shows the case where the propagation results of coincident node C3 having coincident value c3, coincident node C2 having coincident value c2 and coincident value C1 having coincident value c1 reaches to the parent child relation having parent node X. Consideration is made on the case where child node Y1 becomes to have TA node value y1 and Y2 becomes to have the TA node value y2 through the generation of node values caused by coincident nodes. As "sum of TA values of child nodes of the node under investigation divided by the number of child nodes", the TA node value of the parent node X is (y1+y2)/n. In this case the node value path from C1 and that from C3 join together in the temporal excusive tree before reaching to the child node Y1.

Fig.11(3) shows an example of generation of TA node values at the exclusive tree having 3 coincident words "such(n4)", "be(n11)" and "by(n16)" and 2 coincident part of speech nodes "AugV(n7)" and "VPX(n12)". For the convenience of explanation each node is given node number. At each node the value to the right of arrow "->" is TA node value.

Coincident value of a coincident word is 1.0 and that of coincident part of speech "AugV" is 0.7 and that of coincident part of speech "VPX" is 0.5. The TA coincident values of node n3, node n10 and node n14 are the same as those of node under them because they have respectively only one child node. For example, the TA value of node n8 is average value of those of node n9 and n14 which is 0.625.

The tree value of a temporal exclusive tree is called "total sum of TA values of all nodes in the tree" and abbreviated as TAST. By the case of Fig.11(3), TAST value or "total sum of TA values of all nodes in the tree" is, as shown in the figure, 11.31875.

Also "sum of TA values of all nodes in the tree" with abbreviation of TAS is defined and given to respective nodes in the tree. TAS is defined as "aggregation of sum of TA values of the nodes dominated by the node under investigation and the TA value of the node under investigation".

The situation where node A dominates node B is defined here as the situation where node A positions upper than node B. TAS or "aggregation of total sum of TA values of the nodes dominated by the node under investigation and the TA value of the node under investigation" is obtainable by the recursive operation using the relation that "sum of TA value of node under investigation is "aggregation of the sum of TAS values of child nodes of investigated node and the TA value of the node under investigation". The TAS value 6.875 of node n8, for example, is obtained by adding TA value 0.675 of node n8 to the sum of TAS value 3.75 of node n9 and TAS value 2.5 of node n13. In Fig.11(3), TAS values of node n8 and its child nodes are shown in parenthesis. It is evident that TAST or "total sum of TA values of all nodes in the tree" is TAS or "aggregation of total sum of TA values of the nodes dominated by the node under investigation and the TA value of the node under investigation" of the topmost node.

At the acquisition operation of TA, coincident values of coincident nodes influence linearly on the value obtained. Here, path average node value PA of a node is introduced. PA is defined by the equation "[path average node value PA]= [sum of coincident values dominated by the node under investigation]x[number of effective child nodes]x[tree average node value TA of the under investigation]". The path average node value of a coincident node is defined to be the coincident value itself of the coincident node.

The situation where [sum of coincident values dominated by the node under investigation] is c1 because coincident node dominated by node X is limited to node C1 and [number of effective child nodes] is 1 because there is only 1 effective node which is Y1 and [tree average node value TA of the under investigation] is y1/n which is division result of TA value of Y1 divided by child node number n, brings about the path average node value c1x1x y 1 of node X.

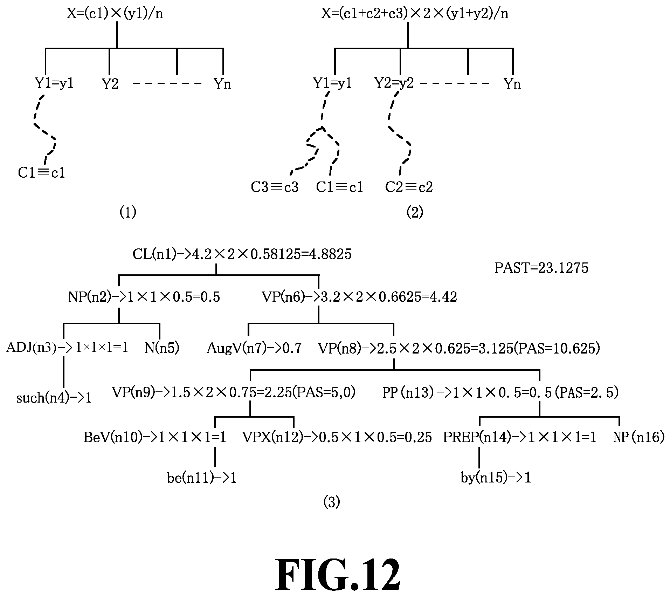

Fig.12(2) shows the effect on the parent child relation having parent node X caused by path average propagation starting from node C3 with coincident value c3, node C1 with c1, node C2 with c2. The propagation paths from coincident node C1 and C3 join together in the temporal exclusive tree before reaching the child node Y1. As [sum of coincident values dominated by the node under investigation] is the sum of coincident values of nodes C1, C2 and C3 or c1+c2+c3 and [number of effective childe nodes] is 2 because of 2 effective nodes Y2 and Y2 and [tree average node value TA of the under investigation] is (y1+y2)/2 or 0.625, the node value of path average type of node X becomes (c1+c2+c3)x2x(y1+y2)/n.

Fig.12(3) and Fig.11(3) are of the same configuration and Fig.12(3) shows node value of path average type of each node in the temporal exclusive tree. Node value of path average type is abbreviated as PA. As [sum of coincident values dominated by the node n8] is the sum of coincident values of nodes n11, n13 and n16 which is 2.5 and [number of effective child nodes of node n8] is 2 and [tree average node value of node n8] is 0.625, the node value of path average type of node n8 is given by 2.5x2x0.625 and is 3.125.

Total sum of path average node values PA's of the nodes in an exclusive tree is called total sum of PA or PAST and is defined as the tree value of path average type. The sum of PA's which is PAS is, as PA, given to respective node. The PAS of an investigated node is defined as "aggregation of sum of PA values of the nodes dominated by the node under investigation and the PA value of the node under investigation". PAS is obtainable recursive operation by using the relation that "aggregation of the sum of PAS values of child nodes of investigated node and the PA value of the node under investigation". The PAS value 10.625 of node n8, for example, is obtained by adding PA value 3.125 of node n8 to the sum of PAS value 5.0 of node n9 and PAS value 2.5 of node n13. In Fig.12(3), PAS values of node n8 and its child nodes are shown in parenthesis. It is evident that PAST is PAS of the topmost node. The PAST or tree value of path average type of the tree in Fig.12(3) is, as shown in the figure, 23.1275.

The sum of tree average node values TAS is used only to obtain total sum of tree average node values TAST that is obtained as TAS of topmost node. It is sometimes necessary to obtain the information of partial tree of temporal exclusive tree having an arbitrary node in the tree as the topmost node.

To obtain path average node value PA for example, it is necessary to know [sum of coincident values dominated by the node under investigation]. This value is called "dominant coincident value sum" or WGS and given to each node. Here also, the parent child relation utilized at the acquisition of sum of tree average node value TAS and sum of path average node value PAS. WGS is obtained recursively from parent child relation as [sum of WGS's of child nodes of node under investigation]. The WGS value 2.5 is obtained as the sum of WGS value 1.5 of node n9 and WGS value 1.0 of node n13. As the acquisition of WGS can be easily traced, the acquisition process is not shown in Fig.12(3).

Unlike the cases of tree average sum TAS and path average sum PAS which are used only at the topmost node of temporal exclusive tree, dominant coincident value sum WGS is also used at intermediate nodes to obtain path average node value PA. As all portions of multiplication to generate PA are obtained recursively by those of child nodes, path average node value PA is also obtainable recursively.

Other than those variables, the number of effective nodes in an exclusive tree is necessary as the indication of "goodness" of the exclusive tree. As shown before, effective node is defined as "a node having lower tree structure or a node itself is a coincident node. To above object, sum of effective node number NCS is introduced.

The sum of effective node number NCS is obtainable recursively using parent child relation as "the value lager than 1 of sum of NCS's of child nodes". The addition of value 1 is necessary to include the number of the parent node in the NCS. For The NCS value 8 of node n8, for example, is the value lager than 1 of the sum of NCS value 4 of n9 and NCS value 3. As the acquisition of NCS can be easily traced, the acquisition process is not shown in Fig.12(3). As the number of effective node NCS of the topmost node is the "total number of effective node in the temporal exclusive tree" called NCST. Consequently acquisition of NCS based on parent child relation is necessary to obtain total number of effective node NCS T .

Next, coefficient variation $\sigma/m$ is treated. Coefficient variation is given by Eq.2(1).

$$\sigma/m = \frac{\sqrt{\sum_{i=1}^{NCST} \frac{1}{NCST}(TA_i - m)^2}}{m} \qquad 2(1)$$

As seen in the equation, coefficient variation is obtained as division result of standard deviation $\sigma$ of TA on entire effective nodes NCST divided by average of m on entire effective nodes NCST. Eq.2 (1) is transformed into Eq.2 (2).

$$\sigma/m = \sqrt{\frac{T2ST \times NCST}{TAST^2} - 1} \qquad 2(2)$$

The obtaining method of variables TAST "total sum of TA values of all nodes in the tree" and NCST total number of effective node in the temporal exclusive tree" in the right hand of Eq.2(2) is shown before. The variation T2ST is "sum of squares of TA". T2ST is summation of square of TA over entire effective nodes and is obtainable by the method similar to the obtaining method of TAST. As the variables in the right hand of Eq.2(2) obtainable, coefficient variation $\sigma/m$ is obtainable by the methods already explained or in other ward, coefficient variation $\sigma/m$ can be generated at the part of "V.tree value generation unit for exclusive tree".

Values TAST "total sum of TA values of all nodes in the tree" and PAST "total sum of PA values of all nodes in the tree" are used as tree values of the temporal exclusive tree under investigation. Tree value is the indication of the ability of exclusive tree and utilized at "analysis result selection apparatus and method at example sentence driven machine translation" of the invention. The TAST value 11.31875 in Fig.11 and the PAST value 12 23.1275 in Fig.12 are tree values based on respective definition. As a guideline, TAST is used at corpus where average sentence length is below 15 and PAST is used otherwise. The reason of above selection is the fact that on upward path from coincident node to topmost node PA attenuates more slowly than TA. As seen above these tree values are generated at "V.tree value generation unit for exclusive tree".

The coefficient variation $\sigma/m$ is also a value that indicates the variation of the tree-average node value TA at the effective nodes in the temporal exclusive tree. For example, the exclusive tree with $\sigma/m$ of 0.3 or less is used, and the exclusive tree with a coefficient variation larger than that is used for filtering, e.g., deleting or the like. This value is also obtained by the "V.tree value generation unit for exclusive tree".

Above is the method to obtain tree average node value TA, sum of tree average TAS, path average node value PA, path average sum PAS and dominant coincident value sum WGS by the recursive operation using the relation that variables of parent node are obtained by variables of child nodes. These variables are obtained simultaneously by recursive process where an upper node in the exclusive tree instructs lower nodes to generate these variables. This processing is conducted at "V.tree value generation unit for exclusive tree".

Here, "U.upper covering module=upper covering module" shown in Fig.1 is explained. As seen in Fig.1, this module "receives the OR node generated at the portion of grammar application as input and outputs allele exclusive group array through application of exclusive trees stored in the system and temporal exclusive trees". In this patent application explanation is made for the cases where only temporal exclusive trees are used. As seen in Fig.1, "U.upper covering module=upper covering module" composes "upper covering module=upper covering part" by itself.

So far, generation method of temporal exclusive trees with the use of common word sequence with allowance of non-coincident words. Tree structure is treated concerning with example trees but not concerning with input sentences. Consideration is concentrated on word sequence at the treatment of input sentence.

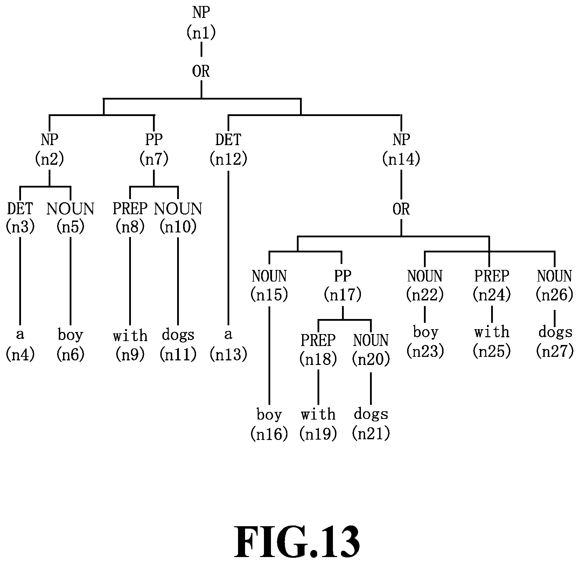

Fig.13 is introduced as the tree structure of input sentence. This is the OR tree of the sentence "a boy with dogs" used so far. Generation of OR tree is conducted at the grammar application part which is out of range of this patent application. This input sentence introduced at Tig.7 is used throughout this patent application until the end of the specification.

As seen in Fig.13, OR tree has special type of node called OR node. OR node expresses that the OR node dominates the structures generated by word sequences identical with each other. This situation is expressed as "the OR node has the same word span". The upper OR node in Fig.13 has the word span of "a boy with dogs" which is the whole of input sentence. Similarly, the lower OR node has the word span of "boy with dogs".

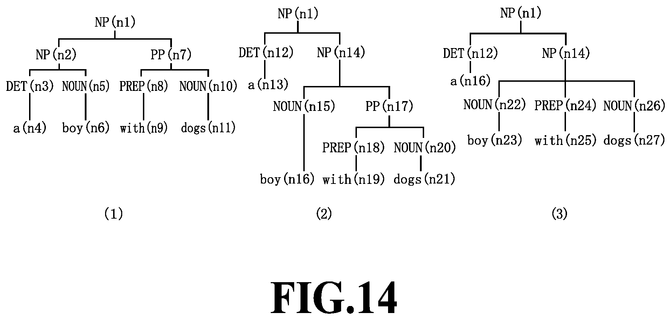

The OR tree is the way to express plural trees by single tree. As seen in Fig.13, respective node number beginning with letter n is given to each node constituting single tree as a whole. By the term "to expand a OR node", the operation of obtaining a forest expression made of plural independent trees derived from lower partial trees, Selection of left partial tree at the expansion of upper OR node generates the expansion result of Fig.14(1) and selection of right tree at the expansion of upper OR node and furthermore, selection of left tree at the expansion of lower OR node generates the expansion result of Fig. 14(2) and selection of right tree at the expansion of upper OR node and selection of right tree at the expansion of lower OR node generates the expansion result of Fig.14(3). Expansion of these 2 OR nodes brings about no expansion result other than those in Fig. 14. An OR tree with large number of OR nodes and plenty of partial trees under an OR node can express astronomically many trees. An OR tree reflects ambiguity generated at the grammar application part. It means that one of expansion results is the analysis result required and the others are worse ones as the analysis result. The "G.parsed tree generation module" at the downstream of "U.upper covering module" generates sole analysis result by filtering operation.

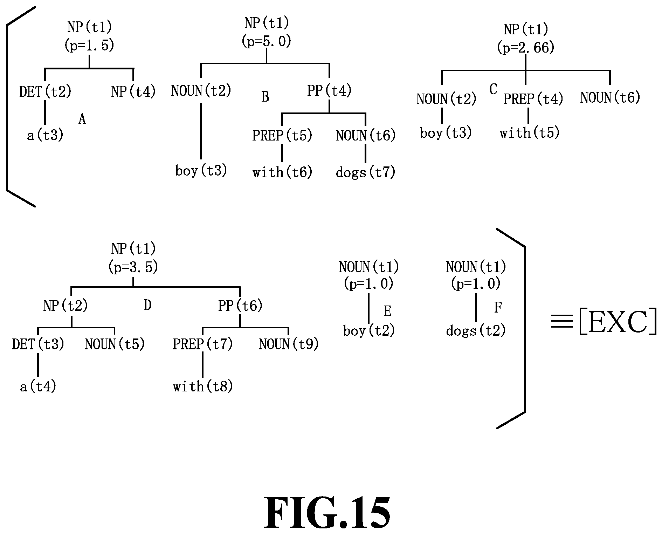

Operation of "U.upper covering module" is explained using the examples used so far. Six exclusive trees shown in Fig.15 are introduced as the example of example trees. These exclusive tree are used at the occasion of upper covering of the OR tree in Fig.13. The composing method of the exclusive tree indicated as exclusive tree D is illustrated with the use of Fig.7 and Fig.8.

As seen in Fig.1, "U.upper covering module" receives input of temporal exclusive trees generated at "temporal exclusive tree generation part" and excusive trees stored in the system together with the OR tree as shown in Fig.13. As temporal exclusive trees and exclusive trees are treated without distinction at and after "U.upper covering module", the generic term "exclusive tree" is used to express both of temporal exclusive tree and exclusive tree.

Further more, independent exclusive trees without information of covered OR tree and exclusive trees with node numbers of covered OR tree affixed at the upper covering operation mentioned later. No confusion may happen, as the situation of occurrence of them is different.

Explanation is hereafter made for "U.upper covering module" for the case where input exclusive trees are those in Fig.15. Names of exclusive trees are indicated by the letters near respective exclusive trees and these exclusive trees are called by the letters. The exclusive having letter B at its vicinity is called exclusive tree B. The nodes in an exclusive tree are given the node number beginning with the letter t. These exclusive trees are accommodated in one array. Here, the array is called array EXC.

Following is the illustration of the covering operation of the OR tree with OR nodes generated at the grammar application part by exclusive trees. As is seen in the following explanation, covering operation is conducted by the repetition of upper covering.

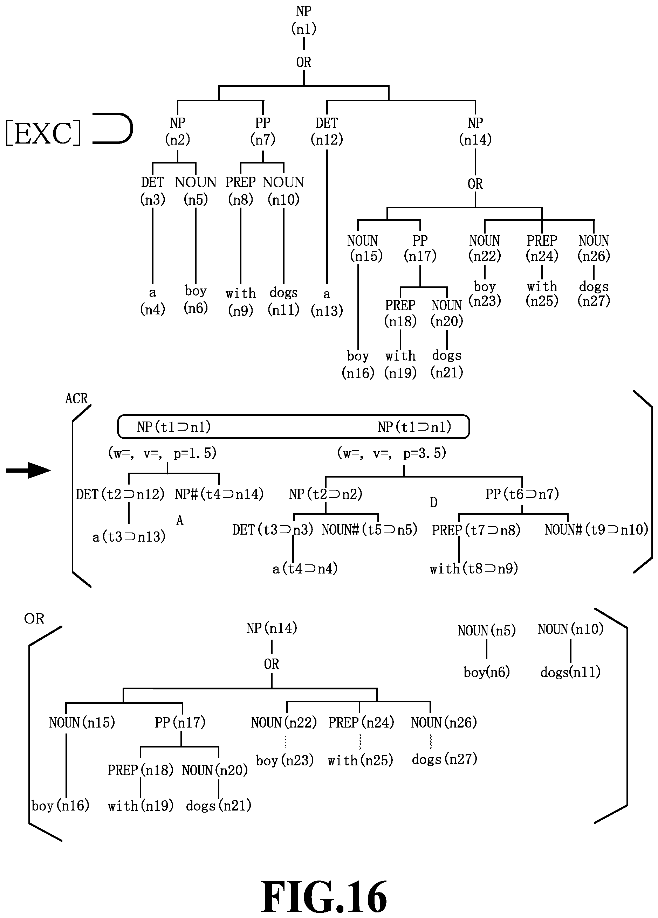

Fig.16 shows the result of 1st upper covering. The portion to the left of the arrow in Fig.16 shows upper covering operation of the input OR tree by exclusive tree array EXC. The inclusion symbol " ⊃" used at set theory shows the upper covering where the left hand upper covers the right hand. Fig.16 expresses the situation where entire exclusive trees in array EXC are used to upper cover the input OR tree.

The portion to the right of the arrow in Fig.16 shows is result of upper covering. The upper covering is defined as "to declare that a partial tree including the topmost node of OR tree is identical with exclusive tree.

The array ACR to the right of arrow in Fig.16 accommodated an "allelic exclusive tree group". Through present successful upper covering by the exclusive trees A and D without information of covered nodes allele exclusive tree group with information of covered nodes is obtained. Exclusive trees belonging to the same allelic exclusive tree group have the same topmost node and topmost nodes of exclusive trees belonging to the same allele exclusive tree group are encircled by a rounded rectangle showing that exclusive trees belong to the same group. The term "allelic exclusive tree group" is named from the fact that trees in an allelic tree group cannot coexist and this fact is similar to the biological situation of allelic gene. The term "allelic exclusive tree group array" denotes array of allelic exclusive tree groups where topmost nodes of exclusive trees contained are different with each other.

Each composing nodes of an exclusive tree has node number beginning with the letter t which stems from the structure of exclusive tree and the node number beginning with the letter n which comes from the covered OR node. To the topmost node of an exclusive tree, in addition to the pattern value succeeding the letter sequence "p=", blank entities succeeding the letter "v=". The sequence "v" requires accumulated tree value. These variables are treated later.

The array OR to the right of arrow in Fig.16 is the OR tree array which accommodated partial OR trees of the lower portion of the input OR tree generated as the "rest of upper covering" at the occasion of upper covering by exclusive trees of the input OR tree. At the case of Fig.16, the OR node accommodates the OR tree with topmost node n14 generated as the remnant of upper covering by the exclusive tree A and the trees having respectively topmost node n5 and n10 as the remnant of upper covering by exclusive tree D. As seen here, partial trees of input OR tree not including OR node are also defined as OR tree. The OR tree array stores generated OR trees by the order where tree generated earlier is stored to the left of tree generated later.

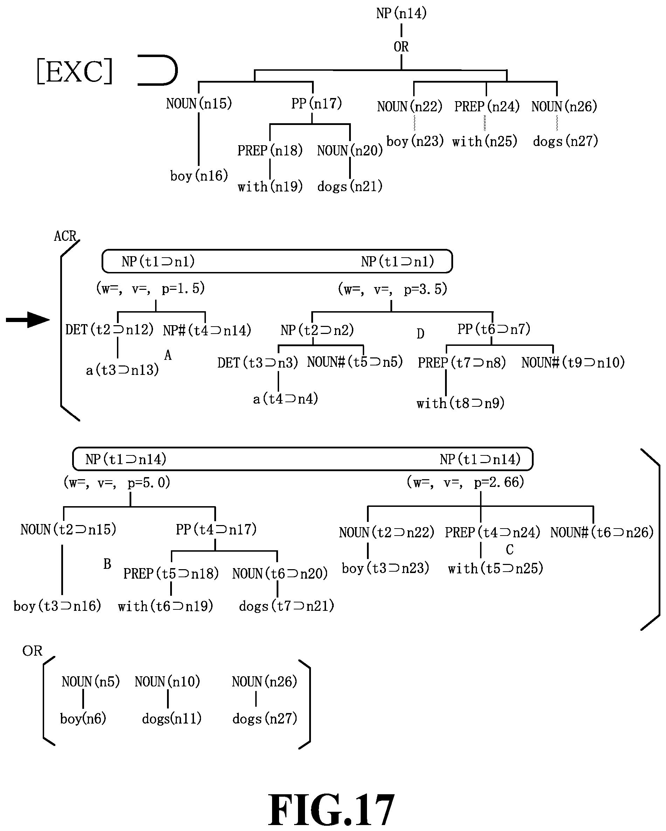

Fig.17 shows the result of 2nd upper covering by exclusive trees in array EXC. At present upper covering, successful upper covering by exclusive trees B and C shown in Fig. 15 without covering information generates an allelic exclusive tree group composed of exclusive trees B and C with covering information. This allelic tree group newly generated is placed in the allelic exclusive tree group array ACR to the left of tree group generated at the 1st application.

Deleting the OR tree used in present upper covering from the OR tree array OR and by placing two OR trees with topmost nodes n2 and n6 to the left of existing OR trees brings about the state of array OR shown in Fig.17.

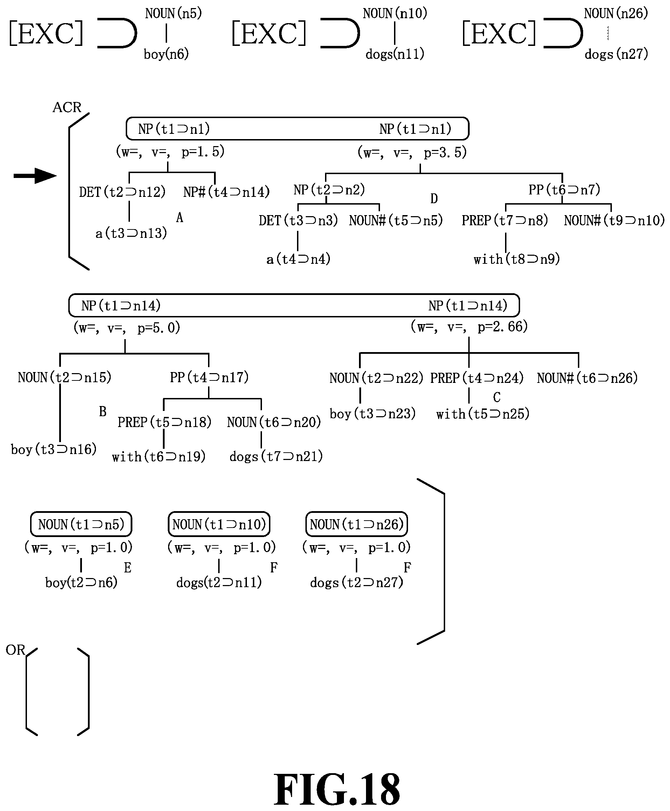

Fig.18 shows collectively the results of 3rd and 4th and 5th upper covering by exclusive trees in array EXC. The portion to the left of the arrow expresses the operation. At 3rd covering, the covering by exclusive tree E shown in Fig.15 succeeds and provides the exclusive tree E with the topmost node having the attribute t1 Dn5 in the allelic exclusive tree group array ACR. At 4th covering, the covering by exclusive tree F succeeds and provides the exclusive tree F with the topmost node having the attribute t1 ⊃n10 in the allelic exclusive tree group array ACR. At 5th covering, the covering by exclusive tree F succeeds again and provides the exclusive tree F with the topmost node having the attribute t1 Dn26 in the allelic exclusive tree group array ACR. As seen above, the exclusive tree F is used twice generating two exclusive trees of structure F. By placing generated exclusive trees to the right of existing trees, the situation in Fig.18 is established in the array ACR.

As no OR tree is newly generated at the 3rd - 5th upper covering, the OR tree array becomes empty thus terminating the entire upper covering operation. By the upper covering operation, the contents shown in Fig.18 of array ACR accommodating array of allelic exclusive tree group.

Upper covering is summarized as the operation of composing allelic exclusive tree group array through the repetitive application of exclusive trees without covering information. As mentioned lately, upper covering is "to declare that a partial tree including the topmost node of OR tree is identical with exclusive tree. The partial tree of an OR tree covered by an upper covering operation is integrated with the covering exclusive tree and becomes an exclusive tree (called A) with covering information. The topmost node of OR tree generated as a remnant of upper covering coincide with the one of leaf nodes of tree A. This remnant OR tree becomes object of later upper covering which generates a new exclusive tree(called B) made of the portion including the topmost node of remnant OR tree. The exclusive B is connected to exclusive tree A sharing the same node. This kind of connection occurs at entire leaf nodes of tree A by appropriate provision of exclusive trees. By staring upper covering at the topmost node of input OR tree, covering of entire OR tree becomes possible without duplication of covering and without non-covered portion of input OR tree. Results of 3rd - 5th upper covering shows that covering without duplication of covering and without non-covered portion is realized.

The above is the explanation of the operation of "U.upper covering module=upper covering part" shown in Fig.1.

Before beginning the explanation of the "G.parsed tree generation module", consideration is made on the output analysis trees produced from allelic exclusive group array generated as the output of "U.upper covering module=upper covering part".

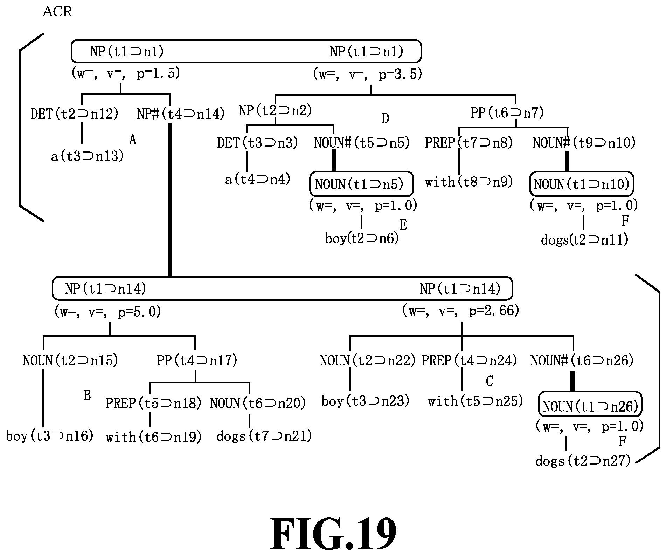

Fig.19 shows the merging composed of the operation where a leaf node of an exclusive tree merges with another exclusive tree whose topmost node has identical OR tree node number with the leaf node, is applied to the allelic exclusive tree group array in Fig.18. Bold lines express the merging. Selection of an exclusive tree from allelic exclusive tree group is necessary at the composing the analysis tree by merging.

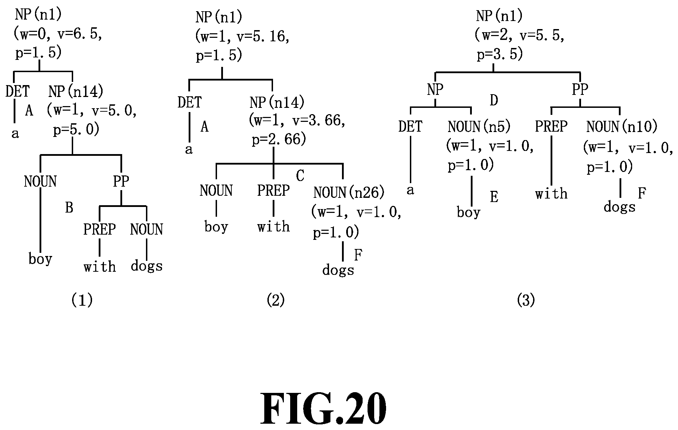

First, exclusive tree A is chosen from the allelic exclusive tree group with topmost node n1. The leaf node n14 of exclusive tree A is merged with the exclusive tree group with topmost node n14. Exclusive tree B is chosen from the group. Merging at node n14 results in the tree of Fig.20(2).

Again, the exclusive tree A is chosen from the allelic exclusive tree group with topmost node n1. Then tree C is chosen from group with topmost node n14. Furthermore, tree F is chosen from the group of n26 composed of single exclusive tree. Merging at nodes n14 and n26 results in the tree shown in Fig.20(3).

Next, exclusive tree D is chosen from the allelic exclusive tree group of node n1. Exclusive trees E and F are chosen respectively from group of n5 and n10.

Trees of Fig.20(1), (2) and (3) respectively have the same structure as Fig.14(1),(2) and (3). Merge of nodes at node n5 and n10 brings about the tree in Fig.20(1). Each structure in Fig.14 is result of OR node expansion applied to the OR tree in Fig.13 and merely has the same information in total as the input OR tree. Structures in Fig.20, on the other hand, are merge results of exclusive trees covering the input OR tree and attached with annotations of "v=", "p=". These annotations provide the state of topmost node of exclusive trees existing under the border nodes.

Generic term of exclusive tree stored in the system and temporal excusive tree is exclusive tree and they have tree value as it is. The tree value of exclusive tree is also called "pattern value". The values after the letter sequence "p=" is pattern value. The explanation for the value following the letter sequence "v=" is not yet explained. After choice of an exclusive tree at each allelic exclusive tree and after merge of nodes of exclusive trees, the v value is obtainable.

The accumulated tree value an exclusive tree is total the aggregation of pattern value p of the exclusive tree to which the topmost node belongs and sum of pattern values p's connected under the exclusive tree. As the pattern value of the exclusive tree of Fug,20(3) having topmost n5 is 1.0, the node n5 has the v value 1.0. Also in the figure of Fig.20(3), the accumulated tree value or v value 5.5 of node n1 is calculated as the sum of pattern value or p value of the exclusive tree of node n10, p value 1.0 of the tree of node n10 and pattern value 3.5 of the tree of n1.

The accumulated tree value v of the topmost node of the merged tree is total sum of pattern values included in the output analysis tree. In other ward, it is the total sum of pattern values of the exclusive trees covering the OR tree output from "U.upper covering module=upper covering part" without duplication and without existence of non-covered partial tree of covered OR tree. The v values of the trees in Fig.20(1),(2),(3) are respectively 6.5, 5.16, 5.5. The lager the v value, the more appropriately the application of exclusive tree is done and the more appropriately the analysis tree is selected. By the trees in Fig.20, the output tree of Fig.20(1) is final output of "G.parsed tree generation module" and is output of the "analysis result selection apparatus at example sentence driven machine translation" of this patent application excepting occurrence of the situation that the output contains forbidden tree.

Following is the explanation of "K.maximum value tree generation unit". The "K.maximum value tree generation unit" placed in "W.generation module of parsed tree not including forbidden tree" is treated later.

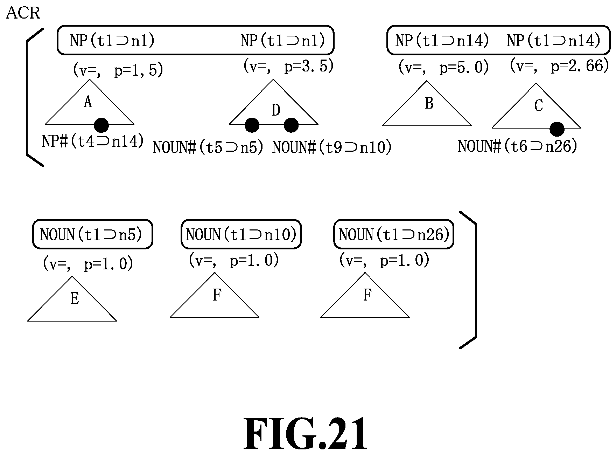

The tree structures of exclusive trees are expressed by triangles attached with names inside of them resulting in the abbreviated expression shown in Fig.21. The value following the letter sequence "p=" is pattern values of each exclusive tree and the generation method of pattern value of temporal exclusive tree is already illustrated.

Now, the explanation is made for the accumulated tree value and selected tree value. The accumulated tree value of an exclusive tee is defined as the aggregation of the pattern value of the exclusive tree and sum of selected values of the lower exclusive trees connected to the exclusive tree. At an allelic exclusive tree group, the exclusive tree with largest accumulated tree value is selected exclusive tree and the accumulated tree value of the selected exclusive tree is selected value. At the topmost node of an exclusive tree in the allelic exclusive tree group array in Fig.21, the section of accumulated tree values v is prepared together with the section of pattern value p.

The accumulated tree value v of an exclusive tree belonging to the topmost allelic tree group is the total sum of pattern value included in the tree constructed from the allelic exclusive tree group array. In other word, this is the total sum of pattern value of exclusive trees covering input OR tree without duplication of covering and without non-covered portion. This value has been obtained without actually building those trees in Fig.20. The selected tree chosen from the topmost allelic tree group is a portion of the tree having largest pattern value sum resulted from coverage of the input OR tree by exclusive trees and is a portion of analysis tree.

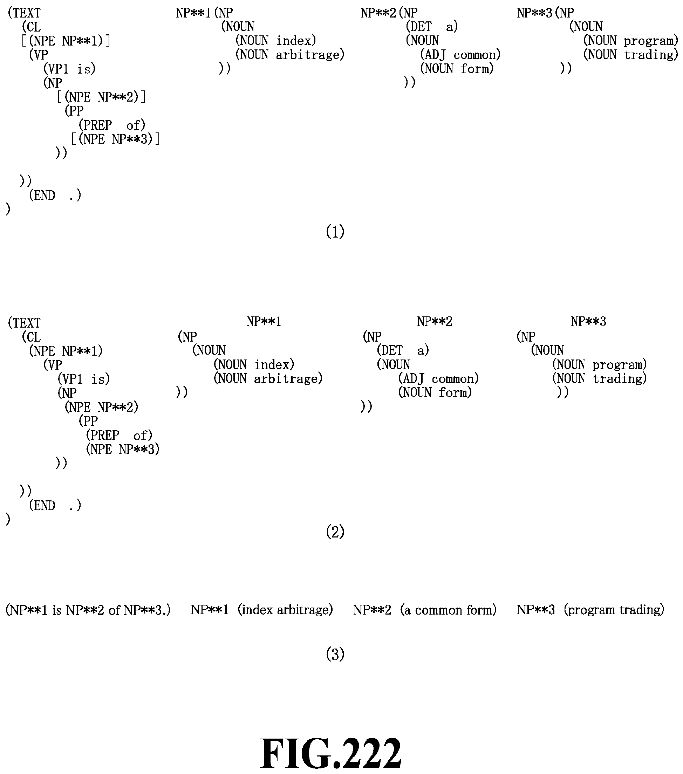

Figures in Fig.22 are to explain the process of selected tree value at the allelic exclusive tree group array of Fig.21. The letters a, b, c, d, e and f respectively stand for pattern values of exclusive trees A, B, C, D, E and F. Fig.22(1) is inquiry for the selected value vn1 generated at topmost node n1. Here also, node n1 inquires node n14 for the selected value vn14. As seen in Fig.222), this inquiry reaches node n14 as the inquiry from upper layer. Node n14 inquires node n26 for the selected value vn26. As seen in Fig.22(3), this inquiry reaches node n26 as the inquiry from upper layer. As no lower structure is connected to the exclusive tree F, pattern value 1.0 is returned, as shown in Fig.22(3), to upper layer as the selected value of node n26. As seen in Fig.22(4), value 1.0 is recorded in the field of accumulated tree value v at the topmost node of exclusive tree F.

As a result, the tree value of the structure with topmost node n14 is determined as seen in Fig.22(5). As value VB is 5.0 which is the same as pattern value of exclusive tree B and value VC is 3.66 which is the sum of accumulated tree value at n26 and pattern value of exclusive tree C that is c. The values VB and VC are accumulated tree values at the topmost nodes of respectively exclusive tree B and C.

Fig.22(6) shows the response of node n14 to the inquiry shown in Fig.22(1). Fig.22(6) also shows the inquire to node n5 for the selected tree value vn5. As seen in Fig.22(7), this inquiry reaches node n5 as the inquiry from upper layer. As no lower structure is connected to the exclusive tree E, pattern value 1.0 is returned, as shown in Fig.22(8), to upper layer as the selected value of node n5. As seen in Fig.22(8), value 1.0 is recorded in the field of accumulated tree value v at the topmost node of exclusive tree E.

Fig.22(4) also shows the inquiry to node n10 for selected value vn10. As seen in Fig.22(10), this inquiry reaches node n10 as the inquiry from upper layer. As no lower structure is connected to the exclusive tree F, pattern value 1.0 is returned, as shown in Fig.22(11), to upper layer as the selected value of node n10. As seen in Fig.22(11), value 1.0 is recorded in the field of accumulated tree value v at the topmost node of exclusive tree F.

As a result, the tree value of the structure with topmost node n1 is determined as seen in Fig.22(12). The accumulated tree value VA is the sum of selected tree value vn14 generated at node 14 and pattern value a of exclusive tree A and on the other hand, accumulated tree value VD is the sum of the value vn5 of node n5 and the value vn10 of node 10. As seen in Fig.22(12), accumulated value VA is larger, selected tree value vn1 generated at node n1 becomes 6.5.

The tree having this selected tree value is shown in Fig.22(13). The original expression of the tree is shown in Fig.20(1).

In Fig.22, exclusive trees are arranged in descending order of accumulate tree value at the allelic exclusive tree group. This shows the tree of Fig.22(13) constituted by connecting exclusive tree B under the exclusive tree A is tree having maximum tree value of 6.5. The original expression of this tree is shown in Fig.20(1).

The portion of "K.maximum value tree generation unit" existing right before "W.generation module of parsed tree not including forbidden tree" in Fig.1 has the ability of generating tree with maximum tree value utilizing recursive process without actually building the tree.

Next explanation is made for the operation of "X.unit for detecting non-inclusion of extra-regional forbidden tree in exclusive tree". As seen in the block diagram of Fig. 1, this unit has "Y.element for detecting non-inclusion of forbidden tree in exclusive tree", "N.composing node acquisition element" and "K.maximum value tree generation unit" as composing parts. There are two variations of "X.unit for detecting non-inclusion of extra-regional forbidden tree in exclusive tree" which are topmost type of and entire nodes type and entire type of "X.unit for detecting non-inclusion of extra-regional forbidden tree in exclusive tree" is upward compatible with topmost type of "X.unit for detecting non-inclusion of extra-regional forbidden tree in exclusive tree".

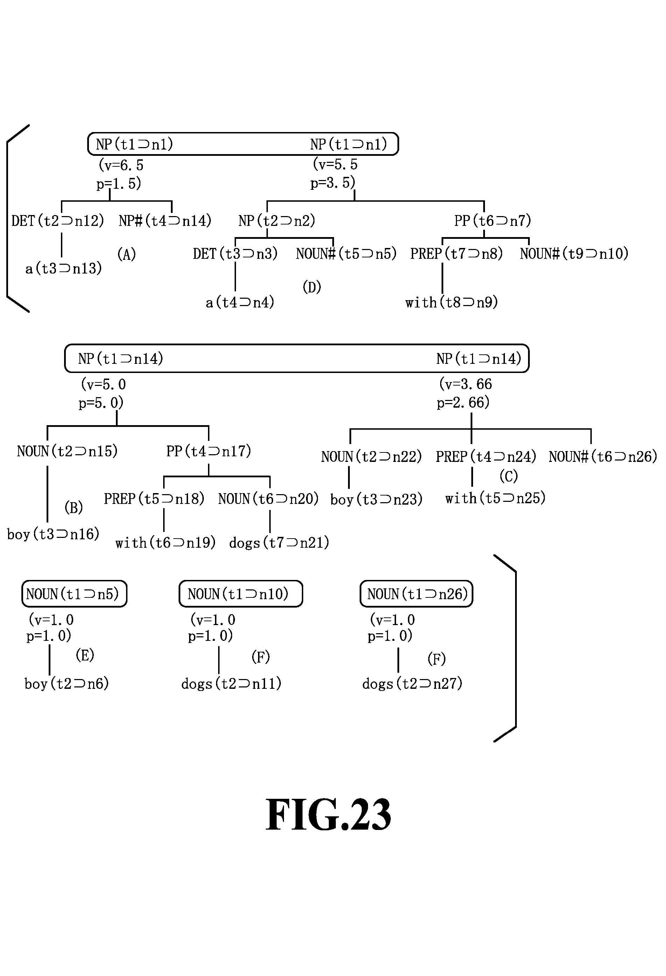

Explanation of "X.unit for detecting non-inclusion of extra-regional forbidden tree in exclusive tree" is made for the case of allelic exclusive tree group array used so far. Fig.23 shows the output of "K.maximum value tree generation unit" and is reappearance of Fig. 18. The array is composed of six exclusive trees given names of A to F and arranged in an allelic exclusive tee group array. Exclusive trees are arranged in respective tree group in descending order of accumulated tree value by the effect of "K.maximum value tree generation unit".

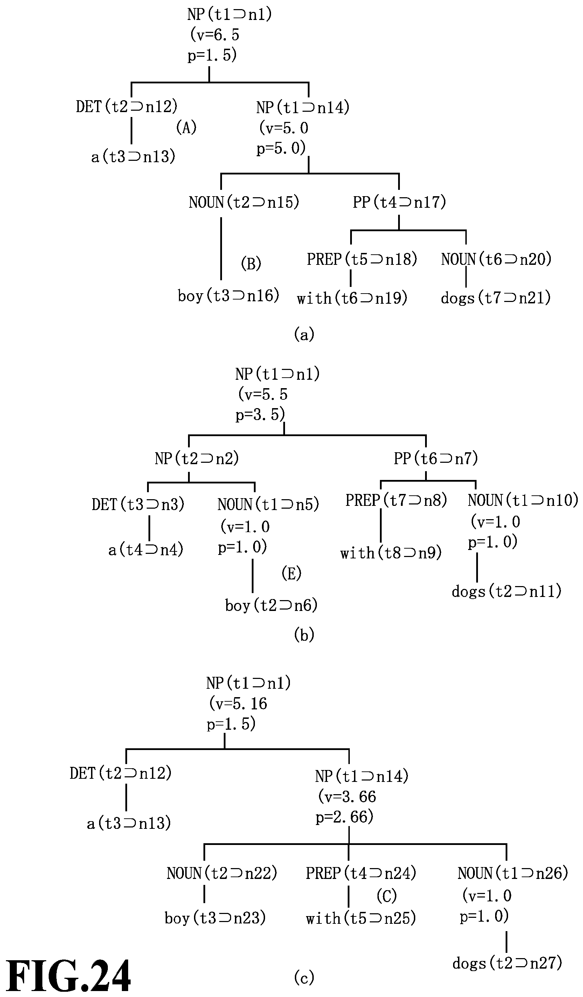

From array in Fig.23, the analysis trees of Fig.24 is obtained through the use of "C.maximum value tree construction unit". The tree with maximum tree value is the tree of Fig.24(a) and this tree becomes output analysis tree of "analysis result selection apparatus at example sentence driven machine translation" if this tree is erased by the filtering at "X.unit for detecting non-inclusion of extra-regional forbidden tree in exclusive tree". The "X.unit for detecting non-inclusion of extra-regional forbidden tree in exclusive tree" erases analysis tree containing forbidden. The erasing is applied, without building analysis tree, to allelic exclusive tree group array which is the output of "K.maximum value tree generation unit".

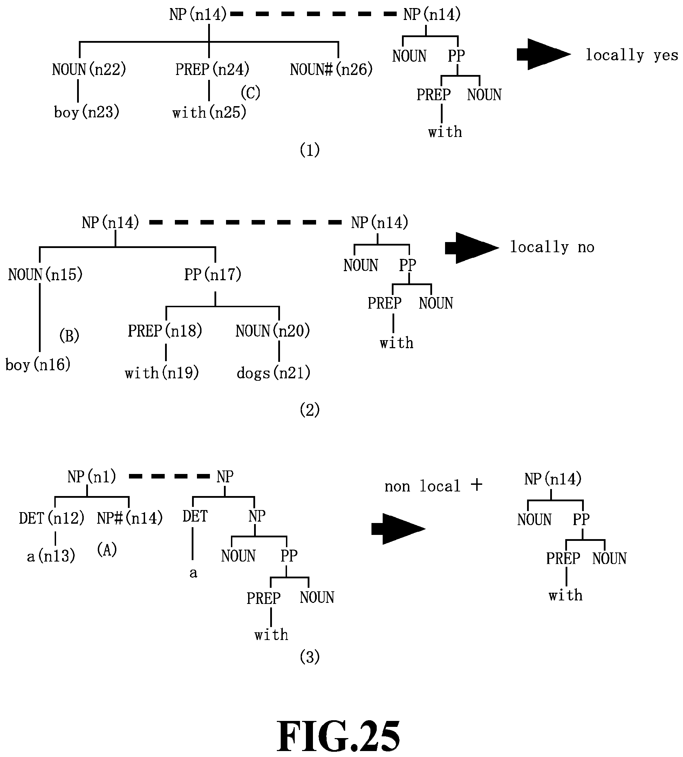

First, the explanation for "Y.element for detecting non-inclusion of forbidden tree in exclusive tree" which is a composing part of "X.unit for detecting non-inclusion of extra-regional forbidden tree in exclusive tree" is made using Fig.25. The portions to the left of bold dotted lines in the parts to the left of arrows at figures in Fig.25, are exclusive trees subject to the decision of non-inclusion of forbidden trees and portion to the right are forbidden tree. Namely, the pairs connected by the dotted lines are input for decision at "Y.element for detecting non-inclusion of forbidden tree in exclusive tree". The parts to the right of arrows are decision output of "Y.element for detecting non-inclusion of forbidden tree in exclusive tree".

For the case of Fig.25(1) "Y.element for detecting non-inclusion of forbidden tree in exclusive tree" outputs the decision of "locally yes" because the exclusive tree is of non-inclusion of the forbidden tree. For the case of Fig.25(2) "Y.element for detecting non-inclusion of forbidden tree in exclusive tree" outputs the decision of "locally no" because the exclusive tree is not of non-inclusion of the forbidden tree. For the case of Fig.25(3) the decision of non-inclusion is not possible because the exclusive tree is not of non-inclusion of the forbidden tree in the range of the exclusive tree but the forbidden tree extends out of the range of exclusive tree. In this case "Y.element for detecting non-inclusion of forbidden tree in exclusive tree" outputs the decision of "locally uncertain" together with the partial tree of forbidden tree extending out of range of exclusive tree.

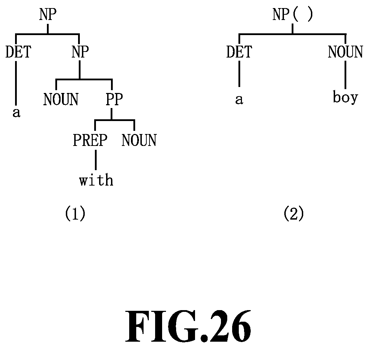

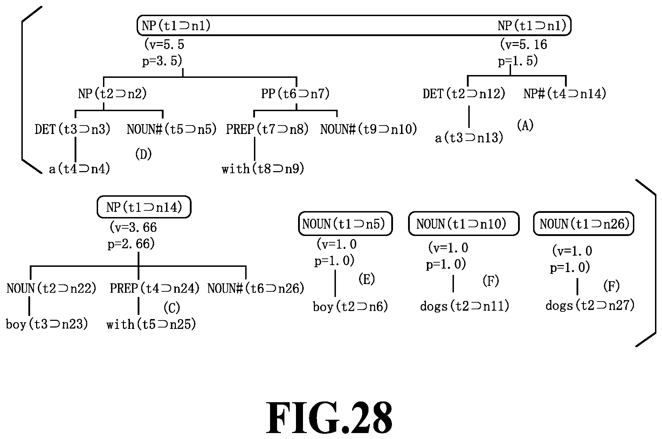

The Fig.28 is the allelic exclusive tree group array after erase of the exclusive tree B through the decision at Fig.25(2). By new calculation of accumulated tree value, the order of exclusive tree A and D is reversed because absence of exclusive tree B. The analysis trees obtained from the allelic exclusive tree group array of Fig.28 are trees of Fig.24(b) and (c) and the tree of Fig.24(a) is erased because this tree is not of non-inclusion of the forbidden tree in Fig.26(1). In this case the tree of Fig.24(b) with high accumulated tree value is generated as the analysis tree.

The above is the illustration of the "X.unit for detecting non-inclusion of extra-regional forbidden tree in exclusive tree" of topmost node type. Next, "X.unit for detecting non-inclusion of extra-regional forbidden tree in exclusive tree" of entire node type is treated. The example of allelic exclusive tree group array used so far is also used here.

Fig.23 shows the output of "K.maximum value tree generation unit". The object of decision of non-inclusion here is the tree of Fig.26(2). The partial trees including the topmost nodes of all exclusive trees in Fig.23 are of non-inclusion of the forbidden tree and, as a result, "X.unit for detecting non-inclusion of extra-regional forbidden tree in exclusive tree" of topmost node type outputs decision of "locally yes" for all exclusive trees. The "X.unit for detecting non-inclusion of extra-regional forbidden tree in exclusive tree" of entire node type, never the less, non-inclusion decision is conducted for all partial trees having all nodes excepting leaf nodes in the exclusive tree as topmost nodes resulting in some different results.

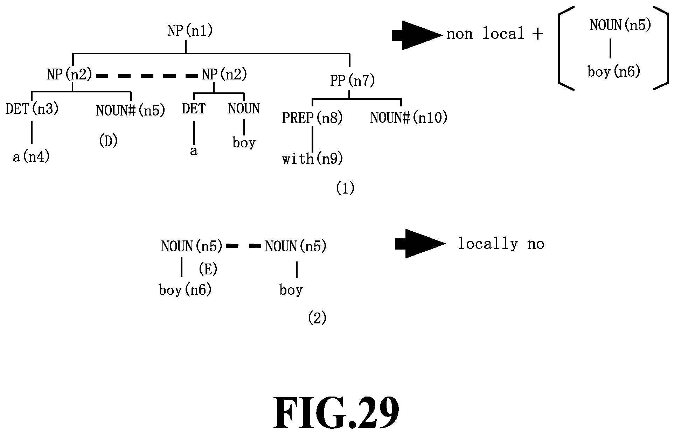

As seen in Fig.29(1), "X.unit for detecting non-inclusion of extra-regional forbidden tree in exclusive tree" generates the decision of "locally uncertain" for the partial tree of exclusive tree D with the topmost node n2. Also the unit outputs the partial tree of the forbidden tree extending out of the range of exclusive tree. In this case the decision of non-inclusion must be done for the exclusive tree at the lower position of the exclusive tree D. The lower exclusive tree connected to exclusive tree D via border of node n5 is exclusive tree E. The non-inclusion decision between exclusive tree E and partial tree of forbidden tree is conducted. The situation is shown in Fig.29(2). Here, "X.unit for detecting non-inclusion of extra-regional forbidden tree in exclusive tree" generates the decision of "locally no".

This shows that exclusive tree E is not of non-inclusion" of the forbidden tree and exclusive tree E is erased for the reason. At this 1st stage the exclusive tree D is not erased, though this is part of state of not non-inclusion, because of the possibility that there can be lower exclusive tree other than exclusive tree E.

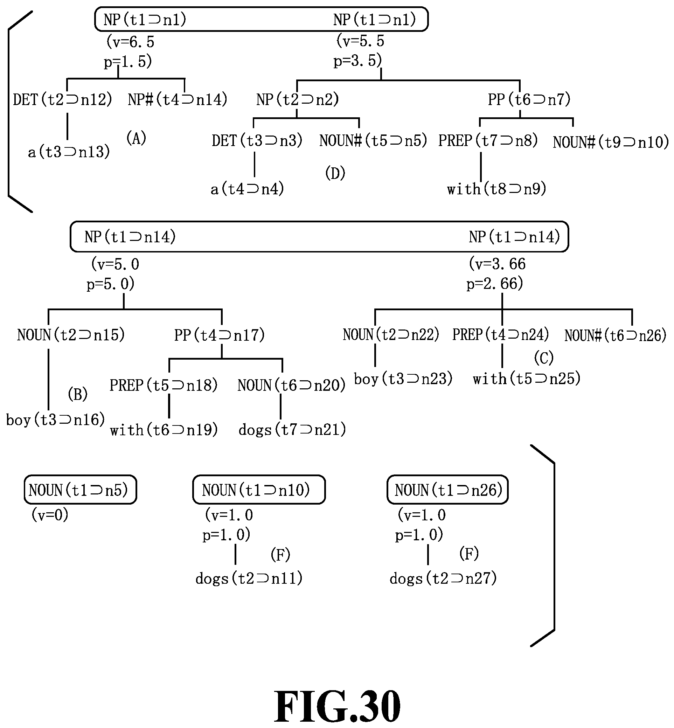

However, there is no exclusive tree under the node n5 except for exclusive tree E and this situation means that the allelic exclusive group of node n5 disappears by this 1st stage operation. Fig.30 is the situation. The allelic exclusive group of node n5 becomes single node with v value of 0. Here still exclusive tree exists.

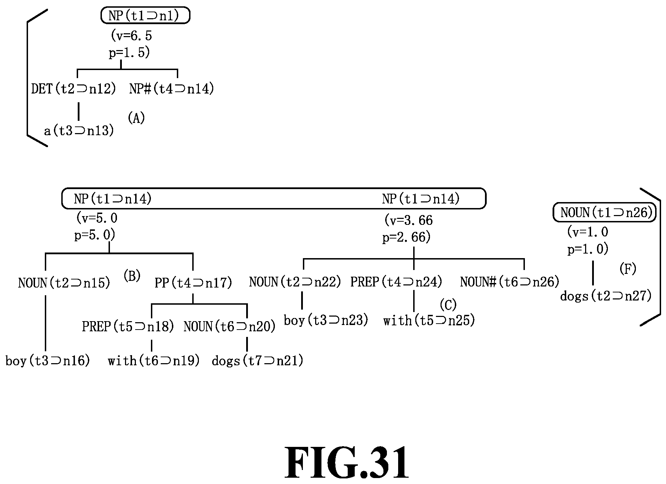

Then the rule that the tree having lower exclusive tree of pattern value 0 must be erased is activated. This is 2nd stage operation. As a result, the allelic exclusive tree group array of Fig.31 is obtained. Here, exclusive tree D and E are erased and exclusive tree F under the exclusive tree D is also erased.

The analysis trees generated from the allelic exclusive group array in Fig.31 are trees of Fig.24(a) and (c) The analysis tree of Fig.24(b) is erased through the reason that this is not of "non-inclusion" of the forbidden tree of Fig.26(2). In this case, the erasure of the exclusive tree including forbidden tree causes no influence.

The situation where allelic exclusive tree group array not including both of two forbidden trees in Fig.26 is obtained from the allelic exclusive tree group array of Fig.23, is treated. This is realized by the use of "X.unit for detecting non-inclusion of extra-regional forbidden tree in exclusive tree" of entire node type that is upper compatible with "X.unit for detecting non-inclusion of extra-regional forbidden tree in exclusive tree" of topmost type. The allelic exclusive tree group array of Fig.28, which is of non-inclusive, has forbidden tree in Fig.26(1) is the result of erasure of exclusive tree D from the allelic exclusive tree group array in Fig.23. The allelic exclusive tree group array of Fig.31 that is of non-inclusive has forbidden tree in Fig.26(2) is the result of erasure of exclusive tree B. exclusive tree E and exclusive tree F with topmost node n10 from the allelic exclusive tree group array in Fig.23.

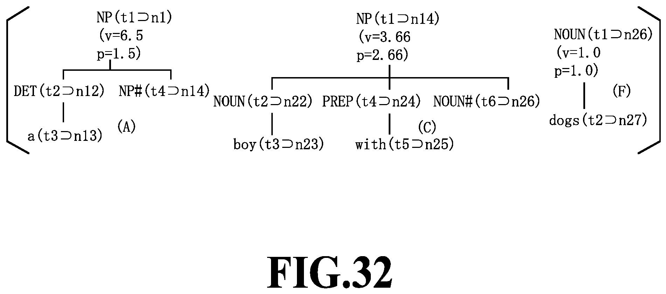

The erasure of exclusive trees D, B, E and exclusive tree F with topmost node of n10 from the allelic exclusive tree group array in Fig.23 brings about the array of Fig.32. This is the allelic exclusive tree group array of non-inclusive of two forbidden trees in Fig.26. From this array, only analysis tree of Fig.24(c) is obtained with the use of "C.maximum value tree construction unit" and the tree value of the tree is 5.16.

The analysis tree with maximum tree value obtained from the allelic exclusive tree group array in Fig.23 is the tree of Fig.24(a) having tree value 6.5. The analysis tree with maximum tree value which is of non-inclusion of the forbidden tree of Fig.26(1) is the tree of Fig.24(b) having the tree value 5.5.

As seen in Fig.29(1), "X.unit for detecting non-inclusion of extra-regional forbidden tree in exclusive tree" generates the decision of "locally uncertain" for the partial tree of exclusive tree D with the topmost node n2. Also the unit outputs the partial tree of the forbidden tree extending out of the range of exclusive tree. In this case the decision of non-inclusion must be done for the exclusive tree at the lower position of the exclusive tree D. The lower exclusive tree connected to exclusive tree D via border of node n5 is exclusive tree E. The non-inclusion decision between exclusive tree E and partial tree of forbidden tree is conducted. The situation is shown in Fig.29(2). Here, "X.unit for detecting non-inclusion of extra-regional forbidden tree in exclusive tree" generates the decision of "locally no".

Explanation is made for the role of "N.composing node acquisition element" in "X.unit for detecting non-inclusion of extra-regional forbidden tree in exclusive tree" using Fig.29(1). The "X.unit for detecting non-inclusion of extra-regional forbidden tree in exclusive tree" of entire node type should make decision of non-inclusive of forbidden tree for partial trees of the exclusive tree of topmost node n1 each of which has node, excepting leaf nodes, in the exclusive as topmost node. At the case of Fig.29 (1), nodes n1, n2, n3, n7, n8 must be enumerated.

The role of "K.maximum value tree generation unit" in "X.unit for detecting non-inclusion of extra-regional forbidden tree in exclusive tree" is illustrated here. Under the processing method of "detecting non-inclusion of extra-regional forbidden tree of first exclusive tree type" exclusive trees in each allelic exclusive tree group are arranged in the descending order of accumulated tree value. This means that forbidden trees are preferentially applied to trees of high probability of generation resulting in reduction of calculation.

The "K.maximum value tree generation unit" existing in the downstream of "X.unit for detecting non-inclusion of extra-regional forbidden tree in exclusive tree" chooses the tree of maximum tree value from the allelic exclusive tree group array found to be of non-inclusion of forbidden tree and "C.maximum value tree construction unit" existing further downstream actually composes a tree. This tree is the analysis tree generated as the output of "analysis result selection apparatus at example sentence driven machine translation".

The outline of the operation of composing portions of "analysis result selection apparatus at example sentence driven machine translation" shown in Fig.1 is explained using the examples used so far. First, the generation process of exclusive tree D shown in Fig.15 with other exclusive trees is traced. The example tree with designation of dominant node in Fig.8(1) is obtained by the application of "D.dominating node detection unit" to the example tree having common word sequence of Fig.7 detected by "S.common word sequence detection unit" from the output of "P.coincidence matrix generation unit" and "N.adjoining coincidence word detection element". The temporal exclusive tree of Fig.8(2) is obtained by the application of "T.composition unit of temporal exclusive tree" to the example tree with designation of dominant node. This exclusive tree is called exclusive tree D.

The tree value 3.5 is given by "V.tree value generation unit for exclusive tree" to temporal exclusive tree obtained by above process. The process shown hitherto is generation process of exclusive tree D.

The exclusive tree array of exclusive trees A to F which is constituted of the exclusive tree D with pattern value 3.5 and other exclusive trees introduced for the explanation purposes is composed.

Hereafter, the generation operation of an output analysis tree from OR tree at the uppermost position of Fig.16 through the arrangement of exclusive tree array is traced. The OR tree is introduced for the explanation purposes and is generated by technology out of range of this patent application.

Hereafter, acquisition of the allelic exclusive tree group array shown in Fig.18 from the exclusive tree array in Fig. 15 through the effect of upper covering by "U.upper covering module=upper covering part" is aimed. At each node in the trees of obtained array, the node number of OR node covered by the exclusive tree node is recorded and exclusive trees having topmost nodes of the same OR node number is bundled into an allelic exclusive tree group.

Following is the explanation of the operation of "X.unit for detecting non-inclusion of extra-regional forbidden tree in exclusive tree" of topmost node type. The tree shown in Fig.26(1) is forbidden tree used in the explanation of "X.unit for detecting non-inclusion of extra-regional forbidden tree in exclusive tree" of topmost node type. The decision of non-inclusion of forbidden tree of Fig.26(1) is applied to the allelic exclusive tree group array in Fig.23. The decision of non-inclusion of the partial tree of exclusive tree containig the topmost node is made at "X.unit for detecting non-inclusion of extra-regional forbidden tree in exclusive tree" of topmost node type.

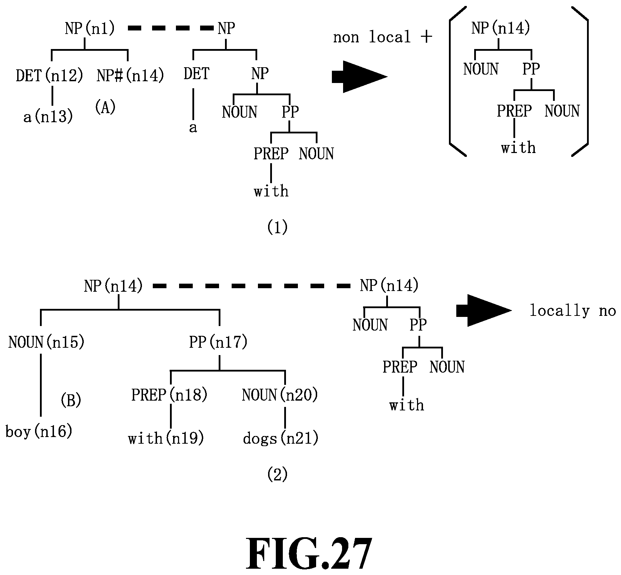

The non-inclusion decision by "Y.element for detecting non-inclusion of forbidden tree in exclusive tree" is made for the trees in Fig.24 and "locally yes" decision is generated for the exclusive trees except tree A. As shown in Fig.27(1), the decision of "locally uncertain" is generated for tree A.

In this case, the decision by "Y.element for detecting non-inclusion of forbidden tree in exclusive tree" is necessary for the exclusive tree under the exclusive tree A. One of the exclusive trees connected under exclusive tree A via node n14 is exclusive tree B and inclusion decision is applied for this tree. The expression of "extra-regional forbidden tree" is added to the name of "X.unit for detecting non-inclusion of extra-regional forbidden tree in exclusive tree" because non-inclusion decision is applied to the extra-regional exclusive tree to the exclusive tree treated first.

The non-inclusion decision is applied between exclusive tree B and part of forbidden tree out of the part covering exclusive tree A. This situation is shown in Fig.27(2). For this case "X.unit for detecting non-inclusion of extra-regional forbidden tree in exclusive tree" generate the decision of "locally no". Namely, exclusive tree B is not of non-inclusion of forbidden tree. Exclusive tree B is erased because this is not of non-inclusion of forbidden tree. Exclusive tree A is not erased, though this is part of state of not non-inclusion, because of the possibility that there can be exclusive tree other than exclusive tree B connected via node n14. As a matter of fact in this case, there is exclusive tree C.

The tree in Fig.19 is the merge result between the leaf nodes of exclusive trees and the topmost nodes of the same OR tree number belonging to other exclusive trees in the allelic exclusive tree group array of Fig. 18. The bold lines express the merge. The word "allelic" represents selection of single exclusive tree from exclusive tree group containing exclusive tree in the relation of "allelic". All the ways of selection of exclusive trees result in the 3 trees in Fig.20.

Each node with node number, v value and p value in the trees of Fig.20 is border node of exclusive trees constituting the trees and the value represents the exclusive tree under the border node. Among the information, node number is the node number of OR tree covered by the border node and v value is the accumulated tree value of the border node and p value is the pattern value of the exclusive tree of the border node.

The v value or accumulated tree value of NOUN(26) in the tree of Fig.20(2) is 1 that is the pattern value of exclusive tree F connected lower. The v value of NP(n1) in the tree of Fig.20(2) is 5.16 which are the sum of pattern value of exclusive tree F and that of exclusive tree C. The v value of NOUN(n14) in the tree of Fig.20(2) is 3.66 which is the total sum of pattern value of exclusive tree F and that of exclusive tree C and pattern value of exclusive tree A. The v value of a tree is expressed as the v value of the topmost node of the tree.

The calculation part of v value is "K.maximum value tree generation unit". This unit fills in the right hand of "v=" and, simultaneously, this unit arranges, in descending order of accumulated tree value, exclusive trees in each allelic exclusive tree group. Especially, as the v value at the highest exclusive tree group is the tree value, the v value of the leftmost exclusive tree of the highest exclusive tree group is the constituting part of tree with maximum tree value. Fig.22 shows the principle.

Next, "W.generation module of parsed tree not including forbidden tree" and its composing part "Y.element for detecting non-inclusion of forbidden tree in exclusive tree" is shown.

The portion of "Y.element for detecting non-inclusion of forbidden tree in exclusive tree" generates decision of "locally no" when, as seen in Fig.25(2), exclusive tree is of "non-inclusion" and generates "locally uncertain" which, as seen in Fig.25(3), the exclusive tree is not of "non-inclusion" and the forbidden tree extends lower of the exclusive tree and generates "locally uncertain" otherwise.

Concerning with "Y.element for detecting non-inclusion of forbidden tree in exclusive tree", the topmost node of exclusive tree must be the same as topmost node of forbidden tree at the topmost node type operation as shown in Fig.25(1), but the sameness is not necessary at the entire node type operation as shown in Fig.29(1).

Here, the definition that the allelic exclusive tree group array being of "non-inclusion" of exclusive trees is defined to be the array with the ability that the analysis tree composed of the array is of "non-inclusion" of forbidden trees.

The portion of "W.generation module of parsed tree not including forbidden tree" generates the allelic exclusive tree array group being of "non-inclusion" of forbidden tree from the allelic exclusive tree group array output "K.maximum value tree generation unit" as shown in Fig.23.

The allelic exclusive tree group array that is of "non-inclusion" of the forbidden tree in Fig.26(1) is that of Fig.28. The analysis trees obtained from the allelic exclusive tree group array of Fig.28 are trees of Fig.24(b), (c) with deletion of the tree of Fig.24(a). The allelic exclusive tree group array that is of "non-inclusion" of the forbidden tree in Fig.26(2) is that of Fig.31. The analysis trees obtained from the allelic exclusive tree group array of Fig.31 are trees of Fig.24(a), (c) with deletion of the tree of Fig.24(b). The allelic exclusive tree group array that is of "non-inclusion" of the two forbidden trees in Fig.26 is that of Fig.32. The analysis trees obtained from the allelic exclusive tree group array of Fig.32 is only the tree of Fig.24(c).

The portion of "W.generation module of parsed tree not including forbidden tree" has "K.maximum value tree generation unit" and "C.maximum value tree construction unit" as its composing portions and the output of "W.generation module of parsed tree not including forbidden tree" is the output of "analysis result selection at example sentence driven machine translation.

The analysis tree obtained from "K.maximum value tree generation unit" existing at the upstream of "W.generation module of parsed tree not including forbidden tree" is the tree of Fig.24(a) having maximum tree value of 6.5. The analysis tree being of "non-inclusion" of the two forbidden trees is the tree of Fig.24(c) whose tree value is 5.16. This tree is the tree of maximum tree value being of "non-inclusion" of forbidden trees.

The word sequence to word sequence translation (seq2seq) method with the use of neural network is explained in reference 4. Reference 4 shows the application of seq2seq method to English to English structural translation or sentence analysis. The sentence analysis method introduced here is called seq2seq sentence analysis method.

Fig.33 shows two application ways of the combined operation of "analysis result selection apparatus at example sentence driven machine translation" and seq2seq sentence analysis method. Fig.33 is the figure of information path and not of flow chart shown so far. In the figures in Fig.33, the expression KATE is the abbreviation of "analysis result selection apparatus at example sentence driven machine translation". The aggregation of example sentence trees belonging to "analysis result selection apparatus at example sentence driven machine translation" is illustrated apart from main body of KATE to explicitly express that this aggregation gives the information to main body KATE. This aggregation of example trees is called ETP. The seq2seq sentence analysis system is abbreviated as STS. It is assumed that STS has finishes learning on ETP.

The letter x in Fig.33 represents common input to ""KATE and ""STS and is word sequence like English sentence. The symbol yk is the analysis tree generated from "analysis result selection apparatus at example sentence driven machine translation" KATE receiving the input of x. The symbol yk is S expression of word sequence shape. The symbol ys is analysis tree output of seq2seq sentence analysis system receiving the input x and has the shape of S expression.

The indicant of "generation part of perfect coincident partial word sequence" is CCS. CCS generates "perfect coincident partial word sequence" between the output yk of "selection apparatus of analysis result in example driven machine translation system" KATE which is a word sequence and the output ys of "eq2seq translation system" STS which is also a word sequence. Perfect coincident word sequence is coincident word sequence including no non-coincident word. The acquisition of perfect coincident partial wore sequence is easier than the acquisition of common word sequence with inclusion of non-coincident word explained at portion beginning with Fig.7.

The part "extracting part of partial tree" PTC extracts coincident partial tree from "perfect coincident partial word sequence" between the output yk of "selection apparatus of analysis result in example driven machine translation system" KATE and the output ys of "eq2seq translation system" STS. This extraction is done by extracting word sequence having the same number of open and close parenthesis.

First using Fig.33(1), the method of increasing translation accuracy of "selection apparatus of analysis result in example driven machine translation system " KATE is explained. The portion CCS generates, from the output yk of KATE and the output ys of STS generated from the common input X, generally plural "perfect coincident word sequence" Z from which generally plural "coincident partial trees" CT as shown in Fig.33(1) are generated. The tree in Fig.33(1) is an example of "coincident partial tree". At the system shown in Fig.33(1), this "coincident partial tree" CT is aggregated with example trees already existing in the "example tree pool" ETF, temporally only for the analysis of input sentence X by KATE. This "coincident partial tree" CT is common partial tree of two totally different analysis systems which are KATE and STS and is expected as reliable. The curved line in Fig.33(1) shows the aggregation of "coincident partial tree" CT.

Next using Fig.33(2), the way to obtain the incremental trees AETP and to be aggregated with the example trees in example tree pool ETF. As seen in Fig.33(2), many "coincident partial trees" are obtained by the operation of KATE, STS, CCS, PTC working on the input sentences from Xpool which contains sentences not included in the example tree pool ETF and are accumulated in the "incremental example tree pool" AETP to be used as the incremental example trees. More reliable example trees are obtainable compared with those generated by KATE alone or STS alone. The selection, if necessary, of example trees can be conducted by human hand. As for KATE, generation of more accurate analysis tree is expected by simply aggregating incremental trees to example tree pool ETF. As for STS, learning on the trees in the incremental example tree pool AETP is expected to result in generation of more precise analysis trees.

The above is two methods of cooperative operation of "selection apparatus of analysis result in example driven machine translation system" KATE and "seq2seq translation system" STS.

Hitherto, outline of individual method and function to solve problems is explained.

[detailed explanation of the invention]

The explanation of outline of individual method and function to solve problems is made so far. Explanation of "analysis result selection apparatus at example sentence driven machine translation" is made according to the order of outline explanation.

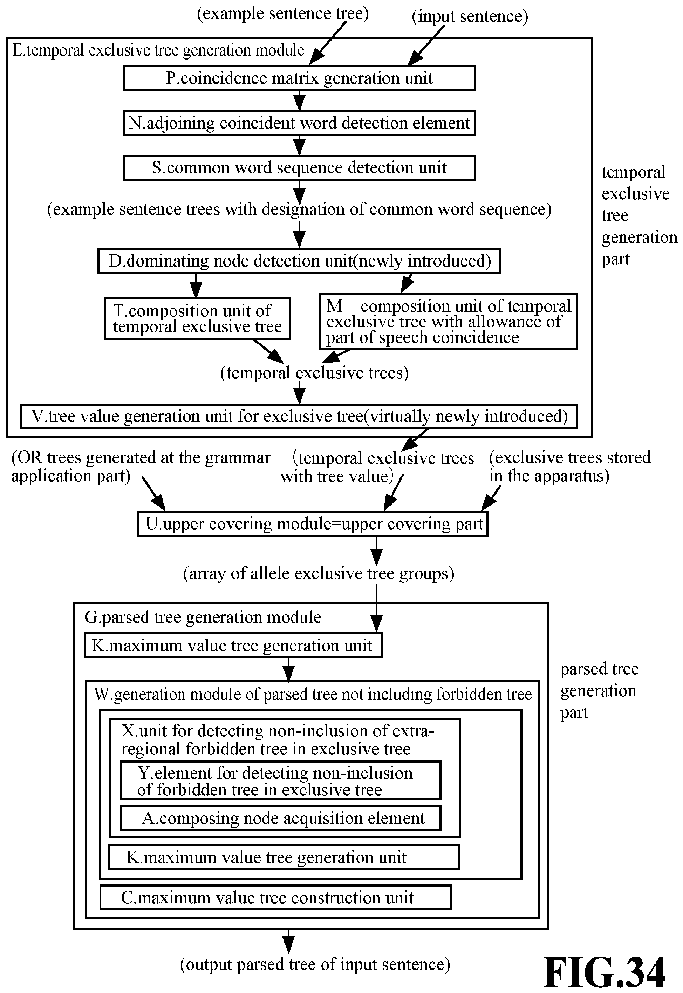

Fig.34 is duplication of Fig.1 concerning with "composition of analysis result selection apparatus and at example sentence driven machine translation" which is used at "mutual connections among individual methods and functions".

The detailed operation of "P.coincidence matrix generation unit" shown in Fig.34 and included in "E.temporal exclusive tree generation module" is described. Here, the materialization method of 式1which is reproduced as Equ.(1) is "P.coincidence matrix generation unit".

As seen in Fig.2, the input word sequence is expressed as $a_i$($i$ is word number) and arranged vertically to the left of matrix frame. For the simplicity of explanation, alphabet letters are used instead of words. The figure to the left of each letter is the number of the letter. As this detection method of common word sequence is applicable to letters as well as words, the letters and words are treated equally at the description hereafter of detection method of common word sequence.

Each letter of example sentence is expressed as $b_j$($j$ is letter number) and arranged horizontally above the matrix. The number above each letter is letter number.

Then, each matrix element is produced in succession by the use of Eq.(1). The variable p in Eq.(1) is the value of the matrix element and called matrix value. The first suffix "$i$" is the coordinate on the vertical axis and the second suffix "$j$" is the coordinate on the horizontal axis. The figure 0 at the corner of matrix frame is to show that the matrix value of the origin point is 0. At this matrix, matrix value of the 0th raw 0th column element is defined as 0. The filling of matrix element values starts at $p_{1,1}$ and moves rightward in horizontal scanning until $p_{1,5}$ and then, moves to $p_{2,1}$ increasing raw number by 1 and re-opens horizontal scanning and this scanning is repeated until the element $p_{5,5}$.

Eq.(1) demands that the matrix value of under filling operation is the lager value among the values of directly upper element and directly left element when the i side letter and the j side letter do not coincide (1st equation) and that the matrix value is lager by 1 of the value of upper left element when the i side letter and the j side letter coincide (2nd equation).

Element value of $p_{1,1}$ becomes 1 as the value of upper left is 0 and coincidence of letter "a" happens. For $p_{1,2}$ and $p_{1,3}$ no coincidence happens and value of $p_{1,4}$ remains 1 though coincidence of "a" happens because the value of the 0th raw is 0. When the filling operation reaches to $p_{2,3}$, the element value $p_{2,3}$ becomes 2 because coincidence of "b" happens and the value of upper left is 1. Thus, the filling process of element value proceeds and at element value $p_{5,5}$ becomes 4 because coincidence happens and the element value $p_{4,4}$ of upper left element is 3. The element values of coincidence between input letters and example sentence letters are encircled to emphasis the coincidences.

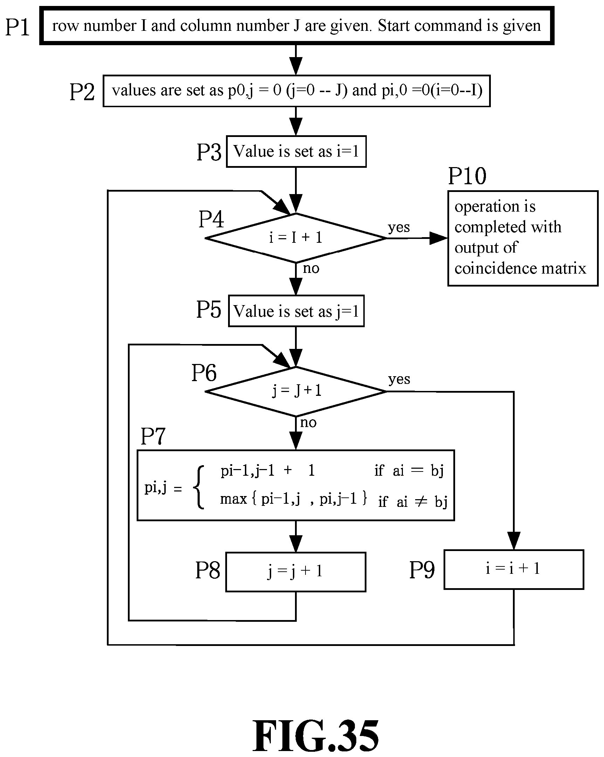

Fig.35 is the flow chart showing operation of "P.coincidence matrix generation unit" which exists in the diagram of Fig.34. This flowchart raw and 0th column realizes the operation of Eq.(1).

The process P1 gives raw number I and column number J of the coincidence matrix and process P2 at the downstream sets p values of elements of 0th raw and 0th column existing out of the frame of matrix, to 0. The process P3 of further downstream sets i value to 1 designating that the first raw of operation is 1st raw.

Process P4 decides that I'th raw which is prescribed value is all filled in and if the decision is "yes", the matrix production ends and the result is output by process P10. If the decision is "no", process P5 sets the j value to 1 to begin the scanning from 1st column. Process P6 decides the completion of filling operation of a row and if the decision is "yes" the process P9 increases i value by 1. When the decision of process P6 is "no", process P7 does filling operation on the element $p_{i,j}$ according to the Eq.(1). In other word, when input letter $a_i$ and example sentence letter $b_j$ coincide, the result of addition of 1 to the element value of upper left element is filled in according to 1st equation of Eq.(1) and when no coincidence, lager value among left element and upper element is filled in according to 2nd equation. The next process P8 shifts object of filling 1 column to the right. The process P6 is situated next to P8 and decides the completion of filling of present row. When decision of process P6 is "yes" process P9 situated next adds 1 to variable j to prepare the scanning of next row by the reason of completion of scanning of row i. Here, the next process is process P4 to decide the completion of scanning. The process goes to process P5 for preparation of scanning of next row when the decision of P4 is "no" and the process goes to process P10 to output completed matrix.

Process in Fig.35 other than process P7 are for the matrix scanning and process P7 conducts the calculation of Eq.(1). As the explanatio so fa made clarifys the scanning operation in the flow chart, the parsuit of the operation to aquire the values in Fig.2 is omitted.

The flowchart in Fig.35 has the gateway function of "E.temporal exclusive tree generation module" in total to which "P.coincidence matrix generation unit" belongs, except for the coposing function of the coincident matrix.

The "P.coincidence matrix generation unit" composes coincident matrix like that in Fig.2 from input letter sequence and example letter sequence. Off course, this method is aplicable as it is to the composition of coincident matrix between input word sequence and example word sequence.

As seen in Teruo HIKITA, "Algorithm wrtten in C - Comuputer Today Library 17", SHINSEI-SHA Co.,Ltd, December 1, 1995, for example, the maximum pi,j value of coincident word which is encircled in the coincident matrix like thst of Fig.2, shows the number of coincident letter(word) of the longest common sequence. To obtain the position of coincident word, however, further caluculation is necessary.

The follwing is the calculation of "N.adjoining coincidence word detection element" at Fig.34 based on the output of "P.coincidence matrix generation unit".

The 1st stage of the calculation is to draw an arrow from a coincident element existing in ith row and jth column in the matrix like Fig.2 and having element value pi,j, to coincident element with element value smaller by 1 and existing in the region upper than raw i and to the left of colum j. Prulal arrows can be drawn from element of pi,j when prural elements meet the condition.

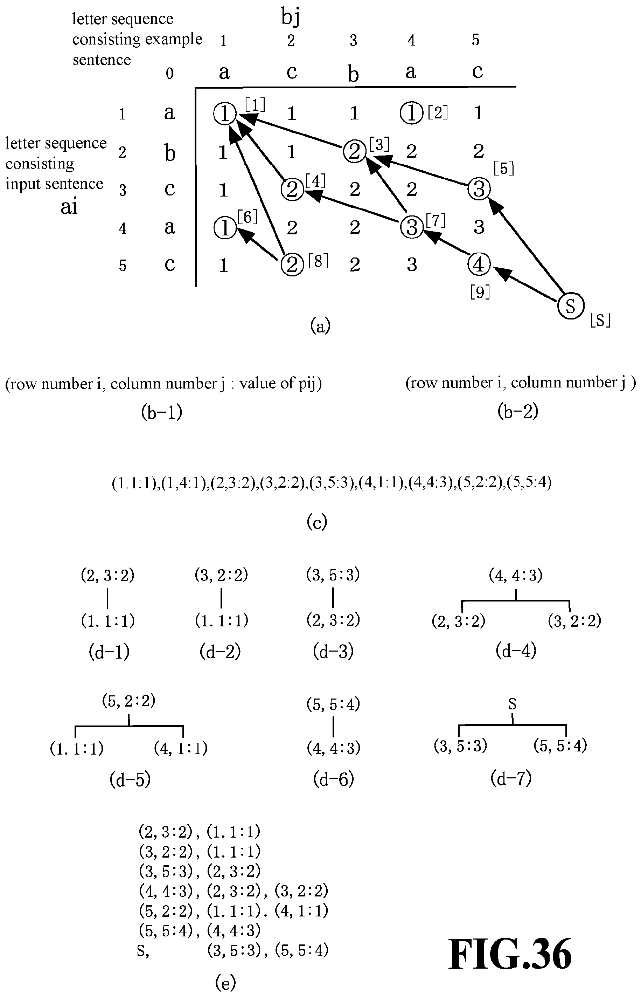

By above operation, the aggregation of arrows as shown in Fig.36(a) are obtained from the coincident matrix in Fig.2. From the matrix element at the position (4,4) and with element value p4,4 of 3, for exampple, an arrow is drawn to the element at the position of (2,3) and with matrix value of 2.

Here, coincident elements in the coincident matrix are expressed as Fig.36(b-1). Expression of Fig.36(b-2) is obtainde by removing element values pi,j's. The expression of Fig.36(b-1) is used at calculation of "N.adjoining coincidence word detection element" and that of Fig.36(b-2) is used at the caluculation of "S.common word sequence detection unit". The expressions of Fig.36(b-1)is called "coincident node expression". Fig.36(c) is the figure of coincident elements in Fig.36(a) expressed in "coincident node expression". The expression of Fig.36(b-2) without the element value pi,j is called "coincident node index". Hereafter, the "coincident node index" having the shape of (i,j) is treated.

The arrows leaving an element are expressed by a tree of pairent and prural children. The figures in Fig.36(d)"coincident shows arrows leaving each node. The figure of Fig.36(d-4), for example, expresses the arrows from node (4,4) to nodes (2,3) and (3,2). Fig.36(d-7) is concerned with the arrows leaving node S which is explained later.

The trees in Fig.36(d) are expressed in two dimentional expression in Fig.36(e). This expression is called "pairent child table". This expression is necessary at the treatment of expressions in Fig.36(d) algorithmically. At Fig.36(e) the parient node is placed at the leftmost position and child nodes are placed to the right. These nodes are separated by commas. The 4th row from the bottom in Fig.36(e), for example, expresses the tree of Fig.36(d-4) and made of node (4,4) having nodes (2,3) and (3,2) to the right. Each row in the 2-imentional array in Fig.36(e) shows a pairent children relation. This 2-dimentional array is stored in "coincident element register M". In other ward, Fig.36(e) is the content of "coincident element regisiter M".

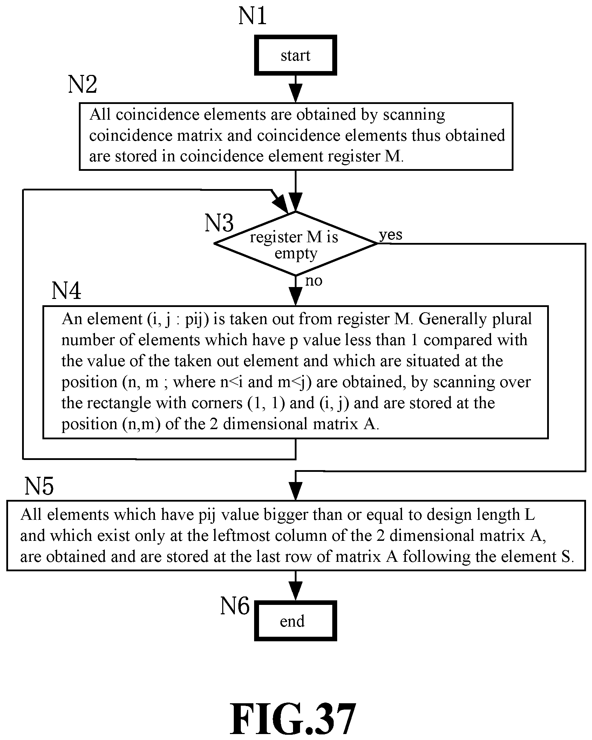

Fig.37 is the flowchart of "N.adjoining coincidence word detection element" existing in Fig.34. This flowchart is the algorithm to generate parent child relation of the shape of Eig.36(e) from the input of coincident matrix. The parent child relation of Fig.36(e) is expressed by adjacent relation on letter sequence.

The operation of the flowchart is explained here. Process N1 starts the operation and next process N2 scans matrix of the shape of Fig.36(a) thoroughly collecting total coincident nodes of the shape of Fig.36(c). The result is stored in "coincident element register M" of the parent child relation.

Process N3 is the decision operation to take out the content of "coincident element register M" one by one from the head and until "coincident element register M" becomes empty.

Process N4 composes the parent child relation of the shape of Fig.36(d) from coincident word of the shape of (i, j : pij) .

First, process N4 obtains position (i,j) or "coincident node index" from above mentioned (i, j, p) or "coincident node expression". Then, process N4 obtains elements which have p value less than 1 compared with the value of the taken out element and which are situated at the position (n, m; where n<i and m<j) as child nodes and place obtained elements to the right of the node under treatment completing a row and process N4 stores this row in the 2 dimensional matrix A.

The element under treatment is not introduced in the matrix A and deleted when the element does not have elements which are situated at row upper than row i and left of column j and which have p value less than 1 compared with the value of node under treatment.

The patient child relation or adjacent coincident element relation of the shape of Fig.36(e) is obtained at matrix A after treatment of all coincident nodes in Fig.36(c) is completed, However, the bottom row concerning with node S is not obtained yet.

After the treatment of all coincident elements in the matrix is completed, process N3 decides that "coincident element register M" is empty and the process moves to process N5. Process N5 scans over matrix A and process N5 obtains nodes which have element value lager than the designated length L and which exist only at the leftmost positions of each rows and places these elements to the left of node S obtaining all rows in Fig.36(e).

It is "N.adjoining coincident word detection element" that generates, as mentioned above, adjoining relation of nodes as seen in Fig.36(d) ore 36(e) from input letter sequence and example letter sequence.

The aggregation of partial relations between a matrix element and elements with element value less by 1 than former is expressed in the relations in Fig.36(d) that is equivalent to Fig.36(a). In Fig.36(a) the continuous relations can be observed connecting these partial relations. There is, for example, the series of nodes (5,5), (4,4), (2,3) and (1,1) which is longest common partial sequence seen in the book of Mr. 疋田. The unit "S.common word sequence detection unit" aims to obtain common sequence longer than a certain length apart from the longest common partial sequence. For this purpose as seen in Fig.36(a), the start node S is placed at the bottom right and outside of the matrix and arrows are extended to elements with element value lager or equal to the design length L with the restriction that arrows are not extended to the elements which are children of another elements.

Fig.36(a) shows the case of design length 3 where arrows extend from node S to nodes 5(3,5) and (5,5). Node 7(4,4) has element value lager than design length but this node is childe node of node (5,5) and consequently no arrow is extended from the node S. Node (5,2) is not a child node of any other node but the element value is smaller than design length and consequently no arrow is extended from node S.

By observation of Fig.36(a), the path of node S, (5,5), (4,4), (2,3) and (1,1) is found. This is a common letter sequence with 4 letters. Each parent child relation in Fig.36(b) merely expresses locally the path. Combining these local paths and composing integrated paths will generate common letter sequence. This operation is conducted at "S.common word sequence detection unit". The effect of composition of integrated path is explained using an example of input and output of the unit, before the explanation of detailed operation.

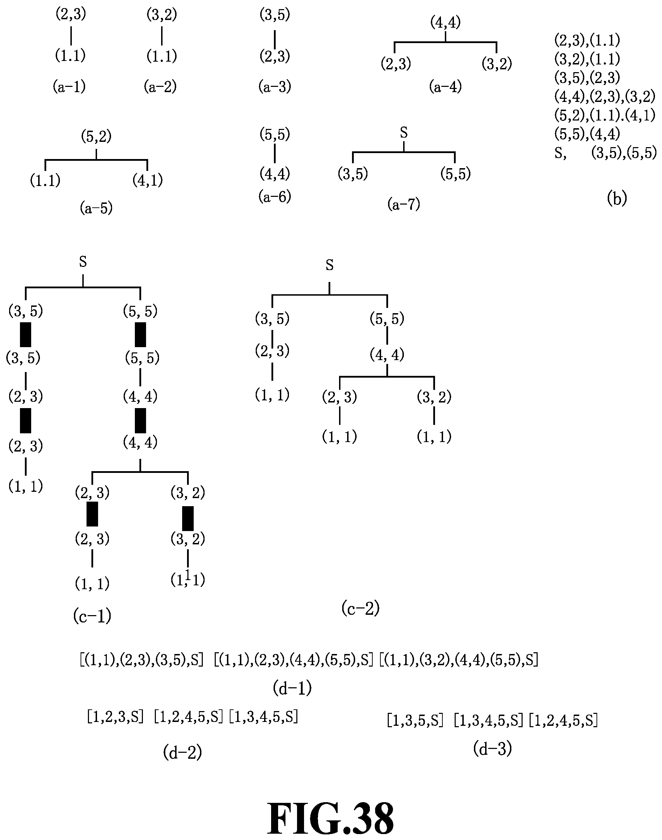

Figures in Fig.38(a) show parent child local relation in Fig.36(a) and are the result of element values removal from figures in Fig.36(d). Fig.38(b) is the result of element value removal from fig.36(e) that is the aggregation result in the shape of matrix of the entire parent child relation in Fig.38(a) . The input of "S.common word sequence detection unit" is the parent child relation of Fig.38(b). After acquisition of parent child relation, the information of element value pi,j existing in Fig.36.(e) becomes unnecessary.

Fig.38(c-1) is the aggregation of the parent child relation. Here, 2 nodes connected by broad lines are the same nodes. By merging the same nodes at Fig.36(c-1), the tree with topmost node S at Fig.38.(d-2) is obtained. By tracing from a bottom node to the node just below the node S, a common letter sequence is obtained. The result is shown in Fig.38(d-1). Fig.38(d-1) shows the output of "S.common word sequence detection unit". This is called "coincident node path".

By extracting only value i or letter number of the input letter sequence from each path in Fig.38(d-1), Fig.38(d-2) is obtained. The first path of Fig.38(d-2) is (1, 2, 3) showing that 1st, 2nd, 3rd letters are coincident letters(words). The path at the center of Fig.38(d-2) shows that 1st, 2nd, 4th and 5th letters are coincident letters.

Similarly, extraction of value j or letter number of example letter sequence results Fig.38(d-3). The first path (1, 3, 5) shows that 1st, 3rd and 5th letters in example letter sequence are coincident letters(words).

The configuration of Fig.38(a-5) is not included in parent child relation of Fig.38(c-1) because the node (5, 2) generating only short length path does not exist on the path leaving from node S.

The part "" does not use the integrated tree configuration shown in Fig.38(c-2) and generates paths in Fig.38(d-3) directly from parent child relations in Fig.38(b). Fig.8(c-2) is to explain the relation between parent child relations at coincident nodes and integrated tree configuration.

Hitherto, coincident nodes are described in the shape of (i, j, pi,j) as seen in Fig.36(c). As the element value pi,j of coincident node is unnecessary after the local relation in Fig.36(d) is obtained. The coincident node is hereafter described by coincident node coordinate of the shape of Fig.36(b-2); The word coordinate is introduced because coincident nodes are identified by coordinates in Fig.36(a). Though the word "name" can be used instead of coordinate, this word is chosen because coincident node is identified by coordinate in Fig.36(a).

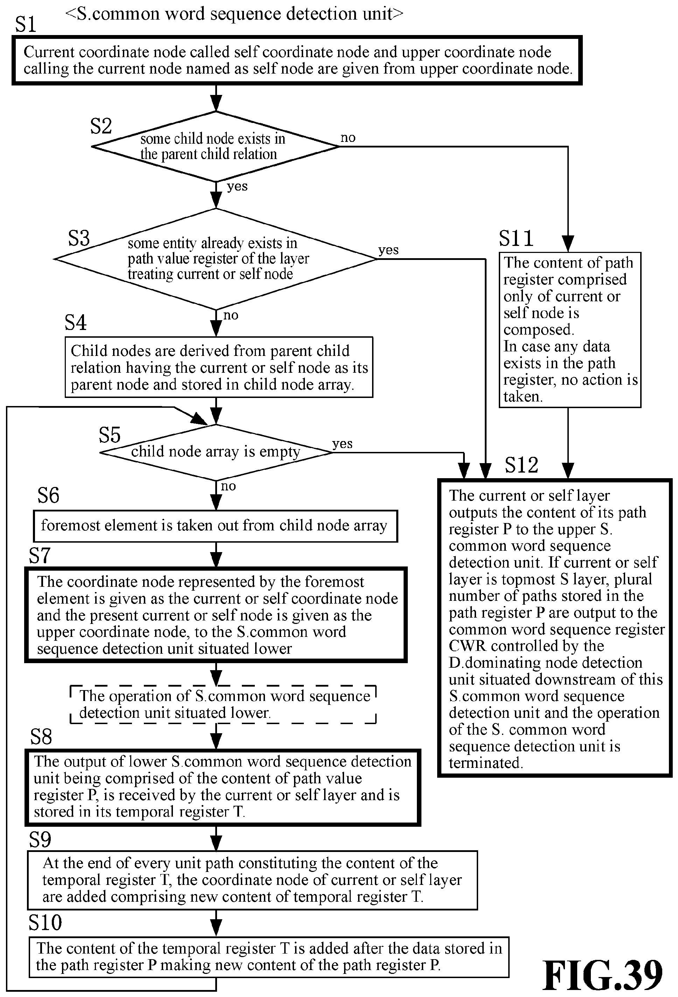

Fig.39 is the flowchart of a layer of "S.common word sequence detection unit" existing in Fig.34 to obtain common word sequence as seen in Fig.38(d). As coincident node processed by a layer is limited to particular one, the name of each layer is the same as coordinate of coincident node to be processed. During operation of one particular layer, the present layer is called "self coordinate" and upper layer which calls present layer is called "upper coordinate". In the configuration of the shape of Fig.38(d), the coordinate node with "upper coordinate" is situated upper than the coordinate node with "self coordinate".

At process S1, the coincident node coordinate to be processed by "self coordinate" and "upper coordinate" of calling layer are given by upper coordinate.

Process S2 decides whether the node of "self coordinate" obtained at process S1 has any child node by the parent child relation of the shape of Fig.36(c). If decision is "no" the process goes to process S11 as the search is terminated. Namely, only "self coordinate" is generated and process goes back to upper layer with this information. The termination of search occurs at such node as node (1,1) in Fig.36(a).

Next process S3 detects existence of entity in "path value register". When, as seen in Fig.36(a), the path finding progresses to S, (5, 5), (4, 4), (2,3) thus reaching the node (2, 3), process S3 detects the existence of previous path finding reaching the node to suspend further path finding, because further path finding is unnecessary through the reason that further path is already obtained by previously obtained complete path S, (3, 5), (2, 3), (1, 1). The "path value register" records previous path finding result. Process S3 suspends path finding and goes, holding the path obtained, to process S12 of coming back to upper layer.

Process S4 situated next extracts child nodes from the parent child relation of the shape of Fig.38(b) which is the input to "S.common word sequence detection unit" and stores generally plural child node numbers in "child node array".

In the succeeding processes, child nodes stored in "child node array" by process P4 are taken out sequentially starting with foremost of the array from "child node array" and are treated. Succeeding process S5 detects emptiness of "child node array" as a result of completion of treatment of child nodes. When empty, process goes, holding the path obtained, to process S12 of coming back to upper coordinate.

The succeeding process S6 takes out a child node from "child node array" and the process S7 situated further downstream calls lower layer treating the child node. Process S7 provides the lower layer with the coordinate of child node taken out and the coordinate of current layer.

Then waiting of the completion of lower coordinate is necessary. After completion of lower coordinate, process S8 receives the information of "path value register P" belonging to the lower layer and stores this information in "temporal register T".

Data stored in "temporal register T" is comprised of aggregation of generally plural unit paths. Process S9 adds the current coordinate at the end of every unit path. This operation is necessary to express that current or self coordinate of this layer is new comprising part of these unit paths.

Process S10 adds the content of "temporal register T" after generally plural paths obtained at previously treated child nodes and stored in "path register P". Then the process go back to process P5 detecting the presence of untreated child node.

As is obvious from the description so far made, one particular layer of this "S.common word sequence detection unit" treats child nodes in "child node array" as independent to each other. By this reason, trees as shown in Fig.38(c-2) are not generated and only coincidence nod sequence as shown in Fig.38(d-1) are generated.

As seen thus far, operation of current layer starts with process S1 at the call of the upper layer and ends at process S12 responding to the upper layer. Usually operation concerning with a particular coincident node is completed by one call of a particular layer but sometimes one particular layer is called more than once as is previously seen in the case where the path finding of S, (5, 5), (4, 4), (2, 3) is conducted after the path finding of S, (3, 5), (2, 3), (1, 1), In this case the processes traces the path of processes S1, S2, S3, S12 not going to other processes.

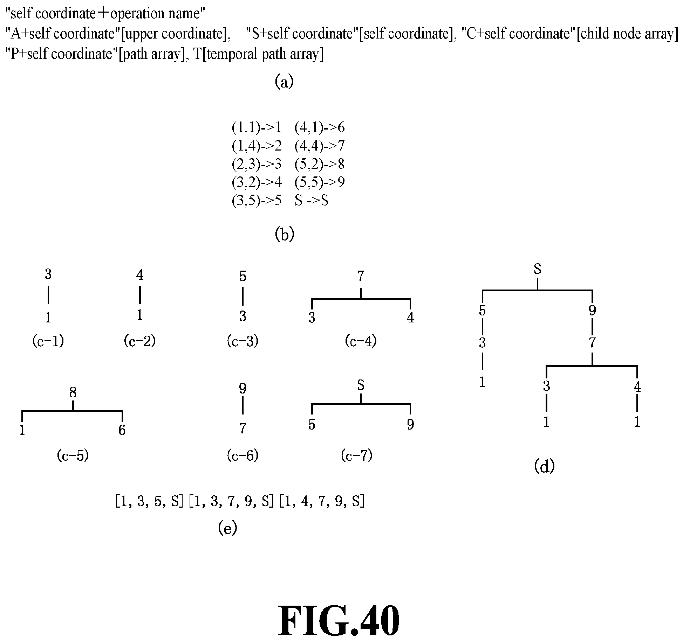

The explanation is made for the configurations of the figures in Fig.40 showing the operation process of flowchart of "S.common word sequence detection unit" of Fig.39. The variables exclusively belonging to each layer are three variables "self coordinate", "upper coordinate" and "path array". The "path array" is the aggregation of generally plural coincident node coordinate arrays.

The content of the register accommodating the upper coordinate is expressed by the style where the upper coordinate is enclosed by square brackets preceded by the letter sequence "A+self coordinate". The content of the register accommodating the self coordinate is expressed by the style where the self coordinate is enclosed by square brackets preceded by the letter sequence "S+self coordinate". The path value array is expressed by the style where the path array is enclosed by square brackets preceded by the letter sequence "P+self coordinate".

The content of the register accommodating the child node array is expressed by the style where the child nod array is enclosed by square brackets preceded by the letter sequence "C+self coordinate". The child node array is child node array having self coordinate as the parent node in the parent child relation of the style of Fig.38.(b).

Similarly, the content of the register accommodating the temporal path array generated temporally is expressed by the style where temporal path array is enclosed by square brackets preceded by the letter "T". Temporal path array is basis for generation of path array and is used at the processes S8, S9, S10 of "S.common word sequence detection unit" shown at Fig.39. As for register T, the content is deleted in the course of processing and consequently the specification by the index of self coordinate is unnecessary.

Fig.40(a) shows the configuration of each process expression in each layer. The title of the shape of "self coordinate + process name" is placed at upper left position of the expression of each layer. The output generate at each layer is enclosed by quotation marks and placed after the title.

As coincident node coordinates such as (1, 1) and (5, 2) is inconvenient at the expression made here, replace of the type of Fig.40(b) is adopted. The coincident node coordinate (3, 2), for example, is replaced with the figure 4. The figures replaced is chosen according to the scanning order of coincident nodes from upper left to bottom right. The expression Fig.38(d-1) showing the output of "S.common word sequence detection unit" is reverted to the expression of Fig.38.(d-1) after the output is generated. Figures in Fig.40(b) are the results of replacement applied to figures in Fig.38(a). Fig.40(d) shows the replacement result of the tree of Fig.38.(c-2) generated by the merge of identical nodes. The set of common letter sequence is obtained by tracing the paths in Fig.38(d). This is replacement result of the way of Fig.40.(b) to letters in output of "S.common word sequence detection unit" shown in Fig.38.(d).

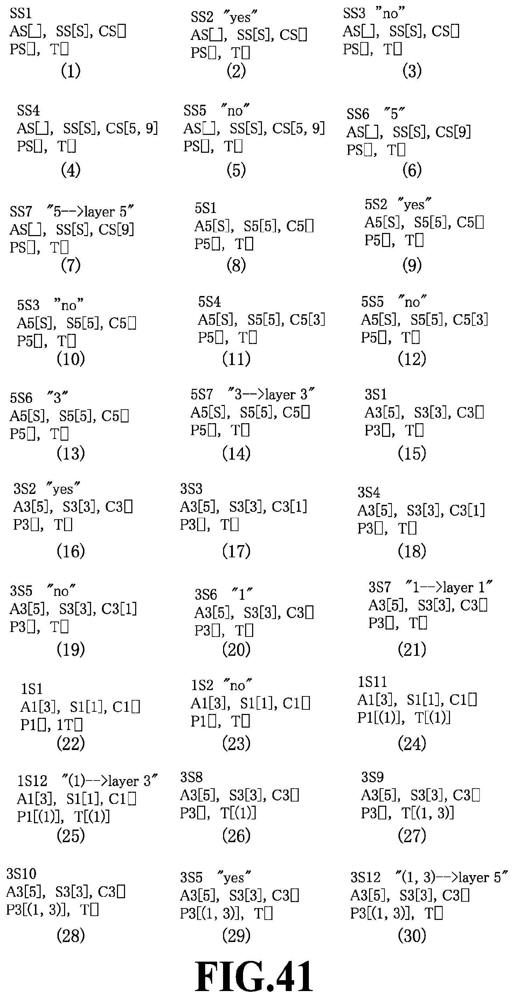

Hereafter, the generation process of node path in Fig.40(e) by "S.common word sequence detection unit" of Fig.39 from the input of local relations of Fig.40.(c) is traced. The trace is made by the use of the figures in Fig.41 - 44.

By the trace, the letter sequence "Fig.+figure number + = + self coordinate + process in the unit" is used to show figure number, self coordinate and process in the unit simultaneously.

Fig.41(1)=SS1 shows the situation where the algorithm of Fig.39 is called from outside of the algorithm. The first "S" in the title represents the self coordinate and "S1 " following the "S" represents the process name in Fig.39. **In** the register SS accommodating the self coordinate, "S" which is the coordinate of this layer is taken in. As the coordinate of outside of the algorithm is defined to be empty, the content of register AS storing upper coordinate is empty.

The process of Fig.41(2)=SS2 is illustrated here. As seen in Fig.40(c-7), node S has child nodes and consequently the process S2 in Fig.39 generates the decision of "yes" leading to the next process of Fig.41(3)=SS3. As for the layer of S, "path value register" PS is empty therefore the decision her is "no" and next process is Fig.41(4)=SS4. Here, child nodes n5 and n9 shown in Fig.40(c-7) are introduced in the register CS accommodating child nodes. At the process Fig.41(5)=SS5, the decision is "no" because data exists in the register CS leading to the process of Fig.41(6)=SS6. At the process of Fig.41(6), takes out node S that exists at the top position as the object of processing and calls layer 5 situated lower and designated by node 5. The process of Fig.41(7)=SS7 is the calling process of layer 5. This calling process is expressed as "5-->layer5".

The process of Fig.41(8)=5S1 is the first process of the layer called with the indication of self coordinate 5 and upper coordinate S. Of course, this is the process S1 in Fig.39 belonging to self coordinate 5. The first letter is altered from S to 5. The letter S is stored in the resister AS accommodating upper coordinate and the figure 5 is stored in the resister S5 accommodating self coordinate. As seen in Fig.40(c-3), node 5 has child node of coordinate 3 and consequently the process of Fig.41(9) generates the decision of "yes" leading to the next process of Fig.41(10)=5S3. As pass value register P5 is empty, the next process the process of Fig.41(11)=5S4. Fig.40(c-3) shows that the child node having node 5 as parent node is node 3. This coordinate is introduced in the register C5.

As child node exist in register CS, the decision at Fig.41(12) is "no" leading to the process of Fig.41(13)=5S6. Here, the node 3 at top position is taken out from register C5. This operation is described by the expression "3" after the title. The process of Fig.41(14)=5S7 calls layer 3 with the information of self coordinate 3 and upper coordinate 5. This calling operation is expressed as "3-->layer 3" in Fig.41(14)=5S7.

By the operation of Fig.41(15)=3S1, 5 is stored in the register A3 accommodating upper coordinate and 3 is stored in register S3 accommodating self coordinate. Operation of Fig.41(16)=3S2 is treated here. As seen in Fig.40(c-1), node 3 has child node 1 and consequently decision here is "yes" leading to the next process of Fig.41(17)=3S3. As path value register P3 of this layer is empty and next process is Fig.41(18)=3S4. As seen in Fig.40(c-1), node 3 has the node 1 as childe node and the decision here is "yes" leading to the process of Fig.41(18)=3S4. Node 1 is obtained as to have parent node 3 from Fig.40(c-1) and this value is introduced into C register.

As child node exists in register C3 the decision at Fig.41(19) is "no" leading to the Fig.4(20)=3S6. Here, node 1 existing at the top position is taken out from C3. This operation is expressed as21" after the title 3S5. Fig.41.(21)=3S7 calls layer 1. The calling operation is expressed as "1-->layer 1".

At Fig.41(22)=1S1 3 is stored in register A1 accommodating upper coordinate and 1 is stored in register S1 accommodating self coordinate. Child node having node coordinate 1 as parent node does not exist as expressed in Fig.40(c), Fig.41(23)=1S2 generates decision of "no" leading to the operation of Fig.41'24)=1S11.

Fig.41(24) is the operation to introduce the path value consisting only of self coordinate to path value register. The coordinate 1 is transformed in path expression (1) and is introduced in the path value register P1. Many arrays will be stored in path value resister and these paths are, hereafter, expressed in arrays enclosed in parenthesis "(" and ")".

Next process is Fig.41(25)=1S12, which is output, process at layer 1 or coordinate 1. Here, the operation comes back to layer 3 guided by the value 3 of upper layer stored in the upper coordinate register A1 bringing the path value "(1)" to layer 3. This operation is shown by the expression "(1)-->layer 3".

The following process is process of Fig.41(26)=3S8. Here, the path value brought from lower layer is introduced in the temporal register T.

Next process is process of Fig.41(27)=3S9. This process prescribed as the process S9 adds the self coordinate of current layer to the end of every composing unit paths accommodated in the temporal register T thus making updated content of temporal register T. As a result, the content of temporal register becomes to (1, 3). Here, definition of "unit path" is introduced. The "unit path" is continuous array with no branch or loop of coincident node coordinate.

Next process is operation of Fig.41(28)=3S10. This process prescribed as the process S10 appends the content of current temporal register T after congregation of generally plural unit paths accommodated in path register P3. As no unit path is accommodated in path value register P3, updated content of P3 is (1, 3).

Then the operation goes back to operation of Fig.41(29). At present, the content of register C3 does not exist as a result of operation of Fig.41(20)=3S6. Decision of the process of Fig.41.(29)=3S5 is, therefore, "yes" leading to process of Fig.41(30) which generates output of this layer. Here, operation goes back to layer 5 guided by the upper layer value accommodated in register A3 accompanying the value (1,3) in path value register P3.

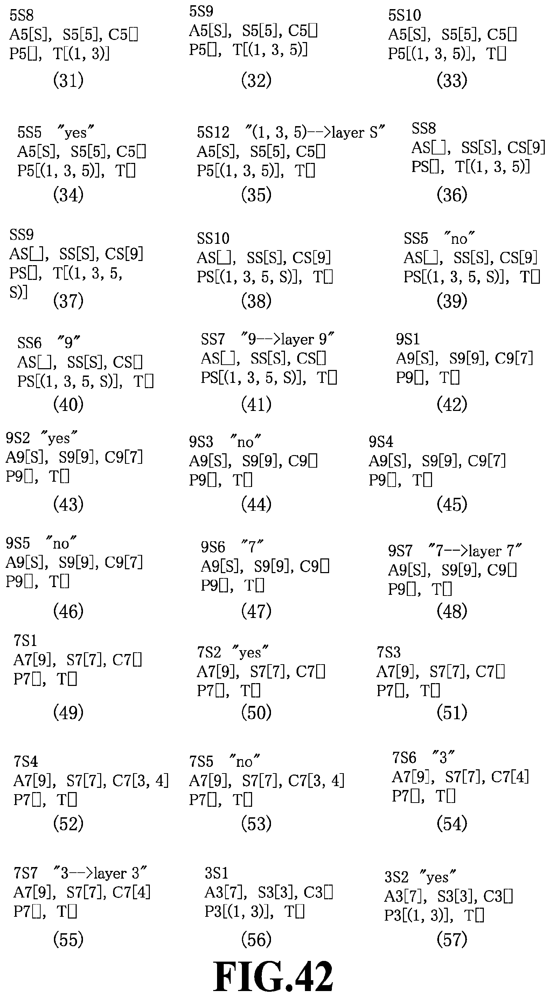

The following process is Fig.42(31)=5S8 belonging to layer 5. The path (1, 3) brought from layer 3 is accommodated in temporal register T. Process of Fig.42(32)=5S9 adds the self coordinate of current layer which is 5 to the end of every composing unit paths accommodated in the temporal register T thus making updated content of temporal register T. The next process of Fig.42(33)=5S10 appends the content of temporal register T to the content of path value register P4.

The operation goes to operation of Fig.42(34)=5S5. The content of register C5 has disappeared by the operation of Fig.41(13)=5S6. The decision of Fig.42(34)=5S5 is, therefore, "yes" leading to operation of Fig.42(35)=5S12 generating the output of this layer. Here, operation goes back to layer S guided by the layer value S accommodated in register A5 bringing the value (1, 3, 5) of path value register P5.

Next process is the process of Fig.42(36)=SS8. First, path value coming from lower layer is stored in temporal register T. Then, process of Fig.42(37)=SS9 adds the self coordinate of current layer which is S to the end of every composing unit paths accommodated in the temporal register T. After this operation, this path is introduced in path value register PS.

As content of register CS accommodating untreated child node is 9, next operation is process of Fig.42.(40)=SS6. In register CS of layer S, child nodes 5 and 9 has been introduced by the process of Fig.41(4)=SS4 and. later, node 5 has been taken out by Fig.41(6)=SS6 and consequently node 9 remains. Operation of Fig.42(49) takes out node 9 from register C. Next, layer 9 is called by process of Fig.42(42)=SS7.

The process of Fig.42(42)=9S1 stores S to register A9 accommodating upper coordinate and stores 9 to register S9 accommodating self coordinate. As seen in Fig.40(c-6), self coordinate 9 has node 7 as child node and consequently the decision of Fig.42(43)=9S2 is "yes" leading to the operation of Fig.42(44)=9S3. As the path value register P9 of this layer is empty and consequently the decision is "no" leading to the operation of Fig.42(45)=9S4. As seen in Fig.40(c-6), node 7 is found to be the child of node 9 and this coordinate is introduced in register C9. The decision of Fig.42(46)=9S5 is "no" directing to Fig.42(47)=9S6 which takes out 7 from register C9. The next process Fig.42(48)=9S7 calls the layer 7.

The process of Fig.42(49)=7S1 stores 9 to register A7 accommodating upper coordinate and stores 7 to register S7 accommodating self coordinate. As seen in Fig.40(c-4), self coordinate 7 has nodes 3 and 4 as child nodes and consequently the decision of Fig.42(50)=9S2 is "yes" leading to the operation of Fig.42(51)=7S3. As the path value register P7 of this layer is empty and consequently the decision is "no" leading to the operation of Fig.42(52)=7S4. As seen in Fig.40(c-4), nodes 3 and 4 are found to be the child of nodes 7 and these coordinates are introduced in register C7. The decision of Fig.42(53)=7S5 is "no" directing to Fig.42(54)=7S6 which takes out 3 from register C7. The next process Fig.42(55)=7S7 calls the layer 3.

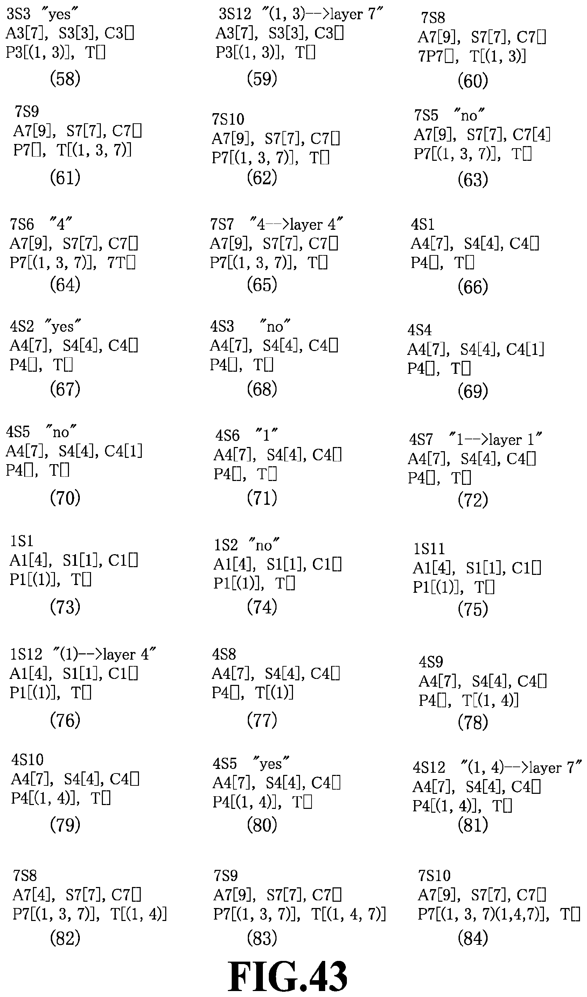

The process of Fig.42(56)=3S1 stores 7 to register A3 accommodating upper coordinate and stores 3 to register S3 accommodating self coordinate. As seen in Fig.40(c-1), self coordinate 3 has node 1 as child node and consequently the decision of Fig.42(57)=3S2 is "yes" leading to the operation of Fig.43(58)=3S3.

The path value (1, 3) is already stored in P3 that is the path value register of this layer as a result of former treatment of layer 3. Or more minutely speaking, the value (1, 3) has been introduced to path value register P3 by the process of Fig.41(28)=3S19. In other ward, the portion lower than node 3 is already searched. Consequently, the decision of Fig.43(58)=3S10 is "yes" leading to the process of Fig.43(59)=3S12. The operation comes back to layer 7 guided by the value 7 of upper layer stored in the upper coordinate register A3 bringing the path value (1, 3).

The next process is the process S8 of layer 7 which is Fig.43(60)=7S8. In the temporal register T, the path value (1, 3) that is brought from layer 3 is stored. The next process is Fig.43.(61)=7S9 which adds the self coordinate of current layer 7 to the end of every composing unit paths accommodated in the temporal register T thus making updated content of temporal register T. By next process of Fig.43(62)=7S10, the content of temporal register T is appended to the content of path value register P7.

The process of Fig.43.(63)=7S7 repeats process S7 again according to the loop operation. Here, the decision is "no" because of presence of data in register C7 leading to process of Fig.43.(64)=7S6 which takes out child node 4. In succession, layer 4 is called by the processor of Fig.43(65)=7S7.

By Fig.43(66)=4S1 7 is stored in register A4 accommodating upper coordinate an 4 is stored in register S4 accommodating self coordinate. As seen in Fig.40(c-2) node coordinate 4 has coordinate 1 as child coordinate resulting in decision of "yes" at Fig.43(67)=4S2 and process turns to operation of Fig.43(68).=4S3.

As no path exists in path register P4, the decision of Fig.43(68)=4S3 is "no" leading to the next process Fig.43(69)=4S4. The child node having node 4 as parent node is found to be 1 according to Fig.40(c-2) and this node coordinate is introduced in register C4. The decision of Fig.43(70)=4S5 is "no" leading to the operation of Fig.43(71) where 1 is taken out from register C4. Fig.43(72)=4S7 situated next calls layer 1.

By the operation of Fig.43(71)=1S1, 4 is stored in register A1 accommodating upper coordinate and 1 is stored in register S1 storing self coordinate. As seen in figures in Fig.40(c), there is no node having node 1 as parent node and accordingly the decision of Fig.43(74)=1S2 is "no" leading to Fig.43(75)=1S11.

The operation of Fig.43(75)=1S11 introduces path value comprised only of self coordinate to path value register. Under ordinal circumstances, path coordinate 1 in register S1 should be introduced taking the array shape of (1) to path value register P1. However, path value (1) already exists in path value register P1 through the former process of Fig.41(78) =4S9 and consequently no action is taken.

The process turns to Fig.43(76)=1S12 generating output of this layer. Here, the operation comes back to layer 4 guided by the value 4 of upper layer stored in the upper coordinate register A1 bringing the path value "(1)" to layer 4.

The next process is Fig.43(77)=4S8 introducing the path value coming from lower layer to temporal register T. The following process is Fig.43(78)=4S9. This process adds the self coordinate of current layer to the end of every composing unit paths accommodated in the temporal register T thus making updated content of temporal register T. As a result, the content of temporal register T is changed to (1, 4). The following process is Fig.43(79)=7S10 the content of temporal register T is introduced in path value register P4.

The operation turns again to process S5 which is Fig.43(80)=4S5. The situation this time is different by the fact that register C4 is empty compared with the situation of Fig.43(70)=4S5 and consequently the decision is "yes" leading to the process of Fig.43(81)=4S12. Here, the operation goes to layer 7 guided by the value 7 of upper layer stored in the upper coordinate register A4 bringing the path value (1, 4).

The next process is the process of Fig.43(82)=7S8. The path (1, 4) is stored in temporal register T. This process adds the self coordinate of current layer to the end of every composing unit paths accommodated in the temporal register T thus making updated content of temporal register T. The following process of Fig.43(83)=7S9 adds coordinate 7 of current layer to the end of unit path element updating the content of temporal register T. The succeeding process of Fig.43(84) =7S10 the content of temporal register T is appended after the content of path value register P7.

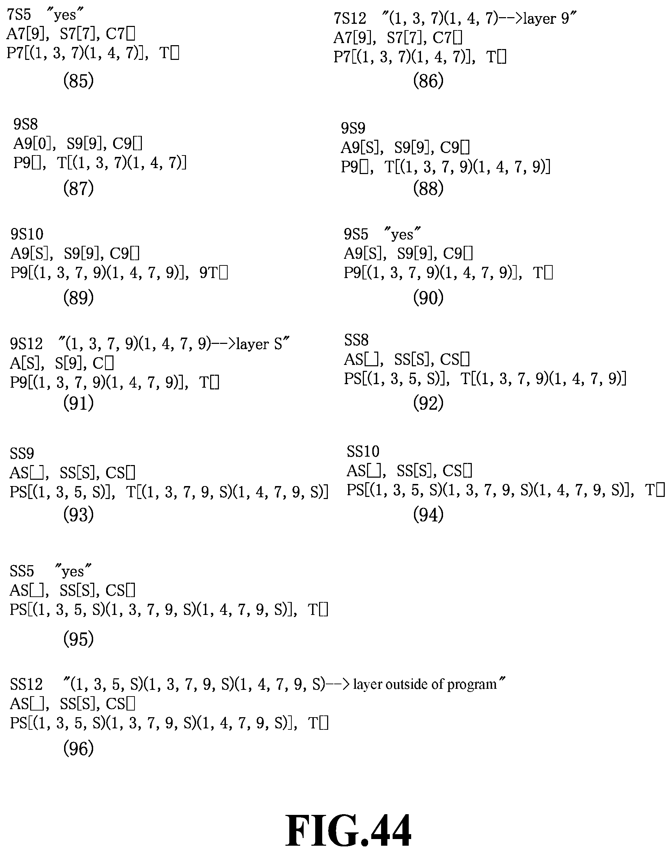

By loop process operation turns again to S5 which is Fig.44(85)=7S5. As register is empty and the decision is "yes", the next process is Fig.44(86)=7S12. By this process, operation comes back to layer 9 guided by the value 9 of register S7 accompanying content of the path value array.

Next process is Fig.44(87)=9S8. There exists path coming from layer 7 in temporal register T. The succeeding process Fig.44(88)=9S9 adds the self coordinate 9 to the ends of unit path elements making new content of temporal register T. The succeeding process of Fig.44(89)=9S10 appends the content of temporal register T to the content of path value register p9.

Operation comes back to process S5 which is Fig.44(90)=9S5. As register C9 is empty, the decision of "yes" moves the operation to Fig.44(91)=9S12 which is operation of output. By this process operation goes back to layer S guided by the value S in register A9 and accompanied by the content of path value register.

Next process is Fig.44(92)=SS8. Two paths brought from layer 9 are stored are in temporal register T. Succeeding process of Fig.44(93)=SS9 adds current self coordinate S to the ends of unit path elements updating the content of temporal register T. The succeeding process of Fig.44(94)=SS1 the content of temporal register T is appended to the path value register PS.

By the loop process, the operation comes back to S9 which is Fig.44(95)=SS5. The decision here is "yes" because register CS is empty accordingly the next process is output process of Fig.44(96)=SS12. As register AS is empty, the process of Fig.44(96)=SS12 outputs the content of path register PS to the "input common word sequence register CWR" controlled by "D.dominating node detection unit" situated down stream of "S.common word sequence detection unit" explained here.

The path value (1, 3, 5, S),(1, 3, 7, 9, S) and (1, 4, 7, 9, S) is obtained from the local relations in Fig.40(c) not using merged tree structure of Fig.40(d). The use of tree structure is avoided by treating the lower structures at process S7 in the shape of aggregation of independent paths made by separation.

It is needless to say that rewriting of the node names in Fig.40(e) conducted for the purpose of visibility is restored into node paths of Fig.38(d-1).

The above is the explanation of "S.common word sequence detection unit".

Among composing portions of this patent application shown in Fig.34, "N.adjoining coincident word detection element" receiving the output of "P.coincidence matrix generation unit" and "S.common word sequence detection unit" receiving the output of "N.adjoining coincident word detection element" are hitherto explained minutely.

The flowchart of "P.coincidence matrix generation unit" is shown in Fig.35 and the flowchart of "N.adjoining coincident word detection element" is shown in Fig.37 and the flowchart of "" is shown in Fig.39. Especially "S.common word sequence detection unit" is driven by recursive process where the same algorithm is recursively used.

As seen before, "" expresses the commonness between input sentence and example sentence by points in 2 dimensional matrix, and "" finds adjacency between nodes on the matrix, and "" composes long node paths by interconnecting adjacent nodes. These node paths represent common sequence between input sentence and example sentence.

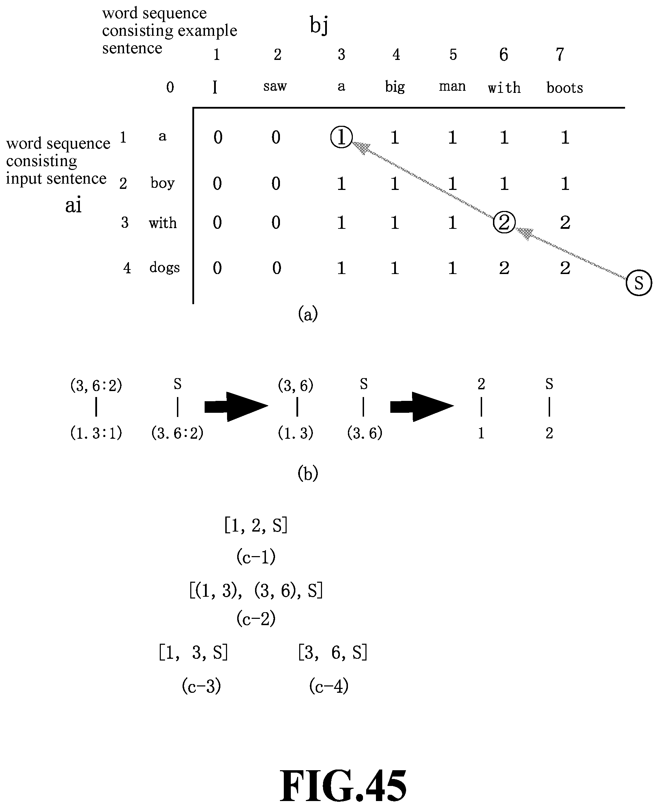

The outline of these operation is illustrated in Fig.36, and Fig.45 shows the application of the operation to a practical case resulting in the discovery that the 3rd word "a" and the 6th word "with" are coincidence words.

The outline of serial operation of "P.coincidence matrix generation unit" and "S.common word sequence detection unit" for the pair of input sentence and example sentence shown in Fig.45(a) is illustrated here. This pair is the starting point of the examples used in explanation of "analysis result selection apparatus at example sentence driven machine translation" because examples originated from this pair are used through illustration of this patent application.

Figu.45(a) shows parent child relation of coincident nodes on coincidence matrix and this figure corresponds to Fig.36(a). The portion to the left of broad arrow corresponds to figures in Fig.36(d) and this portion has the sections for element value "p". The portion between two broad arrows is the input of "S.common word sequence detection unit" not including the sections of element values. The portion to the right of arrows is the result of replacement made to increase visibility as shown in Fig.40(b).

The path obtained by "S.common word sequence detection unit" receiving this replacement result as input is that in Fig.45(c-1). Fig.45(c-2) is result of reverting to original node coordinates of expression of Fig.45(c-1) resulted from the replacement. The coincident words at input word sequence are shown in Fig.45(c-3). The coincident words at the example sentence are shown in Fig.45(c-4). Coincident words at the example sentence are 3rd and 6th words.

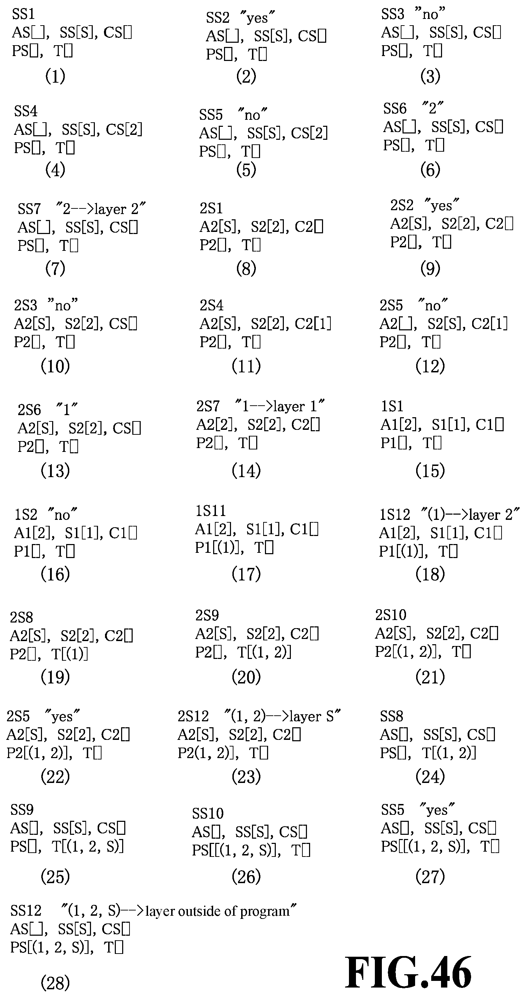

Here, the operation of "S.common word sequence detection unit" obtaining the path in Fig.45(c-1) from the local relation shown in the left portion of Fig.45(b) is traced. Fig.39 is the flow chart of this unit about which detailed explanation was made. Figures in Fig.46 are traced operation. Fig.40(a) shows the configuration of each process each figures in Fig.46. Here, only important process is illustrated without explaining the entire process. Here also in the explanation of trace, the letter sequence "Fig.+figure number + = + self coordinate + process in the unit" is used to show figure number, self coordinate and process in the unit simultaneously. The "figure number" here is the branch figure number in Fig.46.

It is found at Fig.46(6)=SS6 that the lower node of node coordinate S is 2 consequently next process is Fig.46(8) =2S1. It is further found at Fig.46(13)=2S6 that lower node of node coordinate 2 is node coordinate 1 and operation turns to Fig.46(15)=2S1. It is found at Fig.46(16) that there exists no node under node coordinate 1 and path value "(1)" is made in the path value register P1 by the succeeding operation of Fig.46(17)=1S11. By the succeeding operation of Fig.46(18) =1S12 process comes back to the layer of node coordinate 2 accompanying the path "(1)". The process of Fig.46(21) =2S10 adds the self coordinate and makes the path "(1, 2). By the succeeding operation of Fig.46(23)=2S12 process comes back to the layer S accompanying the path "(1, 2)". Fig.46(26)=SS10 adds self node coordinate thus makes the path "(1, 2, S)". Finally Fig.46(28)=SS12 generates the output of "(1, 2, S)" to outside of the algorithm.

The output of Fig.45(c-1) is obtained by receiving this output to former coordinate expression thus obtaining the positions of coincident words shown in Fig.45(c-4) of example sentence.

As shown above, coincident word positions at example sentence shown in Fig.45(c-4) is obtained from the pair of input sentence and example sentence shown in Fig.45(a) through the use of the matrix of Fig.45(a).

The methods illustrated hitherto are the operation up to "S.common word sequence detection unit" in Fig.34. As the method for obtaining coincident words between input sentence and example sentence by "" is obtained, the composing method of temporal exclusive tree on the basis of coincident word is hereafter illustrated.

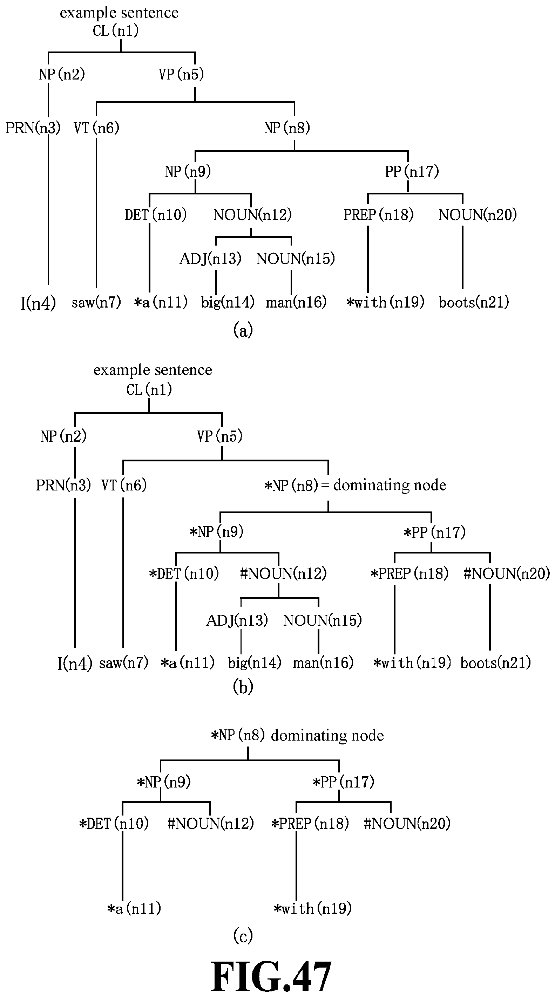

Fig.47 shows the example of an example tree with coincident words. Fig.47(a) shows the relation between entire example tree and coincident words. The word "a" with number n11 and the word "with" with number n19 are coincident words to which the asterisks "*" are attached to express that these are coincident words. The attribute of dominant node is attached to the node NP with number n8. At Fig.47(b), this situation is shown by the expression of "NP(n8)=dominat node". The operation of attribute annexation is conducted by "D.dominating node detection unit". As seen in Fig.34, this portion supplies the input to "T.composition unit of temporal exclusive tree " or "M composition unit of temporal exclusive tree with allowance of part of speech coincidence".

The following is the explanation of the operation of "D.dominating node detection unit" existing in Fig.34.

The definition of dominant node is shown now. The dominant node is defined as "the node at the lowest position among nodes dominating entire coincident word". Node A is defined to dominate node B when node A is situated upper than node B in a tree.

At Fig.47(b), the node n8 dominates the coincident words n11 and n19. For example, the node n5 also dominates nodes n11 and n19 but this node is not situated lower than n8 hence this node is not the dominant node. The node n9 exists in lower than n8 but this node does not dominate the coincident node n19 and consequently this node is not the dominant node.

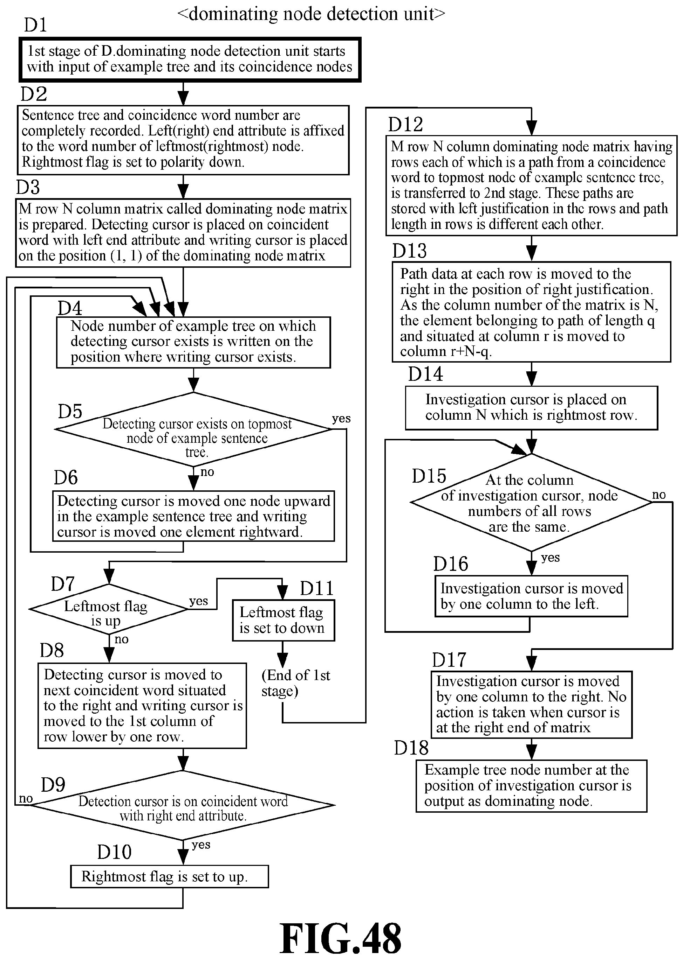

The difference, accepting the difference about dominant node, between Fig.47(b) and Fig.47(a) is concerning with the operation of "T.composition unit of temporal exclusive tree " and not treated in the explanation of "D.dominating node detection unit". Fig.48 is the flow chart of "D.dominating node detection unit".

The process D1 - D18 composing the flowchart of Fig.48 is shown in the rectangles of each process of Fig.48. The process only controls the movement of data in the matrix called dominating node matrix. From this reason, the explanation of each process is replaced by clarifying the effect of each process through the operation traces for the example of coincident nodes "a" and "with" obtained in Fig.47 of "S.common word sequence detection unit".

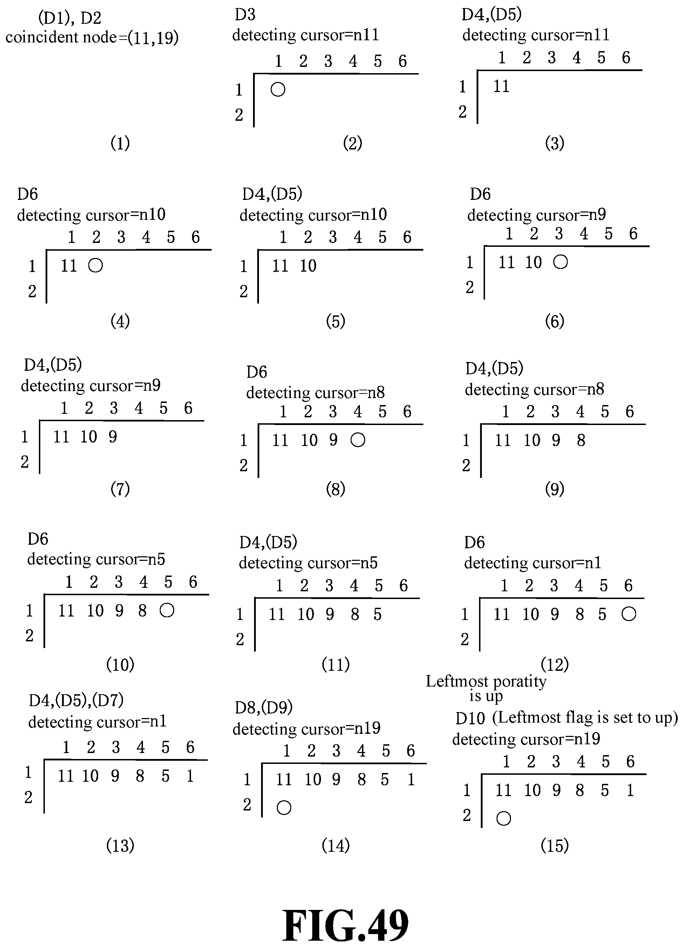

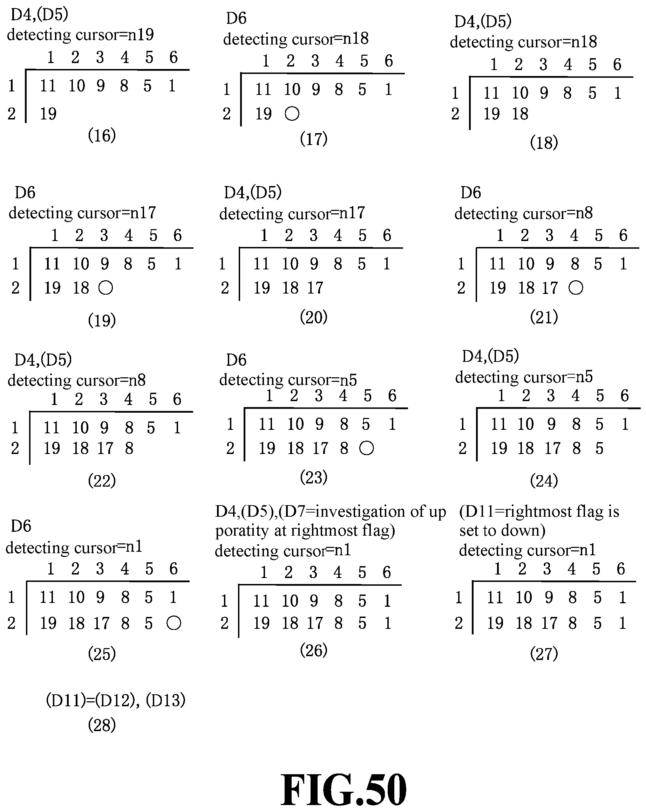

Figures in Fig.49 and Fig.50 show the change of stored information in the dominant node matrix at the first half of the flow chart of Fig.48 of "D.dominating node detection unit" coping with the coincident word obtained in Fig.47. The row number of dominant node matrix must be lager than the number of coincident nodes and the column number must be lager than the "height" of the example tree. For the case of Fig.47(b), 2 rows 10 columns will be appropriate and dominant node matrix seen in Fig.49 and Fig.50 has this dimension. The description of rows without data, however, are abbreviated. The numbers 1 and 2 of the rows are given to rows and placed to the left of the matrix and numbers of 1 to 10 are given to the columns.

At the above left of each figure in Fig.49 and Fig.50 the process composing the flow chart of "" in Fig.48 is placed. This measure explicitly shows the process causing the movement of the stored data in dominant node matrix. Each process is expressed as "branch number in Fig.49 or Fig.50 + the process in Fig.49 or Fig.50 + position of detecting cursor". Processes not causing change in dominant node matrix are expressed in enclosing parenthesis. At the place below the process name in each figure in Fig.49 or Fig.50 the node number at which the cursor exists is placed. The detecting cursor is the measure to introduce the node number of the example tree.

Hereafter, the operation of first half of the process obtaining the dominant node n8 from 2 kinds of information comprised of the example tree of Fig.47(a) and coincident node information showing that coincident nodes are n11 and n19, is traced using Fig.49 and Fig.50. At the illustration of the processes, each process is expressed by the letter sequence of ["Fig." + branch figure number in Fig.49 or Fig.50 + process name in Fig.49 or Fig.50 + "detecting cursor=" + cursor position]. In the letter sequence, the portions enclosed by " and " are letter sequence as it is and portions not enclosed are variables. A figure in Fig.49 or Fig.50 can represent plural processes in series and processes not causing data change such as decision processes are enclosed in brackets.

The process of "Fig.49(1)(D1),D2 detecting cursor=uncertain" which is process D2 receives the input comprised of the example tree and coincident words and commences the first half operation of "D.dominating node detection unit". The process D2 registers that the input example tree is that of Fig.47(a) and the coincident node is that of n11 and n19 and affixes leftmost attribute and rightmost attribute respectively to node n11 and node n19. The leftmost attribute is used at next process D3 and the rightmost attribute is use at process D9. The rightmost flag is set to polarity down. Explanation about the rightmost flag is made at the occasion of "up" and "down" operation.

The process of "Fig.49(2)D3 detecting cursor=n11" prepares the dominant node matrix of 2 rows and 10 columns. As the coincident node with leftmost attribute is registered to be n11, the detecting cursor is placed on node n11. Though the number of M rows and N columns mentioned in the description of process D3 in Fig.48 are arbitrary chosen, the row number M must be lager than the number of coincident nodes and the column number N must be lager than the "height" of the example tree. The "height" of the example tree is maximum number of nodes on the path between coincident nodes and topmost node. The circle at the position of 1st row and 1st column indicates the position of righting cursor to the dominant node matrix.

The process of "Fig.49(3)D4,(D5) detecting cursor =n1" wrights the position 11 of the detecting cursor on the 1st row 1st column where the writing cursor exists. As node 11 is not the topmost node of the example tree in Fig.47(a), the succeeding process is process of D6 by the decision of process D5.

The process of "Fig.49(4)D6 detecting cursor=10" moves detecting cursor by one node upward from the position of Fig.49(3) to n10 and moves writing cursor by one column from the position of Fig.49(3).

The next process of "Fig.49(5)D4,(D5) detecting cursor=10" writes the position 10 of detecting cursor on the writing position designated by Fig.49(4). Further, "Fig.49(5)D4,(D5) detecting cursor=10" writes the position 11 of detecting cursor on 1st row and 2nd column where the writing cursor exists. As the detecting cursor does not reach at the topmost node of the example tree in Fig.47(a) for a while, the decision of "no" continues at the decision of process D4 and circulation on the loop of processes D6. D4 and (D5) continues. Accordingly, the detecting cursor moves upward and writing cursor of the dominant node matrix moves leftward. Finally the detection cursor reaches at the topmost node and the operation reaches at "Fig.49(12)D6 detecting cursor=n1".

At first the process of "Fig.49(13)D4,(D5),(D7) detecting cursor=n1" writes value 1 on 6th column designated by "Fig.49(12)". Next, the decision "yes" meaning that the detecting cursor reaches the topmost node in the example tree in Fig.47(a) is generated. As polarity of right end flag is "down" by the former process of D2, the succeeding process is D8.

The process of "Fig.49(14)D8,(D9) detecting cursor=19" moves rightward the detecting cursor by 1 coincident node to coincident node n19 from former n11. The registration of coincident word has been made at the process D2. Furthermore, process of D8 moves the writing cursor to the 1st column of lower row. The circle in the Fig.49(14) is the new writing position. As the attribute of the rightmost node is affixed to node n19 by process D2, the decision at D9 examining the presence of rightmost attribute is "yes". Accordingly, the next process is D10.

The process of "Fig.49(15)D10 detecting cursor=19" sets the rightmost flag to polarity "up". The rightmost flag was set to polarity "down" by the process of D2 and the flag has been at the polarity "down" since then. By this measure, the rightmost attribute becomes effective with time delay.

As the detecting cursor does not reach the topmost node of the example tree for a while, the process D2 continues to generate decision of "no" resulting in continuation of circulation over the loop made of processes D6, D4 and (D5). Through this process, the detection cursor goes upward in the example tree of Fig.47(a) and the writing cursor goes rightward in the dominant node matrix. The detecting cursor reaches finally the topmost node by the process "Fig.50(25) D6 detecting cursor=n1".

The process of "Fig.50(26)D4,(D5),(D7) detecting cursor=1" is a complex process where process D4 first fills in the 6th column designated as position of filling position by the process of "Fig.50(25) with the value 1 and secondly the process of D5 generates the decision of "yes" showing that the detecting cursor reaches the topmost node of the example tree of Fig.47(a) and thirdly the process of D7 generates the decision "yes" because the rightmost flag is kept at polarity "up" by the process D2 and by the decision at D7 operation is directed to process of D11.

The process of "Fig.50(27) detecting cursor=1" sets the rightmost flag to polarity "down" terminating the first half operation of "D.dominating node detection unit" shown in Fig.48. The dominant node matrix of Fig.50(27) finally obtained represents the output of first half operation. The obtained output of Fig.50(27) is the output of first half operation of "D.dominating node detection unit" of Fig.48 generated from the input of word nodes n11 and n19 and example tree of Fig.47(a).

In fact, the output of first half is aggregation of paths from coincident nodes n11 and n19 to the topmost node.

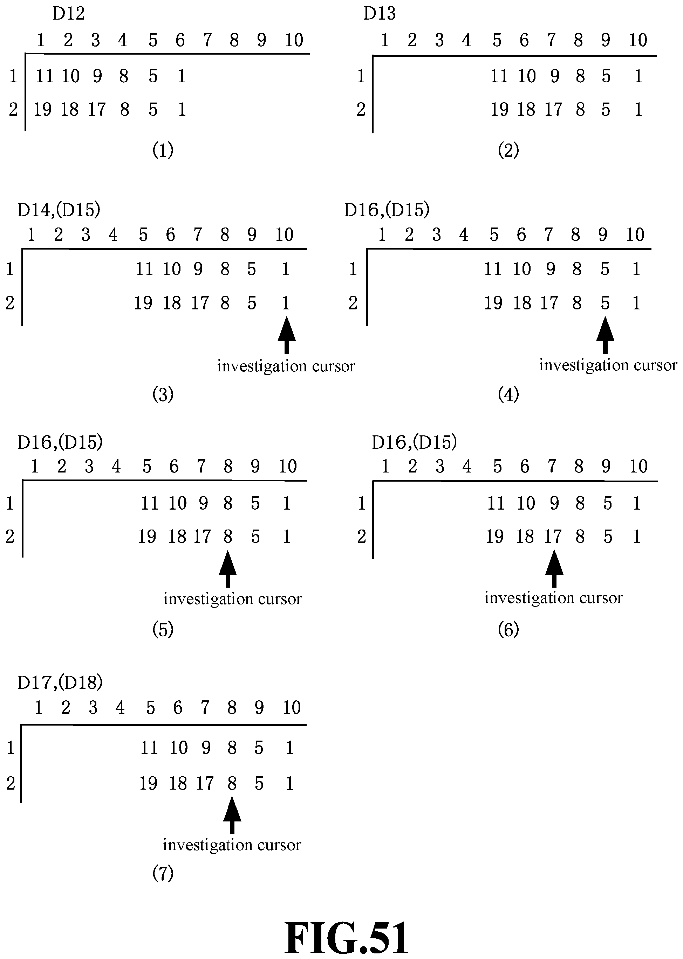

The operation proceeds to the second half composed of process D12 and processes onward. The dominant node matrix of Fig.50(27) has only 6 columns because data is absent beyond this column. To conduct more generalized description, dominant matrix of 2 rows and 10 columns is used at the explanation of second half. According the dominant node matrix of Fig.51(1) is used instead of Fig.50(27) and Fig.51(1) is treated as the input of process of D12. In Fig.51(1), there appear blank columns to the right of meaningful data.

The explanation on 2nd half is done by similar description used at the first half. Each process in 2nd half is expressed, however, by the expression of "node number in Fig.51 + process in Fig.48 + position of detecting cursor". Only detecting cursor is used without using writing cursor. As in the first half, processes such as decision processes not causing data value change are enclosed by parentheses.

The process "Fig.51(1)D12 detecting cursor=uncertain" receives the dominant node matrix generated in first half. Succeeding process "Fig.51(2)D1 detecting cursor=uncertain" moves the content from left justification position to right justification position.

At the complex process of "Fig.51(3)D14,(D15) detecting cursor=10", process D4 moves detecting cursor to the rightmost position and then the process D15 investigates that all nodes in the column 10 where the detecting cursor exists are identical. Here, detecting cursor examines that values at 2 row elements at the column where detecting cursor exists are identical. As both of 2 row elements are 1 and identical in this case, the next process is process D16.

At the process "Fig.51(4)D16,(15) detecting cursor=9", the process D6 moves detecting cursor by one column to the left to column 9 ant then process D15 investigates if 2 row elements at the column where the detecting cursor exists. As both of 2 row elements are 5 and identical, next process is D16.

At the process "Fig.51(5)D16,(15) detecting cursor=8", the process D6 moves detecting cursor by one column to the left to column 8 ant then process D15 investigates if 2 row elements at the column where the detecting cursor exists. As both of 2 row elements are 8 and identical, next process is D16.

At the process "Fig.51(5)D16,(15) detecting cursor=8", the process D6 moves detecting cursor by one column to the left to column 7 ant then process D15 investigates if 2 row elements at the column where the detecting cursor exists. As 2 row elements are 9 and 17 respectively and not identical, next process is D17.

At the process "Fig.51(7)D17,D18 detecting cursor=8", the process D17 moves back detecting cursor by 1 column and then outputs the element values which are identical by process D18. In this case, the output is 8 showing that the dominant node in the tree Fig.47(a) is n8.

As mentioned before, the dominant node is defined as "the node at the lowest position among nodes dominating entire coincident word". The rows in Fig.50(27) and figures in Fig.51 express the path from coincident nodes to the topmost node in example tree. The situation where one particular node exists on every path from entire coincident nodes means that the particular node dominates the coincident nodes. If there is a sequence of these kinds of nodes, the node at the lowest position is the dominating node. Under this mechanism the "D.dominating node detection unit" in Fig.48 functions. The tree in Fig.47(b) shows the position of dominant node in the example tree.

The above is the explanation of "D.dominating node detection unit".

The following is the explanation of the operation of "T.composition unit of temporal exclusive tree " shown in Fig.34. This unit deals with the example tree generated from example tree having common coincident word sequence with input sentence. The case where common part of speech sequence is allowed is treated at the explanation of "M composition unit of temporal exclusive tree with allowance of part of speech coincidence".

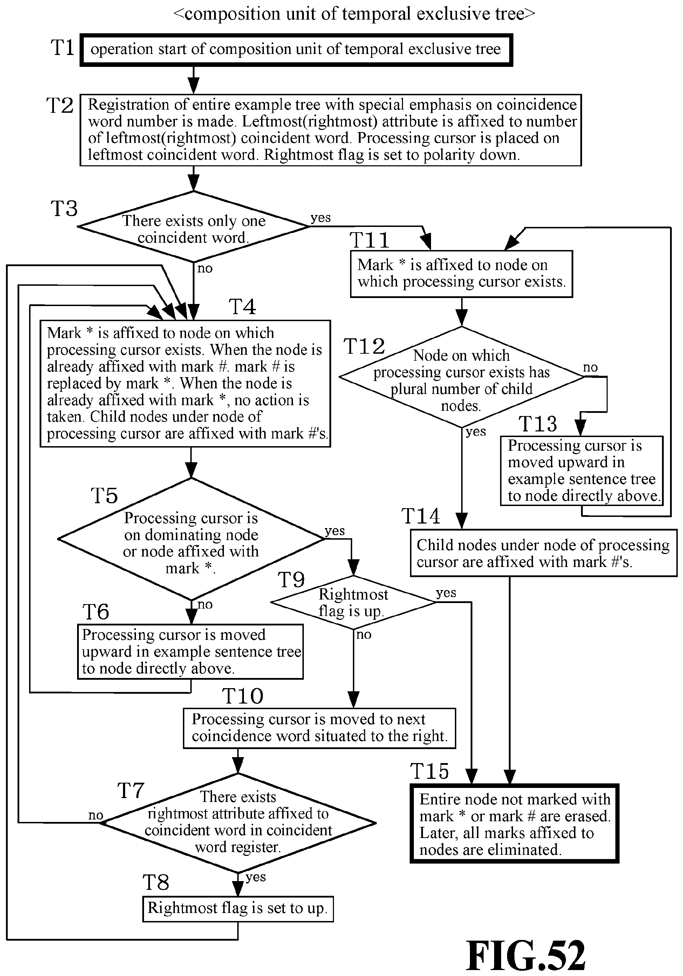

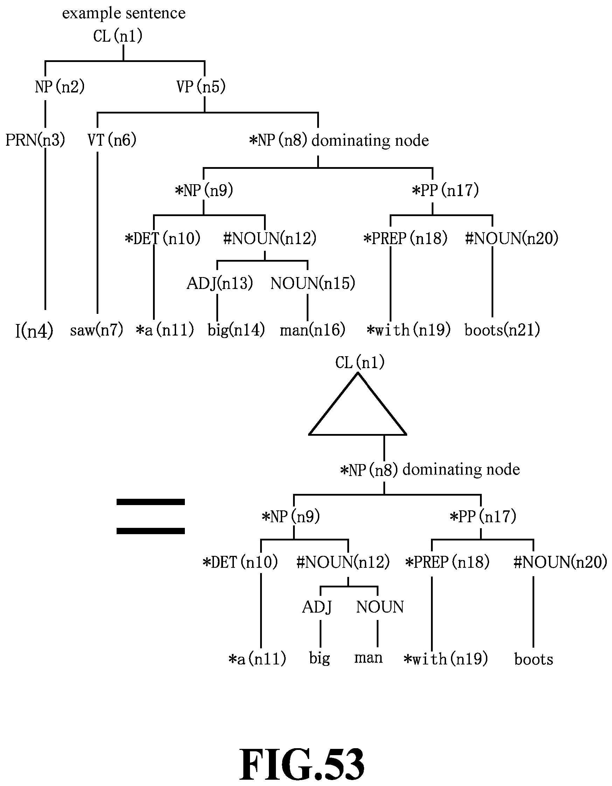

Fig.52 is the flow chart of "T.composition unit of temporal exclusive tree ". At the explanation of "T.composition unit of temporal exclusive tree", the example of common words "a" and "with" used hitherto is used. Accordingly, the input to "T.composition unit of temporal exclusive tree" is the example tree which exists to the left of equal sign of Fig.53 and which is the output of "D.dominating node detection unit" and is attached with dominant word designation. The input example tree to the left of equal sign of Fig.53 is the repetition of Fig.47(b).

The role of processes T1-T15 comprising the flow chart of Fig.52 is shown in the rectangles in Fig.52. The role of processes in Fig.52 is limited to the control of marker affixation to the example tree such as Fig.53. Accordingly, the explanation of processes is replaced by description of the effect of each process in Fig.52 through tracing of the operation of "T.composition unit of temporal exclusive tree" for the input of the example tree existing to the left of equal sign in Fig.53.

To avoid increase of description, the abbreviation shown in Fig.53 is applied. Here, the tree to the left of equal sign in Fig.53 is tree under treatment and tree to the right is the example tree after abbreviation. This abbreviation is possible because the portion upper than node n8 is not included in the temporal exclusive tree.

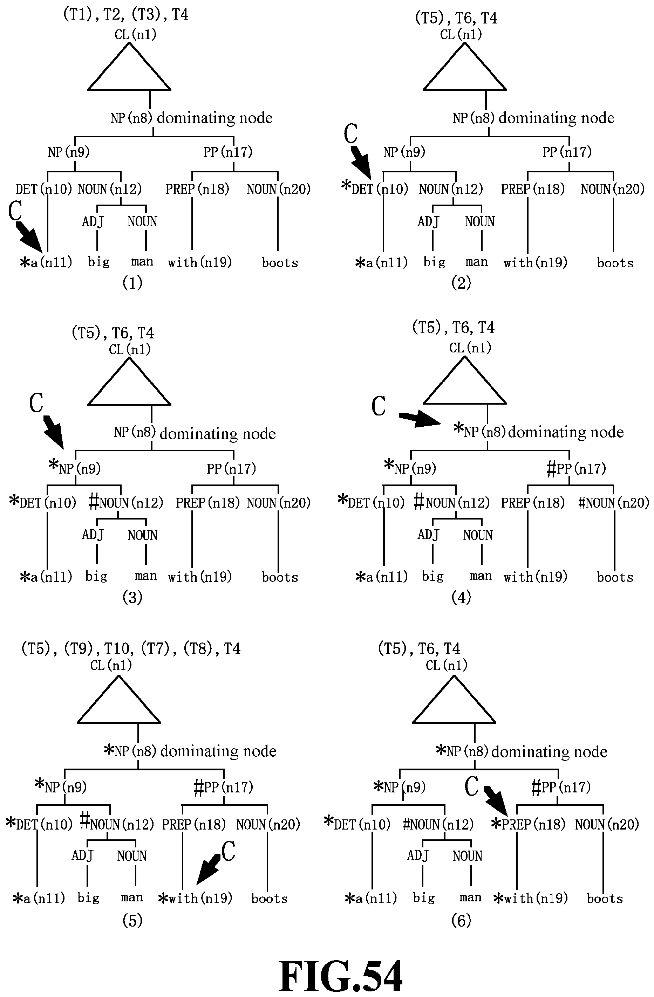

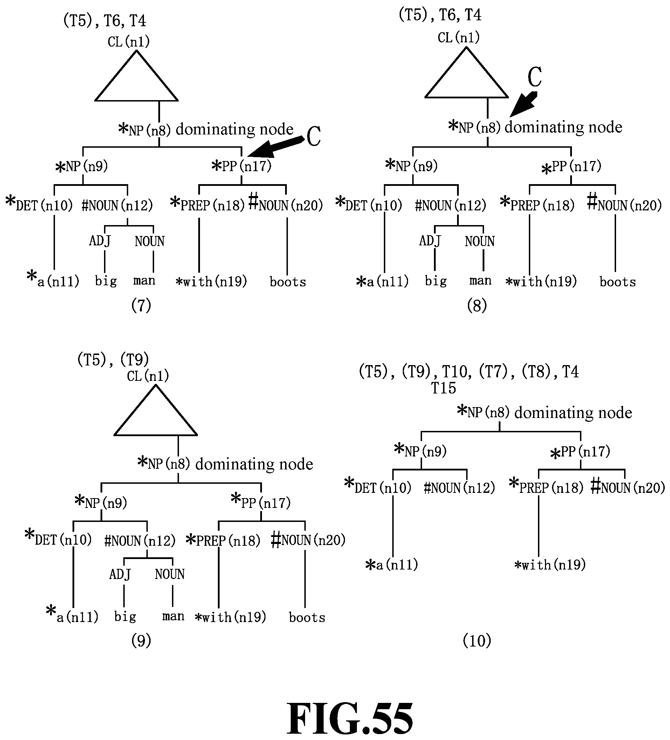

Figures in Fig.54 and 55 is the operation trace of "T.composition unit of temporal exclusive tree" receiving the input of example tree of Fig.53 attached with information of n11 and n19 as coincident nodes and n18 as dominant node. The operation trace is expressed as information affixing to nodes of the example tree after the application of abbreviation. Each process is expressed as "Fig." + branch figure number in Fig.54 or Fig.55 + position of processing cursor + "=" + node number where the processing cursor exists". Here, parts enclosed by " " denotes actual letter sequence and portions not enclosed by " " are variables. Some of the processes in Fig.54 and Fig.55 represent sequence of processes where the decision processes causing no data change are enclosed by parenthesis.

Processing cursor moves on the nodes comprising the example tree of Fig.53 and affixes marks of "*" or "#". An arrow with the letter "C" in Fig.54 and Fig.55 shows the position of processing cursor.

Following is the trace of the operation. The figures in Fig.54 and Fig.55 shows the situated after completion of processes. The operation starts at process of "Fig.54(1)(T1),T2,(T3),T4 processing cursor=n11" and process of T2 affixes the leftmost attribute to n11 and rightmost attribute to n19. The processing cursor is placed on the leftmost node n11 and the right flag is set to polarity down. Process of T3 generates the decision of "no" because there are plural coincident words directing to process of T4 where mark "*" is affixed to node n11 on which processing cursor exists. As mentioned above, Fig.54(1) shows the situation after completion of process T4.

At "Fig.54(2)(2)(T5),T6,T4 processing cursor=n10", the process T5 generates decision of "no" because of the position of the cursor and process T6 moves the cursor upward by one node to the position of n10 where process T4 affixes mark "*".

At processes "Fig.54(3)(T5),T6,T4 processing cursor=n9", the process T5 generates decision of "no" because of the position of the cursor and process T6 moves the cursor upward by one node to the position of n9 where process T4 affixes mark "*"

At processes "Fig.54(4)(T5),T6,T4 processing cursor=n8", the process T5 generates decision of "no" because of the position of the cursor and process T6 moves the cursor upward by one node to the position of n8 where process T4 affixes mark "*" and mark "#" to node n17 which is child node of node n8.

At processes "F54.(5)(T5),(T9),T10,(T7),T8,T4 processing cursor=n8", the process T5 generates decision of "no" because the cursor is on the dominant node n8 directing to the process T9. As the rightmost flag is set to polarity "down" by "Fig.54(1)(T1),T2,(T3),T4 processing cursor=n11" the decision here is "no" leading to the process of T10. This process moves the cursor to next coincident node n19 situated to the right. The decision of next process T7 is "yes" because rightmost attribute is affixed to n19 leading to process T8 which sets rightmost flag to polarity "up" and operation goes back to process T4 which affixes marker "*" on which the processing cursor exists.

At "Fig.54(6)(T5),T6,T4 processing cursor=n18", the process T5 generates decision of "no" because of the position n19 of the cursor and process T6 moves the cursor upward by one node to the position of n18 where process T4 affixes mark "*".

At "Fig.55(7)(T5),T6,T4 processing cursor=n18", the process T5 generates decision of "no" because of the position n18 of the cursor and process T6 moves the cursor upward by one node to the position of n17 where process T4 changes the mark "#" to mark "*" as n17 is affixed with the mark "#" though the processes "Fig.54(4)(T5),T6,T4 processing cursor=n8", Also process T4 affixes mark "#" to n20 which is child node of n17.

At "Fig.55(8)(T5),T6,T4 processing cursor=n17", the process T5 generates decision of "no" because of the position n17 of the cursor and process T6 moves the cursor upward by one node to the position of n18 where process T4 do nothing because node 18 is already affixes mark "*" thorough the processes of "Fig.54(4)(T5),T6,T4 processing cursor=n8".

At the processes "Fig.55(9)(T5),(T9) processing cursor=n8", T5 generates the decision of "yes" because processing cursor is on the node n8 which is affixed with marker "*" and dominant node information directing next process of T9. Process T9 generates the decision of "yes" because rightmost flag is set to polarity "up" through the operation of "F54.(5)(T5),(T9),T10,(T7),T8,T4 processing cursor=n8" directing the operation to process T15.

The process "Fig.55(10)T15 processing cursor=uncertain" deletes nodes not attached with markers of "*" or "#" from the example tree. Fig.55(8) is the example tree not affected with the deletion which has the portion of abbreviation from which entire abbreviated portion is deleted because no marker is attached to the portion. By the deletion, the temporal exclusive tree of Fig.55(10) is obtained. The deletion results into the temporal exclusive tree of Fig.55(10). This result is the temporal exclusive tree obtained by the operation of "T.composition unit of temporal exclusive tree " receiving the input of example tree of Fig.53 attached with information of n11 and n19 as coincident nodes and n18 as dominant node, and figures in Fig.54 and Fig.55 express the calculation process.

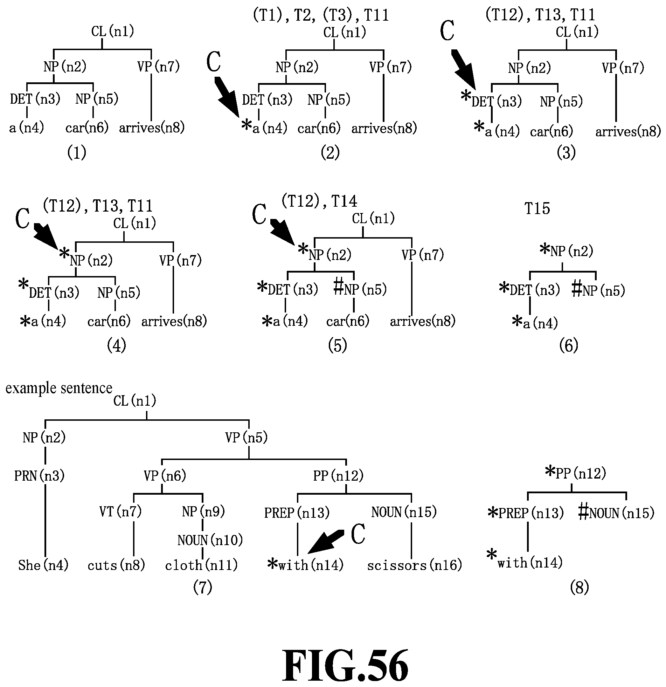

The above example is the operation dealing with plural number of coincident word. The following is the operation for single coincident word. Figures in Fig.56(2) to Fig.56(6) illustrate the mark affixing process of "T.composition unit of temporal exclusive tree " of Fig.52 receiving the input of example tree of Fig.56(1) with information of coincident word as n4. At the trace of calculation process, the processes in Fig.56 is expressed as "Fig." + branch figure number in Fig.56 + position of processing cursor + "=" + node number where the processing cursor exists". Here, parts enclosed by " " denotes actual letter sequence and portions not enclosed by " " are variables. Some of the processes in Fig.56 represent sequence of processes where the decision processes causing no data change are enclosed by parenthesis.

Processing cursor moves on the nodes comprising the example tree of Fig.56(1) and affixes marks of "*" or "#". Processing cursor moves on the nodes comprising the example tree of Fig.53 and affixes marks of "*" or "#". An arrow with the letter "C" in Fig.56 shows the position of processing cursor.

The figures in Fig.56(2) to 56(6) show the situation after completion of processes. The operation starts at process of "Fig.56(2)(T1),T2,(T3),T11 processing cursor=n4" and process of T2 affixes the both of leftmost and rightmost attribute to n4. The processing cursor is placed on the leftmost node n4 and the rightmost flag is set to polarity down. Process of T3 generates the decision of "yes" because there is only one word directing to process of T11 where mark "*" is affixed to node n4 on which processing cursor exists. As mentioned above, Fig.56(2) shows the situation after completion of process "Fig.56(2)(T1),T2,(T3),T11".

By the processes "Fig.56(3)(T12),T13 processing cursor=n3" and "Fig.56(4)(T12),T13 processing cursor=n2" operation circulates the loop composed of T11, T12, T13 twice.

At processes "Fig.56(5)(T12),T14 processing cursor=n2", process T12 generates decision of "yes" because node n2 on which cursor exists has a child node and process affixes mark "#" to node n5 without any mark.

The process "Fig.56(6)T15 processing cursor=uncertain" deletes nodes not attached with markers of "*" or "#" from the example tree. By the deletion, the temporal exclusive tree of Fig.56(6) is obtained. This result is the temporal exclusive tree obtained by the operation of "T.composition unit of temporal exclusive tree " receiving the input of example tree of Fig.56(1) attached with information of n4 as coincident nodes, and figures of Fig.56(2) to Fig.56(6) express the calculation process.

Hitherto explained is made fore the composing method of temporal exclusive tree where the dominant node is detected by "D.dominating node detection unit" in Fig.48 and consequently mark "*" is affixed to the nodes on the paths from coincident nodes to the dominant node and mark "#" is affixed to the child nodes of the "*" affixed nodes and nodes without marks are deleted by the processes of "T.composition unit of temporal exclusive tree " in Fig.52.

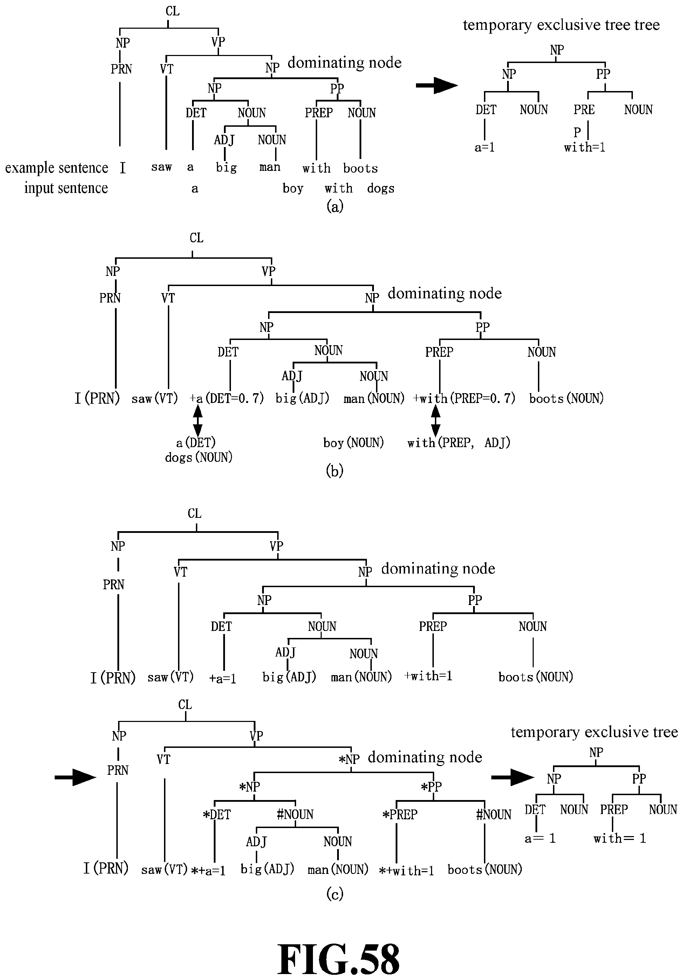

Hitherto explanation is made on "T.composition unit of temporal exclusive tree " which has the flow chart of Fig.52 and which generate temporal exclusive tree from example tree of example sentence having coincident word sequence with input sentence. This process is summarized as in Fig.58(a) where the temporal exclusive tree shown to the right of arrow is obtained from example tree affixed with dominant node by "D.dominating node detection unit" which is shown to the left and which is generated from the example tree which has common word sequence with input sentence and is obtained as the output of "S.common word sequence detection unit".

The acquisition method of example sentence having common word sequence with input sentence can be expanded to the method where example sentence having common part of speech sequence is arrowed. Hereafter, explanation is made on "M composition unit of temporal exclusive tree with allowance of part of speech coincidence" which arrows common part of speech sequence. As seen in Fig.34, this unit is used instead of "T.composition unit of temporal exclusive tree" which arrows only word coincidence.

For the operation of "M composition unit of temporal exclusive tree with allowance of part of speech coincidence". Part of speech annotation for words in the input sentence and word nodes in the example tree are necessary. Part of speech annotation is enclosed by parenthesis and attached after each word. Part of speech for each word in input sentence is obtained by consultation on part of speech dictionary and part of speech thus obtained is enclosed by parenthesis and attached after the word. When plural parts of speech exist, they are lined up in an array and separated by commas. Array of part of speech and equation symbol and part of speech value arranged in this order is enclosed by parenthesis and attached after each example tree word. Here, the part of speech node above each word node becomes the part of speech and the part of speech value is obtained by dictionary consultation.

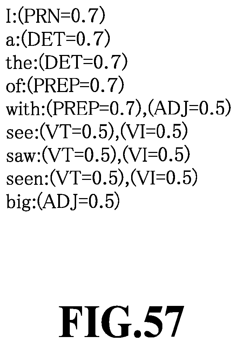

Fig.57 is an example of part of speech dictionary where a term is composed of title word and a colon and an array made of part of speech and equal sign and part of speech value arranged in this order and enclosed by parentheses. When plural parts of speech exist, they are lined up in an array and separated by commas. The part of speech value is obtained by Eq.(3) mentioned after.

The decision of coincidence at "T.composition unit of temporal exclusive tree" is simply conducted by examination of letter sequence coincidence. The decision of coincidence at "M composition unit of temporal exclusive tree with allowance of part of speech coincidence" needs the alternation of the coincidence decision method at "P.coincidence matrix generation unit". In this case, the coincident decision between input sentence word and example tree word at "" is described as follows. The decision of coincidence is generated at either of word coincidence or part of speech coincidence and decision of word coincidence is generated when both words are coincident and part of speech coincidence is generated when part of speeches are coincident but words are not coincident excepting the case where coincident part of speeches are NOUN, Thence a mark "+" is attached to the left of the word of example tree at word coincidence and a mark "+" is attached to the left of part of speech name and furthermore, word of example tree is replaced by word of input sentence, at part of speech coincidence.

As the change of coincident decision at "P.coincidence matrix generation unit" to cope with "M composition unit of temporal exclusive tree with allowance of part of speech coincidence" is limited to one procedure, further explanation is not made.

After the operation of "P.coincidence matrix generation unit", common wore sequence is obtained by the use of "N.adjoining coincident word detection element" and "S.common word sequence detection unit". For this purpose, the coincidence matrix of Fig.45(a) is utilized.

Fig.58(a) shows the case of part of speech coincidence in which part of speech coincidence is expressed by coincident words are connected by lines with arrowheads at both ends.

Fig.58(a) is the example tree of word coincidence where word coincidence is expressed by coincident words connected by lines with arrowheads at both ends. The example tree of Fig.58(b) of word coincidence is the input to "M composition unit of temporal exclusive tree with allowance of part of speech coincidence". The mark "+" is attached to the left of coincident words.

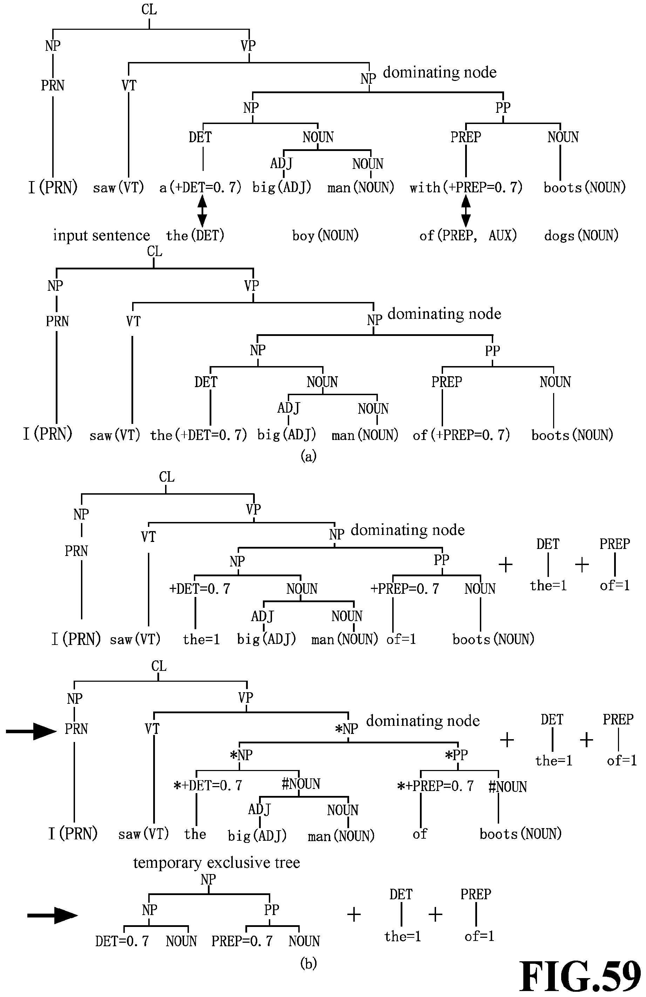

Fig.58(a) is the example tree of part of speech coincidence where part of speech coincidence is expressed by coincident part of speeches connected by lines with arrowheads at both ends. The upper example tree of Fig.59(a) is example tree of coincident part of speech before replace of input sentence words with example sentence words and the lower example tree is example tree after the replace.

The lower example tree of Fig.59 (a) is of part of speech coincidence is the input to "". At the coincident nodes, the mark "+" is attached to the left of part of speech and word names are replaced by word name of input sentence.

The mark "+" is to designate the portion which contributed for the coincidence Word node or part of speech node attached with mark "+" is called "+ attached node".

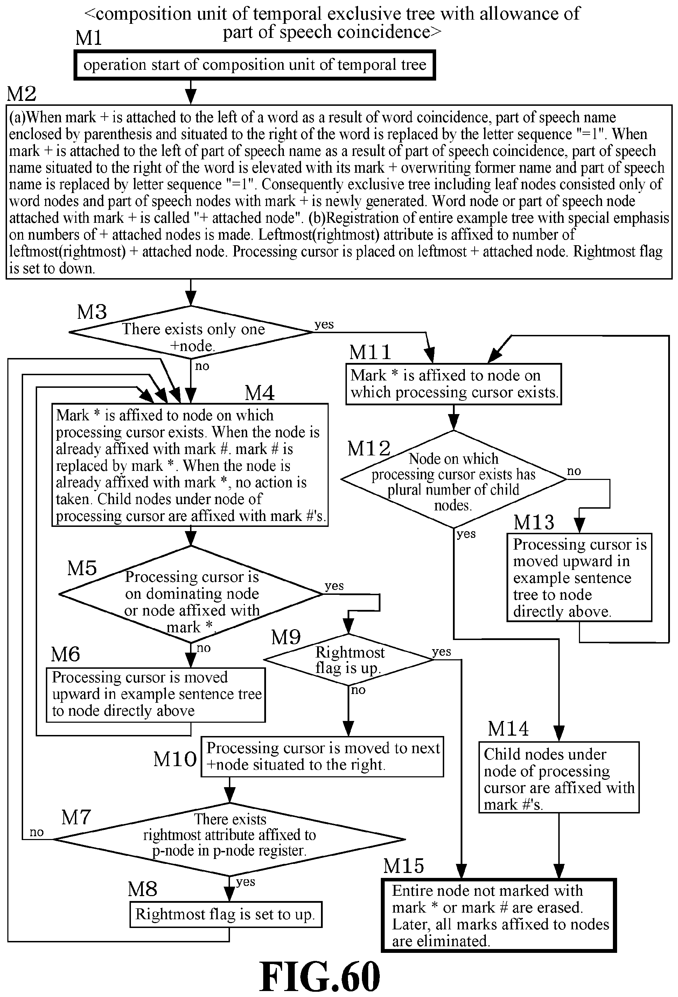

Fig.60 is the flow chart of "M composition unit of temporal exclusive tree with allowance of part of speech coincidence", This flow chart has identical structure with that of "T.composition unit of temporal exclusive tree " in Fig.52 and the description of operation at each composing process is the same excepting the difference of M and T in the name. Only the operation of process M2 is different from corresponding process of T2 because process M2 includes the preparation operation for change necessary at + attached node. Additionally, the wording of "coincident word" in processes T3, T7, T10 at "T.composition unit of temporal exclusive tree " is changed into "+ attached node" in corresponding processes M3, M7, M10 at "M composition unit of temporal exclusive tree with allowance of part of speech coincidence". The unit "M composition unit of temporal exclusive tree with allowance of part of speech coincidence" is upward compatible with "T.composition unit of temporal exclusive tree". Process M2 converts "T.composition unit of temporal exclusive tree " to "M composition unit of temporal exclusive tree with allowance of part of speech coincidence" by emulation.

The operation of process M2 is described as "(a) when mark + is attached to the left of a word as a result of word coincidence, part of speech name enclosed by parenthesis and situated to the right of the word is replaced by the letter sequence "=1". When mark + is attached to the left of part of speech name as a result of part of speech coincidence, part of speech name situated to the right of the word is elevated with its mark + overwriting former name and part of speech name is replaced by letter sequence "=1". Consequently exclusive tree including leaf nodes consisted only of word nodes and part of speech nodes with mark + is newly generated. Word node or part of speech node attached with mark + is called "+ attached node". (b)Registration of entire example tree with special emphasis on numbers of + attached nodes is made. Leftmost(rightmost) attribute is affixed to number of leftmost(rightmost) + attached node. Processing cursor is placed on leftmost + attached node. Rightmost flag is set to down".

Operation of portion of (b) is substantially the same as process T2 in "T.composition unit of temporal exclusive tree " and that of (a) is the portion added for the emulation.

Upper tree in Fig.58(c) shows the result of calculation at process M2 obtained from the input of Fig.58(b) to "M composition unit of temporal exclusive tree with allowance of part of speech coincidence". The expression of "+a(DET) =0.7)" before operation of M2 is changed into "+a=1" and "+with(PREP=0.7)" is changed into "+with=1".

Upper tree in Fig.59(b) shows the result of calculation at process M2 obtained from the input of lower portion of Fig.59(a) to "M composition unit of temporal exclusive tree with allowance of part of speech coincidence". The expression of "the(+DET)=0.7)" at the leftmost coincident node is changed into "+the=1" and "DET" is changed into "+DET=0.7" at the part of speech node existing directly above. The expression of "of(+PREP)=0.7)" at the rightmost coincident node is changed into "+of=1" and "PREP" is changed into "+PREP=0.7" at the part of speech node existing directly above. The upper portion in Fig.59(b) has newly generated two exclusive trees composed of word node and part of speech node. This is the exclusive tree to compensate the coincident words lost at the operation of "". Exclusive tree composed of word node and part of speech node is called "part of speech exclusive tree".

The left tree in the portion to the right of the arrow in Fig.58(c) is result of attaching marks of "#" and "*" to the tree to the left of the arrow by process M4 in "M composition unit of temporal exclusive tree with allowance of part of speech coincidence" of Fig.60. This is the situation just before the deletion of nodes without marks by process M15 of "M composition unit of temporal exclusive tree with allowance of part of speech coincidence". To nodes "a" and "with" both of marks "+" and "*" are affixed.

As flow chart of "M composition unit of temporal exclusive tree with allowance of part of speech coincidence" in Fig.60 explained above is identical with, excepting the process M2 explained above, flow chart of "T.composition unit of temporal exclusive tree " in Fig.52 by replacement of "coincident wore" with "+ attached node", further operation trace for Fig.60 is omitted.

The right tree in the portion to the right of the arrow in Fig.58(c) is the tree generated through deletion of nodes without marks and is temporal exclusive tree obtained.

The example tree at 2nd row is result of affixing marks "*" and "#" by process M4 of "M composition unit of temporal exclusive tree with allowance of part of speech coincidence" in Fig.60 to the tree in 1st row. This is the situation just before the deletion of nodes without marks by process M15 in "M composition unit of temporal exclusive tree with allowance of part of speech coincidence" of Fig.60. To the nodes "DET=0.7" and "PREP=0.7" both of marks "+" and "*" are affixed.

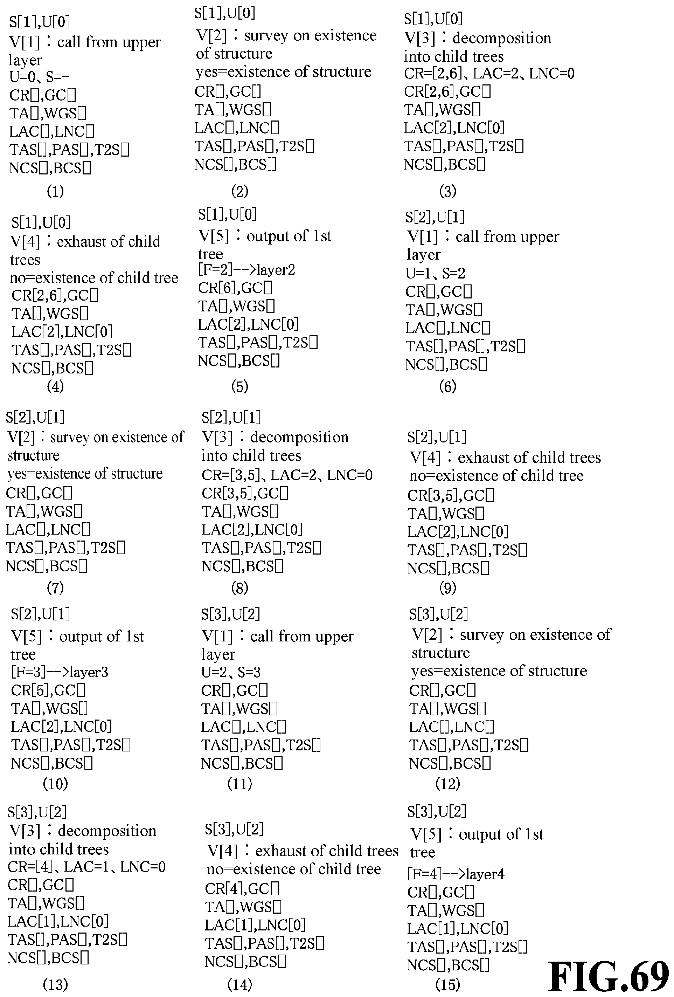

Because of identity of operation excepting process M2, the operation trace on Fig.69 for this example is curtailed.

The tree at the 3rud row in Fig.59(b) is the result of deletion of nodes without marks by process M15 applied to the tree at 2nd row and is the temporal exclusive tree aimed for. These part of speech trees are independent by themselves after their generation and are not object of deletion. As is seen, part of speech tree is arbitrarily generated at part of speech coincidence, As the word node in part of speech tree coincides with word in input sentence, the node takes the shape of word name connected with value 1 by equal sign.

The part of speech values are given to the part of speech nodes in the exclusive tree at the 3rd row in Fig.59(b) having part of speech nodes at its leaf portions, The part of speech value is defined using the term of information theory as "the ratio of the information value obtained at the part of speech coincidence when the information value obtained by word coincidence is defined to be 1". The part of speech value which is introduced in the explanation of "M composition unit of temporal exclusive tree with allowance of part of speech coincidence" has influence over "V.tree value generation unit for exclusive tree" positioned next. Before the explanation over "V.tree value generation unit for exclusive tree" mentioned later, the measure to obtain part of speech value and the property of part of speech value is illustrated.

Eq.(2) shows the difference of value between base 2 logarithm of true value A versus vase 10 logarithm of true value A. It is found that base 2 logarithm value is 3.322 times as large as base 10 logarithm value. Eq.(3) is the relation between event probability P and the information value I obtained by the occurrence of the event. The unit of information value is "bit". According to Eq.(3) , The value at leftmost hand side in Eq.(4) is the information value obtained at the occurrence of event of hundred-thousandth probability. This value is transformed into the value not including minus number at the 2nd side from left of Eq.(4). This value is further transformed into the value at 3rd side from the left using Eq.(2) which is transformed into the value 4th side from the left. It is observed that the information value of 16.61 bit is obtained from the occurrence of event of hundred-thousandth probability.

$$\log_2 A = \frac{\log_{10} A}{\log_{10} 2} = 3.322 \log_{10} A \tag{2}$$

$$I = -\log_2 P \tag{3}$$

$$-\log_2 10^{-5} = \log_2 10^5 = 3.322 \times 5 = 16.61 (\text{bit}) = 1 \text{WU} \tag{4}$$

It is observed that English-Japanese middle class dictionary accommodates hundred-thousand title words. It means that information value of 16.61 bit is obtained when event of hundred-thousandth of probability is found to occur. This information value is called 1 word unit. This information value is word value obtained at word coincidence.

Here, observation is made for the part of speech in which small number of word belongs. The part of speeches to which around 10 words belong are ABRN(appelations such as Mr. Dr. Prof etc.), COORS(coordinating conjunctions such as and, or, etc.) , INT(interjection such as Ah, Oh, etc.), DET(determners including articles such as a, the, etc.), PREP(prepositions such as at, of, on etc.), PRN(pronouns such as I, you, etc.), SUBORD(subordinating coordinates such as before, until, because, etc.) and WH(relatives such as who, which, that, etc.). As about 30 words are estimated to belong to these part of speeches, the information value obtained at the occurrence of these part of speech is the value in Eq.(5) and is 0.7 WU.

$$-\log_2 30/10^5 = 3.322 \times \log_{10}\{(1/3) \times 10^4\} = 3.322 \times 3.523 = 11.70 = 0.7\text{WU} \qquad (5)$$

The part of speeches to which around 100 words belong are VT(transitive verbs such as have, see, etc.), VI(intransitive verbs such as walk, stand, etc.), ADJ(adjectives such as beautiful, strong, etc.) and ADV(adverbs such as fast, deeply). As about 300 words are estimated to belong to these part of speechs, the information value obtained at the occurrence of these part of speeches is the value in Eq.(6) and is 0.5 WU. Therefore, information value about half of that at the occurrence of word coincidence is obtained at the occurrence of these part of speeches.

$$-\log_2 300/10^5 = 3.322 \times \log_{10}\{(1/3) \times 10^3\} = 3.322 \times 2.523 = 8.381 = 0.5\text{WU} \qquad (6)$$

The unit "V.tree value generation unit for exclusive tree" on which explanation is made hereafter, receives part of speech values and word values in a temporal exclusive tree as input and conducts calculation generating tree value and the quality of the tree as output. The description hereafter is basic logic of "V.tree value generation unit for exclusive tree" to obtain tree value and the quality index of a temporal exclusive tree.

At the coincident decision between example tree and input sentence, the word value obtained at word coincidence is 1 that is 1 WU(word unit). When part of speech coincidence occurs concerning with part of speech such as article(DET) or preposition(PREP) as in Fig.59(a), obtained information value is 0.7 WU meaning that the coincident value is 0.7.

Based on above facts, the part of speech dictionary showing the connection between word or part of speech name and part of speech value taking the style of Fig.57 can be compiled.

Through the consideration so far made, the method to give word value and part of speech value is obtained. In Fig.59, these values are expressed by values connected by equal sign with wore names.

Here, the generic name for coincident word node and coincident part of speech node is determined to be coincident node. Also, the generic name for word value and part of speech value is determined to be coincident value. The generic expression and original expression such as "coincident word node", "coincident part of speech node", "word value" and "part of speech value" are flexibly used according to circumstances.

It is prescribed that the coincident value of coincident node propagates over the temporal tree and gives information to nodes composing the temporal tree. The coincident value given by the propagation is called the node value of the node in the temporal exclusive tree. In other word, coincident value constitutes the source of information and node value is result of propagation. The following is the calculation method of node value. The summation of node values of entire nodes constituting the temporal tree is defined as tree value and is categorized in two specific types one of which is tree-average total sum TAST and the other of which is path-average total sum PAST. The coincident value of coincident node is treated as the node value of the coincident node.

Table 1 is the definition of variables used in following explanation.

Table.1 Definition of variables

TA : tree-average node value

WGS : sum of coincidence value governed by dominating node

LAC : number of child nodes

LNC : number of effective child nodes

TAS : sum of tree-average node value

TAST:total sum of tree-average node value

PA: path-average node value

PAS : sum of path-average node value

PAST:total sum of path-average node value

T2S : sum of value of tree-average node value squared

T2ST:total sum of value of tree-average node value squared

NCS : sum of number of effective nodes

NCST:total sum of number of effective nodes

BCS : sum of number of ineffective nodes

BCST:total sum of number of ineffective nodes

These variables are categorized in three types where 1st is related to nodes in the temporal tree themselves and 2nd is related to partial trees of temporal tree and 3rd is related to the temporal tree as a whole.

The variables TA, WGS, LAC, LNC, PA and T2 are categorized as variables concerning nodes themselves. Among them, the variable TA expresses the value generated at one of calculation method of the node value that is tree-average node value and variable PA expresses the value generated at the other of calculation method of the node value that is path-average node value.

The variables TAS, PAS, T2S, NCS, BCS are categorized as variables concerning related to partial trees of temporal tree. These variables are treated as variables concerning with the topmost node of partial trees. As entire nodes in the temporal exclusive tree can become the topmost node of a partial tree, a variables concerning with a partial tree of temporal exclusive tree is considered as the variable belonging to the node.

Category of coincident value is limited to one but there are two category of the node value. Hereafter, two calculation methods of the node value are explained. Depending on the field of sentence treated, suitable method among these two is used. First, node value of tree-average type is shown.

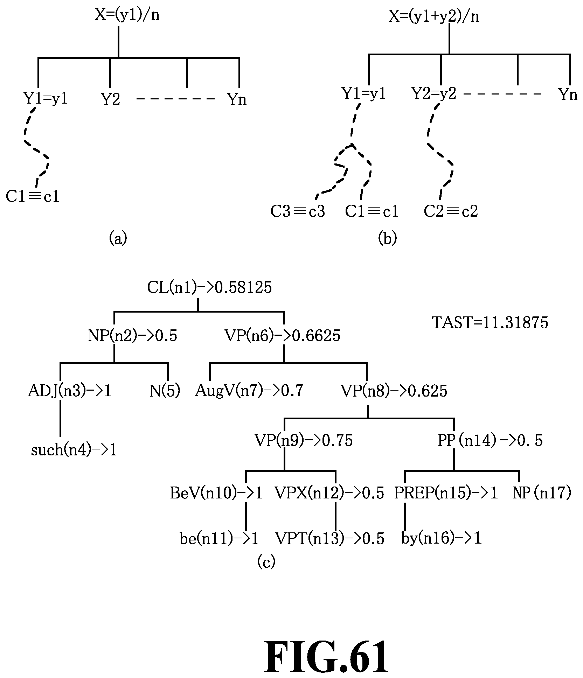

Fig.61(a) shows the way of node value propagation from child nodes to parent node in a parent child relation in the temporal exclusive tree. This is the case where the propagation from coincident node C1 with coincident value c1 progresses to the child node Y1 giving rise to node value y1. At such case as Fig.61(a) where no other coincident node exists, the node value of parent node X is calculated as node value y1 of child node divided by number of child nodes n which is (y1)/n. This basis of this calculation method is the intuition that the node value of a parent node is the average of child node values. This method is called tree-average node value calculation method. A node like node Y1 having node value is called effective node and a node like other child nodes having no node value is called ineffective node.

In Eq.(7) the variable TA is node value of parent node of tree-average type and $\Sigma b\, TA$ is summation of node values of childe nodes over all child nodes and variable LAC is, as shown in Table 1, number of child nodes which is the same as the suffixes to the letter Y in Fig.61(a) and Fig.61(b). The suffix "b" in Eq.(7) represents entire branches. As Eq.(7) is concerned with a specific parent node, no suffix is attached to TA.

$$TA = (\Sigma b\, T A)/LAC \qquad (7)$$

Fig.61(b) shows the calculation method of node value of tree-average type at the child-child relation where influence of three coincident nodes exists. The paths from coincident nodes C1 and C2 join in the middle. Here, the node value of the child node is the sum of node values y1 of node Y1 and y2 of node Y2 divided by child node number n resulting in the value (y1+y)/n. As is seen, the influence of effective nodes is lineally added.

As seen above, the node value of tree-average type of the parent node is given by Eq.(7). As seen before, node value of a coincident node is defined to be word value and part of speech value of a coincident part of speech node is defined to be value of the part of speech.

Fig.64(c) shows an example of node value propagation from coincident nodes at calculation of tree-average node value. Here, the front part of title of each node is name of phrase structure component or word and the part enclosed by parenthesis is node number necessary for explanation and the numerical value to the right of arrow is node value of tree-average type.

Nodes n4, n11, n16 are coincident nodes having word value of 1. Nodes n7, n13 are coincident part of speech nodes and among which node n7 has part of speech value of 0.7 of auxiliary verb and node n13 is part of speech value 0.5 of adjective.

Following is the explanation of node value propagation, conforming to Eq.(7), from coincident values of coincident part of speech or coincident word playing the role of the sources of propagation. Propagation from node n4 to n3 is made without attenuation because number of child node is 1. Node n5 is ineffective node and the node value is 0 and node value 0.5 of node n2 is calculated as child node value 1 divided by number of two child nodes. Node n11 is coincident word with word value 1 and this value propagates to n10. Node n13 is coincident part of speech node having value 0.5 of transitive verb VPT and this value propagate to n12 without attenuation. The tree value of n9 has node value 0.75 which is average of node values of child nodes. Node n16 is coincident word having coincident value 1 and this value propagate to n15 without attenuation. Node n17 is ineffective node resulting in node value of 0.5 of node n14 that is average of node values of child nodes. The node value 0.625 of n8 is calculated as 1.25 that is summation of node value of child nodes divided by 2 of child node number. Node value 0.6625 of node n6 which is average of node values of child nodes. The node value of topmost node n1 is 0.58125 that is average of child node values.

By repetition of propagation of the type of Eq.(7) starting from coincident nodes in temporal exclusive tree, node values can be attached to entire nodes in the temporal exclusive tree. Total summation over entire nodes in temporal exclusive tree of tree-average node values TA's is called total sum of path-average node value TAST. The index TAST is one of the indexes expressing the ability of temporal exclusive tree and is the tree value of tree-average type.

The summation of tree-average node values TA's over the partial tree of exclusive tree having one of composing nodes of the exclusive tree as the topmost node is called sum of tree-average node value TAS of the partial tree. The value TAS of nodes along upward propagation path of node value is obtainable by moving the topmost node tracing the upward path. The total sum of tree-average node value TAST is sum of tree-average node value TAS of the partial tree with the topmost node reaching topmost node of temporal exclusive tree. This method can be transformed into algorithm and the method is illustrated later.

As seen before, the node value is shown after arrow in each node in Fig.61(c). The total sum of tree-average node value TAST that is total sum of these node values is 11.31875. This TAST value is the tree value of the temporal exclusive tree of Fig.61(c) representing the ability of the tree obtained by calculation method of tree-average type node value. As seen before, coincident value of coincident node is treated as its node value.

Hitherto, tree-average node value TA that is one of two kinds of node value and its obtaining method is treated. Hereafter, the other which is path-average node value PA and its obtaining method is observed.

The name of variables used hereafter is also listed in Table 1.

The path-average node value PA of the parent node X in a parent child relation is defined by Eq.(8). In this equation, variable WGS is sum of coincident values of the coincident nodes dominated by node X and LNC is total number of effective nodes dominated by node X and variable TA is tree-average node value defined by Eq.(7).

$$PA = WGSxLNCxTA \qquad (8)$$
$$= (\Sigma bWGS)xLNCx(\Sigma bTA)/LAC \qquad (8)'$$

$$WGS = \Sigma bWGS \qquad (9)$$

Eq.(8) expresses that path-average node value is multiplication result of tree-average node value TA and a coefficient (WGSxLNC). Substitution of Eq.(9) and Eq.(7) to Eq.(8) can brings about modification result of Eq.(8)'. Eq.(9) expresses that sum of WGS of child nodes is the WGS of the parent node.

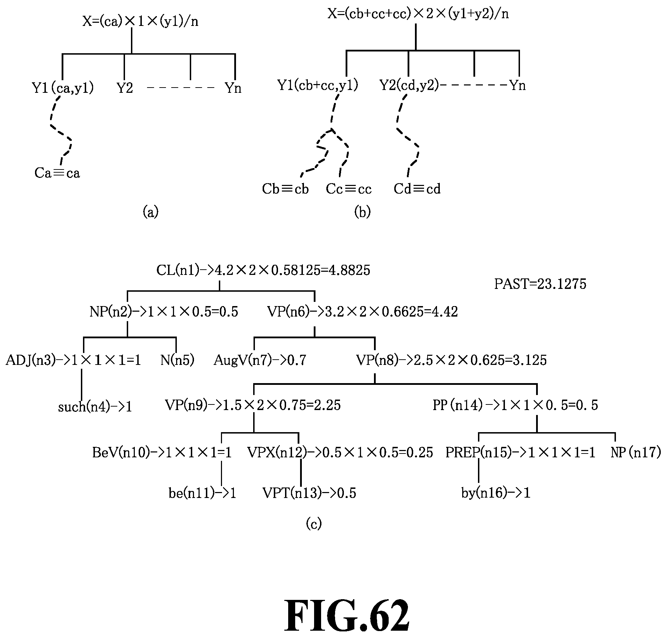

Explanation of Eq.(8) is made using examples. Fig.62(a) is a case where node X dominates only coincident node Ca with coincident value ca. In this case, sum of coincident value dominated by X is ca propagating from node Ca via child node Y1. Number of effective child node is 1 as effective child node is limited to node Y1. Tree-average node value TA is (y1)/n which is tree-average node value of Y1 divided by number of child node LSC. The value connected by equal sign with node X in Fig.62(a) is the path-average node value PA. The portion enclosed by parenthesis and attached to node Y1 is sum of coincident value and tree-average node value.

Fig.62(b) is the case where node X dominates these nodes that are node Cb with coincident value cb, node Cc with coincident value cc and node Cd with coincident value cd. Here, sum of coincident value at node X is (cb+cc+cd). The effective child nodes are node Y1 and Y2 resulting in number of effective child nodes of 2. The tree-average node value TA is (y1+y2)/n which is division result of sum of y1 of node Y1 and y2 of node Y2 by number of child node n. The value connected by equal sign with node X is path-average node value PA of node X. The portions enclosed by parenthesis and attached to node Y1 and Y2 are sum of coincident value dominated respective nodes and tree-average of respective nodes.

The reasoning of Eq.(9) is shown here. This equation expresses that sum of coincidence value governed by dominating node WGS value at parent node is summation of WGS's at child nodes. This is explained by Fig.62(b). As the union of coincident nodes dominated by child nodes is coincident nodes dominated by the parent node, WGS at the parent node is summation of WGS's at child nodes. While tree-average TA at parent node given by Eq.(7) is division result by number of childe nodes of summation of TA at child nodes, WGS at the parent node is obtained, without division, as summation of WGS's at child nodes.

Like at Eq.(7), no suffixes to specify the parent node are attached to equations of Eq.(8), (8)', (9) because these equations treat specific parent node.

Repetition of upward propagation of node value from child nodes to parent node by Eq.(8) enables to give path-average value PA's to entire nodes in the temporal exclusive tree. As seen in Table.1, summation of path-average node value TA over entire nodes in a partial tree is PAS. When topmost node of partial tree reaches the topmost node of the exclusive tree, the PAS value of the partial tree is the value PAST or total sum of path-average node value. The index PAST together with TAST mentioned before is one of the indexes expressing the ability of temporal exclusive tree and is the tree value of path-average type.

Fig.62(c) shows an example of path-average node value propagation from coincident nodes. The temporal exclusive tree is the same as that in Fig.61(c). The beginning portion of letter sequence of caption for each node expresses phrase structure name or word name and portion enclosed by parenthesis is node number necessary for illustration and the portion following the arrow is coincident value at the case of coincident node or calculation equation according to Eq.(8) and calculation result at the case of other nodes.

Nodes n4, n11 and n16 are coincident words and they respectively have word value 1. Nodes n7 and n13 are coincident part of speech nodes and node n7 among them has part of speech value 0.7 of auxiliary verb and node n13 has part of speech value 0.6 of transitive verb. The treatment of these word value and part of speech value is the same as that of tree-average type.

The total sum of path-average node value PAST of the tree in Fig.62(c) is 23.1275. As mentioned before, PAST is also called as tree value of path-average type.

The above is basic logic of "V.tree value generation unit for exclusive tree" to obtain the tree value of temporal exclusive tree.

As is seen, path-average node value PA is multiplication result of tree-average node value and two variables. Sum of coincidence value governed by dominating node WGS among these variables is the driving force for formation of path-average value PA and the variable to express correctness of PA. The other of the variables number of effective child nodes LNC represents path number to the parent node is the variable to express certainty of PA.

Thus the tree value of temporal exclusive tree represented by TAST or PAST is calculated as total summation of TA's or PA's belonging to the exclusive tree. Filter to prevent over increase of tree value through the large number of nodes or through large node value at some nodes is necessary.

The index of quality of temporal exclusive tree for filtering is necessary. The following is the basic logic of operation of "V.tree value generation unit for exclusive tree" to obtain the quality index.

One of quality index is average node value of effective nodes in temporal exclusive tree. Eq.(10) and Eq.(11) are calculation methods respectively of average of tree-average node values TAAv and average of path-average node values PAAv.

$$TAAv = TAST/NCST \qquad (10)$$

$$PAAv = PAST/NCST \qquad (11)$$

TAAv is the average of tree-average node value at effective nodes and PAAv is the average of path-average node value at effective nodes and either of them can be quality index.

As shown in Table.1, TAST in the equation is total sum of tree-average node value or tree value of tree-average type and PAST is total sum of path-average node value or tree value of path-average type and NCST is total sum of number of effective nodes.

As seen in Table.1, the summation of path-average node values PA's over the partial tree of exclusive tree having one of composing nodes of the exclusive tree as the topmost node is called sum of path-average node value PAS of the partial tree. The value PAS of nodes along upward propagation path of node value are obtainable by moving the topmost node tracing the upward path. The total sum of path-average node value PAST is sum of tree-average node value PAS of the partial tree with the topmost node reaching topmost node of temporal exclusive tree. This method can be transformed into algorithm and the method is illustrated later.

By the case of Fig.61(c), the average of tree-average node value at effective nodes TAAv 0.7546 is obtained from the value 15 of total sum of number of effective nodes NCST and the value 11.31785 of total sum of tree-average node value TAST. This value shows the quality of the tree is fairly good.

Also by the case of Fig.62(c), the average of tree-average node value at effective nodes PAAv 1.3385 is obtained from the value 15 of total sum of number of effective nodes NCST and the value 23.3775 of total sum of path-average node value PAST. This value shows the quality of the tree is also fairly good.

The application of coefficient of variation that is the other index of quality is illustrated here. Coefficient of variation is defined as standard variation divided by average value. This coefficient is applied to tree-average node value. Eq.(12) shows this application.

$$\sigma/m = \frac{\sqrt{\sum_{i=1}^{NCST} \frac{1}{NCST}(TA_i - m)^2}}{m} \qquad (12)$$

All variables in Eq.(12) are related to tree-average node value for entire nodes in temporal exclusive tree. Here, $\sigma$ is standard deviation and m is average value TAAv shown in Eq.(10). NCST is total sum of number of effective nodes. TAi is tree-average node value of ith node. Summation sign is to show summation is conducted over all effective nodes. This equation is transformed into Eq.(13). In this equation, TAST is total sum of tree-average node value given by Eq.(14) and T2ST is total sum of value of tree-average node value squared given by Eq.(15). These variables are already included in

Table. 1.

$$\sigma/m = \sqrt{\frac{T2ST \times NCST}{TAST^2} - 1} \tag{13}$$

$$TAST = \sum_{i=1}^{NCST} TAi \tag{14}$$

$$T2ST = \sum_{i=1}^{NCST} TAi^2 \tag{15}$$

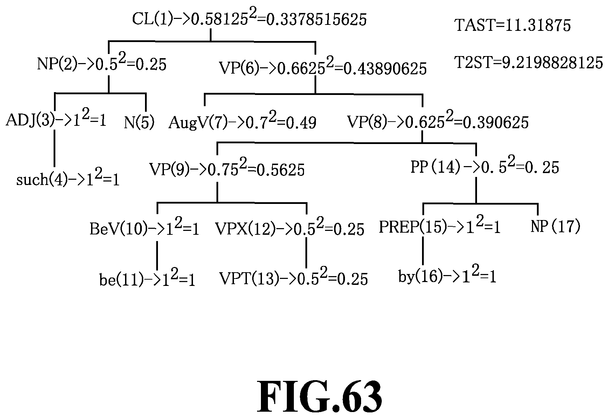

By the case of Fig.61(c), TAST is 11.31875. Concerning with T2ST, the node value at effective node squared T2 are shown in Fig.63. In this figure, after the name of each effective node an arrow is placed and after the arrow expression of square operation is placed and after the expression the node value at effective node squared T2 preceded by equal sign is placed. The summation of node value squared over entire nodes T2ST is 9.22 that is shown at the side the temporal exclusive tree. Coefficient of variation $\sigma/m$ shown in Eq.(16) is as small as 0.282 which is fairly good value for a temporal exclusive tree.

$$\sigma/m = \sqrt{\frac{T2ST \times NCST}{TAST^2} - 1}$$
$$= \sqrt{\frac{9.2198828125 \times 15}{11.31875^2} - 1} = 0.2819446 \tag{16}$$

Hitherto, expression of the quality of temporal exclusive tree by average of tree-average node value TAAv in Eq.(10), average of path-average node value PAAv in Eq.(11) and coefficient of variation in Eq.(13) is illustrated. Among these variables, the lager the value of the first two variables are the higher the quality of temporal exclusive tree become. On the other hand, the smaller the value of coefficient of variation is the higher the quality becomes. As shown in the explanation of Eq.(10) and Eq.(11), these variables are used as the filtering of temporal exclusive tree and suitably used according to the field of corpus.

Hitherto, explanation, using Fig.61, of tree-average node value TA and total sum of tree-average node value TAST and also explanation, using Fig.62, of path-average node value PA and total sum of path-average node value PAST is made. Furthermore, average of tree-average node value TAAv and average of path-average node value PAAv is described. Also, coefficient of variation $\sigma/m$ is explained using total sum of value of tree-average node value squared T2ST.

The above is basic logic of "V.tree value generation unit for exclusive tree" to obtain the tree value and quality index of temporal exclusive tree.

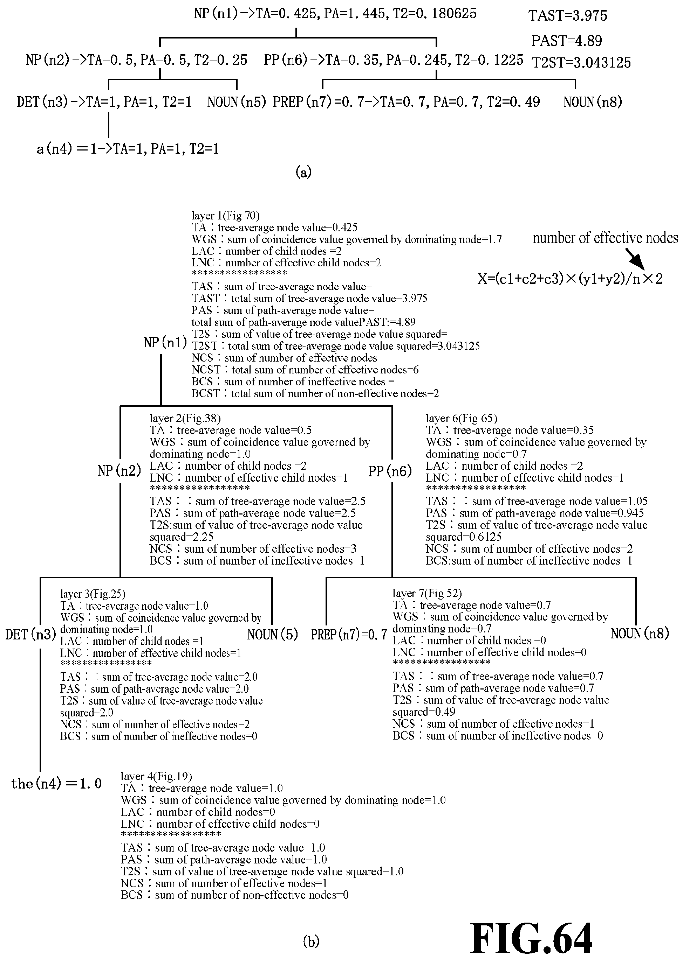

So far described is basic method of operation of "V.tree value generation unit for exclusive tree" to obtain the tree value and quality index which are, as seen in Fig.61(c) and Fig.62(c) obtained only by human observation. Hereafter, the obtaining method of tree value and quality index by the algorithm based on logic so far mentioned. Namely, the composition method of "" shown in Fig.34 is stated. For simplicity of explanation and continued use of example, temporal exclusive tree of Fig.64(a) which is simplification of eclectic shape of Fig.58 and Fig.59 is used as the example. This temporal exclusive tree has coincident word node of "a" having word value 1 and coincident part of speech node of "PREP" having part of speech value 0.7. As seen in Fig.64, node number is attached to each node.

In Fig.64(a), tree-average node value TA, path-average node value PA, value of tree-average node value squared T2, sum of tree-average node value TAS, sum of path-average node value PAS and sum of value of tree-average node value squared T2S which are obtained by human observation are listed to the right of the node name with node number and an arrow.

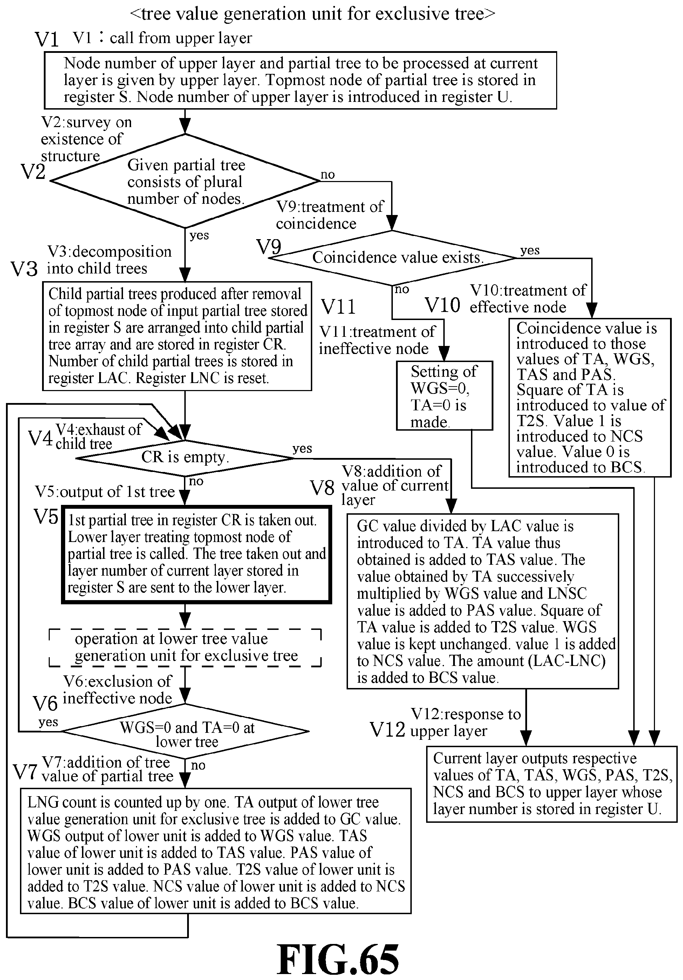

At the data calculation method by algorithm or composition method of "V.tree value generation unit for exclusive tree", summation of node value such as TA or PA is conducted by the method of accumulation of these values on the temporal tree. This accumulation is first conducted by human hand and is later conducted by the flow chart in Fig.65. Fig.65 illustrate operation of 1 layer composing recursive calculation at "V.tree value generation unit for exclusive tree".

Fig.64(b) is obtained by affixing data belonging to each node at the temporal exclusive tree of Fig.64(a). As the accumulation progresses from bottom of exclusive tree, the process of accumulation is described step-by-step from the leaf nodes.

The data items belonging to each node are ten items explained hereafter. At the data calculation using flow chart of Fig.65 data items necessary for the operation in the flow chart are supplemented.

The 1st of the data items is node number to which data under processing belongs. This data is indicated by the item name "layer". The name "layer" represents the layer under processing by "". The item layer contains branch figure number, enclosed by parenthesis, of Fig.69 for later use. Next item is tree-average node value TA obtained by Eq.(7) belonging to the node designated by the layer. Next item is WGS which is, as shown by Eq.(9), sum of coincidence value governed by dominating node. As "having paths from lower nodes" means "dominating lower nodes", the item WGS becomes the sum of coincidence value governed by dominating node. This item is used for acquisition of path-average node value PA.

The item number of child nodes LAC is number of child nodes directory under the node under processing and the item number of effective child nodes LNC is number of effective child nodes directory under the node under processing, therefore number of ineffective child nodes is subtraction of LNC from LAC. The head letters L's at LNC and LAC are connected with localness of these variable.

The five data items having letter "S" at the ends of their names under the separating symbol "*" represent sum of data of entire nodes belonging to the partial tree dominated by the node under processing. The item TAS accommodates sum of TA's of the nodes under the nodes of processing and TA of the node of processing. The item T2S accommodate sum of the square of TA in the partial tree. The item of NCS accommodates number of effective node and item BCS accommodates number of ineffective nodes respectively in the partial tree having the node under processing as the topmost node.

These data in items with the letter "S" at the end of their name are calculated by "summing up operation". The calculation methods of TAS, PAS and T2S are shown respectively in Eq.(17), Eq.(18) and Eq.(19). These equations shows that TAS, PAS and T2S values of the node under processing are obtained by summing up respectively TAS, PAS and T2S values of their child nodes and adding respectively TA, PA and square of TA of the node under processing to the respective summation results.

$$TAS = \Sigma bTAS + TA \qquad (17)$$

$$TAS = (\Sigma bTAS) \times (1 + 1/LAC) \qquad (17)'$$

$$PAS = \Sigma bPAS + PA \qquad (18)$$

$$PAS = \Sigma bPAS + (\Sigma bWGS) \times LNC \times TA \qquad (18)'$$

$$T2S = \Sigma bT2S + TA^2 \qquad (19)$$

$$NCS = \Sigma bNCS + 1 \qquad (20)$$

$$BCS = \Sigma bBCS \qquad (21)$$

At this calculation, items accommodating path-average node value PA and square of tree-average node value T2 are not furnished. Only their summation results of sum of path-average node value PAS and sum of value of tree-average node value squared are used instead. Only items for node-average node value TA is necessary because this value is used for the calculation of path-average node value PA and square of tree-average node value T2.

Number of effective nodes in a partial tree NCS is, as seen in Eq.(20), calculated as addition of value 1 representing the node under processing and summation of NCS's of child nodes and number of ineffective nodes in a partial tree BCS is, as seen in Eq.(21), calculated as summation of BCS's of child nodes. Number of effective nodes NCS and number of ineffective node BCS are used to obtain respectively average of tree-average node value TAAv and average of path-average node value PAAv given by respectively Eq.(10) and Eq.(11). Eq.(17)' and Eq.(18)' are decomposition result of TA and PA into their composition portions and not used to obtain TAS and PAS. The variables LAC and LNC are concerned with partial tree of node under processing and are respectively number of total nodes and effective nodes. These equations of Eq.(17) to Eq.(21) are all concerned with addition of 2nd value to 1st value in the right hand of respective equations.

Alike the calculation of tree-average node value TA and path-average node value PA, these equations treat specific node and accordingly no suffix is affixed to designate node under processing.

Following is description of data values belonging to specific node. As seen before, data obtained is listed at the side of each node of Fig.64(b). Data values are explained in the bottom to top order that is order of generation by summation of these data. First, the word node of n4(layer 4) is observed. Node "the" is coincident word node and word value 1 or coincident value 1 is generated by word coincidence. By the definition shown concerning with Eq.(7), this value is tree-average node value TA and value 1.0 is introduced to the item of TA. In succession, value 1.0 which is its own node value is introduced into item WGS accommodating sum of coincidence value governed by dominating node. As this node is leaf node and has no childe node, 0 is introduced in items LAC accommodating number of child nodes and LNC accommodating number of effective child nodes. Value 1.0 is introduced to item TAS accommodating sum of tree-average node value.

There is no item to accommodate path-average node value but there is item PAS accommodating addition of its own PA and summation of PA's of lower nodes instead. Path-average node value PA of coincident word or coincident part of speech is the same as coincident value or coincident part of speech value. In this case, word coincident value 1.0 is introduced first to item of PAS accommodating sum of path-average node value.

There is no item for square of tree-average node value T2 but there is item T2S accommodating addition of its own T2 and summation of T2's of lower nodes instead. In this case, the square of TA is introduced first to item of T2S accommodating sum of value of tree-average node value squared. Accordingly, the value of T2S is 1.0.

As node n4 is an effective node, 1 is first introduced to item NCS accommodating sum of number of effective nodes. The value 0 is introduced to item BCS accommodating sum of number of ineffective nodes.

Hereafter, investigation is made along the propagation path of node vale. The node n3(layer 3) of part of speech DET is observed. Tree-average node value of node n3 is 1.0 by Eq.(7) and this value is introduced to in item TA. For item WGS the WGS value at node n4 is carried over as it is according to Eq.(9). As there exist only one child node that is effective node, value 1 is introduced to LAC accommodating number of child node and LNC accommodating number of effective child node.

The tree-average node value of n3 is 1.0. According to Eq.(17) this value is added to lower TAS value making the TAS value 2.0 of this node.

Path-average node value PA of n3 is obtained by Eq.(8) and is 1.0. According to Eq.(18) this value is added to lower PAS value making the PAS value 2.0 of this node.

Square of tree-average node value TA of n3 is 1.0. According to Eq.(19) this value is added to lower T2S value making the PAS value 2.0 of this node.

According to Eq.(20) 1 is added to lower NCS making the NCS value 2 of this node. Nothing exists for the addition to BCS according to Eq.(21) and BCS value for this node is kept to 0.

Node n3 (layer 3) and node n2 (layer 2) that has node name NP representing noun phrase are observed. As node value of n5 is 0, tree-average node value of n2 is 0.5 according to Eq.(7) and this value is accommodated in item TA. According to Eq.(9), number of coincidence value governed by dominating node WGS of node n3 is carried over to this node n2. As number of child node is 2 among which number of effective node is 1, 2 is accommodated in item LAC and 1 is accommodated in LNC.

The tree-average value 0.5 in item TA is summed up conforming to Eq.(19) and the value 2.5 is stored in item TAS of sum of tree-average node value.

The path-average value 0.5 of node n2 given by Eq.(8) is summed up conforming with Eq.(18) and the value 2.5 is stored in item PAS of sum of path-average node value.

Tree-average node value squared T2 of n2 is 0.25. This value is summed up conforming to Eq.(19) and the value 2.25 is stored in item T2S of sum of value of tree-average node value squared.

To item NCS of sum of number of effective nodes, the value 1 is summed up conforming with Eq.(20) and the value 3 is stored. To item BCS of sum of number of ineffective nodes the value, the value 1 is summed up conforming with Eq.(21 and the value 1is stored.

The node treated next should be node n7(layer 7) and not node n2 positioned over the node n2. Hitherto, this node is investigated. The calculation algorithm must control these order of calculation automatically.

Following is the investigation on node n7(layer 7) having part of speech name PREP. The part of speech coincident node PREP has part of speech value 0.7 as seen in the dictionary of Fig.57. According to the definition shown in relation with Eq.(7), the value 0.7 is tree-average node value and is accommodated in item TA. Successively, it's node value 0.7 is accommodated in WGS of WGS : sum of coincidence value governed by dominating node. As this node is a leaf node and has no child node, value 0 is accommodated in LAC of number of child nodes and also value 0 is accommodated in LNC of number of effective child nodes. To item TAS of sum of tree-average node value, TA value 0.7 is introduced.

There is no item for path-average node value PA but there is item PAS of sum of path-average node value. The PA value of coincident word or coincident part of speech is the same respectively as word value or part of speech value. In this case, coincident node value 0.7 is introduced into item PAS of sum of path-average node value.

There is no item for T2 of tree-average node value squared but there is item T2S of sum of value of tree-average node value squared. To item TAS, the square of TA is introduced. Consequently, the value of T2S is 0.49.

As node n4 is effective node with node value, value 1 is first introduced to NCS of sum of number of effective nodes. Value 0 is introduced to BCS of sum of number of ineffective nodes.

Node n6(layer 6) of prepositional phrase PP positioned over node n7 is observed. The tree-average node value TA is 0.35 because node value of n8 is 0 and this value 0.35 is accommodated in item TA. The value 0.7 of node n7 is carried over according to Eq.(7) to item WGS of sum of coincidence value governed by dominating node. As number of child node is 2 and number of effective node is 1, 2 is introduced to LAC of number of child nodes and 1 is introduced to LNC of number of effective child nodes.

To item TAS of sum of tree-average node value, the value 1.05 is introduced according to Eq.(17). Item PA of path-average node value of n6 is obtained by Eq.(8) as 0.245. This value is summed up to PAS of sum of path-average node value giving rise to value of 0.945.

The value 1 is summed up conforming with Eq.(20) to NCS of sum of number of effective nodes giving rise to the value 2. The value 1 is summed up conforming with Eq.(21) to BCS of sum of number of ineffective nodes giving rise to accommodated value of 1.

Now the processing of node n1 is possible because processing of node n2 and n6 is over. First, tree-average node value TA is treated. The TA value of n2 that is one of child node is 0.5 and TA value of n6 that is the other of child node is 0.35. As the sum of these two values is 0.85 and number of child node is 2, TA value of node n1 becomes 0.425 according to Eq.(7). This value is introduced into item TA.

The total value of coincident values of coincident node having paths to child nodes is necessary. WGS value of 1.0 comes from node n2 and WGS value of 0.7 comes from node n6 result in, conforming to Eq.(10), WGS value 1.7 of node n1, The number of child nodes is 2 and number of effective node is also 2 and these values are respectively introduced in LAC of number of child nodes and LNC of number of effective child nodes.

As shown in Eq.(17), item TAS is obtained as addition of TA of node under treatment and total sum of lower TAS or sum of tree-average node value. This is total sum of TAS of n2 and TAS of n6 and TA of n1 itself resulting in the value 3.975, which is introduced in item TAS of n1. Until now, TAS value is obtained by summing up TA's and the operation reaches the topmost node of temporal exclusive tree. The value of TAS here is the total sum of TA's in the exclusive tree. This value is called total sum of tree-average node value TAST. At Fig.64, this value is connected with the title TAST by equal sign and shown beside layer 1.

Eq.(18) shows that item PAS is for the addition of PA of the processed node and sum of lower PAS's. First, PA of node n1 is required. The value of WGSxLNCxTA prescribed by Eq.(8) is 1.445.

Addition result of above value and PAS values from n2 and n6 is 4.89 and this value is sum of path-average node value PAS of node n1. This value connected with title PAS by equal sign is placed beside node n1 in Fig.64.

Eq.(19) shows that value T2S is addition of T2 of the processed node and sum of lower T2S's. Addition result of T2 of n1 and T2S from node n2 and T2S from node n6 is 3.0431 and this value is T2S value of node n1. This value itself is total sum of value of tree-average node value squared T2ST of the temporal exclusive tree of Fig.64. This value connected with title PAS by equal sign is placed beside node n1 in Fig.64.

Eq.(20) shows that sum of number of effective nodes NCS is obtained as addition of value 1 and NCS value of node n2 and NCS value of node n6 that is 6. Eq.(21) shows that sum of number of effective nodes NCS is obtained as addition BCS value of node n2 and BCS value of node n6 that is 2. NCS value and BCS values here are respectively NCST and BCST values of the temporal exclusive tree.

Variables concerning to ability of temporal exclusive tree are total sum of tree-average node value TAST, total sum of path-average node value PAST, total sum of value of tree-average node value squared T2ST, total sum of number of effective nodes NCST and total sum of number of ineffective nodes BCST. These variables are obtainable as respectively sum of tree-average node value TAS, sum of path-average node value PAS, sum of value of tree-average node value squared T2S, sum of number of ineffective nodes NCS and sum of number of ineffective nodes BCS at the topmost node. Beside these variables, the tree-average node value TA at the topmost node is also used to show ability of an exclusive tree.

These variables are obtainable as the attributes of the topmost node by human hand using equations of Eq.(7), Eq.(8), Eq.(17) and Eq.(18). These situations are hitherto explained using Fig.64.

Hereafter, the operation to obtain sum of tree-average node value TAS, sum of path-average node value PAS, sum of value of tree-average node value squared T2S, sum of number of effective nodes NCS, sum of number of ineffective nodes BCS and tree-average node value TA at the topmost node by "V.tree value generation unit for exclusive tree" expressed in flow chart of Fig.65 which is operating under recursive algorithm is discussed. Here also, the example of Fig.64(a) and (b) is used.

This flow chart prescribes the operation of single layer that is operation unit. A layer is called by the upper layer and conducts operation calling lower layers and reports the operation results to the upper layer. The two kinds of data are given by the upper layer one of which is the layer number of the upper layer calling current layer and the other is partial tree of temporal exclusive tree to be processed by current layer. The topmost node of the input partial tree corresponds the layer number of this layer. Namely, each layer number has one to one correspondence with the node number of partial exclusive tree. Topmost node number of the partial tree is called currently treated node.

One layer controls data flow between registers belonging to the layer. Registers TA of tree-average node value, WGS of sum of coincidence value governed by dominating node, LAC of number of child nodes, LNC of number of effective child nodes, T2S of sum of value of tree-average node value squared, NCS of sum of number of effective nodes and BCS of sum of number of ineffective nodes respectively accommodate the same data as data written in items of the same names in Fig.64. In addition to these data, the register S to spcifiy current layer is provided. This value is also written in the item layer in Fig.64. Fig.64 is the result of human calculation and this calculation is conducted by the calculation at each layer.

There are registers specific to layer calculation which is not necessary at human calculation. One of these is register U accommodating the upper layer that calls current layer. In addition, process number register V to accommodate process number in the layer and unprocessed child node register CR to accommodate array of unprocessed child partial trees and TA summation register GC to accommodate summation of TA values of processed child partial trees.

The aim of flow chart of Fig.65 is to obtain data to express the ability of the temporal exclusive tree which are total sum of tree-average node value TAST, total sum of path-average node value PAST, total sum of value of tree-average node value squared T2ST, total sum of number of effective nodes NCST and total sum of number of ineffective nodes BCST through algorithm.

There are processes V1 - V12 in Fig.65. These are V1 : call from upper layer, V2:survey on existence of structure, V3:decomposition into child trees. V4:exhaust of child tree, V5:output of 1st tree, V6:exclusion of ineffective node, V7:addition of tree value of partial tree, V8:addition of value of current layer, V9:treatment of coincidence, V10:treatment of effective node, V11:treatment of ineffective node and V12:responce to upper layer. These are shown as pairs of process symbols and its titles and explanations of processes are shown in the rectangles and ronbuses of processes.

As mentioned before, Fig.65 is the flow chart of 1 layer treating currently treated node. This layer operates by the call from the upper layer and reports to the V12:response to upper layer. In addition, this layer calls lower layer at V5:output of 1st tree and trigger the operation of a lower layer and receives report from the lower layer at V6:exclusion of ineffective node. Following is the operation conducted at process V1 of call from upper layer. "Node number of upper layer and partial tree to be processed at current layer is given by upper layer. Topmost node of partial tree is stored in register S. Node number of upper layer is introduced in register U."

Following is the decision made at process V2 of survey on existence of structure. "Decision of existence or absence of the situation that given partial tree consists of plural number of nodes is made and generates "yes" or "no" decision and chooses the process to follow."

Following is the operation conducted at process V3 of decomposition into child trees. "Child partial trees produced after removal of topmost node of input partial tree stored in register S are arranged into child partial tree array and are stored in register CR. Number of child partial trees is stored in register LAC. Register LNC is reset."

Following is the operation conducted at process V4 of exhaust of child tree. "Decision of existence or absence of the situation that CR is empty is made and generates "yes" when unprocessed child node register CR is empty and "no" when CR is not empty and chooses the process to follow."

Following is the operation conducted at process V5 of output of 1st tree. "1st partial tree in register CR is taken out. Lower layer treating topmost node of partial tree is called. The tree taken out and layer number of current layer stored in register S are sent to the lower layer."

Following is the operation conducted at process V6 of exclusion of ineffective node. "Decision that both of WGS value and TA value reported from the lower tree are 0 is made and generates "yes" or "no" decision and chooses the process to follow."

Following is the operation conducted at process V7 of addition of tree value of partial tree. "LNG count is counted up by one. TA output of lower tree value generation unit for exclusive tree is added to GC value. WGS output of lower unit is added to WGS value. TAS value of lower unit is added to TAS value. PAS value of lower unit is added to PAS value. T2S value of lower unit is added to T2S value. NCS value of lower unit is added to NCS value. BCS value of lower unit is added to BCS value." This process is to add the information of one of partial trees.

Following is the operation conducted at process V8 of addition of value of current layer. "GC value divided by LAC value is introduced to TA. TA value thus obtained is added to TAS value. The value obtained by TA successively multiplied by WGS value and LNSC value is added to PAS value. Square of TA value is added to P2S value. WGS value is kept unchanged. Value 1 is added to NCS value. The amount (LAC-LNC) is added to BCS value." This process is to calculate data belonging to the topmost node of current layer at the end of calculation of entire partial trees.

Following is the operation conducted at process V9 of treatment of coincidence. "Decision of existence or absence of the situation that the partial composed of single node given by the upper layer has coincident value is made.

The node is an effective node when the decision is "yes" and the node is an ineffective node when the decision is "no". This decision chooses the process to follow.

Following is the operation conducted at process V10 of treatment of effective node. "Coincidence value is introduced to those values of TA, WGS, TAS and PAS. Square of TA is introduced to value of T2S. Value 1 is introduced to NCS value. Value 0 is introduced to BCS" This process introduces coincidence value to each register because the single node given by the upper layer is an effective node.

Following is the operation conducted at process V11 of treatment of ineffective node. "Both of WGS value and TA value are set to 0." This process is to affix label of inefficient node of current layer.

Following is the operation conducted at process V12 of response to upper layer. "Current layer outputs respective values of TA, TAS, WGS, PAS, T2S, NCS and BCS to upper layer whose layer number is stored in register U." This process returns the calculation result to the upper layer stored in register U.

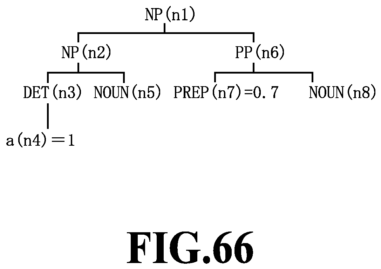

The exclusive tree of Fig.66 that is the same as that of Fig.64 is to emphasize the input and output of operation.

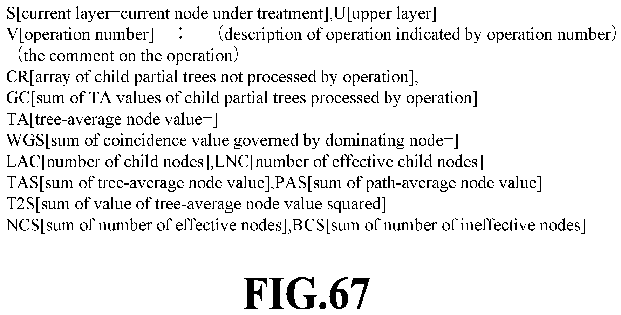

Calculation process of each process at each layer in "V.tree value generation unit for exclusive tree" of Fig.65 is described by the values stored in registers mentioned so far. The values are called process data. Fig.67 shows the structure of the process data. Register names are positioned to the left of square parentheses and summary of data accommodated in registers are enclosed by the parentheses.

The input to current layer is partial tree of temporal exclusive tree and layer number of upper layer that come from upper layer. At the process V1 of call from upper layer, the topmost node number introduced is extracted and stored in register S storing current layer number. The layer number of upper layer is input into register U.

Register V shown is Fig.67 accommodates the process numbers of Fig.65 with the exception of the letter "V". After the description concerning to register V in Fig.67, the explanation of the register is attached in parenthesis. The line under the expression of V is used for the comment for easy understanding of the processed data that is not content of the process data.

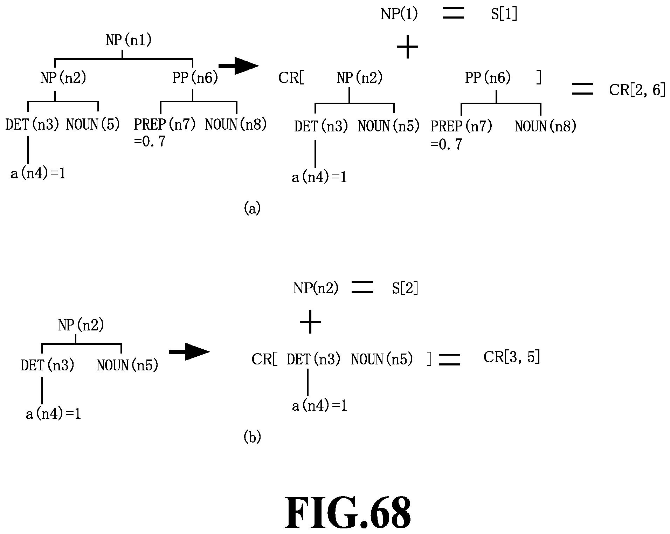

Register CR in Fig.67 accommodates array of unprocessed child partial trees. Array of partial tree is the tree array generated by deleting the topmost node of partial exclusive tree given by the upper layer. This array is generated at process V3. Fig.68(a) is explanation of topmost node deletion at layer 1 which treats entire temporal tree. The portion to the left of the arrow is input partial tree and the portion to the right of the arrow is the result of operation at process V3. Here, the array of child partial trees generated by topmost node elimination and is introduced to register CR. In the expression of content of CR register, the portion to the right of equal sign is abbreviated expression of the portion to the left o equal sign, where the content of CR register is expressed by array of node numbers of topmost nodes. The deleted node number is already stored in the register S at the process V1 of call from upper layer. The abbreviation resulting in the portion to the right of equal symbol from the expression to the left of equal symbol is expressed by the expression "NP(1)=S[1]" in Fig.68(a). Fig.68(b) is the figure of the same operation at layer 2.

Child partial trees in register CR are sequentially processed from the head one by process V5 and processed child partial tree is eliminated from register CR.

The register GC in Fig.67 accommodates sum of TA values of partial child trees already processed. This value is generated at "V.tree value generation unit for exclusive tree" and summed up by process V7. Through this process, the processed content of register CR is sequentially accommodated in register GC. There is difference, however, in that the content of register CR has tree structure but content of register GC is numerical value.

Register TA accommodates tree-average node value introduced to register S at the process V1. This value is generated at the process V8 positioned near the end of this layer.

It is mentioned before that registers explained hereafter accommodate the same values as in Fig.64 obtained by human hand. Register WGS accommodates sum of coincidence value governed by dominating node which belongs to the node introduced to register S. This value is summed up by process V7 at the end of the operation over each child partial tree.

As seen before, registers LAC and LNC accommodate respectively number of child nodes and number of effective child nodes of the currently treated node stored in register S. The number of child trees obtained at V3 is introduced to register LAC of total nodes. The number to be stored in register LNC of effective child node number, increases at the instance of generation of effective child tree by process V7. This value is later used at the calculation of number of nodes in the temporal exclusive tree.

Data in TAS, PAS and T2S of the partial tree having topmost node introduced to register S are respectively introduced to registers TAS, register PAS and register T2S. First, Data in TA, PA and T2 of the current layer stored in resister S are introduced by process V8 to respectively register TAS, PAS and T2S. Then, data o TAS, PAS and T2S of lower layer are added respectively to the values in TAS, PAS and T2S by process V3 updating data in TAS, PAS and T2S.

Register NCS are to accommodate sum of number of effective nodes of partial tree with the topmost node stored in register S. To register NCS, lower NCS value is first introduced by process V3 and the value 1 of this layer is added later by process V8.

Register BCS are to accommodate sum of number of ineffective nodes of partial tree with the topmost node stored in register S. To register BCS, lower BCS value is introduced by process V3 updating the BCS but addition at process V8 does not happen because current layer is effective node.

Figs.69-73 shows intermediate data during acquisition of data listed in Fig.64 by the application of the flow chart of Fig.65 to the input temporal exclusive tree in Fi.66. As seen in Figs.69-73 , the process amounts to 70 operations. Each operation has title taking the shape of "figure number with branch number enclosed by parenthesis" = S["current layer number which is node number of the partial tree processed"],U["upper layer number calling current layer"],V["process number in Fig.65 with abbreviation of letter V"],["caption of the process"] where expressions enclosed by "" are variables. The numbers enclosed by parenthesis and placed after the letter sequence "Fig." in Fig.64 are branch figure numbers in Figs.69-73  at which respective data in Fig.64 are obtained.

Fig.69(1)=S[1],U[0},V[1][call from upper layer] is described here. Hereafter, the data listed are the data after completion of current operation. Here, the layer 0 outside of this flow chart gives the temporal exclusive tree of Fig.66. The digit 1 of current layer number is accommodated in register S and the layer number 0 calling this layer is accommodated in resister U and the process number without letter "V" is accommodated in register V.

Fig.69(2)=S[1],U[0},V[2][survey on existence of structure] is described here. As input tree has tree structure, the decision is "yes".

Fig.69(3)=S[1],U[0},V[3],[decomposition into child trees] is described here. Here, an input tree is decomposed into topmost node and array of child trees and child tree array i accommodated in register CR. Hereafter; the topmost node in Fig.66 represents a partial tree. The actual shape is shown to the right of array in Fig.68(a). As number of child trees is found, value 2 is introduced in register LAC of number of child nodes. To register LNC, provisional value 0 is introduced. The value of register LNC increases every time when effective nodes are determined with the operation progress.

Fig.69(4)=S[1],U[0},V[4],[exhaust of child tree] is described here. This process generates the decision "no" as register CR has meaningful content.

Fig.69(5)=S[1],U[0},V[5],[output of 1st tree] is described here. At process V5 the 1st tree having topmost node n2 is taken out and the lower layer is called. The content of register CR becomes n6 only.

Fig.69(6)=S[2],U[1},V[1],[call from upper layer] is described here. To register U the layer 1 calling this layer is introduced. In register S the value 2 of this layer is introduced.

Fig.69(7)=S[2],U[1},V[2],[survey on existence of structure] is described here. As input tree with topmost node n2 has tree structure, the decision is "yes".

Fig.69(8)=S[2],U[1},V[3],[decomposition into child trees] is described here. Here, child tree array is introduced to register CR. The tree array to the left of arrow in Fig.68(b) is the child tree array. As seen in Fig.69(8), array of topmost nodes [3, 5] is introduced by abbreviation. As number of child trees is found, value 2 is introduced in register LAC of number of child nodes. To register LNC, provisional value 0 is introduced.

Fig.69(9)=S[2],U[1},V[4],[exhaust of child tree] is described here. Process V4 generates the decision "no" as register CR has meaningful content directing process V5.

Fig.69(10)=S[2],U[1},V[5],[output of 1st tree] is described here. At process V5 the 1st tree having topmost node n3 is taken out and the lower layer is called. The content of register CR becomes n5 only.

Fig.69(11)=S[3],U[2},V[1],[call from upper layer] is described here. This is the first process of layer 3. To register U the layer 2 calling this layer is introduced. In register S the value 3 of this layer is introduced.

Fig.69(12)=S[3],U[2},V[2],[survey on existence of structure] is described here. This operation surveys if partial tree with topmost node n3 has structure. As seen to the right of arrow in Fig.68(b), this tree has structure and decision is "yes".

Fig.69(13)=S[3],U[2},V[3],[decomposition into child trees] is described here. Process V3 decomposes the tree with topmost node n3 into the topmost node and lower partial tree. The tree with topmost node n4 is introduced into register CR. At Fig.69(13), this tree is abbreviated into 4. Value 1 is introduced in register LAC of number of child nodes. To register LNC, provisional value 0 is introduced.

Fig.69(14)=S[3],U[2},V[4][exhaust of child tree] is described here. This process generates the decision "no" as register CR has meaningful content.

Fig.69(15)=S[3],U[2},V[5],[output of 1st tree] is described here. At process V5 the 1st tree having topmost node n4 is taken out and the lower layer is called. The content of register CR becomes n5 only. Register CR becomes empty.

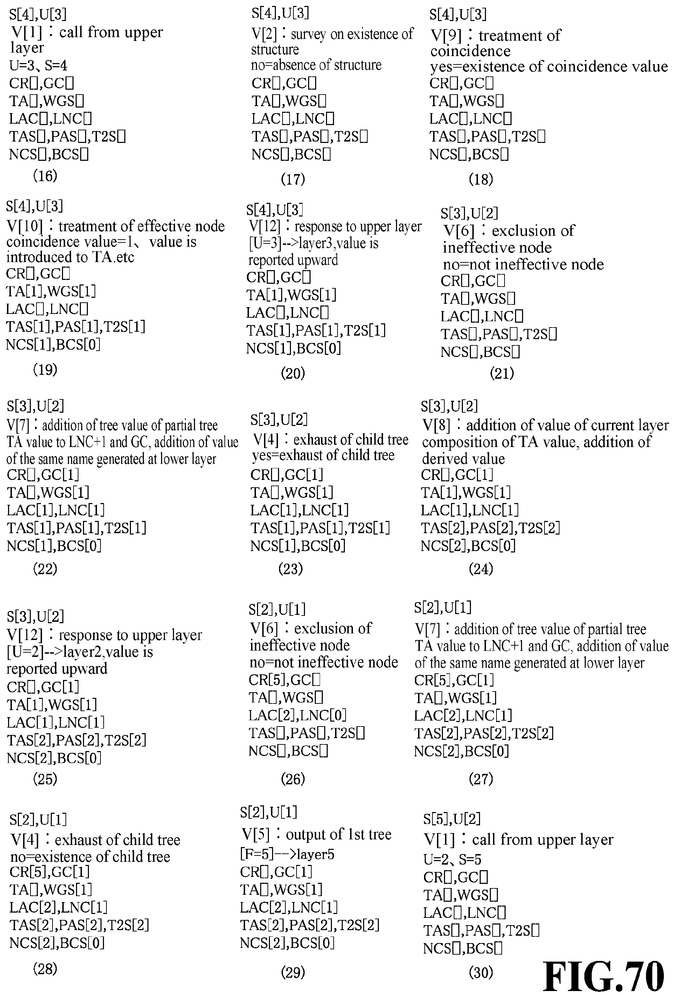

Fig.70(16)=S[4],U[3},V[1],[call from upper layer] is described here. This is the first process of layer 4. To register U the layer 3 calling this layer is introduced. In register S the value 4 of this layer is introduced.

Fig.70(17)=S[4],U[3},V[2],[survey on existence of structure] is described here. As input tree with topmost node n4 does not have tree structure, the decision is "no" directing, as the next process, to the process V9 of treatment of coincidence.

Fig.70(18)=S[4],U[3},V[9],[treatment of coincidence] is described here. Here the decision whether node n4 has coincident value or not is made. Decision is "yes" and next process is V10 of treatment of effective node.

Fig.70(19)=S[4],U[3},V[10],[treatment of effective node] is described here. Coincident value 1 is introduced into registers TA, WGS, TAS, PAS and the value 1 which is squared value of coincident value is introduced into register T2S by the indication of process V10. The value 1 is introduced into register NCS of sum of number of effective nodes and value 0 is introduced into register BCS of sum of number of ineffective nodes.

Fig.70(20),S[4],U[3],V[12],[response to upper layer] is described here. Here operation returns to layer 3 instructed by the content of register U. The data stored in each register is transferred to the upper layer at process V7 of upper layer.

Fig.70(21),S[3],U[2],V[6],[exclusion of ineffective node] is described here. Here operation returns to process V6 that is gateway of upper layer. As seen above title, value 3 becomes the content of register S and value of 6 has been introduced in register V of process number. Here, the decision whether contents of both of registers TA and WGS are 0 or not is made. When the node is ineffective node, the values of TA and WGS become 0 but the decision generated here is "no" directing the operation to process V7 by the reason that the processed node is effective node having coincident value. As seen in Fig.70(21) the value 2 that is upper layer of current layer 3 already exists in register U. This situation enables the restart from the position of Fig.69(15) where layer 4 is called. This mechanism is the same as recursive calling at C language.

Fig.70(22),S[3],U[2],V[7],[addition of tree value of partial tree] is described here. At process V7, resister values brought by Fig.70(2) are added without any change to the values stored in registers of the same names. The exception is value of TA, which is added to register GC, which accommodates summation of TA's of child partial tree. This operation is summing up operation at the numerator of the right side of Eq.(7). As a result, values accommodated in the registers of Fig.70(22) are obtained. This operation here stated corresponds to the summation operation at the first terms at the right side of equations Eq.(17), Eq.(18), Eq.(19), Eq.(20) and Eq.(21). The second terms of the right sides of these equations are 0. Increase by 1 is made at the register LNC.

Fig.70(23),S[3],U[2],V[4],[exhaust of child tree] is described here. The decision of "yes" is generated because register CR is empty directing the operation to process V8.

Fig.70(24),S[3],U[2],V[8],[addition of value of current layer] is described here. As calculation of entire child partial tree including the summation at numerator of Eq.(7) is completed, the tree-average node value TA is obtainable. This value 1 is accommodated in register TA. The addition mentioned hereafter is addition made to the values in registers of Fig.70(23). First, TA value is added to the value in regi8ster TAS. According to Eq.(8), The value 1 which is multiplication result of WGS value and LNC value and TA value just obtained is added to the value in PAS which accommodates summation of PA value. Similarly, the squared value of TA is added to the value in T2S. Value 1 of LNC of number of effective child nodes is added to the value in register NCS of sum of effective nodes. As the difference of LAC value and LNC value is number of ineffective nodes, this value 0 is added to the value in register BCS keeping the BCS value of 0 unchanged.

Fig.70(25),S[3],U[2],V[12],[response to upper layer] is described here. Here operation returns to layer 2 instructed by the content of register U. The data stored in each register is transferred to the upper layer at process V6 of upper layer.

Fig.70(26),S[2],U[1],V[6],[exclusion of ineffective node] is described here. As TA and WGS values are not 0 at Fig.70(25) meaning that this node n2 is not ineffective node, the decision of this process is "no" directing to process V7. As seen in Fig.70(26), the child partial tree with topmost node n5 is accommodated in register CR and the sum of child nodes 2 is accommodated in register LAC and provisional value 0 is accommodated in register LNC. These values are kept since process V5 in Fig.69(10) where the node n2 calls the node 3.

Fig.70(27),S[2],U[1],V[7],[addition of tree value of partial tree] is described here. Here, the data of partial trees of node n3 is added to the data of registers of the same name in layer of n2. Off course, this is the process to realize the summation at the first terms of right side of Eq.(17) to Eq.(21). The increase by 1 of LNC value from provisional value 0 in Fig.70(26) to that in Fig.70(27) is due to the fact that topmost node n2 is effective because this partial tree is found to be effective by preceding process V6. The lower TA value is added to GC value of current layer.

Fig.70(28),S[2],U[1],V[4],[exhaust of child tree] is described here. This process generates the decision "no" as register CR has meaningful content.

Fig.70(29),S[2],U[1],V[5],[output of 1st tree] is described here. At process V5 the 1st tree having topmost node n5 is taken out and the lower layer is called.

Fig.70(30),S[5],U[2],V[1],[output of 1st tree] is described here. This is the first process of layer n5. To register U the layer 2 calling this layer is introduced. In register S the value 5 treating partial tree composed of single node n5 that is topmost node is introduced.

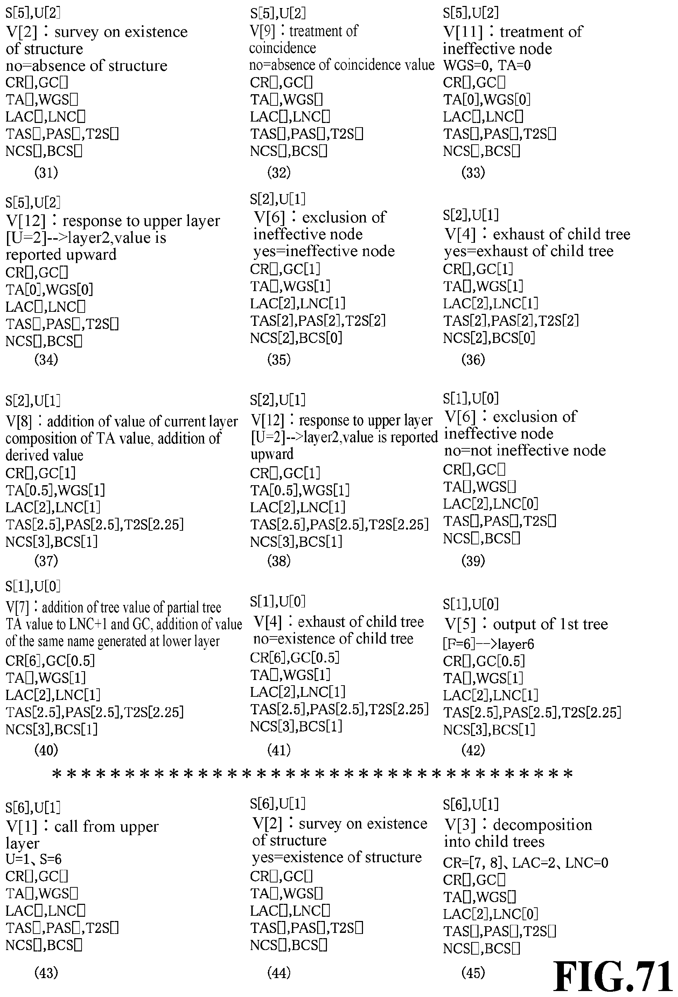

Fig.71(31),S[5],U[2],V[2],[survey on existence of structure] is described here. As input tree with topmost node n5 does not have tree structure, the decision is "no" directing, as the next process, to the process V9 of treatment of coincidence.

Fig.71(32),S[5],U[2],V[9],[treatment of coincidence] is described here. Here the decision whether node n5 has coincident value or not is made. As seen in Fig.66, this node does not have coincident value resulting in decision of "no" directing to process V11 of treatment of ineffective node.

Fig.71(33),S[5],U[2],V[11],[treatment of ineffective node] is described here. Here, both of tree-average node value TA and sum of coincidence value governed by dominating node WGS are set to 0.

Fig.71(34),S[5],U[2],V[12],[response to upper layer] is described here. Here, operation goes back to layer 2 directed by the content of register U.

Fig.71(35),S[2],U[1],V[6],[exclusion of ineffective node] is described here. Here, the decision whether both of TA and WGS values are 0 or not. The 0 values means that the single node is ineffective node having no coincident value. The decision here is "yes" of ineffective node directing to process V4.

Fig.71(36),S[2],U[1],V[4],[exhaust of child tree] is described here. As seen in Fig.70(29), layer 2 called layer 5 at the process V5 of layer 2. As seen in Fig.71(35), the values in registers are kept unchanged from those in Fig.70(29). Here the decision "yes" meaning that register CR does not accommodate the object of processing is made choosing process V8 as next process.

Fig.71(37),S[2],U[1],V[8],[addition of value of current layer] is described here. As calculation of entire child partial tree including the summation at numerator of Eq.(7) is completed, the tree-average node value TA is obtainable by division of GC value by LAC value. This value 0.5 is accommodated in register TA. The addition mentioned hereafter is addition made to the values in registers of Fig.71(37). First, TA value is added to the value in regi8ster TAS. According to Eq.(8), the value 0.5 which is multiplication result of WGS value and LNC value and TA value 0.5 is added to the value in PAS which accommodates summation of PA value. Similarly, the squared value of TA is added to the value in T2S. Value 1 of LNC of number of effective child nodes is added to the value in register NCS of sum of effective nodes. As the difference of LAC value and LNC value is number of ineffective nodes, this value 1 is added to the value in register BCS.

Fig.71(38),S[2],U[1],V[12],[response to upper layer] is described here. Operation goes to process V6 of layer 1 stored in register U.

Fig.71(39),S[1],U[0],V[6],[exclusion of ineffective node] is described here. As TA and WGS values are not 0 at Fig.71(38) meaning that this node n1 is not ineffective node, the decision of this process is "no" directing to process V7.

Fig.71(40),S[1],U[0],V[7],[addition of tree value of partial tree] is described here. As seen in Fig.71(40), child partial tree with topmost node n6 is accommodated in register CR and 2 is accommodated in LAC of number of child nodes and provisionary value 0 is accommodated in register LNG of number of effective child nodes. These values are conserved since process V5 of Fig.69(5) where layer 1 calls layer 2. Here, the data of partial tree of n2 is added to the corresponding data of layer 1. Off course, this operation is to realize the addition of 1st terms in right sides of Eqs.(17) to (21). The increase of LNC value by 1 from provisional value 0 at Fig.71(39) to that of Fig.71(39) is due to the fact that the topmost node of this partial tree is found to be effective node at process V6.

Fig.71(41),S[1],U[0],V[4],[exhaust of child tree] is described here. This process generates the decision "no" as register CR has meaningful content leading to the next process of process V5.

Fig.71(42),S[1],U[0],V[5],[output of 1st tree] is described here. At process V5 the 1st tree having topmost node n6 is taken out and the lower layer is called. This makes register CR empty.

Fig.71(43),S[6],U[1],V[1],[call from upper layer] is described here. This is the first process of layer 6. To register U the layer 1 calling this layer is introduced. In register S the value 6 of the topmost node is introduced.

Fig.71(44),S[6],U[1],V[2],[survey on existence of structure] is described here. This operation surveys if partial tree with topmost node n6 has structure. As seen to the right of arrow in Fig.68(a), this tree has structure and decision is "yes".

Fig.72(45),S[6],U[1],V[3],[decomposition into child tree] is described here. Process V3 decomposes the tree with topmost node n6 into the topmost node and lower partial trees. The tree with topmost nodes n7 and n8 are introduced into register CR. Value 2 is introduced in register LAC of number of child nodes and provisional value 0 is introduced to register LNC of number of effective child nodes.

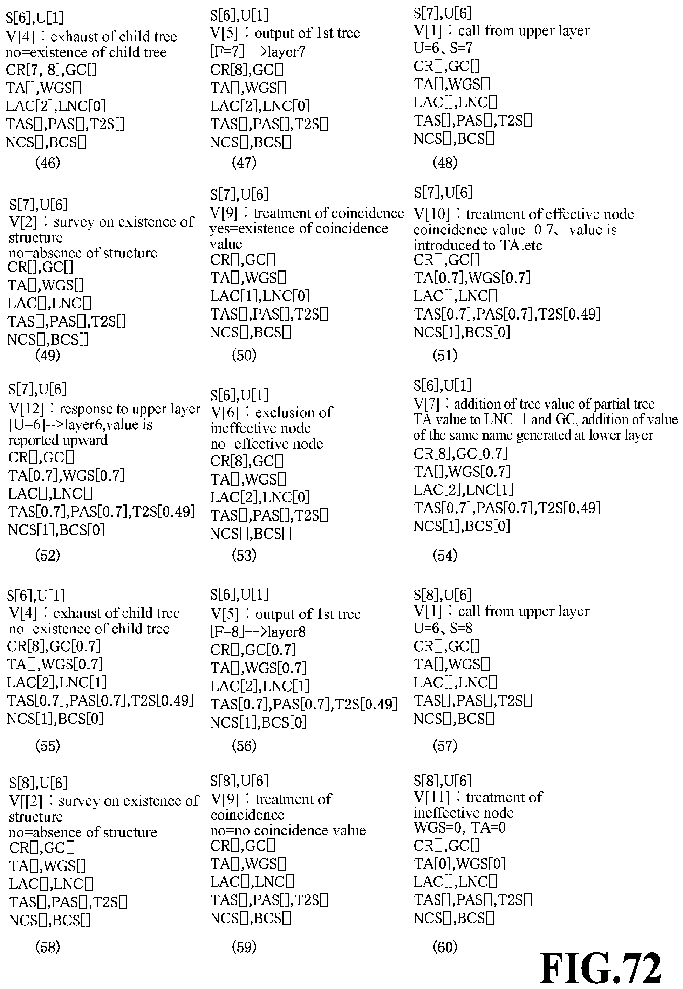

Fig.72(46),S[6],U[1],V[4],[exhaust of child tree] is described here. This process surveys whether register CR accommodates data. This process generates the decision "no" as register CR has meaningful content directing to process V5.

Fig.72(47),S[6],U[1],V[5],[output of 1st tree] is described here. At process V5 the 1st tree having topmost node n5 is taken out and the lower layer is called. Now, the content of register CR is only node n8.

Fig.72(48),S[7],U[6],V[1],[call from upper layer] is described here. To register U the layer 6 calling this layer is introduced. In register S the value 7 of this layer is introduced.

Fig.72(49),S[7],U[6],V[2],[survey on existence of structure] is described here. As input tree with topmost node n7 does not have tree structure, the decision is "no" directing, as the next process, to the process V9 of treatment of coincidence.

Fig.72(50),S[7],U[6],V[9],[treatment of coincidence] is described here. Here the decision whether node n7 has coincident value or not is made. Decision is "yes" because node n7 has the coincident value 0.7 and next process is V10 of treatment of effective node.

Fig.72(51),S[7],U[6],V[10],[treatment of effective node] is described here. Coincident value 0.7 is introduced into registers TA, WGS, TAS, PAS and the value 9.49 which is squared value of coincident value is introduced into register T2S by the indication of process V10. The value 1 is introduced into register NCS of sum of number of effective nodes and value 0 is introduced into register BCS of sum of number of ineffective nodes.

Fig.72(52),S[7],U[6],V[12],[response to upper layer] is described here. Recursion to layer 6 is conducted.

Fig.72(53),S[6],U[1],V[6],[exclusion of ineffective node] is described here. Here, the decision whether both of TA and WGS values are 0 or not. The 0 values means that the single node is ineffective node having no coincident value. As node n6 is efficient node, the decision here is "no" of effective node directing to process V7.

Fig.72(54),S[6],U[1],V[7],[addition of tree value of partial tree] is described here. At process V5 in Fig.72(47), layer 6 calls layer 7. The values in registers U, CR, LAC and LNC of post recursion shown in Fig.72(53) are the same as those of Fig.72(47). As shown before, ordinary compiler like C language can realize this operation. Here, the values brought from lower layer are introduced to the registers of the same names without any change. Only the TA value is added to value of register GC of sum of child tree values. This operation corresponds the summation in the first terms of the right sides in Eqs.(18), (19), (20) and (21). The value in LNC is increased by 1.

Fig.72(55),S[6],U[1],V[4],[exhaust of child tree] is described here. This process surveys whether register CR accommodates data or not. This process generates the decision "no" as register CR has meaningful content directing to process V5.

Fig.72(56),S[6],U[1],V[5],[output of 1st tree] is described here. At process V5 the 1st tree having topmost node n8 is taken out and the lower layer is called. This makes register CR empty.

Fig.72(57),S[8],U[6],V[1],[call from upper layer] is described here. The value 6 is introduced in register U of calling layer and value 8 is introduced in register S of current layer.

Fig.72(58),S[8],U[6],V[2],[survey on existence of structure] is described here. As input tree with topmost node n8 does not have tree structure, the decision is "no" directing, as the next process, to the process V9 of treatment of coincidence.

Fig.72(59),S[8],U[6],V[9],[treatment of coincidence] is described here. Here the decision whether node n8 has coincident value or not is made. This node does not have coincident value resulting in decision of "no" directing to process V11 of treatment of ineffective node.

Fig.72(60),S[8],U[6],V[11],[treatment of ineffective node] is described here. Here, both of tree-average node value TA and sum of coincidence value governed by dominating node WGS are set to 0.

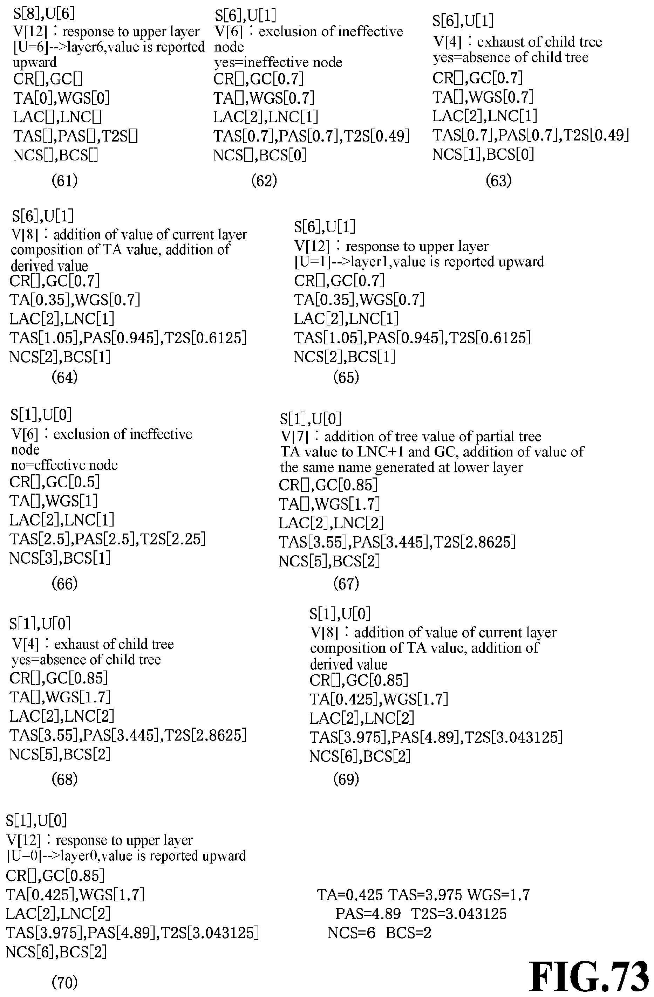

Fig.73(61),S[8],U[6],V[12],[response to upper layer] is described here. The operation returns to layer 6 designated by the value in register U.

Fig.73(62),S[6],U[1],V[6],[exclusion of ineffective node] is described here. Here, the decision whether both of TA and WGS values are 0 or not. The 0 values means that the single node is ineffective node having no coincident value. The decision here is "yes" of ineffective node directing to process V4.

Fig.73(63),S[6],U[1],V[4],[exhaust of child tree] is described here. Here the decision "yes" meaning that register CR does not accommodate the object of processing is made choosing process V8 as next process.

Fig.73(64),S[6],U[1],V[8],[addition of value of current layer] is described here. As calcuration of entire child partial tree including the summation at numerator of Eq.(7) is completed, the tree-average node value TA is obtainable by division of GC value by LAC value. This value 0.35 is accommodated in register TA. The addition mentioned hereafter is addition made to the values in registers of Fig.73(63). First, TA value 0.35 is added to the value in register TAS. According to Eq.(8), the value 0.5 which is multiplication result of WGS value 0.7 and LNC value 1 and TA value 0.35 is added to the value in PAS, which accommodates summation of PA value. Similarly, the squared value of TA is added to the value in T2S. Value 1 of LNC of number of effective child nodes is added to the value in register NCS of sum of effective nodes. As the difference of LAC value and LNC value is number of ineffective nodes, this value is added to the value in register BCS. Next process is process V12.

Fig.73(65),S[6],U[1],V[12],[addition of value of current layer] is described here. The operation returns to process V6 of layer 1 designated by the value in register U.

Fig.73(66),S[1],U[0],V[6],[exclusion of ineffective node] is described here. As shown in Fig.71(42), layer 6 is called by process V5 of layer 1. Accordingly in the registers in Fig.73(66), the same values as those accommodated in the registers of the same name in Fig.71(42) exist. These values are generated at the node n2 and its lower structure in Fig.66.

Process V6 finds that both of TA value and WGS value are not 0 which means that this node is effective node and generate decision of "no" directing the operation to process V7.

Fig.73(67),S[1],U[0],V[7],[addition of tree value of partial tree] is described here. Here, the values in registers WGS, TAS, PAS, T2S of partial tree of node n6 shown in Fig.73(65) are added to the values in registers of the same names shown in Fig.73(66). This operation corresponds the summation in the first terms of the right sides in Eqs.(18), (19), (20) and (21). TA value of Fig.73(65) is added to value of register GC of sum of child tree values. The value in LNC is increased by 1 because node n6 in found to be effective.

Fig.73(68),S[1],U[0],V[4],[exhaust of child tree] is described here. Here the decision "yes" meaning that register CR does not accomodate the object of processing is made choosing process V8 as next process.

Fig.73(69),S[1],U[0],V[8],[addition of value of current layer] is described here. As calculation of entire child partial tree including the summation at numerator of Eq.(7) is completed, the tree-average node value TA is obtainable by division of GC value by LAC value. This value 0.425 is accommodated in register TA. The addition mentioned hereafter is addition made to the values in registers of Fig.70(23). First, TA value 0.425 is added to the value in register TAS. According to Eq.(8), the value 1.445 which is multiplication result of WGS value and LNC value and TA value obtained just before is added to the value in PAS which accommodates summation of PA value. Similarly, the squared value of TA is added to the value in T2S. Value 1 of LNC of number of effective child nodes is added to the value in register NCS of sum of effective nodes. As the difference of LAC value and LNC value is number of ineffective nodes, this value is added to the value in register BCS. As this value is 0, the BCS value is kept 0. Next process is process V12.

Fig.73(70),S[1],U[0},V[12],[response to upper layer] is described here. This value in registers TA, TAS, WGS, and PAS. T2S, NCS, BCS are output to layer 0 which called this layer and exists outside of this layer.

These values in registers TAS of sum of tree-average node value, PAS of sum of path-average node value, WGS of sum of coincidence value governed by dominating node, T2S of sum of value of tree-average node value squared, NCS of sum of number of effective nodes and BCS of sum of number of ineffective nodes at the topmost node of the exclusive tree in Fig.66 are respectively the values of total sum of tree-average node value TAST, total sum of path-average node value PAST, total sum of coincidence value governed by dominating node WGST, total sum of value of tree-average node value squared T2ST, total sum of number of effective nodes NCST and total sum of number of ineffective nodes BCST of temporal exclusive tree as a whole. In addition to these variables tree-average node value TA at the topmost node is important as the representing index of exclusive tree as a whole.

As seen in Fig.73(79), values of total sum of tree-average node value TAST=TAS|top=3.975, total sum of tree-average node value PAST=PAS|top=4.89, total sum of coincidence value governed by dominating node WGST=WGS|top=1.7, total sum of value of tree-average node value squared T2ST=T2S|top=3.043125, total sum of number of effective nodes NCST=NCS|top=6, total sum of number of ineffective nodes BCST=BCS|top=2 are obtained by algorithm and without human decision. In addition, TA|top=0.425 is obtained. Here, the expression "|top" means that the value to the left of "|" at the topmost node. These values are the same as values attached to nodes in Fig.64(b) that are obtained by human hand. Among values obtained by human hand shown in Fig.64(b), the figure numbers enclosed by parenthesis at the first lines indicate the branch numbers in the figures Fig.69-Fig.73 at which these values are generated by the flow chart of Fig.65.

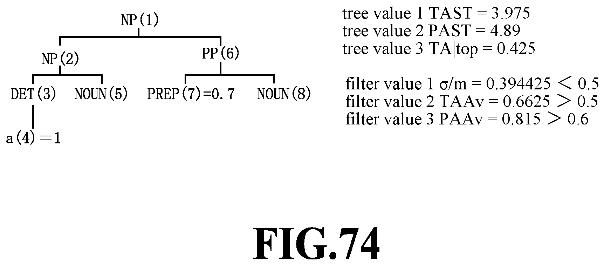

Fig.74 shows the temporal exclusive tree in Fig.66 under investigation and the tree values 1, 2 and 3 and filter values 1, 2 and 3 belonging to the temporal exclusive tree. The filter values are shown with inequality sign concerning the eligibility.

Thus important specifications of given temporal exclusive tree is obtainable by the flow chart in Fig.65 of "V.tree value generation unit for exclusive tree" operating on recursive algorithm. Here, the way of use of these specifications in the shape of tree value expressing the ability of the temporal exclusive tree and the filters to block usage of the temporal exclusive tree because of ineligibility.

One of the candidates of tree value is "tree value 1" which is total sum of tree-average tree value TAS itself. The other of candidates is "tree value 2" which is total sum of path-average tree value PAS itself. The last one of the candidates of tree value is "tree value 3" which is TA|top or tree-average tree value TA belonging to the topmost node of the temporal exclusive tree.

Tree values of "tree value 1", "tree value 2" and "tree value 3" are used according to the characteristics of natural language to treat. The "tree value 1" is effective for sentence of small word number having temporal exclusive tree where paths from coincident words to the topmost node often merge. At the calculation of the tree value of "tree value 2", duplication of paths from coincident words to the topmost node results in increase of tree value. Accordingly "tree value 2" is effective for long sentence. At the calculation of the tree value of "tree value 3", tree value becomes extremely small with long sentence and accordingly "tree value 3" is relatively effective at short sentence.

One of the candidates of filter values is "filter value 1" which is value of $\sigma/m$ given by Eq.(13). The other of the candidates is "filter value 2" which is value of TAAv given by Eq.(23). The last of the candidates is "filter value 3" which is value of PASv given by Eq.(24).

Those "tree value 1", "tree value 2" and "tree value 3" are respectively obtainable as TAST, PAST and TA|top which are major specifications.

Aim of "filter 1" is to regard tree with large fluctuation among it's effective node values as ineligible. Aim of "filter 2" and "filter 3" is to regard tree with small average node value of it's effective nodes. Combined use of "filter 1", "filter 2" and "filter 3" is possible. This is the design policy where the exclusive tree meeting conditions of all these filters is eligible. The design policy that a tree is eligible when it's "filter value 1" is smaller than 0.5 and "filter value 2" is larger than 0.5 and "filter value 3" is larger than 0.6, is adopted here.

Though each tree value is one of major specification of the tree as it is, "filter value 1", "filter value 2" and "filter value 3" are obtained respectively by Eq.(13) as $\sigma/m$, by Eq(10) as TAAv and by Eq(11) as PASv with substitution of major specifications. The ways of calculation of filter values are shown in Eq.(22), Eq.(23) and Eq.(24).

$$\sigma/\mathrm{m} = \sqrt{\frac{\text{T2ST} \times \text{NCST}}{\text{TAST}^2} - 1}$$
$$= \sqrt{\frac{3.043125 \times 6}{3.975^2} - 1} = 0.394425 \tag{22}$$

$$\text{TAAv} = \text{TAST/NCST} = 3.975/6 = 0.6625 \tag{23}$$

$$\text{PAAv} = \text{PAST/NCST} = 4.89/6 = 0.814 \tag{24}$$

These terms so far explained are the composition and operation of "V.tree value generation unit for exclusive tree" existing in Fig.34. Here, the explanation of composing way of units and elements and their operation is completed.

At the explanation of "U.upper covering module=upper covering part" and "G.parsed tree generation module" existing in Fig.34, explanation is made only for the case where "tree value 1" or TAST among above mentioned tree values is used. Explanation hereafter is made only for the case of Suspension of filtering function.

Composition method of temporal exclusive tree and equation of its tree value is so far explained. The temporal exclusive tree is composed under the presupposition that "the partial tree of example tree having word sequence similar to the input word sequence is identical with the partial tree of analysis result of input sentence. The tree value is to express the degree of similarity.

The tree value of analysis tree is stipulated to be the total sum of tree values of temporal exclusive trees so far explained and exclusive trees provided by the system, belonging to division result made by coverage, without duplication and without existence of non-covered partial tree, by temporal exclusive trees and exclusive trees applied to the input OR tree which includes entire analysis tree candidates. The tree of highest tree value is the output analysis tree.

The following is explanation of "U.upper covering module" which composes "upper covering part" by itself.

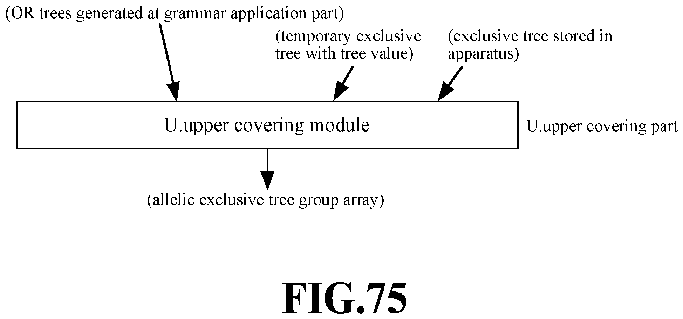

The "U.upper covering module" composes allelic excusive tree array by repetition of the process where it upper covers OR trees by temporal exclusive trees and exclusive trees provided by the system and, in succession, upper covers, by exclusive trees, lower OR trees generated at former upper covering as outside of coverage. Fig.75 is the block diagram of "U.upper covering module". Exclusive trees are provided by the system and the temporal exclusive trees are obtained automatically at "U.upper covering module" through the method so far explained and the generation mechanism differs each other. As mixed use of them, however, is possible, these two altogether are called as exclusive tree and treated equally. Fig.75 illustrates mixed use of them.

Before the explanation of "U.upper covering module", the outline of the operation of "U.upper covering module" is explained with the use of an example. The same example is used at the later explanation of the algorithm.

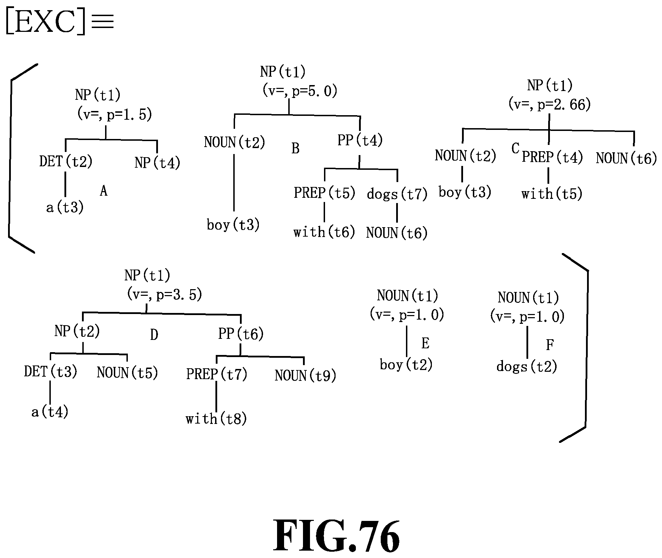

There are six exclusive trees in Fig.76. These are exclusive trees belonging to the category of temporal exclusive tree because the leaf nodes of them are word nodes. These are exclusive trees used in the explanation and consequently exclusive trees belonging to the category of exclusive tree provided by the system is not used. To the topmost node of each exclusive tree in the figure, the tree value is attached after the letter sequence "p=". These tree values are "total sum of tree-average tree values" TAST's.

For the convenience of explanation these exclusive trees altogether are called EXP and are arranged in an array that is enclosed by square parentheses. As these exclusive trees are frequently appear hereafter at the explanation, names expressed in alphabets A to F are given to respective exclusive tree and these names are positioned near to the respective tree in the figures. The exclusive trees are indicated by the name. The exclusive tree existing at 2nd from the left in Fig.76 is called exclusive tree B.

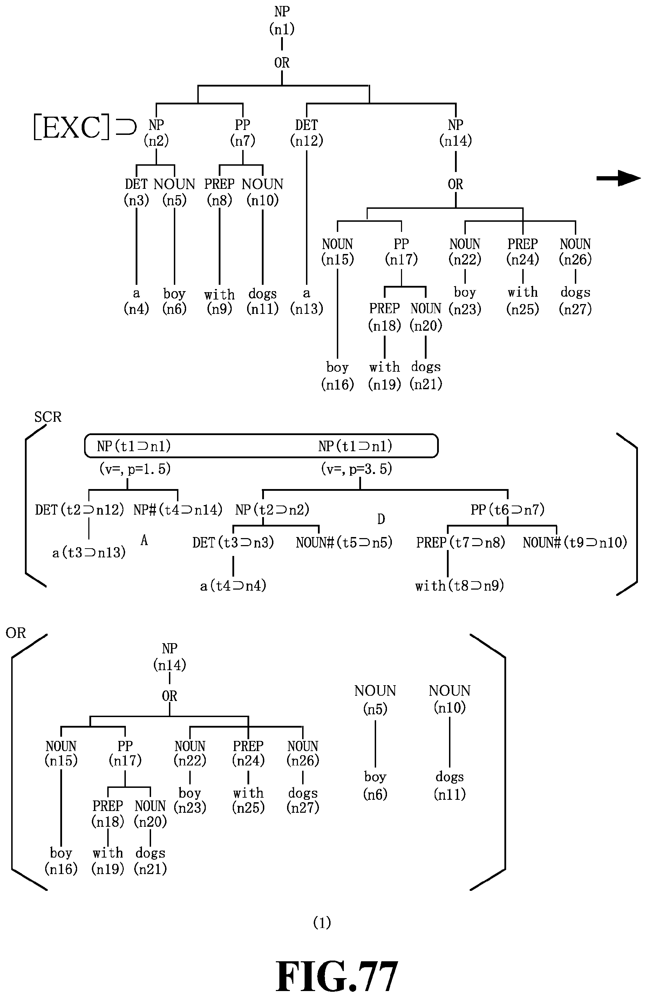

Fig.77- 80 show the upper covering process of the OR tree by exclusive tree array EXP.

At the explanation of "U.upper covering module", the inclusion symbol "⊃" of set theory is used and the upper covering exclusive trees are dispose to the left of ⊃ and upper covered OR tree is dispose to the right. The description to the left of arrow expresses the input of upper covering and to the right expresses the result of upper covering. The input OR tree in Fig.77(1) is the sole OR tree used at the explanation of this patent application.

The term "to upper cover" is defined to be the process "to declare that the portion of OR tree including its topmost node is identical with upper covering exclusive tree".

The partial tree of the covered OR tree is eliminated from object of operation and the information of each node number of upper covered portion of the OR tree is transferred to the corresponding node of the upper covering exclusive tree. Discrimination of the "input exclusive tree without corresponding OR tree node numbers" as shown in Fig.76 from "output exclusive tree with corresponding OR tree numbers" shown to the right of the arrow at the central row of Fig.77(1) is necessary in the strict sense but those two together are simply called exclusive tree because these two are identifiable by circumstance. When the discrimination is necessary, "input exclusive tree without corresponding OR tree node numbers" is called "input exclusive tree" and "output exclusive tree with corresponding OR tree numbers" is called "output exclusive tree". The portion of OR tree protruding from the coverage of exclusive tree is defined to be "coverage substructure". The "lower of coverage" is treated as OR tree regardless of inclusion of OR node.

A portion of upper covering result is the allelic exclusive tree group and is accommodated in array SCR and the other is "coverage substructure" which is OR tree group and is accommodated in array OR. These are shown to the right of arrow in Fig. 77.

Here definition of "allelic exclusive tree group" and "allelic exclusive tree group array". When an OR tree is upper covered by several exclusive trees, there emerges generally plural exclusive trees having the node number of the topmost node of the OR tree as their topmost node number. At the analysis tree generation conducted later by connection of exclusive trees, only one among those having the same topmost node number must be chosen from plural exclusive trees with the same topmost number. In that sense, there is a similarity between plural exclusive trees with the same topmost number and allelic gene of biology in that they are in rivalry. From this reason, group of exclusive trees with the same topmost number is called "allelic exclusive tree group". As shown in Fig.75, "U.upper covering module" explained here generates allelic exclusive tree group array as its output.

As formerly mentioned, Fig.77(1) shows the upper covering situation of input OR tree by input exclusive tree array. In this case, the upper covering by exclusive tree A and exclusive tree B of group EXP succeeds and generates, as shown to the right of arrow, one allelic exclusive tree group to be stored in array SCR and three OR trees to be stored in array OR which accommodates coverage substructure.

As seen in Fig.77(1), the first OR tree in array OR accommodating coverage substructure is generated by coverage of exclusive tree A and 2nd and 3rd are generated by coverage of exclusive tree D.

Hereafter, topmost nodes of trees in the same allelic exclusive group are encircled together showing that they belong to the same tree group.

Array SCR thus accommodates result of upper covering applied to one input OR tree and array OR accommodates whole remaining OR trees. Allelic exclusive tree group is added to array ACR of accumulation every time it arises. Array SCR is reset at the occasion of addition to ACR. Though numbers of allelic exclusive groups are accumulated in array ACR, coverage substructures in array OR are object of calculation and finally disappear.

Fig.77(1) shows upper covering of the input OR tree by exclusive tree array EXP. Here, upper covering of exclusive tree A and exclusive tree D succeeds generating an allelic exclusive tree group stored in array SCR and two OR trees stored in array OR where these arrays are shown to the right of arrow. First OR tree in the array OR is generated by covering of exclusive tree A and 2nd and 3rd are generated by covering of exclusive tree D.

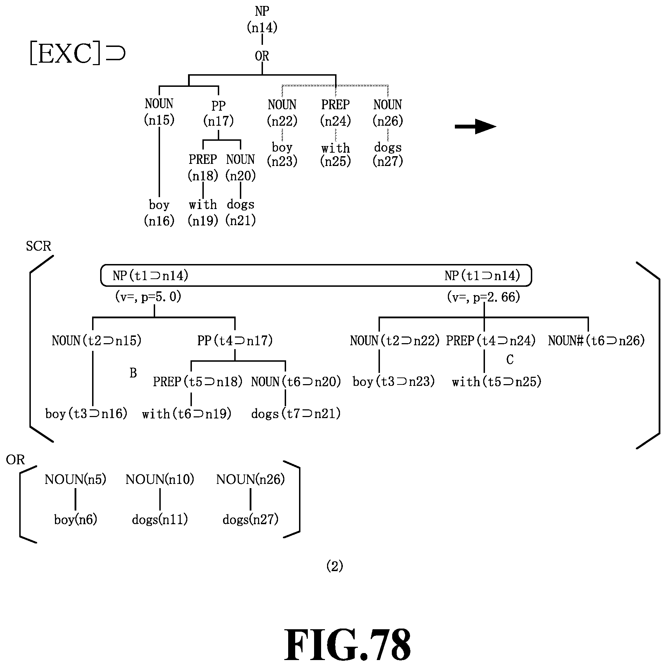

Fig.78(2) shows upper covering of the first OR tree at OR tree array in Fig.77(1) by exclusive tree array EXP. Here, upper covering of exclusive tree B and exclusive tree C succeeds generating an allelic exclusive tree group stored in array SCR and an OR tree at the 3rd position in array OR where these arrays are shown to the right of arrow. This OR tree in the array OR is generated by covering of exclusive tree C.

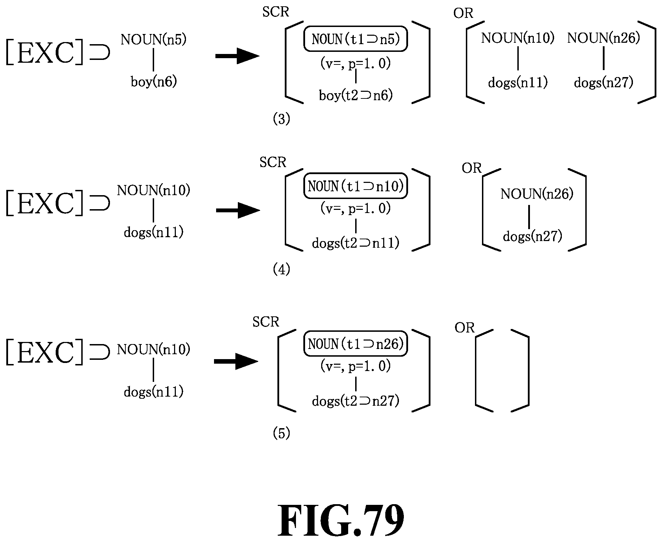

Fig.79(3) shows upper covering of the first OR tree in the array OR in Fig.78(2) by exclusive tree array EXP. Here, upper covering of exclusive tree E succeeds generating an allelic exclusive tree group stored in array SCR and an OR tree stored as the 1st OR tree in array OR. No OR tree is generated and the number of OR tree in array OR diminishes by 1 resulting in the array OR content of Fig.79(3).

Fig.79(4) shows upper covering of the first OR tree in the array OR in Fig.78(3) by exclusive tree array EXP. Here, upper covering of exclusive tree F succeeds generating an allelic exclusive tree group consisted of only one exclusive tree stored in array SCR shown to the right of arrow. No OR tree is generated and the number of OR tree in array OR diminishes by 1 resulting in the array OR content of Fig.79(4).

Fig.79(5) shows upper covering of the first OR tree in the array OR in Fig.78(4) by exclusive tree array EXP. Here, upper covering of exclusive tree E succeeds generating an allelic exclusive tree group consisted of only one exclusive tree stored in array SCR shown to the right of arrow. No OR tree is generated and the number of OR tree in array OR diminishes by 1 resulting in emptiness of array OR.

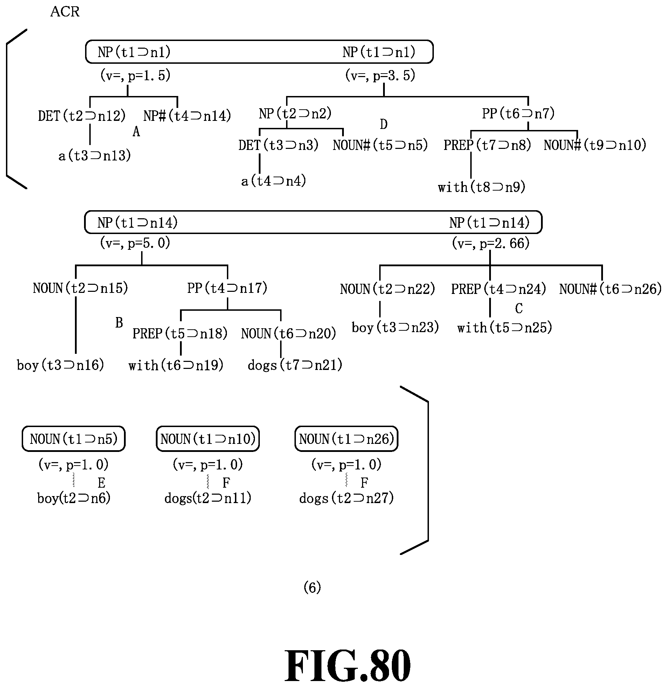

Upper covering process by given exclusive trees of the given OR tree as shown in Fig.77(1) is conducted by repetition of upper covering of the first OR tree until array OR is empty as shown in Fig.79(5) during which coverage substructures are generated and added to the end of array OR. The output as showing in Fig.80(6) of "U.upper covering module=upper covering part" which is accumulation of SCR content at each stage of the process appears at array ACR.

Here, detailed explanation of the operation process of "U.upper covering module=upper covering part" which has been explained so far using Fig.76 - Fig.80 is made. The same example as explained in Fig.76 -80 is used.

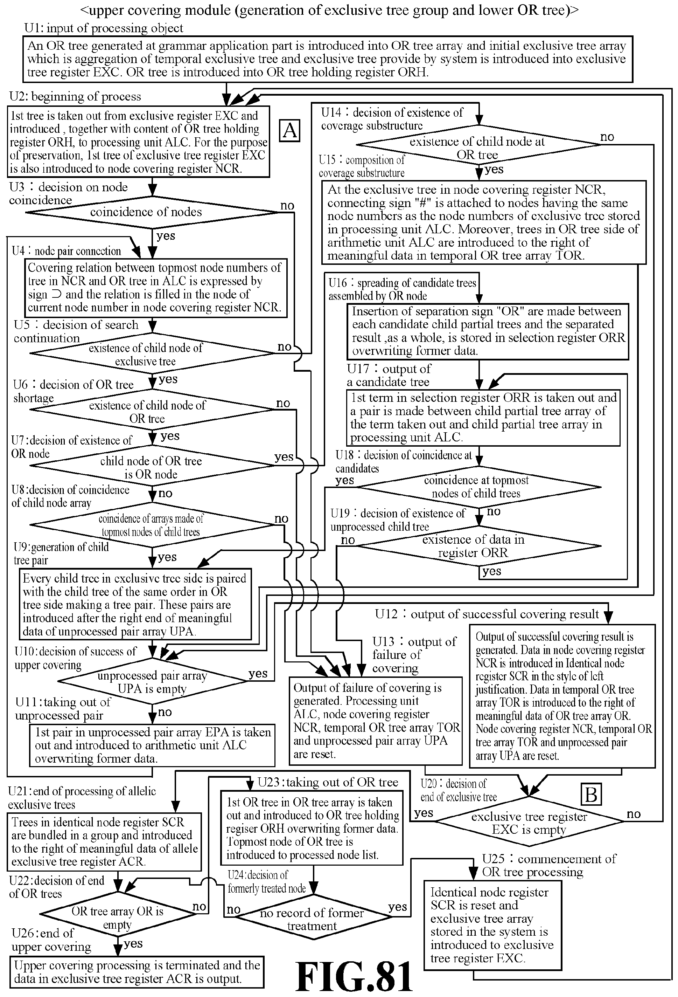

The following is the explanation of operation of "U.upper covering module=upper covering part" with flow chart of Fig.81. The registers used at each process in the flow chart are explained before the explanation of each process.

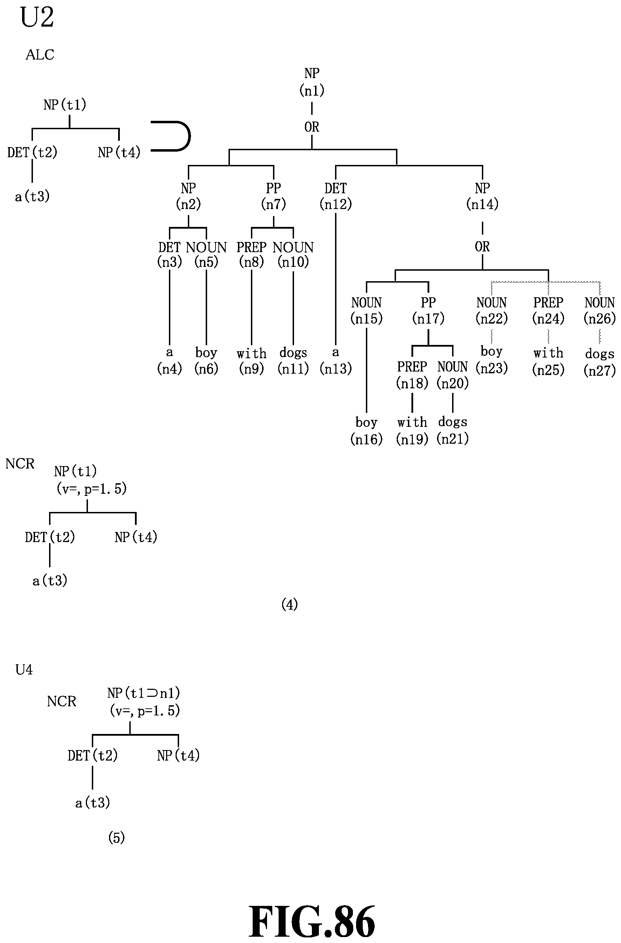

Arithmetic unit ALC is explained first. This unit tentatively accommodates the pair composed of partial tree of exclusive tree and partial tree of OR tree both of which are currently treated. The examples of the pairs are shown in Fig.86(4), Fig.88(8) and Fig.89(11). Each pair is expressed by the inclusion symbol "⊃" to the left of which partial tree of exclusive tree is positioned and to the right of which partial tree of OR tree is positioned. At this pair, the partial exclusive tree to the left upper covers the partial OR tree to the right.

Exclusive tree register EXC accommodates, among entire exclusive trees, exclusive trees to be used after the current process. The initial value of this register is entire exclusive trees stored in the system.

OR tree holding resister ORH is to hold the first tree of OR tree array until upper covering by entire exclusive trees is completed.

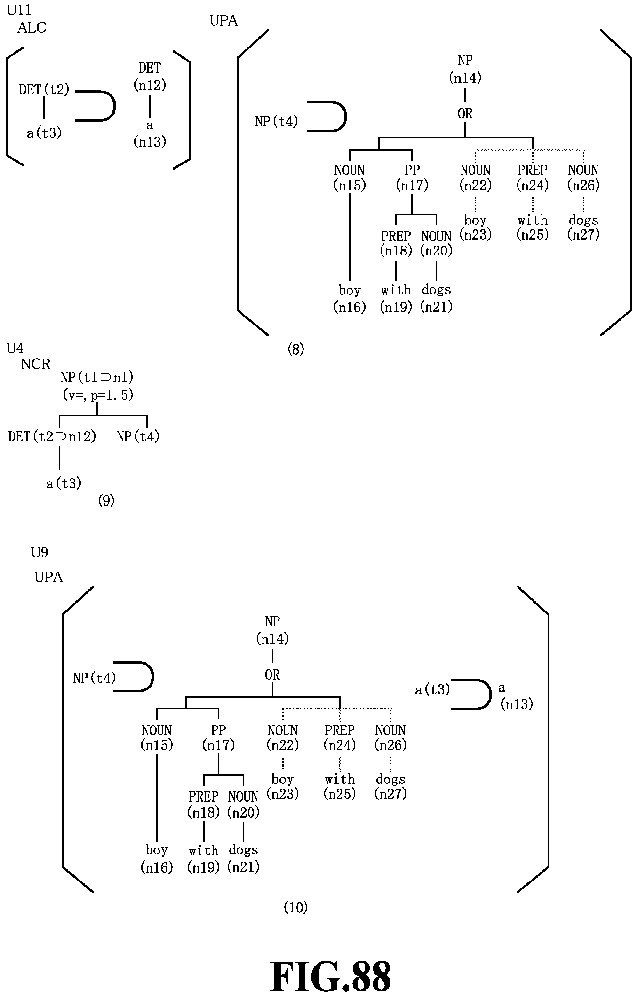

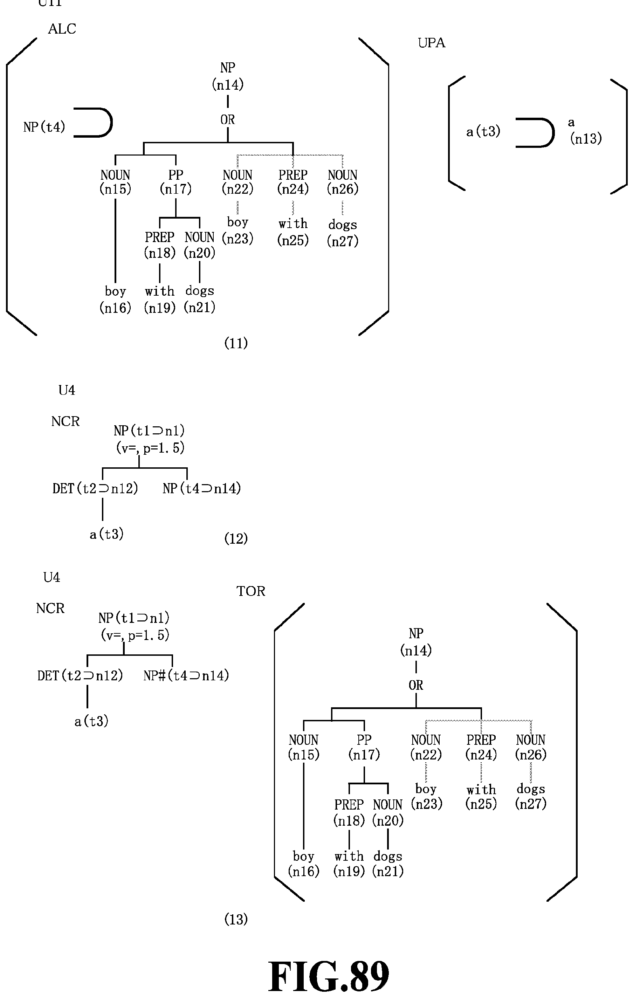

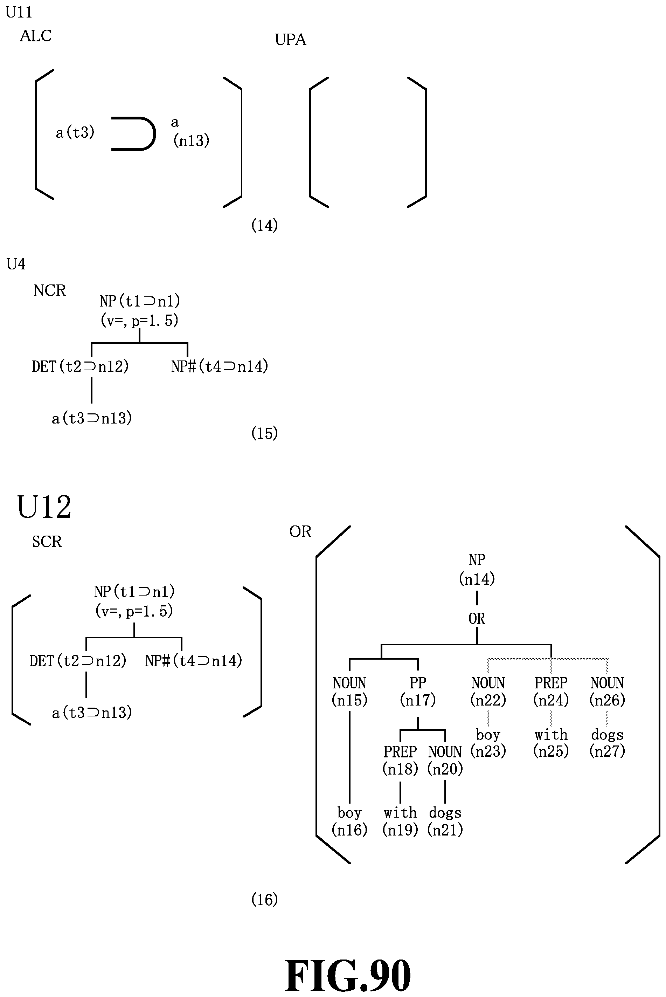

Node covering register NCR is to hold geometric structure of input exclusive tree and to express the covering of OR tree node by each exclusive tree node. The examples of accommodated structures are shown in Fig.86(4),(5), Fig.88(9). Fig.89(13) and Fig.90(15). The number of covered OR tree nodes increases along with the progress of covering operation.

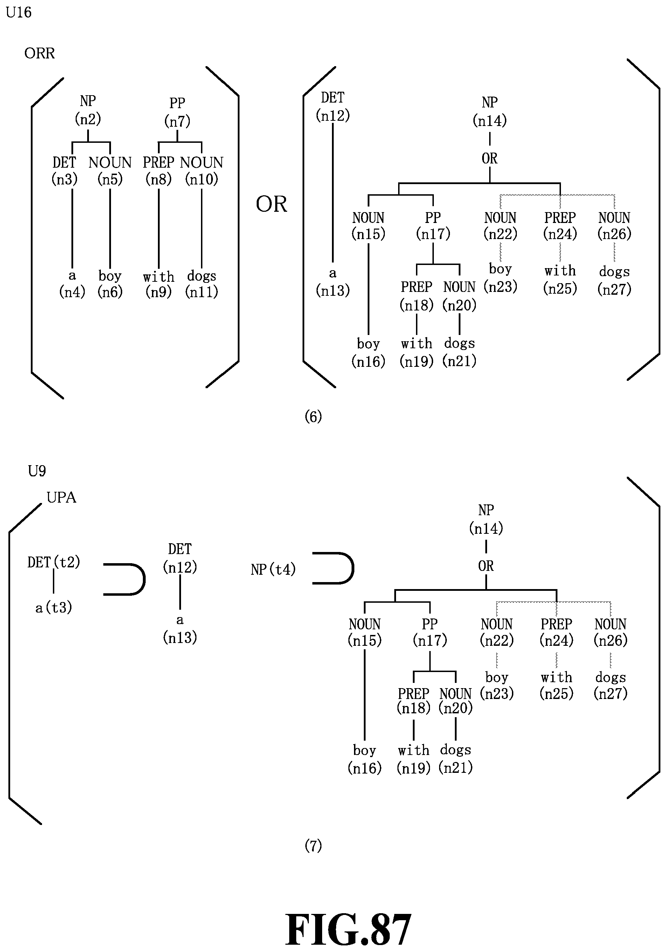

Selection register ORR is to accommodated partial tree array directly under the treated OR node. These partial trees are separated by OR symbol. Fig.87(6) is the example of stored structures.

Unprocessed pair array UPA is to accommodate partial tree array of exclusive tree side and that of OR tree side directly under the currently treated node in the shape of array of pairs each of which is composed of trees of the same order in respective tree array. At each pair, exclusive side tree and OR tree side tree are connected by the symbol "⊃" of inclusion. The pairs processed are eliminated from initial tree pairs. Fig.87(7), Fig.89(11) and Fig.90(14) are the examples of accommodated structures.

Temporal OR tree array TOR memorizes OR trees generated as coverage substructure, which protrude the region of upper coverage at the occasion of upper covering. As OR trees generated becomes meaningless and must be discarded at the failure of upper covering in the middle, temporal OR tree register memorizes OR trees until the result of success or failure is found. Fig.89(13) is the example of acierated structure.

OR tree array OR is the array in which OR trees generated in upper covering operation are accumulated. At every success of upper covering, the content of temporal OR tree array is added to this array. Fig.90(16) is example of accommodated structure. This OR tree in the figure is generated as the tree at the upper position to the right of arrow in Fig.78(2) by the upper covering in the figure. Though new OR trees are introduced at the progress of upper covering, trees are taken out sequentially from the left and deleted from the array at the same time.

Identical node register SCR is to accumulate the situation of node covering register NCR every time when upper covering by generally plural exclusive trees applied to an input OR tree succeeds. Fig.90(16) is the example of accommodated structure.

Allelic exclusive tree register ACR is to bundle up into an allelic exclusive tree group. The upper covering result accommodated in identical node register SCR at the completion of entire exclusive tree application and to receive and accumulate the group. As shown before, the expression of allelic exclusive tree is due to the situation that plural trees correspond plural interpretations which situation is analogous to the biological term of allelic.

Besides these arrays and registers a list called "processed node list" to prevent processing duplication of the same OR tree. As this list is not used at the explanation of operation, further explanation is abbreviated.

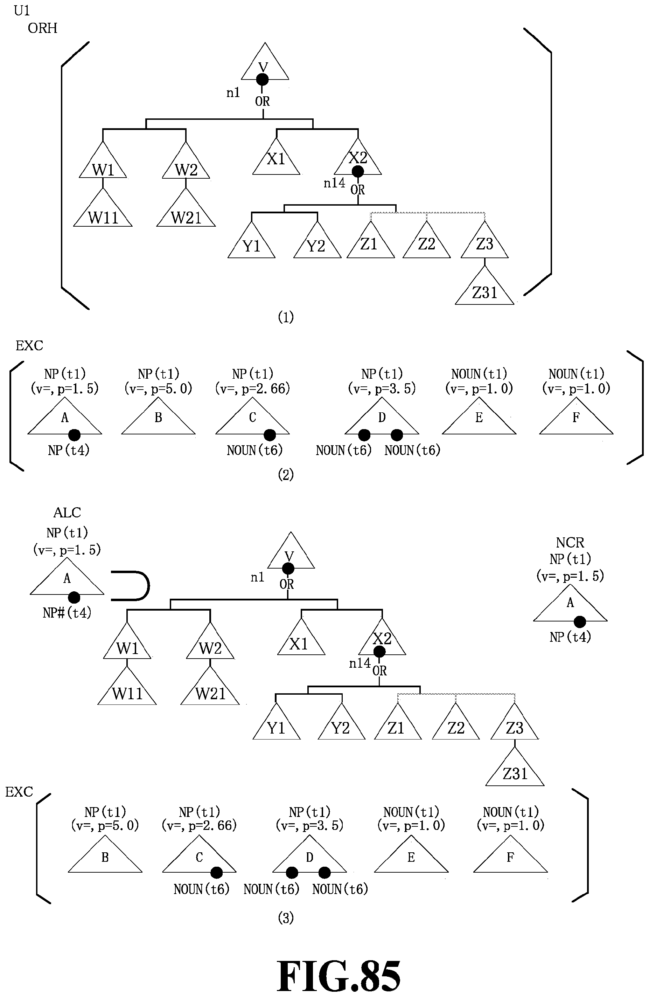

The operation of "U.upper covering module=upper covering part" illustrated at figures from Fig.85 to Fig.118 is composed of 26 processes of U1-U12. First, operation of each process is explained.

The name of process U1 is "input of processing object". The faculty of this process is described as: "An OR tree generated at grammar application part is introduced into OR tree array and initial exclusive tree array which is aggregation of temporal exclusive tree and exclusive tree provide by system is introduced into exclusive tree register EXC. OR tree is introduced into OR tree holding register ORH."

The name of process U2 is "beginning of process". The faculty of this process is descried as: "1st tree is taken out from exclusive tree register EXC and introduced, together with content of OR tree holding register ORH, to processing unit ALC. For the purpose of preservation, 1st tree of exclusive tree register EXC is also introduced to node covering register NCR".

The name of process U3 is "decision on node coincidence". The faculty of this process is described as: "The coincidence between sequence of topmost nodes of exclusive trees and those of OR trees both of which are stored in arithmetic unit ALC is surveyed. When decision is "yes" operation is directed to process U14 to continue the covering operation and when decision is "no" operation is directed to U13 to cope with failure of covering operation".

The name of process U4 is "node pair connection". The faculty of this process is described as: "Covering relation between topmost node number of tree in NCR and that of OR tree in ALC is expressed by sign D and the relation is filled in the node of current node number of exclusive tree in node covering register NCR".

The name of process U5 is "decision of search continuation". The faculty of this process is described as: "This process surveys existence of child node at the OR tree side data in arithmetic unit ALC. When the decision is "yes", operation goes to process U6 to continue covering operation and when decision is "no", the operation goes to U14 to deal with disappearance of covering region".

The name of process U6 is "decision of OR tree shortage". The faculty of this process is described as: "This process surveys existence of child node at the exclusive tree side data in arithmetic unit ALC. When the decision is "yes" because of existence of child nodes at both side, operation goes to process U7 to continue normal covering operation and when decision is "no" because of existence of child node at exclusive tree side whereas absence or shortage of child node at OR tree side, the operation goes to U13 to handle failure of covering".

The name of process U7 is "decision of existence of OR node". The faculty of this process is described as: "This process surveys existence of child OR node at the OR tree side in arithmetic unit ALC. When the decision is "no" because child node is not OR node, operation goes to process U8 to continue normal covering operation and when decision is "yes", the operation goes to U14 to select at least one from lower partial tree array".

The name of process U8 is "decision of coincidence of child node array". The faculty of this process is described as: "This process surveys coincidence between array of topmost nodes at exclusive tree side and that of OR tree side. When the decision is "yes", operation goes to process U9 to continue covering operation and when decision is "no", the operation goes to U13 to handle failure of covering".

The name of process U9 is "generation of child tree pair". The faculty of this process is described as: "Every child tree in exclusive tree side is paired with the child tree of the same order in OR tree side making a tree pair. These pairs are introduced after the right end of meaningful data of unprocessed pair array UPA."

The name of process U10 is "decision of success of upper covering". Processed tree pairs are deleted from original tree pair array and this process surveys successful termination of current stage. Here, the faculty of this process is described as: "This process surveys absence of tree pair in unprocessed pair array UPA as a result of successful termination of current coverage. When the decision is "no", operation goes to process U11 to continue operation and when decision is "yes", the operation goes to U12 to cope with success of covering."

The name of process U11 is "taking out of unprocessed pair". The faculty of this process is described as: "1st pair in unprocessed pair array EPA is taken out and introduced to arithmetic unit ALC overwriting former data."

The name of process U12 is "output of successful covering result". The faculty of this process is described as: "Output of successful covering result is generated. Data in node covering register NCR is introduced in identical node register SCR in the style of left justification. Data in temporal OR tree array TOR is introduced to the right of meaningful data of OR tree array OR. Node covering register NCR, temporal OR tree array TOR and unprocessed pair array UPA are reset."

The name of process U13 is "output of failure of covering". Process U13 is called when upper covering of OR tree by an exclusive tree fails. The faculty of this process is described as: "Output of failure of covering is generated. Processing unit ALC, node covering register NCR, temporal OR tree array TOR and unprocessed pair array UPA are reset."

The name of process U14 is "decision of existence of coverage substructure". The faculty of this process is described as: "Process U14 is called when decision of absence of exclusive tree node to be treated is generated at process U5. When decision is "yes" because substructures still exist after running out of exclusive tree node, operation goes to U15 to generate coverage substructure made of OR tree. When decision is "no" because exclusive tree node and OR tree node run out simultaneously, operation goes to process U10 to treat next pair of exclusive tree and OR tree accommodated in unprocessed pair array."

The name of process U15 is "composition of coverage substructure". The faculty of this process is described as: "At the exclusive tree in node covering register NCR, connecting sign "#" is attached to nodes having the same node numbers as the node numbers of exclusive tree stored in processing unit ALC. Moreover, trees in OR tree side of arithmetic unit ALC are introduced to the right of meaningful data in temporal OR tree array TOR because these trees have the possibility of composing coverage substructure."

The name of process U16 is "spreading of candidate trees assembled by OR node". This process is called after existence decision of OR node at process U7. The faculty of this process is described as: "Insertion of separation sign "OR" are made between each candidate child partial trees and the separated result, as a whole, is stored in selection register ORR overwriting former data."

The name of process U17 is "output of a candidate tree". The faculty of this process is described as: "1st term in selection register ORR is taken out and a pair is made between child partial tree array of the term taken out and child partial tree array in processing unit ALC."

The name of process U18 is "decision of coincidence at candidates". The faculty of this process is described as: "This process surveys the coincidence between child partial tree array of exclusive tree side composed at the preceding process U17 and 1st child partial tree array at selection register ORR. When decision is "yes", continuation of covering operation is possible and operation goes to process U9 and when decision is "no" because present OR tree side is unavailable and operation goes to process U19 to survey next array."

The name of process U19 is "decision of existence of unprocessed child tree". The faculty of this process is described as: "This process surveys existence of partial OR trees in selection register ORR. When decision is "yes", operation goes back to process U17 to deal with next partial OR tree in selection register OR and when decision is "no", operation goes to process U13 which copes with failure of upper covering because the covering of all partial trees has been failed."

The name of process U20 is "decision of end of exclusive tree". The faculty of this process is described as: "This process surveys emptiness of exclusive tree register EXC which accommodates exclusive tree used for covering. When decision is "yes", operation goes to process U21 of completion process of an OR tree and when decision is "no", operation goes to process U26 to take out next exclusive tree from exclusive tree register EXC because upper covering for current OR tree must continue."

The name of process U21 is "end of processing of allelic exclusive trees". The faculty of this process is described as: "As end of covering operating of an OR tree by entire exclusive trees has been detected by process U21, this process bundles coverage substructures in identical node register SCR making an allelic exclusive tree group and puts the group to the right of data in allelic exclusive tree register ACR."

The name of process U22 is "decision of end of OR trees". The faculty of this process is described as: "This process surveys emptiness of OR tree array OR. When decision is "yes", operation goes to U26 completing total activity of "" and when decision is "no", operation goes to process U23 to take out next OR tree from OR tree array OR because OR trees as the objects of processing still remain.

The name of process U23 is "taking out of OR tree". The faculty of this process is described as: "1st OR tree in OR tree array is taken out and introduced to OR tree holding register ORH overwriting former data. The topmost node of taken out OR tree is introduced to processed node list to prevent duplication of processing."

The name of process U24 is "decision of formerly treated node". The faculty of this process is described as: "This process surveys the sameness of the topmost node of OR tree taken out from OR tree array OR and a node in "processed node list". When the decision is "yes", operation goes to process U25 to commence treatment of OR tree taken out and when the decision is "no", operation goes to process U22 to prepare taking out of next OR tree. In the upper covering process, many identical OR trees are generated and this process is to prevent duplication of processing."

The name of process U25 is "commencement of OR tree processing". The faculty of this process is described as: "This process prepares processing of next OR tree after completion of processing of a OR tree. Identical node register SCR is reset and exclusive tree array stored in the system is introduced to exclusive tree register EXC as the initial value for processing of next OR tree."

The name of process U26 is "end of upper covering". The faculty of this process is described as: "This process terminates upper covering operation at the end of treatment of entire OR trees. Finally the upper covering result as shown in Fig.80 is accumulated in allelic exclusive register ACR."

Now, the mutual relations between these 26 processes are illustrated.

Processes U2 to U11 surveys coincidence between an exclusive tree and partial tree including topmost node of OR tree. When not coincident, operation goes to process U13 of failure operation and when coincident, operation goes to process U12 of success operation.

Success operation of U12 is saving operation of generated OR tree and Failure operation of U13 is deleting operation of data generated at processing of current exclusive tree.

When covering by a leaf node of exclusive tree happens during the process U2-U11 operation, generated coverage substructure is introduced to temporal OR tree array TOR and mark "#" is attached to the leaf at the occasion of the generation of coverage substructure. When no OR tree is generated, operation goes to U10 doing nothing. Above operation is conducted by processes U14 and U15.

Expansion of lower trees of OR node is necessary when the tree coincidence survey of processes U2 - U8 reaches at OR node of OR tree side. When covering by the exclusive tree fails for all lower trees, operation goes to process U13 of failure operation and when success, operation goes to process U9 to continue coincidence survey. These operations are conducted by processes U16 - U19.

The coincidence survey of processes U2 -U11 and accompanying processes U14 - U19 conduct upper covering to an OR tree by an exclusive tree. The start point of this operation is point "A" enclosed by a rectangle or input of process U2 and end point is input of process u20 where the outputs of process U1 of failure and process U2 of success merge. This point is point "B" enclosed by a rectangle.

An allelic exclusive tree group is obtained by bundling the output of upper covering of an OR tree by entire exclusive trees. The starting point of this operation is process U23 taking out an OR tree and end point is "yes" decision of process U20 to detect completion of covering by entire exclusive trees. Process U21 bundles upper covering result by entire exclusive trees and sends to allelic exclusive tree register ACR.

Process U23 surveys whether the OR tree is already treated or not directly after the taking out of an OR tree by process U24. When the decision is "no", the OR tree taken out is discarded and operation goes to process U23 to take out next OR tree via process U22. When decision is "yes", operation goes to U25 to continue handling of the OR tree taken out by process U23.

While process U20 continues to generate decision of "no", operation circles supplementing exclusive trees to allelic exclusive tree group the loop composed of processes U2 - U11, process U12 or U13 and process U21.

Process U1 conducts the operation of receiving the input OR tree together with entire exclusive trees. After start of operation, receiving of OR tree is conducted by process U23.

Process U22 surveys the completion of upper covering of entire OR trees by entire exclusive trees. When the decision is "no", operation goes to process U23 of introduction of next OR tree and when the decision is "yes", operation goes to process U26. Process U26 is to terminate the operation of "U.upper covering module" shown in Fig.81. By the operation of "U.upper covering module", the allelic exclusive group array is generated in allelic exclusive register ACR.

The above is the mutual relation of processes in "U.upper covering module" of Fig.81.

The upper covering process of "U.upper covering module" shown in Fig.81 has been explained using Fig.77 -Fig.80. Abbreviated expression of tree structures is necessary at detailed explanation of "U.upper covering module".

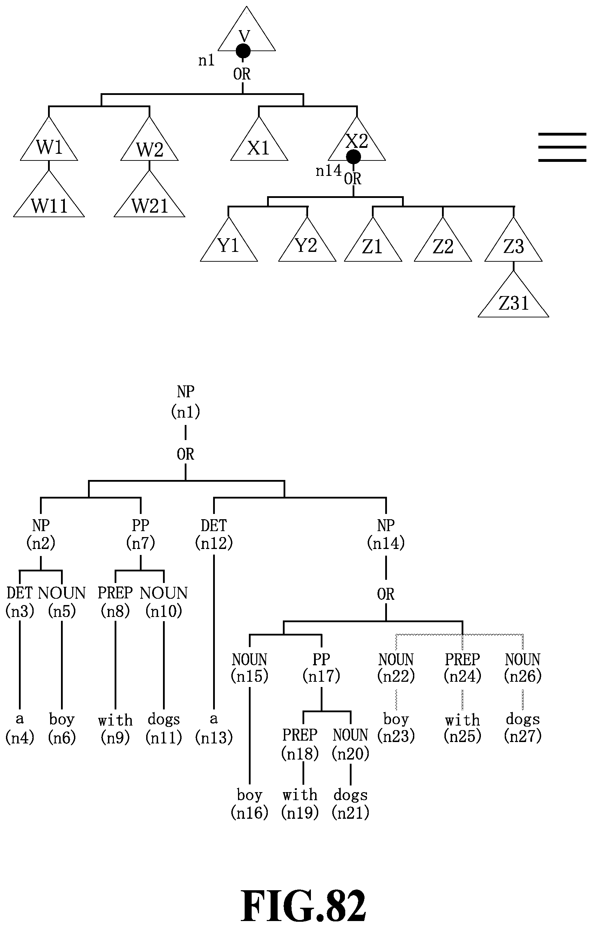

Fig.82 shows the relation between original expression of OR tree which is only OR tree used and it's abbreviated expression. The portion to the left of congruence symbol "≡" is abbreviated expression and to the right is original expression.

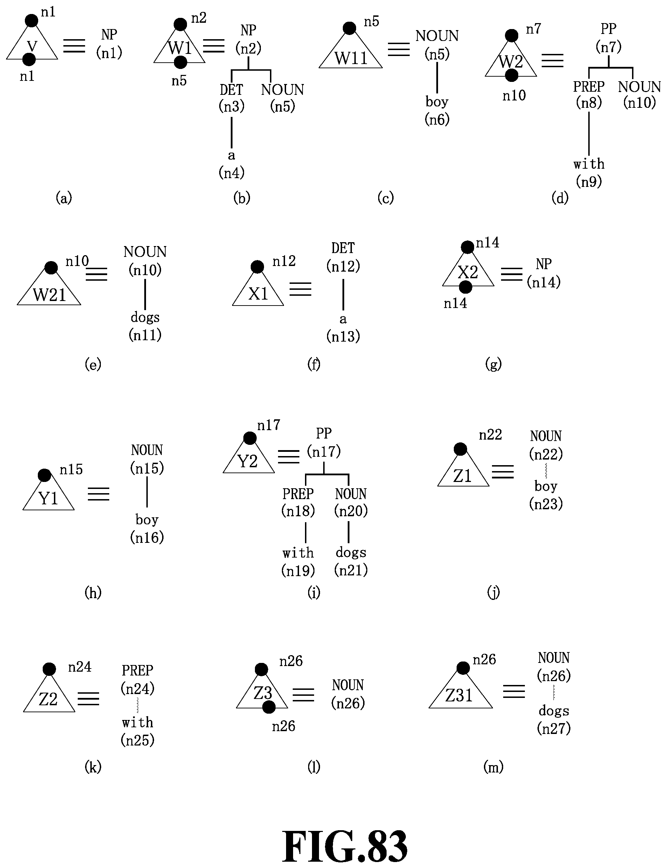

Fig.83 shows corresponding relations between composing parts of OR tree in Fig.82 illustrated in original expression and that illustrated in abbreviated expression. Portions to the left of congruent symbols "≡" is abbreviated expressions and to the right is original expressions.

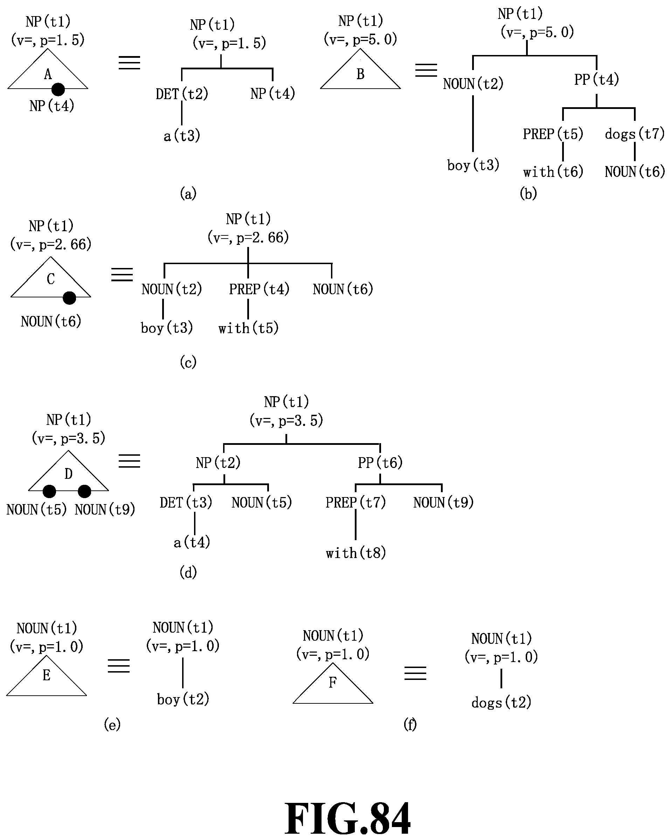

Fig.84 shows corresponding relations between original expression of exclusive trees and abbreviated expression of exclusive trees that is necessary for explanation hereafter. Trees to the left of congruent symbols "≡" are abbreviated expressions and to the right is original expressions. As seen before, OR tree has node numbers beginning with alphabetical letter "n" and exclusive tree has node numbers beginning with alphabetical letter "t". Each exclusive tree has its tree value but tree value of exclusive tree is called pattern value hereafter. As sum of pattern values covering an OR tree is called the tree value of the OR tree. This is the measure to avoid confusion. The pattern value of exclusive tree is designated to be possessed by its topmost node. Reflecting this situation, the topmost node of exclusive tree of original expression has the representation "(v=, p=numerical value)" enclosed by parentheses and positioned after node number. To the portion of "numerical value" the pattern value of the exclusive tree is introduced. To the portion after "v=", tree value which is sum of pattern values of covering exclusive trees is introduced during covering operation and the value is "uncertain" at the initial stage. At abbreviated expression of exclusive tree, the topmost node has also the same information as at original expression. As a result, the information at the topmost node of exclusive tree is a little complicated compared with that of abbreviated expression of OR tree. These exclusive trees A - F are expressed by triangles with their names.

Hereafter, the operation of "U.upper covering module" in Fig.81 at the occasion when exclusive trees of Fig.84 are applied to OR tree of Fig.82 and Fig.83, is traced. Each substantial stage begins with process number of the process in Fig.81 and figures in Fig.85 - Fig118 are referred during description. Each stage substantial begins with title composed of process number enclosed by rectangle parentheses followed by description of substantial operation causing change of accommodated data in arrays and registers. Non-substantial stages are described among substantial stage with titles.

Process number of Fig.81 is placed at the upper left of each figure in Fig.85 - Fig.118 and array or register names are placed at upper left of data. Arrays of trees are enclosed with rectangle parentheses accompanying array or register names at the upper left positions.

At the description of the operation of "U.upper covering module", description is made from the standpoint of the topmost node of treated tree. Accordingly, the description of "child node" or "array of child trees" is "childe node" or "child tree array" viewed from the topmost node of the treated tree. Here is the description.

[U1]The OR tree of Fig.85(1) is introduced to OR tree holding resister ORH. The exclusive trees of Fig.85(2) are introduced in exclusive tree register EXC.

[U2]The first term of data in exclusive tree register EXC shown in Fig.85(2) and OR tree in OR tree holding resister ORH shown in Fig.85(1) are connected by "⊃" symbol and introduced to arithmetic unit ALC. The first term of data in exclusive tree register EXC shown in Fig.85(2) is introduced to node covering register NCR. As a result, data in abbreviated expression of ALC, NCR and EXC shown in Fig.85(3) are obtained.

Though abbreviated expression is used in Fig.83 and Fig.84, explanation is made using original expression for a while. Abbreviated expression is used when description of large structure becomes necessary with the progress of covering operation. The accommodated data in arithmetic unit ALC and node covering register NCR illustrated in Fig.85(3) is described as shown in Fig.86(4).

As topmost nodes of covering exclusive tree in Fig.86(4) and covered OR tree are both NP and coincide with each other, the decision of process U3 is "yes" and operation goes to process U4.

[U4]The covering relation of the topmost node of OR tree by the topmost node of exclusive tree is explicitly expressed in the topmost node of exclusive tree in node covering register NCR. The result is shown in Fig.86(5).

Next process of process U5 generates decision "yes" because the exclusive tree has child node as shown in Fig.86(5). The succeeding process of process U6 generates decision "yes" because also OR tree has child nodes. Process U7 generates decision "yes" because the child node is an OR node and operation goes to process U16.

[U16]This process spreads the lower structure into plural child partial tree arrays and separates them by OR symbol and introduces the result in selection register ORR. The accommodated data in selection register ORR is shown in Fig.87(6).

Process U17 situated next composes a pair of first child partial tree array in selection register ORR and child partial tree array of exclusive tree in arithmetic unit ALC and process U18 surveys the coincidence of topmost nodes. As the topmost node array of child partial trees of exclusive tree is "DET NP" and that of OR tree is "NP PP", process U18 generates decision "no" and operation goes to U19. Process U19 generates decision "yes" because selection register ORR still has data and operation goes back to process U17.

Process U17 situated next composes a pair of first child partial tree array in selection register ORR which is the 2nd term in Fig.87(6) and partial tree array of exclusive tree in arithmetic unit ALC and process U18 surveys the coincidence of topmost nodes. As the topmost node array of child partial trees of exclusive tree is "DET NP" and that of OR tree is also "DET NP", process U18 generates decision "yes" and operation goes to U9.

[U9]From the child tree array of the exclusive tree in arithmetic unit ALC shown in Fig.86(4) and that of OR tree in selection register ORR, pairs of child node of the same order in respective array are made and introduced to unprocessed pair array UPA as shown in Fig.87(7).

Process U10 situated next generates decision "no" as there is unprocessed pair and operation goes to process U11.

[U11]The first term of unprocessed pair array UPA is taken out and introduced to arithmetic unit ALC overwriting former data. The result generated is the accommodated data shown in Fig.88(8).

[U4]Operation goes back to process U4. The covering relation of topmost node of exclusive tree and topmost node of OR tree in ALC is explicitly expressed. The structure in Fig.88(9) is obtained as a result.

The next process U5 generates the decision "yes" because exclusive tree has child nodes as shown in Fig.88(8). The next process U6 generates the decision "yes" because OR tree also has child node. Process U7 generates decision "no" because child node is not OR node and process goes to process U8. As the topmost node array of exclusive tree side and OR tree side coincides operation goes to process U9.

[U9}The pairs composed of child trees of the same order at exclusive tree side and OR tree side are introduced at the right end of unprocessed pair array UPA. The result is shown in Fig.88(10).

The next process U10 generates the decision of "no" because there are unprocessed covering pair and operation goes to process U11.

[U11]The first term of unprocessed pair array UPA is taken out and overwrite arithmetic unit ALC. The accommodated result is shown in Fig.89(11).

[U4]Operation goes back to process U4. The covering relation of topmost node number of exclusive tree and topmost node of OR tree is explicitly expressed in the topmost node of exclusive tree in node covering register NCR. The result is shown in Fig.89(12).

Process U5 situated next generates the decision of "no" because exclusive tree has no child node and next process of process U14 generates the decision of "yes" because OR tree has child node and operation goes to process U15.

[U15]This process attaches the "#" symbol to the node in node covering register NCR having the same node number as node number of the single node exclusive tree in ALC and also introduces tree in OR tree side of ALC to the right of meaningful information in temporal OR tree array TOR. As a result, the tree in NCR and the accommodated data in temporal OR tree register NCR shown in Fig.89(13) are obtained. The "#" symbol is attached to the node t4 covering node n14 of OR tree in NCR. The data in TOR is generated as the candidate of coverage substructure. At the occasion when the current upper covering succeeds, this becomes a portion of coverage substructure.

Process U10 situated next generates decision "no" because there is unprocessed covering pair in unprocessed pair array UPA and operation goes to process U11.

[U11]The first term of unprocessed pair unit is taken out and introduced to arithmetic unit ACL overwriting former data. The accommodated result is shown in Fig.90(14).

[U4]Operation goes back to process U4. The covering relation between node number of topmost node of exclusive tree and topmost node number of OR tree in ALC is explicitly expressed in the topmost node of exclusive tree in node covering register NCR. As a result, the structure in Fig.90(15) is obtained.

Next process of process U5 generates decision of "no" because exclusive tree has no child node as shown in Fig.90(14) and succeeding process U14 generates decision "no" because the OR tree has no childe node and operation goes to process U10. As the unprocessed pair array is empty, the decision of U10 is "yes" and operation goes to process U12.

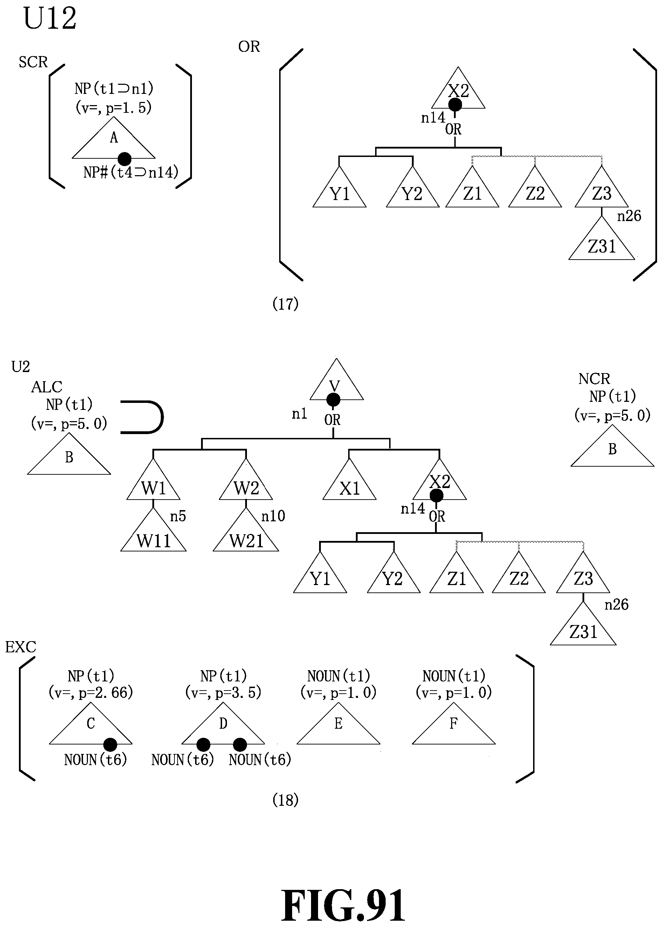

[U12]This process deals with information of successful upper covering. As upper covering succeeded, the data in node covering register NCR and temporal OR tree array are perpetuated. In specific, the data in node covering register NCR is introduced in identical node register SCR in the way of left justification and the data in temporal OR tree array TOR is introduced to the right of meaningful information in OR tree array OR. The register and arrays NCR, TOR and UPA used hitherto to obtain the above result are reset. The result so far obtained is shown in Fig.90(16). The explanation is made hitherto using original expression for the convenience of explanation and the description of Fig.90(16) is, never the less, expressed in abbreviated expression of Fig.91(17) using relations in Fig.84.

Next process U20 generates decision "no" as exclusive tree register EXC has value as seen in Fig.85(3) and operation goes back to process U2.

[U2]The first term in exclusive tree register EXC shown in Fig.85(3) and data in OR tree holding resister ORH are connected by symbol "⊃" and introduced into arithmetic unit ALC and the first term in Fig.85(3) is introduced to node covering register NCR. As a result, data in ALC, NCR and EXC shown in Fig.91(18) is obtained.

Exclusive tree and OR tree in arithmetic unit are respectively shown in Fig.84(b) and in figures of Fig.83. As both of exclusive tree and OR tree have child nodes, decisions at both of succeeding process U5 and process U8 are "yes". Next process U7 directs the operation to U16 because child node of OR tree is OR node. The data in selection register ORR is the same as the trees in Fig.87(6). Operation U17 takes out partial child tree array in arithmetic unit ALC and the first term of OR tree side in Fig.87(6). As topmost node array of exclusive tree side is "NOUN PP" as seen in Fig.84(b) and that of OR tree side is "NP PP" the decision of process U18 is "no". As there are tree pairs in selection register ORR, the decision at process U19 is "yes" and operation goes pack to process U13 treating upper covering failure. Here resisters and array ACL, NCR, TOR and UPA of former calculation are reset. And operation goes back to process U2.

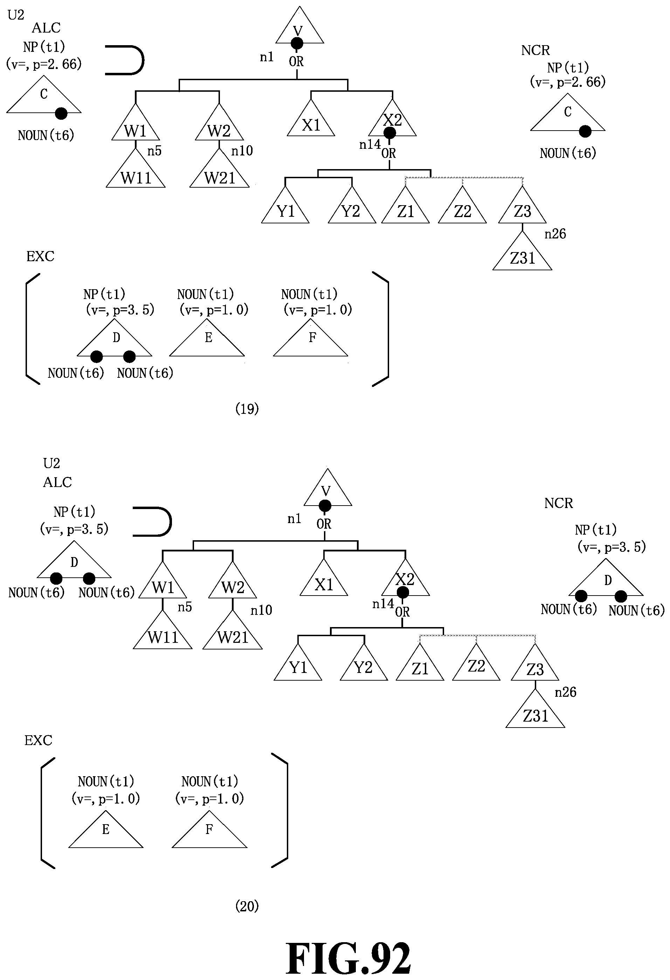

[U2]The first term of exclusive tree register EXC shown in Fig.91(18) and tree in OR tree holding register ORH shown in Fig.85(1) are connected by "⊃" symbol are introduced into arithmetic unit ALC. Also the first term of exclusive tree register EXC shown in Fig.91(18) is introduced into node covering register NCR. Then data in ALC, NCR and EXC shown in Fig.92.(19) is obtained.

Exclusive tree and OR tree in arithmetic unit ALC are respectively shown in Fig.84(c) and figures in Fig.83. As both of exclusive tree and OR tree have child node, the succeeding decision at process U5 and process U6 is "yes". Next process U7 directs the operation to U16 because child node of OR tree is OR node. The data in selection register ORR is the same as the trees in Fig.87(6). Operation U17 takes out partial child tree array in arithmetic unit ALC and the 1st term of OR tree side in Fig.87(6). As topmost node array of exclusive tree side is "NOUN PREP NOUN" as seen in Fig.84(b) and that of OR tree side is "NP PP" the decision of process U18 is "no". As there are tree pairs in selection register ORR, the decision at process U19 is "yes" and operation goes pack to process U17. Process U17 takes out topmost node array in arithmetic unit ALC and 2nd term of OR tree side shown in Fig.87(6). As topmost node array is still "NOUN PREP NOUN" as shown in Fig.83(c) and topmost node array of OR tree side is "DET NP" as shown in 1st term of Fig.87(b), the decision of process U18 is "no". As there is no data at selection register ORR, operation goes to process U13 of upper covering failure.

[U13] Registers and arrays ACL, NCR, TOR and UPA used at former calculation are reset. The operation goes back to U2.

[U2]The 1st term of exclusive tree register in Fig.92(19) and data in OR tree holding register ORH shown in Fig.85(1) are connected by symbol "⊃" and introduced in arithmetic unit ALC. The 1st term of exclusive tree register in Fig.92(19) is introduced into node covering register NCR. As a result, the data illustrated in abbreviated expression of ALC, NCR and EXC shown in Fig.92(20) is obtained.

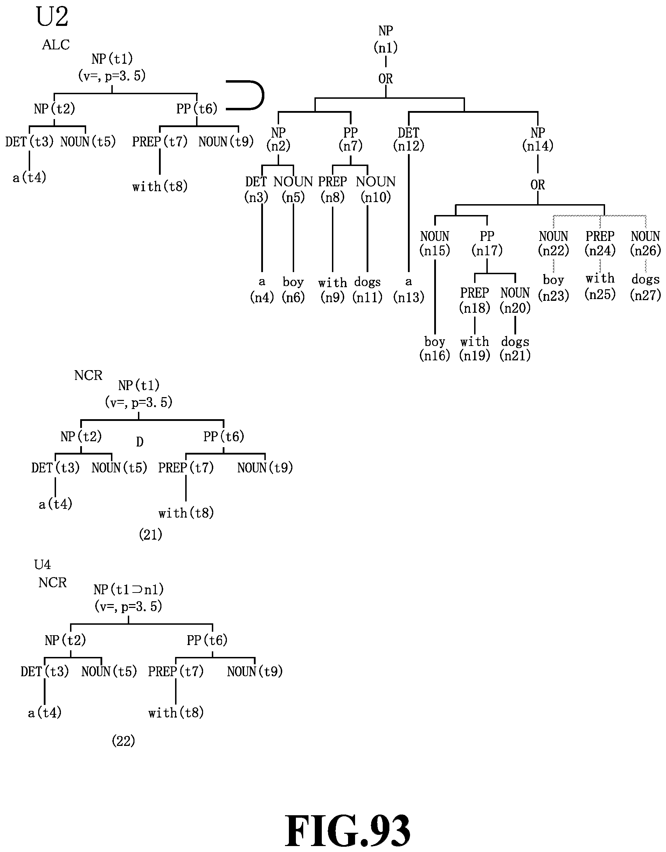

For the convenience of explanation, the explanation hereafter is made with the use of original expression. The exclusive tree and OR tree in arithmetic unit ALC illustrated in original expression are respectively shown in Fig.84(d) and figures in Fig.83. The data in arithmetic unit ALC and node covering register NCR expressed in abbreviated expression in Fig.92(20) becomes that of Fig.93(21) illustrated in original expression.

As both of topmost nodes of exclusive tree covering and OR tree covered are NP and they coincide, the decision at process U3 is "yes" and operation goes to process U4.

[U4]The covering relation between the topmost node number of exclusive tree and topmost node number of OR tree is explicitly shown in the topmost node of exclusive tree in node covering register NCR.

The succeeding process U5 generates decision "yes" because exclusive tree has child nodes and as seen in Fig.93(21). Next process U6 generates decision "yes" because also OR tree has child nodes. Process U7 generates decision "yes" and operation goes to process U16.

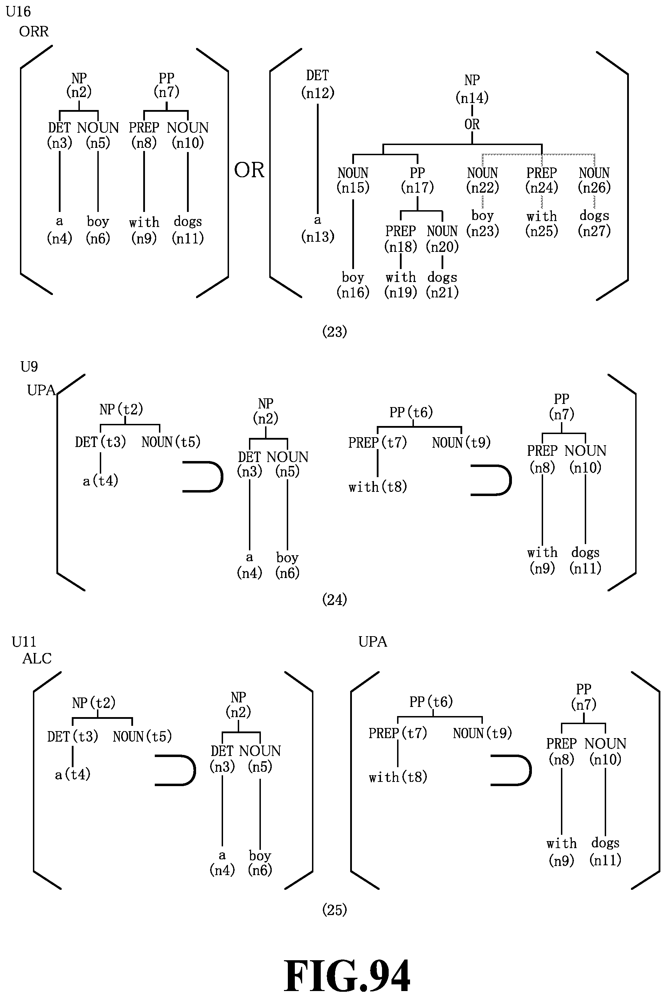

[U16]This process spreads the lower structure into plural child partial tree arrays and separates them by OR symbol and introduces the result in selection register ORR. The accommodated data in selection register ORR is shown in Fig.94(23). This data is the same as that in Fig.87(6) of the case of exclusive tree "A".

Process U17 situated next composes a pair of first child partial tree array in selection register ORR and child partial tree array of exclusive tree in arithmetic unit ALC and process U18 surveys the coincidence of topmost nodes. As the topmost node array of child partial trees of exclusive tree is "NP PP" and that of OR tree is also "NP PP", process U18 generates decision "yes" and operation goes to U9.

[U9]From the child tree array of the exclusive tree in arithmetic unit ALC shown in Fig.93(21) and that of OR tree in selection register ORR shown in Fig.94(23), pairs of child node of the same order in respective array are made and introduced to unprocessed pair array UPA as shown in Fig.94(24).

As there is unprocessed pair in unprocessed pair array, process U10 generates decision "no" and operation goes to process U11.

[U11]The first term of unprocessed pair array UPA is taken out and overwrite arithmetic unit ALC. The accommodated result is shown in Fig.94(25).

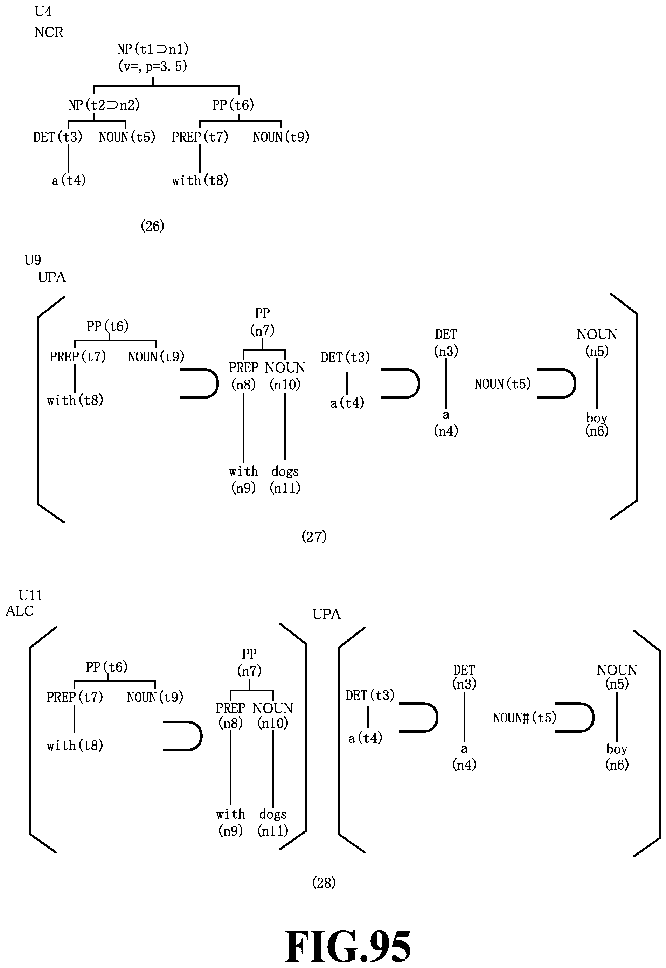

[U4]Operation returns to process U4. The covering relation between the topmost node number of exclusive tree and topmost node number of OR tree is explicitly shown in the topmost node of exclusive tree in node covering register NCR obtaining the structure of Fig.95(26).

The succeeding process U5 generates decision "yes" because exclusive tree has child nodes as seen in Fig.95(25). Next process U6 generates decision "no" because OR tree has no child nodes and operation goes to process U9.

[U9]From the child tree array of the exclusive tree in arithmetic unit ALC and that of OR tree in selection register ORR, pairs of child node of the same order in respective array are made and introduced to unprocessed pair array UPA. As a result data in Fig.95(27) is obtained.

The next process U10 generates the decision of "no" because there are unprocessed covering pair and operation goes to process U11.

[U11]The first term of unprocessed pair unit UPA is taken out and introduced to arithmetic unit ACL overwriting former data. The accommodated result is shown in Fig.95(28).

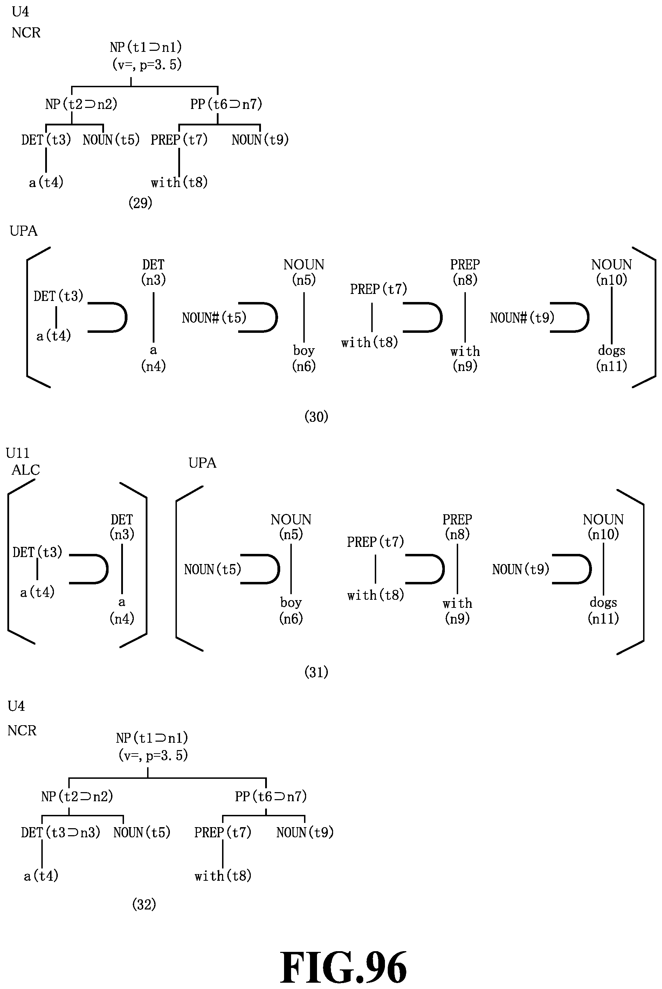

[U4]Operation returns to process U4. The covering relation of the topmost node of OR tree by the topmost node of exclusive tree is explicitly expressed in the topmost node of exclusive tree in node covering register NCR. The result is shown in Fig.96(29).

Process U5 situated next generates the decision of "yes" because exclusive tree has child node and next process of process U6 generates the decision of "yes" because OR tree has child node. The next process U7 generates decision "no" because child node is not OR node and operation goes to process U8. As the topmost node array of exclusive tree side and OR tree side coincide, operation goes to process U9.

[U9]From the child tree array of the exclusive tree in arithmetic unit ALC and that of OR tree in selection register ORR, pairs of child node of the same order in respective array are made and introduced to unprocessed pair array UPA as shown in Fig.96(30).

The next process U10 generates the decision of "no" because there are unprocessed covering pair and operation goes to process U11.

[U11]The first term of unprocessed pair array UPA is taken out and overwrite arithmetic unit ALC. The accommodated result is shown in Fig.96(31).

[U4]Operation goes back to process U4. The covering relation of topmost node number of exclusive tree and topmost node of OR tree is explicitly expressed in the topmost node of exclusive tree in node covering register NCR. The result is shown in Fig.96(32).

The succeeding process U5 generates decision "yes" because exclusive tree has child nodes and as seen in Fig.96(31). Next process U6 generates decision "yes" because also OR tree has child nodes. Process U7 generates decision "no" and operation goes to process U9. As topmost node array of exclusive tree side and OR tree side is identical, operation goes to process U9.

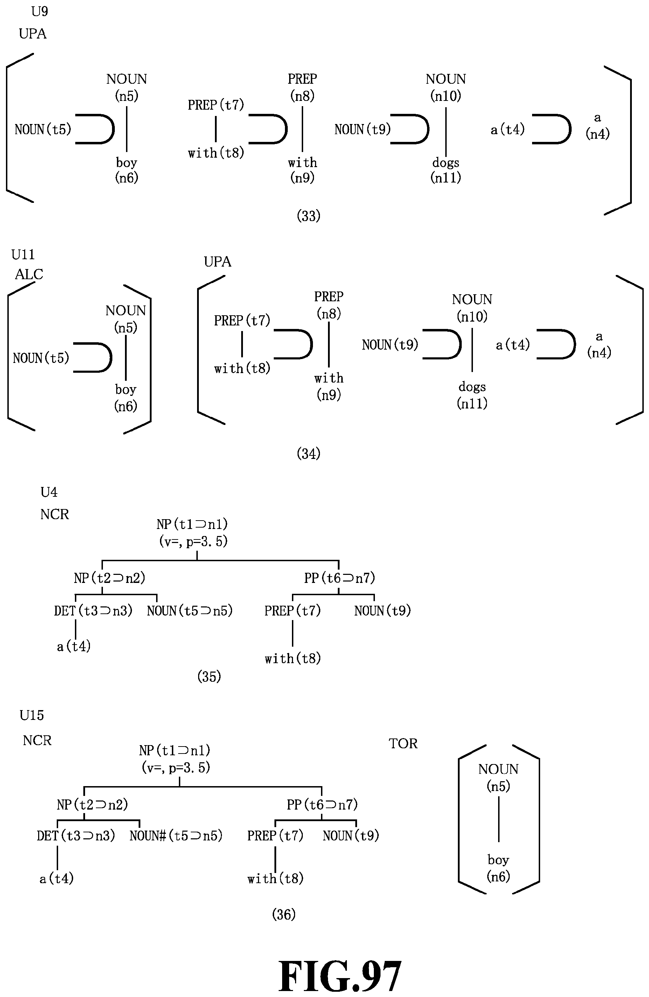

[U9]From the child tree array of the exclusive tree in arithmetic unit ALC and that of OR tree, pairs of child node of the same order in respective array are made and introduced to the right end of unprocessed pair array UPA as shown in Fig.97(33).

As there is unprocessed pair in unprocessed pair array, process U10 generates decision "no" and operation goes to process U11.

[U11]The first term of unprocessed pair array UPA is taken out and introduced to arithmetic unit ALC overwriting former data. The accommodated result is shown in Fig.97(34).

[U4]Operation returns to process U4. The covering relation between the topmost node number of exclusive tree and topmost node number of OR tree is explicitly shown in the topmost node of exclusive tree in node covering register NCR obtaining the structure of Fig.97(35).

Process U5 situated next generates the decision of "no" because exclusive tree shown in Fig.97(34) has no child node and next process of process U14 generates the decision of "yes" because OR tree shown in Fig.97(34) has child node and operation goes to process U15.

[U15]This process attaches the "#" symbol to the node in node covering register NCR having the same node number as node number of the single node exclusive tree in ALC and also introduces tree in OR tree side of ALC to the right of meaningful information in temporal OR tree array TOR. As a result, the tree in NCR and the accommodated data in temporal OR tree register NCR shown in Fig.97(36) are obtained. The "#" symbol is attached to the node t5. The data in TOR is generated as the candidate of coverage substructure. At the occasion when the current upper covering succeeds, this becomes a portion of coverage substructure.

Process U10 situated next generates decision "no" as there are unprocessed pairs and operation goes to process U11.

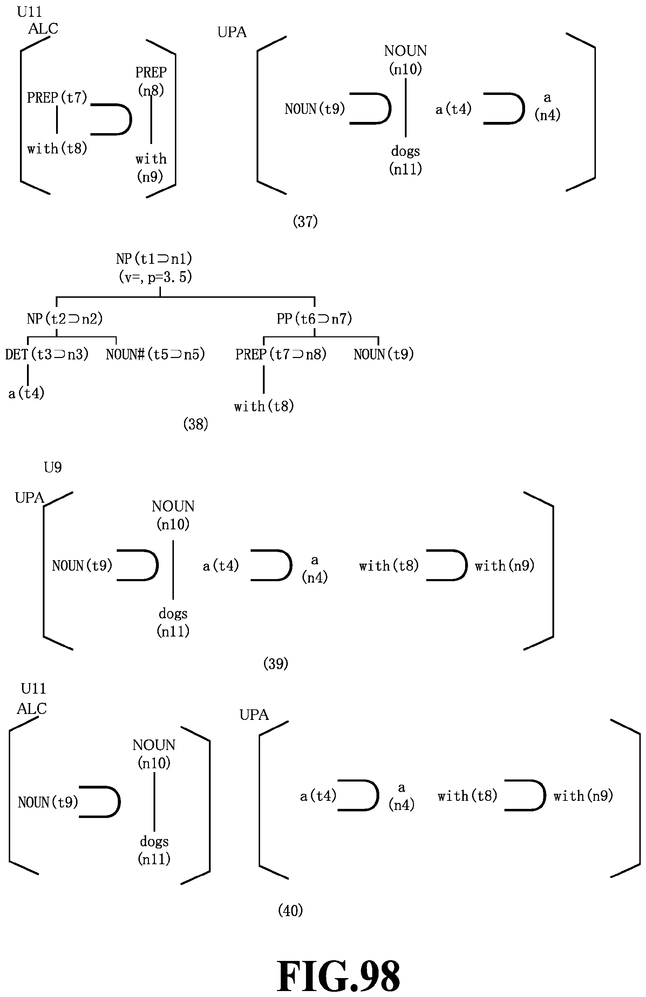

[U11]The first term of unprocessed pair array UPA is taken out and introduced to arithmetic unit ALC overwriting former data. The result generated is the accommodated data shown in Fig.98(37).

[U4]The covering relation of the topmost node of OR tree by the topmost node of exclusive tree is explicitly expressed in the topmost node of exclusive tree in node covering register NCR. The result is shown in Fig.98(38).

The next process U5 generates the decision "yes" because exclusive tree has child nodes as shown in Fig.98(37). The next process U6 generates the decision "yes" because OR tree also has child node. Process U7 generates decision "no" because child node is not OR node and process goes to process U8. As the topmost node arrays of exclusive tree side and OR tree side coincide operation goes to process U9.

[U9} The pairs composed of child trees of the same order at exclusive tree side and OR tree side are introduced at the right end of unprocessed pair array UPA. The result is shown in Fig.98(39).

The next process U10 generates the decision of "no" because there are unprocessed covering pair and operation goes to process U11.

[U11]The first term of unprocessed pair array UPA is taken out and introduced to arithmetic unit ALC overwriting former data. The accommodated result is shown in Fig.98(40).

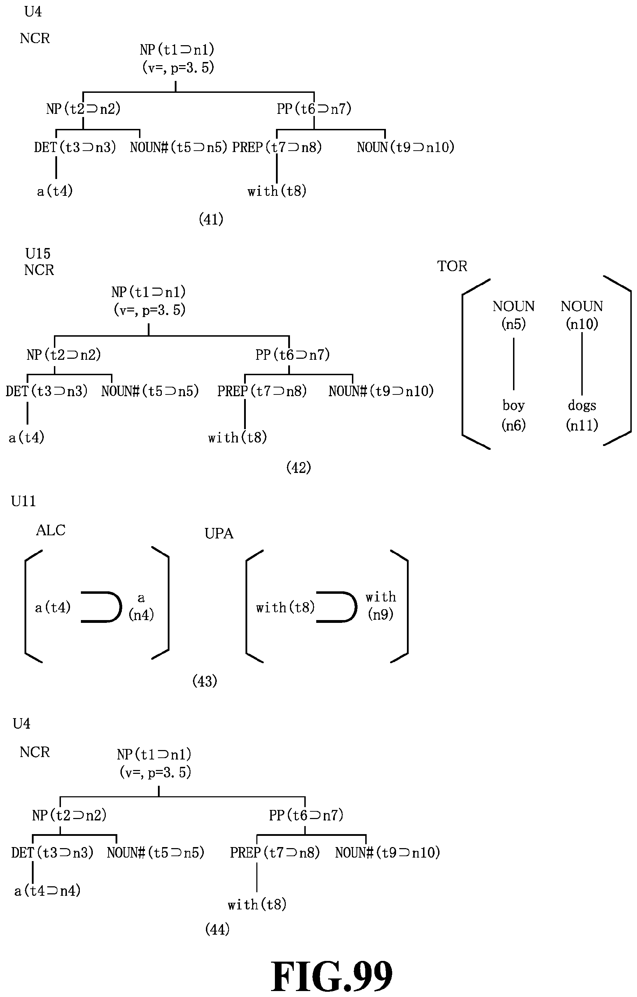

[U4]Operation goes back to process U4. The covering relation of topmost node of exclusive tree and topmost node of OR tree in ALC is explicitly expressed in the topmost node of node covering register NCR. The structure in Fig.99(41) is obtained as a result.

Next process of process U5 generates decision of "no" because exclusive tree has no child node as shown in Fig.98(40) and succeeding process U14 generates decision "no" because the OR tree has childe node as shown in Fig.98(40) and operation goes to process U15.

[U15]This process attaches the "#" symbol to the node in node covering register NCR having the same node number as node number of the single node exclusive tree in ALC and also introduces tree in OR tree side of ALC to the right of meaningful information in temporal OR tree array TOR. As a result, the tree in NCR and the accommodated data in temporal OR tree register NCR shown in Fig.99(42) are obtained. The "#" symbol is attached to the node t5 covering node n14 of OR tree in NCR. The data in TOR is generated as the candidate of coverage substructure. At the occasion when the current upper covering succeeds, this becomes a portion of coverage substructure.

Process U10 situated next generates decision "no" because there is unprocessed covering pair in unprocessed pair array UPA and operation goes to process U11.

[U11]The first term of unprocessed pair unit is taken out and introduced to arithmetic unit ACL overwriting former data. The accommodated result is shown in Fig.99(43).

[U4]Operation returns to process U4. The covering relation between node number of topmost node of exclusive tree and topmost node number of OR tree in ALC is explicitly expressed in the topmost node of exclusive tree in node covering register NCR. As a result, the structure in Fig.99(44) is obtained.

Next process of process U5 generates decision of "no" because exclusive tree has no child node as shown in Fig.99(43) and succeeding process U14 generates decision "no" because the OR tree has no childe node and operation goes to process U10. As the unprocessed pair has value, the decision of U10 is "no" and operation goes to process U11.

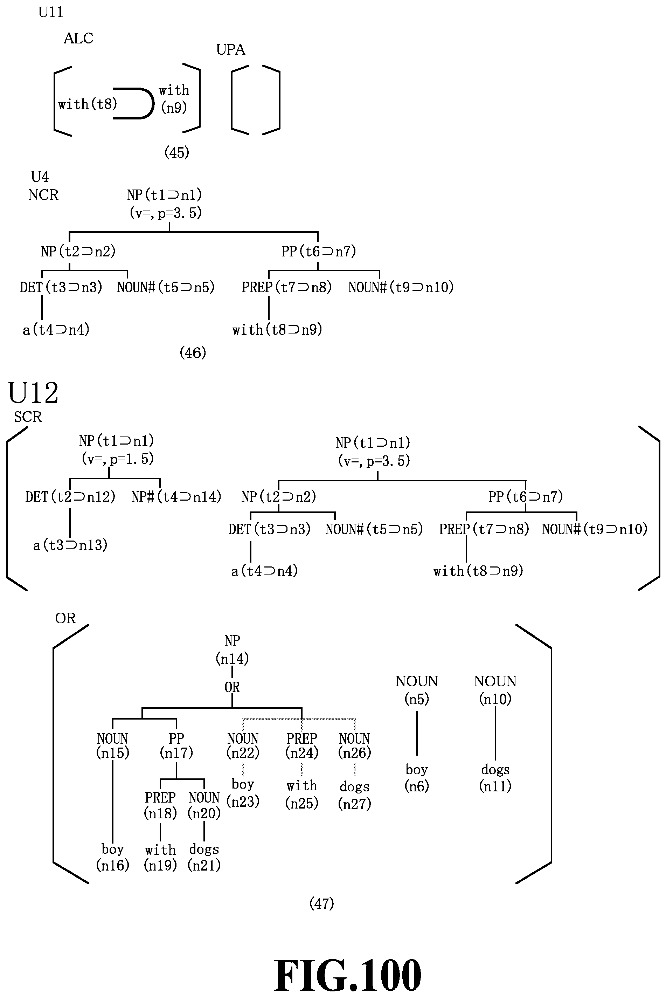

[U11]The first term of unprocessed pair array UPA is taken out and introduced to arithmetic unit ALC overwriting former data. The accommodated result is shown in Fig.100(45).

[U4]Operation goes back to process U4. The covering relation of topmost node number of exclusive tree and topmost node of OR tree is explicitly expressed in the topmost node of exclusive tree in node covering register NCR. The result is shown in Fig.100(46).

Next process of process U5 generates decision of "no" because exclusive tree has no child node as shown in Fig.99(43) and succeeding process U14 generates decision "no" because the OR tree has no childe node and operation goes to process U10. As the unprocessed pair array is empty, the decision of U10 is "yes" and operation goes to process U12.

[U12]This process deals with information of successful upper covering. As upper covering succeeded, the data in node covering register NCR and temporal OR tree array are perpetuated. In specific, the data in node covering register NCR is introduced in identical node register SCR in the way of left justification and the data in temporal OR tree array TOR is introduced to the right of meaningful information in OR tree array OR. The register and arrays NCR, TOR and UPA used hitherto to obtain the above result are reset. The result so far obtained is shown in Fig. 100(47).

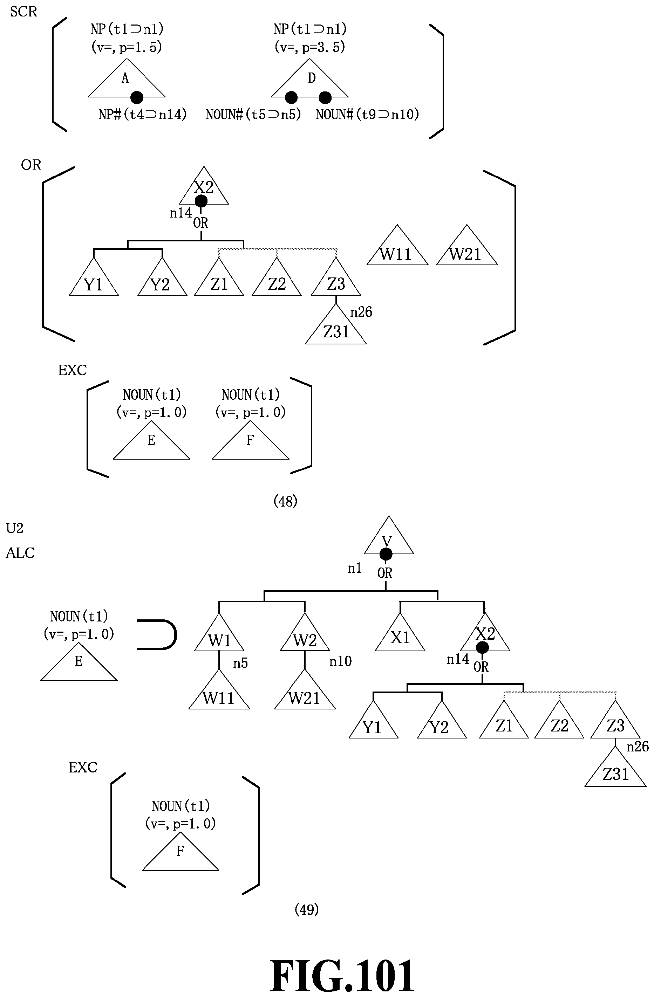

The explanation is made hitherto using original expression for the convenience of explanation and the description of Fig.100(47) is, never the less, expressed in abbreviated expression of Fig.101(48) using relations in figures in Fig.83 and Fig.84. Here, the data in exclusive register EXP shown in Fig.92(20) after take out of exclusive tree D is also shown.

Next process U20 generates decision "no" as exclusive tree register EXC has value as seen in Fig. 100(47) and operation goes back to process U2.

[U2]The first term of exclusive tree register EXC shown in Fig.101(48) and tree in OR tree holding register ORH shown in Fig.85(1) are connected by " ⊃ " symbol are introduced into arithmetic unit ALC. Then data in ALC, and EXC shown in Fig.101(49) is obtained. Data in node covering register NCR is not explained because this register is reset directly after. As topmost node of exclusive tree side is NOUN and that of OR tree side is NP, the decision here is "no" and operation goes to process U13 treating failure of upper covering.

[U13] Registers and arrays ACL, NCR, TOR and UPA used at former calculation are reset. The operation goes back to U2 because exclusive register still has data.

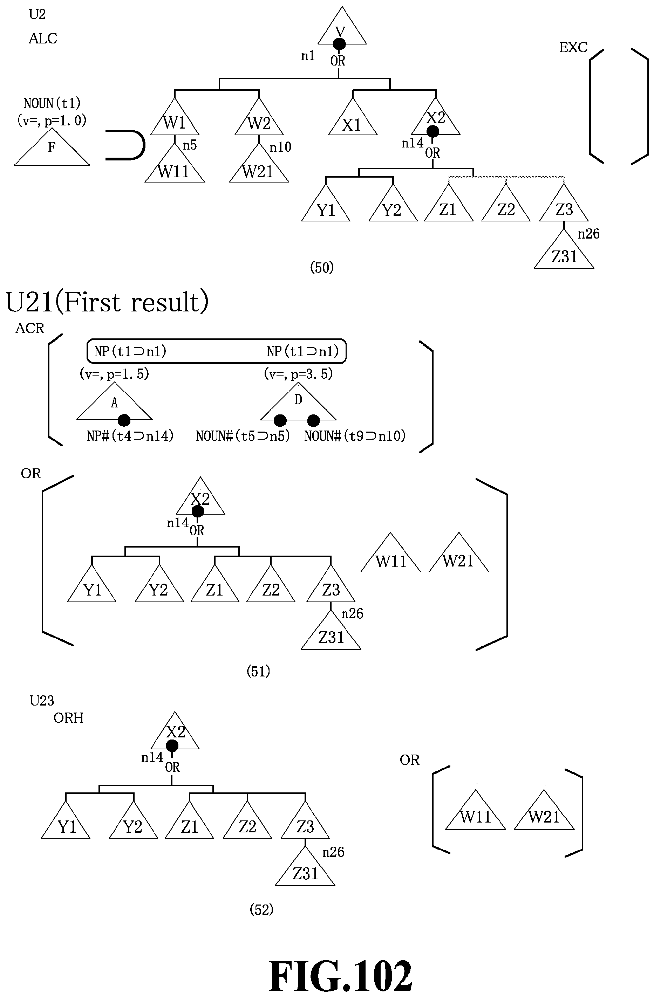

[U2]The first term in exclusive tree register EXC shown in Fig.101(48) and data in OR tree holding resister ORH shown in Fig.85(1) are connected by symbol "⊃" and introduced into arithmetic unit ALC. As a result, data in ALC and EXC expressed in abbreviated expression as shown in Fig.102(50) is obtained.

As topmost node of exclusive tree side is NOUN and that of OR tree side is NP, the decision here is "no" and operation goes to process U13 treating failure of upper covering.

[U13] Registers and arrays ACL, NCR, TOR and UPA used at former calculation are reset.

As exclusive tree register EXC is empty, the decision of process U20 is "yes" and operation goes to process U21. This finalizes application of entire exclusive trees in Fig.85(2) to OR tree in Fig.85(1).

[U21]At this process, generally plural upper covering exclusive trees existing in identical node register SCR which is generated by application to one OR node are bundled in a group and introduced into allelic exclusive tree register ACR. As a result, upper covering of OR tree in Fig.85(1) by exclusive trees in Fig.85(2) generates data in allelic exclusive register ACR and data in OR tree array OR in Fig.102(51). As seen in Fig.102(51), the bundling is expressed by encircling topmost nodes. A group of upper covering exclusive trees bundled in one group in allelic exclusive tree register ACR is enumeration of entire covering results of a OR tree topmost node of which is chosen from input OR node and is the allelic exclusive tree group belonging to the topmost node. The way of construction of allelic exclusive tree group is the merit of "U.upper covering module" of this patent application.

Next process U22 generates decision "no" because value exists in OR tree array OR as seen in Fig.102(51) and operation goes to process U23.

[U23]Process U23 takes out first term of OR tree array and introduces to OR tree holding resister ORH. As a result, data in OR tree register OR, OR tree holding register ORH showin in Fig.102(52) is obtained. OR tree holding register holds the first term of OR tree array OR until processing of entire temporal exclusive tree completes.

Process U24 situated next surveys whether the topmost node of OR tree taken out to OR tree holding register OR is not treated before. The decision is "yes" and operation goes to process U25.

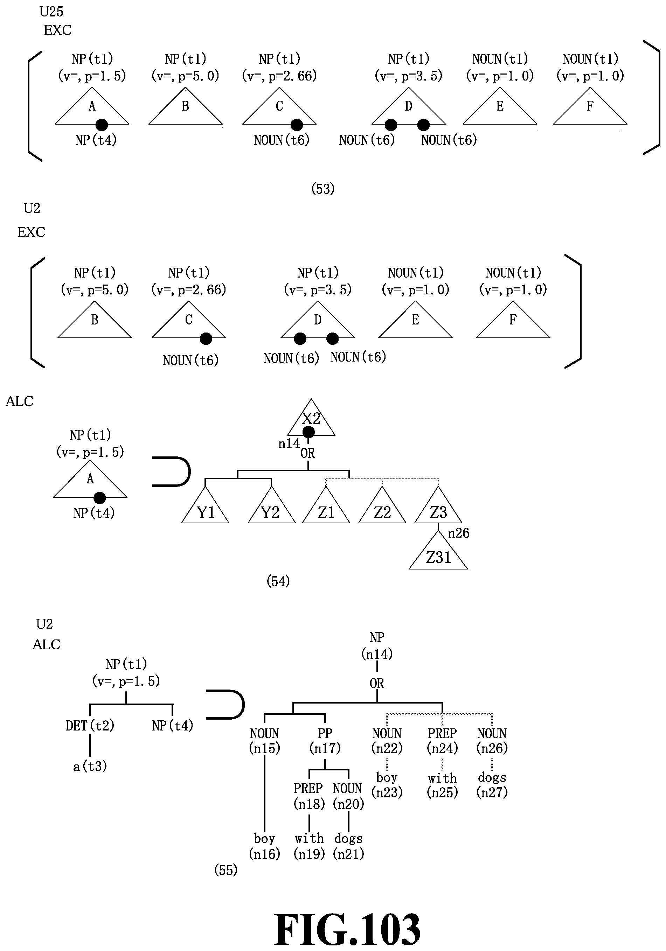

[U25]This process resets the data in identical node register SCR utilized at former OR tree processing and array of exclusive trees of Fig.85(2) stored in the system is introduced again to exclusive tree register EXC. The data in exclusive tree register is shown in Fig.103(53). This data is same as that of Fig.85(2).

Operation returns to process U2.

[U2]The first term of exclusive tree register EXC and tree in OR tree holding register ORH are connected by "⊃" symbol are introduced into arithmetic unit ALC which becomes to have data of Fig.103(54). Data in node covering register NCR is not explained because this register is reset directly after. The data in arithmetic unit ALC shown in Fig.103(54) is illustrated in abbreviated expression that is illustrated in original expression as shown in Fig.103(55). The original expression of exclusive tree B is shown in Fig.84(b) and that of OR tree is shown in Fig.100(47).

From Fig.103(55), it is found that topmost nodes of exclusive tree and OR tree are the same and that topmost node array of partial child trees is of exclusive tree is (DET NP) and that of OR tree is (NOUN PP) or (NOUN PREP NOUN). Namely, topmost node array of partial child tree of exclusive tree does not coincide with both of that of OR tree. After process U2, the operation traces, on the flow chart of Fig.81, the path of process U3 - process U4 - process U5 - process U16 - process U17 - process U18(decision "no") - process U19 - process U17 - process U18(decision "no") - process U19 - process U13 resulting in the failure of upper covering of Fig.103(54) or Fig.103(55). The process U18 appearing first on the path surveys coincidence of (DET NP) of exclusive tree and (NOUN PP) of OR tree and that appearing next surveys (DET NP) of exclusive tree and (NOUN PREP NOUN) of OR tree.

Leaving process U13, operation returns to process U20 because exclusive tree register EXP has data.

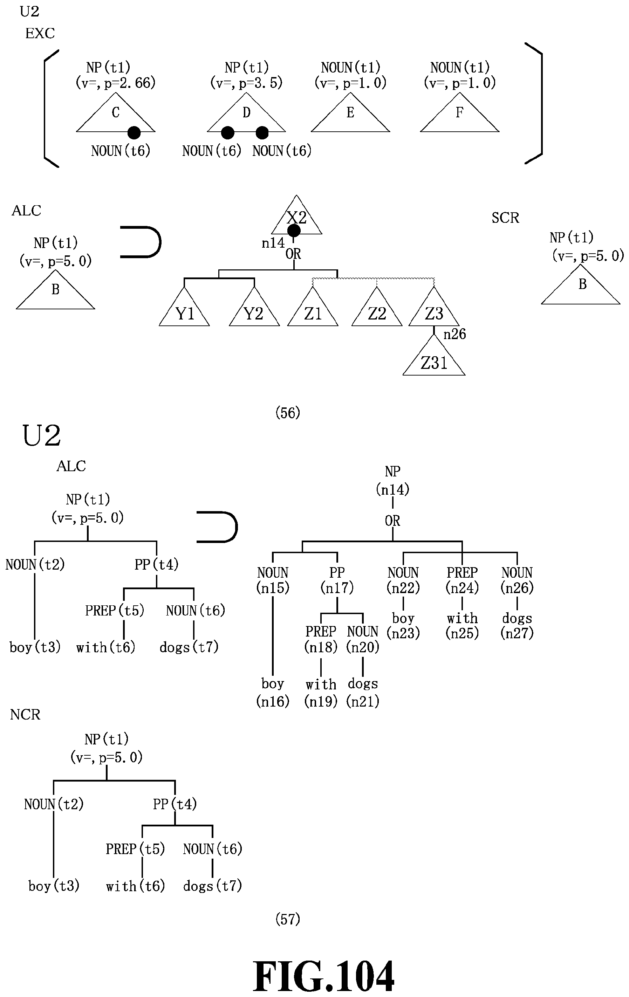

[U2]Fig.104(56) shows the data in exclusive tree register EXC, arithmetic unit ALC and node covering register NCR after first term of EXC is taken out. The data illustrated in original expression of arithmetic unit ALC and node covering register NCR is shown in Fig. 104(57). Exclusive tree B is shown in Fig.84(b) and OR tree is shown in Fig.100(47).

As seen in Fig.104(57), topmost node of covering exclusive tree and that of covered OR tree coincide resulting in decision of "yes" at process U3 and move to process U4.

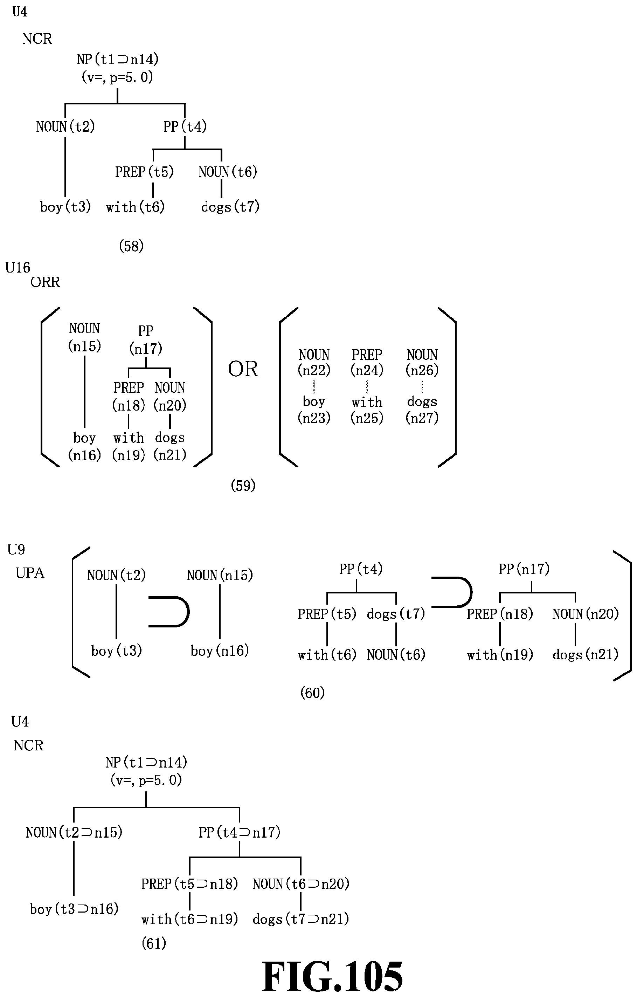

[U4]The covering relation of the topmost node of OR tree by the topmost node of exclusive tree is explicitly expressed in the topmost node of exclusive tree in node covering register NCR. The result is shown in Fig. 105(58).

Next process of process U5 generates decision "yes" because the exclusive tree has child node as shown in Fig.105(58). The succeeding process of process U6 generates decision "yes" because also OR tree has child nodes. Process U7 generates decision "yes" because the child node is an OR node and operation goes to process U16.

[U16]This process spreads the lower structure into plural child partial tree arrays and separates them by OR symbol and introduces the result in selection register ORR overwriting former data. The accommodated data in selection register ORR is shown in Fig.105(59).

Process U17 situated next composes a pair of first child partial tree array in selection register ORR and child partial tree array of exclusive tree in arithmetic unit ALC and process U18 surveys the coincidence of topmost nodes. As the topmost node array of child partial trees of exclusive tree is "NOUN PP" and that of OR tree is also "NOUN PP", process U18 generates decision "yes" and operation goes to U9.

[U9]From the child tree array of the exclusive tree in arithmetic unit ALC shown in Fig.104(57) and that of OR tree in selection register ORR shown in Fig.105(59), pairs of child node of the same order in respective array are made and introduced to unprocessed pair array UPA as shown in Fig.105(60).

Hereafter, operation circulates the loop of process U9, process U10, process U11, process U4, process U5, process U& and process U9 with the use of unprocessed pair array UPA. During the circulation, explicit expression of covering relation is introduced to a node in covering register NCR every time when operation passes process U4. Fig.105(61) shows the data in node covering register NCR after 7 times passage of process U4.

Then U10 detects that there is no pair of temporal exclusive tree and OR tree and generates decision of "yes" meaning success of upper covering.

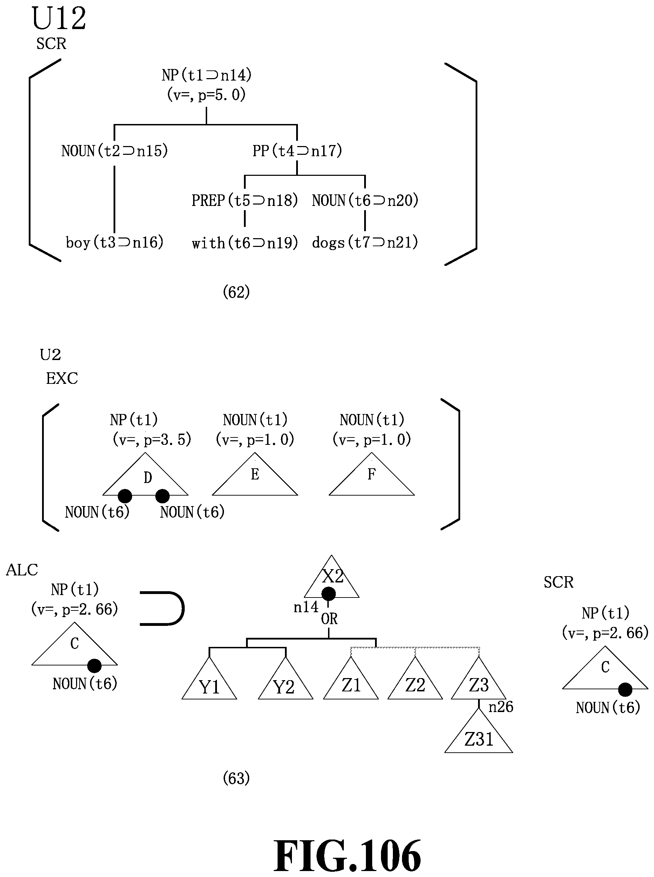

[U12]This process introduces the data of node covering register NCR into identical node register SCR. The result is shown in Fig.106(62).

As decision of process U20 is "no", operation returns to process U2.

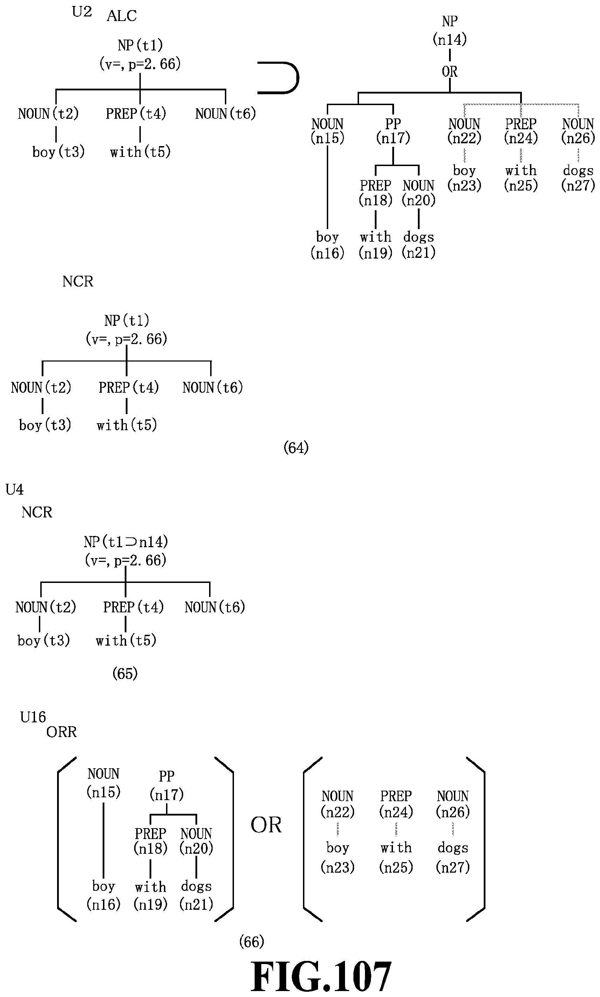

[U2]Fig.106(63) shows the data in exclusive tree register EXC, arithmetic unit ALC and node covering register NCR after and exclusive tree is taken out from exclusive tree register EXC. The tree in Fig.6(63) is illustrated in abbreviated expression. The data in arithmetic unit ALC and node covering register NCR illustrated in original expression are shown in Fig.107(64). Exclusive tree is shown in Fig.84(c) and OR tree is shown in Fig.100(47).

The topmost node of covering exclusive tree and that of covered OR tree are both NP and coincide as seen in Fig.107(64) and the decision at process U3 is "yes" directing to process U4.

[U4]The covering relation between the topmost node number of exclusive tree and topmost node number of OR tree is explicitly shown in the topmost node of exclusive tree in node covering register NCR. As a result, the tree in Fig.107(65) is obtained.

The succeeding process U5 generates decision "yes" because exclusive tree has child nodes as seen in Fig. 107(65). Next process U6 generates decision "yes" because also OR tree has child nodes. Process U7 generates decision "yes" and operation goes to process U16.

[U16]This process spreads the lower structure into plural child partial tree arrays and separates them by OR symbol and introduces the result in selection register ORR overwriting former data. The accommodated data in selection register ORR is shown in Fig. 107(66).

Process U17 situated next composes a pair of first child partial tree array in selection register ORR and partial tree array of exclusive tree in arithmetic unit ALC and process U18 surveys the coincidence of topmost nodes. As the topmost node array of child partial trees of exclusive tree is "NOUN PREP NOUN" and that of OR tree is also "NOUN PP", process U18 generates decision "no" and process U19 generated decision "yes" and operation returns to U17.

As the topmost node array of child partial trees of exclusive tree is "NOUN PREP NOUN" and that of OR tree is also "NOUN PREP NOUN", process U18 generates decision "yes" and operation goes to process U9.

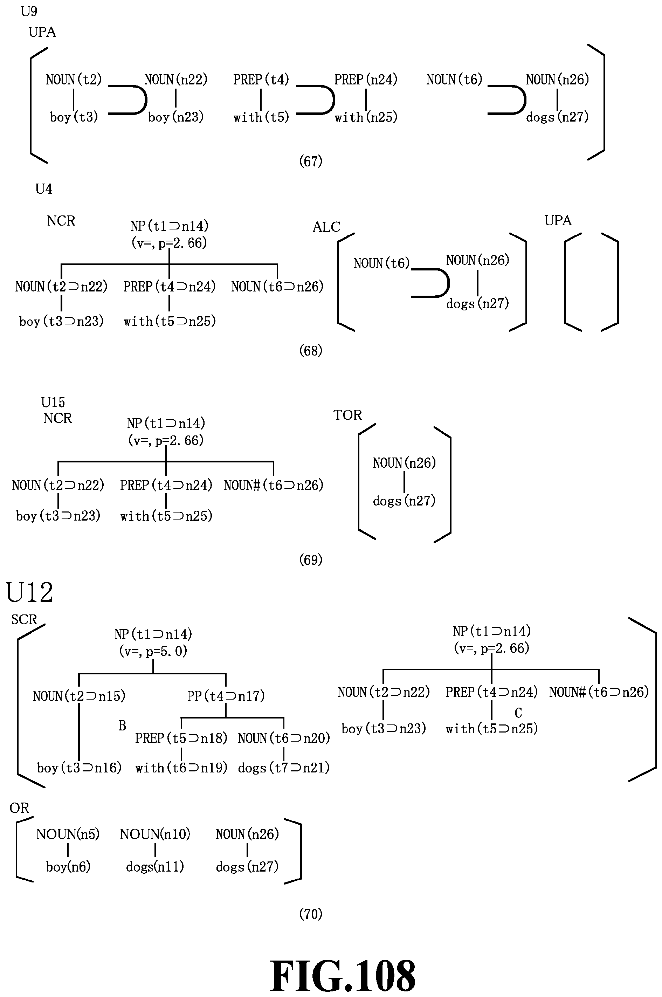

[U9]From the child tree array of the exclusive tree in arithmetic unit ALC shown in Fig. 107(64) and that of OR tree at the 2nd term of selection register ORR shown in Fig. 107(66), pairs of child node of the same order in respective array are made and introduced to unprocessed pair array UPA as shown in Fig. 108(67).

Hereafter, operation circulates the loop of process U9, process U10, process U11, process U4, process U5, process U& and process U9 with the use of unprocessed pair array UPA. Fig. 108(68) shows the data in node covering register NCR, arithmetic unit ALC and unprocessed pair array UPA after 5 times passage of process U4.

The decision of next process U5 is "no" because there is no child node at exclusive tree side and decision of process U14 is "yes" as there are child nodes and operation goes to process U15.

[U15]This process attaches the "#" symbol to the node in node covering register NCR having the same node number as node number of the single node exclusive tree in ALC and also introduces tree in OR tree side of ALC to the right of meaningful information in temporal OR tree array TOR. As a result, the tree in NCR and the accommodated data in temporal OR tree register NCR shown in Fig.108(69) are obtained.

As unprocessed pair array UPA is empty the decision of process U10 is "yes" directing to process U12.

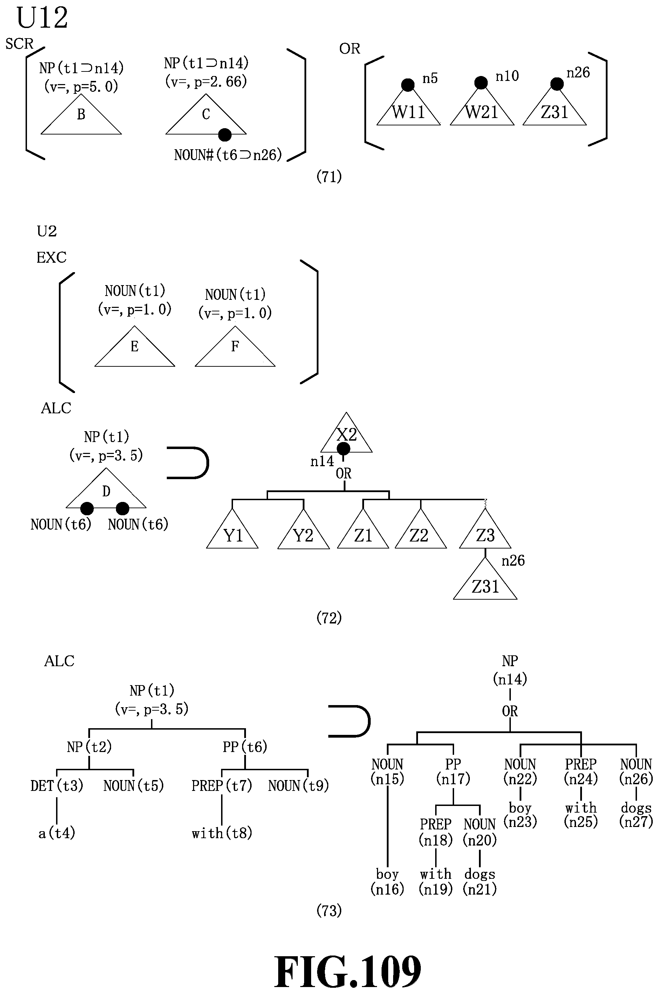

[U12]The data in node covering register NCR is introduced in identical node register SCR and the data in temporal OR tree array TOR is introduced to OR tree array OR. The result illustrated in original expression is shown in Fig.108(70). The abbreviated result having relation of Fig.83 and Fig.84 with original illustration is Fig.109(71).

As decision of process U20 is "no", process returns to process U2.

[U2]As shown in Fig.109(72), the first term of data taken out from exclusive tree register EXC and OR tree in OR tree holding resister ORH are connected by " ⊃ " symbol and introduced to arithmetic unit ALC. Description of node covering register is abbreviated because it is reset directly after. Data in ACL in Fig.109(72) is illustrated in abbreviated expression and the ACL data illustrated in original expression is shown in Fig.109(73). The original expression of exclusive tree D is shown in Fig.84(d) and original expression of OR tree is shown in Fig.100(47).

From Fig.109(73), it is found that topmost nodes of exclusive tree and OR tree are the same and that topmost node array of partial child trees exclusive tree is (NP PP) and that of OR tree is (NOUN PP) or (NOUN PREP NOUN). Namely, topmost node array of partial child tree of exclusive tree does not coincide with both of that of OR tree. After departing process U2, the operation traces, on the flow chart of Fig.81, the path of process U3 - process U4 - process U5 - process U16 - process U17 - process U18(decision "no") - process U19 - process U17 - process U18(decision "no") - process U19 - process U13 resulting in the failure of upper covering of Fig.109(72) or Fig.109(73). The process U18 appearing first on the path surveys coincidence of (NP PP) of exclusive tree and (NOUN PP) of OR tree and that appearing next surveys (NP PP) of exclusive tree and (NOUN PREP NOUN) of OR tree.

After process U13 operation goes to U2 that generates decision "no" because exclusive tree EXC has value and operation returns to process U2.

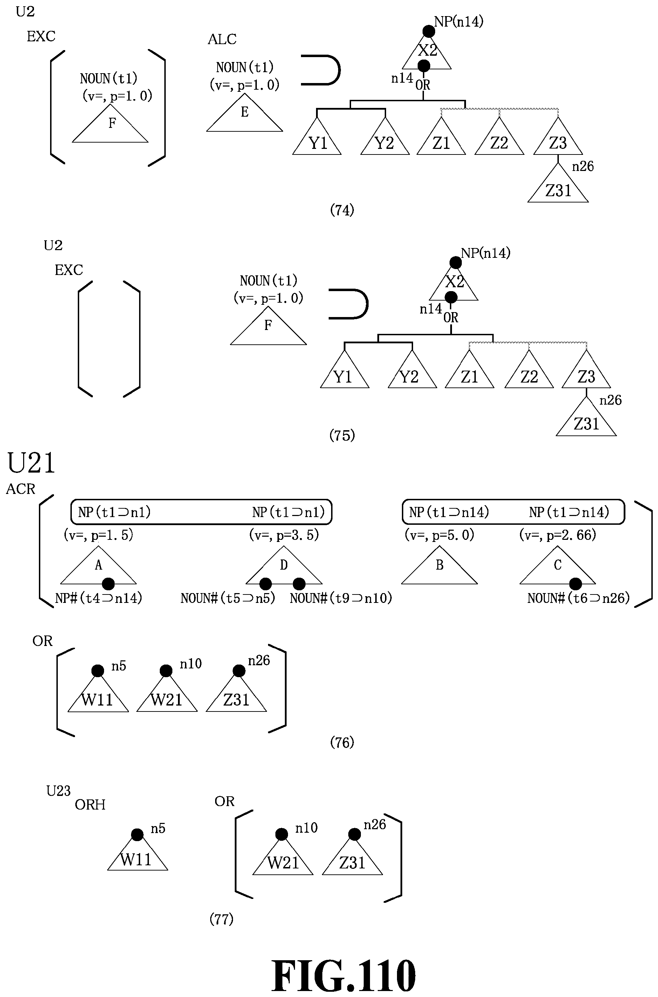

[U2]As shown in Fig.110(74) in abbreviated expression, the first term of data taken out from exclusive tree register EXC and OR tree in OR tree holding resister ORH are connected by " ⊃" symbol and introduced to arithmetic unit ALC.

As topmost nodes at exclusive tree side and OR tree side in arithmetic unit ALC are different, the decision of process U3 situated next is "no" and operation goes to process U13 treating covering failure.

[U13]Here entire data generate at the operation on exclusive D deleted.

As there is still data in exclusive tree register EXC, the process U20 generates decision "no" and operation returns to process U2.

[U2]As shown in Fig. 110(75 in abbreviated expression, the first term of data taken out from exclusive tree register EXC and OR tree in OR tree holding resister ORH are connected by " ⊃" symbol and introduced to arithmetic unit ALC.

As topmost nodes at exclusive tree side and OR tree side in arithmetic unit ALC are different, the decision of process U3 situated next is "no" and operation goes to process U13 treating covering failure.

[U13]Here entire data generate at ACL, NCR, TOR and UPA during processing on exclusive tree D is reset. As exclusive tree EXC is empty, the process U20 situated next generates decision of "yes" and operation goes to process U21.

[U21]Here, An allelic exclusive tree group is obtained by bundling the generally plural exclusive trees stored in identical node register SCR and introduced to allelic exclusive tree register ACR. The data in exclusive tree register ACR and OR tree array OR shown in Fig. 110(76) is obtained as a result of application of OR tree at the first term of Fig. 100(47) to exclusive tree in Fig.85(2). As seen in Fig.110(76), bundling is expressed by encircling topmost nodes of the exclusive trees. The data in allelic exclusive tree register ACR here is composed of adding aggregation of data at Fig.109(71) to data in ACL at Fig.102(51), The present data in OR tree array is data in OR tree array in Fig.109(71), which is newest.

As OR tree array OR is not empty, the decision of process U22 is "no" and operation goes to process U23.

[U23] Process U23 takes out first term of OR tree array and introduces to OR tree holding register ORH. The data in OR and ORH generated by the process is shown in Fig.110(77).

As OR tree node n5 has not been treated yet, the decision of process U24 is "yes" and operation goes to process U25.

[U25]The exclusive tree set in Fig.85(2) is introduced in exclusive tree register EXC.

Then operation returns to process U2.

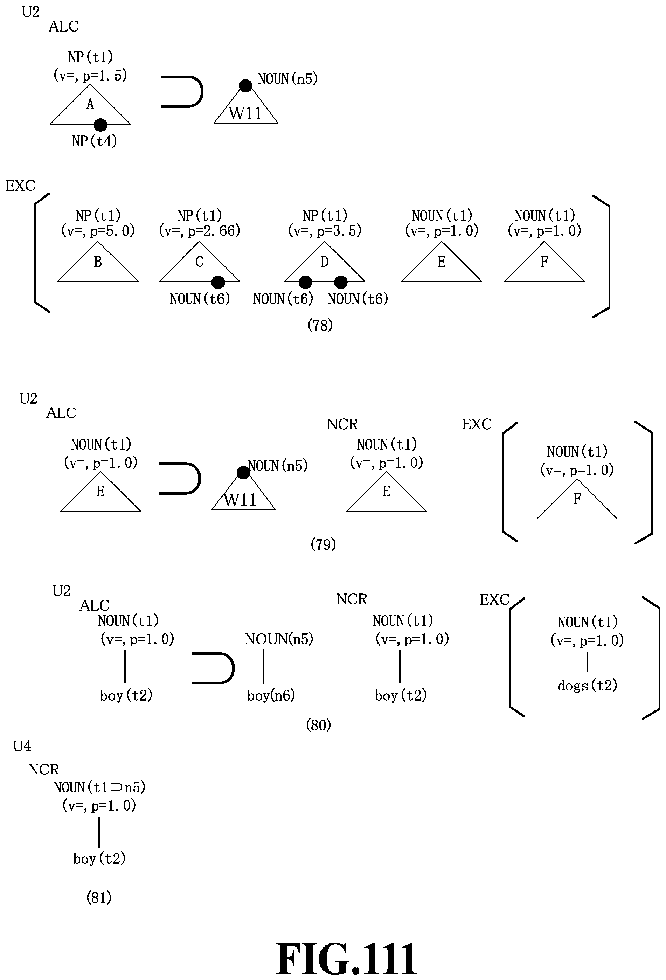

[U2]As shown in Fig.111(78), the first term of data taken out from exclusive tree register EXC and OR tree in OR tree holding resister ORH are connected by " ⊃" symbol and introduced to arithmetic unit ALC. Though this figure is illustrated in abbreviated expression, the topmost node of OR tree W11 is explicitly expressed.

As topmost nodes of exclusive tree side and OR tree side are different, the decision of process U3 is "no" and operation goes to process U13 and entire data related to exclusive tree S is eliminated. Next process U20 generates decision "no" as there is data in exclusive tree register EXC and operation returns to process U2.

The above process is repeated for exclusive trees B, C and D and reaches to process U2.

[U2]The data illustrated in abbreviated expression in arithmetic unit ALC, node covering register NCR and exclusive register EXC is shown in Fit. 111(79). The original expression obtained by Fig.83 and Fig.84 is shown in Fig.111(80).

As topmost nodes coincide, process U3 generates decision "yes" and operation goes to process U4.

[U4]The covering relation of the topmost node of OR tree by the topmost node of exclusive tree is explicitly expressed in the topmost node of exclusive tree in node covering register NCR. The result is shown in Fig. 111(81).

As exclusive tree has a child node as seen in Fig. 111(81), process U5 situated next generates decision "yes". As OR tree has a child node, process U6 situated next generates decision "yes". As the child node is not OR node, process U7 generates decision "no" and operation goes to process U8. As topmost nodes of child trees are both "boy" and identical, process U8 generates decision "yes" and operation goes to process U9.

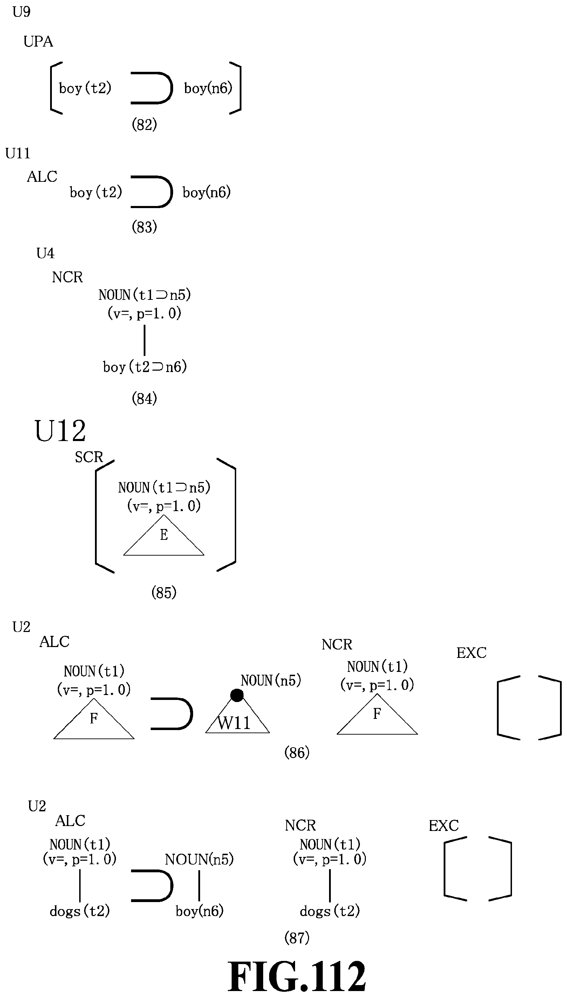

[U9]From the child tree array of the exclusive tree in arithmetic unit ALC and that of OR tree, pairs of child node of the same order in respective array are made and introduced to unprocessed pair array UPA as shown in Fig. 112(82).

As unprocessed pair array has value, process U10 generates decision "no" and operation goes to process U11.

[U11]The first term of unprocessed pair array UPA is taken out and introduced to arithmetic unit ALC overwriting former data. The accommodated result is shown in Fig.112(83).

[U4]Operation returns to process U4. The covering relation between the topmost node number of exclusive tree and topmost node number of OR tree is explicitly shown in the topmost node of exclusive tree in node covering register NCR obtaining the structure of Fig. 112(84).

As both of trees of exclusive tree side and OR tree side have no child node, operation passes both of process U5 and process U14 with decision "no" and reaches process U10. As unprocessed pair array UPA is empty, operation goes to process U12 treating successful covering.

[U12]Data in node covering register NCR is introduced to identical node register SCR. As there is no data in temporal OR tree array, nothing is introduced in OR tree array OR. As a result, the trees of Fig.112(85) are obtained as the data in identical node register SCR. Here trees are illustrated in abbreviated expression with the use of FIg.84.

As exclusive tree register EXC has value, decision of U20 is "no" and operation returns to process U2.

[U2]Fig.112(86) shows data in abbreviated expression of trees after removal of first term and pair made of first term of EXC and the tree in OR tree holding register ORH. Original expression of these data is shown in Fig.112(87) obtained by the relation shown in Fig.83 and Fig.84.

The decision of process U3 is "yes" and operation goes to process U4.

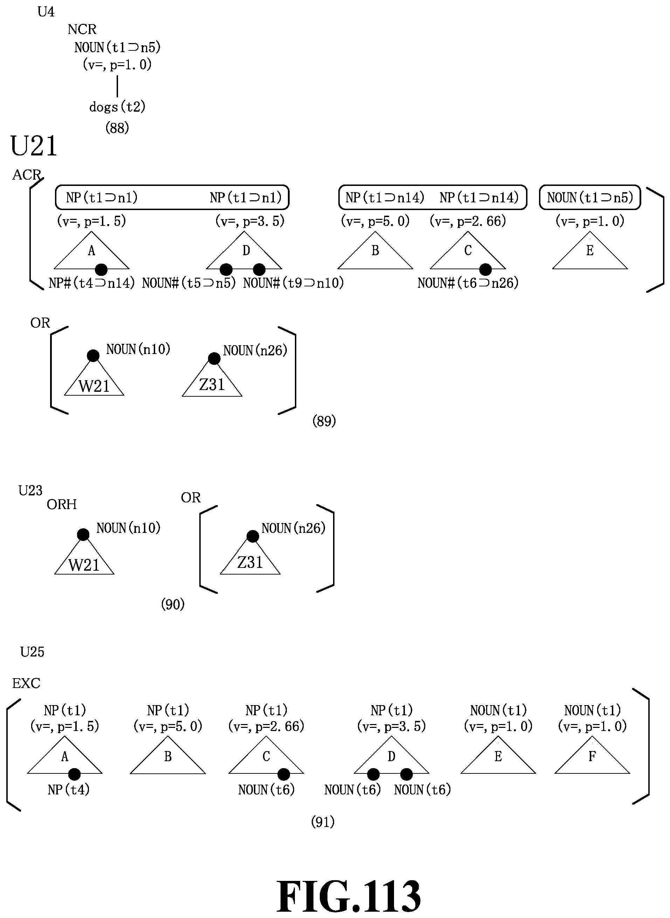

[U4]The covering relation between the topmost node number of exclusive tree and topmost node number of OR tree is explicitly shown in the topmost node of exclusive tree in node covering register NCR. As a result, the tree in Fig.113(88) is obtained.

As exclusive tree shown in Fig.111(80) has a child node, next process U5 generates decision "yes". As OR tree also has a child node, next process U6 generate decision "yes". As child node is not an OR node, process U7 generates decision "no" and operation goes to process U8. As process U8 detects difference between topmost nodes of child trees and generate decision "no" and operation goes to process U13 of failure.

[U13]Here, data in node covering register NCR is deleted.

As application of entire exclusive trees is completed and exclusive tree register is empty, process U20 generates decision "yes" and operation goes to process U21.

[U21]At this process, generally plural upper covering exclusive trees existing in identical node register SCR which is generated by application to one OR node are bundled in a group and introduced into allelic exclusive tree register ACR. As a result, data in allelic exclusive tree register ACR and data in OR tree register OR shown in Fig.113(89) are obtained through application of exclusive trees in Fig.85(2) to OR tree W11 in Fig.110(77). As identical node register SCR has only one tree in Fig.112(85), this tree is bundled in one group and added to the right of data in allelic exclusive tree register ACR shown in Fig.110(76). As no new OR tree is generated during processing of OR tree in Fig.110(77), new data of OR tree array is obtained by deletion of OR tree W111 from OR tree array OR in Fig.110(76).

As OR tree array is not empty, process U22 generates decision "no" and next operation is process U23.

[U23]Here, first term is taken out from OR tree register and is introduced to OR tree holding register ORH. Fig.113(90) shows new data in registers OR and ORH.

As the topmost node n10 of OR tree is not treated yet, process U24 generates decision "yes" and operation goes to process U25.

[U25]The exclusive tree group in Fig.85(2) is introduced in exclusive tree register EXC as shown in Fig.113(91).

As coincidence of topmost array between OR tree W21 in OR tree holding register ORH and exclusive trees A, B, C and D is not established, covering failure happens after series of processes of process U2 - process U13. As for next exclusive tree E, coverage failure happens after series of processes of process U2 - process U4 - process U5 - process U6 - process U7 - Process U8 - process U13 because topmost node arrays of child trees do not coincide. The explanation is resumed at the instant when operation reaches process U2 with the circumstances that exclusive tree F remains in exclusive tree register EXC.

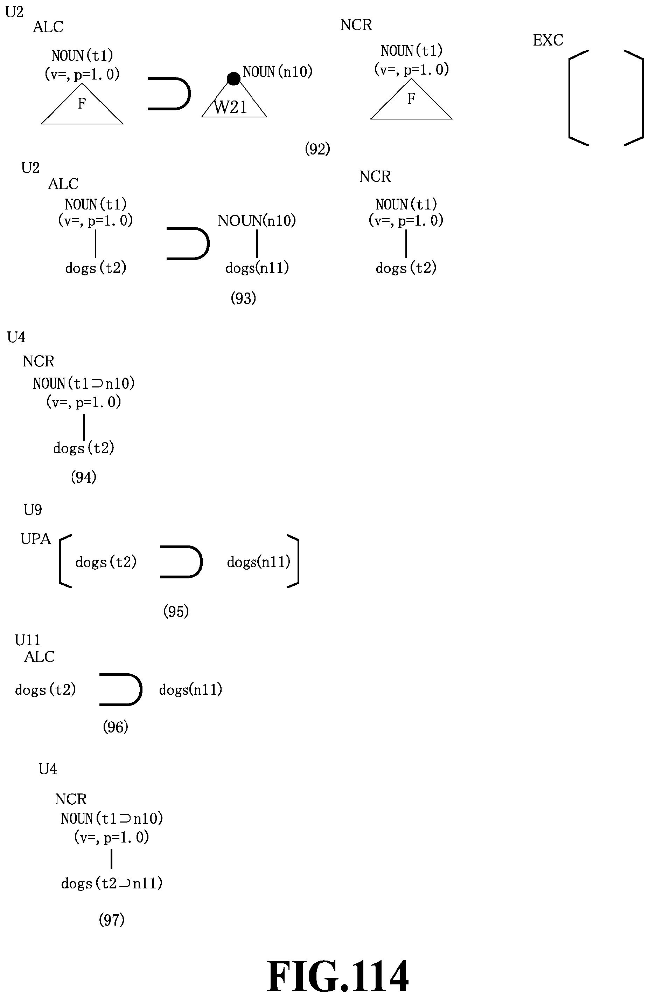

[U2]The data in arithmetic unit ALC and node covering register NCR is shown in Fig.114(92) and exclusive tree here is empty. Fig.114(92) contains data in abbreviated expression but data of arithmetic unit ALC and node covering register NCR illustrated in original expression are shown in Fig.114(93) through the relations in Fig.83 and Fig.84. As coincidence of topmost nodes is established, the decision of process U3 is "yes" and operation goes to process U4.

[U4]The covering relation between the topmost node number of exclusive tree and topmost node number of OR tree is explicitly shown in the topmost node of exclusive tree in node covering register NCR. As a result, the tree in Fig. 114(94) is obtained.

As exclusive tree has a child node, next process U5 generates decision "yes". As also OR tree has a child node, process U6 also generates decision "yes". As child node is not OR node, process U7 generates decision "no" and operation goes to process U9.

[U9]From the child tree array of the exclusive tree in arithmetic unit ALC and that of OR tree, pairs of child node of the same order in respective array are made and introduced to the right end of unprocessed pair array UPA as shown in Fig. 114(95).

As there is value in unprocessed pair array UPA, the decision of process U10 is "no" and operation goes to process U11.

[U11]The first term of unprocessed pair array UPA is taken out and introduced to arithmetic unit ALC overwriting former data. The accommodated result is shown in Fig.114(96).

[U4]Operation returns to process U4. The covering relation between the topmost node number of exclusive tree and topmost node number of OR tree is explicitly shown in the topmost node of exclusive tree in node covering register NCR obtaining the structure of Fig. 114(97).

There is no child node at both of exclusive tree side and OR tree side, operation passes process U5 and process U14 with decisions of "no" and reaches to process U10. As unprocessed pair array UPA is empty, process U10 generates decision "yes" and operation goes to process U12.

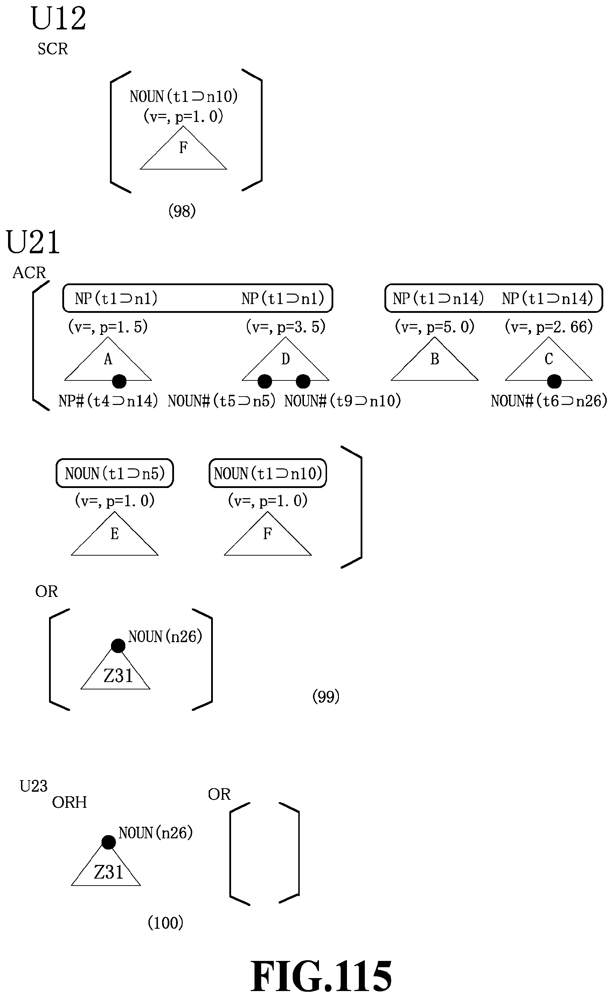

[U12]The data in node covering register NCR is introduced in identical node register SCR in the way of left justification. As temporal OR array TOR is empty, nothing is introduced in OR tree array OR, As a result, a tree shown in Fig.115(98) is obtained as the data in SCR. This is illustrated in abbreviated expression through the use of Fig.84.

As exclusive tree register EXC is empty, process U20 generates decision "yes" and operation goes to process U21.

[U21]At this process, generally plural upper covering exclusive trees existing in identical node register SCR which is generated by application to OR tree W21 are bundled in a group and introduced into allelic exclusive tree register ACR where many upper covering result of many OR tree are accommodated. As a result, upper covering of OR tree W21 in Fig.113(90) by exclusive trees in Fig.85(2) generates data in allelic exclusive register ACR and data in OR tree array OR. As seen in Fig.111(92), there is only one tree shown in Fig.114(92) and this alone is grouped and added to the right of data shown in Fig.113(89). As no new OR tree appears in the processing of OR tree in Fig.113(89), the new data in OR tree array OR is obtained by eliminating OR tree W11 from former data of OR tree shown in Fig.113(89).

As OR tree array OR is not empty, the decision of process U22 is "no" and next process is process U23.

[U23]First term of OR tree array is taken out and introduced to OR tree holding register ORH. The data in OR, ORH is shown in Fig.115(99).

As topmost node n26 of OR tree is not treated before, the decision of process U34 is "yes" and operation goes to process U25.

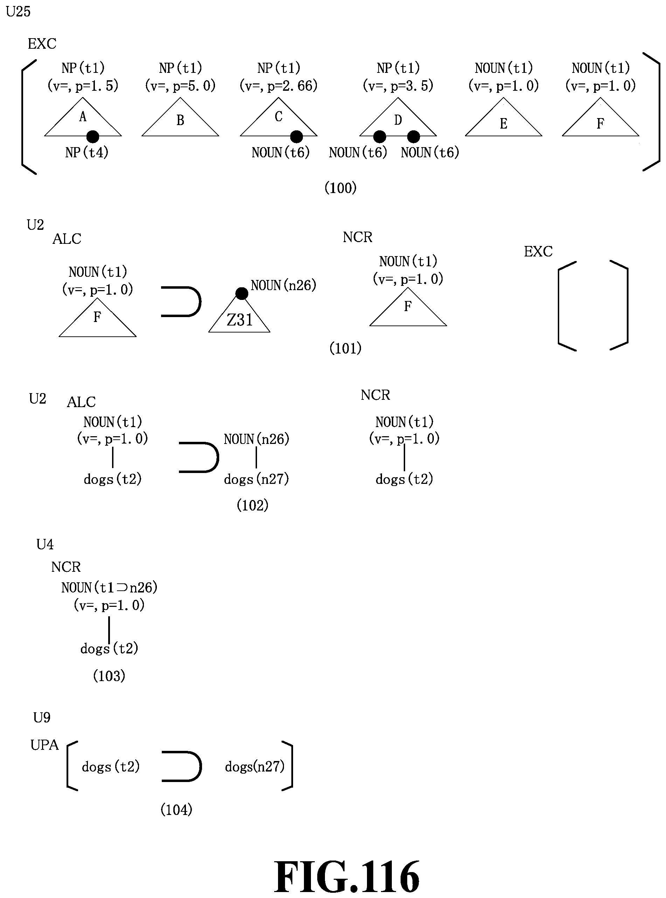

[U25]Exclusive tree group in Fig.85(2) is introduced in exclusive tree register EXC as shown in Fig.116(100).

As coincidence of topmost array between OR tree Z31 in OR tree holding register ORH and exclusive trees A, B, C and D is not established, covering failure happens after series of processes of process U2 - process U4 -process U13. As for next exclusive tree E, coverage failure happens after series of processes of process U2 - process U4 - process U5 - process U6 - process U7 - Process U8 - process U13 because topmost node arrays of child trees do not coincide. The explanation is resumed at the instant when operation reaches process U2 with the circumstances that exclusive tree F remains in exclusive tree register EXC.

[U2]The data in arithmetic unit ALC and node covering register NCR is shown in Fig.116(101) and exclusive tree here is empty. Fig.116(101) contains data in abbreviated expression but data of arithmetic unit ALC and node covering register NCR illustrated in original expression are shown in Fig.116(102) through the relations in Fig.83 and Fig.84. As coincidence of topmost nodes is established, the decision of process U3 is "yes" and operation goes to process U4.

[U4]Operation returns to process U4. The covering relation between the topmost node number of exclusive tree and topmost node number of OR tree is explicitly shown in the topmost node of exclusive tree in node covering register NCR obtaining the structure of Fig.116(103).

As exclusive tree has a child node as seen in Fig.116(102), next process U5 generates decision "yes". As also OR tree has a child node, process U6 also generates decision "yes". As child node is not OR node, process U7 generates decision "no" and operation goes to process U9.

[U9]From the child tree array of the exclusive tree in arithmetic unit ALC and that of OR tree, pairs of child node of the same order in respective array are made and introduced to the right end of unprocessed pair array UPA as shown in Fig.116(104).

As there is value in unprocessed pair array UPA, the decision of process U10 is "no" and operation goes to process U11.

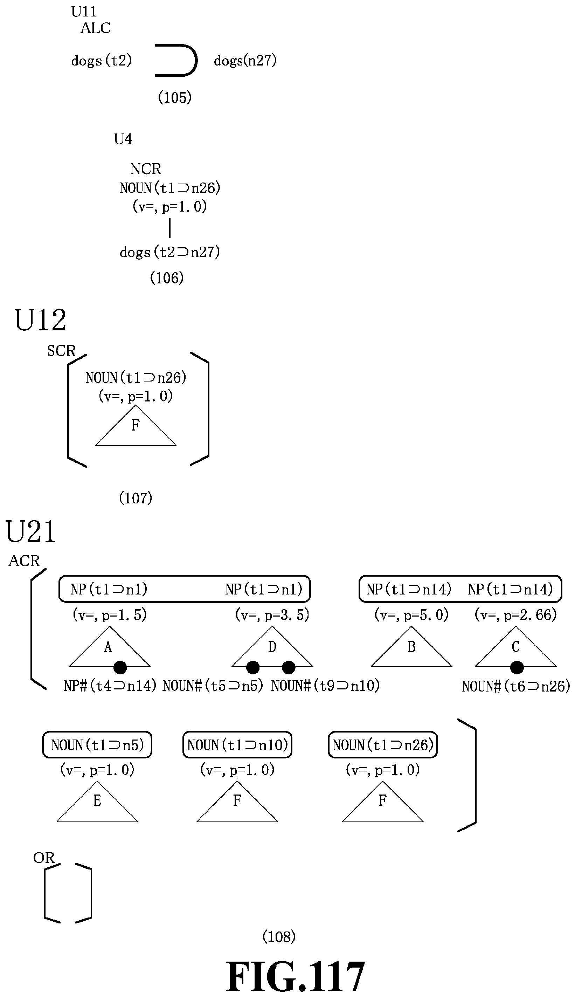

[U11]The first term of unprocessed pair array UPA is taken out and introduced to arithmetic unit ALC overwriting former data. The accommodated result is shown in Fig.117(105).

[U4]Operation returns to process U4. The covering relation between the topmost node number of exclusive tree and topmost node number of OR tree is explicitly shown in the topmost node of exclusive tree in node covering register NCR obtaining the structure of Fig.117(106).

There is no child node at both of exclusive tree side and OR tree side, operation passes process U5 and process U14 with decisions of "no" and reaches to process U10. As unprocessed pair array UPA is empty, process U10 generates decision "yes" and operation goes to process U12.

[U12]The data in node covering register NCR is introduced in identical node register SCR in the way of left justification. As temporal OR array TOR is empty, nothing is introduced in OR tree array OR, As a result, a tree shown in Fig.117(107) is obtained as the data in SCR. This is illustrated in abbreviated expression through the use of Fig.84.

As exclusive tree register EXC is empty, process U20 generates decision "yes" and operation goes to process U21.

[U21]At this process, generally plural upper covering exclusive trees existing in identical node register SCR which is generated by application to OR are bundled in a group and introduced into allelic exclusive tree register ACR where many upper covering result of many OR tree are accommodated. As a result, upper covering of OR in Fig.116(100) by exclusive trees in Fig.85(2) generates data in allelic exclusive register ACR and OR tree array OR shown in Fig.117(108).

As identical node register SCR has only one tree in Fig.115(102), this tree is bundled in one group and added to the right of data in allelic exclusive tree register ACR. As no new OR tree is generated during processing of OR tree in Fig.113(89), new data of OR tree array is obtained by deletion of OR tree Z31 from OR tree array OR in Fig.115(99) resulting in emptiness of OR tree array.

As OR tree array OR is empty, next process U22 generates decision "yes" and succeeding process in process U26 of completion of upper covering. Here, the operation of "U.upper covering module" shown in Fig.34 and Fig.81 is completed.

As seen hitherto, upper covering of OR tree in Fig.85(1) by temporal exclusive trees A, B, C, D, E and F shown in Fig.85(2) is completed. The flow chart of upper covering operation is shown in Fig.81. The output of "U.upper covering module" here is data in allelic exclusive tree register ACR shown in Fig.117(108).

As seen in Fig.117(108), nodes capable of being topmost node among nodes in Fig.85(1) are nodes having node numbers of n1, n14, n5, n10, and n26. Among these capable nodes, 2 exclusive trees upper covering nodes n1 and 2 trees upper covering n14 are, in respective group, in allelic relation at selection by the meaning in biology. The 2 trees having n1 as the topmost nodes constitute an allelic exclusive tree group. Allelic exclusive tree register ACR such as that in Fig.117(108) accommodates an allelic exclusive group array composed of several exclusive groups. The name of ACR comes from this situation.

The "U.upper covering module" bundles, at it's process U21 of "end of processing of allelic exclusive trees" in Fig.81, exclusive trees with topmost nodes having identical covered OR tree node number. This is a merit of upper covering operation at "analysis result selection method at example sentence driven machine translation" of this patent application.

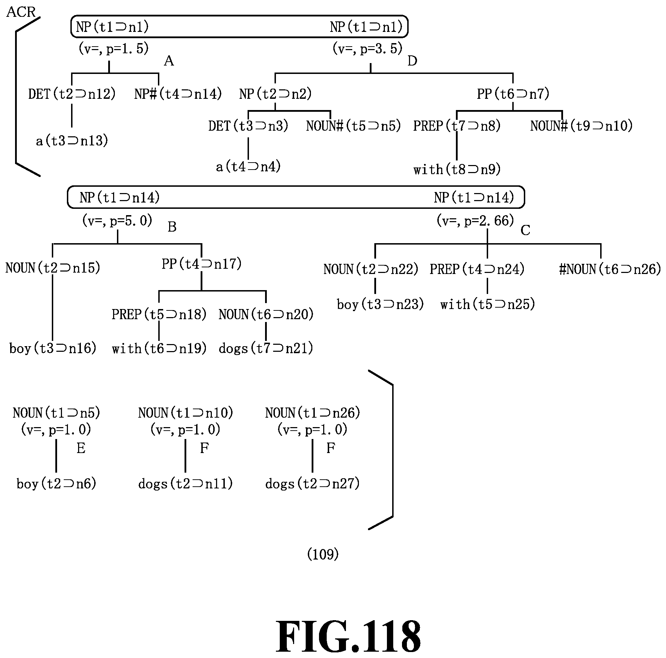

Difference between the input shown in Fig.76 of "U.upper covering module" and the output shown in Fig.80(6) is that covered OR tree nodes are filled in at respective topmost nodes and leaf connection nodes of output trees which are absent at input trees. At actual trace of operation illustrated in abbreviated expression, covered OR tree nodes are filled in at the output shown in Fig.117(108) which are absent at input shown in Fig.85(2). The abbreviated expression of input shown in Fig.85(2) corresponds to the original expression of Fig.84 and abbreviated expression of output shown in Fig.117(108) corresponds to the original expression of Fig.118(109).

The output of "U.upper covering module" in Fig.117(108) is illustrated in abbreviated expression and the original expression of the output is shown in Fig.118(109). Here, covering of OR tree nodes by exclusive tree nodes expressed among them necessitated information are born by the topmost nodes and part of leaf nodes attached with "#" symbol. The symbol "#" is not omitted in abbreviated expression of Fig.117(108).

As seen above, array of exclusive trees taking the style of allelic exclusive tree group array shown in Fig.118(109) is obtained by upper covering of OR trees at the uppermost portion of Fig.77 or Fig.85(1) by exclusive trees A, B, C, D, E, F shown in Fig.76. Here, topmost node of exclusive trees having common OR tree node number and composing an allelic exclusive tree group is encircled. There are 5 such exclusive tree groups in Fig. 118(109) among which three groups are composed respectively of single exclusive trees.

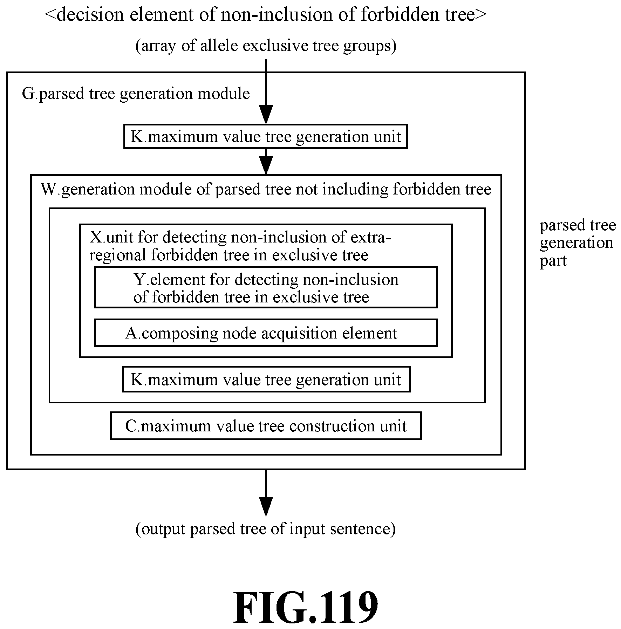

Hereafter, the operation of "K.maximum value tree generation unit" existing in Fig.34 is explained. The "parsed tree generation part" illustrated in Fig.34 is reproduced as Fig.119. The "K.maximum value tree generation unit" is positioned directly after "U.upper covering module" and positioned as the first unit of "parsed tree generation part". For the convenience of continuation of explanation, consideration is made on the operation of "K.maximum value tree generation unit" receiving the data in Fig.117(108) as input. The "K.maximum value tree generation unit" also exists in "W.generation module of parsed tree not including forbidden tree" and the situation is dealt with at the explanation of the module.

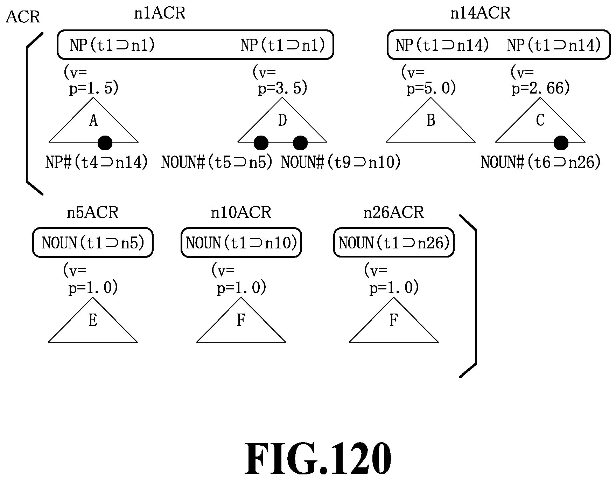

Trees in Fig.117(108) are result of upper covering of OR tree in Fig.82 by exclusive trees in Fig.84 and this is reproduced as Fig.120. At the algorithm to obtain maximum tree value tree, this upper covering output is accommodated in allelic exclusive register ACR. Accordingly, the name of register is positioned at upper left of accommodated data. The column containing numerical value proceeded by the letter sequence "p=" at the topmost node of each exclusive tree is to express pattern value of the exclusive tree. As for temporal exclusive tree, this value is calculated at "Vtree value generation unit for exclusive tree" belonging to "E.temporal exclusive tree generation module". As for exclusive trees provided by the system, this value is given by human hand. Similarly, column containing only letter sequence "v=" not accompanied by numerical value at the topmost node of each exclusive tree is to be filled accumulated tree value in the course of processing at "K.maximum value tree generation unit".

Search path branch starting with the topmost node of input OR tree until bottom word nodes of input OR tree, where an exclusive tree is selected from upper exclusive tree group and then an exclusive tree is selected from lower exclusive tree group with the topmost node identical with one of "#" attached leaf node of selected tree of upper group, is investigated.

Each of the tree shaped search path thus generated represents each way of covering of a tree generated by expansion of OR nodes and not including OR node. A tree shaped structure composed by connecting leaf nodes of upper exclusive tree with topmost node of lower exclusive tree is called candidate analysis tree. The sum of pattern values of exclusive trees in a candidate analysis tree is the tree value of the candidate analysis tree.

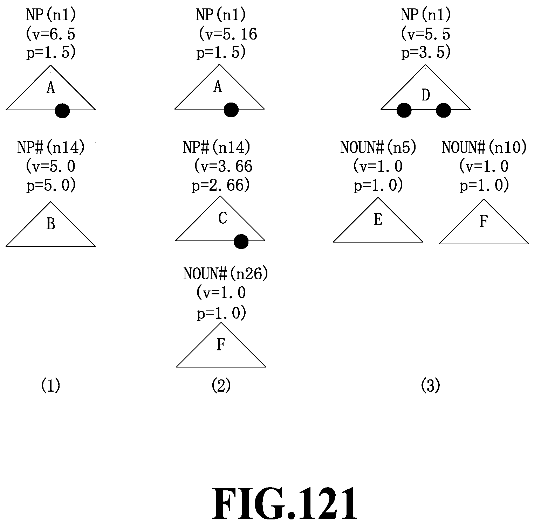

The entire structures generated by connection of allelic exclusive tree group array in Fig.120, for example, are 3 trees in Fig. 121. The tree value of the candidate analysis tree of Fig.121(1) having the path from node n1 to node n14, is 6.5. The tree value of the candidate analysis tree of Fig.121(2) having the path of nodes n1 ,n14 and n26, is 5.16. The tree value of the candidate analysis tree of Fig.121(3) having paths of branch shape one branch of which is composed of nodes n1, n5 and the other is node n1 n10, is 5.5.

The candidate analysis tree of highest tree value is the analysis tree obtained by application of exclusive trees to given OR tree. As for the case in Fig.121, the tree of Fig.121(1) is the analysis tree. The role of "K.maximum value tree generation unit" is to find analysis tree from candidate anrlysis tree. The analysis tree chosen here is the output of whole "analysis result selection method at example sentence driven machine translation" unless it is deleted by the forbidden tree mentioned later.

The above is the definition of candidate analysis tree and analysis tree from the viewpoint of the algorithm for obtaining analysis tree. Here, consideration is made for the relation between a tree made by above algorithm through expansion of OR nodes of OR tree and candidate analysis tree. To the tree made by OR tree expansion by above algorithm, exclusive trees are pasted without gaps or duplications. As the pasting position is designated for each exclusive tree, the way of pasting exclusive trees is, as seen in Fig.120, limited to one. The process here is similar to completion of mosaic painting with the division model rather than jigsaw puzzle. By tearing of the tree structure made of exclusive trees from OR node expansion tree, a candidate analysis tree whose tree value is, as mentioned before, sum of patter value of exclusive trees is composed. It can be understood that a candidate analysis tree generated at "" is the same as an expansion result of input OR tree and that the candidate analysis tree with highest tree value is the maximum tree value tree obtainable from the input OR tree. It must be noticed that "K.maximum value tree generation unit" does not generate analysis tree itself but generates allelic exclusive tree group array that consists previous step of analysis tree.

The number of allelic exclusive trees in an allelic exclusive tree group is product of number of sub-structures of OR nodes and number of covering methods belonging to a sub-structure both of which are included in the covering region of the exclusive tree. As a result, there is the possibility that single OR node expansion result can have plural candidate analysis trees or torn of trees and plural tree values. The tree value of candidate analysis tree that is sum of exclusive tree pattern values can be sum of similarity.

The pattern value of each temporal exclusive tree is fixed from the premise that the partial tree of example tree having the same word sequence as input word sequence is the same as partial tree of candidate analysis tree. The pattern value of each exclusive tree expresses the degree of similarity between partial tree of analysis result of input sentence and partial tree of example tree. It can be said that the tree value as total sum of exclusive tree pattern values is total sum of similarity between candidate analysis tree and many example trees generating exclusive trees.

At the topmost nodes of exclusive trees in Fig.121, numerical values are filled in after the sequence "p=" and "v=" which are preceded by the node name. Among numerical values, that after "p=" is the pattern value mentioned before but there is also numerical value after "v=".

The definitions of accumulated tree value and selected tree value are formerly given here. First, calculated tree value is explained. The accumulated tree value of allelic exclusive tree A is defined to be addition result of sum of accumulated tree values of exclusive trees connected under the allelic exclusive tree A and pattern value of exclusive tree A under the situation that entire exclusive trees under the tree A are selected trees. When allelic exclusive trees are arranged, from the left, in descending order of accumulated tree value, the leftmost exclusive tree is defined to be selected exclusive tree and accumulated tree value of selected exclusive tree is called selected tree value. This circular definition is made effective when choosing of selected exclusive trees starts at bottom exclusive trees and moves upward.

At each allelic exclusive tree group papering in the operation of "K.maximum value tree generation unit", the exclusive tree with highest accumulated tree value is called selected exclusive tree. The common topmost node in the exclusive tree group having other exclusive tree groups at lower positions, is nothing but the topmost node of input OR tree. In other ward, this is the topmost node of analysis tree generated from input OR tree. Accordingly, accumulated tree value of each exclusive tree of highest allelic exclusive tree group is accumulated tree value of each candidate analysis tree having the exclusive tree at topmost portion.

Accumulated tree value at the topmost node of each exclusive tree included in candidate analysis tree in Fig.121 is the tree value of the candidate analysis tree. Especially, accumulated tree value at an exclusive tree in highest allelic exclusive tree group is the tree value of the candidate analysis tree and tree with largest accumulate tree value is the analysis tree.

As the accumulated tree value of the topmost node of tree in Fig.121(1) is 6.5, the tree value of the tree is 6.5. Tree values of Fig.121(2) and Fig.121(3) are respectively 5.16 and 5.5. Among trees in Fig.121, the tree of Fig.121(1) has largest tree value and this is analysis tree. The tree value at the topmost node of the tree in Fig.121(2) is not accumulated tree value because exclusive tree C under exclusive tree A is not selected exclusive tree in the allelic tree group with topmost node n14. The tree value 5.16 of this case is called sum of pattern values.

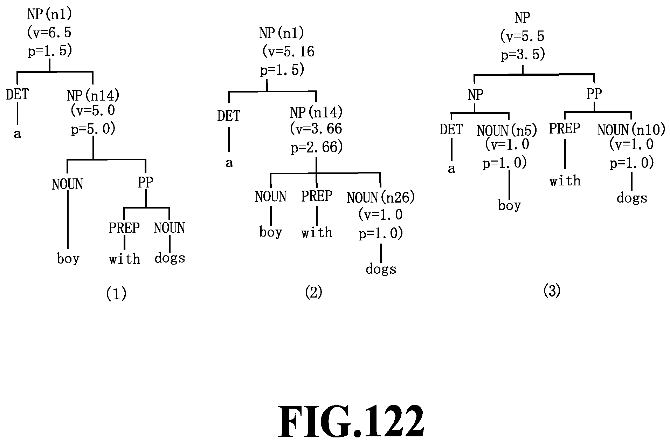

The trees in Fig.121(1),(2) and (3) are illustrated in abbreviated expression. These can be illustrated in original expression as shown in Fig.122(1),(2) and (3) by the use of relation in Fig.84. Among the, tree of Fig.122(1) has maximum tree value. Namely, this is maximum tree value tree obtained by application of exclusive trees in Fig.84 to given OR tree in Fig.82. This is correct analysis tree obtained from the OR tree in Fig.82.

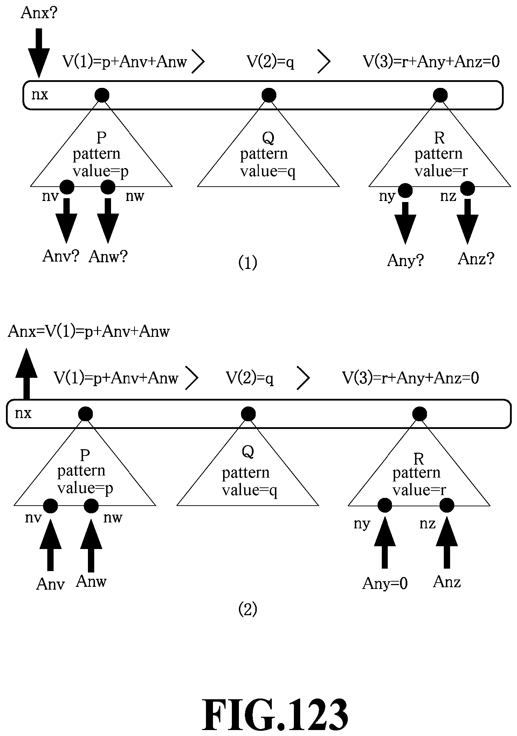

Consideration is made on the algorithm obtaining maximum tree value tree like Fig.121(1) from given OR tree and set of temporal exclusive trees. The mechanism is shown using Fig.123. Fig.123 shows three exclusive trees P, Q, R with common topmost node nx. Exclusive trees P, Q, R constitute an allelic exclusive tree group.

To the leaf nodes nv, nw, ny, nz, "#" symbols are attached. Namely theses nodes are to be connected with lower exclusive trees. Leaf nodes of exclusive tree Q have no node to be connected with lower exclusive tree.

As mentioned before, accumulated tree value of selected exclusive tree is called selected tree value. Selected tree value is expressed by node number preceded by letter "A" and accumulated tree value is expressed by letter "V" followed by tree number enclosed by parenthesis in Fig.123.

Fig.123(1) shows inquiry flow. Fist inquiry of selected tree value Anx that is Anx? comes to node nx. Responding the inquiry, node nx make inquiry of Anv?. The inquiry concerning with nodes nw, ny, nz are made similarly.

Fig.123(2) shows response flow. To node nv, selected tree value Anv of lower exclusive tree reaches. The same situation occurs at the other three nodes. Through the use of these lower responses, accumulated tree value V(1) generated at the topmost node nx of exclusive tree P is, as shown in Fig. 123(2), made by the addition of Anv and Anw which is accumulate tree values coming from lower exclusive trees and p which is pattern value of exclusive tree P. The accumulated tree value V(2) generated at the topmost node ny of exclusive tree Q is solely composed of the pattern value q of exclusive tree Q because no contribution comes from lower exclusive tree. The situation at the exclusive tree R is the case where upper covering fails at lower structure connected to node ny. As a result, selected tree value Anv becomes 0. In this case, the accumulated tree value V(3) becomes 0 irrespective of other values.

The situation shown in Fig. 123 where accumulated tree value V(1) is lager than that of V(2) and accumulated tree value V(2) is lager than that of V(3) is considered. In this case, the accumulated tree value V(1) becomes selected tree value generated at node nx. Here, exclusive tree P is selected as selected tree of this allelic exclusive tree group through process of tournament competition.

The above is the operation applied to an allelic exclusive trees concerning a node in given OR tree. The selected exclusive tree at the topmost node of OR tree is obtainable by recursive repetition of this operation beginning from the topmost node of given OR tree

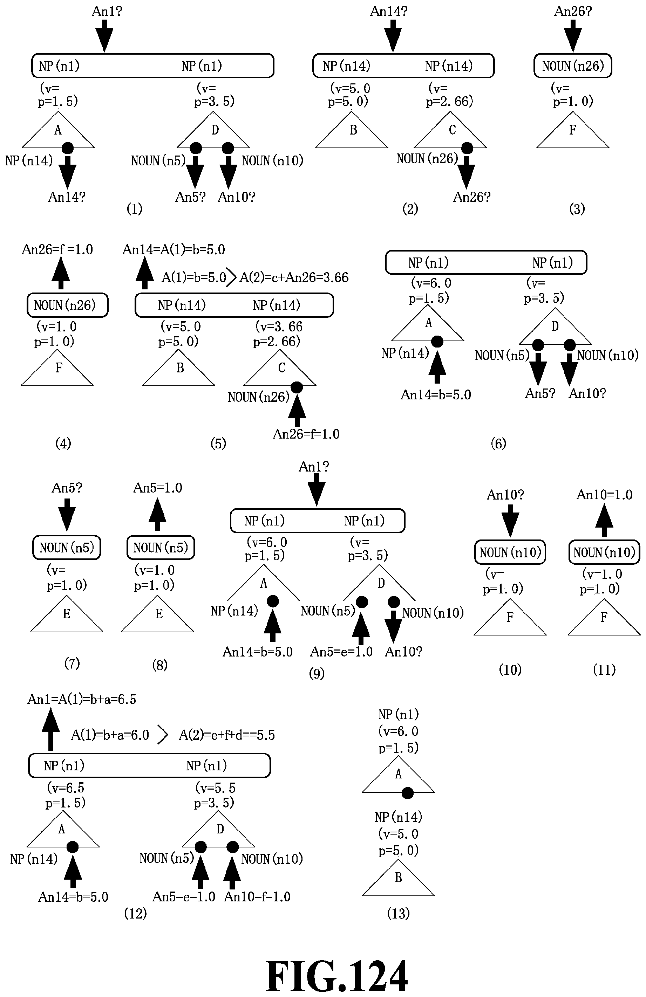

The figures in Fig.124 illustrate the operation example where the algorithm explained in Fig. 123 is applied to the allelic exclusive tree array in Fig.120. There exist column of accumulated tree value v based on aforementioned definition together with those of pattern value p at the topmost node of each exclusive tree. Figures in Fig.124 illustrate calculation process of selected tree value. Here also, the selected tree value generated at node nx is expressed as Anx.

Fig.124(1) is the figure of inquiry for the selected value An1 generated at node n1. Responding to the request to node n1, node n1 generates inquiry to node n14 for the selected value An14. As shown in Fig. 124(2), this inquiry reaches node n14 as inquiry from upper construction. In succession, node n14 generates inquiry to node n26 for selected value An26. As shown in Fig.124(4), this inquiry reaches node n26 as inquiry from upper construction. As there is no exclusive tree connected to exclusive tree F, node n26 of exclusive tree F returns, as shown in Fig.124(4), pattern value 1.0 as selected tree value An26. As seen in Fig.124(4), the value 1.0 is filled in as the accumulated value v of the topmost node of exclusive tree F.

Then the tree value at the topmost node n14 is fixed as shown in Fig.124.(5). As V(1) is 5.0 which is pattern value of exclusive tree B and V(2) is 3.66 which is sum of accumulated tree value at n26 and pattern value of exclusive tree C, accumulated value V(1) is returned to upper construction as the selected tree value An14.

Fig.124(6) shows that the response to inquiry of Fig.124(1) is generated at node n14. Fig.124(6) also shows inquiry to selected tree value at node n5. As shown in Fig.124(7), this inquiry reaches node n5 as inquiry from upper construction. As there is no exclusive tree connected to exclusive tree E, node n5 of exclusive tree E returns, as shown in Fig.124(8), pattern value 1.0 as selected tree value An5. Fig.124(8) shows that the value 1.0 is filled to the column of accumulated tree value v.

Fig.124(9) shows that the response to inquiry of Fig.124(1) is generated at node n5 in addition to the response from n14. Fig.124(9) also shows inquiry for the tree value of node n10. As shown in Fig.124(10), this inquiry reaches node n10 as inquiry from upper construction. As there is no exclusive tree connected to exclusive tree F, node n10 of exclusive tree F returns, as shown in Fig.124(11), pattern value 1.0 as selected tree value An10. Fig.124(11) shows that the value 1.0 is filled to the column of accumulated tree value v.

Then the selected tree value at the topmost node n1 is fixed as shown in Fig.124.(12). In precise, accumulated tree value V(1) is sum of selected value An14 from node n14 and pattern value of exclusive tree A and accumulated tree value A(2) is sum of selected tree value An5 from node n5 and selected tree value An10 from node n10 and pattern value of exclusive tree D. As seen in Fig.124(12), accumulated tree value V(1) is larger and this becomes selected value 6.5 generated at node n1.

Exclusive trees in the allelic exclusive tree group of node n1 are arranged in descending order of selected tree value. Here, the configuration in Fig.124(13) where exclusive tree B is connected below exclusive tree A is largest tree value tree whose tree value is 6.5. Fig.122(1) is the configuration illustrated in original expression.

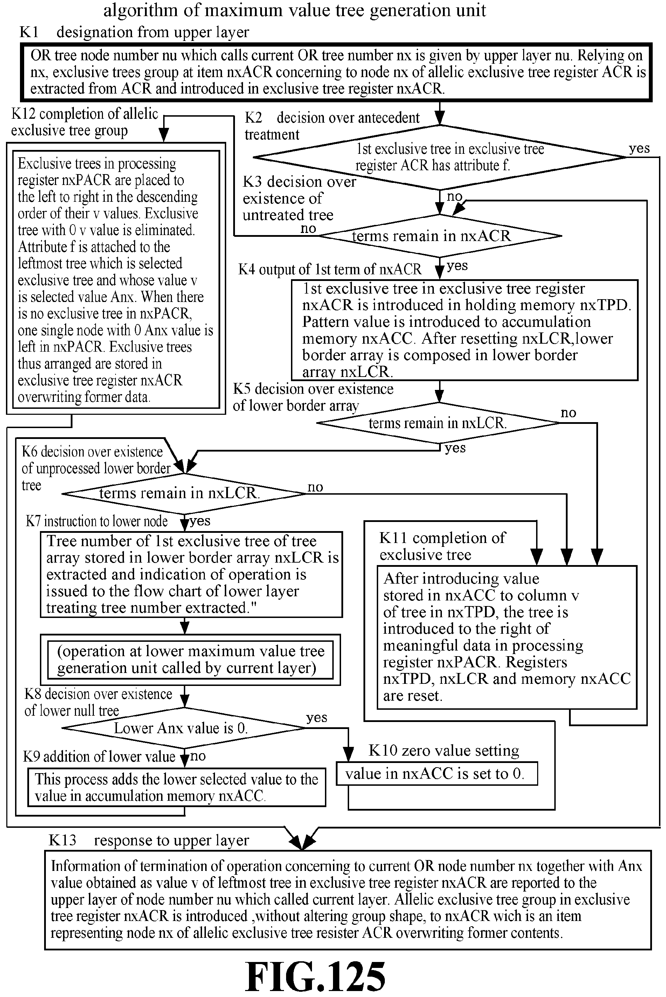

Fig.125 is the flow chart of "K.maximum value tree generation unit" to realize the mechanism in Fig.124. First, registers used in the flow chart are explained.

To begin with, explanation for allelic exclusive register ACR is made. Allelic exclusive tree register ACR accommodates the allelic exclusive tree group array of the shape of Fig.117(108) or Fig.120 before operation start of "K.maximum value tree generation unit" in Fig.125. At each exclusive tree in Fig.120, pattern value is filled in at the column of "p" but nothin is filled in at the column of "v" which stores the accumulated tree value or addition of pattern value and sum of lower selected tree values. As mentioned before, the column to store accumulated tree value is column "v".

Allelic tree register ACR records the fill in state at "v" columns during operation of "K.maximum value tree generation unit" keeping original construction of allelic exclusive tree array group of Fig.120 and is central register of the flow chart. At following illustration, item of allelic exclusive tree group array dealing with specific OR tree node "nx" is specified as "nxACR".

Here, explanation is made for nxACR that is an item contributing allelic exclusive tree group array ACR. This item nxACR successively accumulates processing progress to assist ACR, together with processing register nxPACR, in the portion of node x.

Explanation is made of procesing register nxPACR. This register successively accumulates processing progress. This register receives an exclusive tree having accumulated tree value v from holding memory nxTPD and works to compose completed exclusive tree array.

Holding memory nxTPD keeps currently treated exclusive tree in exclusive tree register nxACR.

Lower border array nxLCR stores array of nodes, at leaf position of upper covering exclusive tree, having symbol "#" as attached symbol and having lower substructures. For example, lower array stores nodes with symbol "#" in Fig.120.

Accumulation memory nxACC accumulates tree values coming from substructures connected at leaf positions.

The algorithm of "K.maximum value tree generation unit" works according to recursive mechanism. The flow chart in Fig. 125 treats one layer that has one to one correspondence with each node in OR tree. Namely, this layer treats an OR tree node nx. Accordingly, registers, memories, arrays excepting for allelic exclusive tree register ACR have prefix "nx" expressing that these items treat OR tree node nx. This layer receives the indication of commencement of operation from upper layer "xu". This layer operates on recursive mechanism and selects lower nodes and gives the lower nodes the indication of commencement of operation. The portion between process K7 and process K8 in Fig. 125 shows the activity at lower layer.

The operation of "K.maximum value tree generation unit" shown in Fig.125 utilizing above mentioned registers, memories and arrays is composed of 13 processes K1 - K13. Following is the explanation of each operation.

The name of process K1 is "designation from upper layer". The faculty of this process is disc rived as: "OR tree node number nu which calls current OR tree number nx is given by upper layer nu. Relying on nx, exclusive trees group at item nxACR cornering to node nx of allelic exclusive tree register ACR is extracted from ACR and introduced in exclusive tree register nxACR."

The name of process K2 is "decision over antecedent treatment". The faculty of this process is described as: "The decision is made whether the first exclusive tree taken out by process K1 is attached with attribute "f". The existence of "f" shows that the first exclusive tree in nxACR is already chosen as the selected tree. When process K2 generates decision "yes", the operation goes to process K13 of making report to upper layer because the operation on node nx of this layer is unnecessary. When process K2 generates decision "no", operation goes to K3 to continue operation of this layer.

The name of process K3 is "decision over existence of untreated tree". The faculty of this process is described as: "The initial value of exclusive tree nxACR in the value in nxACR which has the same name as nxACR of this layer but nxACR is, as confusion can be avoided, the element concerning with node nx of allelic exclusive tree register ACR. As operation processes, the exclusive trees in exclusive tree register nxACR are sequentially deleted and the operation of this layer ends when nxACR is empty. Process K3 decide whether nxACR has value. When process K3 generates decision "yes", operation goes to process K4 of taking out an exclusive tree. When process K3 generates decision "yes", operation goes to process K12 of making output of this layer."

The name of process K4 is "output of 1st term of nxACR". The faculty of this process is described as: "1st exclusive tree in exclusive tree register nxACR is introduced in holding memory nxTPD. Pattern value is introduced to accumulation memory nxACC. After resetting nxLCR, lower border array composed of "#" attached nodes is composed and introduced to lower border array nxLCR."

The name of process K5 is "decision over existence of lower border array". The faculty of this process is described as: "This process surveys whether exclusive tree register nxACR has lower border nodes with symbol "#". When process K5 generates decision "yes", operation goes to process K6 of processing lower nodes. When process K5 generates decision "no" as in the case of exclusive tree Q in Fig.123, operation goes to process K11 to output the exclusive tree under treatment."

The name of process K6 is "decision over existence of unprocessed lower border tree". The faculty of this process is described as: "This process surveys whether lower border array nxLCR has unprocessed lower border node. When process K6 generates decision "yes", operation goes to process K7 to continue processing. When process K6 generates decision "no", operation goes to process K11 of filling in the "v" to the exclusive tree under treatment."

The name of process K7 is "instruction to lower node". The faculty of this process is described as: "Tree number of 1st exclusive tree of tree array stored in lower border array nxLCR is extracted and indication of operation is issued to the flow chart of the shape of Fig.125 of lower layer treating tree number extracted."

The name of process K8 is "decision over existence of lower null tree". The faculty of this process is described as: "This process treats the node nd extracted at preceding process K7 by surveying whether the selected value of item ndACR in allelic exclusive tree register ACR is 0. This process detects the case like the case of exclusive tree R in Fig. 123 where selected tree value generated at lower border node is 0. When process K8 generates decision "yes", operation goes to process K10 generating value 0 as accumulated tree value Anx. When K8 generates decision "no", operation goes to process K9 of accumulation of selected tree value Anx."

The name of process K9 is "addition of lower value". The faculty of this process is described as: "This process adds the lower selected tree value ndAnx to the value in accumulation memory nxACC."

The name of process K10 is "zero value setting". The faculty of this process is described as: "When selected tree value generated at a border node is 0 like in the case of exclusive tree R in Fig. 123, the accumulated tree value of currently treated exclusive tree must be mandatorily set to zero. This process conduct this zero setting."

The name of process K11 is "completion of exclusive tree". The faculty of this process is described as: "As processing of an exclusive tree is completed, the accumulated tree value "v" is obtainable as mentioned related to Fig.123. Process K11 introduces the accumulated tree value to "v" value memorizing part of holding memory nxTPD. Topmost node of each exclusive tree in Fig. 124 has columns "v=" and "p=" to respectively fill in "v" value and "p" values. The pattern value of each exclusive tree is filled in to the column of "p=". Accumulated tree value of each exclusive tree is filled in to the column of "v=". At flow chart of Fig.125, the letter "v" to represent "v" value. It is considered that the expression "introduction of v value to v column of upper covering exclusive tree" is equivalent to the expression "introduction of value to the column v= in exclusive tree as shown in Fig.84". Process K11 adds this completed exclusive tree after addition of "v" value to the right of meaningful data in processing register nxPACR. Then, registers nxTPD, nxLCR and memory nxACC are reset."

The name of process K12 is "completion of allelic exclusive tree group". The faculty of this process is described as: "Exclusive trees in processing register nxPACR are placed to the left to right in the descending order of their v values. Exclusive tree with 0 v value is eliminated. Attribute f is attached to the leftmost tree that is selected exclusive tree and whose value v is selected value Anx. When there is no exclusive tree in nxPACR, one single node with 0 Anx value is left in nxPACR. Exclusive trees thus arranged are stored in exclusive tree register nxACR overwriting former data."

The name of process K13 is "response to upper layer". The faculty of this process is described as: "Information of termination of operation concerning to current OR node number nx together with Anx value obtained as value v of leftmost tree in exclusive tree register nxACR are reported to the upper layer of node number nu which called current layer. Allelic exclusive tree group in exclusive tree register nxACR is introduced, without altering group shape, to nxACR witch is an item representing node nx of allelic excusive tree register ACR overwriting former contents."

As flow chart of Fig.125 operates on recursive mechanism, Title of each substantive process is expressed as connection of layer number and process number. Layer number is number of topmost node dealt with at corresponding layer.

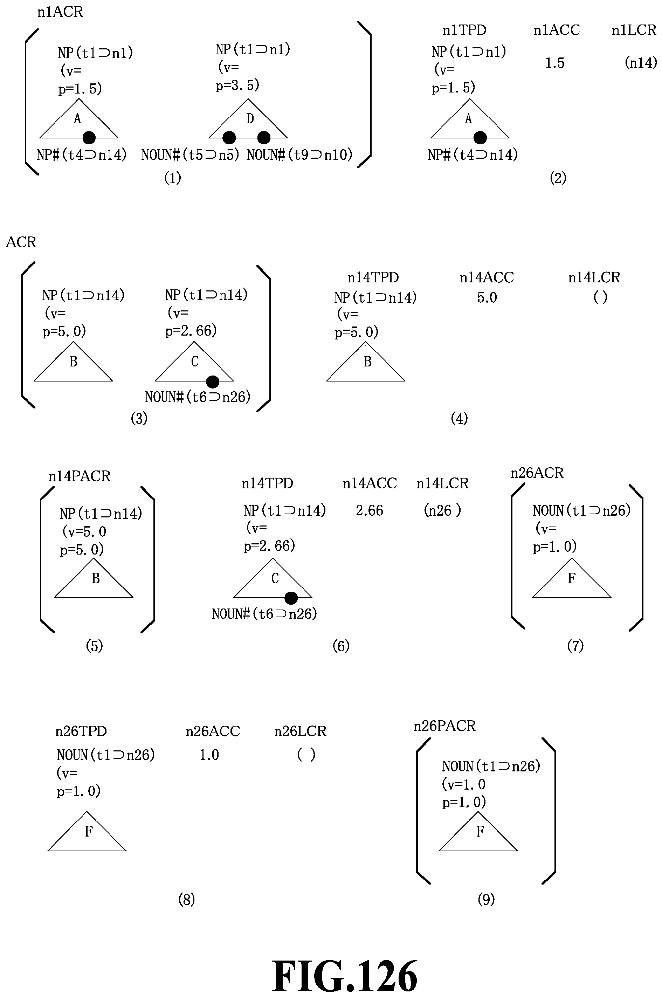

As for each process of substantive operation accompanying change of data, explanation is preceded by a title of the operation enclosed by rectangle parenthesis "[]". As for each decision operation not accompanying change of data, explanation is made without title. The data in the course of operation of Fig.125 are shown in Fig.126 - Fig.129. At upper left position of each data configuration in the figures in Fig.126 - Fig.129, the register name in which the configuration is accommodated is placed.

At the initiation of operation of "K.maximum value tree generation unit" in Fig.125, the allelic exclusive tree group array in Fig.120 is given and accommodated in allelic exclusive tree register ACR which is global register and can be accessible for inputting and outputting from entire layers. This allelic exclusive tree group array is the output of "U.upper covering module=upper covering part" shown in Fig.117(108). As shown in Fig.119, this is the input of "K.maximum value tree generation unit" explained here.

[n1K1]From upper layer of layer n0, upper node number n0 and current node number n1 are given. Relying on the information that current node number is n1, the exclusive tree group at item n1ACR shown in Fig.126(1) is extracted from allelic exclusive tree group ACR and introduced in exclusive tree register n1ACR. This situation corresponds to An1? of Fig.124(1).

As the first exclusive tree in exclusive tree register n1ACR is not attached with attribute "f" of selective tree, process n1K2 generates decision "no" and operation goes to process n1K3 that is first process to obtain selected tree value. As seen in Fig.126(1), there are two unprocessed exclusive trees, process n1K3 generates decision "yes" and operation goes to process n1K4.

[n1K4]The first exclusive tree in exclusive tree register n1ACR is introduced to holding memory n1TPD. Pattern value 1.5 stored in the topmost node of exclusive tree A is introduced in accumulation memory n1ACC. Accumulation memory nxACC is used to obtain accumulated tree value at node nx. The data to be stored in lower border array n1LCR is obtained. Lower border array LCR accommodates the array of node numbers of "#" attached leaf nodes to be connected with lower structures. These accommodated data is shown in Fig.126(2).

As lower border array n1LCR has the data n14, process n1K5 generates decision "yes" and operation goes to process n1K6. The decision of n1K6 surveying existence of unprocessed border node is "yes" and operation goes to process n1K7. Process n1K7 takes out the first node n14 of lower node array n1LCR and calls lower layer treating node n14. This situation corresponds to An14? in Fig.124(1).

[n14K1]From upper layer of layer n1, upper node number n1 and current node number n14 are given. Relying on the information that current node number is n14, the exclusive tree group at item n14ACR shown in Fig.126(3) is extracted from allelic exclusive tree group ACR and introduced in exclusive tree register n14CR. This situation corresponds to An14? of Fig.124(2).

As the first exclusive tree in exclusive register n14ACR is not attached with attribute "f" of existence of selected tree value, process n14K2 generates decision "no" and operation goes to n14K3 that is first process of obtaining selected tree value. Since there are two unprocessed exclusive trees as seen in Fig.126(3), process n14K3 generates decision "yes" and operation goes to process n14K4.

[n14K4]The first tree in exclusive tree register n14ACR is introduced to holding memory n14TPD. Pattern value 5.0 filled in the topmost node of exclusive tree B is introduced to accumulation memory n14ACC. As the exclusive tree has no "#" attached lower node, lower node array n14LCR is kept empty. Fig.126(4) shows the data in array and memories.

As lower border node array does not contain lower node, the process n14K5 generates decision "no" and operation goes to process n14K11.

[n14K11]To the column "v" of exclusive tree in holding memory n14TPD the value in accumulation memory n14ACC is overwritten. As a result the data in processing register n14PACR shown in Fig.126(5) is obtained. As is seen, the accumulated tree value of exclusive tree without "#" attached lower node is same as the pattern value of the exclusive tree. This is illustrated at the state of exclusive tree B in Fig.124(2).

Then operation returns at process n14K3. As there is unprocessed exclusive tree C, the process n14K3 generates decision "yes" and operation goes to process n14K4.

[n14K4]The first tree in exclusive tree register n14ACR is introduced to holding memory n14TPD. Pattern value 2.66 filled in the topmost node of exclusive tree C is introduced to accumulation memory n14ACC. This process also obtains array of "#" attached nodes and introduces to lower border node array n14LCR. Fig.126(6) shows the data in array and memories.

As lower border node array n14LCR has the value n26, process n15K5 generates decision "yes" and operation goes to n14K6. As lower border array n14LCR has unprocessed exclusive tree, process n14K6 generates decision "yes" and operation goes to n14K7. Process n14K7 takes out the first node n26 of lower node array n1LCR and calls lower layer treating node n26. This situation corresponds to An26? in Fig.124(2).

[n26K1]From upper layer of layer n14, upper node number n14 and current node number n26 are given. Relying on the information that current node number is n26, the exclusive tree group at item n26ACR shown in Fig.126(7) is extracted from allelic exclusive tree group ACR and introduced in exclusive tree register n26CR. This situation corresponds to An26? of Fig.124(3).

As the first exclusive tree in exclusive register n26ACR is not attached with attribute "f" of existence of selected tree value, process n26K2 generates decision "no" and operation goes to n26K3 that is first process of obtaining selected tree value. Since there are two unprocessed exclusive trees as seen in Fig. 126(7), process n26K3 generates decision "yes" and operation goes to process n26K4.

[n26K4]The first tree in exclusive tree register n26ACR is introduced to holding memory n26TPD. Pattern value 1.0 filled in the topmost node of exclusive tree F is introduced to accumulation memory n26ACC. As the exclusive tree has no "#" attached lower node, lower node array n26LCR is kept empty. Fig.126(8) shows the data in array and memories.

As lower border node array does not contain lower node, the process n26K5 generates decision "no" and operation goes to process n26K11.

[n26K11]To the column "v" of exclusive tree in holding memory n26TPD the value in accumulation memory n26ACC is introduced and the result is introduced to the right of meaningful data in processing register n26PACR. As a result the data in processing register n26PACR shown in Fig.126(9) is obtained. As is seen, the accumulated tree value of exclusive tree without "#" attached lower node is same as the pattern value of the exclusive tree.

Then operation returns at process n26K3. As there is unprocessed exclusive tree C, the process n26K3 generates decision "no" and operation goes to process n26K12.

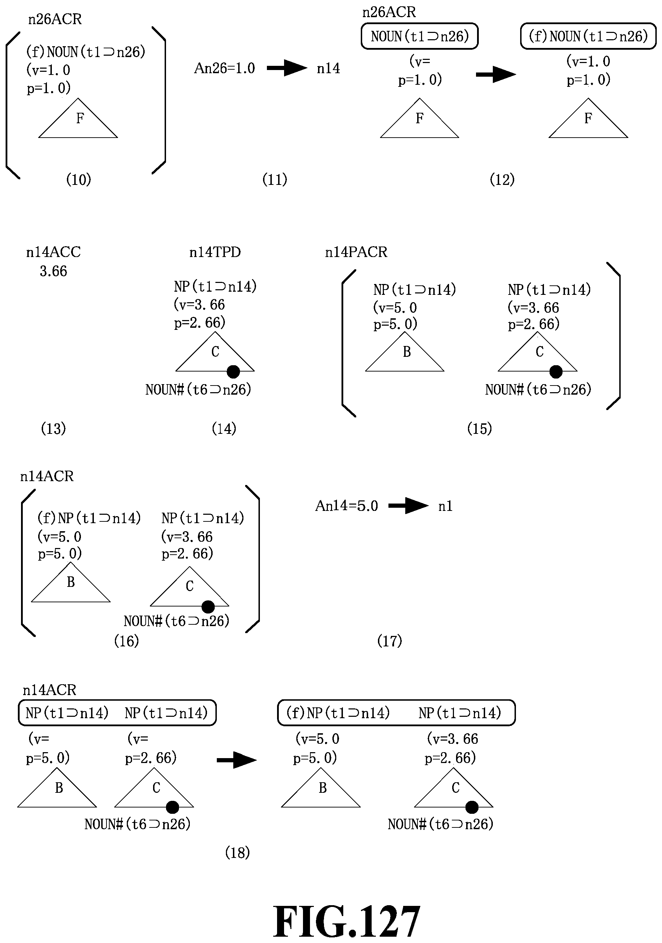

[n26K12]As n26ACR accommodates only one exclusive tree, the order change related to "v" value does nod occur. This process attaches this sole exclusive tree the attribute "f". As a result, this operation appends to the exclusive tree the attribute of existence of selected tree value An26=1.0. After this operation, the data in processing register n26ACR shown in Fig.127(10) is overwritten in exclusive tree register n26ACR.

The next process is n26K13 to output the result of operation at layer n26.

[n26K13]The layer that calls layer n26 is layer n14. Here, the accumulated tree value 1.0 of the leftmost tree in exclusive tree register n26ACR is returned as the selected tree value An26 to layer of OR tree number n14. This process also overwrites item n26ACR of allelic exclusive tree register ACR with the value of exclusive tree register n26ACR of this layer. Fig.127(11) illustrates the situation where the selected tree value An26=1.0 is returned to layer n14. Fig.127(12) illustrates the change from pre-overwriting situation (to the left of the arrow) to post-overwriting situation (to the right of the array) at the occasion of overwriting the item n26ACR of allelic exclusive tree register ACR in Fig. 120 with the data in exclusive tree register n26ACR of this layer. The aggregation function of process K13 is expressed by encircling of topmost node. The operation here corresponds An26=f=1.0 in Fig.124(4).

Thus the operation of layer n26 is over and operation goes to process n14K8 of layer n14 calling layer n26. As returned value An26 is not 0, process n14K8 generates decision "no" and operation goes to n14K9 to continue accumulation of accumulated tree value.

[n14K9]This process adds value of An26=1.0 returned from lower layer to value in accumulation register n14ACC. The value 2.66 shown in Fig.126(6) is former value in n14ACC. Addition of value 1.0 is done and new value in n14ACC becomes 2.66. Fig.127(13) is present state of n14ACC.

Operation returns to process n14K6 that generates decision "no" because lower border array n14LCR no longer has no lower node and operation goes to process n14K11.

[n14K11]To the column "v" of exclusive tree in holding memory n14TPD, the value in accumulation memory n14ACC is introduced. The state of holding register n14TPD before value introduction is shown in Fig.126(6) and the state after introduction is shown in Fig.127(14). This process introduces the exclusive tree in Fig.127(14) to the right of meaningful data in processing register n14PACR shown in Fig.126(5) resulting in the state of n14PCR shown in Fig.127(15).

Then, operation returns to process n14K3. As there is no unprocessed exclusive tree, process n14K3 generates decision "no" and operation goes to process n14K12.

[n14K12]As n14PACR accommodates two exclusive trees arranged in descending order of "v" value, the order related to "v" value does not occur. This process attaches the leftmost exclusive tree the attribute "f". As a result, this operation appends the exclusive tree the attribute of existence of selected tree value An14=5.0. By this operation the overwritten data in processing register n14PACR shown in Fig.127(16) is obtained.

Next process is process n14K13 that generates the output of layer n14.

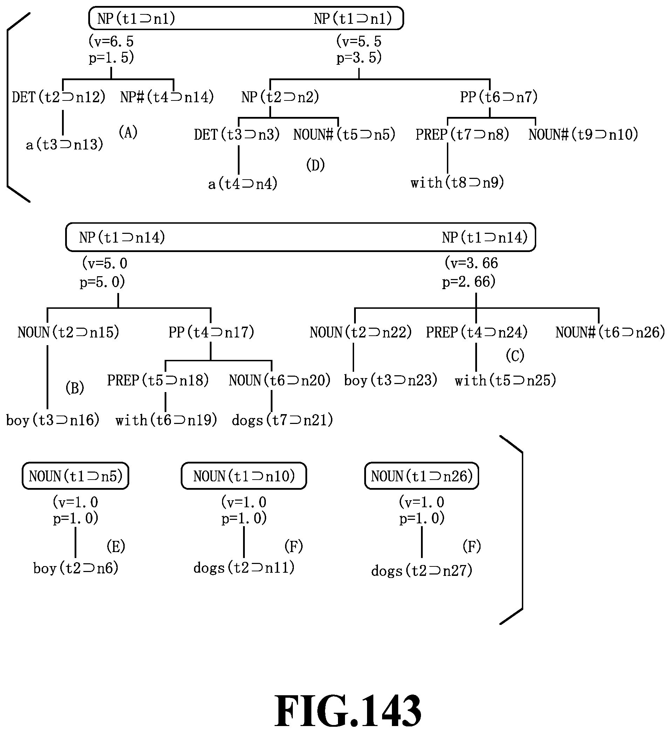

[n14K13]The layer that calls layer n14 is layer n1. Here, the accumulated tree value 5.0 of the leftmost tree in exclusive tree register n14ACR is returned as the selected tree value An14 to layer of OR tree number n1. This process also overwrites item n14ACR of allelic exclusive tree register ACR with the value of exclusive tree register n14ACR of this layer. Fig.127 (17) illustrates the situation where the selected tree value An14=5.0 is returned to layer n1. Fig.127 (18) illustrates the change from pre-overwriting situation (to the left of the arrow) to post-overwriting situation (to the right of the array) at the occasion of overwriting the item n14ACR of allelic exclusive tree register ACR in Fig.143 with the data in exclusive tree register n14ACR of this layer. The aggregation function of process K13 is expressed by encircling of topmost nodes of two exclusive trees. The operation here corresponds the acquisition of "v" value in Fig.124(5).

Thus the operation of layer n14 is over and operation goes to process n1K8 of layer n1 calling layer n14. As returned value Ans14 is not 0, process n1K8 generates decision "no" and operation goes to n1K9 to continue accumulation of accumulated tree value. This situation corresponds to An14=A(1)=b=5.0 in Fig. 124(5).

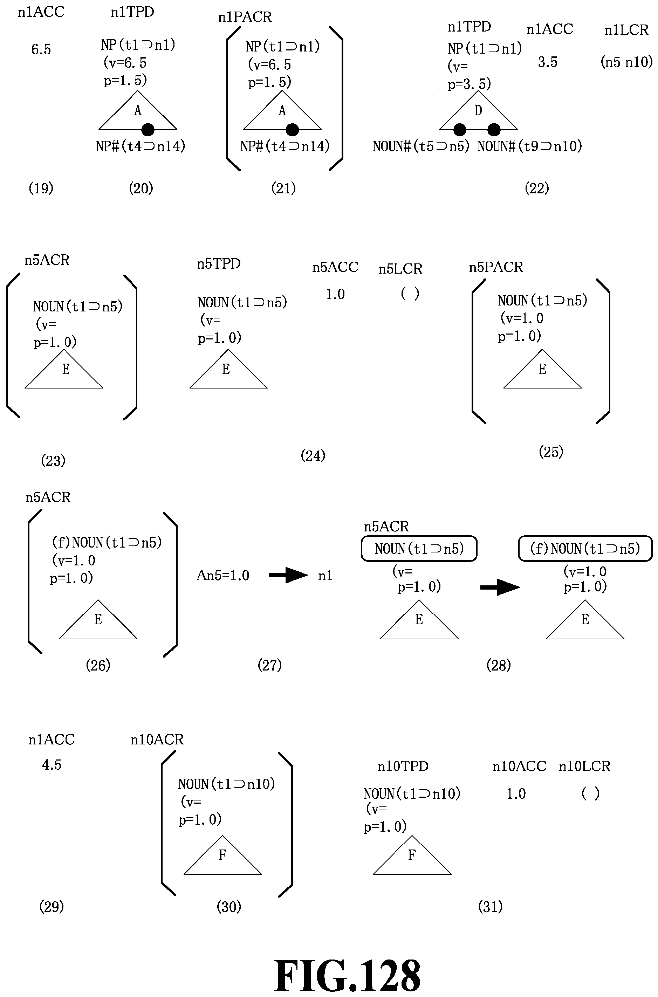

[n1K9]This process adds value of An14=5.0 returned from lower layer to value in accumulation register n1ACC. The value 1.5 shown in Fig. 126(2) is former value in n1ACC. Addition of value 5.0 is done and new value in n1ACC becomes 6.5. Fig.128(19) is present state of n1ACC. The operation here corresponds An14=b=5.0 in Fig.124(6).

Operation returns to process n1K6 and n1K6 generates decision "no" because lower node array n1LCR has no lower node and operation goes to n1K11.

[n1K11]To the column "v" of exclusive tree in holding memory n1TPD the value in accumulation memory n1ACC is introduced. The state of holding register n1TPD before value introduction is shown in Fig. 126(2) and the state after introduction is shown in Fig.128(21). This process introduces the exclusive tree in Fig.128(20) to the right of meaningful data in processing register n1PACR that is empty so far resulting in the state of n1PACR shown in Fig.128(21).

Then, operation returns to process n1K3. As there is unprocessed tree, process n1K3 generates decision "yes" and operation goes to n1K4.

[n1K4]The first exclusive tree in exclusive tree register n1ACR is introduced to holding memory n1TPD. Pattern value 3.5 stored in the topmost node of exclusive tree D is introduced in accumulation memory n1ACC. The data to be stored in lower border array n1LCR is obtained. These accommodated data is shown in Fig.128(22).

As lower border array n1LCR has the data, process n1K5 generates decision "yes" and operation goes to process n1K6. The decision of n1K6 surveying existence of unprocessed border node is "yes" and operation goes to process n1K7. Process n1K7 takes out the first node n5 of lower node array n1LCR and calls lower layer treating node n5. This situation corresponds to An5? in Fig. 124(6).

[n5K1]From upper layer of layer n1, upper node number n1 and current node number n5 are given. Relying on the information that current node number is n5, the exclusive tree group at item n5ACR shown in Fig.128(23) is extracted from allelic exclusive tree group ACR and introduced in exclusive tree register n5CR. This situation corresponds to An5? of Fig. 124(7).

As the first exclusive tree in exclusive register n5ACR is not attached with attribute "f" of existence of selected tree value, process n5K2 generates decision "no" and operation goes to n5K3 that is first process of obtaining selected tree value. Since there are two unprocessed exclusive trees as seen in Fig. 128(23), process n5K3 generates decision "yes" and operation goes to process n5K4.

[n5K4]The first tree in exclusive tree register n5ACR is introduced to holding memory n5TPD. Pattern value 1.0 filled in the topmost node of exclusive tree E is introduced to accumulation memory n5ACC. As the exclusive tree has no "#" attached lower node, lower node array n5LCR is kept empty. Fig.128(24) shows the data in array and memories.

As there is no lower node, process n5K5 generates decision "no" and operation goes to process n5K11.

[n5K11]To the column "v" of exclusive tree in holding memory n5TPD the value in accumulation memory n5ACC is introduced and the result is introduced to the right of meaningful data in processing register n5PACR. As a result the data in processing register n5PACR shown in Fig.128(25) is obtained. As is seen, the accumulated tree value of exclusive tree without "#" attached lower node is same as the pattern value of the exclusive tree.

Then, operation returns to process n5K3. As there is no unprocessed exclusive tree, process n5K3 generates decision "no" and operation goes to n5K12.

[n5K12]As n5ACR accommodates only one exclusive tree, the order change related to "v" value does nod occur. This process attaches this sole exclusive tree the attribute "f". As a result, this operation appends to the exclusive tree the attribute of existence of selected tree value An5=1.0. After this operation, the data in processing register n5ACR shown in Fig.128(26) is overwritten in exclusive tree register n5ACR.

The next process is process n5K13 to generate output of layer n5.

[n5K13]The layer that calls layer n5 is layer n1. Here, the accumulated tree value 1.0 of the leftmost tree in exclusive tree register n5ACR is returned as the selected tree value An5 to layer of OR tree number n1. This process also overwrites item n5ACR of allelic exclusive tree register ACR with the value of exclusive tree register n5ACR of this layer. Fig.128(27) illustrates the situation where the selected tree value An5=1.0 is returned to layer n1. Fig.128(28) illustrates the change from pre-overwriting situation (to the left of the arrow) to post-overwriting situation (to the right of the array) at the occasion of overwriting the item n5ACR of allelic exclusive tree register ACR in Fig.120 with the data in exclusive tree register n5ACR of this layer. The aggregation function of process K13 is expressed by encircling of topmost node. The operation here corresponds An5=e=1.0 in Fig.124(8).

Thus the operation of layer n5 is over and operation goes to process n1K8 of layer n1 calling layer n5. As returned value An5 is not 0, process n1K8 generates decision "no" and operation goes to n1K9 to continue accumulation of accumulated tree value.

[n1K9]This process adds value of An5=1.0 returned from lower layer to value in accumulation register n1ACC. The value 3.5 shown in Fig.128(22) is former value in n1ACC. Addition of value 1.0 is done and new value in n1ACC becomes 4.5. Fig.128(29) is present state of n1ACC.

There is still remains lower node n10 in lower node array n1LCR, process n1K6 to detect existence of unprocessed node in n1LCR generates decision "yes" and operation goes to process n1K7. Process n1K7 takes out the first node n10 of lower node array n1LCR and calls lower layer treating node n10. This situation corresponds to An10? in Fig.124(9).

[m10K1]From upper layer of layer n1, upper node number n1 and current node number n10 are given. Relying on the information that current node number is n10, the exclusive tree group at item n10ACR shown in Fig.128(30) is extracted from allelic exclusive tree group ACR and introduced in exclusive tree register n10ACR. This situation corresponds to An10? of Fig. 124(10).

As the first exclusive tree in exclusive register n10ACR is not attached with attribute "f" of existence of selected tree value, process n10K2 generates decision "no" and operation goes to n10K3 that is first process of obtaining selected tree value. Since there is a unprocessed exclusive trees as seen in Fig.128(30), process n10K3 generates decision "yes" and operation goes to process n10K4.

[n10K4]The first tree in exclusive tree register n10ACR is introduced to holding memory n10TPD. Pattern value 1.0 filled in the topmost node of exclusive tree F is introduced to accumulation memory n10ACC. The data to be introduced in lower node array n10LCR is investigated. As the exclusive tree has no "#" attached lower node, lower node array n10LCR is kept empty. Fig.128(31) shows the data in array and memories.

As there is no lower node in lower node array n10LCR, process n10K5 generates decision "no" and operation goes to process n10K11.

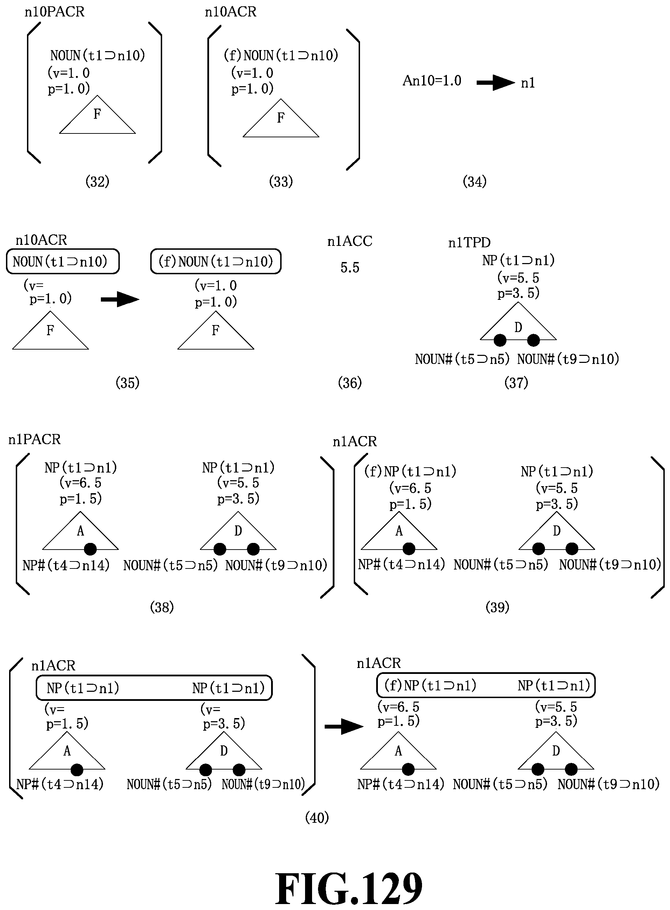

[n10K11]To the column "v" of exclusive tree in holding memory n10TPD the value in accumulation memory n10ACC is overwritten and the result is introduced to the right of meaningful data in processing register n10PACR. As a result the data in processing register n10PACR shown in Fig.129(32) is obtained. As is seen, the accumulated tree value of exclusive tree without "#" attached lower node is same as the pattern value of the exclusive tree.

Then, operation returns to process n10K3. As there is no unprocessed exclusive tree, process n10K3 generates decision "no" and operation goes to n10K12.

[n10K12]As n10PACR accommodates only one exclusive tree, the order change related to "v" value does nod occur. This process attaches this sole exclusive tree the attribute "f". As a result, this operation appends to the exclusive tree the attribute of existence of selected tree value An10=1.0. After this operation, the data in processing register n10PACR shown in Fig.129(33) is overwritten in exclusive tree register n10ACR.

The next process is process n10K13 to generate output of layer n10.

[n10K13]The layer that calls layer n10 is layer n1. Here, the accumulated tree value 1.0 of the leftmost tree in exclusive tree register n10ACR is returned as the selected tree value An10 to layer of OR tree number n1. This process also overwrites item n10ACR of allelic exclusive tree register ACR with the value of exclusive tree register n10ACR of this layer. Fig.129(34) illustrates the situation where the selected tree value An10=1.0 is returned to layer n1. Fig.129(35) illustrates the change from pre-overwriting situation (to the left of the arrow) to post-overwriting situation (to the right of the array) at the occasion of overwriting the item n10ACR of allelic exclusive tree register ACR in Fig. 120 with the data in exclusive tree register n10ACR of this layer. The aggregation function of process K13 is expressed by encircling of topmost node. The operation here corresponds An10=1.0 in Fig.124(11).

Thus the operation of layer n10 is over and operation goes to process n1K8 of layer n1 calling layer n10. As returned value An10 is not 0, process n1K8 generates decision "no" and operation goes to n1K9 to continue accumulation of accumulated tree value.

[n1K9]This process adds value of An10=1.0 returned from lower layer to value in accumulation register n1ACC. The value 4.5 shown in Fig.128(29) is former value in n1ACC. Addition of value 1.0 is done and new value in n1ACC becomes 5.5. Fig.129(36) is present state of n1ACC.

Operation returns to n1K6 and n1K6 generate decision "no" because there is no data in lower node array n1LCR and operation goes to n1K11.

[n1K11]First, the value in accumulation memory n1ACC is introduced to the column "v" of exclusive tree in holding memory n1TPD. The state of holding register n1TPD before value introduction is shown in Fig.128(22) and the state after introduction is shown in Fig.129(37). This process introduces the exclusive tree in Fig.129(37) to the right of meaningful data in processing register nIPACR resulting in the state of n4PCR shown in Fig.129(38).

Then, operation returns to process n1K3. As there is no unprocessed exclusive tree, process n1K3 generates decision "no" and operation goes to process n14K12.

[n1K12]As n1PACR accommodates two exclusive trees arranged in descending order of "v" value, the order related to "v" value does not occur. This process attaches the leftmost exclusive tree the attribute "f". As a result, this operation appends the exclusive tree the attribute of existence of selected tree value An1=6.5. By this operation, the overwritten data in exclusive tree register n1ACR register shown in Fig.129(39) is obtained though the data of n1PACR of Fig.128(38).

Next process is process n1K13 that generates the output of layer n1.

[n1K13]The layer that calls layer n1 is layer n0 existing outside of the algorithm in Fig.125. Here, the item n1ACR of allelic excusive tree register ACR is overwritten with the data in n1ACR of this layer n1. Fig.129(40) illustrates the change from pre-overwriting situation (to the left of the arrow) to post-overwriting situation (to the right of the array) at the occasion of overwriting the item n1ACR of allelic exclusive tree register ACR in Fig.120 with the data in exclusive tree register n1ACR of this layer. The aggregation function of process K13 is expressed by encircling of topmost nodes of two exclusive trees. The operation here corresponds the acquisition of An1=A(1)=b+a=6.5 in Fig.124(12).

Here, the operation of "K.maximum value tree generation unit" is completed.

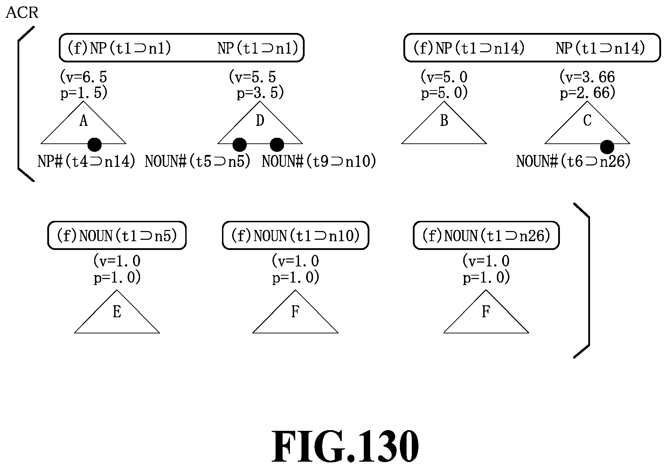

The exclusive trees positioned to the right of respective arrows in Fig.127(12), Fig.127(18), Fig 128(28), Fig.129(35) and Fig.129(49) are newly introduced in exclusive registers. The aggregation of these exclusive trees is shown in Fig.130. This is the output of "" generated from input of Fig.120.

The algorithm of Fig.125 of "K.maximum value tree generation unit" gives to each exclusive tree in an allelic exclusive tree group made of the trees of the same OR tree number at their topmost nodes, accumulated tree value and this algorithm also arranges trees in an allelic exclusive tree group in descending order of accumulated tree value and gives the attribute "f" to the exclusive trees of maximum accumulated tree value. Using the example used so far, the operation trace of "K.maximum value tree generation unit" taking the input of Fig.120 is conducted and obtained the output of Fig.130.

This is the upper covering result conducted by the flow chart of Fig.125 receiving the input of Fig.120.

Next, the behavior of "K.maximum value tree generation unit" of Fig.125 when the input made of deleting exclusive tree B from the data in Fig.120 is used. This kind of dilation happens when detection of forbidden tree inclusion mentioned later is applied.

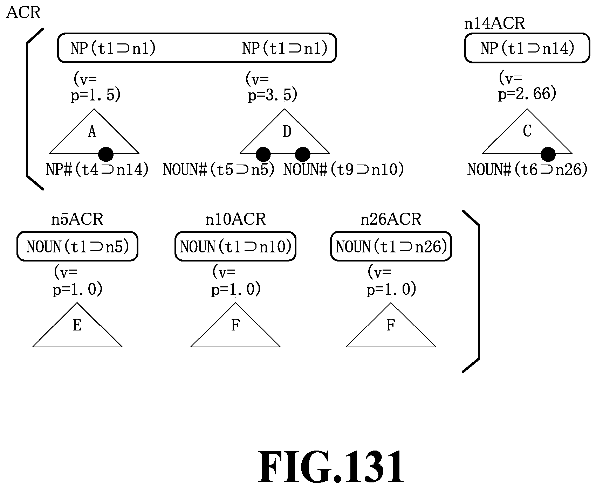

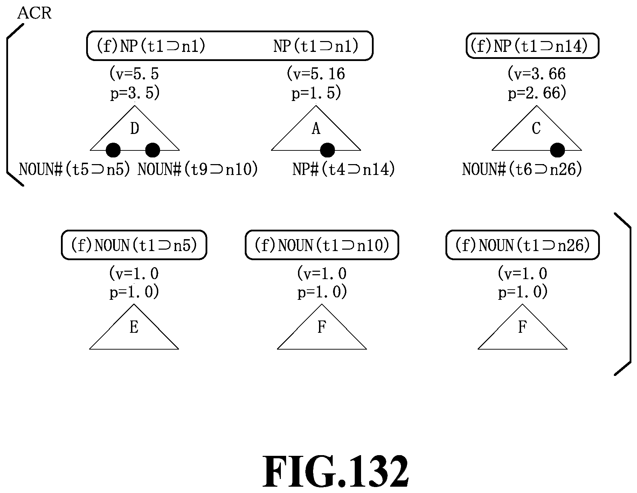

The allelic exclusive tree group array made by deleting exclusive tree B from that of Fig.120 is shown in Fig.131. The operation traces the process parallel to the process shown in Fig.126 to Fig.129 observed at the input of Fig.120 and the "K.maximum value tree generation unit" generates output of Fig.132.

Investigation is made over the change from the output of Fig.130 generated at the input of Fig.120 to the output of Fig.132 generated at the input of Fig.131. Off course exclusive tree B that exists in Fig.130 is absent in Fig.132. The accumulated tree value of exclusive tree A decreases from 6.5 of Fig.130 to 5.16 of Fig.132 because, among trees of the leaf node n14 of exclusive tree A, exclusive tree C newly becomes selected tree by deletion of exclusive tree B and is connected at the lower position of exclusive tree A. The accumulated tree value remains at 5.5 because the lower exclusive tree of exclusive tree D remains unchanged. As turnaround of accumulated tree values happens between exclusive tree A and D, exclusive tree D becomes selected tree at the allelic exclusive tree group of node n1 as shown in Fig.132. In this case, the candidate analysis tree having exclusive tree D at the upper most portion becomes analysis tree as long as it is not deleted later by inclusion of forbidden tree. Then, it becomes the output of "analysis result selection apparatus at example sentence driven machine translation" as a whole.

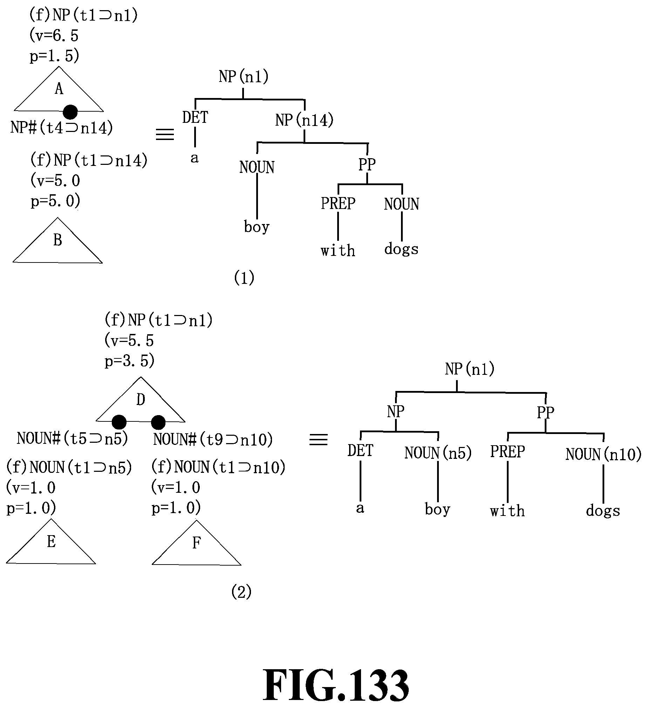

Fig.133 shows the change of analysis tree caused by the deletion of exclusive tree B. Fig.133(1) is the analysis tree before the deletion of exclusive tree B that is obtained from the exclusive tree group array of Fig. 130. Fig. 133(2) is the analysis tree after the deletion of exclusive tree B that is obtained from the exclusive tree group array of Fig.132.

The process K12(completion of allelic exclusive tree group) of "K.maximum value tree generation unit" in Fig. 125 includes the function to arrange, from the left to the right, allelic exclusive trees in processing register in descending order of accumulated tree value "v". The "Ks sub-unit for tree value array arrangement" receives from the processing register nxPACR of "K.maximum value tree generation unit" the array of accumulated tree value "v" and outputs the way to arrange the array in the descending order of accumulated tree value "v".

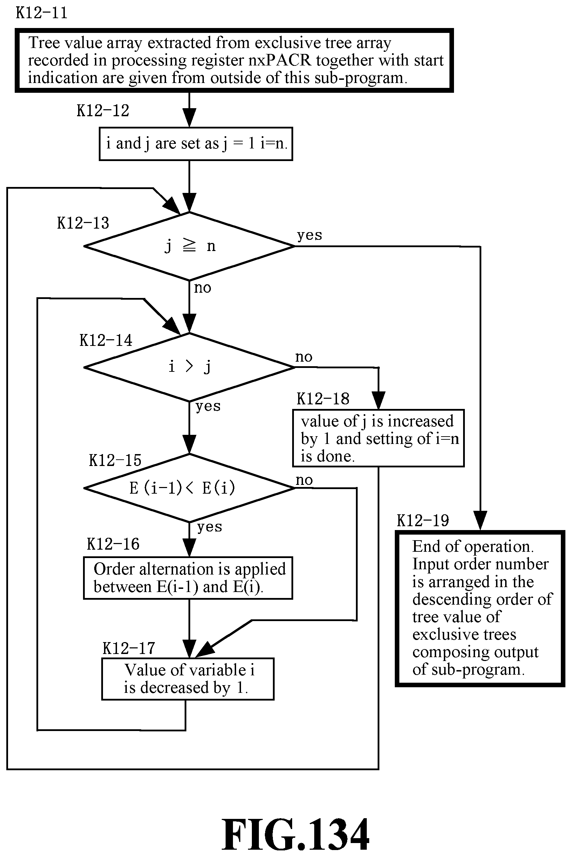

Fig.134 depicts the flowchart of "Ks sub-unit for tree value array arrangement" which shows the way to arrange, from the left to the right, allelic exclusive trees in the descending order of tree value "v" using the bubble sort theory. As "Ks sub-unit for tree value array arrangement" is a part of process K12(completion of allelic exclusive tree group) constituting "K.maximum value tree generation unit", it is not particularly treated as an independent portion in block diagramed of "analysis result selection apparatus at example sentence driven machine translation" in Fig.1 or Fig.34. This sub-unit uses as is processing register nxPACR of "K.maximum value tree generation unit".

The flow chart of "Ks sub-unit for tree value array arrangement" shown in Fig.134 is composed of 9 processes which are processes K12-1 to K12-19. As the explanation in Fig.134 is sufficient to depict the operation, explanation of each process is not particularly shown. Here, the variable E(i) in processes K12-15 and K12-16 is to denote the value of i'th element of processing register nxPACR.

As intrinsic registers, "Ks sub-unit for tree value array arrangement" has registers to accommodate respectively variable "n", variable "j" and variable "i". In the explanation hitherto, only the change in values of variables are mentioned without mentioning these registers.

The variable "n" used in "Ks sub-unit for tree value array arrangement" is number of allelic exclusive trees to be arranged in descending order or, simply, array length and is kept constant since operation commencement. The descending order arrangement by tree value is conducted by left to right scanning of variable "i" in the range limited by rightmost position "n" and leftmost position "j". After one scanning, value of variable "j" is increased by 1 narrowing the scanning range. This scanning is done n-1 times starting with initial value 1 of variable "j" to value n-1.

Hereafter, the explanation is made for the descending order arrangement in tree value using two examples. As shown above, operation is made using tree value "v" as the key and, here, the move of exclusive trees as a whole is not expressed and only move of keys is expressed instead.

At the process [n1K12] of "K.maximum value tree generation unit" shown before, the accumulated tree values in processing register are n1PACR are arranged in the order of [6.5 5.5]. In this case, "Ks sub-unit for tree value array arrangement" does not cause order change among exclusive trees.

In this case, the information that accumulated tree value v1 having value 6.5 and accumulated tree value v2 having value 5.5 is arranged in the order of [v1(1) v2(2)], is given from processing register p1PACR. Here, the values in the parenthesis denote the order of arrangement. This means that the initial number order in the parenthesis coincides the order of arrangement. On this information, the operation of "Ks sub-unit for tree value array arrangement" in Fig.134 begins. Hereafter, operation of each process of "Ks sub-unit for tree value array arrangement" is descried after each process title.

[K12-11]Input array is [v1(1) v2(2)] or [6.5(1) 5.5(2)].

[K12-12]As element number n is 2, setting of j=1, i=2 is done.

[K12-13]As value of j is 1 and value of n is 2, relation j $\geqq$ n does not establish and decision here is "no".

[K12-14]As value of i is 2 and value of j is 1, relation i>j establishes and decision here is "yes".

[K12-15]As the relation E(i-1) > E(i) or E(1) > E(2) exists meaning non-establishment of v1(1)<v2(2) or 6.5(1)<5.5(1), decision is "no",

[K12-17]Setting i=1 is done.

[K12-14]As value of i is 1 and value of j is 1, relation i>j does not establish and decision is "no".

[K12-18]Setting j=2, i=2 is done.

[K12-13]As relation j $\geqq$ n establishes, sedition is "yes".

[K12-19]Process ends. The output is [v1(1) v2(2)] or [6.5(1) 5.5(2)] which is the same as the input and descending order arrangement of v value is realized. This is the output of "Ks sub-unit for tree value array arrangement".

The expression v1(1) indicates that the first input element v1 must be moved to the 1st position and v2(2) indicates the 2nd input element v2 must be moved to the 2nd position respectively at the output of "Ks sub-unit for tree value array arrangement". In this case, no change of element arrangement takes place. By this process, exclusive trees in processing register nxPACR are arranged in descending order of tree value.

The operation of "Ks sub-unit for tree value array arrangement" where the input array at processing register nxPACR takes the shape of [5.5 3.3 6.5] which is not seen at explanation hitherto, is traced here. In this case, "Ks sub-unit for tree value array arrangement" must change the order to [6.5 5.5 3.3]. As before, the individual explanation in "Ks sub-unit for tree value array arrangement" is made after the titles of processes.

Here, the information that accumulated tree value v1 having value 5.5 and value v2 having value 3.3 and tree value v3 having value 6.5 are arranged in the shape [v1(1) v2(2) v3(3)] comes from processing register nxPACR. The values encircled by parenthesis denote the position in the array. Namely the variable numbers and positions of the variables are the same in initially. Receiving the input, "Ks sub-unit for tree value array arrangement" in Fig.134 begins its operation. The explanations are made after process titles.

[KI2-11]Input array is [v1(1) v2(2) v3(3)] or [5.5(1) 3/3(2) 6.5(3)].

[K12-12]As element number n is 3, setting of j=1, i=3 is done.

[K12-13]As value of j is 1 and value of n is 3, relation j $\geqq$ n does not establish with the result of decision "no" because the round count around inner loop of processes K12-17 to K12-17 does not reach the prescribed count.

[K12-14]As value of i is 3 and value of j is 1, relation i>j establishes and decision here is "yes".

[K12-15]As the relation E(i-1)<E(i) or E(2)<E(3) or v2(2)<v3(3) or 3.3(2)< 6.5(3) exists. Decision is "yes" and position change is necessary.

[K12-16]Position change happens resulting in the array of [v1(1) v3(2) v2(3)] or [5.5(1) 6.5(2) 3.3(3)].

[K12-17]Setting i=2 is done.

[K12-14]As value of i is 2 and value of j is 1, relation i>j establishes and decision here is "yes".

[K12-15]As the relation E(i-1)<E(i) or v2(1) < v3(2) or 5.5(1) < 6.5(3) exists, decision is "yes" and position change is necessary.

[K12-16]Position change happens resulting in the array of [v3(1) v1(2) v2(3)] or [6.5(1) 5.5(2) 3.3(3)].

[K12-17]Setting i=1 is done.

[K12-14]As value of i is 1 and value of j is 1, relation i>j does not establish and decision here is "no".

[K12-18]Setting of j=2 and i=3 is done.

[K12-13]As relation j $\geqq$ n establishes and decision is "yes".

[K12-14]As value of i is 3 and value of j is 2, relation i>j establishes and decision here is "yes".

[K12-15]As the relation E(i-1)<E(i) or E(2)<E(3) or v1(2)<v2(3) or 5.5(2)< 3.3(3) does not exist resulting in decision "no" and no position change.

[K12-17]Setting i=2 is done.

[K12-14]As value of i is 2 and value of j is 2, relation i>j does not establish and decision is "no".

[K12-18]Setting of j=3 and i=3 is done.

[K12-13]As relation j $\geqq$ n establishes, sedition is "yes".

[K12-19]Process ends. The output is [v3(1) v1(2) v2(3)]] or [6.5(1) 5.5(2) 3.3(3)] arranged at descending order of v value. This is the output of "Ks sub-unit for tree value array arrangement".

From the output expressions v3(1), v1(2) and v2(3) of "Ks sub-unit for tree value array arrangement", the information that 3rd input element v3 must be moved to the 1st position, 1st element v1 must be moved to 2nd element and the 2nd input element v2 must be moved to the 3rd position, is respectively obtained. Exclusive trees in processing register nxPACR are arranged in the descending order of accumulated tree value by changing order seen above.

Here the explanation of "Ks sub-unit for tree value array arrangement" composing the subunit of process K12 is completed. Here also, the explanation for the whole of "K.maximum value tree generation unit" receiving the output of "U.upper covering module" existing in Fig.34 as it's input is completed. As seen above, "K.maximum value tree generation unit" generates, for entire allelic exclusive tree groups in allelic exclusive tree group array, allelic exclusive tree groups arranged in the order of tree values and having the selected trees at the leftmost positions. The maximum tree value tree as shown in Fig.133 is obtainable by starting with the topmost allelic tree group existing above all other tree groups and by continuing connection of selected trees of lower allelic tree groups. Thus, "K.maximum value tree generation unit" is able to generate the information of maximum tree value tree without actually composing maximum tree value tree.

As seen in Fig. 119, "K.maximum value tree generation unit" is used in "X.unit for detecting non-inclusion of extra-regional forbidden tree in exclusive tree" besides at the input position of "G.parsed tree generation module". The object of this usage is shown at the explanation of "W.generation module of parsed tree not including forbidden tree".

As seen in Fig.119, "analysis result selection apparatus at example sentence driven machine translation" treats only allelic exclusive tree group array at almost all operation stages and generates the analysis tree at the portion of "C.maximum value tree construction unit" right before output operation. As seen above, "K.maximum value tree generation unit" outputs allelic exclusive tree group array composed of generally plural allelic tree groups each of which is composed of allelic exclusive trees arranged, with the selected tree at the top, in descending order of accumulated tree value and "C.maximum value tree construction unit" generates the analysis tree with maximum tree value from this output.

Here, the operation of "C.maximum value tree construction unit" taking two allelic exclusive tree group arrays shown in Fig. 130 and Fig. 132 as its inputs.

The tree having designated node as it's topmost node made by the repetition of the process where the lower connecting nodes with the symbols "#" of a selected tree are connected and merged with selected trees with attribute "f" of corresponding lower allelic exclusive tree groups, stating point of which is the selected tree with attribute "f" of designated node and end of which is the disappearance of symbol "#", is called maximum tree value tree.

Thus obtained maximum tree value tree having designated node as topmost node is the tree of maximum tree value among trees obtained from allelic exclusive tree group array at each group of which allelic exclusive tree are arranged, with selected tree at leftmost position, according to order of accumulated tree value.

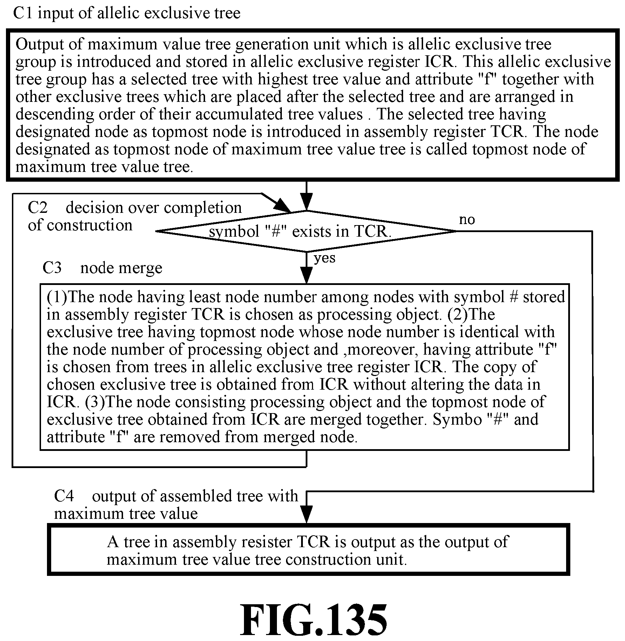

Fig.135 shows flow chart of "C.maximum value tree construction unit" to obtain maximum tree value tree having designated node as it's topmost node. First, explanation is made for the registers used at the flow chart.

Explanation is made for allelic exclusive tree register ICR. This accommodates the output of "K.maximum value tree generation unit" as it is. While the data accommodated in exclusive tree register ACR changes in the course of operation progress at the operation of "K.maximum value tree generation unit", data in allelic exclusive tree register ICR is kept constant during the operation of this unit.

Explanation is made for assembly requisite TCR. Assembly register TCR is sole register to store varying data in which the maximum tree value tree is assembled.

The operation of "C.maximum value tree construction unit" shown in Fig.135 using above 2 registers is composed 4 processes C1 - C2.

The name of process C1 is "input of allelic exclusive tree". The faculty of this process is described as: "Output of maximum value tree generation unit which is allelic exclusive tree group is introduced and stored in allelic exclusive register ICR. This allelic exclusive tree group has a selected tree with highest tree value and attribute "f" together with other exclusive trees that are placed after the selected tree and are arranged in descending order of their accumulated tree values. The selected tree having designated node as topmost node is introduced in assembly register TCR. The node designated as topmost node of maximum tree value tree is called topmost node of maximum tree value tree."

The node designated to be the topmost node of maximum tree value tree is called "designated topmost node". The "designated topmost node" can be different from the topmost node at the output of "K.maximum value tree generation unit". When the topmost node here is different from the topmost node of "K.maximum value tree generation unit", the maximum tree value tree of partial tree generated at "K.maximum value tree generation unit".

The name of process C2 is "decision over completion of construction". The faculty of this process is described as: "This process surveys the existence of "#" symbol in the tree structures accommodated in assembly register TCR. The existence "#" symbol shows that there is sill unconnected leaf node. When process C2 generates decision "yes", the operation goes to process C3 to continue assembly. When process C2 generates decision "no", operation goes to process C4 to complete operation of "C.maximum value tree construction unit".

The name of process C3 is "node merge". The faculty of this process is described as:"(1) The node having least node number among nodes with symbol # stored in assembly register TCR is chosen as processing object. (2)The exclusive tree having topmost node whose node number is identical with the node number of processing object and, moreover, having attribute "f" is chosen from trees in allelic exclusive tree register ICR. The copy of chosen exclusive tree is obtained from ICR without altering the data in ICR. (3)The node consisting processing object and the topmost node of exclusive tree obtained from ICR are merged together. Symbol "#" and attribute "f" are removed from merged node. By selecting node of least node number, higher node can be obtained from OR tree nodes."

The name of process C4 is "output of assembled tree with maximum tree value". The faculty of this process is described as: "A tree in assembly resister TCR is output as the output of maximum tree value tree construction unit."

Hereafter, the operation of "C.maximum value tree construction unit" when the accommodated data in allelic exclusive tree register ACR in "K.maximum value tree generation unit" shown in Fig. 125 is input to "C.maximum value tree construction unit", is traced.

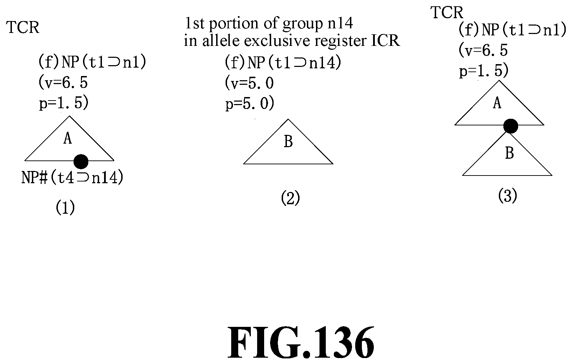

First, the case where the output of "K.maximum value tree generation unit" is the allelic exclusive tree group array of Fig.130 and this is input to "C.maximum value tree construction unit". Here also, the illustration of operation is made after title enclosed by rectangular parenthesis "[]". The tree structures generated during the operation of "C.maximum value tree construction unit" are shown in Fig.136.

[C1]The allelic exclusive tree group array shown in Fig.130 that has trees with accumulated tree value and selected trees with attribute "f", is given by "K.maximum value tree generation unit". Node n1 is designated as the topmost node of assembled maximum tree value tree. Node number n1 is the uppermost node of output analysis tree. The exclusive tree of Fig.136(1) which is selected tree with attribute "f" of the allelic exclusive tree group of node number n1 is input to assembly register TCR.

Operation goes to process C2. As the configuration of Fig.136(1) has a node n14 having "#" symbol, process C2 generates decision "yes" and operation goes to process C4.

[C3]Process C3 designates n14 which is the sole node of "#" symbol as the processing object and C3 obtains, by copying from allelic exclusive tree group of node n14, the exclusive tree B having attribute "f" shown in Fig.136(2) and C3 merges node of processing object in assembly register TCR with the topmost node of the tree obtained by copying. Furthermore, the entire information including "#" symbol and attribute "f" is deleted. As a result, the tree structure in Fig.136(3) is obtained.

Operation goes to process C2. As there is no "#" attached node as seen in Fig.136(3), process C2 generates decision "no" and operation goes to process C4.

[C4]The data accommodated in assembly register TCR shown in Fig.136(3) is output as the maximum tree value tree of designated node n1.

The above is the operation trace of "C.maximum value tree construction unit" for the input allelic exclusive tree group array in Fig.130. The allelic exclusive tree group array in Fig.130 is generated by the process where the output of "U.upper covering module=upper covering part" is input to "K.maximum value tree generation unit" without deformation giving rise to the output of "K.maximum value tree generation unit" seen above.

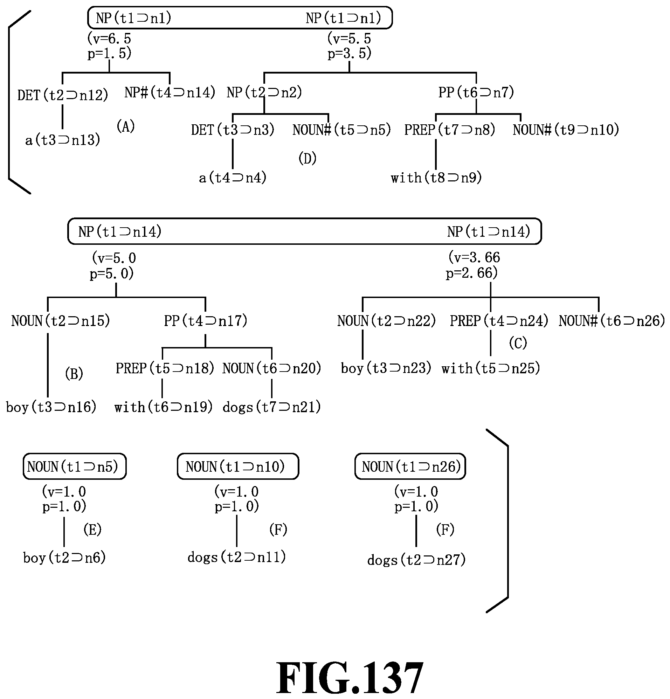

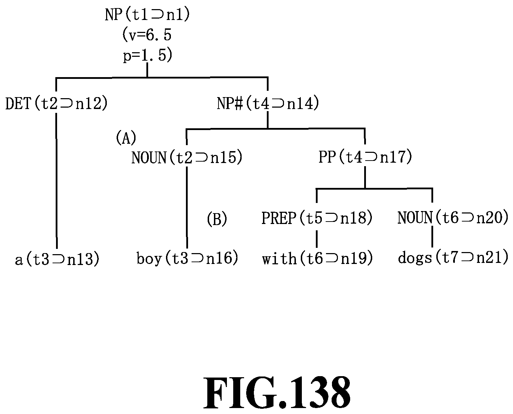

The output of "K.maximum value tree generation unit" shown in Fig.130, the output of "C.maximum value tree construction unit" for designated topmost node n1 shown in Fig.136(3) and maximum tree value tree with designated topmost node n1 shown in Fig.133(1) which is obtained by observation, are all described by abbreviated expression. The original expression of allelic exclusive tree group array of Fig.130 is array in Fig.137 through the corresponding relation between Fig.130 and Fig.120. The original expression of output of "C.maximum value tree construction unit" for designated node n1 shown in Fig.136(3) is shown in Fig.138.

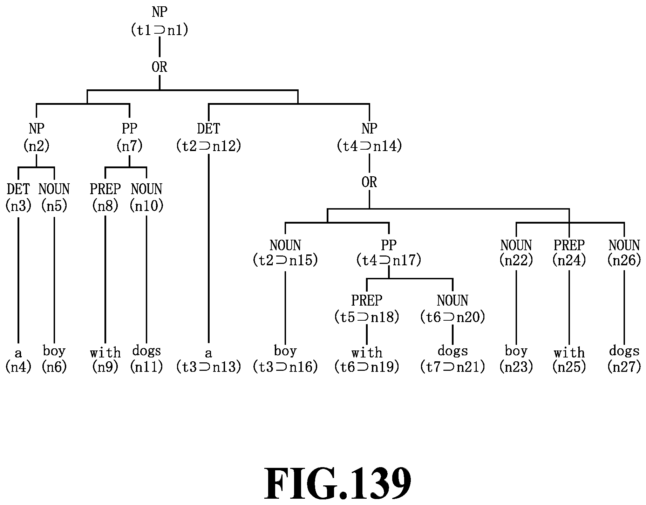

Fig.139 is obtained by superposing the analysis tree in Fig.138 to the input OR tree of "U.upper covering module" shown in Fig.77(1) at which node covering relations by temporal exclusive tree nodes are attached to the nodes coincident with output analysis tree. The superposing is expressed by annotation using "⊃" symbol. Observing Fig.139, it is found that selection of partial tree to the right is necessary at the upper OR node and selection of partial tree to the left is necessary at the lower OR node. The maximum tree value here is the "v" value at the topmost node of the tree in Fig.138 and is 6.5.

The operation described here is the generation process of maximum tree value tree of node n1 which is the topmost node of analysis tree by action of "K.maximum value tree generation unit" in Fig.125 and "C.maximum value tree construction unit" in Fig.135 at the "G.parsed tree generation module" shown in Fig.119. The "G.parsed tree generation module" has the portion "X.unit for detecting non-inclusion of extra-regional forbidden tree in exclusive tree" and the effect of this unit is not treated yet. Hereafter, The mutual relationship between "X.unit for detecting non-inclusion of extra-regional forbidden tree in exclusive tree" and "K.maximum value tree generation unit" when the former is activated, is explained hereafter.

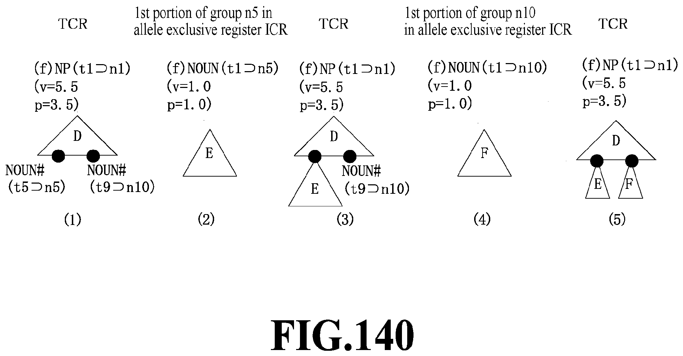

The output of "K.maximum value tree generation unit" taking the data shown in Fig.131 as it's input which is obtained by deleting an exclusive tree from the allelic exclusive tree array group used hitherto, is shown in Fig.132. The operation of "C.maximum value tree construction unit" when this output is introduced as the input, is traced. Here also, the illustration of operation is made after title enclosed by rectangular parenthesis "[]". The tree structures generated during the operation of "C.maximum value tree construction unit" are shown in Fig.140.

[C1]The allelic exclusive tree group array shown in Fig. 132 that has trees with accumulated tree value and selected trees with attribute "f" is given by "K.maximum value tree generation unit". The exclusive tree of Fig.140(1) which is selected tree with attribute "f" of the allelic exclusive tree group of node number n1 is input to assembly register TCR. Operation goes to process C2. As there are nodes n5 and n10 with symbol "#", this process generates decision "yes" and operation goes to process C2.

[C3]Process C3 designates n5 which has smallest node number among nodes with symbol "#" symbol as the processing object and C3 obtains, by copying from allelic exclusive tree group of node n5, the sole exclusive tree E having attribute "f" shown in Fig.140(2) and C3 merges node of processing object in assembly register TCR with the topmost node of the tree obtained by copying. Furthermore, the entire information including "#" symbol and attribute "f" is deleted. As a result, the tree structure in Fig. 140(3) is obtained.

Operation goes to process C2. As there is node n10 in the tree of Fig.140(3), this process generates decision "no" and operation goes to process C3.

[C3]Process C3 designates n10 which is the sole node of "#" symbol as the processing object and C3 obtains, by copying from allelic exclusive tree group of node n5, the sole exclusive tree F having attribute "f" shown in Fig.140(4) and C3 merges node of processing object in assembly register TCR with the topmost node of the tree obtained by copying. Furthermore, the entire information including "#" symbol and attribute "f" is deleted. As a result, the tree structure in Fig.140(5) is obtained.

Operation goes to process C2. As the configuration of Fig.140(5) has no "#" attached node, process C2 generates decision "no" and operation goes to process C4.

[C4]The data accommodated in assembly register TCR shown in Fig.140(5) is output as the maximum tree value tree.

The above is operation trace of "C.maximum value tree construction unit".

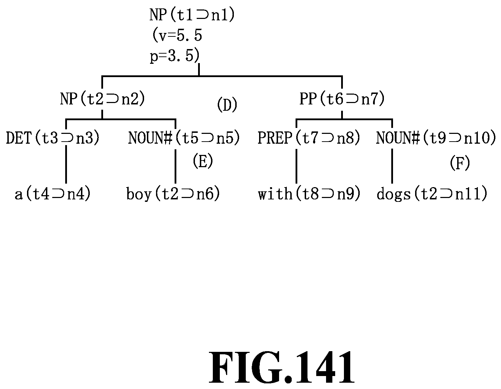

While the output of "C.maximum value tree construction unit" shown in Fig.140(5) obtained from the input of deleted exclusive tree is expressed in abbreviated expression, the original expression of the output is the tree shown in Fig. 141. This tree is different from the maximum tree value tree of Fig.138 expressed in original expression that is generated from the input of no exclusive tree deletion. Both of them are maximum tree value trees of designated node n1 but they are different each other as a result of dilation of exclusive tree.

In the block diagram of "G.parsed tree generation module" shown in Fig.119, the next portion of "K.maximum value tree generation unit" is "X.unit for detecting non-inclusion of extra-regional forbidden tree in exclusive tree" in "W.generation module of parsed tree not including forbidden tree".

The example treated so far is also used hereafter. Here, the operation of "X.unit for detecting non-inclusion of extra-regional forbidden tree in exclusive tree" taking the output of "K.maximum value tree generation unit" shown in Fig.130 as intuit is explained.

The "X.unit for detecting non-inclusion of extra-regional forbidden tree in exclusive tree" deletes exclusive trees which are not forbidden-tree-free and composes allelic exclusive tree group array composed solely of exclusive treed of forbidden-tree-free.

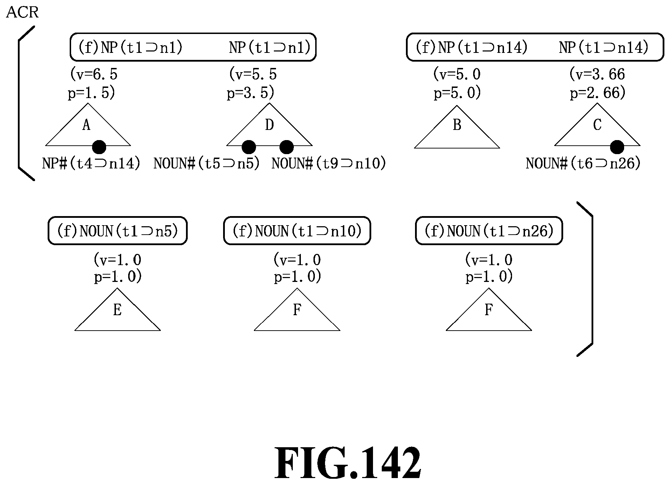

Fig.142 is reproduction of Fig.130 expressing output allelic exclusive tree group array of "K.maximum value tree generation unit". Each allelic exclusive group is composed of exclusive trees having the same OR tree node number at their tompost position. The topmost nodes of exclusive trees in the same group are encircled to show that they belong to the same group. The original expression of allelic exclusive tree group array output from "K.maximum value tree generation unit" is shown in Fig. 143. By the effect of "K.maximum value tree generation unit" exclusive trees of each group is arranged, from the left, in decending oreder of accumulated tree value.

At each node in exclusive trees in allelic exclusive tree group arrays shown in Fig.143, an OR tree node number covered by the exclusive tree node. In the case where a leaf node of an exclusive tree and the topmost node of another exclusive tree cover nodes of the same OR tree number, these nodes can be merged into single node as seen in the explanation of "K.maximum value tree generation unit". The "C.maximum value tree construction unit" shown in Fig. 135 composes analysis tree by repetition of this process. If a tree thus comopsed is not forbidden-trree-free in the aggregated regison made of an exclusive tree and extra-regional portion of the exclusive tree, this tree is inappropriate and must be elesed . Here the word forbidden-tree-free means any forbidden tree is not coincide with partial tree of tree under under investigation.

At each node of exclusive trees in Fig.143, OR tree number beginning with letter "n" exists after the symbol " $\supset$ " showing that thie node is covered by an exclusive tree node. The the number beginning with letter "t" positioned before the symbol " $\supset$ " is to indicate position of the node in the exclusive tree and is unique to each exclusive tree.

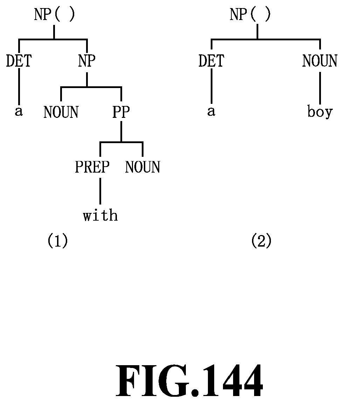

Consideration is made on the case where two forbidden trees in Fig.144 are object of survey on forbidden-tree-free.

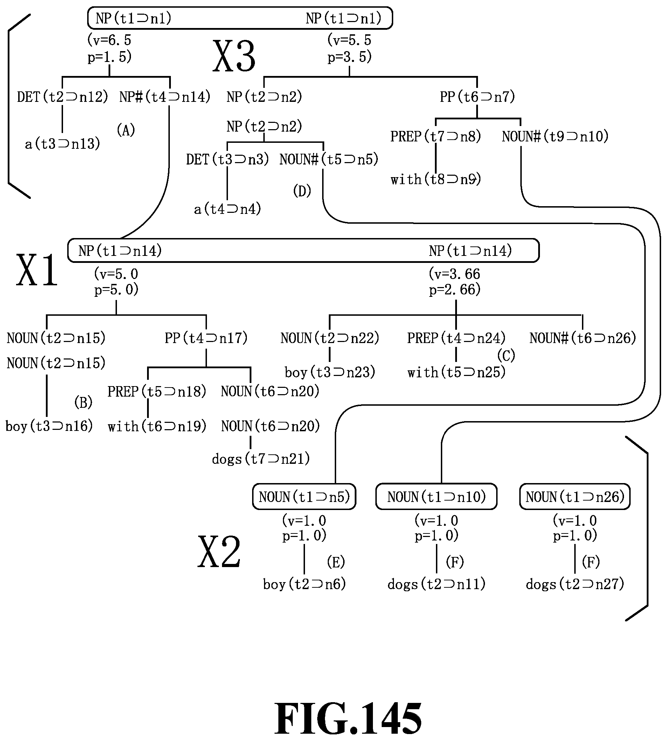

Fig.145 shows the same allelic exclusive tree group array of Fig.143 but the former is ressult of merging nodes covering the same OR tree node. A curve line connecting a leaf node of an exclusive tree with the topmost node of another eclusive tree expresses the merge of nodes.

The tree obtained by merging node at the leaf position of exclusivve tree A in the first exclusive tree group covering OR tree node n14 and the topmost node of exclusive tree B in the 2nd exclusive tree group, contsins the forbidden tree in Fig.144(1). In the exclusive tree B which is first tree in the 2nd tree group in Fig.145, there are two covered nodes n15 and n20 separated verticaly. This separation expresses the border of coverage by forbidden tree.

Here, exclusive tree B at the first position of 2nd allelic exclusive tree group is deleted because this is not forbidden-tree-free. Exclusive tree A at the first position of first allelic exclusive tree group is not deleted because this can be merged with exclusive tree C and merged result is forbidden-tree-free concernig with forbidden tree in Fig.144(1). In Fig.145 deletion of exclusive tree B at first position in 2nd allelic exclusive tree group is expressed by the letter sequence2 "X1".

In this example, the posrtion including the topmost node of exclusive tree A at first position in first allelic exclusive tree group includes the forbidden tree. The type of "X.unit for detecting non-inclusion of extra-regional forbidden tree in exclusive tree" at which the system generates decision of inclusion only when, as seen in above example, the portion including the topmost node of the exclusive tree includes forbidden tree, is called "X.unit for detecting non-inclusion of extra-regional forbidden tree in exclusive tree" of "topmost node type".

As seen in Fig.145, the tree obtained by merging leaf node covering node n5 of exclusive tree D at 2nd position of first allelic exclusive tree group and the topmost node of exclusive tree E which is sole tree composing 3rd allelic exclusive tree group, includes forbidden tree of Fig.144(2). The node covering node n2 which is vertically separated in two nodes existing in exclusive tree D at 2nd position of first allelic exclusive tree group, shows the border of forbidden tree inclusion. The forbidden tree inclusion of this type does not conform to the condition of "portion including the topmost node".

By the case of connection of exclusive tree D and exclusive tree E, exclusive tree E at 3rd group including forbidden tree is deleted first. Here, deletion of 3rd allelic exclusive tree group is expressed by letter sequence "X2". As a result of this deletion, absence of tree under the node n5 of exclusive tree D at 2nd position of first exclusive tree group happens resulting in the deletion of exclusive tree D. This deletion is expressed by the letter sequence "X3". Node covering node n10 at exclusive tree D and node covering n10 of exclusive tree F are merged together but this merging does not affect forbidden tree inclusion.

At the example of Fig. 144(2) the partial tree having topmost node n2 that is not the topmost node of exclusive tree D at 2nd position of first tree group includes forbidden tree. The "X.unit for detecting non-inclusion of extra-regional forbidden tree in exclusive tree" having ability to generate inclusion decision when the portion of exclusive tree having any node other than leaf node as topmost node includes forbidden tree, is called "X.unit for detecting non-inclusion of extra-regional forbidden tree in exclusive tree" of "entire node type" and "X.unit for detecting non-inclusion of extra-regional forbidden tree in exclusive tree" that requires the condition that the topmost node of exclusive tree includes the topmost node of forbidden tree, is called "X.unit for detecting non-inclusion of extra-regional forbidden tree in exclusive tree" of "topmost node type". At the "entire node type" leaf node of an exclusive tree is not selected as the topmost node of inclusion because the leaf node is the topmost node of connected exclusive tree.

The expression of "extra-regional" in the name of "X.unit for detecting non-inclusion of extra-regional forbidden tree in exclusive tree" represents the ability to detect forbidden tree inclusion on analysis tree that includes a forbidden tree having region of "extra-regional" of an exclusive tree. At both of "topmost node type" and "entire node type", "X.unit for detecting non-inclusion of extra-regional forbidden tree in exclusive tree" deletes an exclusive tree when forbidden tree is contained in the former exclusive tree area.

Here, "first exclusive tree type" and "entire exclusive tree type" which are two types of "X.unit for detecting non-inclusion of extra-regional forbidden tree in exclusive tree" are explained. The "first exclusive tree type" decides that the allelic exclusive tree group under investigation does not include the exclusive tree under investigation when the leftmost exclusive tree is decided to be non-inclusion of forbidden tree skipping investigation from 2nd exclusive tree onward. The "entire exclusive tree type" conducts non-inclusion decision on entire exclusive trees in the allelic exclusive tree group.

The selection among "first exclusive tree type" and "entire exclusive type" and the selection among "topmost node type" and "entire node type" can be done independently. Thus "X.unit for detecting non-inclusion of extra-regional forbidden tree in exclusive tree" has 4 variations.

At the example of array in Fig.145, first exclusive type" generates decision of non-inclusion of forbidden tree in Fig.144(2) when the exclusive tree A at first position of first group is decided to be non-inclusion, skipping the decision of exclusive tree D at 2nd position. On the other hand, "entire exclusive type" generates, as shown in Fig.145, decision on entire exclusive tree. By this operation, the deletion of exclusive trees marked by "X2" and "X3" become possible in addition to the deletion marked by "X1".

Though "exclusive tree type" can save commutation quantity, it may miss deletion of the type of "X2" and "X3" resulting in inaccurate analysis tree selection. As there is possibility that "entire exclusive type may bring about prohibitively large computation quantity when number of allelic exclusive tree group is massive, there may be the measure, as seen in Fig.145, in which "entire exclusive type" is applied until 2nd node merge counted from the highest allelic group and "first exclusive type" is applied at deeper exclusive tree groups.

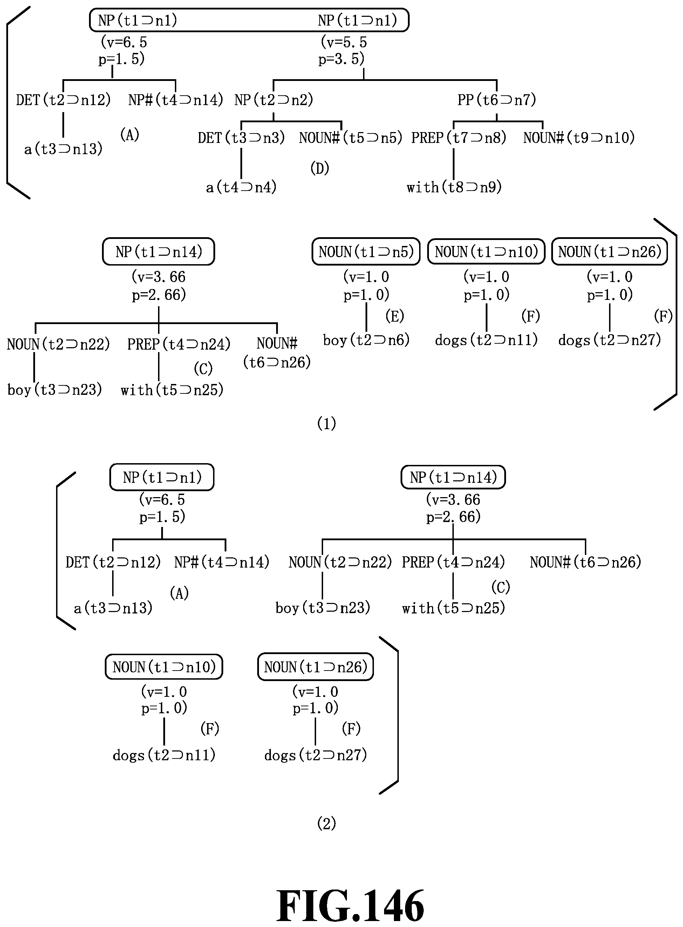

Fig.146 shows allelic exclusive tree group array after deletion of non forbidden-tree-free exclusive tree. Fig.146(1) shows the result of application of "X.unit for detecting non-inclusion of extra-regional forbidden tree in exclusive tree" of "first exclusive tree type" and "topmost node type" and Fig.146(2) shows the result of application of "X.unit for detecting non-inclusion of extra-regional forbidden tree in exclusive tree" of "entire node type" and "entire exclusive tree type".

The allelic exclusive tree group array in Fig.146(1) is obtained after the deletion marked "X1" from that of Fig.145. That in Fig.146(2) is obtained after deletions marked "X1", "X2" and "X3" from the array in Fig.145. The accumulated tree values are calculated by human observation.

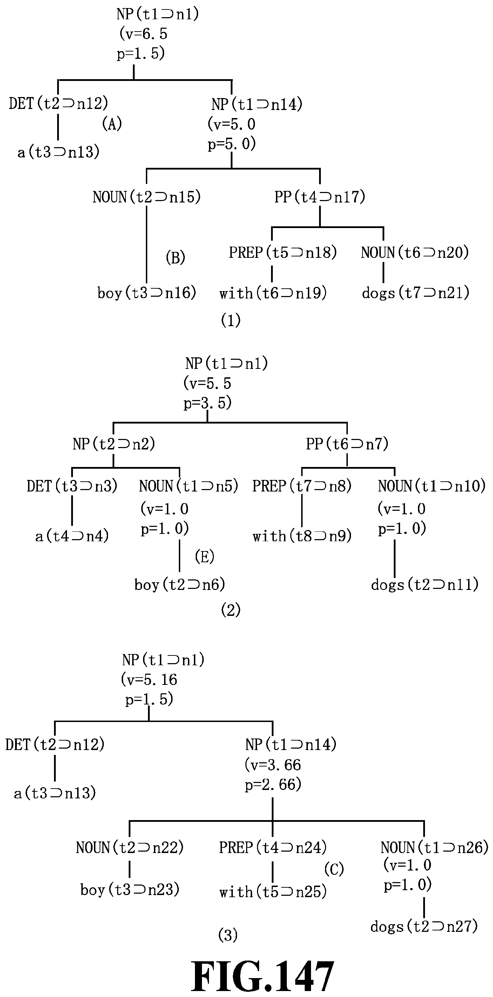

Fig.147 shows change of analysis tree as a result of forbidden tree application. Analysis tree in Fig.147(1) is generated from the allelic exclusive tree group array in Fig.143 which is the situation before application of "X.unit for detecting non-inclusion of extra-regional forbidden tree in exclusive tree" and the accumulated tree value of the analysis tree is the same as that of exclusive tree A and is 6.6. Analysis tree in Fig.147(2) is generated from the allelic exclusive tree after application of "first exclusive tree type" in Fig.146(1) and the accumulated tree value is 5.5. Fig.147(3) is generated from allelic exclusive tree group array in Fig.146(2) and accumulated tree value is 5.16. The larger the number of deleted exclusive tree is the smaller the accumulated tree value at output analysis tree.

The above is explanation of relation between "first exclusive tree type" and "entire exclusive tree type" and between "topmost node type" and "entire node type". Hereafter, detailed explanation on hitherto made operation of "X.unit for detecting non-inclusion of extra-regional forbidden tree in exclusive tree" is made in succession.

First explanation is made on "X.unit for detecting non-inclusion of extra-regional forbidden tree in exclusive tree" of "topmost node type".

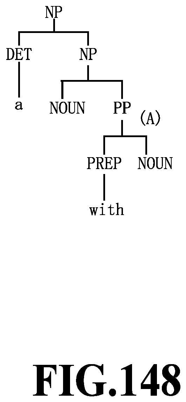

The forbidden tree in Fig.148 exists in the combined region of exclusive tree A and exclusive node B shown in Fig.143. As expressed in its name of "X.unit for detecting non-inclusion of extra-regional forbidden tree in exclusive tree" this unit generates decision of non-inclusion of extra-regional to single exclusive tree.

As shown in Fig.119, "Y.element for detecting non-inclusion of forbidden tree in exclusive tree" composing a portion of "X.unit for detecting non-inclusion of extra-regional forbidden tree in exclusive tree" generates decision on non-inclusion of forbidden tree in single exclusive tree and plays important role in "X.unit for detecting non-inclusion of extra-regional forbidden tree in exclusive tree".

The example of forbidden tree used in explanation of "X.unit for detecting non-inclusion of extra-regional forbidden tree in exclusive tree" of "topmost node type" and "Yelement for detecting non-inclusion of forbidden tree in exclusive tree" is shown in Fig.148. This figure is the same as the figure in Fig.144(1) of brief description.

The following is the explanation of "Yelement for detecting non-inclusion of forbidden tree in exclusive tree". The "Ycomposing node acquisition element" detecting non-inclusion of forbidden tree in single exclusive tree generates decision of upper-coincidence classified in 3 kinds.

First decision is generated when forbidden tree is found to be not included in the exclusive tree under investigation. The case where the topmost nodes of both tree are different belongs to the case of first decision. This decision result is called decision of "locally yes".

The 2nd decision is generated when forbidden tree is totally included in the exclusive tree. This decision result is called decision of "locally no".

The 3rd decision is generated when forbidden tree extends to extra-regional area of the exclusive tree investigate. The example of the case is the relation between forbidden tree in Fig.148 and exclusive tree A. This decision result is called decision of "locally uncertain". In this case, extra-regional portion of forbidden tree exists under the border node marked by symbol "#" In the case of "locally uncertain", the portion under "#" marked node must be sent to another decision part.

The element of "Y.element for detecting non-inclusion of forbidden tree in exclusive tree" doing above mentioned operation is explained hereafter.

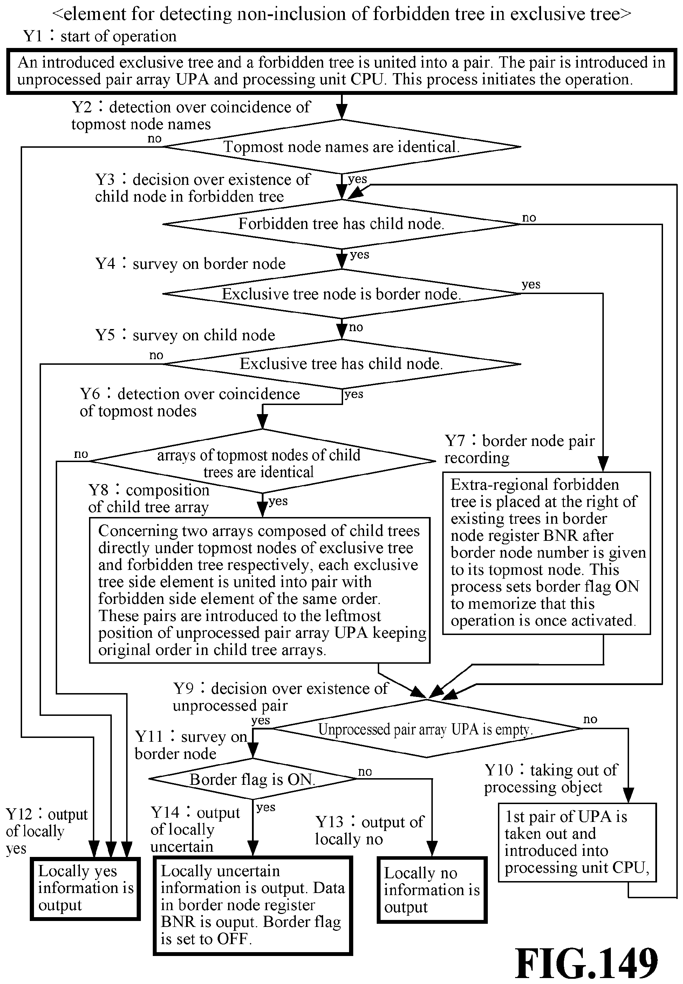

Fig.149 shows flow chart of "Y.element for detecting non-inclusion of forbidden tree in exclusive tree" which generate the decision that an exclusive tree is forbidden-tree-free in relation with a forbidden tree. This flow chart receives an exclusive tree and a forbidden tree and generates above-mentioned 3 kinds of decision. As a matter of course, border nodes of exclusive tree and generally plural pairs concerning to extra-regional forbidden tree.

Hereafter registers and arrays used in the flow chart of Fig.149.

Explanation is made on unprocessed pair array UPA. This array accommodates pairs composed of partial exclusive trees that are decision objects of forbidden-tree-free and partial forbidden tree and controls operation of "Yelement for detecting non-inclusion of forbidden tree in exclusive tree". The initial data in unprocessed pair array UPA is the input pair composed with exclusive tree and forbidden tree.

Processing unit CPU is the unit to accommodate for short period a pair composed of a partial exclusive tree and a partial forbidden tree, which is treated currently.

Border node register BNR is to accommodate generally plural pairs generated at the decision of "locally uncertain" each of which is composed of a border node number and partial forbidden tree".

The processes in "Y.element for detecting non-inclusion of forbidden tree in exclusive tree" in Fig.149 utilizing above mentioned array and unit are 14 processes of Y1 to Y14. First, the explanation of each process is made.

The name of process Y1 is "start of operation". The faculty of this process is described as:" An introduced exclusive tree and a forbidden tree is united into a pair. The pair is introduced in unprocessed pair array UPA and processing unit CPU. This process initiates the operation of element for detecting non-inclusion of forbidden tree in exclusive tree."

The name of process Y2 is "detection over coincidence of topmost node names". The faculty of this process is described as:" This process surveys coincidence of topmost node numbers of exclusive tree and forbidden tree. When decision is "no" because the exclusive tree and the forbidden tree are apparently different and the exclusive tree does not include the forbidden tree, operation directly goes to process Y12 of "locally yes". When decision is "no" the operation goes to process Y3 to continue inclusion survey because there is possibility that the exclusive tree is not non-inclusion of forbidden tree."

The name of process Y3 is "decision over existence of child node in forbidden tree". The faculty of this process is described as: "This process surveys the existence of child nodes under the topmost node of forbidden tree in processing unit CPU. When decision is "no", operation goes to process Y9 to treat next pair of exclusive tree and forbidden tree because further survey over currently treated forbidden tree is unnecessary from reason that the survey on non-inclusion progresses from top to bottom on both of trees. When decision is "yes", operation goes to process Y4 to continue survey on currently treated forbidden tree.

The name of process Y4 is "survey on border node". The faculty of this process is described as: "This process surveys whether child nodes of present topmost node are border ode to be connected with lower configuration. Node to be connected with lower configuration is "#" attached node as shown in Fig.137 or Fig.143. Decision of "yes" means that exclusive tree runs out in the course of top to bottom survey on both trees. As a matter of course, the border node at exclusive tree side has no child node. As tree in forbidden tree side is found to have child node by the survey of process Y3, the conservation of the pair composed of exclusive tree and forbidden tree is necessary because operation reaches to the border node at exclusive tree side. When process Y4 generates decision "yes", operation goes to process sY7 to conduct the conservation. When process Y4 generates decision "no", operation goes to process Y5 to survey whether node without "#" attribute has child nodes.

The name of process Y5 is "survey on child node". The faculty of this process is described as: "This process surveys whether the topmost node of exclusive tree has child nodes. When process Y5 generates decision "no", operation goes directly to process Y12 from the reason that the exclusive tree does not include forbidden tree by the fact that forbidden tree has child nodes and exclusive tree has no childe node. When process Y5 generates decision "yes", operation goes to process y6 to compare child nodes of both sides.

The name of process Y6 is "detection over coincidence of topmost nodes". The faculty of this process is described as: "This process surveys whether arrays composed of topmost nodes of child trees at exclusive tree side and forbidden tree side are identical. When process Y6 generates decision "no", operation directly goes to process Y12 because exclusive tree does not include forbidden tree. When process Y6 generates decision "yes", operation goes to process Y8 to continue investigation.

The name of process Y7 is "border node pair recording". The faculty of this process is described as: "This process places the extra-regional forbidden tree to the right of meaningful data of border node resister BNR after giving the border node number to it's topmost node. This process also sets the "border flag" ON to memorize that this process Y7 is once activated.

The name of process Y8 is "composition of child tree array". The faculty of this process is described as: "Concerning two arrays composed of child trees directly under topmost nodes of exclusive tree and forbidden tree respectively, each exclusive tree side element is united into pair with forbidden side element of the same order. These pairs are introduced to the leftmost position of unprocessed pair array UPA keeping original order in child tree arrays."

The name of process Y9 is "decision over existence of unprocessed pair". The faculty of this process is described as: "This process surveys whether unprocessed pair composed of exclusive tree and forbidden tree is absent in unprocessed pair array UPA. When process Y9 generates decision "no", operation goes to process Y19 to continue investigation on unprocessed pair. When process Y9 generates decision "yes", operation goes to process Y11 to survey whether border nodes were processed in the past because occurrence of coincidence between exclusive tree and forbidden tree are possible.

The name of process Y10 is "taking out of processing object". The faculty of this process is described as: "This process takes out the first pair form unprocessed pair array UPA and introduces it to processing unit CPU."

The name of process Y11 is "survey on border node". The faculty of this process is described as: "This process surveys whether border flag ON expressing that process Y7 is activated is set to ON. When process Y11 generates decision "no", non-inclusion of forbidden tree in exclusive tree at entire partial exclusive trees happens and partial forbidden tree is found to fail before reaching border nodes. This shows that the input exclusive tree is not non-inclusion of forbidden tree. Accordingly operation goes to process Y13 expressing that the exclusive tree include the forbidden tree when decision "no" is generated. When process Y11 generates decision "yes", the input exclusive tree is not non-inclusion at the range of presently treated exclusive tree. In this case, operation goes to process Y14 to conduct inclusion survey at lower configuration.

The name of process Y12 is "output of locally yes". The faculty of this process is described as: "This process generates the decision that exclusive tree is not non-inclusive in the range of presently treated exclusive tree. This generates first decision or "locally yes" mentioned before.

The name of process Y13 is "output of locally no". The faculty of this process is described as: "As the operation of "" finds that the whole of forbidden tree is included in the region of current exclusive tree, this unit generates decision "locally no". In this case, the exclusive tree must be deleted. The unit generates aforementioned 2nd decision or "locally no".

The name of process Y14 is "output of locally uncertain". The faculty of this process is described as: "This process generates the information that the currently treated exclusive tree includes forbidden tree in its region but extra-regional forbidden tree exists. Beside the declaration that the output is "locally uncertain", "Yelement for detecting non-inclusion of forbidden tree in exclusive tree" must generate generally plural pairs of border node numbers and extra-regional forbidden trees accommodated in border node register BNR. This unit generates aforementioned 3rd decision or "locally uncertain".

The example formerly used is also used at the explanation of "Yelement for detecting non-inclusion of forbidden tree in exclusive tree". Thus one of input to "Yelement for detecting non-inclusion of forbidden tree in exclusive tree" is the output of "K.maximum value tree generation unit" shown in Fig.143. Accordingly, the operation trace of "Yelement for detecting non-inclusion of forbidden tree in exclusive tree" having the flow chart of Fig.149 generating the decision whether exclusive trees in allelic exclusive tree group array in Fig.143 includes the forbidden tree in Fig.148 is done. By observation, it is found that the tree composed of exclusive trees A and B is not forbidden-tree-free of the forbidden tree in Fig.148. As seen in Fig.145, this tree is analysis tree of maximum tree value.

The "Y.element for detecting non-inclusion of forbidden tree in exclusive tree" surveys whether an exclusive tree is forbidden-tree-free independently to each exclusive tree. Accordingly, "Y.element for detecting non-inclusion of forbidden tree in exclusive tree" will generate the decision "locally uncertain" via it's process Y14 in relation to exclusive tree A in Fig.143 and must generate decision "locally no" via process Y13 in relation to exclusive tree B in Fig.143.

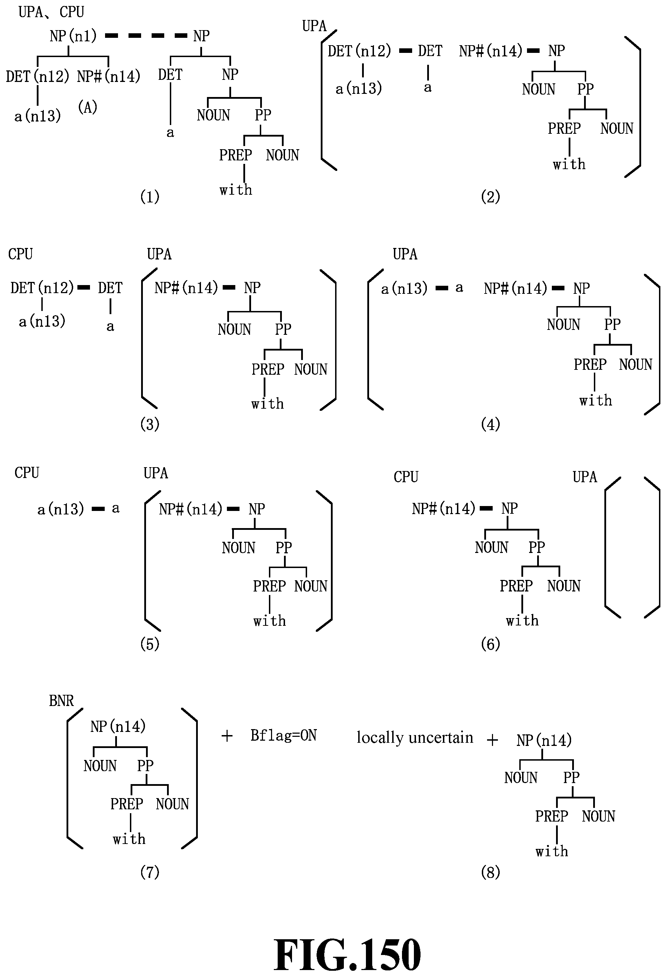

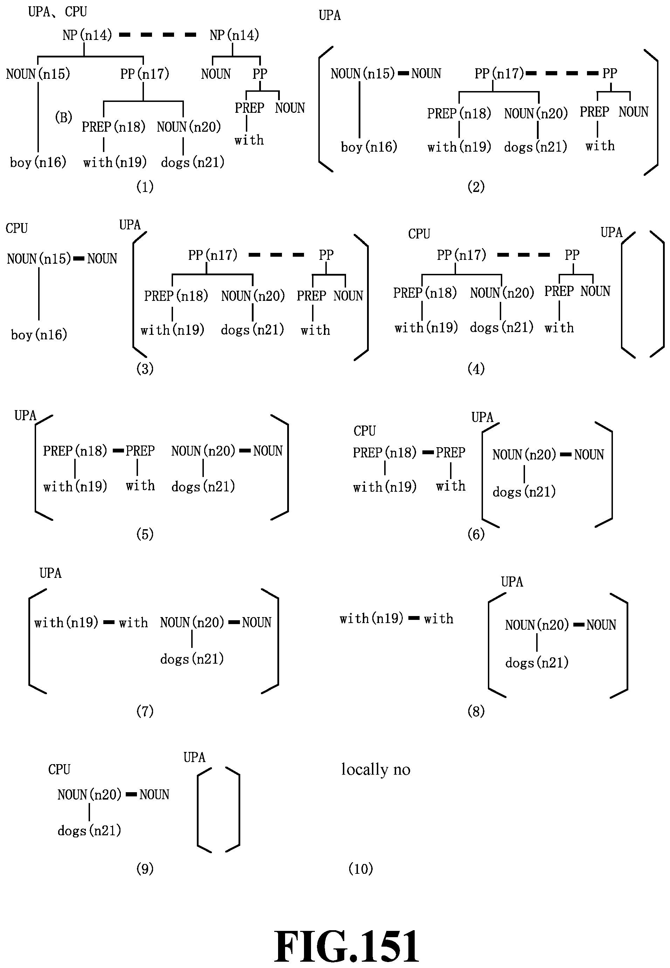

Here, explanation is made with the use of original expression to treat details of tree structure. The operation accompanying substantial change in accommodated data is explained after the title enclosed by parenthesis "[]". The operation of no data alternation is described, without title, between operations with substantial change. Fig.150 and Fig.151 show various sorts of tree structures generated at the operation process.

[Y1]The operation of "Yelement for detecting non-inclusion of forbidden tree in exclusive tree" begins by receiving the pair composed of exclusive tree A in Fig.150(1) and forbidden tree in Fig.148 into unprocessed pair array UPA and processing unit CPU. The exclusive tree is obtained, from the exclusive tree in Fig.146, to have information necessary only for the detection of exclusive-tree-free. Especially the symbol "#" of lower portion connection is important. The pair composed of exclusive tree and forbidden tree is expressed by connecting exclusive tree to the left and forbidden tree to the right with dotted line. From now on, the names of array, unit and register where data are accommodated are positioned upper left portion of the data.

As the topmost nodes are identical as shown in Fig.150(1), the decision of process Y2 is "yes" and operation goes to process Y3. As forbidden tree has child nodes of DET and NP, process Y3 generates decision "yes" and operation goes to process Y4. As the topmost node of exclusive tree is not bordering node, process Y4 generates decision "no" and operation goes to process Y5. As exclusive tree also has child nodes, process Y5 generates decision "yes" and operation goes to process Y6. As arrays of topmost nodes of child partial tree are both "DET NP", process Y6 generates decision "yes" and operation goes to process Y8.

[Y8]From child partial tree array directly under the topmost node of exclusive tree and that of forbidden tree, pairs each of which is composed of element child partial exclusive tree positioned at an order in it's array and element child partial tree positioned at the same order of former child partial exclusive child tree, are made and introduced in unprocessed pair array UPA conserving their order resulting in the data in Fig.150(2).

As seem in Fig.150(2), unprocessed pair array UPA is not empty, the process Y9 generates decision "no" and operation goes to process Y10.

[Y10]From unprocessed pair array UPA, the first term is taken out and introduced in processing unit CPU. As a result the data in UPA and CPU shown in Fig.150(3) is obtained.

As seen in Fig. 150(3), forbidden tree in processing unit CPU has a child node "a", process Y3 generates decision "yes" and operation goes to process Y4. The topmost node of exclusive tree in not border node, process Y4 generates decision "no" and operation goes to process Y5. As exclusive tree has a child node, process Y5 generates decision "yes" and operation goes to process Y6. As arrays of topmost nodes of child partial trees are both "a" at both side, process Y6 generates decision "yes" and operation goes to process Y8.

[Y8]From child partial tree array directly under the topmost node of exclusive tree and that of forbidden tree, pairs each of which is composed of element child partial exclusive tree positioned at an order in it's array and element child partial tree positioned at the same order of former child partial exclusive child tree, are made and introduced in unprocessed pair array UPA conserving their order resulting in the data in Fig.150(4).

As seem in Fig.150(4), unprocessed pair array UPA is not empty, the process Y9 generates decision "no" and operation goes to process Y10.

[Y10]From unprocessed pair array UPA, the first term is taken out and introduced in processing unit CPU. As a result the data in UPA and CPU shown in Fig.150(5) is obtained.

As seen in Fig.150(5), forbidden tree in processing unit CPU has no child node, process Y3 generates decision "no" and operation goes to process Y9. The operation transfers to process Y9 without anything is done to the data in CPU means that the current pair in CPU is a portion of forbidden tree inclusion. Unprocessed pair array UPA has data as seen in Fig.150(5), process Y9 generates decision "no" and operation goes to process Y10.

As forbidden tree in processing unit CPU has nod child node as seen in Fig.150(6), process Y3 generates decision "yes" and operation goes to process Y4. As exclusive tree is a border node, process Y4 generates decision "yes" and operation goes to process Y7.

[Y7]After attaching the border node number to the topmost node of forbidden tree, the tree is introduced to the right of data stored in border node register BNR. Furthermore, process Y7 sets border flag ON to memorize that this operation is once activated. As a result, the data in border node register BNR and situation of border flag shown in Fig.150(7) are obtained. Boarder flag is denoted as B-flag.

As unprocessed pair array UPA is empty, process Y9 generates decision "yes" and operation goes to process Y11. As border flag is ON as seen in Fig.150(7), decision Y11 generates decision "yes" and operation goes to process Y14.

[Y14]As seen in Fig.150(8), this process generates the information of "locally uncertain". Simultaneously, The extra-regional forbidden tree shown in Fig.150(8) is output. This tree has the information of "n14" at its topmost node. The node number n14 is OR tree node number of "#" attributed node in exclusive tree in Fig.150(1).

The survey of forbidden tree inclusion for exclusive tree A in Fig.150(1) ends with decision of "locally uncertain" and output of extra-regional-forbidden tree in Fig.150(18). As seen in Fig.150(8), extra-regional forbidden tree has the information that the topmost node of the forbidden tree must include node n14.

Hereafter, the operation of "Yelement for detecting non-inclusion of forbidden tree in exclusive tree" in Fig.149 at the survey whether the exclusive tree to the left in the allelic exclusive tree group having node n14 as the topmost node includes the forbidden tree in Fig.150(8), is traced.

The exclusive tree here is obtained, from the exclusive tree of topmost node n14 in Fig.143, to have information necessary only for the detection of exclusive-tree-free. It is obvious by observation that the exclusive tree to the left includes the forbidden tree of Fig.150(6).

Fig.151 shows tree configurations generated at the operation process. Here also, the operation accompanying substantial change in accommodated data is explained after the title enclosed by parenthesis "[]". The operation of no data alternation is described, without title, between operations with substantial change. Here also, a pair of exclusive tree and forbidden tree is expressed by the shape where exclusive tree to the left is connected with dotted line with forbidden tree to the right. As before, names of array, register and unit are placed at upper left position of the data accommodated in them.

[Y1]As seen in Fig.151(1), the pair of exclusive tree B and extra-regional forbidden tree is introduced in unprocessed pair array UPA and processing unit CPU initiating operation of "Y.element for detecting non-inclusion of forbidden tree in exclusive tree".

As the topmost nodes are identical as shown in Fig.151(1), the decision of process Y2 is "yes" and operation goes to process Y3. As forbidden tree has child nodes of NOUN and PP, process Y3 generates decision "yes" and operation goes to process Y4. As the topmost node of exclusive tree is not bordering node, process Y4 generates decision "no" and operation goes to process Y5. As exclusive tree also has child nodes, process Y5 generates decision "yes" and operation goes to process Y6. As arrays of topmost nodes of child partial tree are both "NOUN PP", process Y6 generates decision "yes" and operation goes to process Y8.

[Y8]From child partial tree array directly under the topmost node of exclusive tree and that of forbidden tree, pairs each of which is composed of element child partial exclusive tree positioned at an order in it's array and element child partial tree positioned at the same order of former child partial exclusive child tree, are made and introduced in unprocessed pair array UPA conserving their order resulting in the data in Fig.151(2).

As seem in Fig.151(2), unprocessed pair array UPA is not empty, the process Y9 generates decision "no" and operation goes to process Y10.

[Y10]From unprocessed pair array UPA, the first term is taken out and introduced in processing unit CPU. As a result the data in UPA and CPU shown in Fig.151(3) is obtained.

As seen in Fig.15 1(3), forbidden tree in processing unit CPU has no child node, process Y3 generates decision "no". As further survey is unnecessary for this pair, this pair is abandoned and operation goes to process Y9. As unprocessed pair array UPA is not empty as seen in Fig. 151(3), process Y9 generates decision "no" and operation goes to process Y10.

[Y10]From unprocessed pair array UPA, the first term is taken out and introduced in processing unit CPU. As a result the data in UPA and CPU shown in Fig.151(4) is obtained.

As forbidden tree has child nodes "NP NOUN" in the accommodated data of processing unit CPU shown in Fig.151(4), process Y3 situated next generates decision "yes" and operation goes to process Y4. As the topmost node of exclusive tree is not bordering node, process Y4 generates decision "no" and operation goes to process Y5. As exclusive tree has child nodes, process Y5 generates decision "yes" and operation goes to process Y6. The arrays of topmost nodes child partial trees are both "PREP NOUN", process Y6 generates decision "yes" and operation goes to process Y8.

[Y8]From child partial tree array directly under the topmost node of exclusive tree and that of forbidden tree, pairs each of which is composed of element child partial exclusive tree positioned at an order in it's array and element child partial tree positioned at the same order of former child partial exclusive child tree, are made and introduced in unprocessed pair array UPA conserving their order resulting in the data in Fig.151(5).

Since unprocessed pair array UPA is not empty as seen in Fig.151(5), process Y9 generates decision "no" and operation goes to process Y10.

[Y10]From unprocessed pair array UPA, the first term is taken out and introduced in processing unit CPU. As a result the data in UPA and CPU shown in Fig.151(6) is obtained.

As forbidden tree has child nodes "with" in the accommodated data of processing unit, process Y3 situated next generates decision "yes" and operation goes to process Y4. As the topmost node of exclusive tree is not bordering node, process Y4 generates decision "no" and operation goes to process Y5. As exclusive tree also has child nodes, process Y5 generates decision "yes" and operation goes to process Y6. The arrays of topmost nodes child partial trees are both "with", process Y6 generates decision "yes" and operation goes to process Y8.

[Y8]From child partial tree array directly under the topmost node of exclusive tree and that of forbidden tree, pair which is composed of element child partial exclusive tree and element child partial forbidden tree, is made and introduced in unprocessed pair array UPA resulting in the data in Fig.151 (7).

Since unprocessed pair array UPA is not empty as seen in Fig.151 (7), process Y9 generates decision "no" and operation goes to process Y10.

[Y10] From unprocessed pair array UPA, the first term is taken out and introduced in processing unit CPU. As a result the data in UPA and CPU shown in Fig.151(8) is obtained.

As forbidden tree in processing unit CPU has no child node, process Y3 generates decision "no". As further survey is unnecessary for this pair, this pair is abandoned and operation goes to process Y9. As unprocessed pair array UPA is not empty as seen in Fig.151(8), process Y9 generates decision "no" and operation goes to process Y10.

[Y10]From unprocessed pair array UPA, the first term is taken out and introduced in processing unit CPU. As a result the data in UPA and CPU shown in Fig.151(9) is obtained.

As forbidden tree in processing unit CPU has no child node, process Y3 generates decision "no". As further survey is unnecessary for this pair, this pair is abandoned and operation goes to process Y9. As unprocessed pair array UPA is empty, process Y9 generates decision "yes" and operation goes to process Y11. As border flag is not ON as, decision Y11 generates decision "no" and operation goes to process Y13.

As seen in Fig.151(10), this process generates the information of "locally no" and terminates the operation of flow chart in Fig.149. Namely, the situation that exclusive tree includes forbidden tree at the pair shown in Fig.151(1). This situation is obvious by human observation of Fig.151(1).

From this reason, the exclusive tree to the left in the pair of Fig.151(1) must be deleted. Namely, the exclusive tree existing to the left in tree group of node n14 at the output of "K.maximum value tree generation unit" shown in Fig.143 must be deleted from reason that it includes forbidden tree. This result in the deletion of analysis tree with maximum tree value shown in Fig.138 or Fig.147 (1) must be deleted and necessity of finding newly the maximum tree value tree from the output of "K.maximum value tree generation unit" shown in Fig.143.

Next, the operation of "Y.element for detecting non-inclusion of forbidden tree in exclusive tree" in Fig.149 at the survey whether the exclusive tree to the right in the allelic exclusive tree group having node n14 as the topmost node includes the forbidden tree in Fig.150(8), is traced. By human observation, the exclusive tree to the right in allelic tree group of n14 does not include forbidden tree of Fig.150(8) meaning decision of "locally yes".

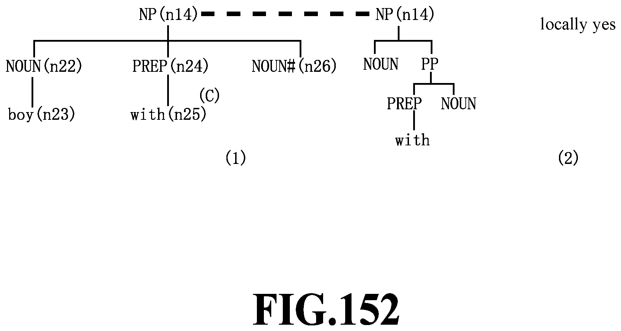

Fig.152 shows tree configurations generated at the operation process. Alike in Fig.151, the operation accompanying substantial change in accommodated data is explained after the title enclosed by parenthesis "[]". The operation of no data alternation is described, without title, between operations with substantial change. Here also, a pair of exclusive tree and forbidden tree is expressed by the shape where exclusive tree to the left is connected with dotted line with forbidden tree to the right.

[Y1]The operation of "Yelement for detecting non-inclusion of forbidden tree in exclusive tree" begins by introducing the pair in Fig.152(1) composed of exclusive tree C and extra-regional forbidden tree in Fig.150(8) to unprocessed pair unit UPA.

As seen in Fig.152(1), the topmost no2 des are identical and process Y2 generates decision "yes" and operation goes to process Y3. As forbidden tree has child nodes "NOUN PP", process Y3 generates decision "yes" and operation goes to process Y4. As topmost node of exclusive tree is not border node, decision is "no" and operation goes to process Y5. As exclusive tree also has child nodes, process Y5 generate decision "yes" and operation goes to process Y6. As the child nodes of both side are different, process Y6 generate decision "no" and operation immediately goes to process Y12 resulting in the decision "locally yes" of "Yelement for detecting non-inclusion of forbidden tree in exclusive tree" as shown in Fig. 152(2). Namely, the decision that exclusive tree to the left in Fig.152(1) does not include the forbidden tree to the right, is generated.

As seen so far, the operation of "Y.element for detecting non-inclusion of forbidden tree in exclusive tree" generating three kinds of decision for inclusion of a forbidden tree in an exclusive tree concerning with all exclusive trees in the output allelic exclusive tree group array of "K.maximum value tree generation unit" shown in Fig.143, is explained.

Hereafter, the operation of "X.unit for detecting non-inclusion of extra-regional forbidden tree in exclusive tree" having "Y.element for detecting non-inclusion of forbidden tree in exclusive tree" as it's composing element is explained.

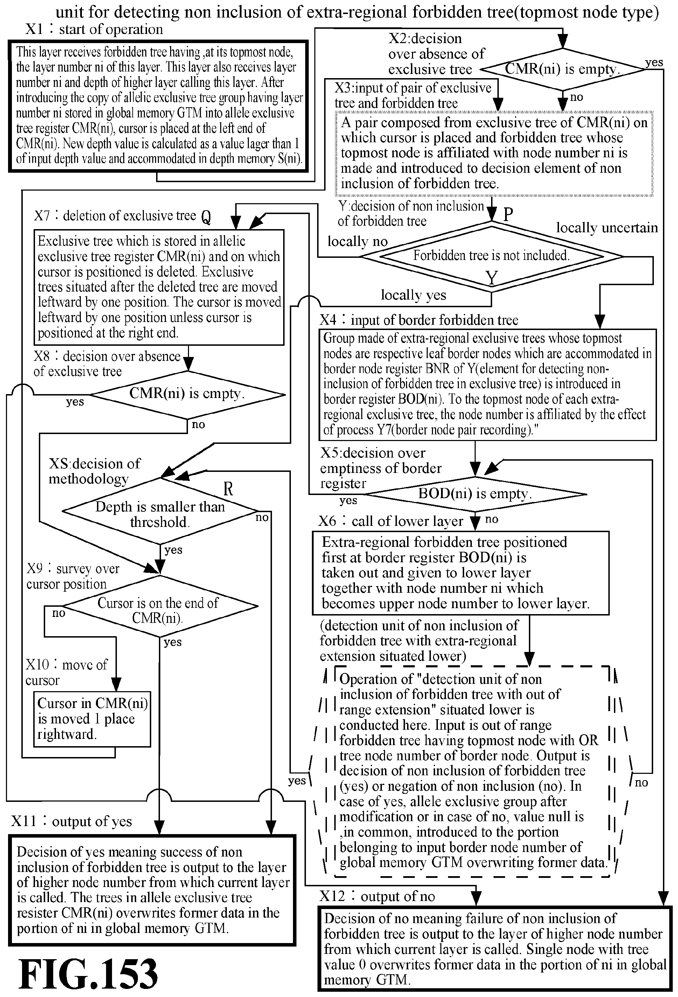

At the explanation made hereafter concerning "X.unit for detecting non-inclusion of extra-regional forbidden tree in exclusive tree", the example so far used is also used as before. The pairs composed of exclusive tree and forbidden trees in Fig.150(1) and Fig.151(1) selected by human observation are introduced to detect the inclusion of forbidden trees in Fig.148 in connected exclusive tree B of exclusive tree A, are introduced at the explanation of "Y.element for detecting non-inclusion of forbidden tree in exclusive tree" which is composing part of "X.unit for detecting non-inclusion of extra-regional forbidden tree in exclusive tree". Following is the description of algorithm of forbidden-tree-free survey at the range extending on plural exclusive trees as seen in above examples. The unit conducting this method is called "" and it's flow chart is shown in Fig.153. The "X.unit for detecting non-inclusion of extra-regional forbidden tree in exclusive tree" is of "topmost node type" with ability to switch over "first exclusive tree type" and "entire exclusive tree type".

First, the registers and memories used in "X.unit for detecting non-inclusion of extra-regional forbidden tree in exclusive tree" is explained. The algorithm of "" conducts recursive operation. The flow chart in Fig.153 treats processing of a layer that has one to one correspondence with a node in OR tree. The registers and memories other than global memory GTM have the expression "(ni)" after their names showing that the portions do the processing of the node ni. First, explanation is made on global memory GTM. This memory accommodates allelic exclusive tree array group as shown in Fig.143. Global memory GTM is accessible from all recursive layers in both directions of reading and writing during recursive operation of "X.unit for detecting non-inclusion of extra-regional forbidden tree in exclusive tree". Accordingly, GTM has no expression of node "ni".

Explanation is made on allelic exclusive tree register CMR(ni). This register is necessary for every layer or OR tree node and thus has argument "ni". This register copies the allelic exclusive tree group of topmost node "ni" from global memory GTM and accommodates in it.

Explanation is made on border register BOD(ni), This register accommodates an array of extra-regional forbidden trees having border node numbers at their topmost nodes as shown in Fig.150(8). This array is generated as output of border node register BNR of preceding element "Y.element for detecting non-inclusion of forbidden tree in exclusive tree" doing forbidden-tree-free decision.

Depth memory S(ni) is explained. This memory accommodates the depth that is the distance between the topmost node of input forbidden tree and the topmost node of forbidden tree in currently treated layer. Depth is the index of switching operation type of "X.unit for detecting non-inclusion of extra-regional forbidden tree in exclusive tree" from "entire exclusive type" to "first exclusive type". When depth is small, the unit operates on "entire exclusive type" which takes much calculation but is accurate at operation, and when depth is larger than a certain threshold, the unit operates on "first exclusive tree type" with less calculation.

The flow chart of "X.unit for detecting non-inclusion of extra-regional forbidden tree in exclusive tree" in Fig.153 includes "Y.element for detecting non-inclusion of forbidden tree in exclusive tree" as it's partial calculation process of process Y that is formerly explained with Fig.149. The "X.unit for detecting non-inclusion of extra-regional forbidden tree in exclusive tree" operates on recursive algorithm. Namely, the part encircled by dotted line is lower flow chart with the same configuration called by the flowchart of Fig.153. The flow chart is consisted of 13 processes excepting the lower layer that are process X1 to process X12 and process XS. Each layer concerning Fig.153 is indexed by the node number of the topmost node of exclusive tree treated by the layer. The letters "P", "Q" and "R" in Fig.153 are used at the explanation of separation into sections of the flow chart of Fig.153. Hereafter, the role of these processes utilizing these 3 memory and registers are explained successively.

The name of process X1 is "start of operation". The faculty of this process is described as: "This process is initiation process of this layer. This layer receives forbidden tree having, at its topmost node, the layer number ni of this layer. This layer also receives layer number ni and depth of higher layer calling this layer. After introducing the copy of allelic exclusive tree group having layer number ni stored in global memory GTM into allele exclusive tree register CMR(ni), cursor is placed at the left end of CMR(ni). New depth value is calculated as a value lager than 1 of input depth value and accommodated in depth memory S(ni). At the topmost layer of the recursion, forbidden tree with topmost node number n1, the number n0 calling this layer and depth 0 are given from outside of the algorithm"

The name of process X2 is "decision over absence of exclusive tree". The faculty of this process is described as: "This process generates decision "yes" when the data obtained from input and accommodated in allelic exclusive tree register CMR(ni) is null and generates decision "no" when not null. The situation of null happens when exclusive tree with topmost OR tree node ni is absent.

The name of process X3 is "input of pair of exclusive tree and forbidden tree". The faculty of this process is described as: "A pair composed from exclusive tree of CMR(ni) on which cursor is placed and forbidden tree whose topmost node is affiliated with node number ni is made and introduced to process Y which is "Yelement for detecting non-inclusion of forbidden tree in exclusive tree".

The "first exclusive tree type" makes good use of the arrangement in descending order of accumulated tree value in the exclusive trees in allelic exclusive tree register CMR(ni), The tree of highest accumulated tree value is called selected tree. This situation is explained before using Fig.123.

The name of process Y is "decision of non inclusion of forbidden tree". The faculty of this process is described as: "This process is the whole of "Yelement for detecting non-inclusion of forbidden tree in exclusive tree" shown in Fig.149. "Y.element for detecting non-inclusion of forbidden tree in exclusive tree" generates three kinds of decisions,"locally yes", "locally uncertain" and "locally no". At the decision of "locally uncertain" accompanies the output composed of accommodated data in border node resister BNR of Y which is introduced to border register BOD(ni) of this flow chart as it is.

The name of process X4 is "input of border forbidden tree". The faculty of this process is described as: "Group made of extra-regional exclusive trees whose topmost nodes are respective leaf border nodes which are accommodated in border node register BNR of Y(element for detecting non-inclusion of forbidden tree in exclusive tree). To the topmost node of each extra-regional exclusive tree, the node number is affiliated by the effect of process Y7(order node pair recording) shown in Fig.149."

The name of process X5 is "decision over emptiness of border register". The faculty of this process is described as: "This process surveys emptiness of border register in the course of loop operation to process extra-regional forbidden trees. When process X6 generates decision "yes", operation goes to process X7 to delete currently treated exclusive tree and when process X6 generates decision "no", operation goes to process X6 to continue survey on current exclusive tree.

The name of process X6 is "call of lower layer". The faculty of this process is described as: "Extra-regional forbidden tree positioned first at border register BOD(ni) is taken out and given to lower layer together with node number ni which becomes upper node number to lower layer."

The name of process X7 is "deletion of exclusive tree". The faculty of this process is described as: "Exclusive tree which is stored in allelic exclusive tree register CMR(ni) and on which cursor is positioned is deleted. Exclusive trees situated after the deleted tree are moved leftward by one position. The cursor is moved leftward by one position unless cursor is positioned at the right end."

The name of process X8 is "decision over absence of exclusive tree". The faculty of this process is described as: "This process survey whether allelic exclusive tree register CMR(ni) becomes empty after repeated deletion of non forbidden-tree-free exclusive trees. When process X8 generates decision "yes" operation goes to process X12 to generate decision "no" of current layer and when process X8 generates decision "no", operation goes to process X9 of completion survey concerning with allelic exclusive tree register CMR(ni)."

The name of process X9 is "survey over cursor position". The faculty of this process is described as: "This process surveys whether the cursor of allelic exclusive tree register CMR(ni) exist at the right end of the register. The cursor at right end means that the forbidden-tree-free survey for entire exclusive trees accommodated in allelic exclusive tree register CMR(ni) is completed. When process X9 generates decision "yes", operation goes to process X12 to generate decision "yes" of this layer and when process X9 generates decision "no", operation goes to process X10 to continue processing of exclusive trees."

The name of process X10 is "move of cursor". The faculty of this process is described as: "This process moves cursor of allelic exclusive tree register CMR one place to the right. By this process, the information of exclusive tree one place to the right in the register is obtained."

The name of process X11 is "output of yes". The faculty of this process is described as: "This process reports decision "yes" to higher layer calling current layer when some exclusive trees in CMR(ni) are forbidden-tree-free. This process also overwrites the portion of node ni of global register GTM with the content of allelic exclusive tree register CMR(ni)."

The name of process X12 is "output of no". The faculty of this process is described as: "This process reports decision "no" to higher layer calling current layer when entire allelic exclusive trees in allelic exclusive tree register CMR(ni) are not forbidden-tree-free. This process also overwrites the portion of node ni of global register GTM with single node tree with tree value 0."

The name of process XS is "decision of methodology". The faculty of this process is described as: "This process conducts special action differs from processes with numbers. This process changes operation methodology of the flow chart consulting the depth currently accommodated in depth memory S(ni). When the current depth is smaller than predetermined threshold, process XS generates decision "yes" and operation goes to process X9 to conduct "entire exclusive type" operation. When the current depth is larger than predetermined threshold, process XS generates decision "no" and operation goes to process X12 to skip further survey and to conduct "first exclusive type" operation. Process X1 increases by 1 more than depth value calling current layer. The more the number of calling times of the flow chart of Fig.153 the more the depth becomes. The depth of outside position calling the top layer of flow chart of Fig.153 is selected 0. Accordingly, the operation of flow chart of Fig.153 begins with depth 1. By appropriate selection of threshold value, appropriate selection between "entire exclusive tree type" and "first exclusive type" becomes possible."

The "X.unit for detecting non-inclusion of extra-regional forbidden tree in exclusive tree" working by "entire exclusive type" operation can delete all non forbidden-tree-free exclusive trees accommodated in an allelic exclusive tree group in allelic exclusive tree memory CMR(ni). The unit working by "first exclusive type" delete only exclusive trees to the left of a forbidden-tree-free exclusive tree from allelic exclusive tree group accommodated in allelic exclusive tree register CMR(ni). To obtain more correct analysis result, exclusive trees in an exclusive tree group must be arranged at descending order of accumulated tree value positioning the tree of maximum accumulated tree value at leftmost position. This arrangement can be composed by flow chart of "K.maximum value tree generation unit" shown in Fig.125.

Concomitance of accuracy of forbidden-tree-free decision and less calculation will be possible by choosing 4 as threshold of process XS where the unit works by "entire exclusive type" on first to 4th lower layer calling at the flow chart of Fig. 153 and works by "first exclusive type" later. The "X.unit for detecting non-inclusion of extra-regional forbidden tree in exclusive tree" of "entire exclusive tree type" is obtained by choosing large value such as 10 as the threshold and "X.unit for detecting non-inclusion of extra-regional forbidden tree in exclusive tree" of perfect "first exclusive tree type" can be realized by choosing the small value such as 0 threshold.

Here, the explanation is mainly made on "entire exclusive tree type" using threshold value 10 and brief explanation is made on "first exclusive tree type" which is a variation of "entire exclusive type".

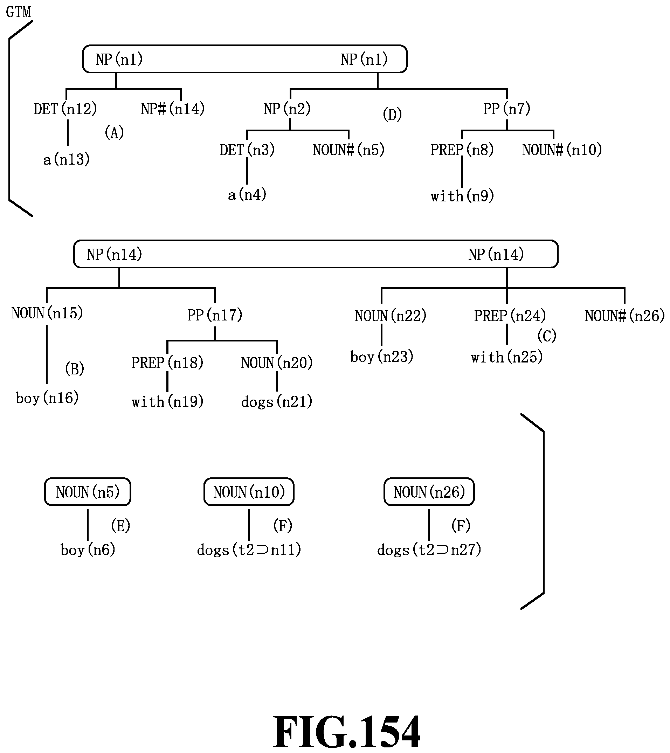

The exclusive trees in Fig.150(1) and Fig.151(1) treated in the explanation of "Y.element for detecting non-inclusion of forbidden tree in exclusive tree" are maximum accumulated value trees respectively of node n1 and node 14 in allelic exclusive array group in Fig.143 or Fig.154. The example is also used for the explanation of "X.unit for detecting non-inclusion of extra-regional forbidden tree in exclusive tree". The output of "K.maximum value tree generation unit" including trees in Fig.150(1) and Fig.151(1) is chosen as input allelic exclusive tree group array that is reproduced as Fig.154. In Fig.154, information not necessary for forbidden-tree-free decision is abbreviated for explanation simplicity.

Before the beginning of the operation of flow chart of "X.unit for detecting non-inclusion of extra-regional forbidden tree in exclusive tree" working by recursive algorithm in Fig.153, the allelic exclusive tree group array in Fig.154 is given as the initial vale of global memory GTM. In Fig.154, the letter sequence GTM is placed at upper left position of the array to show that this array is accommodated in GTM.

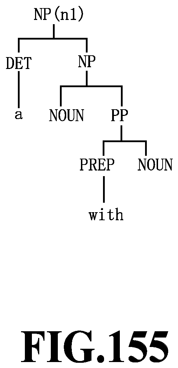

The forbidden tree in Fig.148 making pairs with exclusive trees is also used in succession and is reproduced in Fig.155. Here the OR tree node number n1 is affixed to the topmost node to express it's existing position. Node number n1 is the topmost node of input OR tree and is chosen as the topmost node concerning explanation here.

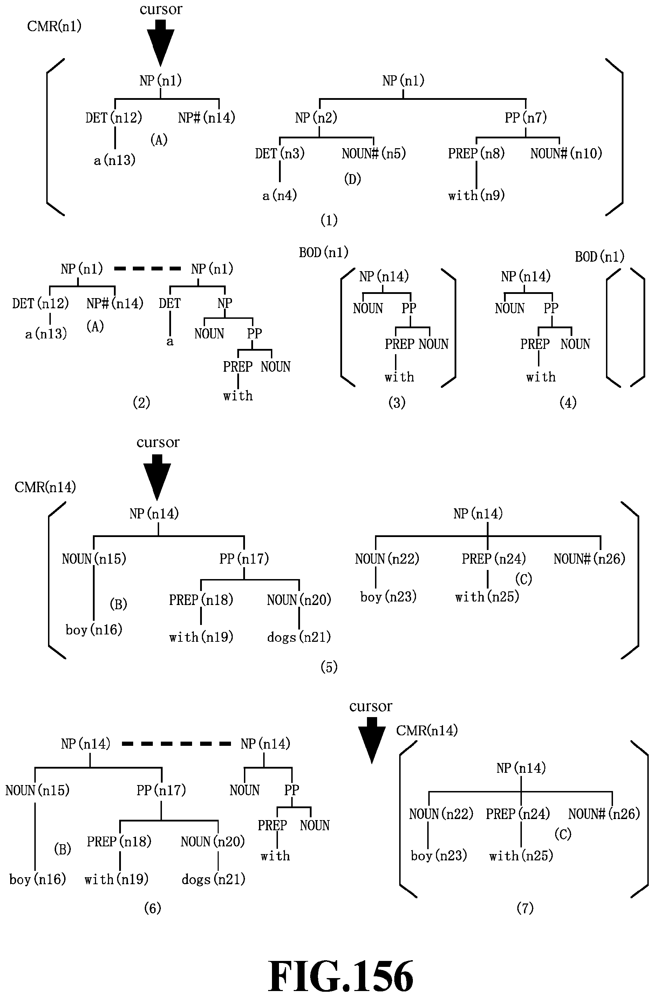

Hereafter, the "entire exclusive type" operation of "X.unit for detecting non-inclusion of extra-regional forbidden tree in exclusive tree" shown in flow chart of Fig.153 receiving the input of Fig.154 and Fig.155 is illustrated using Fig.156 to Fig.158. The large value 10, for example, is chosen here as the threshold of switching between "entire exclusive type" and "first excusive type" to realize complete "entire exclusive tree type" operation.

The operation path where the "Y.element for detecting non-inclusion of forbidden tree in exclusive tree" in Fig.153 generates decision "locally uncertain" is explained here. The operation path of "locally uncertain" must finally merge with path of "locally yes" or "locally no" after investigation concerning with extra-regional trees connected to leaf border nodes. The merge position with "locally yes" path is "yes" decision of lower "X.unit for detecting non-inclusion of extra-regional forbidden tree in exclusive tree" and merge position with "locally no" path is "yes" decision at process X5(decision over emptiness of border register).

When either of lower trees connected with leaf border nodes are forbidden-tree-free, exclusive tree of current layer becomes forbidden-tree-free and merge to "locally yes" occurs. At the first "yes" decision obtained in the course of left to right investigation on lower "X.unit for detecting non-inclusion of extra-regional forbidden tree in exclusive tree", the merge to "locally yes" path occurs.

When investigation on extra-regional-trees connected to leaf border node finishes without obtaining "yes" decision from loser "X.unit for detecting non-inclusion of extra-regional forbidden tree in exclusive tree", process X5 (decision over emptiness of border register) generate decision "yes" and merge with "locally no" path occurs.

Each figures in Fig.156 to Fig.158 has a title composed of current layer number and process name arranged in this order. As the flow chart of "X.unit for detecting non-inclusion of extra-regional forbidden tree in exclusive tree" shown in Fig.153 works on recursive algorithm, the layer number is necessary and the number of the topmost node of exclusive trees treated is used as the layer number.

The description of each process is also expressed by series of layer number and process name and important processes are expressed after the title of above series enclosed by parentheses "[]".

As explained before, the allelic exclusive tree group array in Fig.154 is introduced in global memory GTM before operation initiation of "X.unit for detecting non-inclusion of extra-regional forbidden tree in exclusive tree". The memory is accessible from all layers at both read-out and write-in directions. The declaration that the layer calling this layer is layer n0.

[n1X1]The operation is on the highest position of the recursive operation of the flow chart of Fig.153, the input here is special one and the current node number n1 is mandatorily given. The allelic exclusive tree group shown in Fig.156(1) from the term of this node number in global memory GTM is introduced in allelic exclusive tree register CMR(n1). The situation that the layer calling this layer is layer n0 is recognized. Layer n0 is output object of process n1X11 or n1X12. The forbidden tree of Fig.155 is received as input. Only input forbidden tree has no assignment of covering node but the annotation n1 meaning that the topmost node of mandatrily given forbidden tree covers the node n1, is given to the forbidden tree. The bold downward arrow indicates the cursor position at allelic exclusive tree register CMR(n1) and process n1X1 places the cursor on the leftmost position in CMR(n1). The special layer depth 0 given from outside is increased immediately by 1 at process n1X1 and stored in depth memory S(n1).

As allelic exclusive tree register CMR(n1) is not empty as shown in Fig.156(1), process n1X2 generates decision "no" and operation goes to process n1X3.

[n1X3]The pair composed of the exclusive tree of the cursor in CMR(n1) and forbidden tree in Fig.155 is composed as shown in Fig.156(2) and introduced in process n1Y. This input is the same as the input of "Yelement for detecting non-inclusion of forbidden tree in exclusive tree" explained with Fig.150(1).

As process n1Y(decision of non inclusion of forbidden tree) in Fig.153 is composed of "Y.element for detecting non-inclusion of forbidden tree in exclusive tree", the decision generated is "locally uncertain" or existence of extra-regional partial forbidden tree as shown in Fig.150(8). By this decision, the operation goes to n1X4.

[n1X4]The process n1Y(decision of non inclusion of forbidden tree) outputs, according to the instruction of process Y14 written in the Fig.149, the data in border node register BNR shown in Fig.150(8). This is extra-regional forbidden tree. This process n1X4 introduces the BNP output to border register BOD(n1). Fig.156(3) shows the accommodated data in BOD(ni).

Since border register BOD(n1) is not empty as shown in Fig.156(3), process X1X5 generates decision "no" and operation goes to process n1X6.

[n1X6]The first element of BOD(n1) is taken out and given to the flow chart of the same configuration as that in Fig.153. Fig.156(4) shows the first element and accommodated value in BOD(n1) that is null. This process notifies the lower layer that the calling layer is n1.

[n14X1]This process receives the forbidden tree of Fig.156(4) as input. The forbidden tree has the annotation n14 showing that the topmost node of forbidden tree is on the node n14. Using the annotation as the key, the allelic exclusive group of n14 is obtained from global memory GTM and introduced to allelic exclusive tree register CMR(n14). The data in Fig.156(5) shows the allelic exclusive group introduced. The situation that the layer calling this layer is layer n1 is recognized. Layer n1 is output object of process n14X11 or n14X12. The bold downward arrow indicates the cursor position at allelic exclusive tree register CMR(n14) and process n14X1 places the cursor on the leftmost position in CMR(n14). By the process n14X1, the depth of n14 becomes 2.

As allelic exclusive tree register CMR(n14) is not empty as shown in Fig.156(5), process n14X2 generates decision "no" and operation goes to process n14X3.

[n14X3]The pair composed of the first exclusive tree in CMR(n14) and forbidden tree shown to the left in Fig.156(4) is composed as shown in Fig.156(6) and introduced in process n14Y. This input is the same as the input of "Y.element for detecting non-inclusion of forbidden tree in exclusive tree" explained with Fig.151(1).

As process n14Y(decision of non inclusion of forbidden tree) in Fig.153 is composed of "Y.element for detecting non-inclusion of forbidden tree in exclusive tree", the decision generated is "locally no" or inclusion of forbidden tree in exclusive tree as shown in Fig.151(10). By this decision, the operation goes to n14X7.

[n14X7]The exclusive tree in Fig.156(1) designated as currently treated tree is deleted because of inclusion of forbidden tree and succeeding tree is advanced to the left. As a result, accommodated data in allelic exclusive tree register CMR(n14) becomes that in Fig.156(7). As the deleted tree has been at leftmost position, the cursor moves to the position further left of memory region by the description of process X7 in Fig.153.

As cursor is not on end position of allelic exclusive tree register CMR(n14) as shown in Fig.156(7), process n14X9 generates decision "no" and operation goes to process n14X(10).

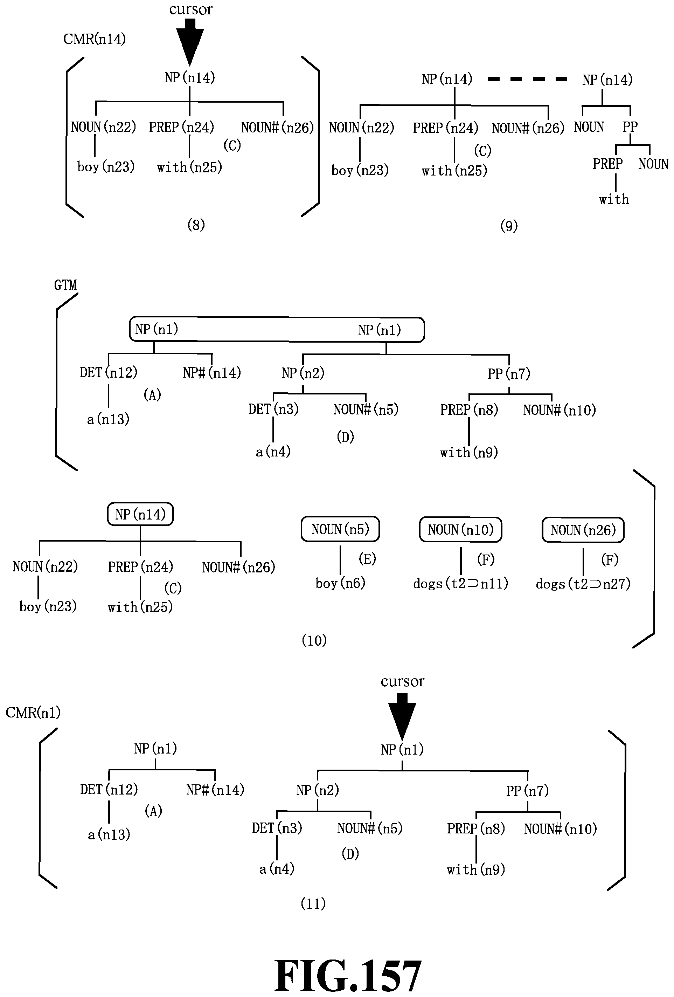

[n14X10]Cursor in allelic exclusive register CMR(n14) is moved rightward by 1 position. The new cursor position is shown in Fig.157(8).

[n14X3]The pair composed of the first exclusive tree in CMR(n14) and forbidden tree shown to the left in Fig.156(4) is composed as shown in Fig.157(9) and introduced in process n14Y.

As process n14Y(decision of non inclusion of forbidden tree) is composed of "Y.element for detecting non-inclusion of forbidden tree in exclusive tree" of Fig.149, the generated decision is "locally yes" or situation that exclusive tree in Fig.157(9) does not include forbidden tree, as shown in Fig.152(2).

At process n14XS(decision of methodology), operation path branches off. When the depth accommodated in S(m14) is smaller than the threshold value, process XS generates decision "yes" and operation goes to n14X9 to continue "entire exclusive tree type" operation and when depth is larger than the threshold value, n14XS generates decision "no" and operation goes to process n14X11 to end the operation of current layer according to the methodology of "first exclusive tree type". As present depth in depth memory S(n14) is 2 and smaller than the threshold value 10, succeeding process is process n14X9.

The next process n14X9 surveys whether cursor of allelic exclusive tree register CMR(n14) is at the end position. As seen in Fig.157(8), cursor is at the end position and this process generates decision "yes" and operation goes to process n14X11.

[n14X11]This process returns the decision of "yes" of forbidden-tree-free to the layer n1 recognized as calling layer of this layer. In addition, this process overwrites the term of n14 of global memory with the data in CMR(n14). As a result, the data in global memory GTM becomes that in Fig.157(10). The number of allelic exclusive tree in allelic exclusive tree group is reduced from former value 2 to 1. In this way, number of exclusive tree is reduced at the inclusion detection of forbidden tree in exclusive tree.

As the response "yes" comes from lower layer n14, the next process is n1XS of layer n1. As the current depth in depth memory S(1) is 1 and threshold value 10 is treated, the depth is smaller than threshold and process n1XS generates decision "yes" and operation goes to process n1X9.

Process n1X9 situated next surveys whether the cursor in CMR(n1) is at the end position. Since cursor is not at the end position as seen in Fig.156(1), process n1X9 generates decision "no" and operation goes to process n1X10.

[n1X10]Cursor in allelic exclusive register CMR(n1) is moved rightward by 1 position. The new cursor position is shown in Fig.157(11).

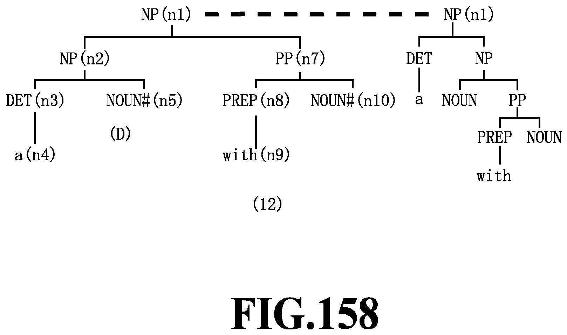

The pair composed of the 2nd exclusive tree in CMR(n1) shown in Fig.157(11) and forbidden tree in Fig.155 is composed as shown in Fig.158(12) and introduced in process n1Y(decision of non inclusion of forbidden tree).

The decision of n1Y(decision of non inclusion of forbidden tree) is "locally yes" as is obvious at Fig.158(12) meaning that the exclusive tree in Fig.158(12) is exclusive-tree-free.

As the threshold is set to 10 and current depth of layer n1 accommodated in S(n1) is 1 and depth is smaller than the threshold, process n1XS generates decision "yes" and operation goes to n1X9.

Process n1X9 situated next surveys whether cursor in allelic exclusive tree register CMR(n1) is the end. As seen in Fig. 157(11), cursor is at the end, this process generates decision "yes" and operation goes to process n1X11.

[n1X11]This process returns the decision "yes" to the layer n0 calling this layer n1 according to the recognition at process n1X1. This process overwrites the term of node n1 in global memory GTM with the data in CMR(n1). As deletion of exclusive tree does not occur at current operation on layer n1, the data in global memory remains the same as that in Fig.157(10).

As layer n1 generate "yes" decision, the operation goes back to layer n0 recognized by n1X1 and situated outside of "X.unit for detecting non-inclusion of extra-regional forbidden tree". This algorithm outputs the data accommodated in global memory GTM and the information of success of forbidden-tree-free test. Namely, this algorithm outputs the allelic exclusive shown in Fig.157(10) obtained from the input shown in Fig.154. From input allelic exclusive tree group array, exclusive tree B in exclusive tree group of n14 is deleted.

The operation of "X.unit for detecting non-inclusion of extra-regional forbidden tree in exclusive tree" working by recursive algorithm, the allelic exclusive " working on "entire exclusive tree type" methodology is explained so far. This methodology is activated when process n14XS decides that depth in depth memory S(n14) is smaller than the threshold. This methodology is to apply forbidden-tree-free test to entire exclusive trees in an allelic exclusive tree group.

The operation of "X.unit for detecting non-inclusion of extra-regional forbidden tree in exclusive tree" working by recursive algorithm, the allelic exclusive " working on "first exclusive type" methodology is explained here. The "first exclusive tree type" is activated when process n14XS decides that depth in depth memory S(14) is larger than the threshold value and "first exclusive tree type" skips further decision activity when the exclusive tree of largest accumulated tree value is found to be forbidden-tree-free. Explanation is made using the same allelic exclusive tree group array and forbidden tree.

Here the threshold value 0 is chosen and explanation of "X.unit for detecting non-inclusion of extra-regional forbidden tree in exclusive tree" working by recursive algorithm, the allelic exclusive " of "first exclusive type" begins at the situation after the operation branch. The operation branches at "no" decision of n14XS succeeding the "yes" decision of n14Y succeeding n14X3.

Process n14XS existing in Fig.153 generates decision "no" and operation goes to process n14X11.

[n14X11]This process returns the decision of "yes" to the layer n1 recognized as calling layer of this layer. In addition, this process overwrites the term of n14 of global memory with the data in CMR(n14). As a result, the data in gloval memory GTM becomes that in Fig.157(10). The deletion of exclusive tree B happens. Here, skipping of investigation on exclusive tree C occurs.

As the response "yes" comes from lower layer n14, the next process is n1XS of layer n1. As the current depth in depth memory S(1) is 1 and threshold value is 0 is treated, the depth is not smaller than threshold and process n1XS generates decision "no" and operation goes to process n1X11.

Here also, investigation skipping to exclusive tree D happens.

[n1X11]This process returns the decision "yes" to the layer n0 calling this layer n1 according to the recognition at process n1X1. This process overwrites the term of node n1 in global memory GTM with the data in CMR(n1). As deletion of exclusive does not occur at current operation on layer n1, the data in global memory remains the same as that in Fig.157(10).

As layer n1 generate "yes" decision, the operation goes back to layer n0 recognized by n1X1 and situated outside of "X.unit for detecting non-inclusion of extra-regional forbidden tree". This algorithm outputs the data accommodated in global memory GTM and the information of success of forbidden-tree-free test. Namely, this algorithm outputs the allelic exclusive shown in Fig.157(10) obtained from the input shown in Fig.154. From input allelic exclusive tree group array, exclusive tree B in exclusive tree group of n14 is deleted. This output is the same as the output of "entire exclusive tree type". The sameness is due to the reason that skipped forbidden-tree-free tests shown in Fig.157(9) and Fig.158(12) result in "yes" or success of forbidden-tree-free and no further deletion of exclusive tree happens. Less calculation of "first exclusive type" is realized from that of "entire exclusive tree type".

On the occasion of the generation of allelic exclusive tree group array in Fig.157(10) from "X.unit for detecting non-inclusion of extra-regional forbidden tree", the seamless explanation of operation of "analysis result selection apparatus at example sentence driven machine translation" with the example used so far becomes possible. Following is the explanation.

First, example tree of Fig.47(a) having common word sequence shown in Fig.45(a) which is detected by "S.common word sequence detection unit" in Fig.39 from outputs of "P.coincidence matrix generation unit" in Fig.35 and "N.adjoining coincident word detection element" in Fig.37 is generated. To thus generated example tree, the operation of "D.dominating node detection unit" in Fig.48 is applied giving rise to example tree with attribute of dominant node in Fig.47(b). To this example tree with attribute of dominant node, operation of "T.composition unit of temporal exclusive tree" in Fig.52 is applied giving rise to the temporal exclusive tree in Fig.47(c).

To the temporal exclusive tree in Fig.47(c) thus obtained, "V" in Fig.65 is applied giving rise to the temporal exclusive tree with pattern value. The allelic exclusive tree group array in Fig.76 composed of exclusive trees A to F is obtained from thus obtained temporal exclusive tree and other temporal exclusive trees introduced by human hand for explanation purposes. To the exclusive obtained by the way explained so far, the name "D" is given.

The allelic exclusive tree group array in Fig.118(109) or Fig.137 or Fig.143 is obtained by upper covering of the OR tree in Fig.77(1) generated from the input sentence by the allelic exclusive tree group array in Fig.76 through the utilization of "U.upper covering module" in Fig.81. The OR tree here is introduced by human hand for explanation purposes and is out of the range of this invention.

To each node of the exclusive trees in Fig.143 which is the output of "U.upper covering module" in Fig.81, OR tree node number covered by the node is filled in and exclusive trees having the same topmost node number are gathered into one group consisting the allelic exclusive tree group array. By Introduction of the allelic exclusive tree group array in Fig.143 into "X.unit for detecting non-inclusion of extra-regional forbidden tree in exclusive tree" of "topmost node type" in Fig.153, the allelic exclusive tree group array in Fig.157(10) not including forbidden tree of Fig.148 and affected by the deletion of exclusive tree B is obtained. Explained so far is the operation of "X.unit for detecting non-inclusion of extra-regional forbidden tree in exclusive tree".

In the module "W.generation module of parsed tree not including forbidden tree" in Fig.119, "K.maximum value tree generation unit" and "C.maximum value tree construction unit" is included in addition to "X.unit for detecting non-inclusion of extra-regional forbidden tree in exclusive tree". By the operation of these units, the output analysis tree is obtained as shown in Fig.119 and explanation is made hereafter for operation of these units.

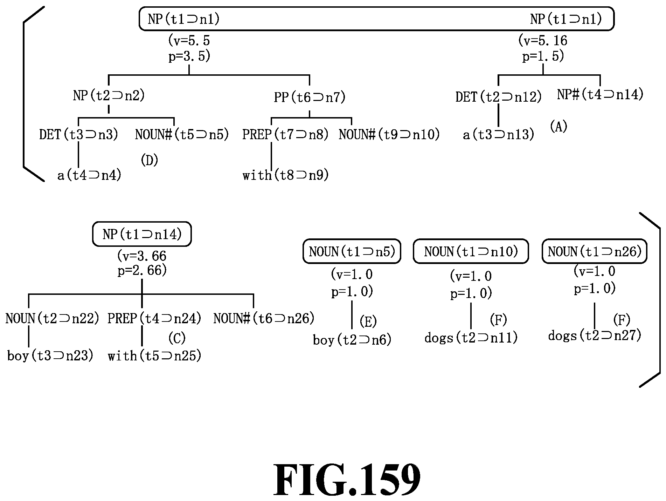

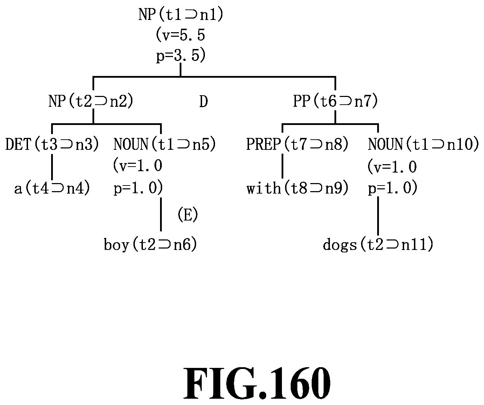

By introduction of the allelic exclusive tree in Fig.157(10) generated by "X.unit for detecting non-inclusion of extra-regional forbidden tree in exclusive tree" into "K.maximum value tree generation unit" in F1g.125, the allelic exclusive tree group array in Fig.159 affiliated with accumulated tree values is obtained. Exchange of order between exclusive trees A and D happens in the allelic exclusive tree group of n1 in which trees are arranged in descending order of accumulated tree value. Inputting this allelic exclusive tree group array into "C.maximum value tree construction unit", the output analysis tree in Fig.160 is obtained as the output. This analysis tree has exclusive tree D generation of which is explained, at it's uppermost position. This analysis tree is analysis tree of largest accumulated tree value among forbidden-tree-free analysis trees generated from the example tree in Fig.47(a) and the OR tree in Fig.77(1) or Fig.82.

Operation explanation on "X.unit for detecting non-inclusion of extra-regional forbidden tree in exclusive tree" in Fig.153 of "entire exclusive tree type" and "first exclusive type" is made within the scope of "topmost node type". Explanation is also made on switching between "entire exclusive tree type" and "first exclusive tree type" according to the depth by methodology change with the use of process XS.

The "topmost node type" of "X.unit for detecting non-inclusion of extra-regional forbidden tree in exclusive tree" generates the decision of inclusion of forbidden tree only under the condition that the topmost node of exclusive tree includes the topmost node of forbidden tree.

As for the case of the example so far used, the structure made of connection of exclusive tree A and B shown in Fig.156(2) and Fig.156(6) is not forbidden-tree-free concerning with forbidden tree in Fig.155, Fig.148 or Fig.144(1). Here, the topmost node of exclusive tree A includes the topmost node of forbidden tree. The "topmost node type" generates decision of inclusion only when topmost node inclusion happens. For the "topmost node type", the outline is illustrated with the use of Fig.144(1), Fig.145 and Fig.147(1).

The "X.unit for detecting non-inclusion of extra-regional forbidden tree in exclusive tree" of "entire node type", does not have the condition of topmost node inclusion and it generates non forbidden-tree-free decision merely when exclusive tree as it is or connection of exclusive trees is not forbidden-tree-free. For the "entire node type", explanation of its outline is made using Fig.144(2) or Fig.145. In this case, the connection of exclusive trees D and F is not forbidden-tree-free concerning with the forbidden tree in Fig.144(2) and the topmost node of exclusive tree D does not include the topmost node of forbidden tree. This kind of inclusion cannot be detected by "topmost type" of "X.unit for detecting non-inclusion of extra-regional forbidden tree in exclusive tree".

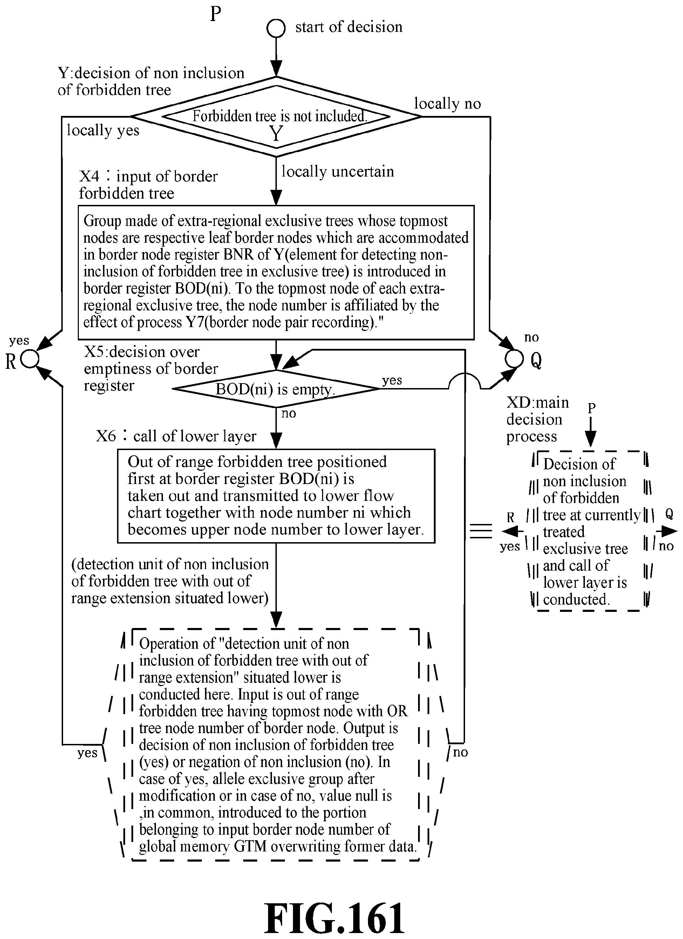

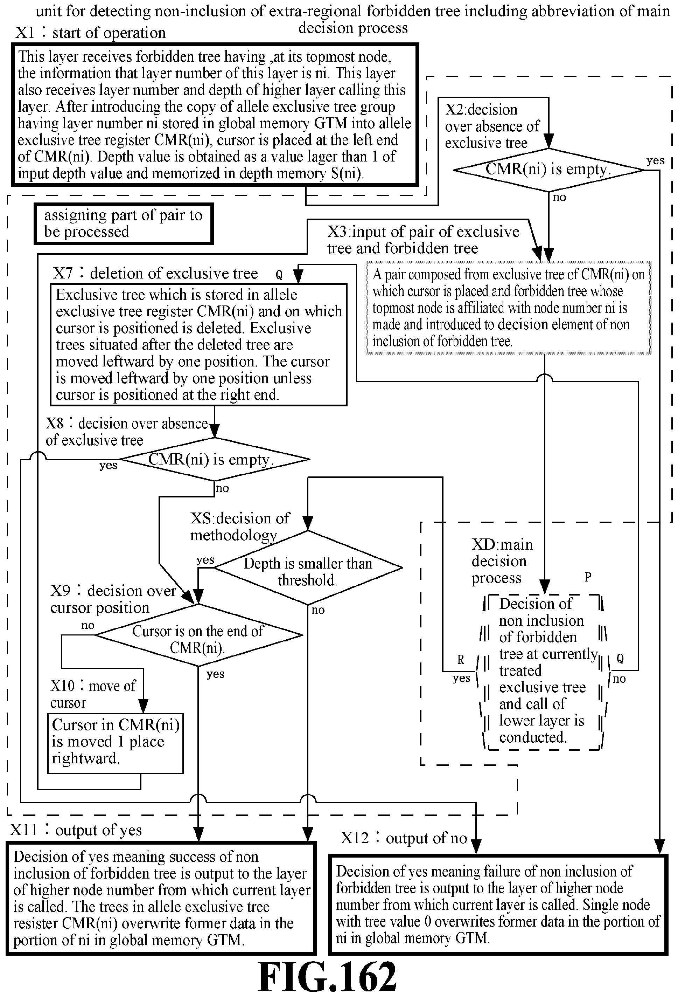

At the flow chart of Fig.153, the portion bounded by point P, Q and R is main decision process of non-inclusion detection and can be treated as single body called XD(main decision process). The main decision process is shown in Fig.161. The portion to the right of congruence symbol is abbreviated expression of XD(main decision process). The flow chart of Fig.161 includes the whole of "X.unit for detecting non-inclusion of extra-regional forbidden tree in exclusive tree" treating lower layer. Of course, the operation of flow chart in Fig.162 is identical with that in Fig.153. This abbreviation of XD(main decision process) is necessary for the preparation of explanation of "entire node type".

This XD(main decision process) takes the pair to exclusive tree and forbidden tree as input and generates decision of "locally yes" or "locally no". In case of "locally uncertain" this portion does not generate decision and turns over to the whole of lower "X.unit for detecting non-inclusion of extra-regional forbidden tree in exclusive tree".

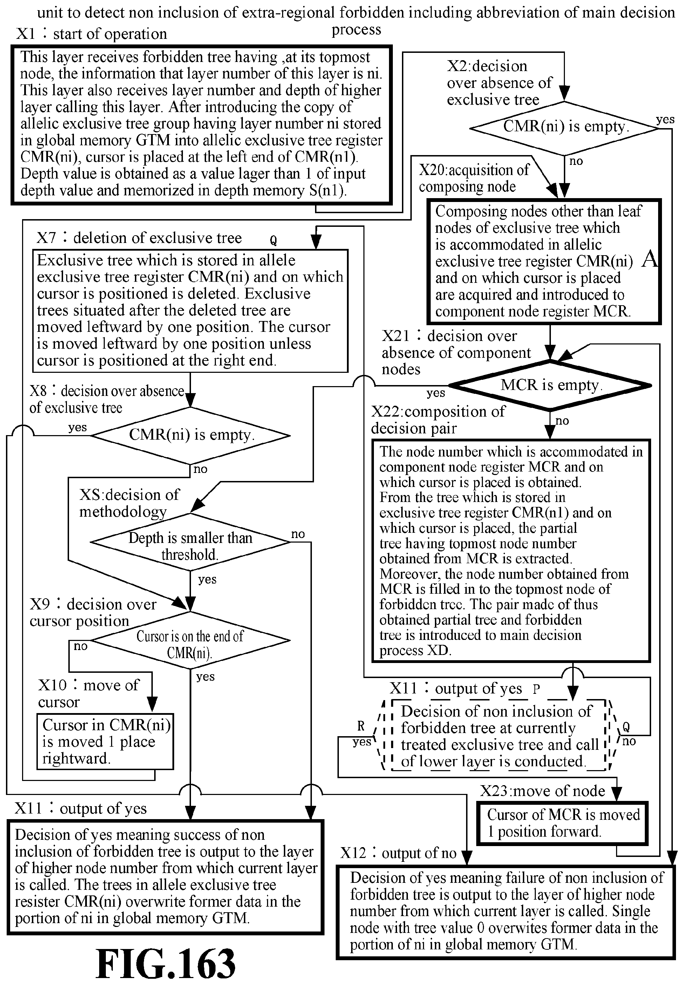

Flow chart in Fig.163 is the flow chart of the highest layer or layer of node n1 of "X.unit for detecting non-inclusion of extra-regional forbidden tree in exclusive tree" of "entire node type". The extension from "topmost node type" to "entire node type" is made by replacing the flow chart of "topmost node type" shown in Fig.153 or Fig.162 with flow chart of "entire node type" shown in Fig.163 only at the highest layer. For the layer lower than highest layer, the flow chart for "entire node type" is the same as "topmost node type". The flow chart of "entire node type" includes process XS(decision of methodology). The composition of XD(main decision process) in Fig.163 is the same as that of XD(main decision process) in Fig.162.

The register newly introduced at "X.unit for detecting non-inclusion of extra-regional forbidden tree in exclusive tree" of "entire node type" in addition to those of "topmost node type" is only component node register MCR.

The component node register MCR is to accommodate the entire nodes other than leaf nodes in exclusive tree taken out by newly introduced process X20(acquisition of composing node) from the exclusive tree on which the cursor is positioned. As the extension to "entire node type" is limited to the highest layer, component node register MCR needs not have the expression of (ni) to distinguish layers.

Four processes X20 to X23 to treat composing nodes of exclusive tree are newly introduced at "X.unit for detecting non-inclusion of extra-regional forbidden tree in exclusive tree" of "entire node type" of Fig.163. The following is the explanation of these processes.

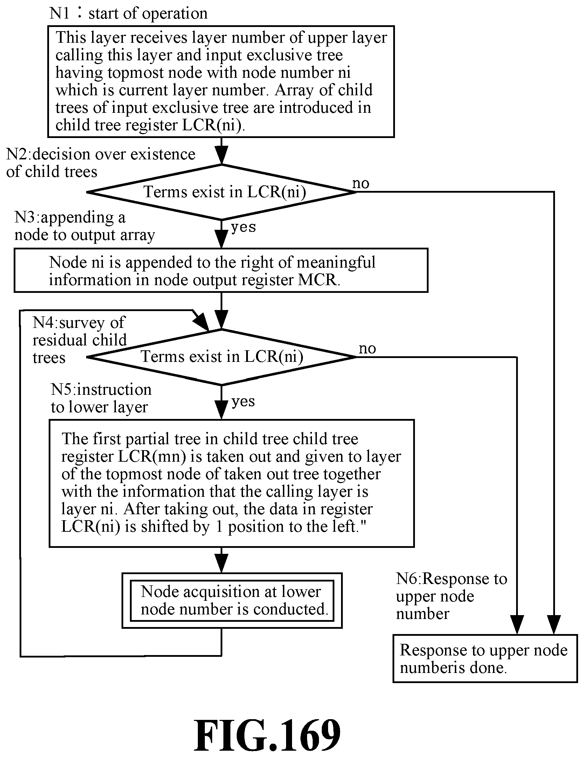

The name of process X20 is "acquisition of composing node". The faculty of this process is described as: "At this process, composing nodes other than leaf nodes of exclusive tree which is stored in allelic exclusive tree register CMR(ni) and on which cursor is placed are acquired and introduced to component node register MCR." The necessary algorithm for this purpose is explained later with the use of Fig.169. Exception of leaf nodes from composing nodes of exclusive tree is due to the fact that leaf nodes are the topmost nodes of lower exclusive trees or single nodes.

The name of process X21 is "decision over absence of component nodes". The faculty of this process is described as: "This process surveys whether component node register MCR is empty. The composing node of the exclusive tree accommodated in register MCR is sequentially deleted when the operation concerning with the node is completed. When entire nodes are processed, register MCR becomes empty. This process surveys on emptiness of register MCR.

The name of process X22 is "composition of decision pair". The faculty of this process is described as: "The node number which is accommodated in composing node register MCR and on which cursor is placed is obtained. From the tree which is accommodated in exclusive tree register CMR(n1 and on which cursor is placed, the partial tree having topmost node number obtained from MCR is extracted. Moreover, the node number obtained from MCR is filled in to the topmost node of forbidden tree. The pair made of thus obtained partial tree and forbidden tree is introduced to main decision process XD." The node number n1 affiliated to forbidden tree is not used at process X22(composition of decision pair).

The name of process X23 is "move of node". The faculty of this process is described as:"The node in composing node register MCR to be processed is moved by 1 position forward."

The operation of process X1 is a little different form that in Fig.153 or 162. Explanation of the difference is made here.

The name of process X1 is "start of operation". The faculty of this process is described as: "As this layer is highest layer, the forbidden tree attached with information of n1 at the topmost node, the layer number n0 and depth 0 of calling layer are given. The exclusive tree group of node n1 is obtained from global memory GTM and introduced to allelic exclusive tree register CMR(n1). The cursor of register is placed on the left end. The current depth is accommodated in depth memory S(n1).

As operation of process X3(input of pair of exclusive tree and forbidden tree) is conducted by process X22(composition of decision pair), process X3 does not exist in the flow graph of Fig.163.

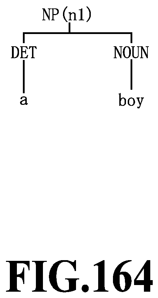

Following is the explanation on operation of "X.unit for detecting non-inclusion of extra-regional forbidden tree in exclusive tree" of "entire node type" in Fig.163 which is the extension of flow chart in Fig.153 or Fig.162 and which enables nodes other than topmost node of exclusive tree include the topmost node of forbidden tree. The input allelic exclusive tree group array used at explanation is, as before, the output of "U.upper covering module=upper covering part" in Fig.143 or Fig.154 which is reproduction of the former. The forbidden tree used here is shown in Fig.164. This forbidden tree is the same as that in Fig. 144(2) used at outline explanation of "X.unit for detecting non-inclusion of extra-regional forbidden tree in exclusive tree".

It is found by human observation of Fig.154 designated as the input of "X.unit for detecting non-inclusion of extra-regional forbidden tree in exclusive tree" of "topmost node type" that the partial tree with topmost node n2 in the connection of 2nd exclusive tree of n1 and the exclusive of n5, has the same configuration with the forbidden tree. The "X.unit for detecting non-inclusion of extra-regional forbidden tree in exclusive tree" of "topmost node type" in Fig.153 or Fig.162 can detect non inclusion of forbidden tree only when the topmost node of exclusive tree include the topmost node of forbidden tree but cannot detect the inclusion when partial tree of exclusive tree includes forbidden tree.

The "X.unit for detecting non-inclusion of extra-regional forbidden tree in exclusive tree" of "entire node type" can detect non-inclusion of this type. The extension to "entire node type" is necessary only at the highest layer but is not necessary at lower layers called by the highest layer because the topmost nodes coincide. By this reason, process XD(main decision process) can be unaltered.

Before the beginning of the operation of flow chart of Fig.163 working by recursive algorithm, the allelic exclusive tree group array in Fig. 154 which is the same as the one used at "topmost node type" is given as the initial vale of global memory GTM which can be accessible from all layers in both of read out and write in directions. As is in the explanation of "topmost node type", the name of accommodating register GTM is written at the upper left position. As mentioned before, the forbidden tree treated here is that in Fig. 164.

The operation of "X.unit for detecting non-inclusion of extra-regional forbidden tree in exclusive tree" of "entire node type" which operates by the flow chart of Fig.163 at highest layer and by flow chart of Fig.162 at other layers is hereafter explained using Fig.164.

Each figures in Fig.164 has a title composed of current layer number and process name illustrated in Fig.163 or Fig.162 arranged in this order. As the flow chart of "X.unit for detecting non-inclusion of extra-regional forbidden tree in exclusive tree" shown in Fig.163 works on recursive algorithm, the layer number is necessary and the number of the topmost node of exclusive trees treated is used. As shown before, only the layer of n1 works on the flow chart of Fig.163.

By explanation, each process is expressed by the consecutive of layer number and process name. Important operations are explained with the use of titles made of the consecution of layer number and process name that is enclosed by parentheses "[]".

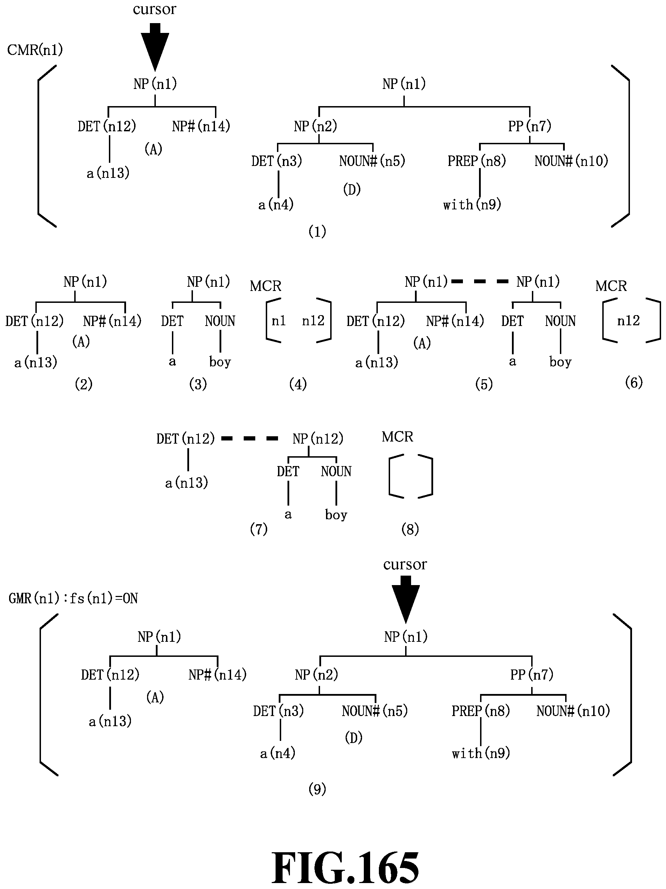

[n1X1]The covered node number n1 is mandatorily filled in to the topmost node of the forbidden tree in Fig.164. Then, the indication that current layer is layer n1 is made according to the topmost node number n1 of forbidden tree. According to this indication, the term of node n1 in global memory GTM that is shown in Fig.165(1) is introduced in allelic exclusive tree register CMR(n1) where the cursor is placed at the left end. As a result, the output in Fig.165(2) of allelic exclusive register CMR(n1) is generated. The tree in Fig.165(3) is the forbidden tree filled in the node number n1. Here, the recognition that the layer calling this layer is layer n0 is made. The depth 1 is accommodated in depth memory S(n1).

As the register CMR is not empty as shown in Fig.165(1), process n1X2 generates decision "no" and operation goes to process n1X20.

[n1X20]The entire nodes excepting the leaf nodes in the exclusive tree of the cursor position in CMR(n1) are obtained and introduced in component node register MCR. As a result, the data accommodated in component node register MCR shown in Fig.165(4) is generated. This register has no layer number.

Since composing node register MCR is not empty as shown in Fig.165(4), process n1X21 generates decision "no" and operation goes to process n1X22.

[n1X22]The pair composed of partial tree having topmost node n1 which is the node of cursor position in MCR of exclusive tree of cursor position in CMR(n1) and the forbidden tree filled in the node number of cursor position in MCR at it's topmost node, is composed as shown in Fig.165(5) and introduced in process XD(main decision process). To show that this pair is under survey of forbidden-tree-free, they are connected by bold dotted line. As the node number n1 filled in at process n1X1 is not used because this is overwritten by node number n1 generated at process n1X22,

As the "Y.element for detecting non-inclusion of forbidden tree in exclusive tree" included in process XD(main decision process) generates decision "locally yes" resulting in "yes" decision at process XD existing in Fig.163, operation goes to processed n1X23.

[n1X23]The data in composing node register MCR is advanced by 1 position resulting in the data in Fig.165(6).

Operation goes back to process n1X22.

[n1X22]The pair composed of partial tree having topmost node n12 which is the node of cursor position in MCR and the forbidden tree filled in the node number n12 of cursor position in MCR at it's topmost node, is composed as shown in Fig.165(7) and introduced in process XD(main decision process).

As process n1Y existing in Fig.163 composed of "Yelement for detecting non-inclusion of forbidden tree in exclusive tree" shown in Fig.149 generates decision "locally yes" resulting in "yes" decision at process XD, operation goes to process n1X23.

[N1X23] The data in composing node register MCR is advanced by 1 position resulting in emptiness of MCR. The situation is shown in Fig.165(8).

As the "Y.element for detecting non-inclusion of forbidden tree in exclusive tree" shown in Fig.149 and included in process XD(main decision process) generates decision "locally yes" resulting in "yes" decision at process XD existing in Fig.163, operation returns to process n1X21 via process n1X23, As register MCR is empty as shown in Fig.165(8), process n1X21 generates decision "yes" and operation goes to process XS to survey whether methodology is "first exclusive type". As the threshold is set to high value to do "entire exclusive tree type", "yes" decision of "entire exclusive tree type" is generated and operation goes to process n1X9.

The process n1X9 situated next surveys whether the cursor of allelic exclusive tree register CMR(n1) is at the end position. As cursor is not on the end position as seen in Fig.165(1), decision "no" is generated and operation goes to process n1X10.

[n1X10]This process moves the position of cursor by 1 position forward to the right resulting in the situation of CMR(n1) in Fig.165(9).

[n1X20]The entire nodes excepting the leaf nodes in the exclusive tree of the cursor position in CMR(n1) are obtained and introduced in component node register MCR. As a result, the data accommodated in component node register MCR shown in Fig.165(10) is generated.

Since composing node register MCR is not empty as shown in Fig.165(10), process n1X21 generates decision "no" and operation goes to process n1X22.

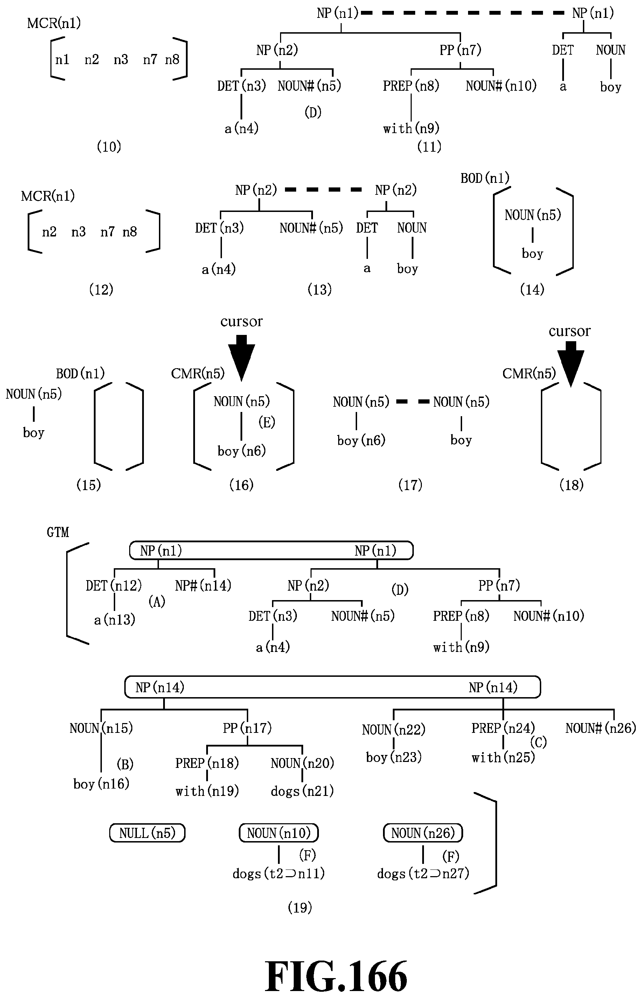

[n1X22]The pair composed of partial tree having topmost node n1 which is the node of cursor position in MCR of exclusive tree of cursor position in CMR(n1) and the forbidden tree filled in the node number of cursor position in MCR at it's topmost node, is composed as shown in Fig.166(11) and introduced in process XD(main decision process).

As the "Y.element for detecting non-inclusion of forbidden tree in exclusive tree" included in process XD(main decision process) generates decision "locally yes" resulting in "yes" decision at process XD existing in Fig.163, operation goes to process n1X23.

[n1X23]The data in composing node register MCR is advanced by 1 position resulting in the data in Fig.166(12).

Since composing node register MCR is not empty as seen in Fig.166(12), process n1X21 generates decision "no" and operation goes to n1X22.

[n1X22]The pair composed of partial tree having topmost node n2 which is the node of cursor position in MCR of exclusive tree at the cursor position of CMR(n1) and the forbidden tree filled in the node number n2 of cursor position in MCR at it's topmost node, is composed as shown in Fig.166(13) and introduced in process XD(main decision process).

XD(main decision process) has operation shown in Fig.161. Hereafter, explanation is made following Fig.161. As "Y.element for detecting non-inclusion of forbidden tree in exclusive tree" in Fig.161 generates decision "locally uncertain" of existence of extra-regional forbidden tree, operation goes to process n1X4.

[n1X4]Here, process n1Y(decision of non inclusion of forbidden tree) generates data in border node register BNR as indicated by process Y14(output of locally uncertain) in Fig.149. This represents the extra-regional forbidden tree. This process introduces the output of Y14 to border register BOD(n1). Fig.166(14) shows the data in BOD(n1).

Since border register BOD(n1) is not empty as seen in Fig.166(14), process fn1X5 generates decision "no" and operation goes to process n1X6.

[n1X6]The first element of BOD(n1) is taken out and introduced to the flow chart of the same configuration as Fig.153 or Fig.161 or Fig.162. In this way, "" of "entire node type" is only necessary at the highest layer of forbidden-tree-free decision and at lower layers called by the highest layer, the extension of the type of Fig.163 is unnecessary and only "" of "topmost node type" is utilized because topmost node of exclusive tree includes the topmost node of forbidden tree. Fig.166(15) shows the data in BOD(n1). This process notifies that the calling node is layer n1.

[n5X1]The forbidden tree of Fig.166(15) is received as input. This forbidden tree has the annotation (n5) showing that the node is on the node n5. Using the annotation as the key, the allelic exclusive group of n5 is obtained from global memory GTM and introduced to allelic exclusive tree register CMR(n5). The data in Fig.166(16) shows the allelic exclusive group introduced. The situation that the layer calling this layer is layer n1 is recognized. Layer n1 is output object of process n5X11 or n5X12. The bold downward arrow indicates the cursor position at allelic exclusive tree register CMR(n5) and process n5X1 places the cursor on the leftmost position in CMR(n5). By the process n5X1, the depth of n14 becomes 2.

Since CMR(n5) is not empty as shown in Fig.166(16), process n5X2 generate decision "no" and operation goes to process n5X3.

[n5X3]The pair composed of the first exclusive tree in CMR(n5) shown in Fig.166(16) and forbidden tree shown to the left of Fig.166(15) is composed as shown in Fig.166(17) and introduced in process n5Y.

As process n5Y(decision of non inclusion of forbidden tree) in Fig.153 or Fig.161 is composed of "Yelement for detecting non-inclusion of forbidden tree in exclusive tree", the decision generated is "locally no" indicating that exclusive tree in Fig.166(17) includes a forbidden tree. By his decision operation goes to n5X7.

[n5X7]The exclusive tree in Fig.166(16) designated as currently treated tree is deleted because of inclusion of forbidden tree. As a result, accommodated data in allelic exclusive tree register CMR(n5) becomes empty as shown in Fig.166(18).

Since allelic exclusive tree register CMR(n5) is empty as seen in Fig.166(18), process n5X8 generates decision "yes" and operation goes to n5X12.

[n5X12]As it is recognized by n5X1 that the layer that calls this layer is layer n1, the forbidden-tree-free decision of "no" is output to layer n1. The single node with the name of "NULL" and with tree value 0 is overwritten in the term n5 of global memory GTM. As a result, allelic exclusive tree group array accommodated in global memory GTM changes from that in Fig.154 to that in Fig.166(19).

The process to follow is process n1X5 in Fig.153 or Fig.161. Since the border register BOD(n1) is empty as seen in Fig.166(17), the process n1X5 generates decision "yes". Thus operation goes to process n1X7 in Fig.163 via point "Q" in Fig.161.

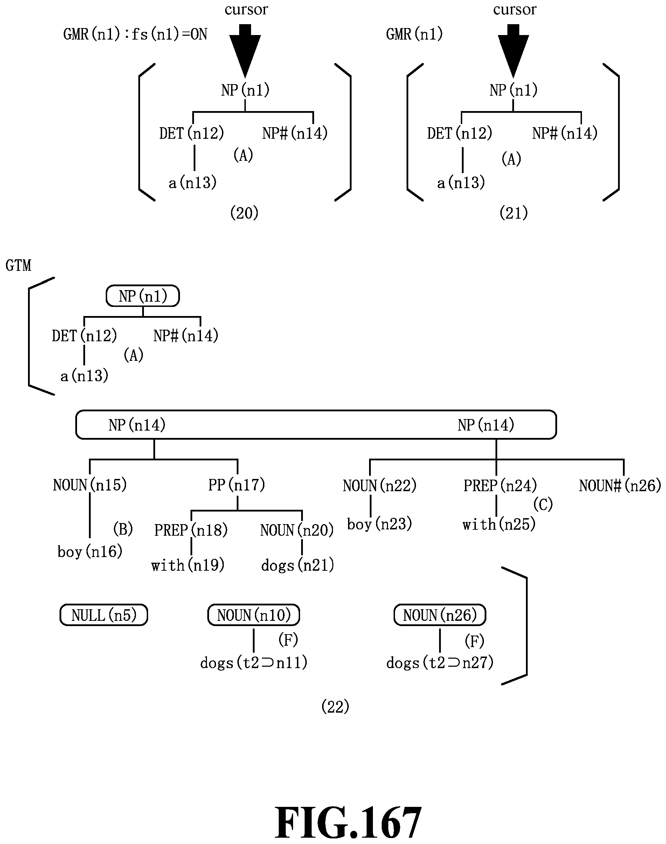

[n1X7]This process deletes the exclusive tree of cursor position in allelic excusive tree register CMR(n1). As a result, the data in CMR(n1) changes from that of Fig.165(9) to that in Fig.167(20). The other actions of this process such as moving forward of succeeding terms or change of cursor position is not conducted because condition is not met.

Since CMR(n1) has data as seen in Fig.167(20), process n1X8 generates decision "no" and operation goes to process n1X11.

[n1X11]This process returns the decision "yes" or success of forbidden-tree-tree test to the layer n0 calling this layer n1 and existing outside of the algorithm. The data in CMR(n1) shown in Fig.167(31) is overwritten on the term of node n1 in global memory GTM. As a result, the allelic exclusive tree group array in Fig.167(22) is generated.

The analysis trees of Fig.147(1) and Fig.147(3) are obtained by introduction of allelic exclusive tree group array in Fig.167(22) to "". As the tree value of tree in Fig.147(1) is 6.5 and that of Fig.147(3) is 5.16, the analysis tree of Fig.147(1) becomes output analysis tree. The analysis trees of Fig.147(1),(2) and (3) are generated from the allelic exclusive tree group array at the input of "" of "entire tree type" and tree of Fig.147(2) among them is deleted because it is not forbidden-tree-free of the forbidden tree of Fig.164 or Fig.144(2).

The process X20(acquisition of composing node) in flow chart of "X.unit for detecting non-inclusion of extra-regional forbidden tree in exclusive tree" of "entire node type" conducts obtaining operation of composing nodes excepting leaf nodes of treated exclusive tree in allelic exclusive tree array of current node. For example, this process obtains node numbers of exclusive allelic exclusive tree of cursor position in CMR(n1) shown in Fig.165(9) and obtains node numbers in Fig.166(10).

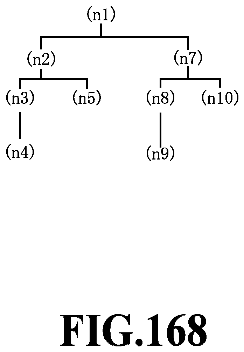

Explanation is made for the algorithm of node number acquisition. The tree in Fig.168 is made from the tree in Fig.165(9) by deleting node information other than node number. The process to obtain node numbers shown in Fig.166(10) of nodes excepting leaf nodes of the tree is explained. Fig.169 is the flow chart of "A.composing node acquisition element" to do the node number acquisition.

First, registers used in "A.composing node acquisition element" are explained. The "A.composing node acquisition element" works on recursive algorithm. The flow chart in Fig.169 treats a layer having one to one correspondence with a node(node ni) in exclusive tree of cursor position. Accordingly, child tree register LCR(ni) has the argument ni to show that LCR(ni) is concerned with layer ni.

Explanation on child tree register LCR(ni) is made. As this register is necessary for each node in exclusive tree of cursor position, this resister has argument ni. This register is to accommodate lower child tree array connected to currently treated node ni.

Explanation on node output register MCR is made. This register accommodates sequentially appended composing nodes. At the operation completion of "A.copmposing node acquisition element", composing nodes are accommodated as shown in Fig.166(10). Node output register is a gloval register and can be written in from all recursive layers of Fig.169. Accordingly, this register has no argument of layer ni.

In "A.composing node acquisition element" of recursive algorithm in Fig.169, the portion enclosed by double line is lower lower algorithm of the same configuration called by current layer. This flow chart is composed of 6 processes N1 to N6 except for lower portion recursively called. Each layer of Fig.169 corresponds to the node number treated by current layer or the topmost node number of the partial tree treated. Hereafter, the role of these processes utilizing these two resisters is illustrated one by one.

The name of process N1 is "start of operation". The faculty of this process is disc rived as:" This layer receives layer number of upper layer calling this layer and input exclusive tree having topmost node with node number ni which is current layer number. Array of child trees of input exclusive tree is introduced in child tree register LCR(ni). "

The name of process N2 is "decision over existence of child trees". The faculty of this process is disc rived as: "The child trees under input node in are to be accommodated in child tree register LCR(ni), This process surveys whether input child trees exist in LCR(ni). This process generates decision "yes" when present and generates decision "no" when absent."

The name of process N3 is "appending a node to output array". The faculty of this process is described as: "Node ni is appended to the right of meaningful information in node output register MCR which is gloval register and to which writing in is possible from all recursive nodes."

The name of process N4 is "survey of residual child trees". The faculty of this process is described as: "The child trees in child tree register LCR(ni) introduced at process N1 are sequentially deleted in the progress of operation. Process n4 surveys the existence of child trees. This process generates decision "yes" when present and generates "no" when absent."

The name of process N5 is "instruction to lower layer". The faculty of this process is described as: "This process takes out the first partial tree in child tree register LCR(mn) together with the information that the calling layer is layer ni to the layer of the topmost node of taken out partial tree. After taking out, the data in child tree register is shifted by 1 position to the left."

The name of process N6 is "Responce to upper node number". The faculty of this process is described as: "This process returns the end of operation information to upper layer calling this layer ni which is obtained at process N1. As the output of "A.composing node acquisition element" is accumulated in node output register MCR, no output is generated at this process."

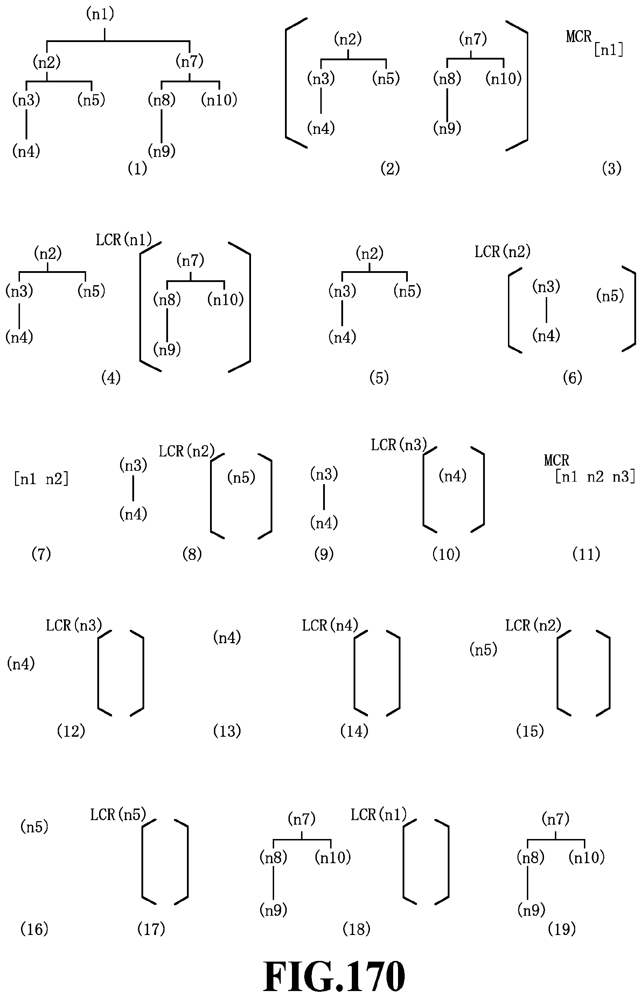

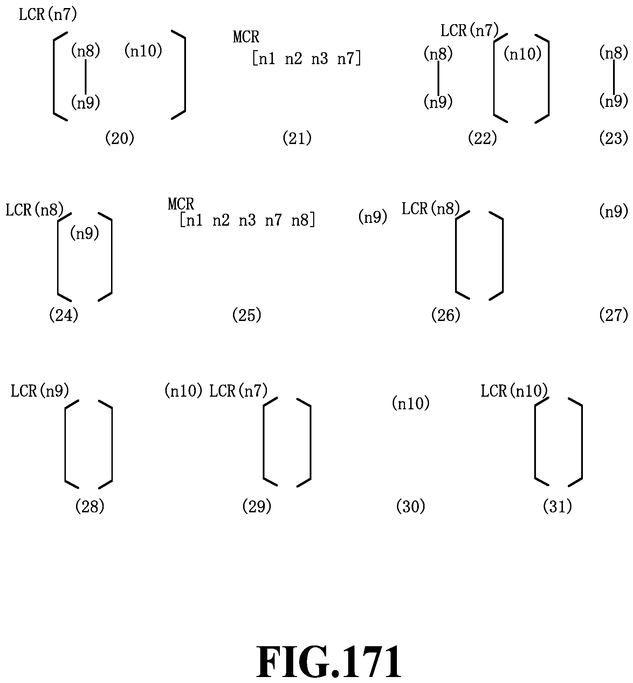

The operation of flow chat in Fig.169 of "A.composing node acquisition element" at process X20 of "X.unit for detecting non-inclusion of extra-regional forbidden tree in exclusive tree", receiving the input of the exclusive tree in Fig.168 which exists at the cursor position of allelic exclusive register CMR(ni), is illustrated hereafter. The figures in Fig.170 and Fig.171 show processed configurations and accommodated data in registers where rectangle parenthesis "[]" represent registers the names of which exist at upper left corner. As the flow chart of Fig.169 works on recursive algorithm, layer numbers are necessary and the topmost node numbers of treated partial exclusive trees are chosen as layer numbers.

Each process in Fig.169 is expressed as the sequence of layer number and process name. The processes accompanying data change are described after titles made of process name enclosed by rectangle parenthesis "[]" and processes not accompanying data change are described without titles.

[n1N1]The input composed of the exclusive tree in Fig.168 and the information that the layer calling this layer is layer n0 is given from layer n0 existing outside of the flow chart. The input is shown again as the tree in Fig.170(1). By process n1N1, two partial trees shown in Fig.170(2) are introduced in child tree register LCR(n1).

Since child tree register LCR(n1) has data as shown in Fig.170(2), process n1N2 generates decision "yes" and operation goes to n1N3.

[n1N3]The node number n1 is appended to data in node output register MCR. As a result the data in Fig. 170(3) becomes data in node output register MCR.

Since child tree register LCR(n1) has data as seen in Fig.170(3), process n1N4 generates decision "yes" and operation goes to process n1N5.

[n1N5]Partial exclusive tree existing at leftmost position of node tree register LCR(n1) is taken out and given to the layer n2 which is indicated by the topmost node of taken out partial tree together with the information that the calling layer is layer n1. After the taking out, the data in child tree register LCR(n1) is advanced by 1 position. The taken out partial exclusive tree and data in register LCR(n1) after taking out is shown in Fig.170(4).

[n2N1]The partial exclusive tree with the topmost node number n2 in Fig.170(5) and the information that the calling upper layer is layer n1 are introduced. The child tree array of input exclusive tree is introduced to child tree register LCR(n2). The accommodated data in child tree register LCR(n2) is shown in Fig.170(6).

Since data exists in child tree register LCR(n2) as seen in Fig. 170(6), process n2N2 generates decision "yes" and operation goes to process n2N3.

[n2N3]The node number n2 is appended to node output register MCR. As a result, the data of MCR shown in Fig.170(7) is obtained.

Since child tree register LCR(n2) has data as seen in Fig. 170(6), process n2N4 generates decision "yes" and operation goes to n2N5.

[n2N5]Partial exclusive tree existing at leftmost position of node tree register LCR(n2) is taken out and given to the layer n3 which is indicated by the topmost node of taken out partial tree together with the information that the calling layer is layer n2. After the taking out, the data in child tree register LCR(n2) is advanced by 1 position. The taken out partial exclusive tree and data in register LCR(n2) after taking out is shown in Fig.170(8).

[n3N1]The partial exclusive tree with the topmost node number n3 in Fig.170(9) and the information that the calling upper layer is layer n2 are introduced. The child tree array of input exclusive tree is introduced to child tree register LCR(n3). The accommodated data in child tree register LCR(n3) is shown in Fig.170(10).

Since data exists in child tree register LCR(n3) as seen in Fig.170(10), process n3N2 generates decision "yes" and operation goes to process n3N3.

[n2N3]The node number n3 is appended to node output register MCR. As a result, the data of MCR shown in Fig.170(11) is obtained.

Since child tree register LCR(n3) has data as seen in Fig.170(10), process n3N4 generates decision "yes" and operation goes to n3N5.

[n3N5]Partial exclusive tree existing at leftmost position of node tree register LCR(n3) is taken out and given to the layer n4 which is indicated by the topmost node of taken out partial tree together with the information that the calling layer is layer n3. After the taking out, the data in child tree register LCR(n3) is advanced by 1 position. The taken out partial exclusive tree and data in register LCR(n3) after taking out is shown in Fig.170(12).

[n4N1]The partial exclusive tree with the topmost node number n4 in Fig.170(13) and the information that the calling upper layer is layer n3 are introduced. The child tree array of input exclusive tree is introduced to child tree register LCR(n4). The child tree register LCR(n4) is empty as shown in Fig.170(14).

Since child register LCR(n4) is empty as seen in Fig.170(14), process n4N2 generates decision "no" and operation goes to n4N6 which takes operation to layer n3 calling this layer n4 according to the information obtained at process n4N1.

Operation goes to process n3N4 after completion of lower operation. Since LCR(n3) is empty as shown in Fig.170(12), operation goes to process n3N6 that takes operation to layer n2 according to the information obtained at process N3N1.

Since child tree register LCR(n2) has data as seen in Fig.170(8), process n2N4 generates decision "yes" and operation goes to process n2N5.

[n2N5]Partial exclusive tree existing at leftmost position of node tree register LCR(n2) is taken out and given to the layer n5 which is indicated by the topmost node of taken out partial tree together with the information that the calling layer is layer n2. After the taking out, the data in child tree register LCR(n2) is advanced by 1 position. The taken out partial exclusive tree and data in register LCR(n2) after taking out is shown in Fig.170(15).

[n5N1]The partial exclusive tree with the topmost node number n5 in Fig.170(16) and the information that the calling upper layer is layer n2 are introduced. The child tree array of input exclusive tree is introduced to child tree register LCR(n5). The accommodated data in child tree register LCR(n5) is shown in Fig.170(17).

Since child register LCR(n5) is empty as seen in Fig.170(17), process n5N2 generates decision "no" and operation goes to n5N6 which takes operation to layer n2 calling this layer n4 according to the information obtained at process n5N1.

Operation goes to process n2N4 after completion of lower operation. Since LCR(n2) is empty as shown in Fig.170(15), operation goes to process n2N6 that takes operation to layer n1 calling this layer according to the information obtained at process N2N1.

Since child tree register LCR(n1) has data as seen in Fig.170(4), process n1N4 generates decision "yes" and operation goes to process n1N5.

[n1N5]Partial exclusive tree existing at leftmost position of node tree register LCR(n1) is taken out and given to the layer n7 which is indicated by the topmost node of taken out partial tree together with the information that the calling layer is layer n1. After the taking out, the data in child tree register LCR(n1) is advanced by 1 position. The taken out partial exclusive tree and data in register LCR(n1) after taking out is shown in Fig.170(18).

[n7N1]The partial exclusive tree with the topmost node number n7 in Fig.170(19) and the information that the calling upper layer is layer n1 are introduced. The child tree array of input exclusive tree is introduced to child tree register LCR(n7). The accommodated data in child tree register LCR(n7) is shown in Fig.171(20).

Since data exists in child tree register LCR(n7) as seen in Fig. 171(20), process n7N2 generates decision "yes" and operation goes to process n7N3.

[n7N3]The node number n7 is appended to node output register MCR. As a result, the data of MCR shown in Fig.171(21) is obtained.

Since child tree register LCR(n7) has data as seen in Fig.171(20), process n7N4 generates decision "yes" and operation goes to process n7N5.

[n7N5]Partial exclusive tree existing at leftmost position of node tree register LCR(n7) is taken out and given to the layer n8 which is indicated by the topmost node of taken out partial tree together with the information that the calling layer is layer n7. After the taking out, the data in child tree register LCR(n7) is advanced by 1 position. The taken out partial exclusive tree and data in register LCR(n7) after taking out is shown in Fig.171(22).

[n8N1]The partial exclusive tree with the topmost node number n8 in Fig.171(23) and the information that the calling upper layer is layer n7 are introduced. The child tree array of input exclusive tree is introduced to child tree register LCR(n5). The accommodated data in child tree register LCR(n8) is shown in Fig.171(24).

Since data exists in child tree register LCR(n8) as seen in Fig.171(24), process n8N2 generates decision "yes" and operation goes to process n8N3.

[n8N3]The node number n8 is appended to node output register MCR. As a result, the data of MCR shown in Fig.171(25) is obtained.

Since child tree register LCR (n8) has data as seen in Fig.171(24), process n8N4 generates decision "yes" and operation goes to process n8N5.

[n8N5]Partial exclusive tree existing at leftmost position of node tree register LCR(n8) is taken out and given to the layer n9 which is indicated by the topmost node of taken out partial tree together with the information that the calling layer is layer n8. After the taking out, the data in child tree register LCR(n8) is advanced by 1 position. The taken out partial exclusive tree and data in register LCR(n8) after taking out is shown in Fig.171(26).
[n9N1]The partial exclusive tree with the topmost node number n9 in Fig.171(27) and the information that the calling upper layer is layer n8 are introduced. The child tree array of input exclusive tree is introduced to child tree register LCR(n9). The accommodated data in child tree register LCR(n9) is shown in Fig.171(28).

Since child register LCR(n9) is empty as seen in Fig.171(28), process n9N2 generates decision "no" and operation goes to n8N6 which takes operation to layer n8 calling this layer n9 according to the information obtained at process n9N1.

Operation goes to process n8N4 after completion of lower operation. Since LCR(n8) is empty as shown in Fig.171(26), operation goes to process n8N6 that takes operation to layer n7 calling this layer according to the information obtained at process N8N1. Since child tree register LCR(n7) has data as seen in Fig.171(20), process n7N4 generates decision "yes" and operation goes to process n7N5.

[n7N5]Partial exclusive tree existing at leftmost position of node tree register LCR(n7) is taken out and given to the layer n10 which is indicated by the topmost node of taken out partial tree together with the information that the calling layer is layer n7. After the taking out, the data in child tree register LCR(n7) is advanced by 1 position. The taken out partial exclusive tree and data in register LCR(n7) after taking out is shown in Fig.171(29).
[n10N1]The partial exclusive tree with the topmost node number n10 in Fig.170(30) and the information that the calling upper layer is layer n7 are introduced. The child tree array of input exclusive tree is introduced to child tree register LCR(n10). The accommodated data in child tree register LCR(n10) is shown in Fig.171(31).

Since child register LCR(n10) is empty as seen in Fig.171(31), process n10N2 generates decision "no" and operation goes to n10N6 which takes operation to layer n7 calling this layer n4 according to the information obtained at process n10N1.

Operation goes to process n7N4 after completion of lower operation. Since LCR(n7) is empty as shown in Fig. 171(29), operation goes to process n1N6 that takes operation to layer n0 calling this layer according to the information obtained at process n1N1.

Operation goes to process n1N4 after completion of lower operation. Since LCR(n1) is empty as shown in Fig. 170(18), operation goes to process n7N6 that takes operation to layer n0 calling this layer according to the information obtained at process n1N1.

As layer n0 exists outside of "A.composing node acquisition element", this operation terminates the operation of "A.composing node acquisition element" to the input of the exclusive tree in Fig.170(1). The node array in Fig.171(25) left in output node register MCR is the output of "A.composing node acquisition element". In this way, the composing nodes excepting leaf nodes are obtained from given exclusive tree in Fig.170(1). This is the output of "A.composing node acquisition element" belonging to process X20 in "X.unit for detecting non-inclusion of extra-regional forbidden tree in exclusive tree" of "entire node type" which is acquired from the input exclusive tree in Fig.168 or Fig.170(1) which is tree of cursor position at allelic exclusive tree register CMR(n1). This output is introduced into composing node register MCR(n1) by process X20. This is the node array accommodated in MCR(n1) shown in Fig.166(10). Thus total operation of process X20(acquisition of composing node) existing in "X.unit for detecting non-inclusion of extra-regional forbidden tree in exclusive tree" of "entire node type" of Fig.163 is realized.

As seen in Fig.119, Fig.34 and Fig.1, "A composing node acquisition element" is a portion of "X.unit for detecting non-inclusion of extra-regional forbidden tree in exclusive tree" and included in that of "entire node type".

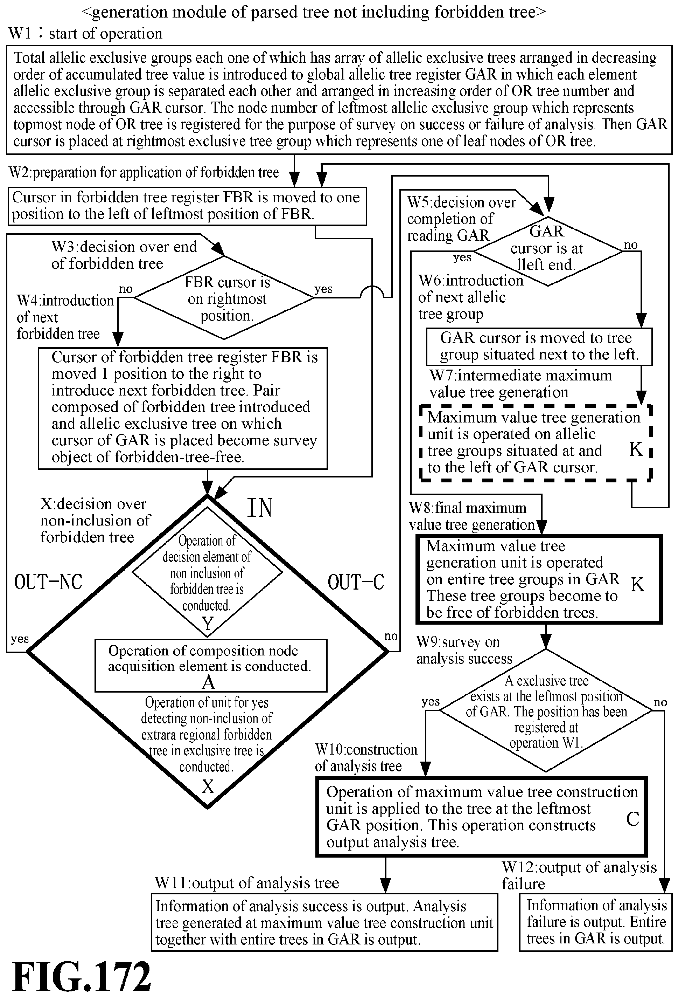

Fig.172 shows flow chart of "W.generation module of parsed tree not including forbidden tree". As seen in Fig.119, "W.generation module of parsed tree not including forbidden tree" is the whole portion excepting "K.maximum value tree generation unit" of "G.parsed tree generation module".

The "W.generation module of parsed tree not including forbidden tree" has 13 processes in total of process X and process W1 to W12. The process X(decision over non inclusion of forbidden tree) among them is, as it is, "X.unit for detecting non-inclusion of extra-regional forbidden tree in exclusive tree" of "entire node type" shown in Fig.163. Again, this "X.unit for detecting non-inclusion of extra-regional forbidden tree in exclusive tree" has "Yelement for detecting non-inclusion of forbidden tree in exclusive tree" in Fig.149 and "A.composing node acquisition element" in Fig.169 as it's portions. Furthermore, processes W7(intermediate maximum value tree generation) and W8(final maximum value tree generation) are composed of "K.maximum value tree generation unit" in Fig.125. In addition, process W10 is composed of "C.maximum value tree construction unit" in Fig.135. Detailed explanation is already made for all composing processes.

Here the definition that forbidden-tree-free allelic exclusive tree group array must meet the condition that the analysis tree composed by "C.maximum value tree construction unit" in Fig.135 from the array is forbidden-tree-free, is introduced. The aim of "W.generation module of parsed tree not including forbidden tree" is to generate allelic exclusive tree group array that is forbidden-tree-free against generally plural forbidden trees and to generate maximum tree value analysis tree as the final output of this invention. The "X.unit for detecting non-inclusion of extra-regional forbidden tree in exclusive tree" explained so far can generate allelic exclusive tree group array of forbidden-tree-free against only one forbidden tree.

Process X(decision over non inclusion of forbidden tree) in "W.generation module of parsed tree not including forbidden tree" is "entire node type" which is upward compatible with "topmost node type". Though automatic switching between "entire exclusive type" and "first exclusive type" is possible at both of "topmost node type" and "entire node type", threshold depth is set to 1 where "entire exclusive tree type" is adopted at depth 1 and "first exclusive tree type" is adopted at deeper depth.

Here, explanation is made for two registers used in the flow chart of "W.generation module of parsed tree not including forbidden tree" in Fig.172.

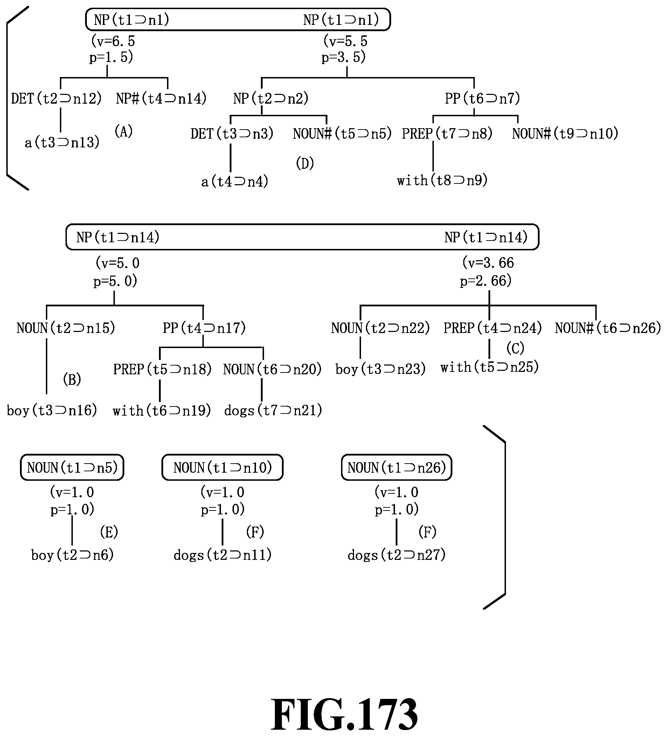

Global allelic trey register GAR is explained. Global allele tree register GAR is accessible, in both read-out and write-into directions, from all recursive layers of the composing process "X.unit for detecting non-inclusion of extra-regional forbidden tree in exclusive tree". The accommodated data at the operation initiation of "W.generation module of parsed tree not including forbidden tree" is input allelic exclusive tree group array but changes to forbidden-tree-free array at the completion of operation. Fig.173 shows example of input to "W.generation module of parsed tree not including forbidden tree" and the output of "K.maximum value tree generation unit" used so far.

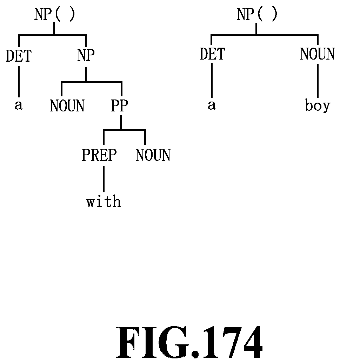

Forbidden tree register FBR is explained. Here, trees in Fig.174 are chosen as the example and are thought to be accommodated in register FBR. These are shown in Fig.144 and used so far.

The "W.generation module of parsed tree not including forbidden tree" adopts double loop operation where succeeding exclusive tree in global allelic tree register GAR is treated after application of entire forbidden trees in forbidden tree register FBR to previous exclusive tree is over.

Hereafter, the role of processes using above-mentioned two registers is illustrated.

The name of process W1 is "start of operation". The faculty of this process is described as: "Total allelic exclusive groups each one of which has array of allelic exclusive trees arranged in decreasing order of accumulated tree value is introduced to global allelic tree register GAR in which each element allelic exclusive group is separated each other and arranged in increasing order of OR tree number and accessible through GAR cursor. The node number of leftmost allelic exclusive group that represents topmost node of OR tree is registered for the purpose of survey on success or failure of analysis. When node numbers in OR tree nodes are given by the way of depth-first and left corner priority and allelic exclusive tree groups are arranged in the descending order of node number, a group of lower layer is placed to the right of other higher layer groups. GAR cursor is placed at rightmost exclusive tree group that represents one of leaf nodes of OR tree by above reason. After these preparations, the operation of "W.generation module of parsed tree not including forbidden tree" begins.

The name of process W2 is "preparation for application of forbidden tree". The faculty of this process is described as: "Cursor in forbidden tree register FBR is moved to one position to the left of leftmost position of FBR. This operation enables the cursor to move to leftmost position by the right shift applied later."

The name of process W3 is "decision over end of forbidden tree". The faculty of this process is described as:" This process surveys whether application of entire forbidden trees is completed by surveying whether the cursor of forbidden tree resister is on the rightmost position. This process generates decision "yes" when the cursor is on the leftmost position and operation goes to process W5 of introduction of next allelic exclusive tree. This process generates decision "no" when otherwise and operation goes to process W4 of introduction of next forbidden tree.

The name of process W4 is "introduction of next forbidden tree". The faculty of this process is described as:" Cursor of forbidden tree register FBR is moved 1 position to the right to introduce next forbidden tree. The pair composed of forbidden tree introduced and allelic exclusive tree on which cruor of GAR is placed become survey object of forbidden-tree-free test. The pair is given to process X."

The name of process X is "decision over non-inclusion of forbidden tree". The faculty of this process is described as: "This process is the central process of "W.generation module of parsed tree not including forbidden tree" and is composed of "X.unit for detecting non-inclusion of extra-regional forbidden tree in exclusive tree" of "entire node type" and therefore this process has the name X. Since this process surveys on non-inclusion of forbidden tree as expressed in Fig. 163 of "entire node type", process X in Fig.172 is expressed by a rhombus of decision activity. As "X.unit for detecting non-inclusion of extra-regional forbidden tree in exclusive tree" of "entire node type" has "Yelement for detecting non-inclusion of forbidden tree in exclusive tree" shown in Fig. 149 and "A.composing node acquisition element" shown in Fig. 169 as it's composing portions, these portions in rectangle with their symbol letters Y and A are included in the rhombus of X. When process X generates decision "yes" because of non-inclusion of forbidden tree, operation goes to process W3 of preparation for introduction of next forbidden tree. When decision is "no" of inclusion of forbidden tree, operation goes to process W5 of preparation for introduction of next allelic exclusive tree group."

The name of process W5 is "decision over completion of reading GAR". The faculty of this process is described as:" The cursor exists on the leftmost position of global allelic tree register GAR when application of a forbidden tree to entire exclusive tree is completed. This process surveys whether cursor exists at leftmost position. When this process generates decision "yes", operation goes to process W8 of completion of the operation of "W.generation module of parsed tree not including forbidden tree". When "no", operation goes to process W6 to continue the processing on global allelic tree register GAR.

The name of process W6 is "introduction of next allelic tree group". The faculty of this process is described as: "This process moves the cursor in global allelic tree register GAR to the left to introduce next allelic exclusive tree group.

The name of process W7 is "intermediate maximum value tree generation". The faculty of this process is described as: "This process arranges, in descending order of accumulated tree value, exclusive trees in each allelic exclusive tree group existing to the left of present cursor position in global allelic tree register GAR. As this process is composed of "K.maximum value tree generation unit" shown in Fig. 125, letter K that is the symbol of the unit exists in rectangle of the process. The process is enclosed by dotted line because this process is necessary only at "first exclusive tree type" and unnecessary at "entire exclusive tree type". Because, at "first exclusive tree type", further survey of exclusive trees existing to the left of current exclusive tree is abbreviated when current exclusive tree is found to be forbidden-tree-free, arrangement is necessitated. This arrangement is unnecessary at "entire exclusive tree type."

The name of process W8 is "final maximum value tree generation". The faculty of this process is described as: "As process is also composed of "K.maximum value tree generation unit" in Fig.125 like process W7, letter K which is the symbol of the unit exists in rectangle of the process. Entire allelic exclusive groups are confirmed to be forbidden-tree-free by operation hitherto. Process W8 arranges allelic exclusive trees in each allelic exclusive tree group in descending order of accumulated tree value."

The name of process W9 is "survey on analysis success". The faculty of this process is described as: "At process W1, The node number of leftmost allelic exclusive group which represents topmost node of OR tree is registered, When the allelic tree group of this node number exists after forbidden tree inclusion tests, this allelic tree group occupies the topmost portion analysis tree aimed. This process surveys whether allelic tree group of topmost node number exists. When process W9 generates decision "yes" enabling construction of analysis tree, operation goes to process W10 of assembling analysis tree. When process W9 generates decision "no" of failure of analysis tree generation, operation goes to process W12 to output failure of analysis."

The name of process W10 is "construction of analysis tree". The faculty of this process is described as: "As this process is composed of "C.maximum value tree construction unit" in Fig.135", letter C which is the symbol of the unit exists in rectangle of the process. This process applies "C.maximum value tree construction unit" to the tree at the leftmost GAR position and generates output analysis tree."

The name of process W11 is "output of analysis tree". The faculty of this process is discribed as: "Information of analysis success is output. Analysis tree generated at maximum value tree construction unit together with entire trees in GAR is output. "

The name of process W11 is "output of analysis failure". The faculty of this process is described as: "Information of analysis failure is output. Entire trees in global allelic tree register GAR are output. As allelic exclusive tree groups near to the left end of GAR generate imperfect analysis trees of the shape of plural imperfect analysis result, GAR information is necessary to obtain correct analysis result."

Hereafter, the operation example of "W.generation module of parsed tree not including forbidden tree" in Fig.172 utilizing these registers and processes is explained. Here also, allelic exclusive tree group array in Fig.143 which is the output of "K.maximum value tree generation unit" and which is used so far is used as the input example. The production is shown in Fig.173. As for forbidden trees, two forbidden trees in Fig.144 are used. The reproduction is shown in Fig.174."

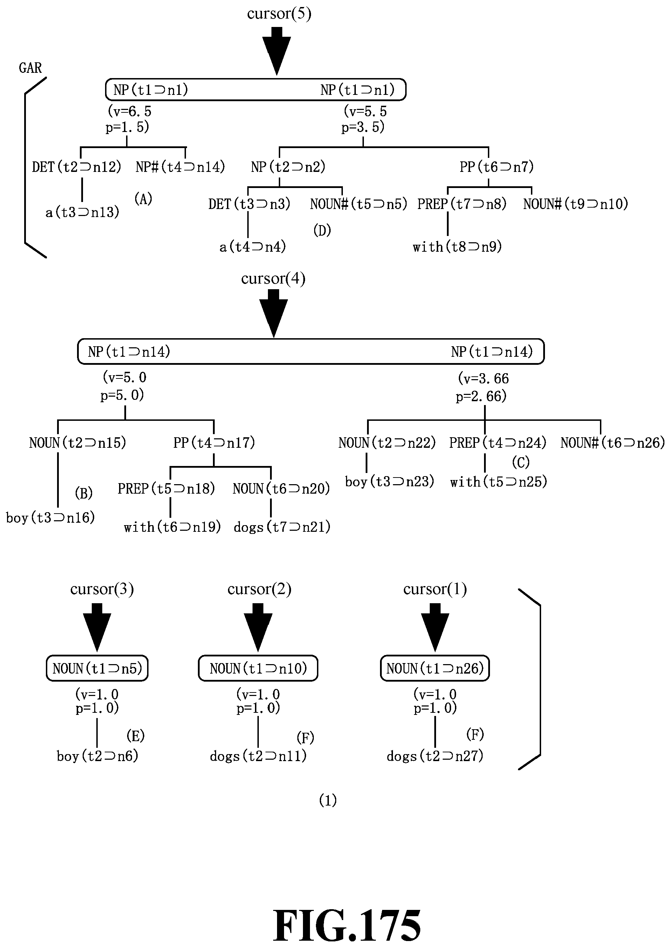

As for each process of substantive operation accompanying change of data, explanation is preceded by a title of the operation enclosed by rectangle parenthesis "[]". As for each decision operation not accompanying change of data, explanation is made without title. The data in the course of operation of Fig.172 are shown in Fig.175 - Fig.180. Names of accommodating registers are attached to upper left of each data.

At the topmost node of each forbidden tree in Fig.174, blank parenthesis to which covered node number as additional information is introduced is attached. Forbidden trees are facilitated by the system and exist in forbidden tree register FBR before the operation initiation of "W.generation module of parsed tree not including forbidden tree."

[W1]The allelic exclusive tree group array each allelic exclusive tree group of which has exclusive trees arranged in descending order of accumulated tree is introduced to the "W.generation module of parsed tree not including forbidden tree" in Fig.173 and accommodated in global exclusive tree register GAR. The topmost node number n1 of leftmost allelic exclusive tree group is registered to ensure the generation of a perfect analysis tree. After this operation, the cursor of global exclusive tree register GAR is set to the right end. Fig.175(1) shows the data in global exclusive register GAR after these operations. At present, the GAR cursor exists at the position of "cursor(1). After these preparations, "W.generation module of parsed tree not including forbidden tree" begins its operation.

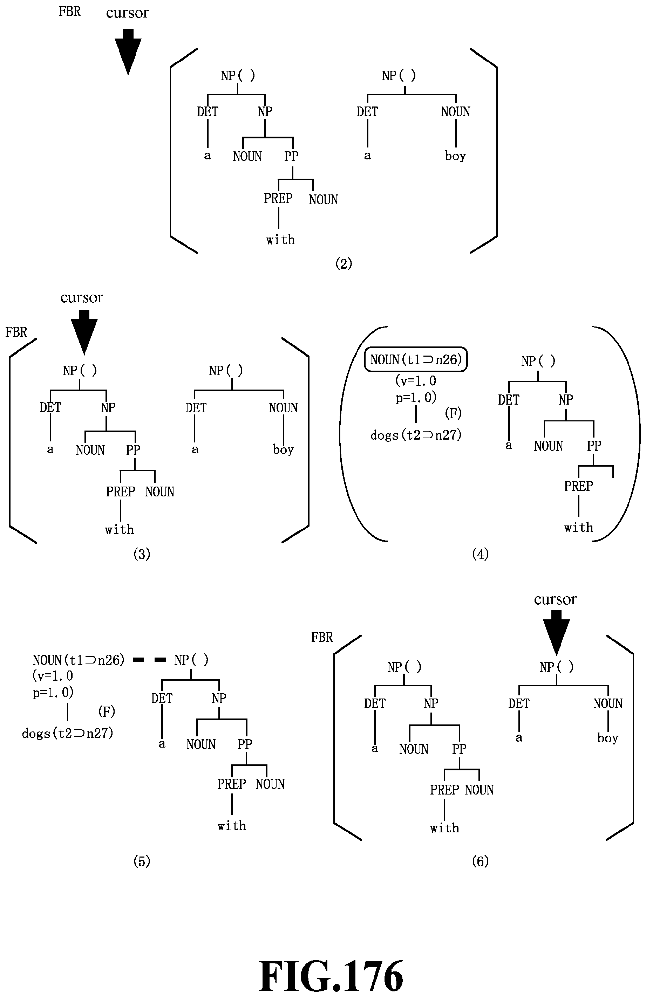

[W2]The forbidden trees in Fig.174 exist in forbidden tree register FBR. By process W2, FBR cursor moves to one position to the left of left end of FBR. Fig.176(2) shows the situation.

As FBR cursor is not on the left end, process W3 generates decision "no" and operation goes to process W4.

[W4]Cursor of forbidden tree register FBR is moved 1 position to the right and next forbidden tree is introduced. This forbidden tree and the allelic exclusive tree group on which GAR cursor exists are chosen as the object of forbidden-tree-free test. By this operation, FBR cursor moves to the position in Fig.176(3). This expression is adopted only for explanation purposes. The pair of allelic exclusive tree group of cursor position of GAR and forbidden tree is shown in Fig.176(4) using ordinary parenthesis. Since "X.unit for detecting non-inclusion of extra-regional forbidden tree in exclusive tree" receives pair of allelic exclusive tree and forbidden tree as seen so far, this kind of expression is possible. In "X.unit for detecting non-inclusion of extra-regional forbidden tree in exclusive tree", exclusive trees in an allelic exclusive tree group are processed one by one.

[X]The process X is composed of "X.unit for detecting non-inclusion of extra-regional forbidden tree in exclusive tree" of "entire node type" shown in Fig.161 and Fig.163. As the exclusive tree input of Fig.176(4) to process X is allelic exclusive tree group composed of only one exclusive tree, the decision pair of Fig.176(5) is obtained. At "entire node type", inclusion of topmost node of forbidden is investigated for entire nodes excepting leaf nodes of exclusive tree and the decision of X here is "yes" because of difference of node names.

Operation returns to process W3. Since the FBR cursor is not on right end, operation returns to process W4.

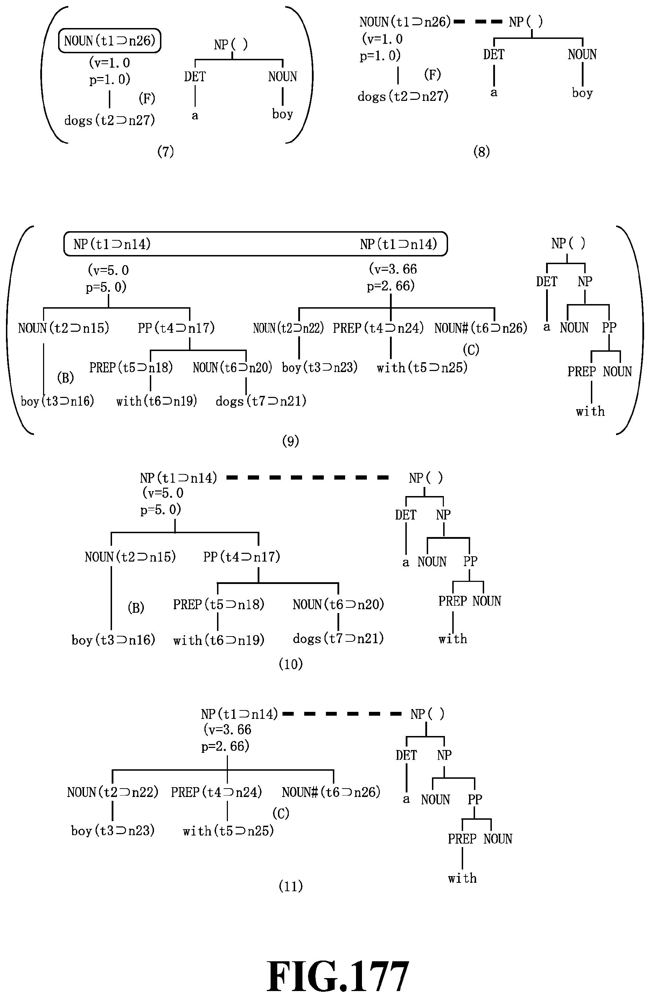

[W4]FBR cursor is moved one position to the right for introduction of next forbidden tree. This forbidden tree and the allelic exclusive tree group on which GAR cursor exists are chosen as the object of forbidden-tree-free test. Cursor moves to the position in Fig. 176(6) and the pair of allelic exclusive tree group of cursor position of GAR and forbidden tree is shown in Fig.177(7) using ordinary parenthesis.

[X] As the exclusive tree input of Fig.176(7) to process X is allelic exclusive tree group composed of only one exclusive tree, the decision pair of Fig.176(8) is obtained. At "entire node type", inclusion of topmost node of forbidden is investigated for entire nodes excepting leaf nodes of exclusive tree and the decision of X here is "yes" of non inclusion because of difference of node names.

Operation returns to process W3. Since the FBR cursor is on right end, operation goes to process W5. Since the cursor of cursor(1) position is not on the left end of global exclusive tree register GAR as seen in Fig. 175(1), process W5 generates decision "no" and operation goes to process W6.

[W6]Cursor of global exclusive tree register GAR is moved by one tree group to the left. As a result cursor moves to the position of cursor(2) in Fig.175(1).

When the threshold value is set to 1 at process X that is "X.unit for detecting non-inclusion of extra-regional forbidden tree in exclusive tree", process X works on "entire exclusive type" at depth 1 and on "first exclusive type" at deeper depth. As present depth is 1, X is working on "entire exclusive type". Therefore, process W7 is skipped and operation goes to process W2. FBR cursor is moved to position showing in Fig.176(2) by process W2. After 2 circulations of the loop of processes W3, W4 and X, operation goes to process W5 without any change in GAR. As cursor position of cursor(2) in Fig.175(1) is not left end, process W5 generates decision "no" and operation goes to process W6.

[W6]Cursor in register GAR is moved one position to the left to the position of cursor(3) in Fig.175(1).

According to "entire exclusive type" operation, process W7 is skipped and operation goes to process W2. By process W2, cursor in FBR moves to the position of Fig.176(6). After 2 circulations of the loop of processes W3, W4 and X, operation goes to process W5 without any change in GAR. As cursor position of cursor(3) in Fig.175(1) is not left end, process W5 generates decision "no" and operation goes to process W6.

[W6]Cursor of global exclusive tree register GAR is moved by one tree group to the left. As a result cursor moves to the position of cursor(4) in Fig.175(1).

[W2]FBR cursor is moved to position outside of left end showing in Fig.176(2).

After passing process X with "yes "decision operation goes to process W3 which generates decision "no" and operation goes to process W4.

[W4]FBR cursor is moved one position to the right for introduction of next forbidden tree. This forbidden tree and the allelic exclusive tree group on which GAR cursor exists are chosen as the object of forbidden-tree-free test. Cursor moves to the position in Fig. 176(3) and the pair of allelic exclusive tree group of cursor position of GAR and forbidden tree is shown in Fig. 177(9) using ordinary parenthesis. In "X.unit for detecting non-inclusion of extra-regional forbidden tree in exclusive tree" of process X, exclusive trees in an allelic exclusive tree group are processed one by one.

[X]As input to process X given by Fig.177(9) treats allelic exclusive group of 2 trees, 2 inclusion test pairs of Fig.177(10) and Fig.177(11) are obtained from Fig.177(9). First, process X composed of "X.unit for detecting non-inclusion of extra-regional forbidden tree in exclusive tree" of "entire exclusive tree type" generate decision "yes". Concerning with the pair of Fig.177(11), process X also generates decision "yes". As process X generates decision "yes" when one decision pair obtains "yes" decision, no change in data in register GAR occurs.

Process goes to process W3. Since FBR cursor is not on the right end as seen in Fig.176(3), process W3 generates decision "no" and operation returns to process W4.

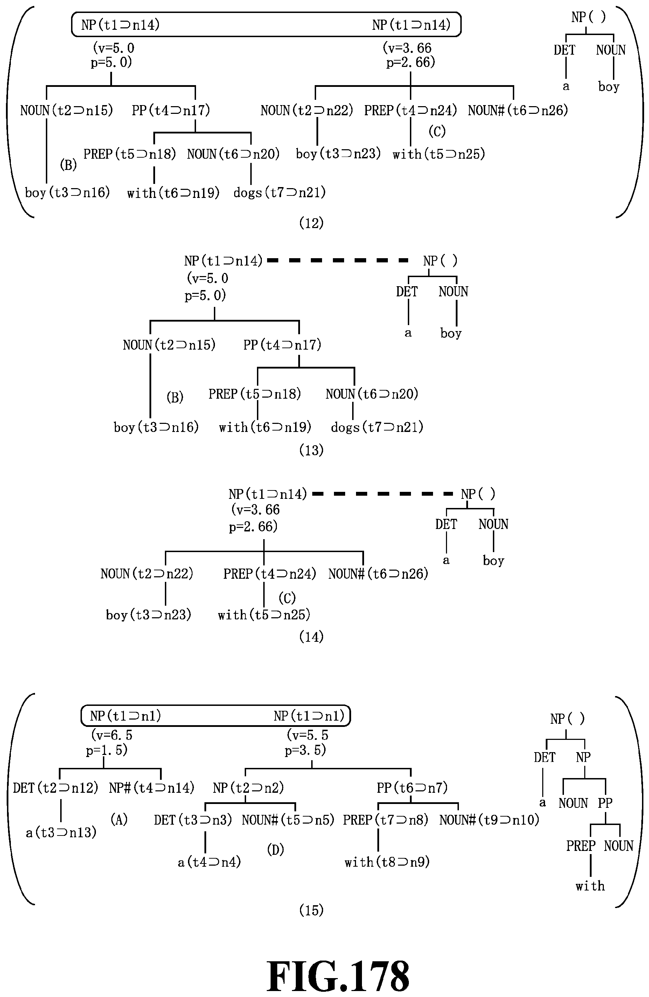

[W4]FBR cursor is moved one position to the right for introduction of next forbidden tree. This forbidden tree and the allelic exclusive tree group on which GAR cursor exists are chosen as the object of forbidden-tree-free test. Cursor moves to the position in Fig.176(6) and the pair of allelic exclusive tree group of cursor position of GAR and forbidden tree is shown in Fig.178(12) using ordinary parenthesis.

[X]As input to process X given by Fig.177(12) treats allelic exclusive group of 2 trees, 2 inclusion test pairs of Fig.177(13) and Fig.177(14) are obtained from Fig.177(9). First, process X generates decision "yes". Concerning with the pair of Fig.177(14), process X also generates decision "yes". As process X generates decision "yes" when one decision pair obtains "yes" decision, no change in data in register GAR occurs.

After passing process X with "yes "decision operation goes to process W3. Since FBR cursor is on the left end as seen in Fig.176(6), process W3 generates decision "yes" and operation goes to process W5. As GAR cursor is not on the left end and on the position of cursor(4) in Fig.175(1), process W5 generates decision "no" and operation goes to process W6.

[W6]One tree group moves cursor of global exclusive tree register GAR to the left. As a result cursor moves to the position of cursor(5) in Fig.175(1).

[W2]FBR cursor is moved to position outside of left end shown in Fig.176(2).

After passing process X with "yes "decision operation goes to process W3 which generates decision "no" and operation goes to process W4.

[W4]FBR cursor is moved one position to the right for introduction of next forbidden tree. This forbidden tree and the allelic exclusive tree group on which GAR cursor exists are chosen as the object of forbidden-tree-free test. Cursor moves to the position in Fig.176(3) and the pair of allelic exclusive tree group of cursor position of GAR and forbidden tree is shown in Fig.178(15) using ordinary parenthesis.

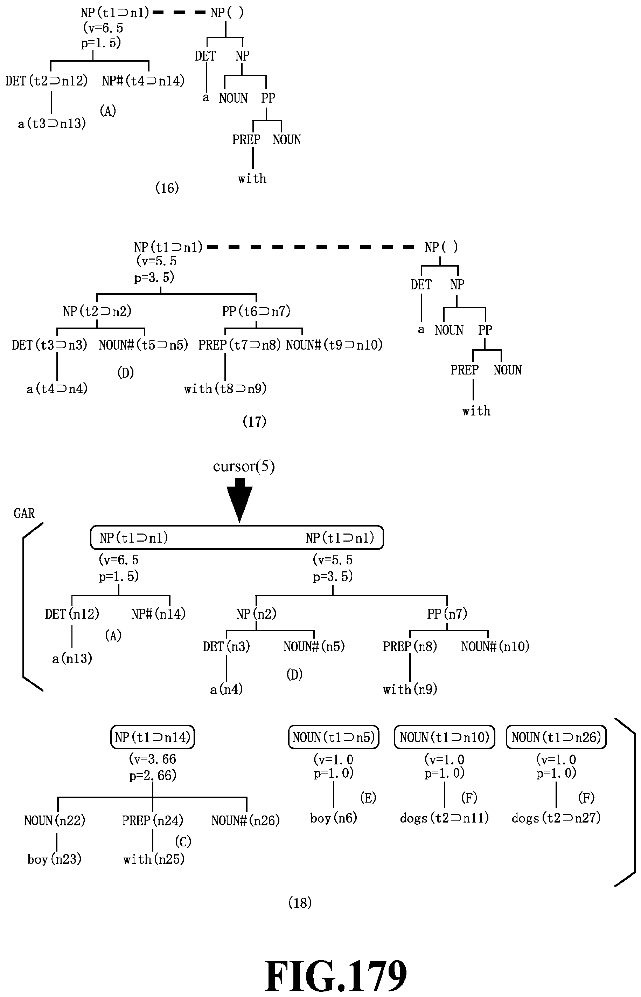

[X]As input to process X given by Fig.177(9) treats allelic exclusive group of 2 trees, 2 inclusion test pairs of Fig.179(16) and Fig.179(17) are obtained from Fig.178(15). For the pair of Fig.179(16), process X generates decision "yes" but the data in GAR changes to that in Fig.179(18) due to the inclusion of the type of Fig.156(6). Erasure of 1 exclusive tree at group of n14 happens.

Process goes to process W3. Since FBR cursor is not on the right end as seen in Fig.176(3), process W3 generates decision "no" and operation returns to process W4.

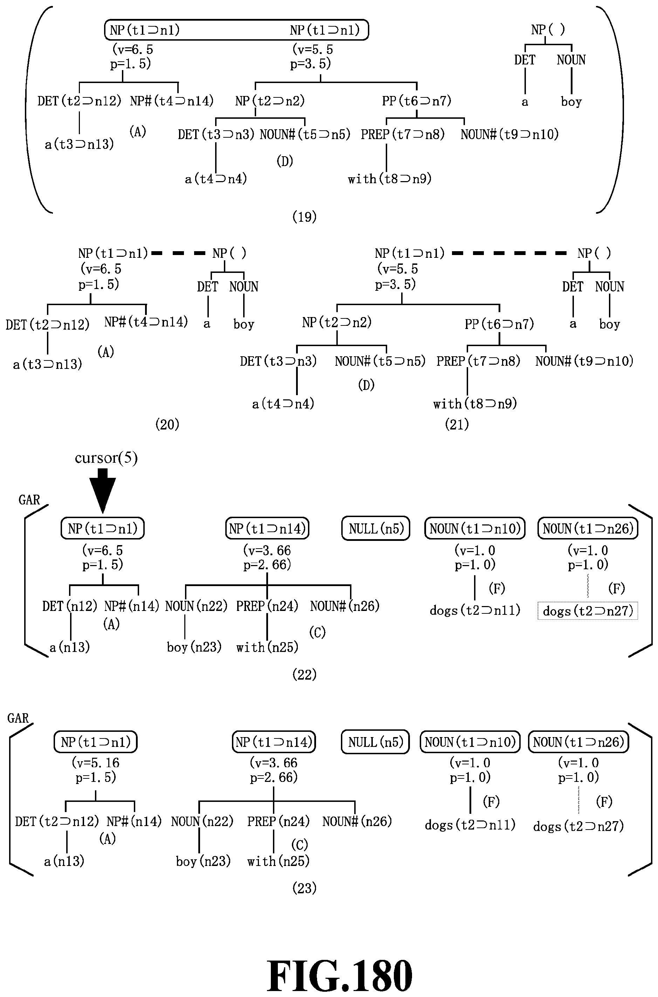

[W4]FBR cursor is moved one position to the right for introduction of next forbidden tree. This forbidden tree and the allelic exclusive tree group on which GAR cursor exists are chosen as the object of forbidden-tree-free test. As a result, cursor moves to the position in Fig.176(6) and the pair of allelic exclusive tree group of cursor position of GAR and forbidden tree is shown in Fig.180(19) using ordinary parenthesis.

[X]As input to process X given by Fig.180(19) treats allelic exclusive group of 2 trees, 2 inclusion test pairs of Fig.180(20) and Fig.180(21) are obtained from Fig.180(19). Process X generate decision "yes" as seen by human observation concerning with pair of Fig.180(20) resulting in no change at GAR data. As for case of Fig.180(21), the failure of forbidden-tree-free is obtained through the operation process illustrated at Fig. 165 to Fig.167 of "X.unit for detecting non-inclusion of extra-regional forbidden tree in exclusive tree" of "entire exclusive tree type". As process X generates decision "yes" as far as 1 exclusive tree is forbidden-tree-free, decision here of process X is "yes" but data in GAR changes to that of Fig.180(22). Here, the exclusive tree of node n5 and exclusive tree D having leaf node n5 are erased. This is the example of the merit of "entire exclusive tree type" where test for Fig.180(21) is done after the success of Fig.180(20) avoiding omission of forbidden-tree-free test.

Operation returns to process W3. Since the FBR cursor is on right end as shown in Fig.176(6), operation goes to process W5. Since the cursor of cursor(5) position is on the left end of global exclusive tree register GAR as seen in Fig.175(1), process W5 generates decision "yes" and operation goes to process W8.

[W8]The "K.maximum value tree generation unit" in Fig.125 is applied to the GAR data in Fig.180(22). The "K.maximum value tree generation unit" arranges exclusive trees in each allelic exclusive tree group in descending order of accumulated tree value. By the operation of "K.maximum value tree generation unit", the accumulated tree value of tree of node n1 changes to 6.5 to 6.16 in the tree group of Fig.180(23). As each allelic exclusive tree group is composed of single exclusive tree, no order change in each group happens.

Process W9 decides whether node number of leftmost group in GAR coincides with the node number registered by process W1 at the beginning of operation. As data in GAR in Fig.180(23) includes the group of node n1 which is registered at process W1, process W9 generates decision "yes" and operation goes to process W10.

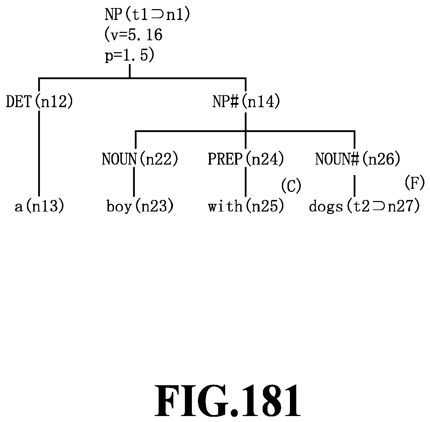

[W10]The data in allelic exclusive tree register GAR is introduced to "C.maximum val2ue tree construction unit" in Fig.155 and the output analysis tree in Fig.181 is obtained.

[W11]This process generates the output the analysis tree in Fig.181 together with the data in allelic exclusive tree register GARS in Fig.180(23). This process completes the operation of entire activity of "analysis result selection apparatus at example sentence driven machine translation."

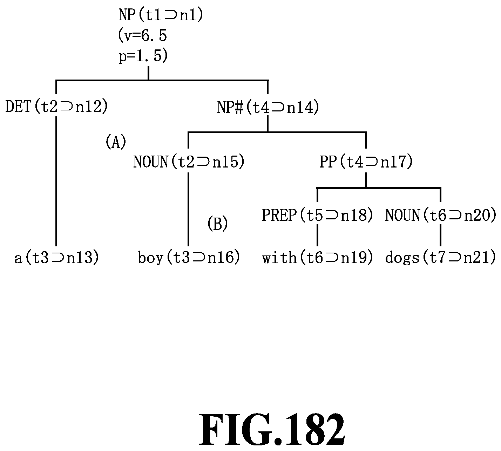

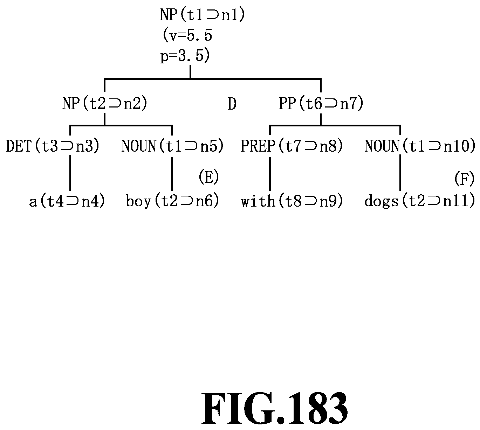

The analysis tree in Fig.181 is the output of "analysis result selection apparatus at example sentence driven machine translation" so far explained. The output analysis tree not influenced by forbidden tree inclusion test is shown in Fig.138 the reproduction of which is shown in Fig.182. The output analysis tree of "topmost node type" not including solely the forbidden tree in Fig.155 or left-hand tree in Fig.174, is shown in Fig.160 the reproduction of which is shown in Fig.182, These analysis trees in Fig.181, Fig.182 and Fig.183 are different from each other as seen at Fig.147. The tree value of analysis tree in Fig.181 not including 2 forbidden trees is 5.16 and the value of tree in Fig.183 not including 1 forbidden tree is 5.5 and tree value of tree in Fig.183 including both forbidden tree is 6.5. The situation where tree with large tree value is deleted because of inclusion of forbidden tree is observed. Analysis trees in Fig.181, Fig.182 and Fig.183 are all trees in Fig.147 generated from allelic exclusive tree array group in Fig.173 not influenced by the selection concerning forbidden tree. It is observed that different analysis trees are generated according to the forbidden tree application.

Influence of forbidden tree inclusion is explained using Fig.145. From the whole of allelic exclusive tree group array in Fig.145 before influence of forbidden tree, analysis tree of Fig.182 is generated. After deletion designated as X1 of exclusive tree B, analysis tree of Fig.183 is generated. After deletion designated as X1 of tree B, X2 of tree E and X3 of Tree D, analysis tree of Fig.181 is generated.

When the node number of leftmost exclusive tree group in input GAR data registered by process W1 at the beginning of operation is absent in output GAR data, process W9 generates decision "no" of analysis failure. In this case, operation goes to process W12 that outputs only data in GAR. As information of component elements of unsuccessful analysis tree is obtained from the exclusive tree groups near to left end in GAR, this operation is done.

The operation to finally obtain the output of analysis tree in Fig.181 is traced here. Using the generation process of exclusive tree D in Fig.76 as an example, explanation of operation of "P.coincidence matrix generation unit", "N.adjoining coincident word detection element", "S.common word sequence detection unit", "D.dominating node detection unit", "T.composition unit of temporal exclusive tree" and "V.tree value generation unit for exclusive tree" composing "E.temporal exclusive tree generation module" in Fig.34 is made. Through this process, allelic exclusive tree group array in Fig.173 is generated.

As the starting situation of explanation on "U.upper covering module=upper covering part" succeeding "E.temporal exclusive tree generation module", the allelic exclusive tree group array of Fig.76 and the OR tree shown in Fig.77(1) supposed to be obtained from input sentence are chosen as the input example. All exclusive trees in Fig.76 excepting exclusive tree D are introduced by human hand for the convenience of explanation.

Upper covering by allelic exclusive tree group array in Fig.76 on OR tree in Fig.77(1) are conducted by "U.upper covering module=upper covering part" succeeding in Fig.81 and allelic exclusive tree group array in Fig. 118(109) or Fig.173 are generated.

At each node of exclusive trees in Fig. 173, the OR tree node number covered by the exclusive tree node is filled in and exclusive trees having topmost nodes covering the same OR tree node are grouped into an allelic exclusive group. Generation, from the array in Fig.173, of allelic exclusive tree group array not including 2 forbidden trees in Fig.174 is conducted by "W.generation module of parsed tree not including forbidden tree" generating firstly the array in Fig. 180(23). It is observed that exclusive trees B, D and E are erased from array in Fig.173. The exclusive tree D the construction method of which is shown is deleted. By Introduction of allelic exclusive tree array in Fig. 180(23) to "C.maximum value tree construction unit" belonging to "W.generation module of parsed tree not including forbidden tree" as the input, the analysis tree in Fig.181 which is the output of whole "analysis result selection apparatus at example sentence driven machine translation" is finally obtained.

Hereafter, neural network system conducting the operation similar to the "analysis result selection apparatus at example sentence driven machine translation" hitherto explained and utilizing method of the system is illustrated.

The method to convert a sequence such as serial word sequence to another sequence using neural network is called seq2seq method and is widely known. The typical application of the system is NMT(Neural Machine Translation).

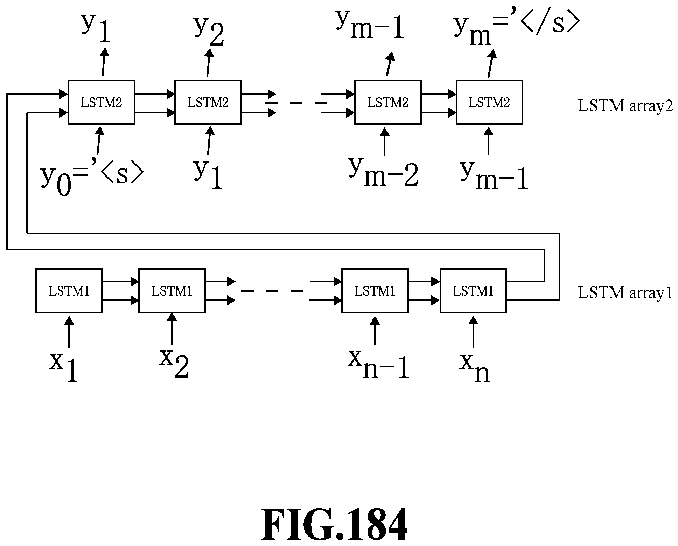

The most basic seq2seq system takes the shape of series connection of 2 LSTM's (Long Short Term Memory) and composed of LSTM1 and LSTM2 Fig.184 shows the signal transfer in estimation phase using trained LSTM. This figure appears as Fig.4-1 of reference 3.

Fig.184 shows the application example of basic seq2seq system to machine translation where variables x1 to xn express input Japanese word sequence and y0 to ym express output English word sequence output consisting the translation result. Here, variable y0 must be <s> which is start symbol and variable ym must be </s> which is end symbol. The operation where the left end word x1 is fed to left end LSTM and 2 output c and k together with next word x2 are fed to the LSTM to the right obtaining output c and k, is repeated at the estimation phase. Then, the variables c and k output by the last LSTM of 1st LSTM series are sent to left end LSTM of 2nd LSTM series. Further, the left end LSTM of 2nd LSTM series receives input of variables c and k fed by 1st LSTM together with y0 which is left end output and generates the output of variables c and k together with 2nd output y1 which are fed to LSTM to the right. Hereafter the operation where the LSTM to the right receives variables c, k and y of LSTM to the left and generates output variables c, k and y, is repeated. As seen in Fig.184, the last output signal is end symbol </s>. As variables c and k do not influence outside of seq2seq system, further explanation is abbreviated.

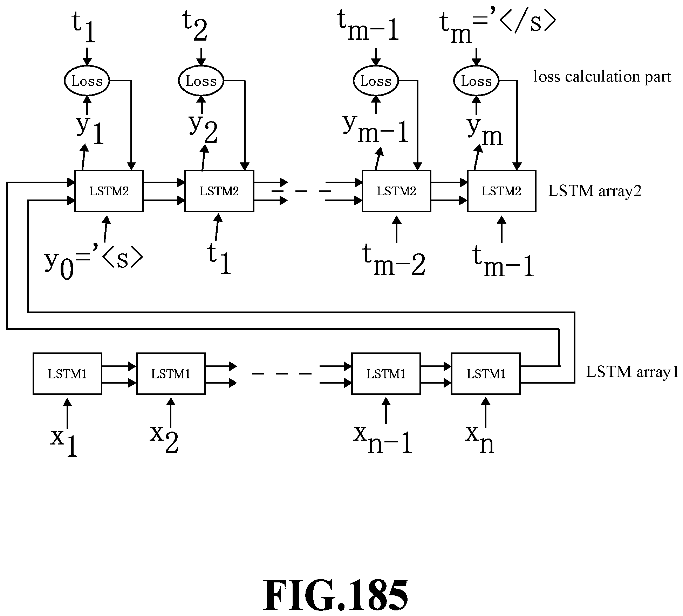

The training phase operation of seq2seq system in Fig.184 is illustrated in Fig.185. This figure is modification for explanation purposes of Fig.4-2 of reference 3. The same operation as estimation phase is done at 1st LSTM series where left end word x1 is fed to left end LSTM and 2 output c and k together with next word x2 are fed to the LSTM to the right obtaining output c and k. This operation is repeated until the instance when last LSTM of 1st LSTM series outputs variables c and k of left end LSTM of 2nd LSTM series. The left end LSTM of 2nd LSTM series receives input of variables c and k fed by 1st LSTM series together with start symbol <s> designated as y0 and generates first output y1 which is fed, together with the first teacher word t1, to the loss generation part "Loss." The loss generation part generates the cross entropy loss that is fed back and used for training. The left end LDTM also generates variables c and k and sends to LSTM to the right. The LSTM to the right receives variables c and k together with first teacher word t1 and generates 2nd output word y2. From output y2 and 2nd teacher signal y2, the loss is calculated which is fed back and used for training. LSTM to the right also generated output c and k that are output to LSTM further to the right. These process are repeated and the last output signal must be end symbol </s> as seen in Fig.185.

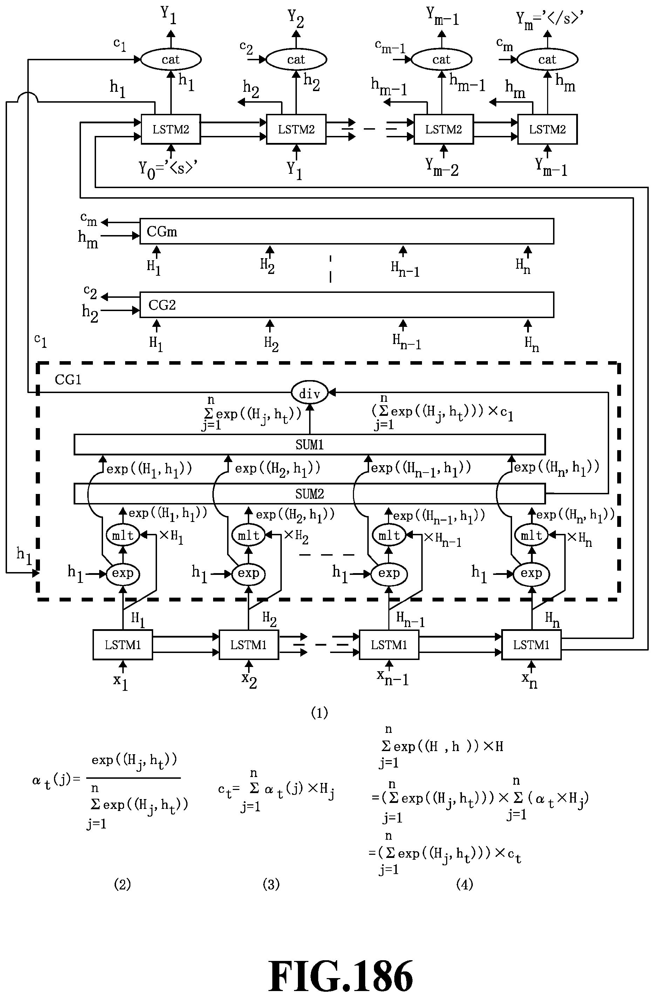

Next, explanation is made on seq2seq system with attention that is improvement result of basic seq2seq system shown in Fig.184 and Fig.185 and is already known. Fig.186(1) shows estimation phase of seq2seq with attention system. The operation where the left end word x1 is fed to left end LSTM of 1st LSTM series and 2 output c and k together with next word x2 are fed to the LSTM to the right obtaining output c and k that is fed to LSTM further to the right, is repeated. Above operation is the same as basic seq2seq system. As seen in Fig.186(1), each LSTM in 1st LSTM series preserves it's intermediate layer output. The variables H1, H2 - Hm-1, and Hm are intermediate layer output at the introduction end of input signals x1, x2 - xn-1, and xn. Then the last LSTM of 1st LSTM series feed c and k output to the left end LSTM if 2bd LSTM series. Left end LSTM of 2nd LSTM series receives input y0 and c and k fed by 1st series and generates output h1.

This enters into C signal generator CG1 that is at the left end of CG array. CG1 is used exclusively by the left end LSTM of 2nd LSTM series. The ith "exp" in series of inner-product-exponential-generation-part in Fig.186(1) is to make "exp(h1, Hi)" which is exponential of inner product among h1 that is output of left end LSTM of 2nd LSTM series and intermediate layer output Hi of ith LSTM of 1st LSTM series. Here, exponential value of scalar value a(h1, Hi)" which is inner product of 2 vectors is obtained. SUM1 in Fig.186(1) sums up exp(h1,Hi)s.

The ith mlt in C signal generator CGM1 multiplies output of ith inner-product-exponential-generation-part and Hi. The output of ith mlt is (exp(h1, Hi) xHi. As seen in Fig.186(1), SUM2 sums up values of (exp(h1, Hi) xHi.

Division part div in C signal generator in Fig.186(1) divides output of summation part SUV2 by output of summation part SUM1. In conclusion, C signal generator CG1 takes the output of left end LSTM of 2nd LSTM series and output of 1st LSTM array as the input and feeds the context vector c1 to left end LSTM of 2nd LSTM.

Left end LSTM of 2nd LSTM series concatenates this c1 and it's output h1 at portion cat and outputs variable Y1 as it's output.

In summary, left end LSTM of 2nd LSYM series receives variable c and k of 1st LSTM series and input Y0 and generates variable h1, which is sent to 1st LSTM series. C signal generator CG1 in 1st LSTM series generates context vector c1. Left end LSTM uses this vector c1 and its own output h1 and generates output Y1. Further, left end LSTM generates variables c and k and send them to the LSTM to the right.

The 2nd LSTM of 2nd LSTM series receives variables c, k and Y1 from LSTM to the left and generates variable h2 that is sent to 1st LSTM series. C signal generator CG2 at 1st LSTM series generates context vector c2. 2nd LSTM concatenates this vector c2 and its output h2 and output Y2 that is sent to LSTM further right. Here, CG2 receives output h2 of 2nd LSTM and context vector c2.

The process where a LSTM in 2nd LSTM series sent its output to LSTM to the right which decides it's output using C signal generator of 1st LSTM series, is repeated from left end LSTM and entire output of LSTM is obtained.

As the operation of CG2 to CGm-1 is the same as C signal generator CG1 which is minutely explained, only its input and output are shown in Fig.186(1).

Fig.186(2) is the equation concerning with one C signal generator in seq2seq system with attention to generate variable $\alpha$ which is necessary to obtain context vector c. Fig.186(3) is to obtain context vector using this $\alpha$. 1st term of Fig.186(4) shows output of SUM2 pf a C signal generator. 2nd term of Fig.186(4) is obtained by substitution of variable exp((Hj, ht)) with the variable in Fig.186(2). The 3rd term of Fig.186(4) is obtained by substitution of Fig.186(3), In summary, Fig.186(4) shows that output of summation part SUM2 is multiplication results of context vector c and the output of summation part SUM1. Then division of SUM2 output by SUM1 output by the dividing portion div resulting in context vector c that is the output of C signal generates CG. Fig.186(2), Fig.186(3) and Fig.186(4) are shown in page 98 of reference 3.

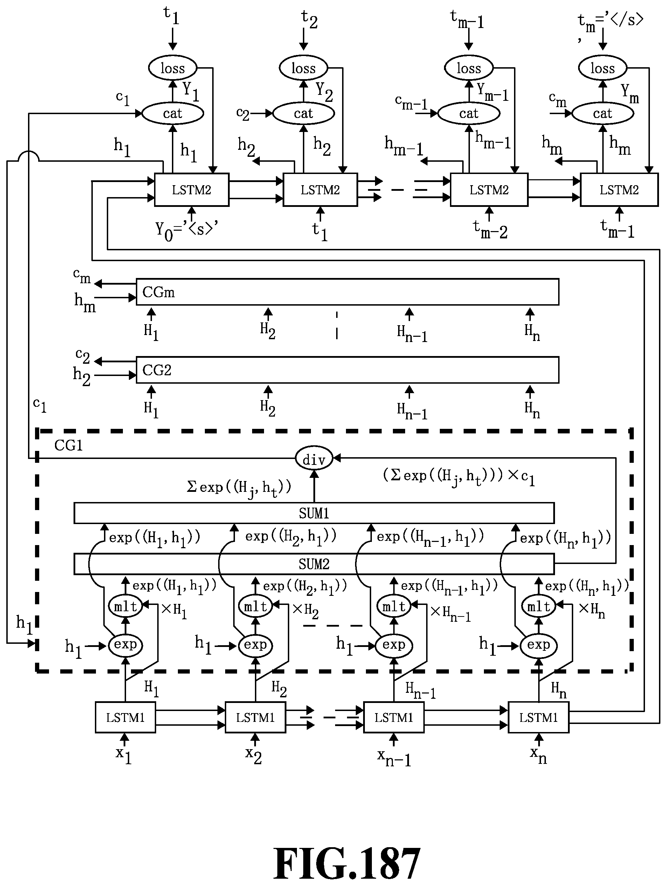

Fig.186(1) shows estimation phase of seq2seq system with attention, on one hand, and Fig.187 shows, shows training phase on the other hand. Input and output signals in Fig.187 are the same as those of basic seq2seq system where input signals x1, x2 - xn-1, and xn are sequentially introduced to LSTM's of 1st LSTM series from the left. After completion of input operation to 1st LSTM series, teacher signal t1 is introduced to left end LSTM of 2nd LSTM series resulting in the output h1 which is sent to 1st LSTM series resulting further in context vector c1. Then left end LSTM concatenates context vector c1 and h1 obtaining the output y1. These operations are the same as that at estimation phase of seq2seq system with attention. Moreover in training phase, the loss that is difference between output signal y1 and teacher signal t1 is measured at loss generating part "loss" and the result is fed back to left end LSTM. As a result, back propagation occurs in left end LSTM resulting in training at left end LSTM. In addition, left end register generates variables c and k to 2nd LSTM initiating the operation at 2nd LSTM. In this way, training in LSTM's in 2nd LSTM series progresses receiving teacher signals t's until left end LSTM.

In Fig.184 to Fig.187, only generation of information, relation between 2 input information and 1 output information, merge of information are illustrated, however, explanation of word embedding of input words into vector expression, selection of output word from vector expression using soft-max method, conversion of vector dimension using linear transformation, are abbreviated for the simplicity. The technology shown in Fig.184 to Fig.187 is published technology and the realization method for basic seq2seq system is treated in pp213,217 and that for seq2seq system with attention is treated in pp218,222 of reference 3.

Here, the expression way of tree structure by letter sequence at "analysis result selection apparatus at example sentence driven machine translation" is illustrated.

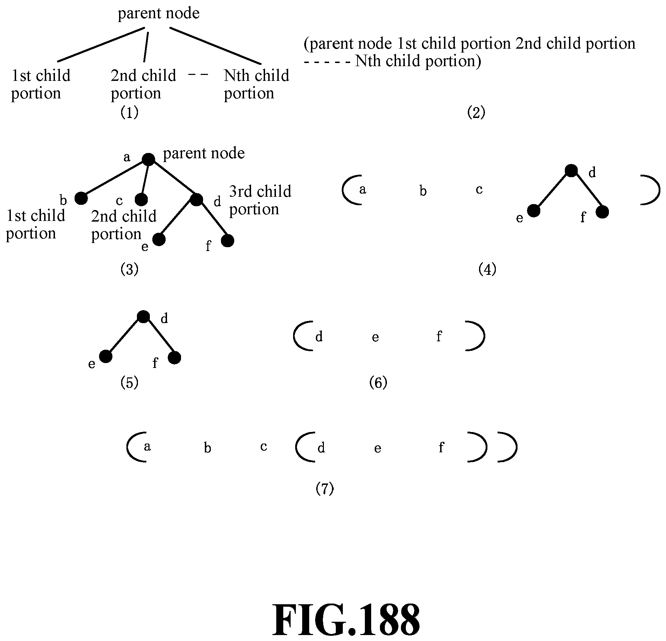

Fig.188 is the figure to explain the basic way of expressing tree configuration by letter sequence. Fig.188(1) is general way expressing parent node and child components. Fig.188(2) is letter sequence expression corresponding to general tree expression in Fig.188(1). In summary, parent node is positioned directly after open parenthesis and child components are positioned after the parent node keeping the order in tree structure and close parenthesis closes the entire expression.

Fig.188(3) shows an example of tree structure of height 3. The parent node has 3 child components. The expression of Fig.188(4) is obtained as letter sequence expression of the tree configuration of Fig.188(3) through the use of general relation between Fig.188(1) and Fig.188(2). Furthermore, the 3rd child component still has tree configuration. The 3rd child component has structure shown in Fig.188(5) the letter sequence of which is shown in Fig.188(6). Substitution of letter sequence in Fig.188(6) to the portion of 3rd child component gives rise to the letter sequence of Fig.188(7). This is the letter sequence expression of tree configuration of height 3 in Fig.188(3). Complicated tree structure can be expressed by letter structure by repetition of conversion from structure like that in Fig.188(1) to letter sequence like that in Fig.188(2). This type of letter sequence expression of tree structure is called S expression.

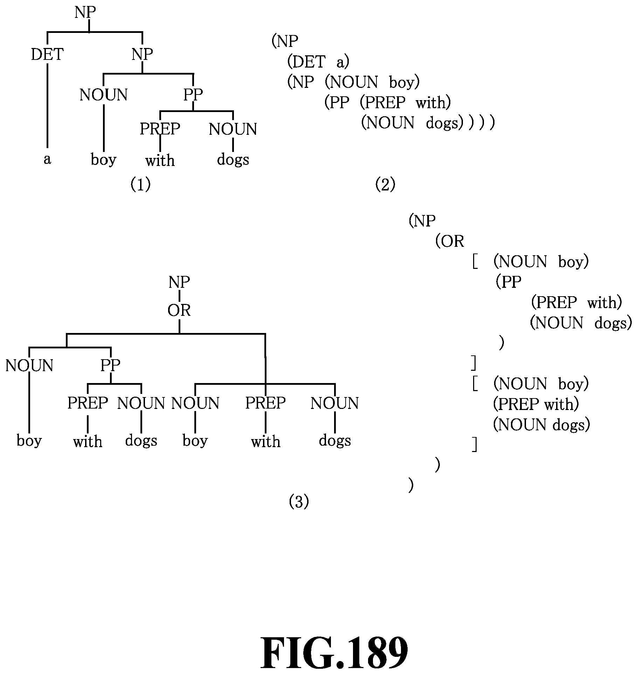

Figures in Fig.189 are an example of letter sequence expression. Fig.189(2) shows S expression of tree in Fig.189(1). For the convenience of visibility, Fig.189(2) is expressed in pretty print style that actually takes the shape of letter sequence. Fig. 189(3) is an example of OR tree the letter sequence expression is shown in Fig. 189(4). To show that child components under OR tree are in parallel relation with each other, each child components is enclosed by parenthesis. This is the difference from treatment of ordinary node. In Fig.189(4), child components directly under OR node are enclosed by rectangular parenthesis which is added to ordinary S expression to show that they are in parallel relation.

Reference 4 shows that the way of obtaining the output of phrase structural analysis result in S expression from the input of ordinary English sentence is realized by the use of seq3seq system with attention. This seq2seq with attention system does training using lager amount of pairs of English sentences and their respective phrase structural analysis result. After the training, this seq2seq with attention system conducts conversion of arbitrary English sentences to its phrase structural analysis results.

This system has the same function as that of "analysis result selection apparatus at example sentence driven machine translation" of this patent application. The difference between the system of reference 4 and system of this patent application lies in that the training result is memorized in coefficients between elements in LSTM but the training result is large amount of example trees at the system of this patent application. Whereas the training result at system of reference 4 is memorized in coefficients between elements that are untraceable, the system of this patent application has the merit where training result is memorized in the shape of example trees that are traceable. The 2 systems have common necessity of needing large amount of example trees.

As the system of this patent application has many parameters such as exclusive trees stored in the system, forbidden trees, context free rewriting rules and word dictionary that are controllable by human hand and has superiority over the system of reference 4 to which parameter input human hand is impossible.

Through "analysis result selection apparatus at example sentence driven machine translation" has various rules such as dictionary rules, context free writing rules, exclusive trees stored in the system and forbidden trees, they are kept stable in principle after system development is complete. Nevertheless, example tree group stored in the example tree pool can be treated as the information source to which modification and augmentation is possible irrespective of rules belonging to main body of "analysis result selection apparatus at example sentence driven machine translation".

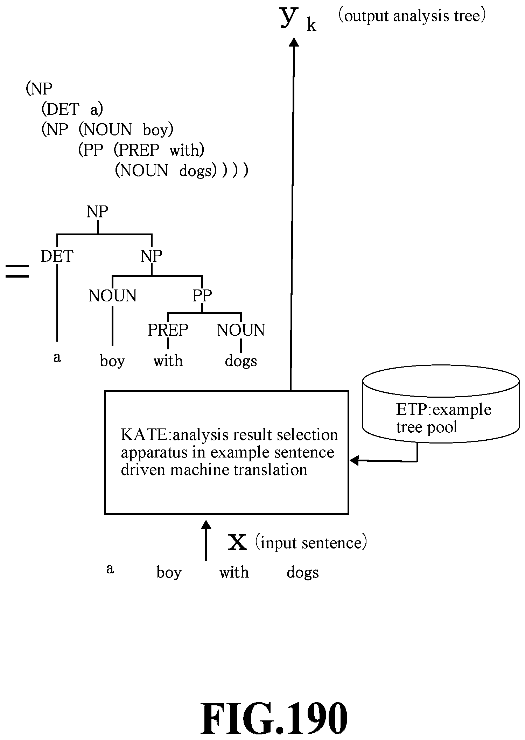

Fig.190 shows the figure to show the function of example tree group at the generating operation of the analysis tree from the input sentence to "analysis result selection at example sentence driven machine translation". Here, the abbreviation KATE stands for "analysis result selection apparatus at example sentence driven machine translation" and the abbreviation ETP attends for example tree pool. As seen in Fig. 190, the information of example trees stored in example tree pool ETP is supplied to the main body of "analysis result selection apparatus at example sentence driven machine translation" KATE.

The figure in Fig.190 illustrates the situation where "analysis result selection apparatus at example sentence driven machine translation" KATE conducts the operation to generate the analysis tree from the input sentence using the information in the example tree pool. Here, the input sentence is denoted by the symbol "x" and the output analysis tree is denoted by the symbol "yk", Both of the input sentence "x" and analysis tree "yk" are expressed by word sequence among which "yk" is conversion result from tree configuration by the method shown in Fig.188.

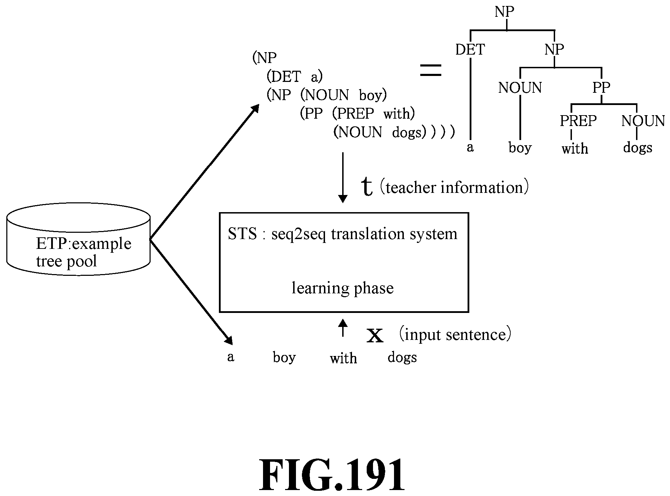

Here, abbreviation STS stands for seq2seq system. Fig.191 shows the situation of training phase of STS using the same example trees as those input to KATE.

Detailed situation of STS in training phase is illustrated in Fig.185 or Fig.187. As a matter of course, the teacher information t1, t2 -tm-1 and tm is also word sequence shown in Fig.191.

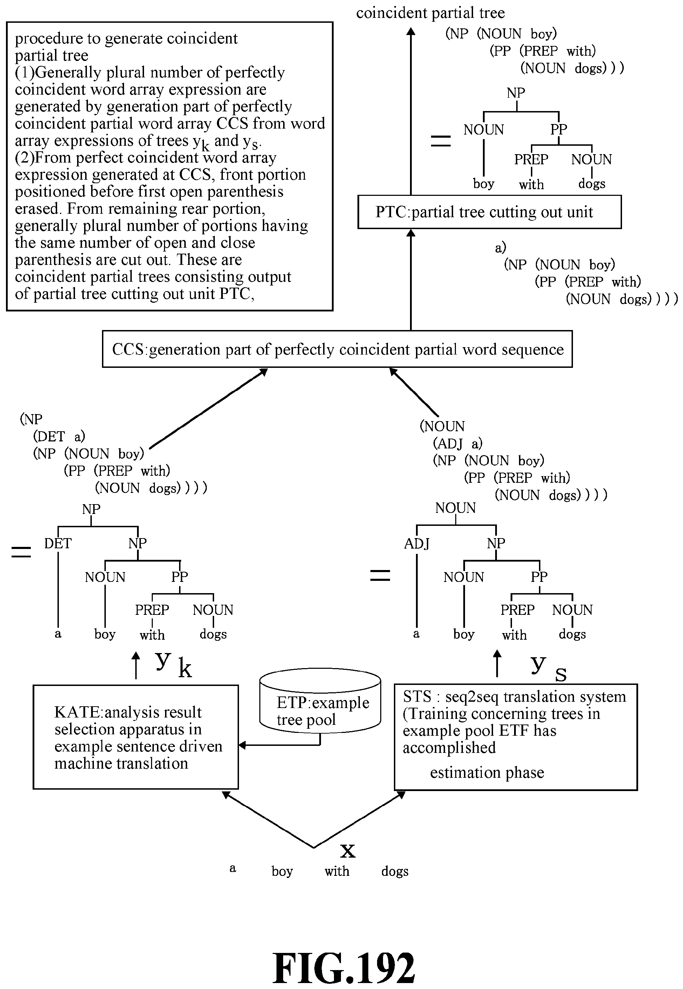

Fig.192 shows the process where the same input x which is not included in example tree pool ETP is fed to both of KATE and STS and perfectly coincident partial word sequence between the output of KATE yk and that of STS ys is obtained and finally cutting out operation is applied to the coincident word sequence giving rise to the coincident partial tree. The STS here must be already trained by the method in Fig.1911 using example tree pool ETP and KATE here works on the example tree pool ETP. The perfectly coincident word sequence is the coincident word sequence without inclusion of non-coincident word sequence. In the case of Fig.192, differences of NP versus NOUN at 2nd words and DET versus ADJ at 4th word exist between the output yk of KATE and the output ys of STS. Open parenthesis "(" and close parenthesis ")" are counted as 1 word by themselves. In this case, perfectly coincident word sequence begins with the word "a."

The part enclosed by a rectangular in Fig.192 shows sentence expression of obtaining process of coincident partial tree. Namely, generally plural number of perfectly coincident partial word sequences is obtained first at CCS. CCS stands for "generation part of perfectly coincident partial word sequence". Next, the sequences to the left of respective open parenthesis are erased from the coincident sequences and, from these erased results, the sequences each of which begins with the left end word and has the same number of open parenthesis and close parenthesis are extracted at PTC. PTC stands for "partial tree cutting out unit". By this process, the coincident partial trees are generated.

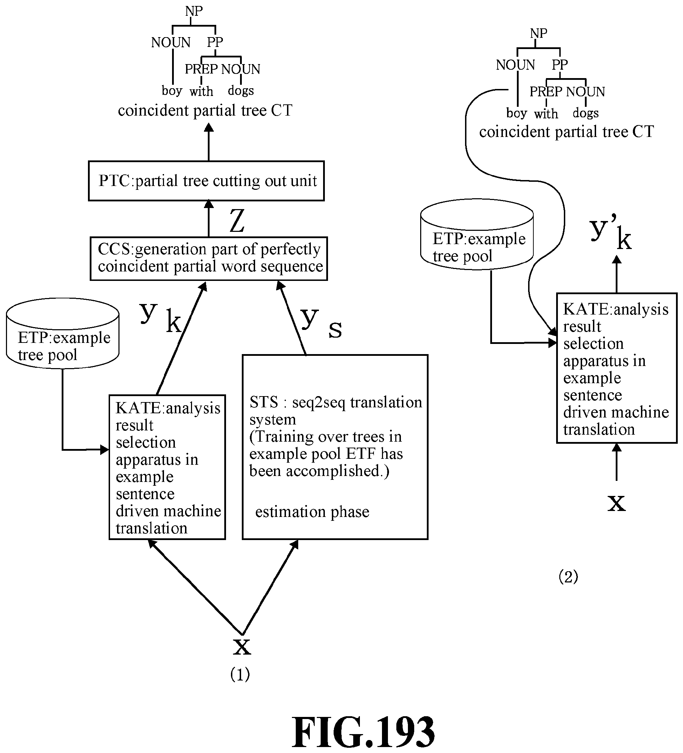

Fig.193 shows the method to utilize this coincident partial tree as additional example tree. Fig.193(1) shows the same situation as that in Fig.192. These plural number of coincident partial trees thus obtained are called CT(coincident partial trees). Fig.193(2) illustrates the situation where KATE system operates using example trees in ETP that is temporarily supplemented with this CT in addition to example trees formerly stored in ETP. In this case, relatively precise analysis result is expected with the aid of CT that is relatively reliable.

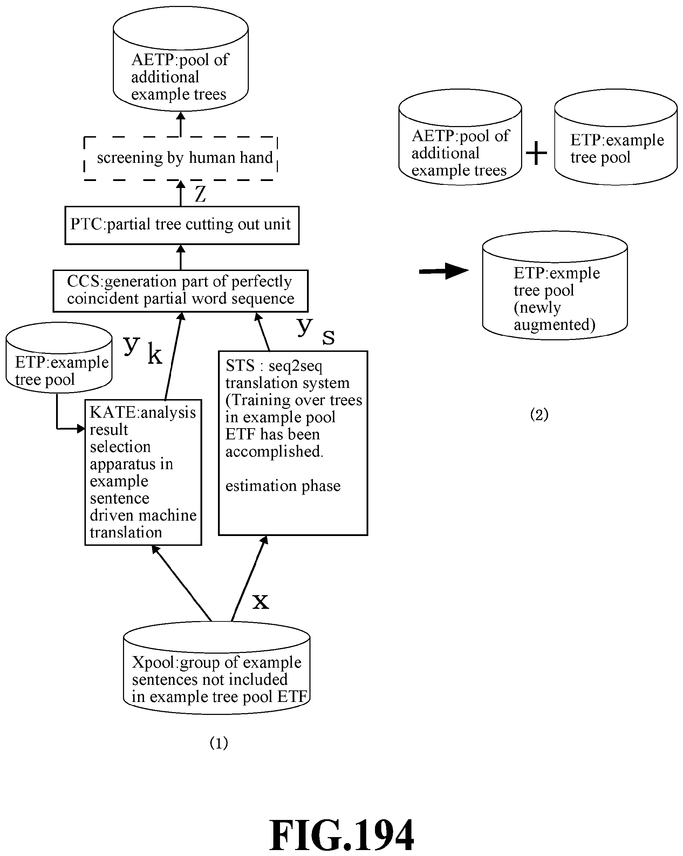

Fig.194 shows the method to augment example trees in ETP by utilizing coincident partial trees. Fig.194(1) illustrates the method to obtain many coincident partial trees and to accommodate them in the additional to example tree pool AETP, by the utilization of the construction in Fig.192 where coincident partial trees are obtained from the output from KATE utilizing example trees in example tree pool ETP and the output from STS at which training over the examples in ETP is accomplished, and by the feeding of many examples trees belonging to example set called Xpool which is composed of example trees not included in ETP. The portion enclosed by dotted line is selection of correct coincident partial trees conducted by human hand according to necessity. Fig.194(2) shows the way to build new content of ETP by the addition of the content of additional example tree pool AETP to the content formerly accommodated in ETP. The content of newly augmented ETP is used in the configuration of Fig.190 and contributes to obtain precise analysis tree. Furthermore, more precise generation of analysis tree at STS is expected by additional training over the content of AFTP. Consideration is made on coincident partial tree. KATE(analysis result selection apparatus at example sentence driven machine translation) is the system to obtain analysis tree having largest tree value and not including forbidden trees by covering the OR tree generated by context free rewriting rules. Among these parameters, excepting for temporal exclusive trees given by example tree pool ETP is provided by the system which is generated by human hand. On the other hand, the output ys of STS after completion of training over example tree pool ETP is generated by the use of example trees in ETF only as sole information source and there is no room for setting parameters by human hand. Namely, KATE and STS are different from each other in operation principle.

Considering the difference, the coincident partial trees obtained from outputs of KATE and STS respectively generated from the same input "x" not included in example tree pool ETP, are expected to be more accurate than respective output of KATE or STS.

Following is the algorithm to obtain coincident partial tree. As seen in Fig.192, the generation operation of coincident partial tree is composed of 2 operations. The first is the operation to extract perfectly coincident word sequence between KATE output and STS output. As seen in Fig. 192, this operation is conducted at "generation part of perfectly coincident partial word sequence" CCS.

The 2nd operation is to obtain coincident partial tree from perfectly coincident partial word sequence that is the output of CCS. As seen in Fig.192, this operation is conducted by partial tree cutting out unit PTC.

First, explanation is made on the operation of "generation part of perfectly coincident partial word sequence" CCS. Like the case in Fig.2, coincident matrix is used for the detection of coincident partial letter sequence.

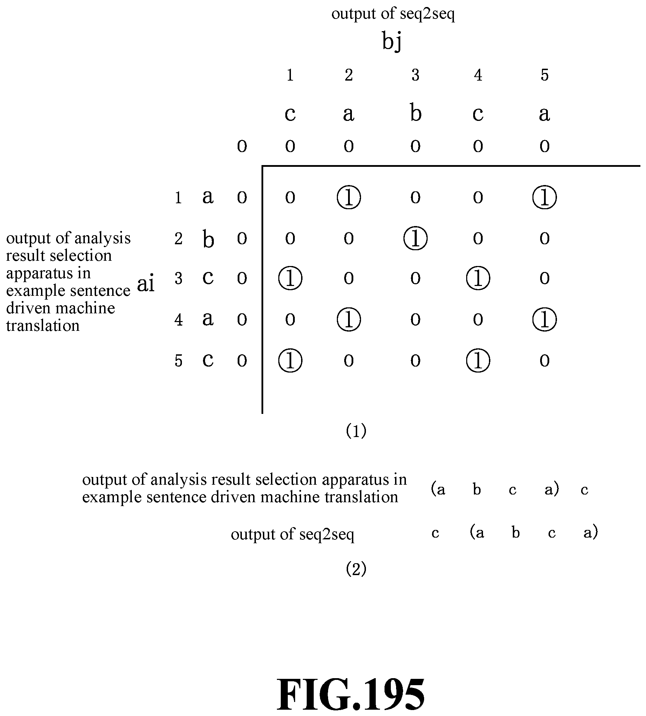

Fig.195(1) shows an example of coincident matrix to obtain perfectly coincident partial word sequence. As seen in Fig.195(1), the i'th output word ai of KATE is placed at the position of i'th row and j'th output word bj of STS is placed at the position of j'th column. As in Fig.2, a letter is considered to be a word here. As in Fig.2, 0'th row and 0'th column are placed in addition to lower rows beginning with 1st row and columns to the right beginning with 1st column both of which can contain meaningful data.

The element at i'th row and j'th column in coincident matrix is expressed as pi,j.When letter of i'th row and letter of j'th column coincide, the value of concerning element pi,j in Fig.195(1) is set to 1 and enclosed in a circle to express the coincidence. Element value of non-coincidence is defined to be 0. Unlike the example of Fig.2, only 1 and 0 are used for element value. The element values at the 0'th row or 0'th column are defined to be 0. As letters must be positioned in the range of matrix, number of rows I counted from 1st row and number of columns J counted from 1st column are set to respective sequence length. At the case in Fig.195(1), I and J values are both 5.

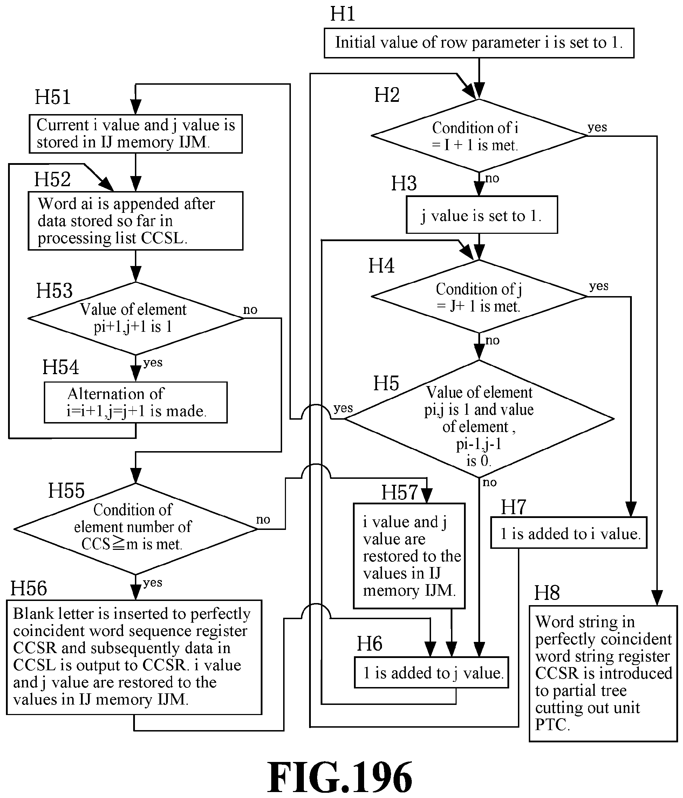

Unlike the case of Fig.2, Fig.195(1) aims to obtain perfectly coincident word sequence resulting in relatively simple operation. The perfectly coincident word sequence is the coincident word sequence without inclusion of non-coincident word sequence. Fig.196 shows the algorithm of "generation part of perfectly coincident partial word sequence" CCS to obtain perfectly coincident word sequence from coincident matrix like that in Fig.195(1). CCS algorithm has "processing list" CCCSL to accommodate word sequence under processing, "perfectly coincident word string register" CCSR to accommodate perfectly coincident word sequence after completion and "IJ memory" IJM to temporality store i and j values.

At the flowchart in Fig.196, processes H1 to H18 conducts the scanning of coincident matrix beginning with the position i=I and j=J to detect start position of coincident sequence process H51 to H56 conduct generation of perfectly coincident sequence after the detection of the stat point. After completion of a perfectly coincident sequence operation returns to the scanning by processes H1 to H8 and this process is repeated. After horizontal scanning from j=1 to j=J, value 1 is added to i value and this process is repeated until the scanning reaches to the position i=I, j=J. The total number of process is 14.

The i value and j value are row number and column number of current processing. The minimum length of perfectly coincident wore sequence to be generated in CCS is m and the velum is set to 3 in the explanation hereafter.

Process H1 is to set parameter i and j to initial positions of 1. Process H2 surveys whether entire scanning is over and i value becomes I+1. When process H2 generates "yes" decision, operation goes to process H8 of termination of operation. When decision of H2 is "no", operation goes to process H3 to prepare for new horizontal scanning. Process H3 set j value to 1 to prepare for new horizontal scanning. Process H4 surveys whether one horizontal scanning is completed and j value becomes J+1. When H4 generates decision "yes", operation goes to process H7 to begin next horizontal scanning. When process H4 generates decision "no", operation goes to process H5 to detect the start of perfectly coincident sequence. Process H5 surveys whether the situation that current element pi,j has the element value 1 indicating that letter ai and letter bj coincide and the element pi-1,j-1 which is upper left element has element value 0 of no-coincidence, happens. This is the condition of the start of perfectly coincident sequence existing on diagonal line. When process H5 generates "yes", operation goes to process H51 that is first process of perfectly coincidence sequence. When decision of process H5 is "no", operation goes to process H6 to continue horizontal scanning. Process H6 moves the scanning column one position to the right by increasing j value by 1. Process H7 moves the scanning position one row down by increasing i value by 1 By the reason that j value becomes more than J, Process H8 outputs the completed word sequence accommodated in "perfectly coincident word string register" CCSR as the output of "generation part of perfectly coincident partial word sequence" CCS and feeds it to "partial tree cutting out unit" PTC.

Processes H51 to H56 trace the perfectly coincident word sequence extending of the diagonal line and record vertical axis letters ai's during the trace operation. Process H51 accommodates current parameter values i and j in IJ memory IJM and the operation of this process begins when process H5 decides that the commencement condition of coincident sequence is met. Process H52 introduces the word ai having current i value after accommodated data in "processing list CCSL" CCSL thus composing coincident sequence in CCSL.

Process H53 surveys whether the value of element pi+1,j+1 that is at lower right of current position is 1 meeting the condition of coincident sequence. When H53 generate decision "yes" operation goes to process H54 to continue construction of the sequence. When "no", operation goes to process H55 to finish composition of the sequence. Process H55 surveys whether the length of sequence obtained is equal or larger than prescribed minimum length "m". When process H55 generates decision "yes", operation goes to process H56 to output perfectly coincident word sequence completed. When "no", operation goes to process H57 not to generate output.

Process H54 moves current element position to lower left position by increasing i and j value respectively by 1 and operation returns to process H52 of introduction of letter ai of current i value to CCSL after this move. Process H56 is to output completed word sequence. First, process H56 inserts a blank in the data of SSL for the separation of sequences. Then, process H56 introduces completed sequence to CCSR. Furthermore to return to scanning mode, process H56 changes current i, j values to those stored in IJM which are those existing at the transition from scanning mode.

Tracing of the operation to obtain perfectly coincident word sequence from coincident matrix in Fig.195(1) by the use of flow chart in Fig.196, is explained hereafter. To begin with, process H1 in Fig.196 sets row parameter i to 1. Process H2 generate decision "no" because the row number I is 5. Process H3 sets column parameter j to 1 placing processing position at upper left corner of the matrix. Process H5 generates decision "no" because element value p1,1 is 0. Process H6 adds 1 to parameter j making i value 1. Passing H4 with decision "no" Process H5 generates decision "yes" detecting the start of coincident sequence because element value p1,2 is 1 and element value p0,1 is 0. As a result, operation goes to process H51.

Process H51 accommodates current i, j values in IJ memory IJM. Process H52 introduces a1 value which is word "a" into processing list CCS. Process H53 generates decision "yes" because current i, j values are 1 and 2 and element value p2,3 existing at lower right is 1 and operation goes to process H54. Process H54 changes i, j values to 2, 3. Process H52 introduces a2 value that is word "b" after word "a" already accommodated value in CCS. Hereafter, operation circulates the loop of processes H62, H53 and H54 making the data in CCS to "abca" and reaches to H53 with i, j values of 4,5. As element value p4,5 of lower right position is not 1, operation goes to process H55. As the minimum length m is 3 and the length of the sequence "abca" is 4, process H55 generates decision "yes" and operation goes to process H56. Process H56 introduces a blank letter followed by sequence "abca" accommodated in processing list CCSL in perfectly coincident word string register CCSR and restores i, j values to 1, 2 accommodated in IJM.

Operation returns to scanning mode on the matrix and process H6 changes i value to 3. Operation circulates the loop of processes H4, H5, H6 increasing j value and moving the position to the right without "yes" decision at H5 and operation reaches H5 with j value of 5, Process H5 generates decision "yes" here and operation goes to process H51. Process H51 introduces i, j values 1,5 to IJM. Process H52 introduces a1 value "a" to processing list CCSL. Process H53 generates "no" because element value p2,6 is not 1 and operation goes to process H55. Process H55 generates decision "no" because the element length 1 in CCSL is smaller than minimum value 3. Process H57 restores the i, j values to 1,5 and process goes to process H6 in scanning mode. Process H6 changes j value to 6. Process H4 generates decision "yes" because current j value is equal to J+1 where letter J denotes column number and operation goes to process H7. Processes H7 and process H3 changes i, j values to 2, 1 and operation goes to process H5 of start of 2nd horizontal scanning after passing process H4 with decision "no". Process H6 makes j value to 2 after passing process H5 with decision "no".

Operation circulates twice the loop of processes H4, H5 and H6 without "yes" decision at H5 moving position to the right and operation reaches to process H5 with j value 3. Here, process H5 generates decision "no" and horizontal scanning continues because p2.5 of current position is 1 and p1,4 of upper left element is 1. The same operation continues and reaches process H5 with i, j parameters are 3, 1. Process H5 generates decision "yes" here and operation shifts to composition of coincident sequence. Later operation reaches to process H55 with the situation that sequence "ca" is accommodated in processing register CCSL. As sequence length 2 is smaller than minimum value 3, operation reaches process H6 with i, j values 3, 1.

After further scanning, operation reaches to process H2 with values 6, 6 of i, j values. As row number is 5 process H2 generates decision "yes" operation goes to process H8 of output operation. Process H8 takes out the word sequence "abca" which is generated at the position of 1, 2 and accommodated in perfectly coincident word sequence register CCSR as the output of "generation part of perfectly coincident partial word sequence" CCS and sends it to "partial tree cutting out unit" PTC.

Fig.195(2) shows the generation method of perfectly coincident partial word sequence between outputs of "analysis result selection apparatus at example sentence driven machine translation" and seq2seq system at the example of coincident matrix in Fig.195(1). At this example, the perfectly coincident partial word sequence obtained as the output of "generation part of perfectly coincident partial word sequence" CCS generated by "perfectly coincident word string register" CCSR under control of the flow chart in Fig.196, is "abca" enclosed by parenthesis in Fig.195(2).

As seen in Fig.192, "partial tree cutting out unit" PTC which is the 2nd portion to obtain perfectly coincident partial tree takes the output of "generation part of perfectly coincident partial word sequence" CCS as input and conducts the extraction of coincident partial tree from perfectly coincident word sequence.

The following is the explanation of the operation of "partial tree cutting out unit" PTC. The cutting out operation for one sequence among generally plural perfectly coincident partial word sequence generated at "generation part of perfectly coincident partial word sequence" CCS in Fig. 196 is illustrated here.

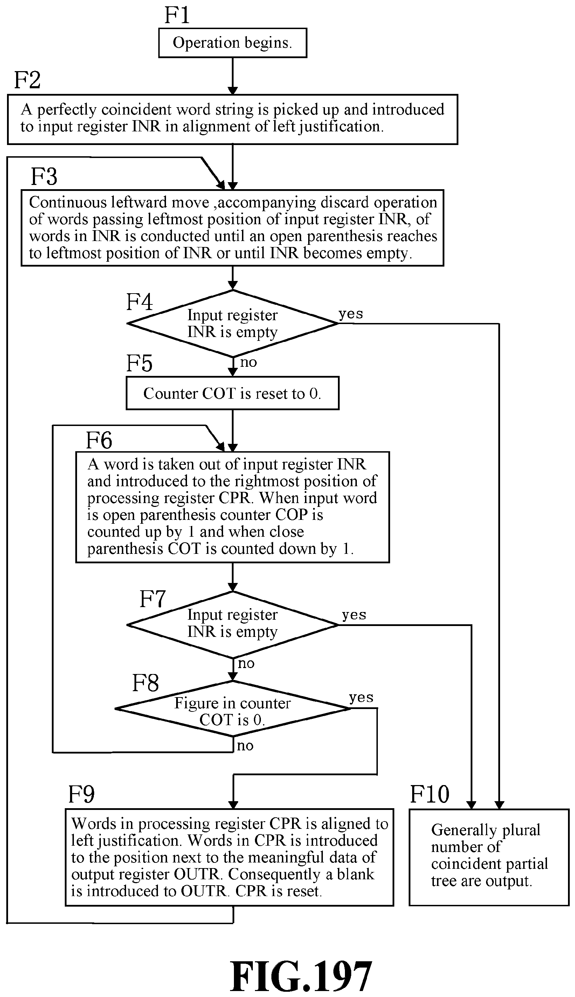

Fig.197 shows the flow chart of "partial tree cutting out unit" PTC. This flow chart is composed of 10 processes of process F1 to process F10. This flow chart uses 3 registers and 1 counter that are input register INR, processing register CPR, output register OUTR and counter COT.

Process F1 begins the operation of "partial tree cutting out unit" PTC. Process F2 takes out 1 perfectly coincident partial word sequence from the output of "generation part of perfectly coincident partial word sequence" CCS and introduces it to input register INR in the style of left justification. Process F3 continuously moves to the left the sequence in input register INR and disposes of the sequence sequentially from the left until the sequence reaches the position directly to the left of open parenthesis or until input register becomes empty. Coincident partial tree cannot be obtained because of inappropriateness when open parenthesis does not exist in the data of input register INR. Process F4 surveys the emptiness of input register INR. When process F4 generates decision "yes", operation goes to process F10 output operation. When F4 generates decision "no", operation goes to process F5 to continue generation of coincident partial tree. Process F5 rests counter COT. Process F6 takes out 1 word from input register INR and introduces it to the right end of accommodated data in processing register CPR accompanying the operation of count up of counter COT when the word is open parenthesis or operation of count down of counter COT when the word is close parenthesis. Process F7 surveys the emptiness of input register INR. When process F7 generates decision "yes", operation goes to process F10 of output operation. When process F7 generates decision "no", operation goes to process F8 to continues circulate of the loop composed of process F6, F7 and F8. Process F8 surveys whether the count in counter COT is 0. When process F8 generates decision "yes" operation goes to process F9 to record the coincident partial tree because coincident tree is found. When process F8 generates decision "no", operation goes to process F6 to continue circulation of the loop composed of process F6, process F7 and process F8. Process F9 transfers the data in processing register CPR to output register OUTR after completion of coincident partial tree. The transfer is conducted by the procedure where the data in processing register is moved to left justification portion and introduced to the position next to the meaningful data in output register OUTR and then a blank is input to OUTR and finally processing register CPR is reset. Process F10 outputs generally plural trees accommodated in output register OUTR.

The operation of the partial tree cutting out PTC of Fig.197 is traced for the example in Fig. 192. In Fig. 192, perfectly coincident partial word sequence between the KATE output yk and the seq2seq system output ys is the word sequence made by human observation as the output of the perfectly coincident partial word sequence generation unit CCS. The partial tree cutting out PTC controls three registers: input register INR, processing register CPR, and output register OUTR. The trace of the operation of the PTC is made by tracing the changes to the word sequence in these three registers INR, CPR and OUTR during each operation of Fig.197 in inputting the word sequence as the output of the CCS.

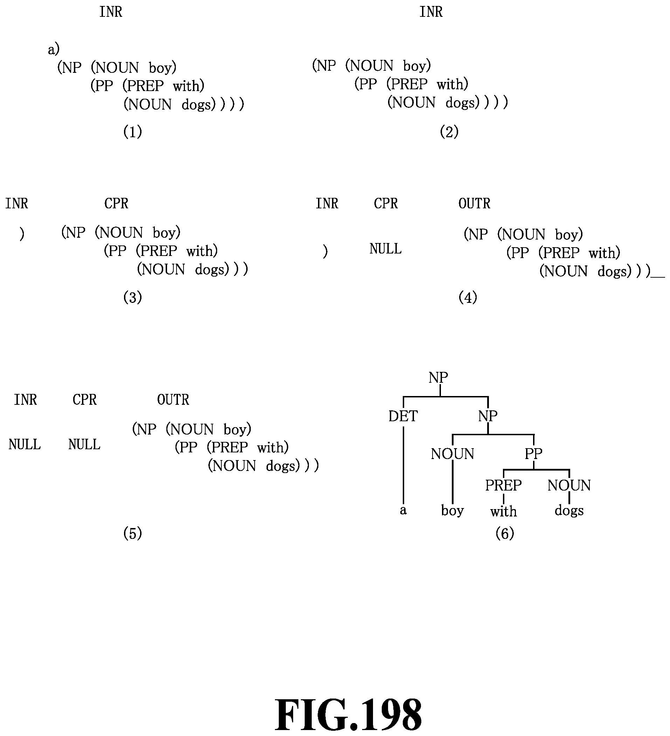

Figures in Fig. 198 shows transition of data in these registers in the course of operation. Process F1 in the flow chart of Fig.197 initiates the operation of "partial tree cutting out unit" PTC. Process F2 receives perfectly coincident partial word sequence and introduces to input register INR generating the data in Fig.198(1). Process F3 continuously moves to the left the sequence in input register INR and disposes of the sequence sequentially from the left until the sequence reaches the position directly to the left of open parenthesis resulting in the data in INR shown in Fig. 198(2). Process F4 existing next generates decision "no" because input register INR is not empty and operation goes to process F5. Process F5 resets counter COT to 0 and operation goes to process F6. Process F6 takes out 1 word from input register INR and introduces it to the right end of accommodated data in processing register CPR accompanying the operation of count up of counter COT when the word is open parenthesis or operation of count down of counter COT when the word is close parenthesis. As long as the process F7 or process F8 generate decision "no", the operation circulates the loop of process F6, F7 and F8 and continues to transferring words in input resister INR and processing register CPR. Finally, process F8 generates decision "yes" because vale in counter COT becomes 0. Fig.198(3) shows data in input register INR and processing register CPR at this occasion. Here, only one close parenthesis remains in input register INR. As seen in Fig.198(3), the data in processing CPR has same number of open and close parenthesis and this makes the counter value 0.

As the decision of process F8 is "yes", operation goes to process F9. Process F9 introduces the data in processing register CPR to the position next to the meaningful data in output register OUTR and then inputs a blank to OUTR. As output register OUTR has no data formerly, the data in OUTR becomes that indicated as "OUTR" in Fig.198(4), The under score at the last position indicates a blank. As seen in Fig.198(4), processing register CPR becomes empty after the operation of process F9.

Then, operation returns to process F3. After close parenthesis is discarded by leftward movement, operation at process F3 is terminated because of emptiness of input register INR. Fig.198(5) shows the data in input register INR, processing register CPR and output register OUTR at this instant. Process F4 existing next generates decision "yes" and operation goes to process F10. Process F10 outputs the partial coincident tree in Fig.198(5). The tree in Fig.198(6) is the word sequence in Fig.198(5) illustrated in the shape of tree configuration. This coincident partial tree obtained is shown as the output of "partial tree cutting out unit" PTS in Fig.192. The explanation of the operation of "generation part of perfectly coincident partial word sequence" CCS and "partial tree cutting out unit" PTS to obtain coincident partial tree mechanism of which is shown in Fig.192, is concluded.

[Differences between prior art and this patent application]

The relation between published technology other than seq2seq system and this patent application is treated here. First, the relation between Japanese Patent No. 4389332 "ANALYSIS RESULT SELECTION APPARATUS AT MACHINE TRANSLATION" referred as reference 1 and this patent application is explained.

The relation between "coincident word sequences detecting method" illustrated in Fig.18 and Fig.19 in reference 1 and "S.common word sequence detection unit" illustrated in Fig.39 of this patent application.

In reference 1, "detection method of example sentence having common word sequence with permission of inclusion of non-common word with input sentence" is shown in Fig.16. The algorithm of this figure is summarized in following 4 terms. 1.Concerning with each leaf node of example, plural numbers of candidate word are allowed and they are grouped in word bundle. To words in word bundle word numbers are given. When coincidence between one of

candidate words and the input word is successful, the coincident result is pushed in the coincident result stack and operation moves to coincidence detection of example word bundle and input word situated next to the right. When coincidence is not established, coincidence between next word in word bundle and input word is surveyed. 2.When coincidence between all words in the bundle and input word is not obtained, the pair of word bundle and input word existing to the left is popped from coincident result stack and reinvestigation is applied. At the reinvestigation investigation of the method of term 1 is applied starting at the word next to the formerly investigated word. 3.Operation of term 1 and term 2 begins when leftmost input word among input words which is coincident with one of words in the word bundle at the left end is detected and completed when coincidence between one of candidate words in the word bundle at the right end and input sentence word is detected. The coincident result accommodated in coincident result stack after the completion of operation of term 1 and term 2.is the common word sequence between example sentence and input sentence. When the coincidence between word bundle at the right end and input sentence is not established the coincident result stack becomes empty in the course of operation and coincident sequence is not obtained. 4.Aside from normal candidate word, symbols "*", "$" and "-" are included as candidate word. Naturally, coincidence is established when a word in word bundle is coincident with input word, Symbol "$" in word bundle can coincide with any input word. Symbol "*" enables the operation where input sentence is scanned without doing nothing until a word in word bundle next to the right is coincident with the input word at the scanning position and then operation of term 1 and term 2 is resumed. Symbol "-" enables coincidence success between currently processed bundle and input word regardless of the word in the bundle. Here, the coin dent pair including symbol "-" is pushed in to the coincident result stack as usual. The limitation that entire word bundles must be included in the coincident result is imposed in this symbol "-" case.

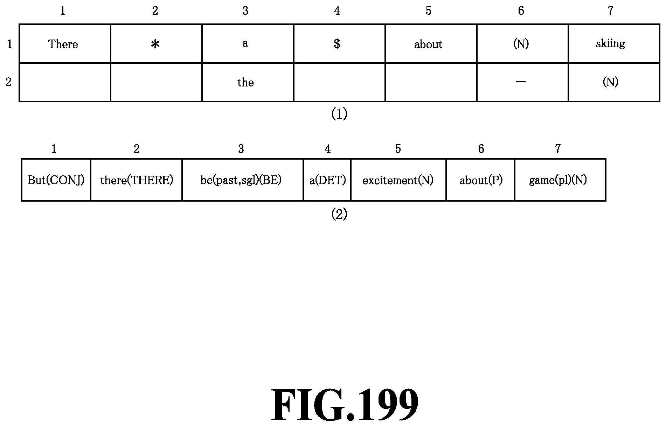

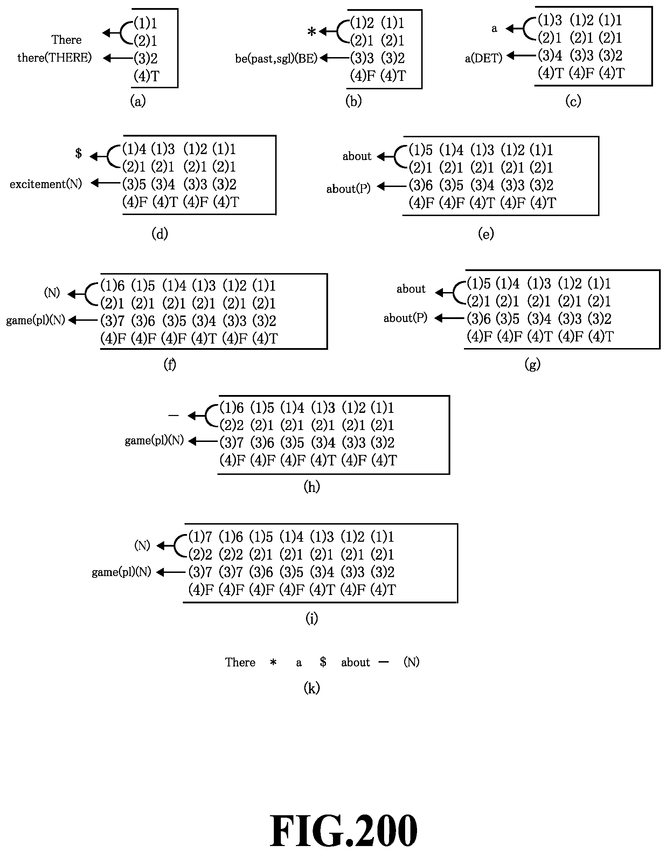

There is an operation example in reference 1. The trace of operation is shown hereafter. Figures in Fig.199 are reproduction of a portion of Fig.10 of reference 1 and Fig.199(1) and Fig.199(2) respectively correspond to portions of Fig.19(a) and Fig.19(b) in reference 1. Figures up to Fig.200(i) are the same as figures of the same branch number in Fig.18 of reference 1. Nevertheless, explanation is attached to the figures of Fig.200. Fig.200(k) is the figure added for explanation.

Hereafter, explanation of "detection method of example sentence having common word sequence with input sentence" in Fig.16 of reference 1 is made using figures in Fig.199 and Fig.200.

First, according to the description in first half of term 3 of detection method, words inc Fig.199(2) which consist input word sequence are scanned from the left end until word "There" at the first column of Fig.199(1) is found. As coincidence is found at 2nd column of Fig.199(2), coincident word is pushed into coincident result stack as shown in Fig.200(a). The portion of "(1)" denotes column position of word bundle and "(2)" denotes row position and the pair of "(1)" and "(2)" denotes, as denoted by an arrow, "There" in Fig.199(1). The portion of "(3)" denotes input word number in Fig.200. As indicated by an arrow portion of "(3)" alone denotes "there(There)" in Fig.200. The names in parentheses are names of part of speech.

In accordance with the description of term 1 and 2, the comparison between "*" in 2nd column and 1st row and "be(past sgl)(BE)" is conducted after progress of 1 position. Following the description of term 4, input sentence is scanned with no action until the word "a" which exists next to "*" appears. Passing of the word "be(past sgl)(BE)" is expressed in Fig.200(b). As next input word is "a(DET)", word coincidence happens and passing of input sentence is terminated and the coincident result in Fig.200(c) is obtained. The row of "(4)" in coincident result stack stores information of the effect of symbol "*". As the effect is not activated at the detection of "*", "F" of false is filled in at Fig.200(b). At Fig.200(c), the effect is activated and the value is "T" of truth appears but it turns to "F" by word coincidence of "a". As symbol "$" is the word to coincide with any word, the coincident result in Fig.200(d) is obtained. Fig.200(e) is figure of next position and is obtained at word coincidence of "about".

At the situation in Fig.200(f), backtrack happens, although part of speech coincidence is obtained, because input sentence comes to the end before example word bundle does not reach to the end. Here, the last coincident result in Fig.200(f) is discarded and coincident result becomes that in Fig.200(g) returning to the state shown in Fig.200(e). The 2nd row "-" is chosen from 6th column of example bundle instead of 1st row of failure and coincidence with 7th word of input sentence is surveyed. According to term 4, passing of 6th bundle keeping input word unchanged as shown in Fig.200(h). At the next situation is shown in Fig.200(i). Coincidence of part of speech "(N)" happens and finally coincident word sequence shown in Fig.200(k) is obtained.

Hitherto, detection method of common word sequence in Fig.16 of reference 1 is explained. This method can generate only a "common word sequence with allowance of inclusion of non-coincident word" from a pair of input sentence and example bundle. Allowance of non-coincident word is realized by symbols "$" and "*" in word bundle. There is limitation on the common sequence where left end of common sequence must be the leftmost input sentence word coinciding with left end example bundle and right end of common sequence must be words in right end example word bundle.

The detection method of common word sequence of Fig.16 of reference 1 corresponds to the cascade connection of "P.coincidence matrix generation unit", "N.adjoining coincident word detection element", and "S.common word sequence detection unit" of Fig.34. The method of this patent application is complicated but can more systematically obtain "common word sequence among input sentence and example sentence with allowance of inclusion of non-coincident words". The method of this patent application can obtain generally plural number of common sequences and can set minimum length of common sequence. On the other hand, the detection method of common sequence in Fig.16 of reference 1 has limitation that left end of common sequence must be the leftmost input sentence word coinciding with left end example bundle and right end of common sequence must be words in right end example word bundle.

In reference 1, the way to obtain temporal exclusive trees using common sequence is illustrated. The method in Fig.50, Fig.51 and Fig.52 of reference 1 conducts this task. This method is the method at which processing point moves upward in the example tree from each coincident word until the topmost node attaching attribute "%" to the nodes on the upward path and their brother nodes and nodes in the example tree not attached with the attribute "%" are erased later.

This method does similar operation to the operation at the combination of "T.composition unit of temporal exclusive tree " or "M composition unit of temporal exclusive tree with allowance of part of speech coincidence" shown in Fig.34 of this patent application. However, there exists the portion of "D.dominating node detection unit". To compose a temporal exclusive tree from an example tree, the detection of "the node dominating over entire coincident node" is necessary. The reason of the necessity is lies in the fact that only the part dominated by the dominating node in the example tree is necessary and nodes not belonging to the dominated part must be erased from example tree. There is no description about dominating node in reference 1. The example tree in Fig.50 and Fig.51 in reference 1 treats the case where coincidence of the dominating node and the topmost node happens by chance.

In reference 1, the operation of process B32 and processes before B32 in Fig.21 is concerned with the first half of upper covering where the OR tree in Fig.24 is upper covered by the exclusive tree also of Fig.24 resulting in the "covering set" in Fig.44. In reference 1, the "covering set" is the set of upper covered trees identical with "allelic exclusive group array" of this patent application. In short, the operation of process B32 and processes before B32 concerning with the first half of upper covering of reference 1 is nearly the same as the operation of "U.upper covering module" shown in Fig.81 of this patent application. Whereas process U21(end of processing of allelic exclusive trees) in "U.upper covering module" shown in Fig.81 of this patent application bundles the exclusive trees the topmost nodes of which cover the same OR tree node, the first half of upper covering part in Fig.21 of reference 1 has no portion of bundling. As a result, the output of first half of upper covering part in Fig.21 of reference 1 is set of exclusive trees with no bundling. As array of allelic exclusive tree group with bundling is necessary for systematic calculation in "G.parsed tree generation module", the configuration of which is shown in Fig.34 of this patent application. It can be said that the "covering set" of reference 1 is inadequate as the input to analysis part of this patent application.

In reference 1, the latter half of upper covering composed of process B34 and processes after process B34 corresponds to "" of the specification. The latter half of upper covering part receives "covering set" obtained at the first half and generate analysis tree of maximum tree value through the simple operation composed of sequential connection of the "covering set" from trees with lowest OR tree nodes. There is portion of "FOB(application part of forbidden tree)" but no explanation is given.

As a result, the latter half of upper covering composed of process B34 and processes after process B34 in Fig.21 cannot generate the "analysis tree of maximum tree value not including forbidden tree" which is generated by the method of this patent application.

The generation of "analysis tree of maximum tree value not including forbidden tree" is treated by Hiroshi SAKAKI, "Computer translation technique," The Institute of Electronics, Information and Communication Engineers, CORONA PUBLISHING CO., LTD, December 10, 1992, p.138-149 which is called reference 2. The difference between the method of reference 2 and this patent application is explained hereafter.

The "synthetic maximum tree value tree" of reference 2 is identical with "output parsed tree of input sentence" obtained by "W. **g e ne ra t ion** module of parsed tree not including forbidden tree" shown in Fig.1 or Fig.34 of this patent application.

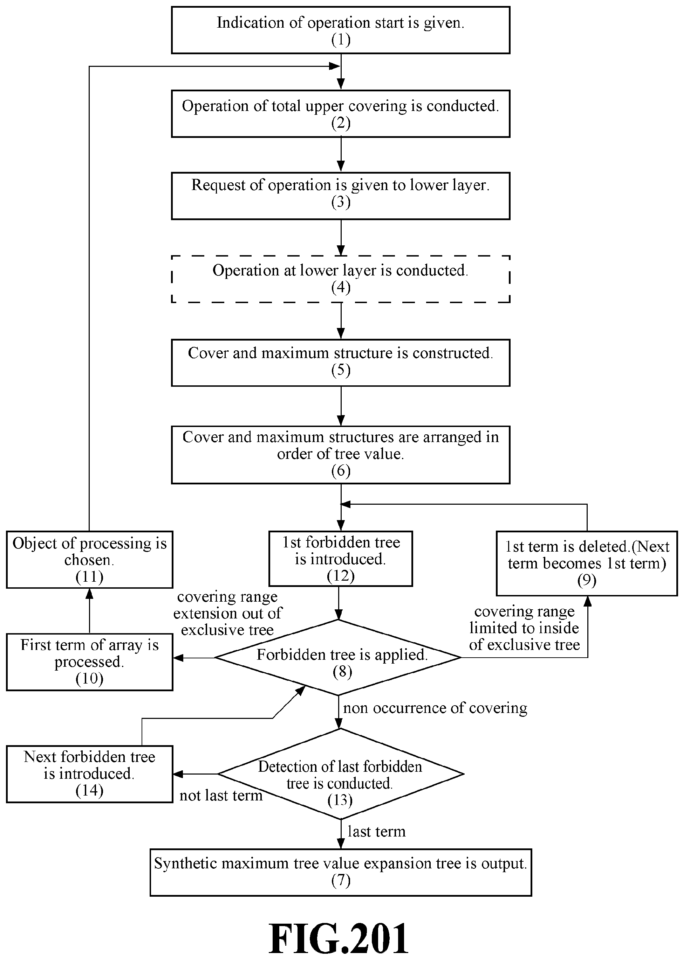

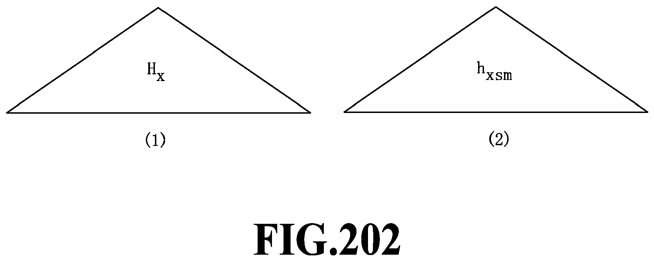

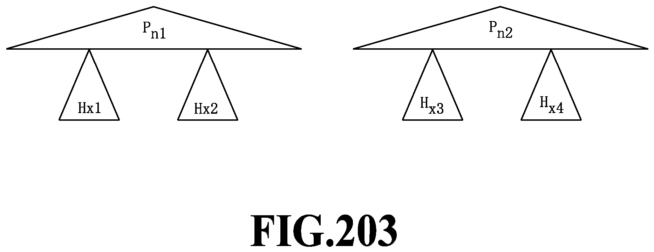

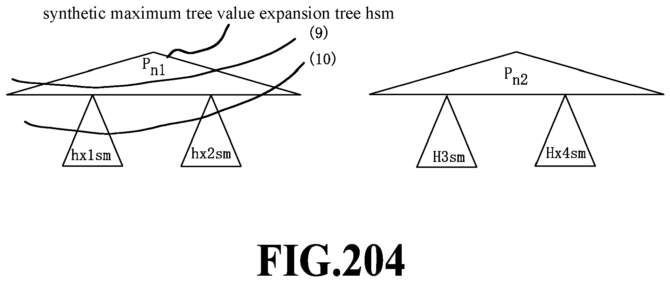

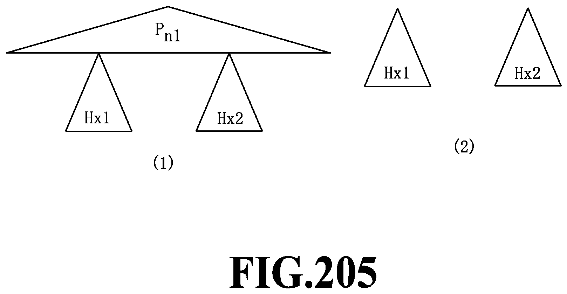

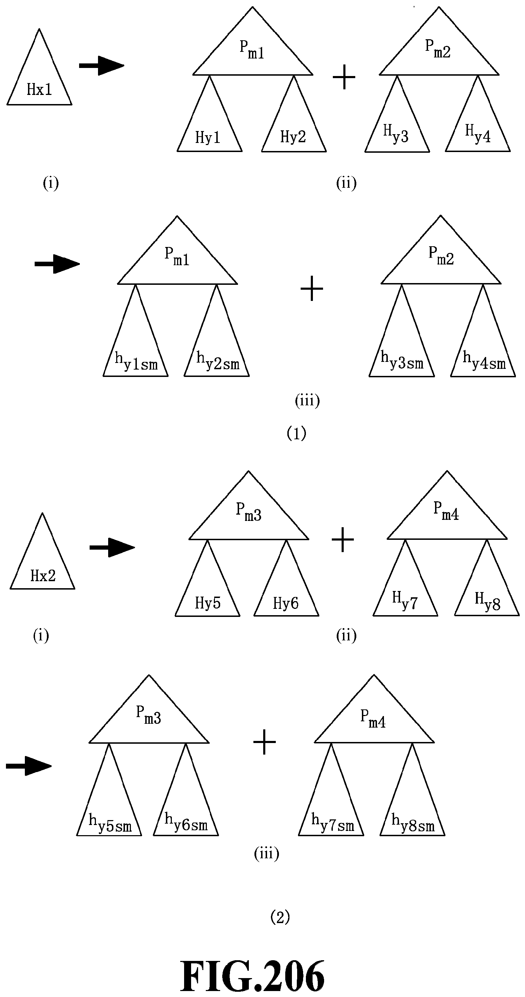

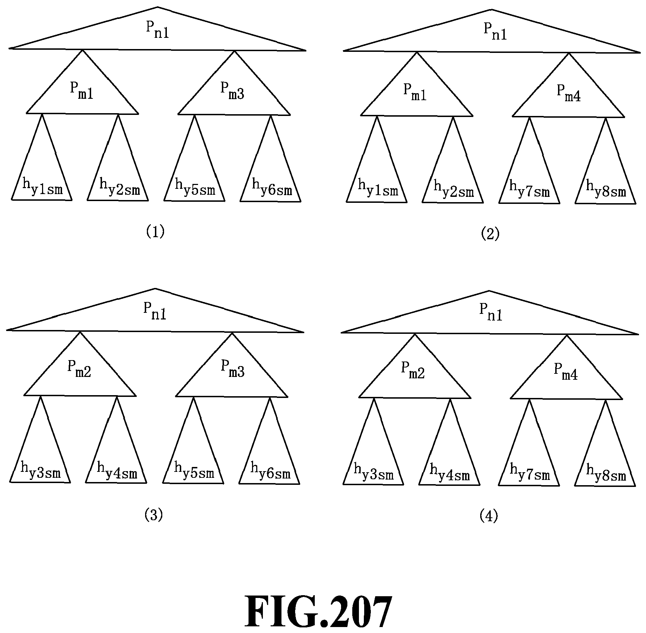

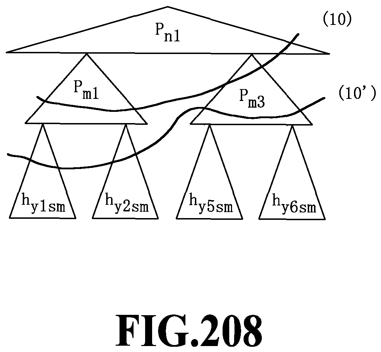

Reproduction relation between figures used in the explanation and figures in reference 2 is enumerated here. Fig.201 is reproduction of Fig.7.16 in reference 2, Fig.202(1) is reproduction of Fig.7.17, Fig.202(2) is reproduction of Fig.7.18, Fig.203 is reproduction of Fig.7.19, Fig204 is reproduction of 7.20, Fig.205(1) is reproduction of Fig.7.21, Fig.205(2) is reproduction of Fig.7.22, Fig.206(1) (ii) is reproduction of Fig.7.23, Fig.206(2) (ii) is reproduction of Fig.7.24, Fig.206(1) (iii) is reproduction of Fig.7.25 and Fig.7.26 and Fig.207 is reproduction of Fig.7.27. Fig.207 and Fig.208 are introduced for explanation here and not exist in reference 2.

The algorithm in Fig.201 treats "cover and maximum structure" which is the configuration of "an upper covered tree each connected leaf node of which is connected with lower tree of maximum tree value. The configuration treated by this patent application is "allelic exclusive tree group array" and treated configuration of this patent application differs from that of reference 2.

The algorithm in Fig.201 is illustrated hereafter using the example in reference 2. The aim of this algorithm is to obtain "synthetic expansion tree of maximum tree value hxsm" shown in Fig.202(2) which is actually tree not including forbidden tree and having maximum tree value from OR tree Hx shown in Fig.202(1). Namely, the algorithm in Fig.201 receives OR tree Hx at process (1) "Indication of operation start is given." and outputs hxsm at process (7) "synthetic maximum tree value expansion tree is output."

The algorithm in Fig.201 begins its operation at process (1) "Indication of operation start is given." receiving OR tree in Fig.202(1). Upper covering is conducted by process (3) "Operation of total upper covering is conducted." and 2 upper covering results shown in Fig.203 is obtained. The "upper covering situation" to the left between 2 situations in Fig.203 is generated by upper covering with exclusive tree P1 and "coverage substructure" is composed of 2 OR trees Hx1 and Hx2. The other to the right is generated by upper covering with P2 and its "coverage substructure" is composed of 2 OR trees Hx3 and Hx4.

Process (3) "Request of operation is given to lower layer." requires 4 lower algorithms of the same configuration as that in ig.201 to obtain "expansion tree of maximum tree value" hx1sm from OR tree Hx1, hx2sm from Hx2, hx3sm from Hx3 and hx3sm from Hx4. This requirement is possible because algorithm in Fig.201 has the ability to generate "synthetic expansion tree of maximum tree value hxsm."

By this requirement "synthetic expansion tree of maximum tree value hx1sm" hx1sm, hx2sm, hx3sm and hx4sm are generated at Process (4) "Operation at lower layer is conducted."

Process (5) "Cover and maximum structure is constructed." situated next replaces each OR tree which is "coverage substructure" of "upper covering situation" with "synthetic expansion tree of maximum tree value hxsm" obtained at process (4) "Operation at lower layer is conducted." By this operation, "cover and maximum structure" to the left at Fig.204 is obtained from "upper covering situation" to the left at Fig.203 and "cover and maximum structure" to the right at Fig.204 is obtained from "upper covering situation" to the right at Fig.203 . Process (6) "Cover and maximum structures are arranged in order of tree value." arranges "cover and maximum structure" obtained at process (5) "Cover and maximum structure is constructed." in descending order of tree value. The tree value of each "cover and maximum structure" is total sum of pattern value of upper covering exclusive tree and sum of tree values of "synthetic expansion tree of maximum tree value" or hxsm's connected at leaf nodes. It is assumed here that the tree value of "cover and maximum structure" to the left in Fig.204 is lager than the tree value of "cover and maximum structure" to the right. In this case, the output of process (6) "Cover and maximum structures are arranged in order of tree value." is not different from arrangement in Fig.204.

This algorithm surveys covering or inclusion of forbidden tree at the leftmost one in array of "cover and maximum structure". This corresponds "first exclusive tree type" rather than "entire exclusive tree type" of the specification. By process (12) "1st forbidden tree is introduced." first forbidden tree is introduced and forbidden tree inclusion is surveyed at process (8) "Forbidden tree is applied."

The survey object of forbidden tree inclusion is the "cover and maximum structure" to the left in Fig.204. When covering range of forbidden tree is limited to the range of line (9) in the structure to the left in Fig.204, process (8) "Forbidden tree is applied." generate decision of "covering range limited to inside of exclusive tree" and operation goes to process (9) "1st term is deleted.(Next term becomes 1st term)" to erase the structure to the left in Fig.204 and operation returns to process (8) "Forbidden tree is applied." via process (12) "1st forbidden tree is introduced." and process begins to survey on the structure to the right in Fig.204.

When process (8) generates decision of "non occurrence of covering" on the structure to the left in Fig.204, operation goes to process (13) "Detection of last forbidden tree is conducted." When process (13) generates decision "not last term" operation goes to process (14) "Next forbidden tree is introduced." to introduce next forbidden tree in the forbidden tree pool and then goes to process (8) "Forbidden tree is applied." and survey process for next forbidden tree on the same "cover and maximum structure" begins. When process (13) generates decision "last term", operation goes to process (7) "Synthetic maximum tree value expansion tree is output." to output the first term of current "cover and maximum structure" array because forbidden tree inclusion survey is completed. The output result is "synthetic expansion tree of maximum tree value" hxsm obtained from the input of OR tree Hx shown in Fig.202. The "synthetic expansion tree of maximum tree value" hxsm is one of expansion trees obtained by expanding all OR nodes in OR tree Hx which has maximum tree value among expansion trees not including all forbidden trees.

When covering range of forbidden tree is limited to the range of line (10) in the structure to the left in Fig.204, process (8) "Forbidden tree is applied." generates "covering range extension out of exclusive tree" and operation goes to process (10) "First term of array is processed." Process (10) erases the structure to the left in Fig.204 from "cover and maximum structure" array.

Process (11) "Object of processing is chosen." situated next uses the information on "cover and maximum structure" to the left in Fig.204 before its erasure and separate the structure into upper covering part P1 and "synthetic expansion tree of maximum tree value" hx1sm, hx2sm. In addition to this operation, process (11) reproduces OR tree Hx1 from hx1sm and OR tree Hx2 from hx2sm. This operation is possible because each "synthetic expansion tree of maximum tree value" has OR tree information from which it is generated at its topmost node.

Fig.205(1) is reproduction of upper covering by exclusive tree P1 shown in Fig.203 by replacing each "synthetic expansion tree of maximum tree value" with OR tree from which the expansion tree is produced. Besides, Fig.205(2) is OR trees Hx1 and Hx2 indicated as processing objects at process (11) "Object of processing is chosen."

Operation returns to process (2) "Operation of total upper covering is conducted." and upper covering of Hx1 and Hx2 begins. Operation of process (2) and later operation is shown in Fig.206. Fig.206(1) shows operation on OR tree Hx1. In this figure, arrows show progress of operation. OR tree Hx1 indicated by (i) is upper covered by exclusive tree Pm1 and OR trees Hy1 and Hy2 are generated as coverage substructures. Hx1 is also upper covered by exclusive tree Pm2 and OR trees Hy3 and Hy4 are generated as coverage substructures. These upper covered results are indicated by (ii).

Similarly, Fig.206(2) shows operation on OR tree Hx2 and the arrows show the operation progress. OR tree Hx2ndicated by (i) is upper covered by exclusive tree Pm3 and OR trees Hy5 and Hy6 are generated as coverage substructures Hx2 is also upper covered by exclusive tree Pm4 and OR trees Hy6 and Hy7 are generated as coverage substructures. These upper covered results are indicated by (ii).

The succeeding process (3) "Request of operation is given to lower layer" requires lower "block diagram for generation of synthetic maximum tree value expansion tree" having the same configuration as that of Fig.201 and being independent to each other, to operate on newly generated OR trees Hy1, Hy2, Hy3, Hy4, Hy5, Hy6, Hy7 and Hy8.

The operation to follow is process (4) "Operation at lower layer is conducted." As shown in Fig.202, "block diagram for generation of synthetic maximum tree value expansion tree" has the ability of generate a "synthetic expansion tree of maximum tree value" from an OR tree. Process (4) composed of independent block diagrams of Fig.201 generates "synthetic expansion tree of maximum tree value" hy1sm, hy2sm, hy3sm, hy4sm, hy5sm, hy6sm, hy7sm and hy8sm which are lower part of upper coverage and are indicated by (iii) from respective OR trees Hy1, Hy2, Hy3, Hy4, Hy5, Hy6, Hy7 and Hy8 which are coverage understructure of "cover and maximum structure", For the simplicity of explanation, the illustration on process (4) treats configurations accompanying upper covering portions.

Next process (5) "Cover and maximum structure is constructed." connects lower "synthetic expansion tree of maximum tree value" to each upper covering portion and complete "cover and maximum structure" also indicated by (iii) in Fig.205(1) and (2) respectively. This process is made possible by the information of existing position of coverage substructure stored in portions indicated by (ii) in Fig.206(1) and (2) respectively.

In succession, process (5) "Cover and maximum structure is constructed." connects "cover and maximum structure" obtained at Fig.206(1)(iii) to connecting point of OR tree Hx1 which is covering substructure of upper covering by exclusive tree Pn1 shown in Fig.205. Similarly, process (5) connects "cover and maximum structure" obtained at Fig.206(2)(iii) to connecting point of OR tree Hx2 which is also covering substructure of upper covering by exclusive tree Pn1. These operations make "cover and maximum structure" having 2 layers at upper portions. As partial trees in Fig.206(1)(iii) and Fig.206(2)(iii) have 2 "cover and maximum structure" respectively, the number of "cover and maximum structure" with 2 layers of exclusive trees becomes 4. These are shown in Fig.207. It is assumed that tree values diminish in the order of Fig.207(1), (3), (3), (4).

In this case, the leftmost "cover and maximum structure" of Fig.207(1)having maximum tree value is "cover and maximum structure" to the left in Fig.204 and already erased. The line (10) shows estimated inclusion situation by forbidden tree. Unlike the case of Fig.204, inclusion is limited to the region of higher exclusive tree. As observed in the case of line (10'), further circulation of operation loop in Fig.201 is necessary at the case where the range of forbidden tree inclusion exceeds the range of coverage by exclusive trees of 2 layers.

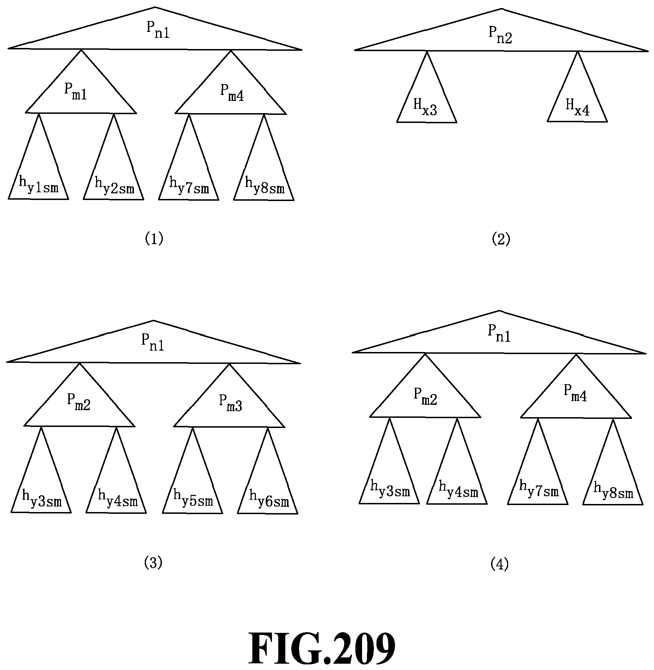

Fig.209 shows a possible example of "cover and maximum structure" array made by process (6) "Cover and maximum structures are arranged in order of tree value." The arrangement of "" to the left in Fig.204 is changed into that of Fig.207(2), (3), (4) and the "" to the right in Fig.204 is positioned among those in Fig.207(2) and Fig.207(3).

Inclusion of the first forbidden tree introduced by process (12) "1st forbidden tree is introduced." in "cover and maximum structure" of Fig.207(2) or the leftmost "cover and maximum structure" in Fig.209 is to be conducted hereafter. The operation at process (8) "Forbidden tree is applied." and succeeding processes is repetition of operations explanation hitherto. Thus the "block diagram for generation of synthetic maximum tree value expansion tree" in Fig.201 generates "synthetic expansion tree of maximum tree value" hxsm which is tree of highest tree value among expansion trees not including all forbidden trees, from OR tree Hx shown in Fig.202(1).

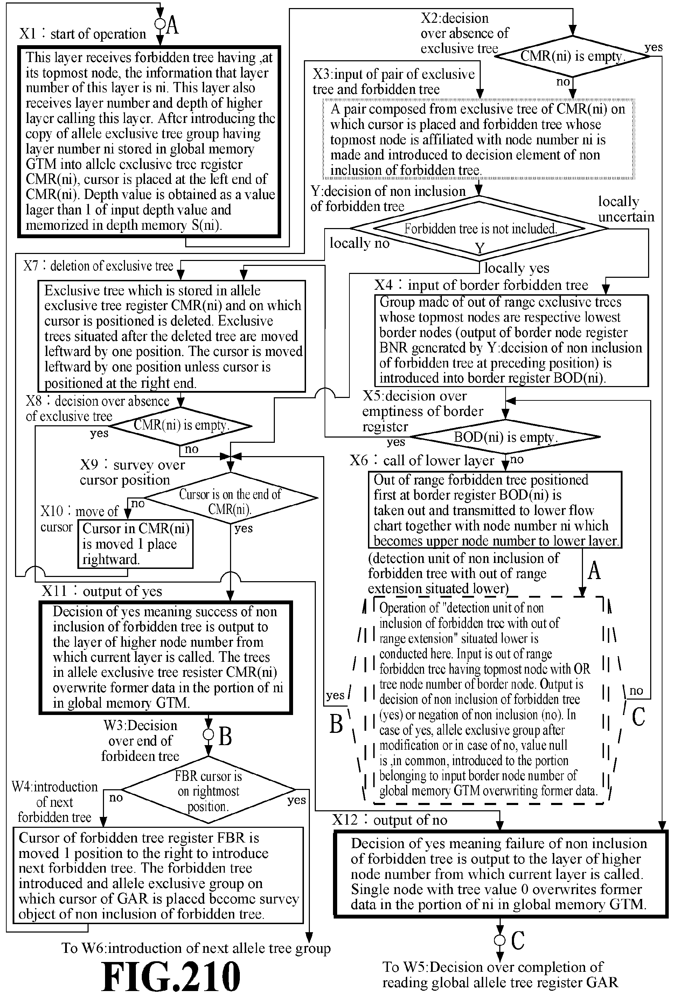

The explanation of difference between generation method of synthetic expansion tree of maximum tree value of reference 2 shown in Fig.201 and the system of this patent application is explained hereafter. First the system of this patent application is illustrated briefly. Fig.210 is the flow chart for generation of maximum tree value tree not including forbidden tree of this patent application. This block diagram is mad by addition of process W3(decision over end of forbidden tree) and process W4(introduction of next forbidden tree) to the algorithm of "X.unit for detecting non-inclusion of extra-regional forbidden tree in exclusive tree" shown in Fig.153. Processes W3 and W4 originally belong to "W.generation module of parsed tree not including forbidden tree" shown in Fig.172 including "X.unit for detecting non-inclusion of extra-regional forbidden tree in exclusive tree". The expression of to W6 and to W5 shows transition to process W6(introduction of next allelic tree group) and W5(decision over completion of reading GAR) in Fig. 172 respectively.

At the flow chart in Fig.210, the process XS(decision of methodology) existing in Fig.153 of the selection from "first exclusive tree type" and "entire exclusive tree type" is abbreviated because explanation is done only for "entire exclusive tree type."

Explanation of operation of algorithm in Fig. 210 is made using example formerly used taking the shape of summary of the explanation made for the operation of the flow chart in Fig. 153.

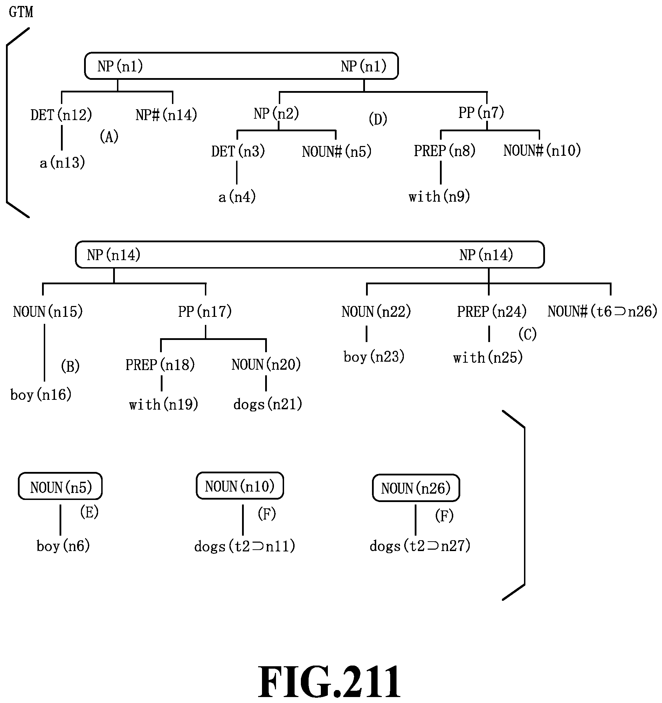

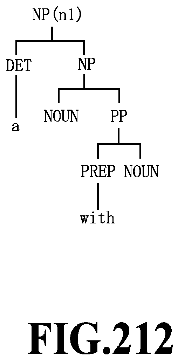

Fig.211 shows allelic exclusive tree group array accommodated in global memory GTM in generation of maximum tree value tree not including forbidden tree of Fig.210 and reproduction of the figure in Fig. 154. Here, the survey is conducted for the inclusion of the forbidden tree in Fig.212. Fig.212 is reproduction of Fig.155.

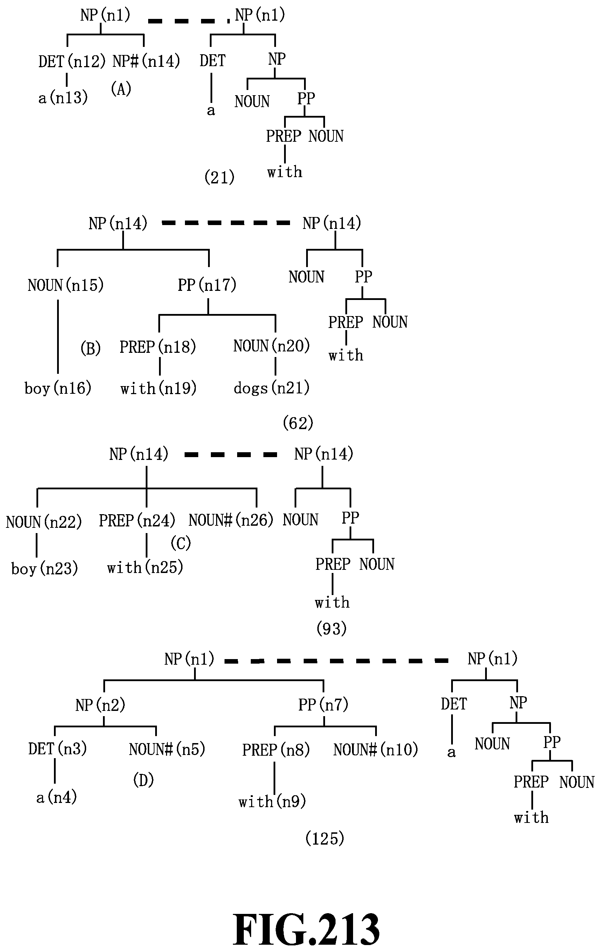

Operation of algorithm in Fig.210 begins process X1(start of operation). Figures in Fig.213 are extracted from figures in Fig.156 to Fig. 158. Fig.213(1), (2), (3) and (4) are reproductions of Fig.156(2), Fig. 156(6), Fig. 157(9) and Fig.158(12). Going through process X2(decision over absence of exclusive tree) pair of exclusive tree and forbidden tree in Fig.213(1) is introduced process Y(decision of non inclusion of forbidden tree). The decision is "locally uncertain" and operation goes to process X4(input of border forbidden tree). Here, partial forbidden tree of topmost node covering n14 is introduced to border register BOD(n1).

The inclusion survey of partial forbidden tree in Fig.213(1) on allelic tree group of node n14 is conducted using of the same configuration as "unit of detection of non-inclusion of extras-regional forbidden tree" in Fig.210. Fig.213(2) shows the exclusive-forbidden tree pair at process X3 after going though process X1 and X2. This pair is introduced to process Y. As the decision is "locally no", the leftmost exclusive tree of the group of node n14 is erased at process X7(deletion of exclusive tree). Operation returns to process X3 going through processes X8(decision over absence of exclusive tree), X9(survey over cursor position) and X10(move of cursor).

By process X3, the pair of 2nd exclusive tree in group of node n14 and forbidden tree shown in Fig.213(3) is input to process Y. The decision is "locally yes" and operation goes through process X9 and X11(output of yes) and point B which is "yes" output of lower unit and goes upward to upper layer and goes through process X9 and X10 and finally reaches to process X3 of upper layer.

Since survey on first exclusive tree in allelic exclusive tree group of node n1 is over, process X3 makes exclusive-forbidden pair of Fig.213(4). This pair is introduced to process "Y. The decision of process". Y is "locally yes", operation goes through process X9, process X10 and reaches process X11 which terminates inclusion survey at "unit of detection of non-inclusion of extras-regional forbidden tree" in Fig.210.

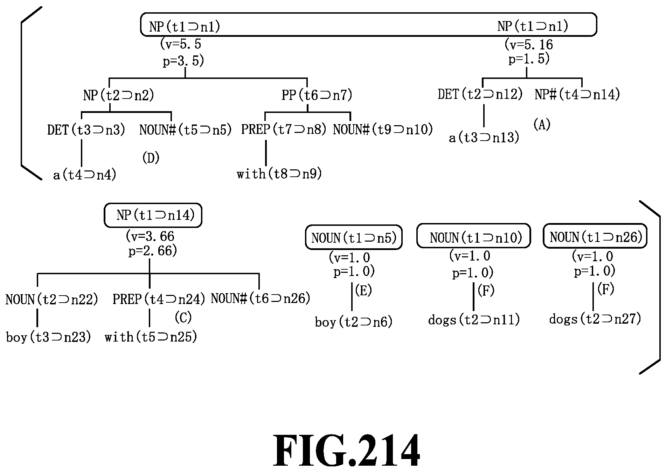

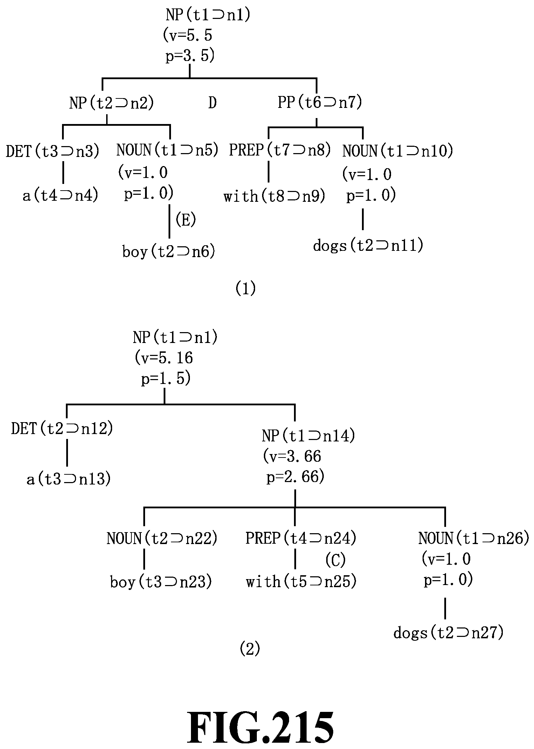

By the operation "unit of detection of non-inclusion of extras-regional forbidden tree" in Fig.210, the output in Fig.214 is obtained from the input in Fig.211. Here, the first exclusive tree is erased form allelic exclusive tree group of node n14. The allelic exclusive tree group array in Fig.214 generates 2 analysis trees in Fig.215 among which the tree in Fig.215(1) of largest tree value becomes analysis tree. It must be noticed that the system in Fig.210 does not directly generates the analysis tree and the analysis tree is obtained as the output of "C.maximum value tree construction unit" which is the last operation of this patent application.

Reference 4 is concerned with seq2seq sentence analysis system, which generates S expression from natural language sentence utilizing seq2seq word sequence transformation. As seen in reference 3, seq2seq transformation is usually used to directly obtain target language word sequence from source language word sequence, in other word, to construct machine translation system. When the number of training samples is the same, the accuracy of transformation from natural language sentence to it's syntactic analysis result in S expression shown in reference 4 is expected far higher than that of transformation between 2 languages shown in reference 3 because the former is confined to single language. Moreover, the accuracy of the former is made higher by the collaboration with KATE system as illustrated in Fig.194 of this patent application. Never-the -less, transformation from natural language sentence to its syntactic analysis result in S expression shown in reference 4 requires vast human handling. This human handling may be reduced to some extent by the method shown in Fig.194.

KATE translation system has the part called KPP which transforms source language analysis tree into target language analysis tree. This part is illustrated at page 182-228 in the same book as reference 2 ( [Non Patent Literature 1] Hiroshi SAKAKI, "Computer translation technique," The Institute of Electronics, Information and Communication Engineers, CORONA PUBLISHING CO., LTD, December 10, 1992, p.182-228). It must be noticed that reference 4 does refer to the utilization method of the S expression generated by its operation.

Hereafter, explanation is made on "seq2seq translation system of noun phrase separation type" generating high precision object language sentence which is realized by combined use of high precision syntactic analysis result in S expression and ordinary machine translation utilizing seq2seq word sequence transformation. The high precision syntactic analysis result in S expression is obtainable by the method of reference 4 or collaboration of the method of reference 4 with KATE method as shown in Fig.194 of this patent application.

The translation of this system is conducted through 3 steps, the first of which is extraction by separation of noun phrases from input source language sentence through the use of S expression of syntactic analysis result and the second of which is application of ordinary machine translation of seq2seq word sequence transformation to separated noun phrases and the remnant of input sentence where noun phrases are replaced by nouns representing traces of lost noun phrases and the third of which is merging translation results by replacing above traces in the remnant by translated noun phrases. This system will bring about high precision transformation by the effect of search space division. Noun phrase (NP) exist sting at every language is the main cause of complication of sentence and processing noun phrase separately is powerful method to increase precision of translation.

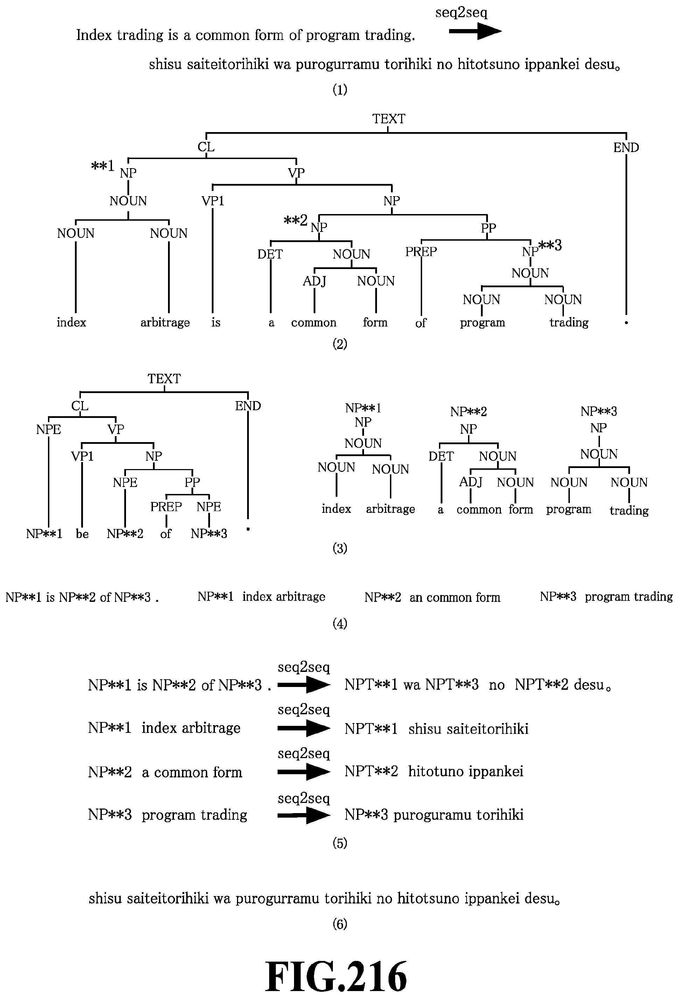

Here, explanation on "seq2seq translation system of noun phrase separation type" proposed here is made using Fig.216 treating an example. Fig.216(1) shows ordinary seq2seq machine translation system where an English sentence "Index trading is a common form of program trading." is translated into Japanese sentence "shisu saiteitorihiki wa purogramu torihikino hitotsuno ippankei desu."

Fig.216(2) is the syntactic analysis result of the input English sentence. In this figure, the analysis result is expressed in tree configuration for the convenience of explanation but this has the same information as S expression. Three noun phrases having NP nodes with annotations **1, **2 and **3 at their topmost positions are extracted by separation from the main tree configuration. The extracted result is shown in Fig.216(3). The respective traces of separated noun phrases are expressed by noun nodes NP**1, NP**2 and NP**3 having part of speech nodes "NPE" above them.

Then, linearization is applied to these trees in Fig.216(3) resulting in the expression of Fig.216(4). As linearization process reduces the information, no decision is required at the process. At the heads of respective linearized noun phrases, captions NP**1, NP**2 and NP**3 showing their origin are placed. Next, language transformation using seq2seq word sequence transformation as shown in Fig.216(5) is applied to these linearized noun phrases and linearized remnant main sentence. At each sentence in Fig.216(5), portion to the left of an arrow is source language English sentence and to the right is target language Japanese sentence. At noun phrase sentences to the left of arrows, respective captions NP**1, NP**2 and NP**3 to show their origins are attached at their heads. At translated noun phrase sentences to the right of arrows, captions are respectively changed to NPT**1, NPT**2 and NPT**3 to reflect language translation. At the translated result of remnant main sentence positioned above noun sentences in Fig.216(5), the traces of translated noun phrases are respectively expressed by NPT**1, NPT**2 and NPT**3.

By replacing the portions NPT**1, NPT**2 and NPT**3 in the remnant main sentence undergone translation at the uppermost position and to the right of the arrow in Fig.216(5) with translated noun phrases having respective captions, the object language Japanese sentence in Fig.216(6) is obtained finally. This translated result is the same as the translated result in Fig.216(1) obtained by just one time application of language transformation by seq2seq word sequence transformation to the whole input sentence, which may lead to the conclusion that the processes in Fig.216 is unnecessary. Never-the-less, these processes are effective for the sentences having long and complicated noun phrases. In the case of Fig.216(2), the noun phrase with the topmost node directly upper of the NP node with annotation **2 is not selected as object of separation. This exclusion is due to the ineligibility of the noun phrase by the reason that the word number dominated by the node is 6 which meets the ineligibility condition that dominated node number is equal to or more than 60% of total node number which is 10 in this case.

Among processes in Fig.216, the process to be added newly to conventional methods is limited to the detection process of noun phrase for separation. Hereafter, explanation is made on "seq2seq translation system of noun phrase separation type" including the noun phrase detection.

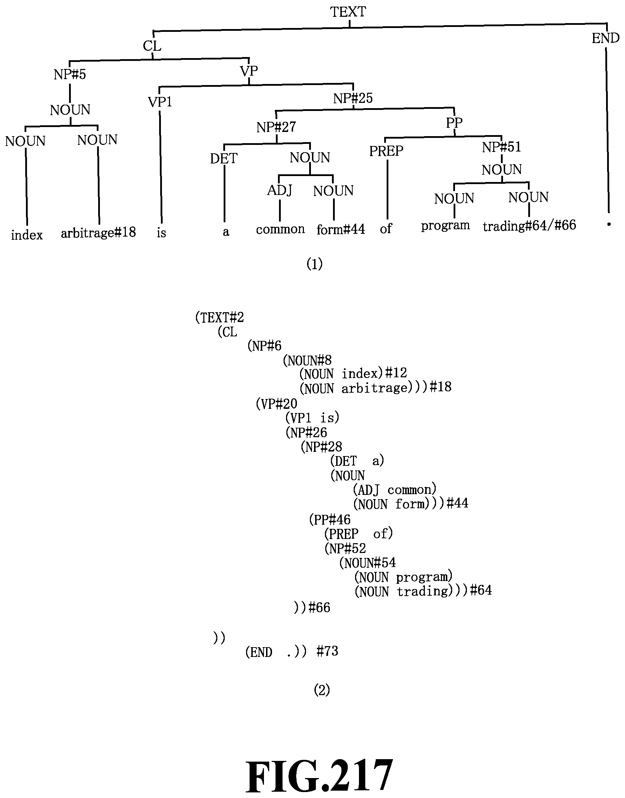

Fig.217 (1) is the same tree as that in Fig.216(2) and is the analysis tree of the source language English sentence to the left of the arrow in Fig.216(1). Fig.217(2) is S expression expressing the same information as the analysis tree. Actually S expression is a word sequence without indention but S expression in Fig.217(2) is drawn in pretty-print style for the convenience of visibility. For the sake of explanation on figures in Fig.217, the word numbers counted from the first word in the S expression in the style of digits preceded by the symbol "#" are appended to nodes in tree in Fig.217(1) and also to the words in S expression in Fig.217(2). The nodes and words in Fig.217 are mentioned by "#" appended digits. Both of open parenthesis "(" and close parenthesis ")" are counted as single words. Namely, the S expression is word sequence in which element words are separated by spaces with one another.

The procedure to select noun phrases having topmost nodes #5, #27 and #51 as object of separation and not to select the noun phrase with topmost node #25 because this phrase has 6 leaf words which amounts to 60% of entire sentence word number of 10 is necessary. The selection method is stated later.

Hereafter, the operation procedure to realize "seq2seq translation system of noun phrase separation type" the outline of which was explained is illustrated. The operation of "selection of noun phrase for separation" to select noun phrases to be separated from the source language analysis result expressed in S expression accounts for a large portion of operation of "seq2seq translation system of noun phrase separation type."

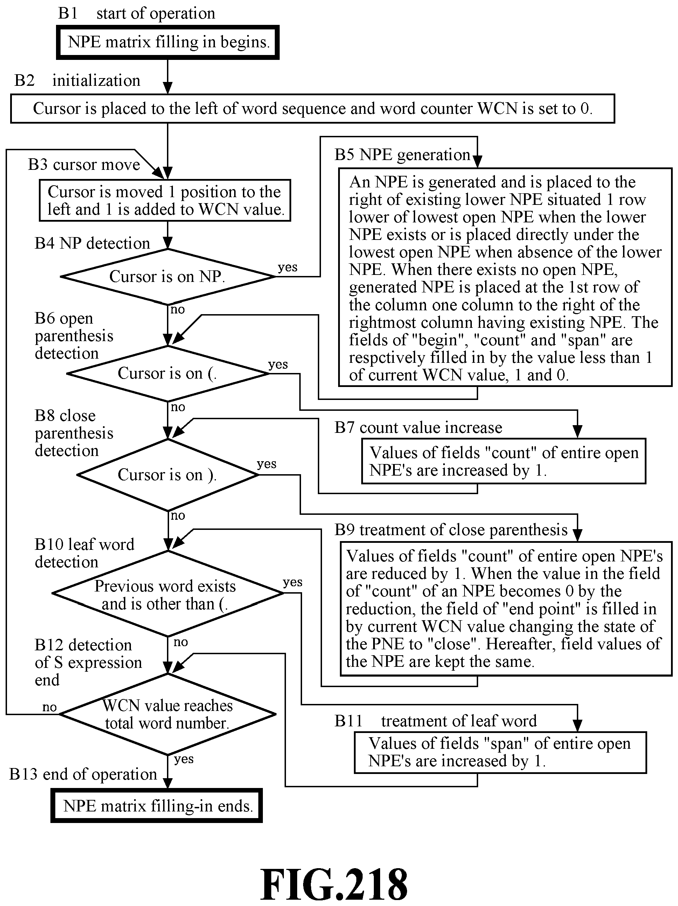

Fig.218 is the flow chart of "selection of noun phrase for separation" to select noun phrases to be separated from the source language analysis result. This flow chart conducts the operation by moving a cursor for reading on the word sequence of S expression. This flow chart has 13 processes with names B1 to B13.

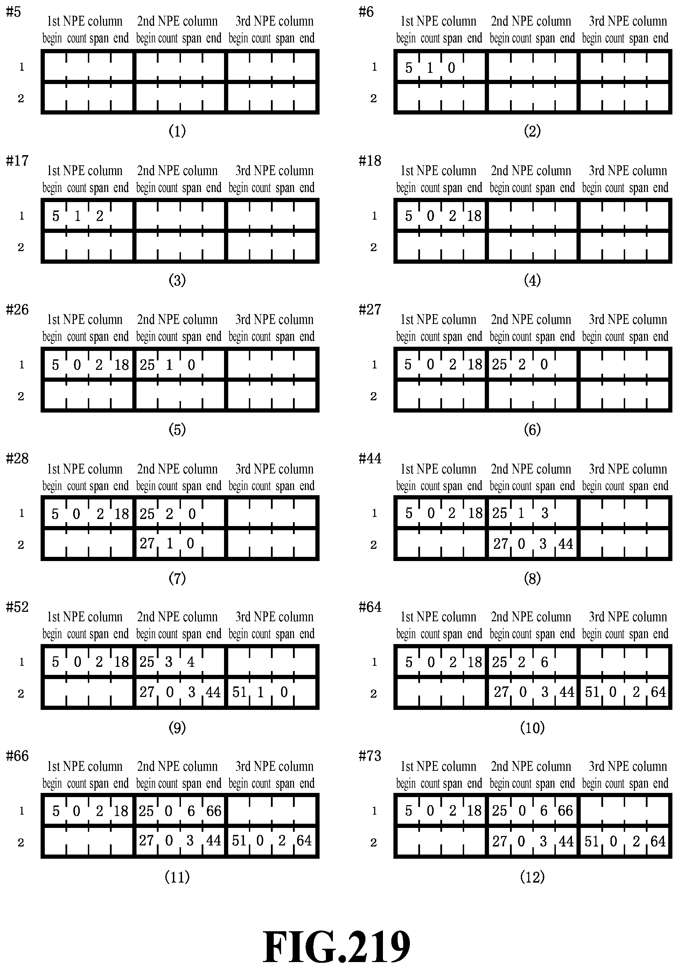

This flow chart operates using word counter WCN and NP matrix NPM. The word counter WCN accommodates the word number counted from the first word of S expression on which the reading cursor exists. The NP matrix has the configuration shown in Fig.219(1) on each element position of which the flow chart of "selection of noun phrase for separation" places "NP element" NPE. Moreover the flow chart fills in a value to each column of each NP element NPE. NP matrix NPM can be constituted by matrix expression provided by any computer languages.

Explanation on the configuration of NP matrix NPM is made here using Fig.219(1). Columns of NP matrix NPM are delimited in unit of 4 columns and a unit made of 4 columns accomodates an NP element NPE. Accordingly "NPE column" number each position of which is composed of 4 columns expresses the horizontal position of an NP element NPE. An NP element NPE represents an NP node or a noun phrase having the NP node at its topmost node.

To the field of "begin" which exist at the 1st place in each NP element NPE in Fig.219(1), the beginning position in S expression of the noun phrase expressed by the NPE. This position is position of open parenthesis 1 word to the left of node NP. In analysis tree of Fig.217(1), the word number of beginning position of the noun phrase in S expression is attached to each node NP consisting the topmost node of the noun phrase. As mentioned before, this position is 1 word to the left of word NP.

To the field of "count" which exist at the 2nd place in NP element NPE, the difference between number of open parentheses and number of close parentheses both existing in the range between beginning position of the noun phrase and cursor position is accommodated. The value in the field "count" is also called "parentheses count value" to discriminate from "word count value" accommodated in word counter WCN. The cursor position of 0 parentheses count value is the end position of the noun phrase and, accordingly, this position is filled in the field of "end" existing in 4th place. In Fig.217(1), "end" position is attached to each rightmost leaf node belonging to each noun phrase. To the node "trading", two "end" positions #64 and #66 are attached. The former is "end" position of the noun pharase having beginning position #51 and the latter is that of beginning position #25.

To the field of "span" which exists at the 3rd place in NP element NPE, the number of leaf nodes of the noun phrase is filled in. Leaf nodes exist at leaf(bottom) positions of analysis tree of noun phrase and have the characteristics that leaf words are not directly preceded by open parenthesis "(" in S expression. The number of words having this characterinstics existing in the range between beginning position of the noun phrase and cursor position is filled in the field "span". Hereafter, words existing at leaf positions are called "leaf word" and all words including "leaf word" in S expression are called simply "word". Entire constituting elements in S expression including open parentheses "(" and close parentheses ")" are called "word". As mentioned before, words in S expression are mutually separated by spaces. Spaces preceding leaf words in S expression of Fig.217(2) are to emphasize the separation and the spaces around parentheses are abbreviated in Fig.217(2).

Here, explanation is made for open state and close state of NP element NPE. At a certain position during the movement of the cursor on S expression, NP element NPE of open state is generated. When the cursor reaches to the position where "parentheses value" in field "count" becomes 0 after further movement, the NPE falls in the state of close in which field values of the NPE are kept constant during further movement of the cursor. The position generating 0 "count" value is filled in the field of "end."

Hereafter, explanation on the processes in the flow chart of "selection of noun phrase for separation" in Fig.218 is made.

The name of process B1 is "start of operation". The faculty of this process is described as: This process begins the operation of placing NP elements NPE's in NP matrix NPM.

The name of process B2 is "initialization". The faculty of this process is described as: "This process initializes position of the cursor moving on S expression and word counter WCN. Namely, the cursor is placed 1 word to the left of word sequence composing S expression and resets word count value accommodated in word counter WCN to 0."

The name of process B3 is "cursor move". The faculty of this process is described as: "This process moves the cursor 1 word to the right and increases the value of word counter WCN by 1.

The name of process B4 is "NP detection". The faculty of this process is described as: "This process detects the situation where the cursor is on the word NP that is the topmost node of an noun phrase. When decision is "yes", operation goes to process B5 to generate an NP element NPE. When decision is "no", operation goes to process B6 of open parenthesis detection."

The name of process B5 is "NPE generation". The faculty of this process is described as: "This process generates an NPE and places to the right of existing lower NPE situated 1 row lower of lowest open NPE when the lower NPE exists or places directly under the lowest open NPE when absence of the lower NPE. When there exists no open NPE, this process places generated NPE at the 1st row of the column one column to the right of the rightmost column having existing NPE. This process fills in fields of "begin point", "count" and "span" respectively with the value less than 1 of current WCN value, 1 and 0."

The name of process B6 is "open parenthesis detection". The faculty of this process is described as: "This process detects the situation where the cursor is on open parenthesis "(". When decision is "yes", operation goes to process B7 to increase "parentheses count value" in the field "count" by 1. When decision is "no", operation goes to process B8 to detect close parenthesis."

The name of process B7 is "count value increase". The faculty of this process is described as: "This process increases values of field "count" of entire open NPE's by 1."

The name of process B8 is "close parenthesis detection". The faculty of this process is described as: "This process detects the situation where the cursor is on close parenthesis ")" When decision is "yes", operation goes to process B9 to conduct processing necessitated at the detection of close parenthesis. When decision is "no", operation goes to process B10 to detect leaf word."

The name of process B9 is "treatment of close parenthesis". The faculty of this process is described as: "This process reduces values of fields "count" of entire open NPE' by 1. When the value in the field of "count" of an NPE becomes 0 by the reduction, this process fills in the field of "end" by current WCN value changing the state of the PNE to "close".

Hereafter, field values of the NPE are kept the same."

The name of process B10 is "leaf word detection". The faculty of this process is described as: "This process detects the situation where the word one position to the left of present cursor position is other than open parenthesis "(". As the word to the left of leaf word is word of part of speech as seen in Fig.217(2), this process detects this situation. To realize this operation, the information of the word preceding the word on which cursor exists is necesiated and double cursor or single word buffer memory will be necessary. To avoid complication of explanation, however, further explanation is abbreviated. When decision is "yes", operation goes to process B11 to increases values of field "span" by 1. When decision is "no", operation goes to process B12 to survey whether the cursor is on the last word of the S expression."

The name of process B11 is "treatment of leaf word". The faculty of this process is described as: "This process increases values of field "span" of entire open NPE's by 1."

The name of process B12 is "Detection of S expression end". The faculty of this process is described as: "This process detects the situation where the value in word counter WCN reaches the total word number. When decision is "yes", operation goes to process B13 to terminate filling-in operation of the NP matrix NPM. When decision is "no", operation returns to process B3 to receive next word because detection of "NP", "(", ")" and leaf word is completed."

The name of process B13 is "end of operation". The faculty of this process is described as: "This process terminates operation of "selection of noun phrase for separation" because the word on which cursor exists is the last word of S expression confirming that filling-in on the NP matrix NPM is over."

Hereafter, the trace of filling-in operation on NP matrix NPM conducted by "selection of noun phrase for separation" in Fig.218 receiving the input of S expression in Fig.217(2) is made. This filling-in operation is accomplished by single scanning of the cursor, from 1st word to 73rd word, on S expression of Fig.217(2). The word number is expressed by "word number preceded by symbol #". For example, word #5 is ")" and word "#" is "NP". Figures in Fig.219 represent the "filling-in state" of NP matrix NPM at respective cursor positions. The cursor position concerning with a "filling-in state" of NP matrix NPM is placed upper left of the NP matrix NPM. The trace of operation of "selection of noun phrase for separation" is made by tracing the change of "filling-in state" of NP matrix NPM.

Processes B4, B6, B8, B10 in Fig.218 are detection processes of respectively "word NP", "open parenthesis (", "close parenthesis)" and leaf word and are mutually reorderable. Namely, they are the portions of multiple selection. Processes B4, B6, B8, B10 detects respectively "word NP", "open parenthesis (", "close parenthesis )" and leaf word at the word of newly reached cursor position after the operation of process B3(cursor move). As the processes B7, B9 and B11 conduct operation only when NP element NPE of open state exists, these processes do nothing at the detection of "word NP", "open parenthesis (", "close parenthesis)" and leaf word when NPE of open state is absent. However, process B4 (NP detection) generates a new NP element NPE irrespective of the existence of already-existing NPE. Hereafter, operation trace of "selection of noun phrase for separation" in Fig.218 at the input of S expression in Fig.217 (2) is made by the enumeration of the sequence of events up to the "NPM filling-in state" of NP matrix after the title of cursor position enclosed by square parentheses "[ ]."

[#5]The process leading to the "NPM filling-in state" in Fig.219(1) at cursor position #5 is illustrated. The operation of "selection of noun phrase for separation" for the input S expression in Fig.217(2) begins by process B1(start of operation). Then process B2(initialization) sets the cursor on the position one word to the left of first word of S expression and resets word counter WCN to 0. Next, process B3(cursor move) places the cursor on word #1 which is "(" by moving the cursor 1 position to the right and adds 1 to WCN value changing WCN value to 1. Though process B6(open parenthesis detection) among sequential processes B4 to B12 detects an open parenthesis, process B7(count value increase) does nothing because NP element NPE in open state does not exist and operation returns to process B3(cursor move) shifting the cursor on word "TEXT" situated 1 position to the right. As coincidence detection of this word "TEXT" with words "NP" , open parenthesis "(", close parenthesis ")" and leaf word b y processes B4 to B12 does not generate any coincidence, operation returns to process B3 shifting the cursor on word "(" situated 1 position to the right. Here also, operation goes through processes B7 and B8 with no action and operation returns to process B3 shifting the cursor on word "CL" situated 1 position to the right. Coincidence with words "NP", open parenthesis "(", close parenthesis ")" and leaf word is not detected and operation returns to process B3 and the cursor moves to open parenthesis "(". As before, no action of processes B4 to B12 is conducted and operation returns to process B3. Here the cursor is on word #5 and present "NPM filling-in state" is that in Fig.219(1). Namely, no NP element NPE is placed in the NP matrix NPM.

[#6]Process B3 shifts the cursor on word "NP" which is word #6 situated 1 position to the right. Now, process B4(NP detection) among sequential processes B4 to B12 detects coincidence with the word on which cursor exists generating decision "yes" and operation goes to process B5(NPE generation). Process B5 generates the "NPM filling-in state" in Fig.219(2) of word position #6 in accordance with the instruction "An NPE is generated and is placed at the 1st row of the column one column to the right of the rightmost column having existing NPE when no open NPE exists. The fields of "begin", "count" and "span" are respectively filled in by the value less than 1 of current WCN value, 1 and 0."

[#17]The events occurring during rightward move of the cursor from position #6 to position #17 making "NPM filling-in state" in Fig.219(3) are shown. This range of this noun phrase begins at position #5 recorded in field "begin". The value in field "count" is the difference between number of open parentheses and number of close parentheses. This value is 1 at beginning position #5 and becomes 2 by addition of 1 at cursor position #7 and increases to 3 at cursor position #9 and decreases to 2 at position #12 and increase to 3 at position #13 and decreases by 2 in total at positions #16 and #17 and becomes value 1 at cursor position #17. The change of value in field "count" is brought about by increase operation by processes B6 and B7 and decrease operation by processes B8 and B9. The value in the field "span" is 0 at beginning position #5 and increase to 1 at position #11 by the existence of leaf word "index" and increase to 2 at position #15 by the existence of leaf node "arbitrage". As a result, "NPM filling-in state" in Fig.219(3) at position #17 is obtained.

[#18]The "NPM filling-in state" at cursor position #18 shown in Fig.219(4) is explained here. The cursor moves to position #18 of close parenthesis ")" by the operation of process B3. This word is detected by process B8(close parenthesis detection) and process B8 generates decision "yes" and operation goes to process B9(treatment of close parenthesis). First, process B9 reduces the "count" value in NP matrix NPM in state "open" by 1. As "count" value becomes 0, process B9 fills in field of "end" accommodating end position of the noun phrase with 18 which is present value in word counter WCN and changes the state of this noun phrase to "close" in accordance with the description in Fig.218. Hereafter, values in fields of this NP matrix NPM are kept unchanged. Fig.219(4) is "NPM filling-in state" at cursor position #18. The field of "end" is filled in 18, which is end position #18 of this noun phrase.

[#26] Events at rightward move of the cursor from position #19 to position #26 making "NPM filling-in state" in Fig.219(5) are shown. There are open parentheses "(" at positions #19, #21 and #25 at which positions process B6 detects them but process B7 does no action and there a close parenthesis ")" at position #24 at which position process B8 detects it but process B9 does no action, because of absence of NPM of open state. As a result, cursor moves to position #26 without change in NPM. As word of position #26 is "NP", process B4(NP detection) generates decision "yes" and operation goes to process B5(NPE generation) generating a new NP element NPE. In accordance with the instruction "When there exists no open NPE, generated NPE is placed at the 1st row of the column one column to the right of the rightmost column having existing NPE." of process B4, the new NPE is placed at 1st row and 2nd NPE column. Also in accordance with the instruction "The fields of "begin", "count" and "span" are respectively filled in by the value less than 1 of current WCN value, 1 and 0. ", fields of "begin", "count" and "span" of new NPM are filled in by the values 25, 1 and 0. Fig.219 (5) is "NPM filling-in state" at cursor position #26.

[#27]When cursor moves to #27, an open parenthesis "(" is detected. The field "count" of open NPE increases by 1 and becomes 2. Fig.219(6) is "NPM filling-in state" at cursor position #27. In accordance with the instruction."

[#28]"NPM filling-in state" at cursor position #28 is explained here. When cursor moves from position #27 to position #28 through the operation of process B3, word "NP" becomes the word on which cursor exists. This event is detected by process B4(NP detection) generating decision "yes" and the operation goes to process B5(NPE generation). In accordance with the instruction "An NPE is generated and is placed directly under the lowest open NPE when absence of the lower NPE." of process B5, new NPM is placed directly under the open state NPE of beginning position #25. Field of "begin"of new NPM is filled in by the value 27 that is less than 1 of present cursor position. Fields "count" and "span" is filled in by values 1 and 0. Fig.219(7) is "NPM filling-in state" at cursor position #28.

[#44]Events during rightward move of the cursor from position #29 to position #44 making "NPM filling-in state" in Fig.219(8) are shown. The values in the fields "span" of both of NPE's of beginning positions #25 and #27 are 0 at their beginning positions. Through the operation of processes B10(leaf word detection) and B11(treatment of leaf word) in Fig.218, this values increase to 1 at position #31 by the existence of leaf word "a" and increase to 2 at position #37 by the existence of leaf node "common" and increase to 3 at position #41 by the existence of leaf node "form". As a result, values in field "span" of both NPE are 3 at the position #44. In the course of cursor from position #29 to position #44, there are 4 open parentheses "(" at positions #29, #33, #35 and #39 on which detection is conducted by process B6(open parenthesis detection) and about which value in field "count" is increased by 4 in total by process B7(count value increase). In the course of cursor from position #29 to position #44 on the other hand, there are 5 close parentheses ")" at positions #32, #38, #42, #43 and #44 on which detection is conducted by process B8(close parenthesis detection) and about which value in field "count" is decreased by 5 in total by process B9(treatment of close parenthesis). As a result, values in fields of "count" of both NPE at position #44 is smaller by 1 than that at position #28. At position #44, the value of field "count" is 1 at the NPE of beginning position #25 requiring no action, whereas "count" value becomes 0 at the NPE of beginning position #27. Here, further operation of B9 in accordance with instruction "When the value in the field of "count" of an NPE becomes 0 by the reduction, the field of "end point" is filled in by current WCN value changing the state of the PNE to "close"." is necessary. After these procedure, the "NPM filling-in state" at cursor position #44 becomes that in Fig.219(8).

[#52]Events during rightward move of the cursor from position #45 to position #52 making "NPM filling-in state" in Fig.219(9) are shown. As there are 3 open parentheses "(" at positions #45, #47 and #51 whereas there is a close parenthesis ")" at position #50, the value in the field "count" of sole open NPE of beginning point #25 becomes 4 after increase of 2 by cursor movement on this section. As there is a leaf word "of" at position #49 that increases the value in field "span" by 1, the value in field "span" becomes 4. The word at position #52 is "NP." Now, process B4(NP detection) in Fig.218 detects word "NP" and generates decision "yes" and operation goes to process B5(NPE generation). Process B5 generates a NPE and places it at 2nd row and 3rd NPE column in accordance with the instruction "An NPE is generated and is placed to the right of existing lower NPE situated 1 row lower of lowest open NPE when the lower NPE exists". At new NPE, 51 which is less by 1 than present word counter value is filled in to the field "begin" and 1 is filled in to the field "count" and 0 is filled in to the field "span" in accordance with the instruction "The fields of "begin", "count" and "span" are respectively filled in by the value less than 1 of current WCN value, 1 and 0. " of process B5. Finally the "NPM filling-in state" in Fig.219(9) is obtained.

[#64]In move process of cursor from position #53 to position #64, there are 3 open parentheses "(" at positions #53, #55 and #59 resulting in increase of "count" value by 3. In the same move process, there are 4 close parentheses ")" at positions #58, #62, #63 and #64 resulting in decrease "count" value by 4 in total. As a result, values in fields of "count" of both open state NPE at position #64 is smaller by 1 than that at position #53. At position #64, the value of field "count" is 2 at the NPE of beginning position #25 requiring no action, whereas "count" value becomes 0 at the NPE of beginning position #51. Here, further operation of B9 in accordance with instruction "When the value in the field of count of an NPE becomes 0 by the reduction, the field of "end point" is filled in by current WCN value changing the state of the PNE to close." is necessary. After these procedures, the "NPM filling-in state" at cursor position #64 becomes that in Fig.219 (10).

[#66]The word of position #65 is close parenthesis ")" reducing "count" value of sole open NPE with beginning point #25 to 1. The word of position #66 is also close parenthesis ")" reducing "count" value of the NPE to 0. Here, further operation of B9 in accordance with instruction "When the value in the field of count of an NPE becomes 0 by the reduction, the fileld of "end point" is filled in by current WCN value changing the state of the PNE to close." is necessary. After these procedure, the "NPM filling-in state" at cursor position #66 becomes that in Fig.219(11).

[#73] Thence cursor moves to the right and reachs position #73. At position #73, process B12(detection of S expression end) which so far generates decision "no" finally decides that the cursor reaches position #73 given as the end position of S expression and generates decision "yes" and operation goes to process 13(end of operation) and terminates the operation of "flow chart of selection of noun phrase for separation". The output of the filling-in operation is "NPM filling-in state" in Fig.219(12).

The "NPM filling-in state" in Fig.219(12) shows that 4 noun phrases exist in phrase structural analysis result of input source language sentence. The noun phrase of beginning position #25 contains noun phrases of beginning positions #27 and #51. The algorithm in Fig.218 has ability to arrange contained noun pharases under lower row of containing noun phrase.

Selection of noun phrases to be separated from main analysis result is conducted here. For this purpose, total number of leaf nodes is necessary. This number is obtainable through detection of leaf nodes using the same process as process B10(leaf word detection) of "selection of noun phrase for separation" in Fig.218 and counting total number. The criterion of selection here is that "noun phrase selected for separation has more than 1 leaf node and has span less than 60% of total leaf node number and the sum of span of separated noun phrases is less than 80% of total leaf word number". Limit of 60% is introduced by the fact that single noun phrase having large span compared with total leaf node number does not bring about effective search space division. Limit of 80% is introduced to conserve original sentence configuration in remnant main sentence after removal of noun phrases.

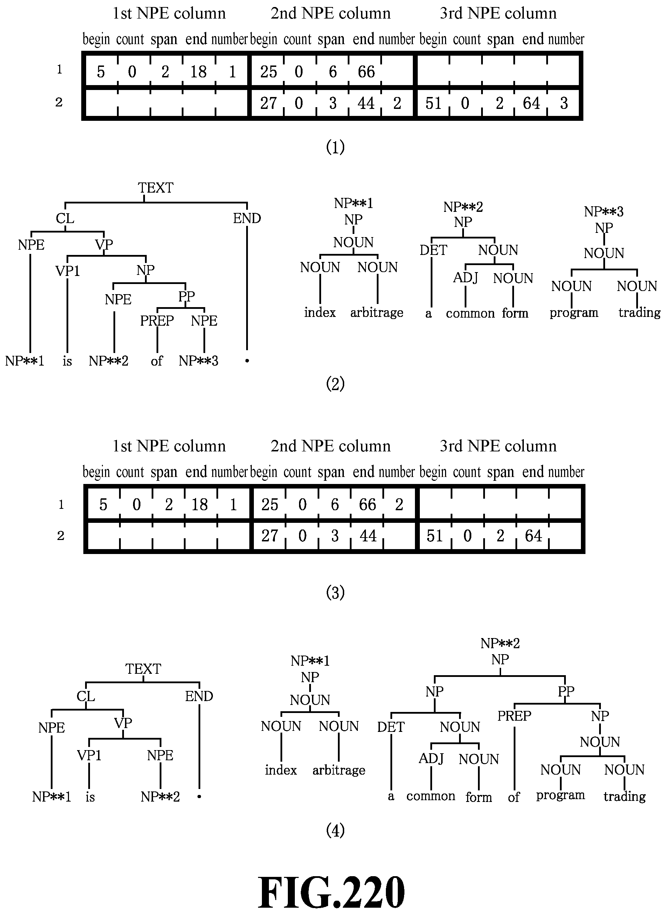

Matrix in Fig.220(1) is made by adding column of "number" to each NP element NPE in NP matrix and is called augmented NPM. Matrix in Fig.220(1) is augmented NPM of "NPM filling-in state" in Fig.219(12). To column of "number" of NPE selected as noun phrase to be separated, number as separated PNE or separated noun phrase is filled in the column of "number". In the case of Fig.220(1), noun phrases with beginning positions #5, #27, #51 are selected as noun phrases to be separated but that of beginning position #25 is not selected. This is due to the situation that span of noun phrase of #25 is 6 or 60% of number 10 of entire words including period ".". In the case of Fig.220(1), sum of spans of all separated noun phrases is 7, which is less than 80% of restriction.

Fig.220(2) shows trees of remnant main sentence and separated noun phrases. These trees are the same as those in Fig.216(3). In the tree of remnant main sentence, traces of separated noun phrases are expressed as nouns NP**1, NP**2 and NP**3 under part of speech nodes "NPE". Namely, traces of noun phrases are expressed by nouns. The numbers proceeded by sequence "**" are numbers of corresponding NPE's in Fig.220 (1).

Fig.220(3) shows augmented NPM when noun phrase of #25 is selected as noun phrase to be separated instead of noun phrases of #27 and #51. When NPE at upper row is selected as noun phrase to be separated, NPE situated lower is not selected. Fig.220(4) shows trees of remnant main sentence and separated noun phrases of this case. Noun phrase of #25 is not suitable for noun phrase to be separated because it has 60% of leaf words of whole sentence.

It is concluded that position on S expression of each noun phrase is obtained by "flow chart of selection of noun phrase for separation" as "NPM filling-in state" from which augmented NP matrix conducting selection of noun phrase to be separated as those in Fig.220(1) is obtained. Though selection is made by human observation is done here, these selection criterion is easily formularized.

After completion of selection of noun phrase to be separated as in Fig.220 (1), succeeding operation is to generate remnant main sentence and separated noun phrases of the type of Fig.220(2) or Fig.216(3) on S expression.

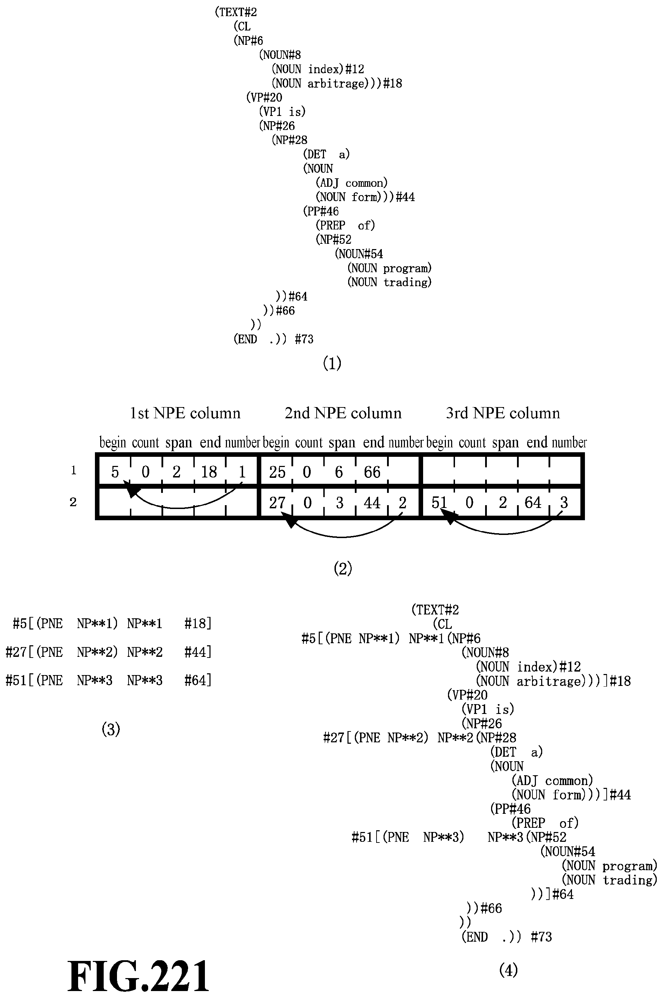

Fig.221(1) is the same figure as Fig.217(2) and is S expression corresponding phrase structural analysis tree of input sentence at which node numbers from the start of S expression are attached at necessary positions. Fig.221(2) is augmented NP matrix where each noun phrase has its beginning position and end position and the same figure as Fig.220(1) excepting that each NPE in Fig.221(2) has an arrow extending from field of "number" to field of "begin". This arrow expresses that information of NPE number is added to the beginning point of noun phrase. Namely, the arrow shows that noun phrase number is added to the letter sequence inserted at beginning point of noun phrase. Fig.221(3) shows letter sequences to be inserted at beginning position and end position of noun phrases. For example, the sequence "#5 [(PNE NP**1) NP**1" at 1st line in Fig.221(3) indicates that the sequence "[(PNE NP**1) NP**1" is inserted to the beginning position #5 of 1st noun phrase to be separated. This sequence begins with open rectagle parenthesis "[". The sequence "NP**1" includes the information of noun phrase number of 1 conveyed from field of "number" to field of "begin" by the arrow. The sequence "#18]" at 1st line in Fig.221 (3) indicates that close rectangular parenthesis "]" is inserted to the position 1 word to the right of the end position #18 of 1st noun phrase to be separated. Rectangular parentheses "[ ]" have different function from regular parentheses and they indicate scope of noun phrase extraction operation. The 2nd and 3rd lines of Fig.221(3) represent 2nd and 3rd noun phrase in augmented NPM of Fig.221(2).

By inserting letter sequences in Fig.221(2) to input sentence analysis result in S expression, S expression in Fig.221(4) is obtained. This insertion is possible by the insertion method where first insertion position is the one nearest to the S expression end and then insertion position moves sequentially rightward to the start position of S expression and where no change of position number happens at the instant of each insertion. Namely, the word position number preceded by "#" in Fig.221(4) is word position number in Fig.221(1) and is not actual word position number in Fig.221(4) and, nevertheless, word position number at the instant of each insertion.

After determination of scopes of noun phrase extraction operation that are limited by rectangular parentheses "[ ]" as shown in Fig.221(4), noun phrase extraction operation is conducted only in these scopes. First, the word sequences beginning at the position directly after the portion enclosed by ordinary parentheses "( )" and ending at the position directly before the close rectangular parenthesis "]" are extracted as separated word sequences at all scopes of noun phrase extraction. The leftmost figure of Fig.222(1) is remnant main analysis result expressed in S expression and the other 3 figures are noun phrases respectively annotated by numbers NP**1, NP**2 and NP**3. The leftmost figure in Fig.222(2) is obtained by removing rectangular parentheses "[ ]" from the leftmost figure in Fig.222(1). The other figures in Fig.222(2) are obtained from 3 figures of noun phrases in Fig.222(1) by separating top portions respectively NP**1, NP**2 and NP**3 and by treating them as titles of respective S expression. Titles are placed upper portion of noun phrases.

Then, linearization operation is applied to remnant main analyses result in S expression and 3 noun phrases with titles expressed in S expression in Fig.222(2). Linearization operation is extraction operation of extracting leaf words sequence. Linearization operation is the same operation as that of process B10 (leaf word detection) in "flow chart of selection of noun phrase for separation" in Fig.218 and is the process of detecting words preceded by words other than open parenthesis "(" in S expression and arranging them in the order of positions in S expression. Figures in Fig.222(3) are results of linearization of the S expression in Fig.222(2) where the leftmost word sequence is linearization result of remnant main analysis result and the other 3 word sequence are linearization result of noun phrases respectively attached with titles of NP**1, NP**2 and NP**3 at their head positions.

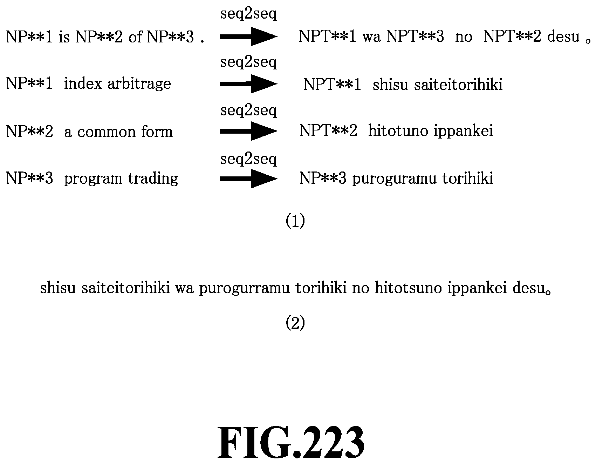

Then, language transfer or translation by ordinary seq2seq word sequence transformation is applied to these linearized results as illustrated at Fig.223(1). Here seq2seq word sequence transformation is not applied to titles of linearized noun phrases. To results of seq2seq word sequence transformation of linearized noun phrases, new titles are attached to reflect the seq2seq transformation where new titles NPT**1, NPT**2 and NPT**3 are made by inserting letter "T" to former titles. At seq2seq transformation of linearization result of remnant main analysis result, traces of noun phrases are treated as nouns. The seq2seq transformation results of trace names NP**1, NP**2 and NP**3 in source language word sequence are restively made by inserting letter "T" into NPT**1, NPT**2 and NPT**3 in target language word sequence to show the effect of transformation.

At seq2seq transformation result of remnant main word sequence, transformation results of traces of separated noun phrases NPT**1, NPT**2 and NPT**3 are respectively replaced by transformed noun phrases with the same titles. The replace result is shown in Fig.223(2). This is object language Japanese sentence obtained through noun phrase separation of source language English sentence to the right of the arrow in Fig.216(1). The above is the explanation of "seq2seq translation system of noun phrase separation type".

The difference between the system of reference 2 and this patent application is illustrated hereafter.

Here, difference of processing object is treated. The system of reference 2 firstly upper covers input OR tree with exclusive trees as shown in Fig.203 and secondly obtains "synthetic expansion tree of maximum tree value" from OR trees of coverage substructure using algorithm of "unit of detection of non-inclusion of extras-regional forbidden tree" of the shape of Fig.201 and thirdly arranges these "synthetic expansion tree of maximum tree value" in descending order of tree value making processing object at later operation.

On the other hand, the system of this patent application firstly makes allelic exclusive tree groups each of which represents a particular OR tree node and secondly arranges exclusive trees in each group in descending order of tree value using "K.maximum value tree generation unit" making processing object at later operation.

Here, difference between 2 systems of operation of covering by forbidden tree to processing object thus made.

At the system of reference 2, upper covering by forbidden tree of leftmost "cover and maximum structure" is conducted and the survey on the forbidden tree is considered to be over doing nothing in the case of non-coverage and the leftmost structure is erased in the case of occurrence of coverage.

At the system of reference 2, complicated processing on the leftmost structure is necessary in the case when forbidden tree covers the upper covering portion and forbidden tree extends outside of upper covering portion. Each lower "synthetic expansion tree of maximum tree value" is restored to original OR tree from which generally plural "cover and maximum structure" appear. Then, "cover and maximum structure" and "synthetic expansion tree of maximum tree value" with double exclusive tree covering are generated. To the mixture of this "cover and maximum structure" with double exclusive covering and original "cover and maximum structure", forbidden tree inclusion survey is applied. At the case of further extension of forbidden tree like line (10') in Fig.208, additional processing becomes necessary. Namely, the system of reference 2 needs the operation where each lower "synthetic expansion tree of maximum tree value" is restored to original OR tree to which upper covering is applied generating plural coverage substructures from which "synthetic expansion tree of maximum tree value" are attained. This operation corresponds to combination of "U.upper covering module" and "G.parsed tree generation module" of this patent application and simultaneously application of this operation needs huge calculation and complicated control mechanism.

On the other hand, the system of this patent application surveys for forbidden tree inclusion to the leftmost exclusive tree of maximum accumulated tree value and erases the tree when it includes forbidden tree and goes to survey of next forbidden tree in the case of "first exclusive tree type". When the range of a forbidden tree extends out of exclusive tree, the lower "" treating allelic exclusive tree group of border node is called to which the operation is handed over terminating operation of current layer. Here, the erasure of leftmost exclusive tree occurs only when all border nodes report forbidden tree inclusion. The lower "unit of detection of non-inclusion of extras-regional forbidden tree" conduct the same operation with upper layer concerning for out of range extension of forbidden tree. Whereas the system of reference 2 necessitates lower "synthetic expansion tree of maximum tree value" to cope with out of range extension of forbidden tree, the system of this patent application can cope with out of range extension without change in allelic exclusive tree group.

Here, the difference between calculation method of tree value of "synthetic expansion tree of maximum tree value" of reference 2 and that of accumulated tree value of this patent application is treated. The tree value of "synthetic expansion tree of maximum tree value" and accumulated tree value are identical with each other.

For the system of reference 2, additional tree value calculation is unnecessary because the value is obtained in the course of composition of "synthetic expansion tree of maximum tree value" although the composition requires huge calculation.

At the system of this invention, the arrangement of exclusive trees in each allelic exclusive tree group in descending order of accumulated tree value is altered when many exclusive trees are erased. The "K.maximum value tree generation unit" of restoration of the order must be applied on all allelic exclusive groups and this application requires large calculation amount. Frequency of this application is arbitrarily chosen. At the system of reference 2, the operation equivalent to the whole "G.parsed tree generation module" becomes necessary every time when out of range extension of forbidden tree occurs.

Next, the difference between the block diagram for generation of synthetic maximum tree value expansion tree of reference 2 and "W.generation module of parsed tree not including forbidden tree" of this invention concerning with recursive input and output is observed. At the flow char of generation for synthetic maximum tree value expansion tree of reference 2, process (4) "Operation at lower layer is conducted." of lower layer has only one input point and one output point composed of process (1) to process (8) of lower layer.

As seen in Fig.210, "flow chart for generation of maximum tree value tree not including forbidden tree" of this patent application has region surrounded by input point "A" which is input point of process X1(start of operation), output point "B" which is output of process X11(output of yes) and output point "C" which is output of process X12(output of no). Point "B" generates decision "yes" and point "C" generates decision "no". As a result, portion of "(detection unit of non inclusion of forbidden tree with out of range extension situated lower)" having the same configuration as the region surrounded by points "A", "B" and "C" has also input point "A" and output points "B" and "C". The algorithm in Fig.210 generates decision "no" from point "C" only when entire exclusive trees in allelic exclusive tree group include forbidden tree. At the flow chart of Fig.201 of reference 2, the same phenomenon occurs when entire "cover and maximum structure" include forbidden tree. To provide the ability to generate decision "no", insertion of a process to survey on the existence of "cover and maximum structure" and to generate decision "no" when the structure does not exist, between process (9) "1st term is deleted." and process (12) "1st forbidden tree is introduced." is necessary.

Here, difference between "block diagram for generation of synthetic maximum tree value expansion tree" of reference 2 and "unit of detection of non-inclusion of extras-regional forbidden tree" of this patent application in the field of exclusive tree utilized. While system of reference 2 uses exclusive trees provided by the system, the system of this patent application uses temporal exclusive trees generated from common word sequences between input sentences and example trees together with exclusive trees provided by the sequence.

Here, difference between "block diagram for generation of synthetic maximum tree value expansion tree" of reference 2 and "unit of detection of non-inclusion of extras-regional forbidden tree" of this patent application in the field of data conservation method.

At the system of reference 2 in Fig.201, the situation where the "cover and maximum structure" used hitherto is erased to prepare for the treatment of next term when operation reaches to process (8) "Forbidden tree is applied." via process (4) "Operation at lower layer is conducted." and the decision is "covering range limited to inside of exclusive tree". This situation gives rise to the situation where information generated at "cover and maximum structure" of lower layer disappears and re-calculation becomes necessary. This is an example but there are many cases where information generated at a "cover and maximum structure" disappears after completion of the layer and re-calculation becomes necessary.

At the system of this patent application, re-calculation can be avoided because allelic exclusive tree groups are accommodated in global memory GTN to which writ-in and read-out is possible from any layer. Moreover, precise allelic exclusive tree groups and precise output analysis tree are obtainable by recording erasure of exclusive trees of forbidden tree inclusion.

It can be concluded that the system of this patent application requires less calculation and generates more precise output and is simpler in operation control, compared with the system in reference 2.

Industrial Applicability

The "analysis result selection apparatus and method at example sentence driven machine translation" of this patent application can be utilized in many field where computer translation is necessitated.

Reference Sign List

A1 register
A3 register
A4 register
A5 register
A7 register
A9 register
C3 register
C4 register
C5 register
C7 register
C9 register
S1 register
S3 register
S4 register
S5 register
S7 register
S9 register

**Claims**

1. In an analysis result selection apparatus at example sentence driven machine translation in which operations of:

detecting a input sentence and example sentences with common word sequence with inclusion of non-common words;
generating temporal exclusive tree group by obtaining temporal exclusive trees from the example sentences;
giving respective tree values to each of the generated temporal exclusive tree group;
naming a merge result of the temporal exclusive tree group and exclusive tree group with tree value stored in a system as a first tree group and generating member of a second exclusive tree group from member of the first tree group which is found to be identical with a partial tree of input OR tree by upper covering which is a declaration that an exclusive tree from the an exclusive tree group is identical with the partial tree of the input OR tree at the condition that topmost nodes of two tree are identical with each other;
obtaining as a output of upper covering a second exclusive tree the composing node of which has a node number of OR tree covered by an exclusive tree node and obtaining generally a number of partial trees of input OR tree situated below leaf connecting nodes of an exclusive tree of the first tree group, which are object of further upper covering, and conducting upper covering until no untreated partial OR tree remains;
generating a number of sentence analysis trees by repetitively merging leaf connecting nodes of an upper exclusive tree with lower exclusive trees with topmost nodes identical with each of the leaf connecting nodes; and generating a sentence analysis tree not including forbidden trees and having maximum tree value are made, a method of detection of common word sequence, the method comprising:

> choosing as a row number a position of word in the input sentence and chosing as a column number a position of word in the example sentence;
> finding element position at which a input word of the input sentence and the example sentence word coincide;
> obtaining element values at each coincident element by the use of recurrence formula to complete a coincidence matrix and
> generating a parent child relation for every parent element eligible to be a parent by obtaining generally plural child elements which exist at upper left of the parent element and besides, which have the element value smaller by 1 of the parent element and
> producing a tree by merging nodes representing the same nodes and
> obtaining coincident word numbers indicating coincident word positions on leaf nodes of the example sentence tree by arranging only column number information of the path elements of the tree.

2. The method of detecting common word sequence with allowance of part of speech coincidence by an apparatus, the method comprising:

> consulting part of speech dictionary concerning with input word sequence and appending, after a word, generally plural pairs composed of part of speech name and composing row of a coincidence matrix with a sequence of word followed by part of speech information and appending each leaf word in an example tree a part of speech directly above in an example tree and making sequence of word followed by part of speech name and composing column of a coincidence matrix with the sequence of word followed by part of speech name;
> appending mark "+" to a word in case of the word coincidence and appending symbol "+" to a coincident part of speech name and value connected with a coincident part of speech in case of the part of speech coincidence; and after the appending mark or symbol "+,"

>> giving each coincident element in the matrix coincident value through the method of recursion formula to complete the coincidence matrix;
>> generating the parent child relation for every parent element eligible to be a parent by obtaining generally plural child elements which exist at upper left of the parent element and which have the element value smaller by 1 of the parent element;
>> producing a tree by merging nodes representing the same nodes; and obtaining + adjoined node numbers indicating + adjoined node positions on leaf nodes of the example sentence tree by arranging only column number information of the path elements of the tree.

3. The method of acquisition of temporal exclusive tree by an apparatus, the method comprising:

> in case of only word coincidence being treated as coincidence, receiving coincident word sequence obtained by a method of detecting common word sequence and finding a dominant node which is lowest among the nodes dominating all the coincident words and obtaining temporal exclusive tree by eliminating all the nodes other than nodes on paths between coincide leaf nodes and the dominant node and nodes having brother relation with on-the-path nodes at the design policy;
> in case of both word coincidence and part of speech coincidence being treated as coincidence,

>> receiving an input including + adjoined nodes obtained by the method of detecting common word sequence with allowance of part of speech coincidence and designating the coincident word as the + adjoined node when word coincidence occurs; and
>> overwriting the node at part of speech position with a pair composed of part of speech name with mark "+" and information value and designating newly the part of speech name as + adjoined node when part of speech coincidence occurs at the design policy; and

> in case of both word coincidence and part of speech coincidence being treated as coincidence, generating a part of speech exclusive tree composed of word node and part of speech node above the word node for each part of speech coincident node at the design policy.

4. The method of claim 3, further comprising:

obtaining a tree value of the generated temporal exclusive tree, the obtaining comprising:

giving information value of 1 to a coincident word treated as a + adjoined node and giving part of speech information value accompanying with the part of speech node to a part of speech node treated as a + adjoined node;

for sentences belonging to some particular field, giving, from the leaf to topmost direction in example tree, node value of TA type composed of a sum of node values of child nodes divided by the number of child nodes to the parent node to decide all node values in the example tree; and

designating a total sum of the information values of the nodes in the temporal exclusive tree as the tree value of the exclusive tree of TA type; and

for sentences belonging to other particular field, obtaining the PA type of tree value of a temporal exclusive tree, the obtaining comprising:

obtaining, for a investigated node, multiplication of TA type node value of the investigated node in the exclusive tree obtained by above method and the aggregation of a sum of word information values of words dominated by the investigated node and a sum of part of speech information values of the + adjoined part of speech node dominated by the investigated node and obtaining PA value of the investigated node as the multiplication of the multiplication result and the number of child nodes of the investigated node dominating coincident words or coincident part of speech nodes;

choosing the investigated node, from the leaf to topmost direction in the example tree, for the operation of giving PA value to decide PA values for all nodes in the example tree; and

designating total sum of the PA values of the nodes in the temporal exclusive tree as the tree value of the exclusive tree of PA type.

5. The method of claim 3, further comprising:

under the naming method where temporal exclusive trees and exclusive trees stored in the system are commonly called exclusive trees, taking out of an OR tree from the array of OR tree and trying to conduct sequential upper covering of the OR tree by entire exclusive trees;

introducing, when the upper covering is successful, the exclusive tree having covered OR tree node number at each node, to the allele exclusive tree group having the name of the topmost node of OR tree under coverage;

introducing to the OR tree array generally plural partial OR trees of the covered OR tree outside of the coverage of exclusive tree; and

repeating, avoiding duplication of the same OR trees in the array of OR tree, the above 2 processes of taking out of OR tree and coverage by entire exclusive trees, beginning from the taking out of a initial OR tee until the array of OR tree is empty to generate allelic exclusive group array each of which is composed of the exclusive tree with identical topmost node.

6. The method of generation of maximum tree value tree by an apparatus, the method comprising:

assigning tree value of an exclusive tree in an exclusive tree group to initial value of accumulated tree value;

adding an selected tree value of a lower exclusive tree group connoted to a connecting leaf node;

applying the added value at entire connecting leaf nodes which results in the accumulated tree value of the exclusive tree treated;

applying the accumulated tree value for all exclusive trees in the allelic exclusive tree group and, subsequently arranging the exclusive trees in the group in the descending order of accumulated tree value;

assigning the leftmost exclus2ive tree to be selected tree and the accumulated tree value of the selected tree to be selected tree value; and

upward tracing in OR tree from word nodes at the bottom to topmost node in OR tree in terms of choosing allelic exclusive tree groups for finding selected tree to enable acquisition of the selected tree which is maximum tree value tree and selected tree value for all allelic exclusive tree group.

7. The method of claim 6, further comprising detecting non-inclusion of extra-regional forbidden tree working on recursive algorithm, wherein the detecting comprises:

receiving a pair of an exclusive tree belonging to an exclusive tree group with a label of OR tree node and a forbidden tree and conducting a inclusion decision of inclusion of the forbidden tree in the exclusive tree utilizing a measure of detecting inclusion of forbidden tree;

generating decision of "locally no" when region of coverage at exclusive tree by the forbidden tree with the condition that topmost node of the former is covered by topmost node of latter is totally included in the exclusive tree;

generating decision of "locally yes" when coverage by forbidden tree with the condition that 2 topmost nodes coincide fails generates decision of "locally uncertain" when forbidden tree covers the exclusive tree with the condition that 2 topmost nodes coincide and furthermore part of the forbidden tree extends outside of the exclusive tree;

shifting the object of processing to the next exclusive tree in the exclusive tree group when decision is "locally yes;"

deleting the exclusive tree under processing and shifts the object of processing to the next exclusive tree in the tree group;

conducting the operation, for all leaf nodes through which a portion of forbidden tree extends, in which the method first obtaining a pair composed of the portion of forbidden tree extending through a leaf connecting node of the exclusive tree and the allelic exclusive tree group labeled by the OR node covered by the leaf connecting node and secondly the method gives the pair to each respective lower recursive layer treating the OR node covered by the leaf connecting node and thirdly the method waits for the decisions of all lower recursive layers and, when returned decision is "yes", the method shifts the object of processing to the next exclusive tree in the group and when returned decision is not "yes", the method deletes the exclusive tree under processing and shifts the object of processing to the next exclusive tree, when decision is "locally uncertain;"

applying the inclusion decision which is applied to an exclusive tree in the allelic exclusive tree group to all exclusive trees in a allelic exclusive tree group;

returning the decision of "yes" to upper layer, after application to all exclusive trees when exclusive trees still remains in the allelic exclusive tree group;

returning the decision of "no" to upper layer, after application to all exclusive trees, when exclusive trees still remains in the allelic exclusive tree group; and

applying the inclusion decision which is applied to an allelic exclusive tree group to all allelic exclusive groups by the order of bottom to topmost order in input OR tree.

8. The method of claim 7, further comprising detecting non-inclusion of extra-regional forbidden tree of entire node type, wherein the detecting comprises:

sequentially composing partial trees which have respectively nodes excepting leaf nodes of the exclusive tree under processing;

making pairs of these partial trees with the forbidden tree;

feeding these parts to further operation of first recursion without altering operation of second and later recursions; and

generating decision of "no" to the exclusive tree under processing when any of the partial trees get the decision of "no."

9. The method of claim 7, further comprising detecting non-inclusion of extra-regional forbidden tree of variable type, wherein the detecting comprises:

introducing the method of detecting non-inclusion of extra-regional forbidden tree of first exclusive tree type, wherein the detecting the non-inclusion of the extra-regional forbidden tree of the first exclusive tree type comprises:

discontinuing application of the detecting non-inclusion of extra-regional forbidden tree working on the recursive algorithm at the occurrence of "yes" decision during sequential application, starting at the leftmost tree, of the detecting non-inclusion of extra-regional forbidden tree working on the recursive algorithm to an allelic exclusive tree group in which exclusive detecting non-inclusion of extra-regional forbidden tree of entire node type, the tree being arranged in descending order of accumulated tree value by the effect of the generation of the maximum tree value tree;

executing the detecting non-inclusion of extra-regional forbidden tree working on the recursive algorithm while depth of recursion is small;

executing the "detecting non-inclusion of extra-regional forbidden tree of first exclusive tree type" when recursion depth becomes large;

keeping the descending order of accumulated tree value in arrangement of exclusive tree, if necessary, through a use of the generation of the maximum tree value tree; and

replacing, if necessary, the detecting non-inclusion of extra-regional forbidden tree working on the recursive algorithm with the detecting the non-inclusion of the extra-regional forbidden tree of the entire node type.

10. The method of generation of sentence analysis tree by an apparatus. the method comprising:

selecting one of allelic exclusive trees in allelic tree group having the label of topmost OR tree node and repeating, starting with the topmost exclusive tree, the merge of a connecting leaf node of an exclusive tree with the selected tree with maximum tree value which belongs to the allelic exclusive tree group having label of connecting leaf node to build output analysis tree.

11. The analysis result selection apparatus at example sentence driven machine translation being configured to:

obtain a sentence analysis tree of an input sentence by

extracting, from an example tree pool, example trees having common word sequences with the input sentence; and

utilizing the extracted example trees as portions of sentence analysis tree; and

introduct the sentence analysis tree obtained from the input sentence to the example tree pool, if necessary, revision by human hand.

12. The method of obtaining trustworthy analysis result at a system of analysis result selection apparatus at example sentence driven machine translation (KATE), wherein the apparatus conducts sentence analysis by extracting, from an example tree pool (ETP), trees having common word sequences with an input sentence and utilizes them as portions of analysis tree, the method comprising:

feeding the same input sentence to the KATE system and sequence to sequence transformation system (STS) utilizing neural network which has completed learning on the ETP;

obtaining a coincident partial tree between KATE and STS;

adding the coincident partial tree to the ETP; and

operating the KATE system on the same input sentence using the augmented example tree pool.

13. The method comprising:

obtaining a supplementary example tree pool, the supplementary example tree pool being merged with an example tree pool (ETP) resulting in augmented ETP to be used at analysis result selection apparatus at example sentence driven machine translation (KATE), and the supplementary example tree pool serving for the preparation for additional learning of sequence to sequence transformation system (STS) after the completion of learning on the original ETP, the method comprising:

obtaining many coincident partial trees between output of KATE and STS through feeding many common input sentences to KATE and STS; and

making supplementary example tree pool by the accumulation of these coincident partial trees.

14. The method of sequence to sequence translation system of noun phrase separation type to realize high accuracy translation by an apparatus, the method comprising:

analyzing an input source language sentence into a phrase structural tree;

taking noun phrases out from phrase structural analysis tree leaving traces which are treated as nouns;

applying a linearization to taken out noun phrases and remnant main sentence with traces;

separately applying sequence to sequence language translation to taken out noun phrase sentences and remnant main sentence with traces;

obtaining translation result of taken out noun phrases and remnant main sentence with designation of positions for translated traces;

replacing designated position of translated traces by corresponding taken out and translated noun phrases; and

generating target language sentence of the input source language sentence.

**15.** The method of claim 14, further comprising selecting taken out noun phrases as a portion of sequence to sequence translation system of noun phrase separation type, wherein the selecting comprises:

detecting noun phrases being conducted by deciding scope of each noun phrase by detecting beginning position and end position in S expression of source language phrase structural analysis result;
placing the detected noun phrases in noun phrase matrix being conducted by the method where noun phrases included by including noun phrase are placed at lower row of including noun phrase and
deciding whether including noun phrase or included noun phrases are selected as taken out noun is made by observing beginning point and end point and number of leaf words dominated by noun phrase with the aide of the information of the placing of noun phrases in noun phrase.

**Amended claims under Art. 19.1 PCT**

**1.** In an analysis result selection apparatus at example sentence driven machine translation in which operations of:

detecting an input sentence and example sentences with common word sequence with inclusion of non-common words;
generating temporal exclusive tree group by obtaining temporal exclusive trees from the example sentences;
giving respective tree values to each of the generated temporal exclusive tree group;
naming a merge result of the temporal exclusive tree group and exclusive tree group with tree value stored in a system as a first tree group and generating member of a second exclusive tree group from member of the first tree group which is found to be identical with a partial tree of input OR tree by upper covering which is a declaration that an exclusive tree from the a exclusive tree group is identical with the partial tree of the input OR tree at the condition that topmost nodes of two tree are identical with each other;
obtaining as a output of upper covering a second exclusive tree the composing node of which has a node number of OR tree covered by an exclusive tree node and obtaining generally a number of partial trees of input OR tree situated below leaf connecting nodes of an exclusive tree of the first tree group, which are object of further upper covering, and conducting upper covering until no untreated partial OR tree remains;
generating a number of sentence analysis trees by repetitively merging leaf connecting nodes of an upper exclusive tree with lower exclusive trees with topmost nodes identical with each of the leaf connecting nodes; and
generating a sentence analysis tree not including forbidden trees and having maximum tree value are made, a method of detection of common word sequence, the method comprising:

choosing as a row number a position of word in the input sentence and choosing as a column number a position of word in the example sentence;
finding element position at which an input word of the input sentence and the example sentence word coincide;
obtaining element values at each coincident element by the use of recurrence formula to complete a coincidence matrix and
generating a parent child relation for every parent element eligible to be a parent by obtaining generally plural child elements which exist at upper left of the parent element and besides, which have the element value smaller by 1 of the parent element and
producing a tree by merging nodes representing the same nodes and
obtaining coincident word numbers indicating coincident word positions on leaf nodes of the example sentence tree by arranging only column number information of the path elements of the tree.

**2.** The method of detecting common word sequence with allowance of part of speech coincidence by an apparatus, the method comprising:

consulting part of speech dictionary concerning with input word sequence and appending, after a word, generally plural pairs composed of part of speech name and composing row of a coincidence matrix with a sequence of word followed by part of speech information and appending each leaf word in an example tree a part of speech directly above in an example tree and making sequence of word followed by part of speech name and composing column of a coincidence matrix with the sequence of word followed by part of speech name;
appending mark "+" to a word in case of the word coincidence and appending symbol "+" to a coincident part of speech name and value connected with a coincident part of speech in case of the part of speech coincidence; and after the appending mark or symbol "+,"

giving each coincident element in the matrix coincident value through the method of recursion formula to complete the coincidence matrix;

generating the parent child relation for every parent element eligible to be a parent by obtaining generally plural child elements which exist at upper left of the parent element and which have the element value smaller by 1 of the parent element;

producing a tree by merging nodes representing the same nodes; and obtaining + adjoined node numbers indicating + adjoined node positions on leaf nodes of the example sentence tree by arranging only column number information of the path elements of the tree.

3. The method of acquisition of temporal exclusive tree by an apparatus, the method comprising:

in case of only word coincidence being treated as coincidence, receiving coincident word sequence obtained by a method of detecting common word sequence and finding a dominant node which is lowest among the nodes dominating all the coincident words and obtaining temporal exclusive tree by eliminating all the nodes other than nodes on paths between coincide leaf nodes and the dominant node and nodes having brother relation with on-the-path nodes at the design policy;

in case of both word coincidence and part of speech coincidence being treated as coincidence,

receiving an input including + adjoined nodes obtained by the method of detecting common word sequence with allowance of part of speech coincidence and designating the coincident word as the + adjoined node when word coincidence occurs; and

overwriting the node at part of speech position with a pair composed of part of speech name with mark "+" and information value and designating newly the part of speech name as + adjoined node when part of speech coincidence occurs at the design policy; and

in case of both word coincidence and part of speech coincidence being treated as coincidence, generating a part of speech exclusive tree composed of word node and part of speech node above the word node for each part of speech coincident node at the design policy.

4. The method of claim 3, further comprising:

obtaining a tree value of the generated temporal exclusive tree, the obtaining comprising:

giving information value of 1 to a coincident word treated as a + adjoined node and giving part of speech information value accompanying with the part of speech node to a part of speech node treated as a + adjoined node;

for sentences belonging to some particular field, giving, from the leaf to topmost direction in example tree, node value of TA type composed of a sum of node values of child nodes divided by the number of child nodes to the parent node to decide all node values in the example tree; and

designating a total sum of the information values of the nodes in the temporal exclusive tree as the tree value of the exclusive tree of TA type; and

for sentences belonging to other particular field, obtaining the PA type of tree value of a temporal exclusive tree, the obtaining comprising:

obtaining, for a investigated node, multiplication of TA type node value of the investigated node in the exclusive tree obtained by above method and the aggregation of a sum of word information values of words dominated by the investigated node and a sum of part of speech information values of the + adjoined part of speech node dominated by the investigated node and obtaining PA value of the investigated node as the multiplication of the multiplication result and the number of child nodes of the investigated node dominating coincident words or coincident part of speech nodes;

choosing the investigated node, from the leaf to topmost direction in the example tree, for the operation of giving PA value to decide PA values for all nodes in the example tree; and

designating total sum of the PA values of the nodes in the temporal exclusive tree as the tree value of the exclusive tree of PA type.

5. The method of claim 3, further comprising:

under the naming method where temporal exclusive trees and exclusive trees stored in the system are commonly called exclusive trees, taking out of an OR tree from the array of OR tree and trying to conduct sequential upper covering of the OR tree by entire exclusive trees;

introducing, when the upper covering is successful, the exclusive tree having covered OR tree node number at each node, to the allele exclusive tree group having the name of the topmost node of OR tree under coverage; introducing to the OR tree array generally plural partial OR trees of the covered OR tree outside of the coverage of exclusive tree; and

repeating, avoiding duplication of the same OR trees in the array of OR tree, the above 2 processes of taking out of OR tree and coverage by entire exclusive trees, beginning from the taking out of an initial OR tee until the array of OR tree is empty to generate allelic exclusive group array each of which is composed of the exclusive tree with identical topmost node.

6. The method of generation of maximum tree value tree by an apparatus, the method comprising:

assigning tree value of an exclusive tree in an exclusive tree group to initial value of accumulated tree value; adding a selected tree value of a lower exclusive tree group connoted to a connecting leaf node; applying the added value at entire connecting leaf nodes which results in the accumulated tree value of the exclusive tree treated;

applying the accumulated tree value for all exclusive trees in the allelic exclusive tree group and, subsequently arranging the exclusive trees in the group in the descending order of accumulated tree value; assigning the leftmost exclus2ive tree to be selected tree and the accumulated tree value of the selected tree to be selected tree value; and

upward tracing in OR tree from word nodes at the bottom to topmost node in OR tree in terms of choosing allelic exclusive tree groups for finding selected tree to enable acquisition of the selected tree which is maximum tree value tree and selected tree value for all allelic exclusive tree group.

7. The method of claim 6, further comprising detecting non-inclusion of extra-regional forbidden tree working on recursive algorithm, wherein the detecting comprises:

receiving a pair of an exclusive tree belonging to an exclusive tree group with a label of OR tree node and a forbidden tree and conducting a inclusion decision of inclusion of the forbidden tree in the exclusive tree utilizing a measure of detecting inclusion of forbidden tree;

generating decision of "locally no" when region of coverage at exclusive tree by the forbidden tree with the condition that topmost node of the former is covered by topmost node of latter is totally included in the exclusive tree;

generating decision of "locally yes" when coverage by forbidden tree with the condition that 2 topmost nodes coincide fails generates decision of "locally uncertain" when forbidden tree covers the exclusive tree with the condition that 2 topmost nodes coincide and furthermore part of the forbidden tree extends outside of the exclusive tree;

shifting the object of processing to the next exclusive tree in the exclusive tree group when decision is "locally yes;"

deleting the exclusive tree under processing and shifts the object of processing to the next exclusive tree in the tree group;

conducting the operation, for all leaf nodes through which a portion of forbidden tree extends, in which the method first obtaining a pair composed of the portion of forbidden tree extending through a leaf connecting node of the exclusive tree and the allelic exclusive tree group labeled by the OR node covered by the leaf connecting node and secondly the method gives the pair to each respective lower recursive layer treating the OR node covered by the leaf connecting node and thirdly the method waits for the decisions of all lower recursive layers and when returned decision is "yes", the method shifts the object of processing to the next exclusive tree in the group and when returned decision is not "yes", the method deletes the exclusive tree under processing and shifts the object of processing to the next exclusive tree, when decision is "locally uncertain;"

applying the inclusion decision which is applied to an exclusive tree in the allelic exclusive tree group to all exclusive trees in an allelic exclusive tree group;

returning the decision of "yes" to upper layer, after application to all exclusive trees when exclusive trees still remains in the allelic exclusive tree group;

returning the decision of "no" to upper layer, after application to all exclusive trees, when exclusive trees still remains in the allelic exclusive tree group; and

applying the inclusion decision which is applied to an allelic exclusive tree group to all allelic exclusive groups by the order of bottom to topmost order in input OR tree.

8. The method of claim 7, further comprising detecting non-inclusion of extra-regional forbidden tree of entire node type, wherein the detecting comprises:

sequentially composing partial trees which have respectively nodes excepting leaf nodes of the exclusive tree under processing;
making pairs of these partial trees with the forbidden tree;
feeding these parts to further operation of first recursion without altering operation of second and later recursions; and
generating decision of "no" to the exclusive tree under processing when any of the partial trees get the decision of "no."

9. (Currently amended) The method of claim 8, further comprising detecting non-inclusion of extra-regional forbidden tree of variable type, wherein the detecting comprises:

introducing the method of detecting non-inclusion of extra-regional forbidden tree of first exclusive tree type, wherein the detecting the non-inclusion of the extra-regional forbidden tree of the first exclusive tree type comprises:
discontinuing application of the detecting non-inclusion of extra-regional forbidden tree working on the recursive algorithm at the occurrence of "yes" decision during sequential application, starting at the leftmost tree, of the detecting non-inclusion of extra-regional forbidden tree working on the recursive algorithm to an allelic exclusive tree group in which exclusive detecting non-inclusion of extra-regional forbidden tree of entire node type, the tree being arranged in descending order of accumulated tree value by the effect of the generation of the maximum tree value tree;
executing the detecting non-inclusion of extra-regional forbidden tree working on the recursive algorithm while depth of recursion is small;
executing the "detecting non-inclusion of extra-regional forbidden tree of first exclusive tree type" when recursion depth becomes large;
keeping the descending order of accumulated tree value in arrangement of exclusive tree, if necessary, through a use of the generation of the maximum tree value tree; and
replacing, if necessary, the detecting non-inclusion of extra-regional forbidden tree working on the recursive algorithm with the detecting the non-inclusion of the extra-regional forbidden tree of the entire node type.

10. The method of generation of sentence analysis tree by an apparatus. the method comprising:

selecting one of allelic exclusive trees in allelic tree group having the label of topmost OR tree node and repeating, starting with the topmost exclusive tree, the merge of a connecting leaf node of an exclusive tree with the selected tree with maximum tree value which belongs to the allelic exclusive tree group having label of connecting leaf node to build output analysis tree.

11. (Currently amended) The method of claim 1, the analysis result selection apparatus at example sentence driven machine translation being further configured to:

obtain a sentence analysis tree of an input sentence by

extracting, from an example tree pool, example trees having common word sequences with the input sentence; and
utilizing the extracted example trees as portions of sentence analysis tree; and

introduce the sentence analysis tree obtained from the input sentence to the example tree pool, if necessary, revision by human hand.

12. The method of obtaining trustworthy analysis result at a system of analysis result selection apparatus at example sentence driven machine translation (KATE), wherein the apparatus conducts sentence analysis by extracting, from an example tree pool (ETP), trees having common word sequences with an input sentence and utilizes them as portions of analysis tree, the method comprising:

feeding the same input sentence to the KATE system and sequence to sequence transformation system (STS) utilizing neural network which has completed learning on the ETP;

obtaining a coincident partial tree between KATE and STS;

adding the coincident partial tree to the ETP; and

operating the KATE system on the same input sentence using the augmented example tree pool.

**13.** The method comprising:

obtaining a supplementary example tree pool, the supplementary example tree pool being merged with an example tree pool (ETP) resulting in augmented ETP to be used at analysis result selection apparatus at example sentence driven machine translation (KATE), and the supplementary example tree pool serving for the preparation for additional learning of sequence to sequence transformation system (STS) after the completion of learning on the original ETP, the method comprising:

obtaining many coincident partial trees between output of KATE and STS through feeding many common input sentences to KATE and STS; and

making supplementary example tree pool by the accumulation of these coincident partial trees.

**14.** (Currently amended) The method of sequence to sequence translation system of noun phrase separation type to realize high accuracy translation by an apparatus, the method comprising:

analyzing an input source language sentence into a phrase structural tree;

taking noun phrases out from phrase structural analysis tree leaving traces which are treated as nouns;

applying a linearization to taken out noun phrases and remnant main sentence with traces;

separately applying sequence to sequence language translation to taken out noun phrase sentences and remnant main sentence with traces;

obtaining translation result of taken out noun phrases and remnant main sentence with designation of positions for translated traces;

replacing designated position of translated traces by corresponding taken out and translated noun phrases; and

generating target language sentence of the input source language sentence,

the method of sequence to sequence translation system of noun phrase separation type comprising:

detecting noun phrases being conducted by deciding scope of each noun phrase by detecting beginning position and end position in S expression of source language phrase structural analysis result;

placing the detected noun phrases in noun phrase matrix being conducted by the method where noun phrases included by including noun phrase are placed at lower row of including noun phrase and

deciding whether including noun phrase or included noun phrases are selected as taken out noun is made by observing beginning point and end point and number of leaf words dominated by noun phrase with the aide of the information of the placing of noun phrases in noun phrase.

**15.** (Canceled)

(example sentence tree)　　(input sentence)

E.temporal exclusive tree generation module

detection part
of common
word sequence
existing in
reference1

P.coincidence matrix generation unit

N.adjoining coincidence word detection element

S.common word sequence detection unit

【claim1】
【claim2】

【claim3】

temporal
exclusive
tree
generation
part

(example sentence trees with designation of common word sequence)

composition
part of
temporal
exclusive
tree existing
in reference1

D.dominating node detection unit(newly introduced)

T.composition unit of
temporal exclusive tree

M　composition unit of temporal
exclusive tree with allowance of
part of speech coincidence

(temporal exclusive trees)

【claim4】

V.tree value generation unit for exclusive tree(virtually newly introduced)

(OR trees generated at the grammar
application part)

(temporal exclusive trees
with tree value)

(exclusive trees stored
in the apparatus)

U.upper covering module=upper covering part　【claim5】

(array of allele exclusive tree groups)

synthesized
algorithm
for
maximum
value tree
generation in
reference2

G.parsed tree generation module

K.maximum value tree generation unit　　【claim6】

W.generation module of parsed tree not including forbidden tree

X.unit for detecting non-inclusion of extra-
regional forbidden tree in exclusive tree　　【claim7】

Y.element for detecting non-inclusion
of forbidden tree in exclusive tree

A.composing node acquisition element　　【claim8】

K.maximum value tree generation unit　　【claim9】

C.maximum value tree construction unit　　【claim10】

parsed tree
generation
part

(output parsed tree of input sentence)　【claim11】

# FIG.1

| letter sequence consisting example sentence | | bj | | | | |
|---|---|---|---|---|---|---|
| | | 1 | 2 | 3 | 4 | 5 |
| | 0 | a | c | b | a | c |
| 1 | a | ① | 1 | 1 | ① | 1 |
| letter sequence consisting input sentence 2 | b | 1 | 1 | ② | 2 | 2 |
| ai 3 | c | 1 | ② | 2 | 2 | ③ |
| 4 | a | ① | 2 | 2 | ③ | 3 |
| 5 | c | 1 | ② | 2 | 3 | ④ |

# FIG.2

**FIG.3**

**FIG.4**

FIG.5

```
       S
  ┌────┴────┐
  5         9
  │         │
  3         7
  │      ┌──┴──┐
  1      3     4
         │     │
         1     1
```

(1)

layer 3  [1, 3]

layer 4  [1, 4]

layer 5  [1, 3, 5]

layer 7  [1. 3. 7] + [1. 4, 7]

layer 9  [1. 3. 7, 9] + [1. 4, 7, 9]

(2)

# FIG.6

bj

| word sequence consisting example sentence | | | 1 | 2 | 3 | 4 | 5 | 6 | 7 |
|---|---|---|---|---|---|---|---|---|---|
| | | 0 | I | saw | a | big | man | with | boots |
| word sequence consisting input sentence | 1 | a | 0 | 0 | ① | 1 | 1 | 1 | 1 |
| | 2 | boy | 0 | 0 | 1 | 1 | 1 | 1 | 1 |
| ai | 3 | with | 0 | 0 | 1 | 1 | 1 | ② | 2 |
| | 4 | dogs | 0 | 0 | 1 | 1 | 1 | 2 | 2 |

# FIG.7

example sentence

(1)

(2)

# FIG.8

dominating node matrix

|   | 1 | 2 | 3 | 4 | 5 | 6 | 7 | 8 | 9 | 10 |
|---|---|---|---|---|---|---|---|---|---|----|
| 1 | 11 | 10 | 9 | 8 | 5 | 1 | | | | |
| 2 | 19 | 18 | 17 | 8 | 5 | 1 | | | | |

(1)

dominating node matrix

|   | 1 | 2 | 3 | 4 | 5 | 6 | 7 | 8 | 9 | 10 |
|---|---|---|---|---|---|---|---|---|---|----|
| 1 | | | | | 11 | 10 | 9 | 8 | 5 | 1 |
| 2 | | | | | 19 | 18 | 17 | 8 | 5 | 1 |

(2)

# FIG.9

EP 4 567 661 A1

FIG.10

144

X=(y1)/n

Y1=y1    Y2 ― ― ― ― ― Yn

C1≡c1

(1)

X=(y1+y2)/n

Y1=y1    Y2=y2 ― ― ― ― ― Yn

C3≡c3    C1≡c1    C2≡c2

(2)

CL(n1)->0.58125

NP(n2)->0.5          VP(n6)->0.6625

TAST=11.31875

ADJ(n3)->1    N(5)    AugV(n7)->0.7    VP(n8)->0.625(TAS=6.875)

such(n4)->1    VP(n9)->0.75(TAS=3.75)    PP(n13)->0.5(TAS=2.5)

BeV(n10)->1    VPX(n12)->0.5    PREP(n14)->1    NP(n16)

be(n11)->1    VPT(n13)->0.5    by(n15)->1

(3)

# FIG.11

$$X=(c1)\times(y1)/n$$

Y1=y1 Y2 ------ Yn

C1≡c1

(1)

$$X=(c1+c2+c3)\times 2\times(y1+y2)/n$$

Y1=y1 Y2=y2 ----- Yn

C3≡c3 C1≡c1 C2≡c2

(2)

CL(n1)–>4.2×2×0.58125=4.8825

PAST=23.1275

NP(n2)–>1×1×0.5=0.5 VP(n6)–>3.2×2×0.6625=4.42

ADJ(n3)–>1×1×1=1 N(n5) AugV(n7)–>0.7 VP(n8)–>2.5×2×0.625=3.125(PAS=10.625)

such(n4)–>1 VP(n9)–>1.5×2×0.75=2.25(PAS=5,0) PP(n13)–>1×1×0.5=0.5(PAS=2.5)

BeV(n10)–>1×1×1=1 VPX(n12)–>0.5×1×0.5=0.25 PREP(n14)–>1×1×1=1 NP(n16)

be(n11)–>1 by(n15)–>1

(3)

# FIG.12

**FIG.13**

FIG.14

NP(t1)
(p=1.5)

DET(t2)　　　　NP(t4)

a(t3)　　　A

NP(t1)
(p=5.0)

NOUN(t2)　　B　　PP(t4)

boy(t3)　　PREP(t5)　　NOUN(t6)

with(t6)　　dogs(t7)

NP(t1)
(p=2.66)

NOUN(t2)　C　PREP(t4)　　NOUN(t6)

boy(t3)　　with(t5)

NP(t1)
(p=3.5)

NP(t2)　　D　　PP(t6)

DET(t3)　　NOUN(t5)　　PREP(t7)　　NOUN(t9)

a(t4)　　with(t8)

NOUN(t1)
(p=1.0)

E

boy(t2)

NOUN(t1)
(p=1.0)

F

dogs(t2)

$\equiv$ [EXC]

# FIG.15

FIG.16

**FIG.17**

**FIG.18**

FIG.19

FIG.20

ACR

NP(t1⊃n1)　　　NP(t1⊃n1)

(v=,　p=1,5)　　(v=,　p=3.5)

A

NP#(t4⊃n14)　NOUN#(t5⊃n5)　NOUN#(t9⊃n10)

D

NP(t1⊃n14)　NP(t1⊃n14)

(v=,　p=5.0)　(v=,　p=2.66)

B　　　　C

NOUN#(t6⊃n26)

NOUN(t1⊃n5)　　NOUN(t1⊃n10)　　NOUN(t1⊃n26)

(v=,　p=1.0)　　(v=,　p=1.0)　　(v=,　p=1.0)

E　　　　F　　　　F

# FIG.21

layerS [1, 3, 5, S] + [1. 3. 7, 9. S] + [1. 4, 7, 9, S])

**FIG.22**

NP(t1⊃n1)               NP(t1⊃n1)

(v=6.5                    (v=5.5

p=1.5)                    p=3.5)

DET(t2⊃n12)  NP#(t4⊃n14)   NP(t2⊃n2)               PP(t6⊃n7)

             (A)    DET(t3⊃n3)  NOUN#(t5⊃n5)  PREP(t7⊃n8)  NOUN#(t9⊃n10)

a(t3⊃n13)                    (D)

a(t4⊃n4)             with(t8⊃n9)

NP(t1⊃n14)                NP(t1⊃n14)

(v=5.0                 (v=3.66

p=5.0)                 p=2.66)

NOUN(t2⊃n15)   PP(t4⊃n17)    NOUN(t2⊃n22)  PREP(t4⊃n24)  NOUN#(t6⊃n26)

                                       (C)

        (B)  PREP(t5⊃n18)  NOUN(t6⊃n20)  boy(t3⊃n23)  with(t5⊃n25)

boy(t3⊃n16)   with(t6⊃n19)  dogs(t7⊃n21)

NOUN(t1⊃n5)      NOUN(t1⊃n10)      NOUN(t1⊃n26)

(v=1.0          (v=1.0          (v=1.0

p=1.0)         p=1.0)        p=1.0)

      (E)          (F)         (F)

boy(t2⊃n6)    dogs(t2⊃n11)    dogs(t2⊃n27)

# FIG.23

NP(t1⊃n1)
(v=6. 5
p=1. 5)

DET(t2⊃n12)          NP(t1⊃n14)
                     (v=5. 0
(A)                  p=5. 0)

a(t3⊃n13)

NOUN(t2⊃n15)          PP(t4⊃n17)

(B)          PREP(t5⊃n18)    NOUN(t6⊃n20)

boy(t3⊃n16)   with(t6⊃n19)   dogs(t7⊃n21)

(a)

NP(t1⊃n1)
(v=5. 5
p=3. 5)

NP(t2⊃n2)                    PP(t6⊃n7)

DET(t3⊃n3)   NOUN(t1⊃n5)   PREP(t7⊃n8)   NOUN(t1⊃n10)
             (v=1. 0                     (v=1. 0
a(t4⊃n4)     p=1. 0)                     p=1. 0)

                          with(t8⊃n9)
             (E)
                                         dogs(t2⊃n11)
boy(t2⊃n6)

(b)

NP(t1⊃n1)
(v=5. 16
p=1. 5)

DET(t2⊃n12)          NP(t1⊃n14)
                     (v=3. 66
                     p=2. 66)
a(t3⊃n13)

NOUN(t2⊃n22)   PREP(t4⊃n24)   NOUN(t1⊃n26)
                   (C)        (v=1. 0
                              p=1. 0)
boy(t3⊃n23)   with(t5⊃n25)

                              dogs(t2⊃n27)

# FIG.24

(c)

NP(n14) ▪ ▪ ▪ ▪ ▪ ▪ ▪ NP(n14)

NOUN(n22)    PREP(n24)    NOUN#(n26)          NOUN    PP          ➤ locally yes

|           | (C)                              PREP    NOUN
boy(n23)    with(n25)
                                               with

(1)

NP(n14) ▪ ▪ ▪ ▪ ▪ ▪ ▪ NP(n14)

NOUN(n15)        PP(n17)                    NOUN    PP          ➤ locally no

|          (B)   PREP(n18)    NOUN(n20)      PREP    NOUN
boy(n16)        |            |
                with(n19)    dogs(n21)       with

(2)

NP(n1) ▪ ▪ ▪ ▪ NP                    non local +    NP(n14)

DET(n12)  NP#(n14)    DET    NP                      NOUN    PP
|                     |                              
a(n13)   (A)          a     NOUN    PP                PREP    NOUN
                                                      |
                            PREP    NOUN              with
                            |
                            with

(3)

# FIG.25

(1)

(2)

# FIG.26

FIG.27

NP(t1⊃n1)                                                    NP(t1⊃n1)
(v=5. 5                                                       (v=5. 16
p=3. 5)                                                       p=1. 5)

NP(t2⊃n2)                    PP(t6⊃n7)              DET(t2⊃n12)    NP#(t4⊃n14)

DET(t3⊃n3)   NOUN#(t5⊃n5)   PREP(t7⊃n8)   NOUN#(t9⊃n10)        a(t3⊃n13)   (A)

(D)

a(t4⊃n4)                   with(t8⊃n9)

NP(t1⊃n14)
(v=3. 66
p=2. 66)

NOUN(t2⊃n22)  PREP(t4⊃n24)  NOUN#(t6⊃n26)

boy(t3⊃n23)   with(t5⊃n25)
(C)

NOUN(t1⊃n5)        NOUN(t1⊃n10)        NOUN(t1⊃n26)
(v=1. 0            (v=1. 0            (v=1. 0
p=1. 0)            p=1. 0)            p=1. 0)
(E)               (F)                (F)

boy(t2⊃n6)        dogs(t2⊃n11)        dogs(t2⊃n27)

# FIG.28

NP (n1)

NP (n2) ━ ━ ━ ━ NP (n2)          PP (n7)

DET (n3)    NOUN# (n5)   DET   NOUN      PREP (n8)    NOUN# (n10)

a (n4)        (D)         a     boy       with (n9)

(1)

non local + $\begin{bmatrix} \text{NOUN (n5)} \\ | \\ \text{boy (n6)} \end{bmatrix}$

NOUN (n5) ━ ━ NOUN (n5)          locally no
    | (E)            |
boy (n6)           boy

(2)

# FIG.29

NP(t1⊃n1)          NP(t1⊃n1)
(v=6.5            (v=5.5
p=1.5)            p=3.5)

DET(t2⊃n12)  NP#(t4⊃n14)   NP(t2⊃n2)              PP(t6⊃n7)

a(t3⊃n13)    (A)      DET(t3⊃n3)  NOUN#(t5⊃n5)  PREP(t7⊃n8)  NOUN#(t9⊃n10)

a(t4⊃n4)              (D)              with(t8⊃n9)

NP(t1⊃n14)          NP(t1⊃n14)
(v=5.0            (v=3.66
p=5.0)            p=2.66)

NOUN(t2⊃n15)  PP(t4⊃n17)    NOUN(t2⊃n22)  PREP(t4⊃n24)  NOUN#(t6⊃n26)

(B)    PREP(t5⊃n18)  NOUN(t6⊃n20)  boy(t3⊃n23)  with(t5⊃n25)  (C)

boy(t3⊃n16)  with(t6⊃n19)  dogs(t7⊃n21)

NOUN(t1⊃n5)        NOUN(t1⊃n10)        NOUN(t1⊃n26)
(v=0)             (v=1.0            (v=1.0
                  p=1.0)            p=1.0)
                       (F)               (F)
                  dogs(t2⊃n11)       dogs(t2⊃n27)

# FIG.30

NP(t1⊃n1)
(v=6. 5
p=1. 5)

DET(t2⊃n12)    NP#(t4⊃n14)

a(t3⊃n13)    (A)

NP(t1⊃n14)
(v=5. 0
p=5. 0)

NOUN(t2⊃n15)   (B)   PP(t4⊃n17)

PREP(t5⊃n18)  NOUN(t6⊃n20)

boy(t3⊃n16)   with(t6⊃n19)  dogs(t7⊃n21)

NP(t1⊃n14)
(v=3. 66
p=2. 66)

NOUN(t2⊃n22)  PREP(t4⊃n24)   NOUN#(t6⊃n26)

boy(t3⊃n23)   with(t5⊃n25)   (C)

NOUN(t1⊃n26)
(v=1. 0
p=1. 0)   (F)

dogs(t2⊃n27)

# FIG.31

NP(t1⊃n1)
(v=6. 5
p=1. 5)

DET(t2⊃n12)  NP#(t4⊃n14)

a(t3⊃n13)  (A)

NOUN(t2⊃n22)  PREP(t4⊃n24)  NOUN#(t6⊃n26)

boy(t3⊃n23)  with(t5⊃n25)

NP(t1⊃n14)
(v=3. 66
p=2. 66)

(C)

NOUN(t1⊃n26)
(v=1. 0
p=1. 0)  (F)

dogs(t2⊃n27)

# FIG.32

**FIG.33**

(example sentence tree)     (input sentence)

E.temporal exclusive tree generation module

P.coincidence matrix generation unit

N.adjoining coincident word detection element

S.common word sequence detection unit

(example sentence trees with designation of common word sequence)

D.dominating node detection unit(newly introduced)

T.composition unit of temporal exclusive tree

M   composition unit of temporal exclusive tree with allowance of part of speech coincidence

(temporal exclusive trees)

V.tree value generation unit for exclusive tree(virtually newly introduced)

temporal exclusive tree generation part

(OR trees generated at the grammar application part)     (temporal exclusive trees with tree value)     (exclusive trees stored in the apparatus)

U.upper covering module=upper covering part

(array of allele exclusive tree groups)

G.parsed tree generation module

K.maximum value tree generation unit

W.generation module of parsed tree not including forbidden tree

X.unit for detecting non-inclusion of extra-regional forbidden tree in exclusive tree

Y.element for detecting non-inclusion of forbidden tree in exclusive tree

A.composing node acquisition element

K.maximum value tree generation unit

C.maximum value tree construction unit

parsed tree generation part

(output parsed tree of input sentence)

# FIG.34

P1 | row number I and column number J are given. Start command is given

P2 | values are set as p0,j = 0 (j=0 -- J) and pi,0 =0(i=0--I)

P3 | Value is set as i=1

P4 ⟨ i = I + 1 ⟩ — yes → P10 | operation is completed with output of coincidence matrix

no

P5 | Value is set as j=1

P6 ⟨ j = J + 1 ⟩ — yes

no

P7

$$pi,j = \begin{cases} pi\text{-}1,j\text{-}1 + 1 & \text{if } ai = bj \\ \max\{ pi\text{-}1,j , pi,j\text{-}1 \} & \text{if } ai \neq bj \end{cases}$$

P8 | j = j + 1

P9 | i = i + 1

# FIG.35

(a)

(row number i, column number j : value of pij)

(b-1)

(row number i, column number j )

(b-2)

(1.1:1),(1,4:1),(2,3:2),(3,2:2),(3,5:3),(4,1:1),(4,4:3),(5,2:2),(5,5:4)

(c)

```
(2, 3:2)          (3, 2:2)          (3, 5:3)              (4, 4:3)
   |                 |                 |            ┌─────────┴─────────┐
(1. 1:1)          (1. 1:1)          (2, 3:2)     (2, 3:2)          (3, 2:2)

 (d-1)             (d-2)             (d-3)                (d-4)
```

```
        (5, 2:2)                    (5, 5:4)                    S
  ┌────────┴────────┐                 |             ┌─────────┴─────────┐
(1. 1:1)        (4, 1:1)           (4, 4:3)       (3, 5:3)          (5, 5:4)

      (d-5)                         (d-6)                (d-7)
```

(2, 3:2), (1. 1:1)
(3, 2:2), (1. 1:1)
(3, 5:3), (2, 3:2)
(4, 4:3), (2, 3:2), (3, 2:2)
(5, 2:2), (1. 1:1). (4, 1:1)
(5, 5:4), (4, 4:3)
S,      (3, 5:3), (5, 5:4)

(e)

**FIG.36**

170

N1

start

N2

All coincidence elements are obtained by scanning coincidence matrix and coincidence elements thus obtained are stored in coincidence element register M.

N3

register M is empty

yes

no

N4

An element (i, j : pij) is taken out from register M. Generally plural number of elements which have p value less than 1 compared with the value of the taken out element and which are situated at the position (n, m ; where n<i and m<j) are obtained, by scanning over the rectangle with corners (1, 1) and (i, j) and are stored at the position (n,m) of the 2 dimensional matrix A.

N5

All elements which have pij value bigger than or equal to design length L and which exist only at the leftmost column of the 2 dimensional matrix A, are obtained and are stored at the last row of matrix A following the element S.

N6

end

# FIG.37

(2,3)     (3,2)     (3,5)

(1.1)     (1.1)     (2,3)

(a-1)     (a-2)     (a-3)

(4,4)

(2,3)     (3,2)

(a-4)

(2,3),(1.1)
(3,2),(1.1)
(3,5),(2,3)
(4,4),(2,3),(3,2)
(5,2),(1.1).(4,1)
(5,5),(4,4)
S,   (3,5),(5,5)

(5,2)

(1.1)     (4,1)

(a-5)

(5,5)

(4,4)

(a-6)

S

(3,5)     (5,5)

(a-7)

(b)

S

(3, 5)     (5, 5)

(3, 5)     (5, 5)

(2, 3)     (4, 4)

(2, 3)     (4, 4)

(1, 1)     (2, 3)     (3, 2)

(2, 3)     (3, 2)

(1, 1)     (1, 1)

(c-1)

S

(3, 5)     (5, 5)

(2, 3)     (4, 4)

(1, 1)     (2, 3)     (3, 2)

(1, 1)     (1, 1)

(c-2)

[(1,1),(2,3),(3,5),S]  [(1,1),(2,3),(4,4),(5,5),S] [(1,1),(3,2),(4,4),(5,5),S]

(d-1)

[1,2,3,S] [1,2,4,5,S] [1,3,4,5,S]

(d-2)

[1,3,5,S] [1,3,4,5,S] [1,2,4,5,S]

(d-3)

# FIG.38

**S1**     <S.common word sequence detection unit>

Current coordinate node called self coordinate node and upper coordinate node calling the current node named as self node are given from upper coordinate node.

**S2**   some child node exists in the parent child relation    no

yes

**S3**   some entity already exists in path value register of the layer treating current or self node    yes

no

**S11**

The content of path register comprised only of current or self node is composed.
In case any data exists in the path register, no action is taken.

**S4**

Child nodes are derived from parent child relation having the current or self node as its parent node and stored in child node array.

**S5**   child node array is empty    yes

no

**S12**

The current or self layer outputs the content of its path register P to the upper S. common word sequence detection unit. If current or self layer is topmost S layer, plural number of paths stored in the path register P are output to the common word sequence register CWR controlled by the D.dominating node detection unit situated downstream of this S.common word sequence detection unit and the operation of the S. common word sequence detection unit is terminated.

**S6**

foremost element is taken out from child node array

**S7**

The coordinate node represented by the foremost element is given as the current or self coordinate node and the present current or self node is given as the upper coordinate node, to the S.common word sequence detection unit situated lower

The operation of S.common word sequence detection unit situated lower.

**S8**

The output of lower S.common word sequence detection unit being comprised of the content of path value register P, is received by the current or self layer and is stored in its temporal register T.

**S9**

At the end of every unit path constituting the content of the temporal register T, the coordinate node of current or self layer are added comprising new content of temporal register T.

**S10**

The content of the temporal register T is added after the data stored in the path register P making new content of the path register P.

# FIG.39

"self coordinate+operation name"

"A+self coordinate"[upper coordinate],  "S+self coordinate"[self coordinate], "C+self coordinate"[child node array]

"P+self coordinate"[path array], T[temporal path array]

(a)

(1.1)->1  (4,1)->6
(1,4)->2  (4,4)->7
(2,3)->3  (5,2)->8
(3,2)->4  (5,5)->9
(3,5)->5  S ->S

(b)

(c-1)  (c-2)  (c-3)  (c-4)

(c-5)  (c-6)  (c-7)

(d)

[1, 3, 5, S] [1, 3, 7, 9, S] [1, 4, 7, 9, S]

(e)

# FIG.40

SS1
AS□, SS[S], CS□
PS□, T□
(1)

SS2 "yes"
AS□, SS[S], CS□
PS□, T□
(2)

SS3 "no"
AS□, SS[S], CS□
PS□, T□
(3)

SS4
AS□, SS[S], CS[5, 9]
PS□, T□
(4)

SS5 "no"
AS□, SS[S], CS[5, 9]
PS□, T□
(5)

SS6 "5"
AS□, SS[S], CS[9]
PS□, T□
(6)

SS7 "5-->layer 5"
AS□, SS[S], CS[9]
PS□, T□
(7)

5S1
A5[S], S5[5], C5□
P5□, T□
(8)

5S2 "yes"
A5[S], S5[5], C5□
P5□, T□
(9)

5S3 "no"
A5[S], S5[5], C5□
P5□, T□
(10)

5S4
A5[S], S5[5], C5[3]
P5□, T□
(11)

5S5 "no"
A5[S], S5[5], C5[3]
P5□, T□
(12)

5S6 "3"
A5[S], S5[5], C5□
P5□, T□
(13)

5S7 "3-->layer 3"
A5[S], S5[5], C5□
P5□, T□
(14)

3S1
A3[5], S3[3], C3□
P3□, T□
(15)

3S2 "yes"
A3[5], S3[3], C3□
P3□, T□
(16)

3S3
A3[5], S3[3], C3[1]
P3□, T□
(17)

3S4
A3[5], S3[3], C3[1]
P3□, T□
(18)

3S5 "no"
A3[5], S3[3], C3[1]
P3□, T□
(19)

3S6 "1"
A3[5], S3[3], C3□
P3□, T□
(20)

3S7 "1-->layer 1"
A3[5], S3[3], C3□
P3□, T□
(21)

1S1
A1[3], S1[1], C1□
P1□, 1T□
(22)

1S2 "no"
A1[3], S1[1], C1□
P1□, T□
(23)

1S11
A1[3], S1[1], C1□
P1[(1)], T[(1)]
(24)

1S12 "(1)-->layer 3"
A1[3], S1[1], C1□
P1[(1)], T[(1)]
(25)

3S8
A3[5], S3[3], C3□
P3□, T[(1)]
(26)

3S9
A3[5], S3[3], C3□
P3□, T[(1, 3)]
(27)

3S10
A3[5], S3[3], C3□
P3[(1, 3)], T□
(28)

3S5 "yes"
A3[5], S3[3], C3□
P3[(1, 3)], T□
(29)

3S12 "(1, 3)-->layer 5"
A3[5], S3[3], C3□
P3[(1, 3)], T□
(30)

# FIG.41

175

5S8
A5[S], S5[5], C5[]
P5[], T[(1, 3)]
(31)

5S9
A5[S], S5[5], C5[]
P5[], T[(1, 3, 5)]
(32)

5S10
A5[S], S5[5], C5[]
P5[(1, 3, 5)], T[]
(33)

5S5 "yes"
A5[S], S5[5], C5[]
P5[(1, 3, 5)], T[]
(34)

5S12 "(1, 3, 5)-->layer S"
A5[S], S5[5], C5[]
P5[(1, 3, 5)], T[]
(35)

SS8
AS[], SS[S], CS[9]
PS[], T[(1, 3, 5)]
(36)

SS9
AS[], SS[S], CS[9]
PS[], T[(1, 3, 5, S)]
(37)

SS10
AS[], SS[S], CS[9]
PS[(1, 3, 5, S)], T[]
(38)

SS5 "no"
AS[], SS[S], CS[9]
PS[(1, 3, 5, S)], T[]
(39)

SS6 "9"
AS[], SS[S], CS[]
PS[(1, 3, 5, S)], T[]
(40)

SS7 "9-->layer 9"
AS[], SS[S], CS[]
PS[(1, 3, 5, S)], T[]
(41)

9S1
A9[S], S9[9], C9[7]
P9[], T[]
(42)

9S2 "yes"
A9[S], S9[9], C9[7]
P9[], T[]
(43)

9S3 "no"
A9[S], S9[9], C9[]
P9[], T[]
(44)

9S4
A9[S], S9[9], C9[7]
P9[], T[]
(45)

9S5 "no"
A9[S], S9[9], C9[7]
P9[], T[]
(46)

9S6 "7"
A9[S], S9[9], C9[]
P9[], T[]
(47)

9S7 "7-->layer 7"
A9[S], S9[9], C9[]
P9[], T[]
(48)

7S1
A7[9], S7[7], C7[]
P7[], T[]
(49)

7S2 "yes"
A7[9], S7[7], C7[]
P7[], T[]
(50)

7S3
A7[9], S7[7], C7[]
P7[], T[]
(51)

7S4
A7[9], S7[7], C7[3, 4]
P7[], T[]
(52)

7S5 "no"
A7[9], S7[7], C7[3, 4]
P7[], T[]
(53)

7S6 "3"
A7[9], S7[7], C7[4]
P7[], T[]
(54)

7S7 "3-->layer 3"
A7[9], S7[7], C7[4]
P7[], T[]
(55)

3S1
A3[7], S3[3], C3[]
P3[(1, 3)], T[]
(56)

3S2 "yes"
A3[7], S3[3], C3[]
P3[(1, 3)], T[]
(57)

# FIG.42

3S3  "yes"
A3[7], S3[3], C3□
P3[(1, 3)], T□

(58)

3S12  "(1, 3)-->layer 7"
A3[7], S3[3], C3□
P3[(1, 3)], T□

(59)

7S8
A7[9], S7[7], C7□
7P7□, T[(1, 3)]

(60)

7S9
A7[9], S7[7], C7□
P7□, T[(1, 3, 7)]

(61)

7S10
A7[9], S7[7], C7□
P7[(1, 3, 7)], T□

(62)

7S5  "no"
A7[9], S7[7], C7[4]
P7[(1, 3, 7)], T□

(63)

7S6  "4"
A7[9], S7[7], C7□
P7[(1, 3, 7)], 7T□

(64)

7S7  "4-->layer 4"
A7[9], S7[7], C7□
P7[(1, 3, 7)], T□

(65)

4S1
A4[7], S4[4], C4□
P4□, T□

(66)

4S2  "yes"
A4[7], S4[4], C4□
P4□, T□

(67)

4S3  "no"
A4[7], S4[4], C4□
P4□, T□

(68)

4S4
A4[7], S4[4], C4[1]
P4□, T□

(69)

4S5  "no"
A4[7], S4[4], C4[1]
P4□, T□

(70)

4S6  "1"
A4[7], S4[4], C4□
P4□, T□

(71)

4S7  "1-->layer 1"
A4[7], S4[4], C4□
P4□, T□

(72)

1S1
A1[4], S1[1], C1□
P1[(1)], T□

(73)

1S2  "no"
A1[4], S1[1], C1□
P1[(1)], T□

(74)

1S11
A1[4], S1[1], C1□
P1[(1)], T□

(75)

1S12  "(1)-->layer 4"
A1[4], S1[1], C1□
P1[(1)], T□

(76)

4S8
A4[7], S4[4], C4□
P4□, T[(1)]

(77)

4S9
A4[7], S4[4], C4□
P4□, T[(1, 4)]

(78)

4S10
A4[7], S4[4], C4□
P4[(1, 4)], T□

(79)

4S5  "yes"
A4[7], S4[4], C4□
P4[(1, 4)], T□

(80)

4S12  "(1, 4)-->layer 7"
A4[7], S4[4], C4□
P4[(1, 4)], T□

(81)

7S8
A7[4], S7[7], C7□
P7[(1, 3, 7)], T[(1, 4)]

(82)

7S9
A7[9], S7[7], C7□
P7[(1, 3, 7)], T[(1, 4, 7)]

(83)

7S10
A7[9], S7[7], C7□
P7[(1, 3, 7)(1,4,7)], T□

(84)

# FIG.43

177

7S5  "yes"
A7[9], S7[7], C7□
P7[(1, 3, 7)(1, 4, 7)], T□
(85)

7S12  "(1, 3, 7)(1, 4, 7)-->layer 9"
A7[9], S7[7], C7□
P7[(1, 3, 7)(1, 4, 7)], T□
(86)

9S8
A9[0], S9[9], C9□
P9□, T[(1, 3, 7)(1, 4, 7)]
(87)

9S9
A9[S], S9[9], C9□
P9□, T[(1, 3, 7, 9)(1, 4, 7, 9)]
(88)

9S10
A9[S], S9[9], C9□
P9[(1, 3, 7, 9)(1, 4, 7, 9)], 9T□
(89)

9S5  "yes"
A9[S], S9[9], C9□
P9[(1, 3, 7, 9)(1, 4, 7, 9)], T□
(90)

9S12  "(1, 3, 7, 9)(1, 4, 7, 9)-->layer S"
A[S], S[9], C□
P9[(1, 3, 7, 9)(1, 4, 7, 9)], T□
(91)

SS8
AS[_], SS[S], CS□
PS[(1, 3, 5, S)], T[(1, 3, 7, 9)(1, 4, 7, 9)]
(92)

SS9
AS[_], SS[S], CS□
PS[(1, 3, 5, S)], T[(1, 3, 7, 9, S)(1, 4, 7, 9, S)]
(93)

SS10
AS[_], SS[S], CS□
PS[(1, 3, 5, S)(1, 3, 7, 9, S)(1, 4, 7, 9, S)], T□
(94)

SS5  "yes"
AS[_], SS[S], CS□
PS[(1, 3, 5, S)(1, 3, 7, 9, S)(1, 4, 7, 9, S)], T□
(95)

SS12  "(1, 3, 5, S)(1, 3, 7, 9, S)(1, 4, 7, 9, S)--> layer outside of program"
AS[_], SS[S], CS□
PS[(1, 3, 5, S)(1, 3, 7, 9, S)(1, 4, 7, 9, S)], T□
(96)

# FIG.44

word sequence
consisting example
sentence

bj

| | | 1 | 2 | 3 | 4 | 5 | 6 | 7 |
|---|---|---|---|---|---|---|---|---|
| | 0 | I | saw | a | big | man | with | boots |

word sequence
consisting
input sentence

ai

| | | 1 | 2 | 3 | 4 | 5 | 6 | 7 |
|---|---|---|---|---|---|---|---|---|
| 1 | a | 0 | 0 | ①→ | 1 | 1 | 1 | 1 |
| 2 | boy | 0 | 0 | 1 | 1 | 1 | 1 | 1 |
| 3 | with | 0 | 0 | 1 | 1 | 1 | ②→ | 2 |
| 4 | dogs | 0 | 0 | 1 | 1 | 1 | 2 | 2 Ⓢ |

(a)

$$(3,6:2) \quad S \quad \Rightarrow \quad (3,6) \quad S \quad \Rightarrow \quad 2 \quad S$$
$$(1.3:1) \quad (3.6:2) \qquad (1.3) \quad (3.6) \qquad 1 \quad 2$$

(b)

[1, 2, S]

(c-1)

[(1, 3), (3, 6), S]

(c-2)

[1, 3, S]      [3, 6, S]

(c-3)      (c-4)

# FIG.45

SS1
AS[], SS[S], CS[]
PS[], T[]

(1)

SS2 "yes"
AS[], SS[S], CS[]
PS[], T[]

(2)

SS3 "no"
AS[], SS[S], CS[]
PS[], T[]

(3)

SS4
AS[], SS[S], CS[2]
PS[], T[]

(4)

SS5 "no"
AS[], SS[S], CS[2]
PS[], T[]

(5)

SS6 "2"
AS[], SS[S], CS[]
PS[], T[]

(6)

SS7 "2-->layer 2"
AS[], SS[S], CS[]
PS[], T[]

(7)

2S1
A2[S], S2[2], C2[]
P2[], T[]

(8)

2S2 "yes"
A2[S], S2[2], C2[]
P2[], T[]

(9)

2S3 "no"
A2[S], S2[2], CS[]
P2[], T[]

(10)

2S4
A2[S], S2[2], C2[1]
P2[], T[]

(11)

2S5 "no"
A2[], S2[S], C2[1]
P2[], T[]

(12)

2S6 "1"
A2[S], S2[2], CS[]
P2[], T[]

(13)

2S7 "1-->layer 1"
A2[2], S2[2], C2[]
P2[], T[]

(14)

1S1
A1[2], S1[1], C1[]
P1[], T[]

(15)

1S2 "no"
A1[2], S1[1], C1[]
P1[], T[]

(16)

1S11
A1[2], S1[1], C1[]
P1[(1)], T[]

(17)

1S12 "(1)-->layer 2"
A1[2], S1[1], C1[]
P1[(1)], T[]

(18)

2S8
A2[S], S2[2], C2[]
P2[], T[(1)]

(19)

2S9
A2[S], S2[2], C2[]
P2[], T[(1, 2)]

(20)

2S10
A2[S], S2[2], C2[]
P2[(1, 2)], T[]

(21)

2S5 "yes"
A2[S], S2[2], C2[]
P2[(1, 2)], T[]

(22)

2S12 "(1, 2)-->layer S"
A2[S], S2[2], C2[]
P2(1, 2)], T[]

(23)

SS8
AS[], SS[S], CS[]
PS[], T[(1, 2)]

(24)

SS9
AS[], SS[S], CS[]
PS[], T[(1, 2, S)]

(25)

SS10
AS[], SS[S], CS[]
PS[[(1, 2, S)], T[]

(26)

SS5 "yes"
AS[], SS[S], CS[]
PS[[(1, 2, S)], T[]

(27)

SS12 "(1, 2, S)-->layer outside of program"
AS[], SS[S], CS[]
PS[(1, 2, S)], T[]

(28)

# FIG.46

example sentence
CL (n1)

NP (n2)        VP (n5)

PRN(n3)  VT (n6)        NP (n8)

NP (n9)              PP (n17)

DET (n10)   NOUN(n12)    PREP (n18)   NOUN(n20)

ADJ(n13)  NOUN(n15)

I(n4)   saw(n7)  *a (n11)  big(n14)  man(n16)  *with (n19)  boots(n21)

(a)

example sentence
CL (n1)

NP (n2)        VP (n5)

PRN(n3)  VT (n6)        *NP (n8) = dominating node

*NP (n9)              *PP (n17)

*DET (n10)   #NOUN(n12)    *PREP (n18)   #NOUN(n20)

ADJ(n13)  NOUN(n15)

I(n4)   saw(n7)  *a (n11)  big(n14)  man(n16)  *with (n19)  boots(n21)

(b)

*NP (n8) dominating node

*NP (n9)              *PP (n17)

*DET (n10)   #NOUN(n12)    *PREP (n18)   #NOUN(n20)

*a (n11)                *with (n19)

(c)

# FIG.47

**D1**

1st stage of D.dominating node detection unit starts with input of example tree and its coincidence nodes

**D2**

Sentence tree and coincidence word number are completely recorded. Left(right) end attribute is affixed to the word number of leftmost(rightmost) node. Rightmost flag is set to polarity down.

**D3**

M row N column matrix called dominating node matrix is prepared. Detecting cursor is placed on coincident word with left end attribute and writing cursor is placed on the position (1, 1) of the dominating node matrix

**D4**

Node number of example tree on which detecting cursor exists is written on the position where writing cursor exists.

**D5** Detecting cursor exists on topmost node of example sentence tree. — yes

no

**D6**

Detecting cursor is moved one node upward in the example sentence tree and writing cursor is moved one element rightward.

**D7** Leftmost flag is up — yes

**D11** Leftmost flag is set to down

no

**D8**

Detecting cursor is moved to next coincident word situated to the right and writing cursor is moved to the 1st column of row lower by one row.

(End of 1st stage)

**D9** no — Detection cursor is on coincident word with right end attribute.

yes

**D10**

Rightmost flag is set to up.

**D12**

M row N column dominating node matrix having rows each of which is a path from a coincidence word to topmost node of example sentence tree, is transferred to 2nd stage. These paths are stored with left justification in the rows and path length in rows is different each other.

**D13**

Path data at each row is moved to the right in the position of right justification. As the column number of the matrix is N, the element belonging to path of length q and situated at column r is moved to column r+N-q.

**D14**

Investigation cursor is placed on column N which is rightmost row.

**D15** At the column of investigation cursor, node numbers of all rows are the same. — no

yes

**D16**

Investigation cursor is moved by one column to the left.

**D17**

Investigation cursor is moved by one column to the right. No action is taken when cursor is at the right end of matrix

**D18**

Example tree node number at the position of investigation cursor is output as dominating node.

# FIG.48

(D1), D2
coincident node =(11,19)

(1)

D3
detecting cursor=n11

|   | 1 | 2 | 3 | 4 | 5 | 6 |
|---|---|---|---|---|---|---|
| 1 | ○ |   |   |   |   |   |
| 2 |   |   |   |   |   |   |

(2)

D4,(D5)
detecting cursor=n11

|   | 1 | 2 | 3 | 4 | 5 | 6 |
|---|---|---|---|---|---|---|
| 1 | 11 |   |   |   |   |   |
| 2 |   |   |   |   |   |   |

(3)

D6
detecting cursor=n10

|   | 1 | 2 | 3 | 4 | 5 | 6 |
|---|---|---|---|---|---|---|
| 1 | 11 | ○ |   |   |   |   |
| 2 |   |   |   |   |   |   |

(4)

D4,(D5)
detecting cursor=n10

|   | 1 | 2 | 3 | 4 | 5 | 6 |
|---|---|---|---|---|---|---|
| 1 | 11 | 10 |   |   |   |   |
| 2 |   |   |   |   |   |   |

(5)

D6
detecting cursor=n9

|   | 1 | 2 | 3 | 4 | 5 | 6 |
|---|---|---|---|---|---|---|
| 1 | 11 | 10 | ○ |   |   |   |
| 2 |   |   |   |   |   |   |

(6)

D4,(D5)
detecting cursor=n9

|   | 1 | 2 | 3 | 4 | 5 | 6 |
|---|---|---|---|---|---|---|
| 1 | 11 | 10 | 9 |   |   |   |
| 2 |   |   |   |   |   |   |

(7)

D6
detecting cursor=n8

|   | 1 | 2 | 3 | 4 | 5 | 6 |
|---|---|---|---|---|---|---|
| 1 | 11 | 10 | 9 | ○ |   |   |
| 2 |   |   |   |   |   |   |

(8)

D4,(D5)
detecting cursor=n8

|   | 1 | 2 | 3 | 4 | 5 | 6 |
|---|---|---|---|---|---|---|
| 1 | 11 | 10 | 9 | 8 |   |   |
| 2 |   |   |   |   |   |   |

(9)

D6
detecting cursor=n5

|   | 1 | 2 | 3 | 4 | 5 | 6 |
|---|---|---|---|---|---|---|
| 1 | 11 | 10 | 9 | 8 | ○ |   |
| 2 |   |   |   |   |   |   |

(10)

D4,(D5)
detecting cursor=n5

|   | 1 | 2 | 3 | 4 | 5 | 6 |
|---|---|---|---|---|---|---|
| 1 | 11 | 10 | 9 | 8 | 5 |   |
| 2 |   |   |   |   |   |   |

(11)

D6
detecting cursor=n1

|   | 1 | 2 | 3 | 4 | 5 | 6 |
|---|---|---|---|---|---|---|
| 1 | 11 | 10 | 9 | 8 | 5 | ○ |
| 2 |   |   |   |   |   |   |

(12)
Leftmost poratity
is up

D4,(D5),(D7)
detecting cursor=n1

|   | 1 | 2 | 3 | 4 | 5 | 6 |
|---|---|---|---|---|---|---|
| 1 | 11 | 10 | 9 | 8 | 5 | 1 |
| 2 |   |   |   |   |   |   |

(13)

D8,(D9)
detecting cursor=n19

|   | 1 | 2 | 3 | 4 | 5 | 6 |
|---|---|---|---|---|---|---|
| 1 | 11 | 10 | 9 | 8 | 5 | 1 |
| 2 | ○ |   |   |   |   |   |

(14)

D10 (Leftmost flag is set to up)
detecting cursor=n19

|   | 1 | 2 | 3 | 4 | 5 | 6 |
|---|---|---|---|---|---|---|
| 1 | 11 | 10 | 9 | 8 | 5 | 1 |
| 2 | ○ |   |   |   |   |   |

(15)

# FIG.49

D4,(D5)
detecting cursor=n19

|   | 1 | 2 | 3 | 4 | 5 | 6 |
|---|---|---|---|---|---|---|
| 1 | 11 | 10 | 9 | 8 | 5 | 1 |
| 2 | 19 |   |   |   |   |   |

(16)

D6
detecting cursor=n18

|   | 1 | 2 | 3 | 4 | 5 | 6 |
|---|---|---|---|---|---|---|
| 1 | 11 | 10 | 9 | 8 | 5 | 1 |
| 2 | 19 | ○ |   |   |   |   |

(17)

D4,(D5)
detecting cursor=n18

|   | 1 | 2 | 3 | 4 | 5 | 6 |
|---|---|---|---|---|---|---|
| 1 | 11 | 10 | 9 | 8 | 5 | 1 |
| 2 | 19 | 18 |   |   |   |   |

(18)

D6
detecting cursor=n17

|   | 1 | 2 | 3 | 4 | 5 | 6 |
|---|---|---|---|---|---|---|
| 1 | 11 | 10 | 9 | 8 | 5 | 1 |
| 2 | 19 | 18 | ○ |   |   |   |

(19)

D4,(D5)
detecting cursor=n17

|   | 1 | 2 | 3 | 4 | 5 | 6 |
|---|---|---|---|---|---|---|
| 1 | 11 | 10 | 9 | 8 | 5 | 1 |
| 2 | 19 | 18 | 17 |   |   |   |

(20)

D6
detecting cursor=n8

|   | 1 | 2 | 3 | 4 | 5 | 6 |
|---|---|---|---|---|---|---|
| 1 | 11 | 10 | 9 | 8 | 5 | 1 |
| 2 | 19 | 18 | 17 | ○ |   |   |

(21)

D4,(D5)
detecting cursor=n8

|   | 1 | 2 | 3 | 4 | 5 | 6 |
|---|---|---|---|---|---|---|
| 1 | 11 | 10 | 9 | 8 | 5 | 1 |
| 2 | 19 | 18 | 17 | 8 |   |   |

(22)

D6
detecting cursor=n5

|   | 1 | 2 | 3 | 4 | 5 | 6 |
|---|---|---|---|---|---|---|
| 1 | 11 | 10 | 9 | 8 | 5 | 1 |
| 2 | 19 | 18 | 17 | 8 | ○ |   |

(23)

D4,(D5)
detecting cursor=n5

|   | 1 | 2 | 3 | 4 | 5 | 6 |
|---|---|---|---|---|---|---|
| 1 | 11 | 10 | 9 | 8 | 5 | 1 |
| 2 | 19 | 18 | 17 | 8 | 5 |   |

(24)

D6
detecting cursor=n1

|   | 1 | 2 | 3 | 4 | 5 | 6 |
|---|---|---|---|---|---|---|
| 1 | 11 | 10 | 9 | 8 | 5 | 1 |
| 2 | 19 | 18 | 17 | 8 | 5 | ○ |

(25)

D4,(D5),(D7=investigation of up
porarity at rightmost flag)
detecting cursor=n1

|   | 1 | 2 | 3 | 4 | 5 | 6 |
|---|---|---|---|---|---|---|
| 1 | 11 | 10 | 9 | 8 | 5 | 1 |
| 2 | 19 | 18 | 17 | 8 | 5 | 1 |

(26)

(D11=rightmost flag is
set to down)
detecting cursor=n1

|   | 1 | 2 | 3 | 4 | 5 | 6 |
|---|---|---|---|---|---|---|
| 1 | 11 | 10 | 9 | 8 | 5 | 1 |
| 2 | 19 | 18 | 17 | 8 | 5 | 1 |

(27)

(D11)=(D12), (D13)

(28)

# FIG.50

D12

| | 1 | 2 | 3 | 4 | 5 | 6 | 7 | 8 | 9 | 10 |
|---|---|---|---|---|---|---|---|---|---|----|
| 1 | 11 | 10 | 9 | 8 | 5 | 1 | | | | |
| 2 | 19 | 18 | 17 | 8 | 5 | 1 | | | | |

(1)

D13

| | 1 | 2 | 3 | 4 | 5 | 6 | 7 | 8 | 9 | 10 |
|---|---|---|---|---|---|---|---|---|---|----|
| 1 | | | | | 11 | 10 | 9 | 8 | 5 | 1 |
| 2 | | | | | 19 | 18 | 17 | 8 | 5 | 1 |

(2)

D14,(D15)

| | 1 | 2 | 3 | 4 | 5 | 6 | 7 | 8 | 9 | 10 |
|---|---|---|---|---|---|---|---|---|---|----|
| 1 | | | | | 11 | 10 | 9 | 8 | 5 | 1 |
| 2 | | | | | 19 | 18 | 17 | 8 | 5 | 1 |

investigation cursor

(3)

D16,(D15)

| | 1 | 2 | 3 | 4 | 5 | 6 | 7 | 8 | 9 | 10 |
|---|---|---|---|---|---|---|---|---|---|----|
| 1 | | | | | 11 | 10 | 9 | 8 | 5 | 1 |
| 2 | | | | | 19 | 18 | 17 | 8 | 5 | 1 |

investigation cursor

(4)

D16,(D15)

| | 1 | 2 | 3 | 4 | 5 | 6 | 7 | 8 | 9 | 10 |
|---|---|---|---|---|---|---|---|---|---|----|
| 1 | | | | | 11 | 10 | 9 | 8 | 5 | 1 |
| 2 | | | | | 19 | 18 | 17 | 8 | 5 | 1 |

investigation cursor

(5)

D16,(D15)

| | 1 | 2 | 3 | 4 | 5 | 6 | 7 | 8 | 9 | 10 |
|---|---|---|---|---|---|---|---|---|---|----|
| 1 | | | | | 11 | 10 | 9 | 8 | 5 | 1 |
| 2 | | | | | 19 | 18 | 17 | 8 | 5 | 1 |

investigation cursor

(6)

D17,(D18)

| | 1 | 2 | 3 | 4 | 5 | 6 | 7 | 8 | 9 | 10 |
|---|---|---|---|---|---|---|---|---|---|----|
| 1 | | | | | 11 | 10 | 9 | 8 | 5 | 1 |
| 2 | | | | | 19 | 18 | 17 | 8 | 5 | 1 |

investigation cursor

(7)

# FIG.51

**T1** operation start of composition unit of temporal exclusive tree

**T2** Registration of entire example tree with special emphasis on coincidence word number is made. Leftmost(rightmost) attribute is affixed to number of leftmost(rightmost) coincident word. Processing cursor is placed on leftmost coincident word. Rightmost flag is set to polarity down.

**T3** There exists only one coincident word. — yes

**T11** Mark * is affixed to node on which processing cursor exists.

**T12** Node on which processing cursor exists has plural number of child nodes. — no

**T13** Processing cursor is moved upward in example sentence tree to node directly above.

**T4** Mark * is affixed to node on which processing cursor exists. When the node is already affixed with mark #. mark # is replaced by mark *. When the node is already affixed with mark *, no action is taken. Child nodes under node of processing cursor are affixed with mark #'s.

**T5** Processing cursor is on dominating node or node affixed with mark *. — yes

**T9** Rightmost flag is up. — yes

**T14** Child nodes under node of processing cursor are affixed with mark #'s.

**T6** Processing cursor is moved upward in example sentence tree to node directly above.

**T10** Processing cursor is moved to next coincidence word situated to the right.

**T7** There exists rightmost attribute affixed to coincident word in coincident word register. — no

**T15** Entire node not marked with mark * or mark # are erased. Later, all marks affixed to nodes are eliminated.

**T8** Rightmost flag is set to up.

**FIG.52**

example sentence
CL (n1)

```
                    CL (n1)
              ┌───────┴────────┐
          NP (n2)            VP (n5)
             │          ┌──────┴──────────────┐
         PRN(n3)     VT (n6)          *NP (n8) dominating node
                                ┌───────────┴────────────┐
                            *NP (n9)                  *PP (n17)
                        ┌──────┴──────┐          ┌───────┴────────┐
                    *DET (n10)  #NOUN(n12)   *PREP (n18)    #NOUN(n20)
                                ┌────┴────┐
                            ADJ(n13)   NOUN(n15)

    I(n4)    saw(n7)  *a (n11)  big(n14)  man(n16)  *with(n19)  boots(n21)
```

```
                            CL (n1)
                             ╱▲╲
                            ╱   ╲
                           ╱_____╲
                              │
                   *NP (n8) dominating node
                  ┌───────────┴────────────┐
              *NP (n9)                  *PP (n17)
          ┌──────┴──────┐          ┌───────┴────────┐
   =   *DET (n10)  #NOUN(n12)   *PREP (n18)    #NOUN(n20)
   =              ┌────┴────┐
                 ADJ     NOUN
                  │        │
        *a (n11)  big     man   *with(n19)   boots
```

# FIG.53

(T1), T2, (T3), T4
CL(n1)

NP(n8) dominating node

NP(n9)                    PP(n17)

DET(n10)  NOUN(n12)    PREP(n18)  NOUN(n20)

C          ADJ    NOUN

*a(n11)    big    man    with(n19)    boots

(1)

(T5), T6, T4
CL(n1)

NP(n8) dominating node

C    NP(n9)                    PP(n17)

*DET(n10)  NOUN(n12)    PREP(n18)  NOUN(n20)

ADJ    NOUN

*a(n11)    big    man    with(n19)    boots

(2)

(T5), T6, T4
CL(n1)

C    NP(n8) dominating node

*NP(n9)                    PP(n17)

*DET(n10)  #NOUN(n12)    PREP(n18)  NOUN(n20)

ADJ    NOUN

*a(n11)    big    man    with(n19)    boots

(3)

(T5), T6, T4
CL(n1)

C    *NP(n8) dominating node

*NP(n9)                    #PP(n17)

*DET(n10)  #NOUN(n12)    PREP(n18)  #NOUN(n20)

ADJ    NOUN

*a(n11)    big    man    with(n19)    boots

(4)

(T5), (T9), T10, (T7), (T8), T4
CL(n1)

*NP(n8) dominating node

*NP(n9)                    #PP(n17)

*DET(n10)  #NOUN(n12)    PREP(n18)  NOUN(n20)

ADJ    NOUN                    C

*a(n11)    big    man    *with(n19)    boots

(5)

(T5), T6, T4
CL(n1)

*NP(n8) dominating node

*NP(n9)              C    #PP(n17)

*DET(n10)  #NOUN(n12)    *PREP(n18)  NOUN(n20)

ADJ    NOUN

*a(n11)    big    man    *with(n19)    boots

(6)

# FIG.54

(T5), T6, T4

CL(n1)

*NP(n8) dominating node C

*NP(n9)  *PP(n17)

*DET(n10) #NOUN(n12) *PREP(n18) #NOUN(n20)

ADJ  NOUN

*a(n11) big man *with(n19) boots

(7)

(T5), T6, T4

CL(n1)

C

*NP(n8) dominating node

*NP(n9)  *PP(n17)

*DET(n10) #NOUN(n12) *PREP(n18) #NOUN(n20)

ADJ  NOUN

*a(n11) big man *with(n19) boots

(8)

(T5), (T9)

CL(n1)

*NP(n8) dominating node

*NP(n9)  *PP(n17)

*DET(n10) #NOUN(n12) *PREP(n18) #NOUN(n20)

ADJ  NOUN

*a(n11) big man *with(n19) boots

(9)

(T5), (T9), T10, (T7), (T8), T4
T15

*NP(n8) dominating node

*NP(n9)  *PP(n17)

*DET(n10) #NOUN(n12) *PREP(n18) #NOUN(n20)

*a(n11) *with(n19)

(10)

# FIG.55

(1)

(T1), T2, (T3), T11

(2)

(T12), T13, T11

(3)

(T12), T13, T11

(4)

(T12), T14

(5)

T15

(6)

example sentence

(7)

(8)

# FIG.56

I:(PRN=0.7)
a:(DET=0.7)
the:(DET=0.7)
of:(PREP=0.7)
with:(PREP=0.7),(ADJ=0.5)
see:(VT=0.5),(VI=0.5)
saw:(VT=0.5),(VI=0.5)
seen:(VT=0.5),(VI=0.5)
big:(ADJ=0.5)

# FIG.57

example sentence I saw a big man with boots

input sentence a boy with dogs

temporary exclusive tree tree

(a)

I (PRN) saw (VT) +a (DET=0.7) big (ADJ) man (NOUN) +with (PREP=0.7) boots (NOUN)

a (DET)
dogs (NOUN)

boy (NOUN) with (PREP, ADJ)

(b)

I (PRN) saw (VT) +a=1 big (ADJ) man (NOUN) +with=1 boots (NOUN)

temporary exclusive tree

I (PRN) saw (VT) *+a=1 big (ADJ) man (NOUN) *+with=1 boots (NOUN)

a= 1 with= 1

(c)

# FIG.58

CL

NP　VP

PRN　VT　NP dominating node

NP　PP

DET　NOUN　PREP　NOUN

ADJ　NOUN

I(PRN)　saw(VT)　a(+DET=0.7)　big(ADJ)　man(NOUN)　with(+PREP=0.7)　boots(NOUN)

input sentence　the(DET)　boy(NOUN)　of(PREP, AUX)　dogs(NOUN)

CL

NP　VP

PRN　VT　NP dominating node

NP　PP

DET　NOUN　PREP　NOUN

ADJ　NOUN

I(PRN)　saw(VT)　the(+DET=0.7)　big(ADJ)　man(NOUN)　of(+PREP=0.7)　boots(NOUN)

(a)

CL

NP　VP

PRN　VT　NP dominating node

NP　PP　+　DET　+　PREP

+DET=0.7　NOUN　+PREP=0.7　NOUN　the=1　of=1

ADJ　NOUN

I(PRN)　saw(VT)　the=1　big(ADJ)　man(NOUN)　of=1　boots(NOUN)

CL

NP　VP

→ PRN　VT　*NP dominating node　+　DET　+　PREP

*NP　*PP　the=1　of=1

*+DET=0.7　#NOUN　*+PREP=0.7　#NOUN

ADJ　NOUN

I(PRN)　saw(VT)　the　big(ADJ)　man(NOUN)　of　boots(NOUN)

temporary exclusive tree

NP

→ NP　PP　+　DET　+　PREP

DET=0.7　NOUN　PREP=0.7　NOUN　the=1　of=1

(b)

# FIG.59

<composition unit of temporal exclusive tree with allowance of part of speech coincidence>

**M1**

operation start of composition unit of temporal tree

**M2**

(a)When mark + is attached to the left of a word as a result of word coincidence, part of speech name enclosed by parenthesis and situated to the right of the word is replaced by the letter sequence "=1". When mark + is attached to the left of part of speech name as a result of part of speech coincidence, part of speech name situated to the right of the word is elevated with its mark + overwriting former name and part of speech name is replaced by letter sequence "=1". Consequently exclusive tree including leaf nodes consisted only of word nodes and part of speech nodes with mark + is newly generated. Word node or part of speech node attached with mark + is called "+ attached node". (b)Registration of entire example tree with special emphasis on numbers of + attached nodes is made. Leftmost(rightmost) attribute is affixed to number of leftmost(rightmost) + attached node. Processing cursor is placed on leftmost + attached node. Rightmost flag is set to down.

**M3** There exists only one +node. — yes

no

**M11** Mark * is affixed to node on which processing cursor exists.

**M4** Mark * is affixed to node on which processing cursor exists. When the node is already affixed with mark #. mark # is replaced by mark *. When the node is already affixed with mark *, no action is taken. Child nodes under node of processing cursor are affixed with mark #'s.

**M12** Node on which processing cursor exists has plural number of child nodes. — no

yes

**M13** Processing cursor is moved upward in example sentence tree to node directly above.

**M5** Processing cursor is on dominating node or node affixed with mark *. — yes

no

**M9** Rightmost flag is up. — yes

no

**M6** Processing cursor is moved upward in example sentence tree to node directly above

**M10** Processing cursor is moved to next +node situated to the right.

**M14** Child nodes under node of processing cursor are affixed with mark #'s.

**M7** There exists rightmost attribute affixed to p-node in p-node register. — no

yes

**M8** Rightmost flag is set to up.

**M15** Entire node not marked with mark * or mark # are erased. Later, all marks affixed to nodes are eliminated.

# FIG.60

X=(y1)/n

Y1=y1    Y2 − − − − − − Yn

C1≡c1

(a)

X=(y1+y2)/n

Y1=y1    Y2=y2 − − − − − − Yn

C3≡c3    C1≡c1    C2≡c2

(b)

CL(n1)->0.58125

NP(n2)->0.5      VP(n6)->0.6625        TAST=11.31875

ADJ(n3)->1    N(5)    AugV(n7)->0.7    VP(n8)->0.625

such(n4)->1

VP(n9)->0.75      PP(n14)->0.5

BeV(n10)->1    VPX(n12)->0.5    PREP(n15)->1    NP(n17)

be(n11)->1    VPT(n13)->0.5    by(n16)->1

(c)

# FIG.61

$$X=(ca) \times 1 \times (y1)/n$$

```
        Y1(ca,y1)   Y2 ------ Yn

          Ca≡ca
            (a)
```

$$X=(cb+cc+cc) \times 2 \times (y1+y2)/n$$

```
     Y1(cb+cc,y1)   Y2(cd,y2)------Yn

       Cb≡cb  Cc≡cc    Cd≡cd
                (b)
```

```
        CL(n1)->4.2×2×0.58125=4.8825                PAST=23.1275

    NP(n2)->1×1×0.5=0.5        VP(n6)->3.2×2×0.6625=4.42

ADJ(n3)->1×1×1=1   N(n5)   AugV(n7)->0.7    VP(n8)->2.5×2×0.625=3.125

    such(n4)->1      VP(n9)->1.5×2×0.75=2.25         PP(n14)->1×1×0.5=0.5

        BeV(n10)->1×1×1=1  VPX(n12)->0.5×1×0.5=0.25  PREP(n15)->1×1×1=1  NP(n17)

          be(n11)->1    VPT(n13)->0.5          by(n16)->1
                          (c)
```

# FIG.62

$CL(1)->0.58125^2=0.3378515625$

$NP(2)->0.5^2=0.25$  $VP(6)->0.6625^2=0.43890625$

TAST=11.31875

T2ST=9.2198828125

$ADJ(3)->1^2=1$  N(5)  $AugV(7)->0.7^2=0.49$  $VP(8)->0.625^2=0.390625$

$such(4)->1^2=1$  $VP(9)->0.75^2=0.5625$  $PP(14)->0.5^2=0.25$

$BeV(10)->1^2=1$  $VPX(12)->0.5^2=0.25$  $PREP(15)->1^2=1$  NP(17)

$be(11)->1^2=1$  $VPT(13)->0.5^2=0.25$  $by(16)->1^2=1$

# FIG.63

NP(n1)->TA=0. 425, PA=1. 445, T2=0. 180625    TAST=3.975

PAST=4.89

NP(n2)->TA=0. 5, PA=0. 5, T2=0. 25    PP(n6)->TA=0. 35, PA=0. 245, T2=0. 1225  T2ST=3.043125

DET(n3)->TA=1, PA=1, T2=1    NOUN(n5)  PREP(n7)=0. 7->TA=0. 7, PA=0. 7, T2=0. 49    NOUN(n8)

a(n4) =1->TA=1, PA=1, T2=1

(a)

layer 1(Fig 70)
TA : tree-average node value=0.425
WGS : sum of coincidence value governed by dominating node=1.7    number of effective nodes
LAC : number of child nodes =2
LNC : number of effective child nodes=2
****************
TAS : sum of tree-average node value=
TAST : total sum of tree-average node value=3.975    $X=(c1+c2+c3) \times (y1+y2)/n \times 2$
PAS : sum of path-average node value=
total sum of path-average node valuePAST:=4.89
NP(n1)    T2S : sum of value of tree-average node value squared=
T2ST : total sum of tree-average node value squared=3.043125
NCS : sum of number of effective nodes
NCST : total sum of number of effective nodes=6
BCS : sum of number of ineffective nodes =
BCST : total sum of number of non-effective nodes=2

layer 2(Fig.38)
TA : tree-average node value=0.5
WGS : sum of coincidence value governed by dominating node=1.0
NP(n2)  LAC : number of child nodes =2
LNC : number of effective child nodes=1    PP(n6)
****************
TAS :  : sum of tree-average node value=2.5
PAS : sum of path-average node value=2.5
T2S:sum of value of tree-average node value squared=2.25
NCS : sum of number of effective nodes=3
BCS : sum of number of ineffective nodes=1

layer 6(Fig 65)
TA : tree-average node value=0.35
WGS : sum of coincidence value governed by dominating node=0.7
LAC : number of child nodes =2
LNC : number of effective child nodes=1
****************
TAS :  : sum of tree-average node value=1.05
PAS : sum of path-average node value=0.945
T2S : sum of value of tree-average node value squared=0.6125
NCS : sum of number of effective nodes=2
BCS:sum of number of ineffective nodes=1

layer 3(Fig.25)
TA : tree-average node value=1.0
WGS : sum of coincidence value governed by dominating node=1.0
DET(n3)  LAC : number of child nodes =1
LNC : number of effective child nodes=1    NOUN(5)  PREP(n7)=0. 7
****************
TAS :  : sum of tree-average node value=2.0
PAS : sum of path-average node value=2.0
T2S : sum of value of tree-average node value squared=2.0
NCS : sum of number of effective nodes=2
BCS : sum of number of ineffective nodes=0

layer 7(Fig 52)
TA : tree-average node value=0.7
WGS : sum of coincidence value governed by dominating node=0.7
LAC : number of child nodes =0
LNC : number of effective child nodes=0    NOUN(n8)
****************
TAS :  : sum of tree-average node value=0.7
PAS : sum of path-average node value=0.7
T2S : sum of value of tree-average node value squared=0.49
NCS : sum of number of effective nodes=1
BCS : sum of number of ineffective nodes=0

the(n4) =1. 0    layer 4(Fig.19)
TA : tree-average node value=1.0
WGS : sum of coincidence value governed by dominating node=1.0
LAC : number of child nodes=0
LNC : number of effective child nodes=0
****************
TAS : sum of tree-average node value=1.0
PAS : sum of path-average node value=1.0
T2S : sum of value of tree-average node value squared=1.0
NCS : sum of number of effective nodes=1
BCS : sum of number of non-effective nodes=0

(b)

# FIG.64

V1  V1 ： call from upper layer

Node number of upper layer and partial tree to be processed at current layer is given by upper layer. Topmost node of partial tree is stored in register S. Node number of upper layer is introduced in register U.

V2:survey on existence of structure

V2  Given partial tree consists of plural number of nodes.  no

V9:treatment of coincidence

yes

V3:decomposition into child trees
V3

V9  Coincidence value exists.  yes

no  V10:treatment of effective node
V11  V10

Child partial trees produced after removal of topmost node of input partial tree stored in register S are arranged into child partial tree array and are stored in register CR. Number of child partial trees is stored in register LAC. Register LNC is reset.

V11:treatment of ineffective node

Coincidence value is introduced to those values of TA, WGS, TAS and PAS. Square of TA is introduced to value of T2S. Value 1 is introduced to NCS value. Value 0 is introduced to BCS.

Setting of WGS=0, TA=0 is made.

V4:exhaust of child tree
V4

CR is empty.  yes

no

V8:addition of value of current layer
V8

V5:output of 1st tree
V5

1st partial tree in register CR is taken out. Lower layer treating topmost node of partial tree is called. The tree taken out and layer number of current layer stored in register S are sent to the lower layer.

GC value divided by LAC value is introduced to TA. TA value thus obtained is added to TAS value. The value obtained by TA successively multiplied by WGS value and LNSC value is added to PAS value. Square of TA value is added to T2S value. WGS value is kept unchanged. value 1 is added to NCS value. The amount (LAC-LNC) is added to BCS value.

operation at lower tree value generation unit for exclusive tree

V6:exclusion of ineffective node
V6

yes  WGS=0 and TA=0 at lower tree  no

V7:addition of tree value of partial tree
V7

V12:response to upper layer
V12

LNG count is counted up by one. TA output of lower tree value generation unit for exclusive tree is added to GC value. WGS output of lower unit is added to WGS value. TAS value of lower unit is added to TAS value. PAS value of lower unit is added to PAS value. T2S value of lower unit is added to T2S value. NCS value of lower unit is added to NCS value. BCS value of lower unit is added to BCS value.

Current layer outputs respective values of TA, TAS, WGS, PAS, T2S, NCS and BCS to upper layer whose layer number is stored in register U.

# FIG.65

```
                        NP (n1)
                ┌──────────┴──────────┐
            NP (n2)                  PP (n6)
          ┌────┴────┐            ┌─────┴──────┐
      DET (n3)  NOUN (n5)  PREP (n7) =0. 7   NOUN (n8)
         │
     a (n4) =1
```

# FIG.66

S[current layer=current node under treatment],U[upper layer]

V[operation number]  ：  (description of operation indicated by operation number)
(the comment on the operation)

CR[array of child partial trees not processed by operation],

GC[sum of TA values of child partial trees processed by operation]

TA[tree-average node value=]

WGS[sum of coincidence value governed by dominating node=]

LAC[number of child nodes],LNC[number of effective child nodes]

TAS[sum of tree-average node value],PAS[sum of path-average node value]

T2S[sum of value of tree-average node value squared]

NCS[sum of number of effective nodes],BCS[sum of number of ineffective nodes]

# FIG.67

(a)

(b)

# FIG.68

S[1],U[0]

V[1] ： call from upper
layer
U=0、S=−
CR□,GC□
TA□,WGS□
LAC□,LNC□
TAS□,PAS□,T2S□
NCS□,BCS□

(1)

S[1],U[0]

V[2] ： survey on existence
of structure
yes=existence of structure
CR□,GC□
TA□,WGS□
LAC□,LNC□
TAS□,PAS□,T2S□
NCS□,BCS□

(2)

S[1],U[0]

V[3] ： decomposition
into child trees
CR=[2,6]、LAC=2、LNC=0
CR[2,6],GC□
TA□,WGS□
LAC[2],LNC[0]
TAS□,PAS□,T2S□
NCS□,BCS□

(3)

S[1],U[0]

V[4] ： exhaust of child
trees
no=existence of child tree
CR[2,6],GC□
TA□,WGS□
LAC[2],LNC[0]
TAS□,PAS□,T2S□
NCS□,BCS□

(4)

S[1],U[0]

V[5] ： output of 1st
tree
[F=2]-->layer2
CR[6],GC□
TA□,WGS□
LAC[2],LNC[0]
TAS□,PAS□,T2S□
NCS□,BCS□

(5)

S[2],U[1]

V[1] ： call from upper
layer
U=1、S=2
CR□,GC□
TA□,WGS□
LAC□,LNC□
TAS□,PAS□,T2S□
NCS□,BCS□

(6)

S[2],U[1]

V[2] ： survey on existence of
structure
yes=existence of structure
CR□,GC□
TA□,WGS□
LAC□,LNC□
TAS□,PAS□,T2S□
NCS□,BCS□

(7)

S[2],U[1]

V[3] ： decomposition
into child trees
CR=[3,5]、LAC=2、LNC=0
CR[3,5],GC□
TA□,WGS□
LAC[2],LNC[0]
TAS□,PAS□,T2S□
NCS□,BCS□

(8)

S[2],U[1]

V[4] ： exhaust of child trees
no=existence of child tree
CR[3,5],GC□
TA□,WGS□
LAC[2],LNC[0]
TAS□,PAS□,T2S□
NCS□,BCS□

(9)

S[2],U[1]

V[5] ： output of 1st
tree
[F=3]-->layer3
CR[5],GC□
TA□,WGS□
LAC[2],LNC[0]
TAS□,PAS□,T2S□
NCS□,BCS□

(10)

S[3],U[2]

V[1] ： call from upper
layer
U=2、S=3
CR□,GC□
TA□,WGS□
LAC□,LNC□
TAS□,PAS□,T2S□
NCS□,BCS□

(11)

S[3],U[2]

V[2] ： survey on existence of
structure
yes=existence of structure
CR□,GC□
TA□,WGS□
LAC□,LNC□
TAS□,PAS□,T2S□
NCS□,BCS□

(12)

S[3],U[2]

V[3] ： decomposition
into child trees
CR=[4]、LAC=1、LNC=0
CR□,GC□
TA□,WGS□
LAC[1],LNC[0]
TAS□,PAS□,T2S□
NCS□,BCS□

(13)

S[3],U[2]

V[4] ： exhaust of child trees
no=existence of child tree
CR[4],GC□
TA□,WGS□
LAC[1],LNC[0]
TAS□,PAS□,T2S□
NCS□,BCS□

(14)

S[3],U[2]

V[5] ： output of 1st
tree
[F=4]-->layer4
CR□,GC□
TA□,WGS□
LAC[1],LNC[0]
TAS□,PAS□,T2S□
NCS□,BCS□

(15)

**FIG.69**

S[4],U[3]
V[1] : call from upper
layer
U=3、 S=4
CR□,GC□
TA□,WGS□
LAC□,LNC□
TAS□,PAS□,T2S□
NCS□,BCS□

(16)

S[4],U[3]
V[2] : survey on existence of
structure
no=absence of structure
CR□,GC□
TA□,WGS□
LAC□,LNC□
TAS□,PAS□,T2S□
NCS□,BCS□

(17)

S[4],U[3]
V[9] : treatment of
coincidence
yes=existence of coincidence value
CR□,GC□
TA□,WGS□
LAC□,LNC□
TAS□,PAS□,T2S□
NCS□,BCS□

(18)

S[4],U[3]
V[10] : treatment of effective node
coincidence value=1、 value is
introduced to TA.etc
CR□,GC□
TA[1],WGS[1]
LAC□,LNC□
TAS[1],PAS[1],T2S[1]
NCS[1],BCS[0]

(19)

S[4],U[3]
V[12] : response to upper layer
[U=3]-->layer3,value is
reported upward
CR□,GC□
TA[1],WGS[1]
LAC□,LNC□
TAS[1],PAS[1],T2S[1]
NCS[1],BCS[0]

(20)

S[3],U[2]
V[6] : exclusion of
ineffective node
no=not ineffective node
CR□,GC□
TA□,WGS□
LAC□,LNC□
TAS□,PAS□,T2S□
NCS□,BCS□

(21)

S[3],U[2]
V[7] : addition of tree value of partial tree
TA value to LNC+1 and GC, addition of value
of the same name generated at lower layer
CR□,GC[1]
TA□,WGS[1]
LAC[1],LNC[1]
TAS[1],PAS[1],T2S[1]
NCS[1],BCS[0]

(22)

S[3],U[2]
V[4] : exhaust of child tree
yes=exhaust of child tree
CR□,GC[1]
TA□,WGS[1]
LAC[1],LNC[1]
TAS[1],PAS[1],T2S[1]
NCS[1],BCS[0]

(23)

S[3],U[2]
V[8] : addition of value of current layer
composition of TA value, addition of
derived value
CR□,GC[1]
TA[1],WGS[1]
LAC[1],LNC[1]
TAS[2],PAS[2],T2S[2]
NCS[2],BCS[0]

(24)

S[3],U[2]
V[12] : response to upper layer
[U=2]-->layer2,value is
reported upward
CR□,GC[1]
TA[1],WGS[1]
LAC[1],LNC[1]
TAS[2],PAS[2],T2S[2]
NCS[2],BCS[0]

(25)

S[2],U[1]
V[6] : exclusion of
ineffective node
no=not ineffective node
CR[5],GC□
TA□,WGS□
LAC[2],LNC[0]
TAS□,PAS□,T2S□
NCS□,BCS□

(26)

S[2],U[1]
V[7] : addition of tree value of partial tree
TA value to LNC+1 and GC, addition of value
of the same name generated at lower layer
CR[5],GC[1]
TA□,WGS[1]
LAC[2],LNC[1]
TAS[2],PAS[2],T2S[2]
NCS[2],BCS[0]

(27)

S[2],U[1]
V[4] : exhaust of child tree
no=existence of child tree
CR[5],GC[1]
TA□,WGS[1]
LAC[2],LNC[1]
TAS[2],PAS[2],T2S[2]
NCS[2],BCS[0]

(28)

S[2],U[1]
V[5] : output of 1st tree
[F=5]-->layer5
CR□,GC[1]
TA□,WGS[1]
LAC[2],LNC[1]
TAS[2],PAS[2],T2S[2]
NCS[2],BCS[0]

(29)

S[5],U[2]
V[1] : call from upper layer
U=2、 S=5
CR□,GC□
TA□,WGS□
LAC□,LNC□
TAS□,PAS□,T2S□
NCS□,BCS□

(30)

**FIG.70**

S[5],U[2]
V[2] : survey on existence
of structure
no=absence of structure
CR□,GC□
TA□,WGS□
LAC□,LNC□
TAS□,PAS□,T2S□
NCS□,BCS□

(31)

S[5],U[2]
V[12] : response to upper layer
[U=2]-->layer2,value is
reported upward
CR□,GC□
TA[0],WGS[0]
LAC□,LNC□
TAS□,PAS□,T2S□
NCS□,BCS□

(34)

S[2],U[1]
V[8] : addition of value of current layer
composition of TA value, addition of
derived value
CR□,GC[1]
TA[0.5],WGS[1]
LAC[2],LNC[1]
TAS[2.5],PAS[2.5],T2S[2.25]
NCS[3],BCS[1]

(37)

S[1],U[0]
V[7] : addition of tree value of partial tree
TA value to LNC+1 and GC, addition of value
of the same name generated at lower layer
CR[6],GC[0.5]
TA□,WGS[1]
LAC[2],LNC[1]
TAS[2.5],PAS[2.5],T2S[2.25]
NCS[3],BCS[1]

(40)

S[5],U[2]
V[9] : treatment of
coincidence
no=absence of coincidence value
CR□,GC□
TA□,WGS□
LAC□,LNC□
TAS□,PAS□,T2S□
NCS□,BCS□

(32)

S[2],U[1]
V[6] : exclusion of
ineffective node
yes=ineffective node
CR□,GC[1]
TA□,WGS[1]
LAC[2],LNC[1]
TAS[2],PAS[2],T2S[2]
NCS[2],BCS[0]

(35)

S[2],U[1]
V[12] : response to upper layer
[U=2]-->layer2,value is reported
upward
CR□,GC[1]
TA[0.5],WGS[1]
LAC[2],LNC[1]
TAS[2.5],PAS[2.5],T2S[2.25]
NCS[3],BCS[1]

(38)

S[1],U[0]
V[4] : exhaust of child tree
no=existence of child tree
CR[6],GC[0.5]
TA□,WGS[1]
LAC[2],LNC[1]
TAS[2.5],PAS[2.5],T2S[2.25]
NCS[3],BCS[1]

(41)

S[5],U[2]
V[11] : treatment of
ineffective node
WGS=0, TA=0
CR□,GC□
TA[0],WGS[0]
LAC□,LNC□
TAS□,PAS□,T2S□
NCS□,BCS□

(33)

S[2],U[1]
V[4] : exhaust of child tree
yes=exhaust of child tree
CR□,GC[1]
TA□,WGS[1]
LAC[2],LNC[1]
TAS[2],PAS[2],T2S[2]
NCS[2],BCS[0]

(36)

S[1],U[0]
V[6] : exclusion of
ineffective node
no=not ineffective node
CR□,GC□
TA□,WGS□
LAC[2],LNC[0]
TAS□,PAS□,T2S□
NCS□,BCS□

(39)

S[1],U[0]
V[5] : output of 1st tree
[F=6]-->layer6
CR□,GC[0.5]
TA□,WGS[1]
LAC[2],LNC[1]
TAS[2.5],PAS[2.5],T2S[2.25]
NCS[3],BCS[1]

(42)

* * * * * * * * * * * * * * * * * * * * * * * * * * * * * * * * * * * *

S[6],U[1]
V[1] : call from upper
layer
U=1、S=6
CR□,GC□
TA□,WGS□
LAC□,LNC□
TAS□,PAS□,T2S□
NCS□,BCS□

(43)

S[6],U[1]
V[2] : survey on existence
of structure
yes=existence of structure
CR□,GC□
TA□,WGS□
LAC□,LNC□
TAS□,PAS□,T2S□
NCS□,BCS□

(44)

S[6],U[1]
V[3] : decomposition
into child trees
CR=[7, 8]、LAC=2、LNC=0
CR□,GC□
TA□,WGS□
LAC[2],LNC[0]
TAS□,PAS□,T2S□
NCS□,BCS□

(45)

**FIG.71**

S[6],U[1]
V[4] ∶ exhaust of child tree
no=existence of child tree
CR[7, 8],GC□
TA□,WGS□
LAC[2],LNC[0]
TAS□,PAS□,T2S□
NCS□,BCS□
(46)

S[6],U[1]
V[5] ∶ output of 1st tree
[F=7]-->layer7
CR[8],GC□
TA□,WGS□
LAC[2],LNC[0]
TAS□,PAS□,T2S□
NCS□,BCS□
(47)

S[7],U[6]
V[1] ∶ call from upper layer
U=6, S=7
CR□,GC□
TA□,WGS□
LAC□,LNC□
TAS□,PAS□,T2S□
NCS□,BCS□
(48)

S[7],U[6]
V[2] ∶ survey on existence of structure
no=absence of structure
CR□,GC□
TA□,WGS□
LAC□,LNC□
TAS□,PAS□,T2S□
NCS□,BCS□
(49)

S[7],U[6]
V[9] ∶ treatment of coincidence
yes=existence of coincidence value
CR□,GC□
TA□,WGS□
LAC[1],LNC[0]
TAS□,PAS□,T2S□
NCS□,BCS□
(50)

S[7],U[6]
V[10] ∶ treatment of effective node
coincidence value=0.7, value is introduced to TA.etc
CR□,GC□
TA[0.7],WGS[0.7]
LAC□,LNC□
TAS[0.7],PAS[0.7],T2S[0.49]
NCS[1],BCS[0]
(51)

S[7],U[6]
V[12] ∶ response to upper layer
[U=6]-->layer6,value is reported upward
CR□,GC□
TA[0.7],WGS[0.7]
LAC□,LNC□
TAS[0.7],PAS[0.7],T2S[0.49]
NCS[1],BCS[0]
(52)

S[6],U[1]
V[6] ∶ exclusion of ineffective node
no=effective node
CR[8],GC□
TA□,WGS□
LAC[2],LNC[0]
TAS□,PAS□,T2S□
NCS□,BCS□
(53)

S[6],U[1]
V[7] ∶ addition of tree value of partial tree
TA value to LNC+1 and GC, addition of value of the same name generated at lower layer
CR[8],GC[0.7]
TA□,WGS[0.7]
LAC[2],LNC[1]
TAS[0.7],PAS[0.7],T2S[0.49]
NCS[1],BCS[0]
(54)

S[6],U[1]
V[4] ∶ exhaust of child tree
no=existence of child tree
CR[8],GC[0.7]
TA□,WGS[0.7]
LAC[2],LNC[1]
TAS[0.7],PAS[0.7],T2S[0.49]
NCS[1],BCS[0]
(55)

S[6],U[1]
V[5] ∶ output of 1st tree
[F=8]-->layer8
CR□,GC[0.7]
TA□,WGS[0.7]
LAC[2],LNC[1]
TAS[0.7],PAS[0.7],T2S[0.49]
NCS[1],BCS[0]
(56)

S[8],U[6]
V[1] ∶ call from upper layer
U=6, S=8
CR□,GC□
TA□,WGS□
LAC□,LNC□
TAS□,PAS□,T2S□
NCS□,BCS□
(57)

S[8],U[6]
V[[2] ∶ survey on existence of structure
no=absence of structure
CR□,GC□
TA□,WGS□
LAC□,LNC□
TAS□,PAS□,T2S□
NCS□,BCS□
(58)

S[8],U[6]
V[9] ∶ treatment of coincidence
no=no coincidence value
CR□,GC□
TA□,WGS□
LAC□,LNC□
TAS□,PAS□,T2S□
NCS□,BCS□
(59)

S[8],U[6]
V[11] ∶ treatment of ineffective node
WGS=0, TA=0
CR□,GC□
TA[0],WGS[0]
LAC□,LNC□
TAS□,PAS□,T2S□
NCS□,BCS□
(60)

**FIG.72**

S[8],U[6]
V[12] : response to upper layer
[U=6]-->layer6,value is reported upward
CR□,GC□
TA[0],WGS[0]
LAC□,LNC□
TAS□,PAS□,T2S□
NCS□,BCS□

(61)

S[6],U[1]
V[6] : exclusion of ineffective node
yes=ineffective node
CR□,GC[0.7]
TA□,WGS[0.7]
LAC[2],LNC[1]
TAS[0.7],PAS[0.7],T2S[0.49]
NCS□,BCS[0]

(62)

S[6],U[1]
V[4] : exhaust of child tree
yes=absence of child tree
CR□,GC[0.7]
TA□,WGS[0.7]
LAC[2],LNC[1]
TAS[0.7],PAS[0.7],T2S[0.49]
NCS[1],BCS[0]

(63)

S[6],U[1]
V[8] : addition of value of current layer composition of TA value, addition of derived value
CR□,GC[0.7]
TA[0.35],WGS[0.7]
LAC[2],LNC[1]
TAS[1.05],PAS[0.945],T2S[0.6125]
NCS[2],BCS[1]

(64)

S[6],U[1]
V[12] : response to upper layer
[U=1]-->layer1,value is reported upward
CR□,GC[0.7]
TA[0.35],WGS[0.7]
LAC[2],LNC[1]
TAS[1.05],PAS[0.945],T2S[0.6125]
NCS[2],BCS[1]

(65)

S[1],U[0]
V[6] : exclusion of ineffective node
no=effective node
CR□,GC[0.5]
TA□,WGS[1]
LAC[2],LNC[1]
TAS[2.5],PAS[2.5],T2S[2.25]
NCS[3],BCS[1]

(66)

S[1],U[0]
V[7] : addition of tree value of partial tree
TA value to LNC+1 and GC, addition of value of the same name generated at lower layer
CR□,GC[0.85]
TA□,WGS[1.7]
LAC[2],LNC[2]
TAS[3.55],PAS[3.445],T2S[2.8625]
NCS[5],BCS[2]

(67)

S[1],U[0]
V[4] : exhaust of child tree
yes=absence of child tree
CR□,GC[0.85]
TA□,WGS[1.7]
LAC[2],LNC[2]
TAS[3.55],PAS[3.445],T2S[2.8625]
NCS[5],BCS[2]

(68)

S[1],U[0]
V[8] : addition of value of current layer composition of TA value, addition of derived value
CR□,GC[0.85]
TA[0.425],WGS[1.7]
LAC[2],LNC[2]
TAS[3.975],PAS[4.89],T2S[3.043125]
NCS[6],BCS[2]

(69)

S[1],U[0]
V[12] : response to upper layer
[U=0]-->layer0,value is reported upward
CR□,GC[0.85]
TA[0.425],WGS[1.7]
LAC[2],LNC[2]
TAS[3.975],PAS[4.89],T2S[3.043125]
NCS[6],BCS[2]

(70)

TA=0.425 TAS=3.975 WGS=1.7
PAS=4.89 T2S=3.043125
NCS=6 BCS=2

**FIG.73**

NP (1)

NP (2)           PP (6)

DET (3)   NOUN (5)   PREP (7) =0. 7   NOUN (8)

a (4) =1

tree value 1 TAST = 3.975
tree value 2 PAST = 4.89
tree value 3 TA|top = 0.425

filter value 1 $\sigma/m$ = 0.394425 $<$ 0.5
filter value 2 TAAv = 0.6625 $>$ 0.5
filter value 3 PAAv = 0.815 $>$ 0.6

# FIG.74

(OR trees generated at grammar application part)

(temporary exclusive
tree with tree value)

(exclusive tree stored in
apparatus)

| U.upper covering module |

U.upper covering part

(allelic exclusive tree group array)

# FIG.75

$[EXC] \equiv$

**FIG.76**

FIG.77

[EXC] ⊃

NP
(n14)
|
OR

NOUN      PP          NOUN      PREP      NOUN
(n15)     (n17)       (n22)     (n24)     (n26)

          PREP  NOUN   boy       with      dogs
          (n18) (n20)  (n23)     (n25)     (n27)

boy       with  dogs
(n16)     (n19) (n21)

→

SCR

NP(t1⊃n14)                                    NP(t1⊃n14)
(v=, p=5. 0)                                  (v=, p=2. 66)

NOUN(t2⊃n15)    PP(t4⊃n17)        NOUN(t2⊃n22)  PREP(t4⊃n24)  NOUN#(t6⊃n26)
                                                              C
             B  PREP(t5⊃n18)  NOUN(t6⊃n20)  boy(t3⊃n23)  with(t5⊃n25)

boy(t3⊃n16)     with(t6⊃n19)   dogs(t7⊃n21)

OR

NOUN(n5)    NOUN(n10)   NOUN(n26)

boy(n6)     dogs(n11)   dogs(n27)

(2)

# FIG.78

SCR

$$[EXC] \supset \begin{array}{c} NOUN(n5) \\ | \\ boy(n6) \end{array} \longrightarrow \begin{bmatrix} \boxed{NOUN(t1 \supset n5)} \\ (v=, p=1.0) \\ | \\ boy(t2 \supset n6) \end{bmatrix}$$

(3)

$$OR \begin{bmatrix} NOUN(n10) & NOUN(n26) \\ | & | \\ dogs(n11) & dogs(n27) \end{bmatrix}$$

SCR

$$[EXC] \supset \begin{array}{c} NOUN(n10) \\ | \\ dogs(n11) \end{array} \longrightarrow \begin{bmatrix} \boxed{NOUN(t1 \supset n10)} \\ (v=, p=1.0) \\ | \\ dogs(t2 \supset n11) \end{bmatrix}$$

(4)

$$OR \begin{bmatrix} NOUN(n26) \\ | \\ dogs(n27) \end{bmatrix}$$

SCR

$$[EXC] \supset \begin{array}{c} NOUN(n10) \\ | \\ dogs(n11) \end{array} \longrightarrow \begin{bmatrix} \boxed{NOUN(t1 \supset n26)} \\ (v=, p=1.0) \\ | \\ dogs(t2 \supset n27) \end{bmatrix}$$

(5)

$$OR \begin{bmatrix} \\ \end{bmatrix}$$

# FIG.79

ACR

NP(t1⊃n1)                                NP(t1⊃n1)
(v=, p=1.5)                              (v=, p=3.5)

DET(t2⊃n12)   NP#(t4⊃n14)      NP(t2⊃n2)          PP(t6⊃n7)
                         A                     D
        |                         DET(t3⊃n3)  NOUN#(t5⊃n5)  PREP(t7⊃n8)  NOUN#(t9⊃n10)
    a(t3⊃n13)
                                        |                        |
                                    a(t4⊃n4)              with(t8⊃n9)

NP(t1⊃n14)                               NP(t1⊃n14)
(v=, p=5.0)                              (v=, p=2.66)

NOUN(t2⊃n15)      PP(t4⊃n17)      NOUN(t2⊃n22)  PREP(t4⊃n24)  NOUN#(t6⊃n26)
                                                                      C
              B  PREP(t5⊃n18)  NOUN(t6⊃n20)       |              |
                                              boy(t3⊃n23)   with(t5⊃n25)
    |                |              |
boy(t3⊃n16)   with(t6⊃n19)   dogs(t7⊃n21)

NOUN(t1⊃n5)          NOUN(t1⊃n10)         NOUN(t1⊃n26)
(v=, p=1.0)          (v=, p=1.0)          (v=, p=1.0)
       E                    F                    F
boy(t2⊃n6)          dogs(t2⊃n11)         dogs(t2⊃n27)

(6)

# FIG.80

**U1: input of processing object**

An OR tree generated at grammar application part is introduced into OR tree array and initial exclusive tree array which is aggregation of temporal exclusive tree and exclusive tree provide by system is introduced into exclusive tree register EXC. OR tree is introduced into OR tree holding register ORH.

**U2: beginning of process**

1st tree is taken out from exclusive register EXC and introduced , together with content of OR tree holding register ORH, to processing unit ALC. For the purpose of preservation, 1st tree of exclusive tree register EXC is also introduced to node covering register NCR.

**A**

**U3 : decision on node coincidence**

coincidence of nodes — no

yes

**U4 : node pair connection**

Covering relation between topmost node numbers of tree in NCR and OR tree in ALC is expressed by sign ⊃ and the relation is filled in the node of current node number in node covering register NCR.

**U5 : decision of search continuation**

existence of child node of exclusive tree — no

yes

**U6 : decision of OR tree shortage**

existence of child node of OR tree — no

yes

**U7 : decision of existence of OR node**

child node of OR tree is OR node — yes

no

**U8 : decision of coincidence of child node array**

coincidence of arrays made of topmost nodes of child trees — no

yes

**U9 : generation of child tree pair**

Every child tree in exclusive tree side is paired with the child tree of the same order in OR tree side making a tree pair. These pairs are introduced after the right end of meaningful data of unprocessed pair array UPA.

**U10 : decision of success of upper covering**

unprocessed pair array UPA is empty — yes

no

**U11 : taking out of unprocessed pair**

1st pair in unprocessed pair array EPA is taken out and introduced to arithmetic unit ALC overwriting former data.

**U14 : decision of existence of coverage substructure**

existence of child node at OR tree — no

yes

**U15 : composition of coverage substructure**

At the exclusive tree in node covering register NCR, connecting sign "#" is attached to nodes having the same node numbers as the node numbers of exclusive tree stored in processing unit ALC. Moreover, trees in OR tree side of arithmetic unit ALC are introduced to the right of meaningful data in temporal OR tree array TOR.

**U16 : spreading of candidate trees assembled by OR node**

Insertion of separation sign "OR" are made between each candidate child partial trees and the separated result ,as a whole, is stored in selection register ORR overwriting former data.

**U17 : output of a candidate tree**

1st term in selection register ORR is taken out and a pair is made between child partial tree array of the term taken out and child partial tree array in processing unit ALC.

**U18 : decision of coincidence at candidates**

coincidence at topmost nodes of child trees — yes

no

**U19 : decision of existence of unprocessed child tree**

existence of data in register ORR — no

yes

no

**U12 : output of successful covering result**

**U13 : output of failure of covering**

Output of successful covering result is generated. Data in node covering register NCR is introduced in Identical node register SCR in the style of left justification. Data in temporal OR tree array TOR is introduced to the right of meaningful data of OR tree array OR. Node covering register NCR, temporal OR tree array TOR and unprocessed pair array UPA are reset.

Output of failure of covering is generated. Processing unit ALC, node covering register NCR, temporal OR tree array TOR and unprocessed pair array UPA are reset.

**U21 : end of processing of allelic exclusive trees**

Trees in identical node register SCR are bundled in a group and introduced to the right of meaningful data of allele exclusive tree register ACR.

**U22 : decision of end of OR trees**

OR tree array OR is empty — no

yes

**U23 : taking out of OR tree**

1st OR tree in OR tree array is taken out and introduced to OR tree holding regiser ORH overwriting former data. Topmost node of OR tree is introduced to processed node list.

**U24 : decision of formerly treated node**

no record of former treatment — yes

no

**U20 : decision of end of exclusive tree**

exclusive tree register EXC is empty — no

yes

**B**

**U25 : commencement of OR tree processing**

Identical node register SCR is reset and exclusive tree array stored in the system is introduced to exclusive tree register EXC.

**U26 : end of upper covering**

yes

Upper covering processing is terminated and the data in exclusive tree register ACR is output.

# FIG.81

# FIG.82

FIG.83

NP(t1)
(v=, p=1.5)

A
NP(t4)

≡

NP(t1)
(v=, p=1.5)

DET(t2)          NP(t4)

a(t3)

NP(t1)
(v=, p=5.0)

B

≡

NP(t1)
(v=, p=5.0)

NOUN(t2)                    PP(t4)

boy(t3)         PREP(t5)    dogs(t7)

with(t6)    NOUN(t6)

(a)

(b)

NP(t1)
(v=, p=2.66)

C
NOUN(t6)

≡

NP(t1)
(v=, p=2.66)

NOUN(t2)    PREP(t4)    NOUN(t6)

boy(t3)    with(t5)

(c)

NP(t1)
(v=, p=3.5)

D
NOUN(t5) NOUN(t9)

≡

NP(t1)
(v=, p=3.5)

NP(t2)                    PP(t6)

DET(t3)    NOUN(t5)    PREP(t7)    NOUN(t9)

a(t4)                    with(t8)

(d)

NOUN(t1)
(v=, p=1.0)

E

≡

NOUN(t1)
(v=, p=1.0)

boy(t2)

(e)

NOUN(t1)
(v=, p=1.0)

F

≡

NOUN(t1)
(v=, p=1.0)

dogs(t2)

(f)

# FIG.84

EP 4 567 661 A1

FIG.85

219

U2

ALC

NP(t1)

DET(t2)        NP(t4)

a(t3)

NP
(n1)
|
OR

NP          PP          DET                    NP
(n2)        (n7)        (n12)                  (n14)

DET  NOUN   PREP  NOUN                          |
(n3) (n5)   (n8)  (n10)                         OR

a    boy    with  dogs    a      NOUN   PP      NOUN  PREP  NOUN
(n4) (n6)   (n9)  (n11)   (n13)  (n15)  (n17)   (n22) (n24) (n26)

boy    PREP  NOUN    boy   with  dogs
(n16)  (n18) (n20)   (n23) (n25) (n27)

boy  with  dogs
(n16)(n19) (n21)

NCR     NP(t1)
        (v=, p=1.5)

DET(t2)        NP(t4)

a(t3)

(4)

U4

        NCR     NP(t1⊃n1)
                (v=, p=1.5)

        DET(t2)        NP(t4)

        a(t3)

        (5)

# FIG.86

U16

ORR

NP
(n2)

DET    NOUN
(n3)    (n5)

a      boy
(n4)    (n6)

PP
(n7)

PREP   NOUN
(n8)    (n10)

with   dogs
(n9)    (n11)

OR

DET
(n12)

a
(n13)

NP
(n14)

OR

NOUN    PP
(n15)   (n17)

PREP   NOUN
(n18)   (n20)

boy    with   dogs
(n16)   (n19)  (n21)

NOUN   PREP   NOUN
(n22)   (n24)  (n26)

boy    with   dogs
(n23)   (n25)  (n27)

(6)

U9

UPA

DET (t2)

a (t3)

DET
(n12)

a
(n13)

NP (t4)

NP
(n14)

OR

NOUN    PP
(n15)   (n17)

PREP   NOUN
(n18)   (n20)

boy    with   dogs
(n16)   (n19)  (n21)

NOUN   PREP   NOUN
(n22)   (n24)  (n26)

boy    with   dogs
(n23)   (n25)  (n27)

(7)

# FIG.87

U11
ALC

DET(t2) ⊃ DET
(n12)

a(t3)    a
(n13)

UPA

NP(t4) ⊃

NP
(n14)

OR

NOUN
(n15)

PP
(n17)

NOUN
(n22)

PREP
(n24)

NOUN
(n26)

boy
(n23)

with
(n25)

dogs
(n27)

PREP
(n18)

NOUN
(n20)

boy
(n16)

with
(n19)

dogs
(n21)

(8)

U4
NCR

NP(t1⊃n1)
(v=, p=1.5)

DET(t2⊃n12)    NP(t4)

a(t3)

(9)

U9

UPA

NP(t4) ⊃

NP
(n14)

OR

a(t3) ⊃ a
(n13)

NOUN
(n15)

PP
(n17)

NOUN
(n22)

PREP
(n24)

NOUN
(n26)

boy
(n23)

with
(n25)

dogs
(n27)

PREP
(n18)

NOUN
(n20)

boy
(n16)

with
(n19)

dogs
(n21)

(10)

# FIG.88

U11

ALC

NP(t4)

NP
(n14)
|
OR

NOUN (n15)  PP (n17)    NOUN (n22)  PREP (n24)  NOUN (n26)

PREP (n18)  NOUN (n20)   boy (n23)   with (n25)   dogs (n27)

boy (n16)   with (n19)  dogs (n21)

UPA

a(t3)    a (n13)

(11)

U4

NCR

NP(t1⊃n1)
(v=, p=1.5)

DET(t2⊃n12)    NP(t4⊃n14)

a(t3)

(12)

U4

NCR

NP(t1⊃n1)
(v=, p=1.5)

DET(t2⊃n12)    NP#(t4⊃n14)

a(t3)

TOR

NP
(n14)
|
OR

NOUN (n15)  PP (n17)    NOUN (n22)  PREP (n24)  NOUN (n26)

PREP (n18)  NOUN (n20)   boy (n23)   with (n25)   dogs (n27)

boy (n16)   with (n19)  dogs (n21)

(13)

# FIG.89

U11

ALC                                        UPA

$$\left[\begin{array}{c} \mathtt{a(t3)} \supset \begin{array}{c}\mathtt{a}\\\mathtt{(n13)}\end{array} \end{array}\right] \quad \left\langle \quad \right\rangle$$

(14)

U4

NCR        NP(t1⊃n1)
           (v=, p=1. 5)

DET(t2⊃n12)        NP#(t4⊃n14)

        a(t3⊃n13)
                                (15)

# U12

SCR                        OR

$$\left[\begin{array}{c} \mathtt{NP(t1 \supset n1)} \\ \mathtt{(v=, p=1. 5)} \\ \mathtt{DET(t2 \supset n12)} \quad \mathtt{NP\#(t4 \supset n14)} \\ \mathtt{a(t3 \supset n13)} \end{array}\right]$$

NP
(n14)

OR

NOUN        PP          NOUN    PREP    NOUN
(n15)       (n17)       (n22)   (n24)   (n26)

            PREP  NOUN   boy     with    dogs
            (n18) (n20)  (n23)   (n25)   (n27)

boy   with  dogs
(n16) (n19) (n21)

(16)

# FIG.90

U12

SCR

NP(t1⊃n1)
(v=, p=1.5)

A

NP#(t4⊃n14)

OR

X2

n14 OR

Y1    Y2    Z1    Z2    Z3

n26

Z31

(17)

U2

ALC
NP(t1)
(v=, p=5.0)

B

V

n1 OR

W1    W2    X1    X2

n5    n10    n14 OR

W11    W21

Y1    Y2    Z1    Z2    Z3

n26

Z31

NCR
NP(t1)
(v=, p=5.0)

B

EXC

NP(t1)
(v=, p=2.66)

C

NOUN(t6)

NP(t1)
(v=, p=3.5)

D

NOUN(t6)    NOUN(t6)

NOUN(t1)
(v=, p=1.0)

E

NOUN(t1)
(v=, p=1.0)

F

(18)

# FIG.91

(19)

(20)

# FIG.92

FIG.93

U16
ORR

NP
(n2)

DET NOUN
(n3) (n5)

PREP NOUN
(n8) (n10)

PP
(n7)

a
(n4)

boy
(n6)

with
(n9)

dogs
(n11)

OR

DET
(n12)

a
(n13)

NP
(n14)

OR

NOUN
(n15)

PP
(n17)

NOUN
(n22)

PREP
(n24)

NOUN
(n26)

boy
(n16)

PREP NOUN
(n18) (n20)

boy
(n23)

with
(n25)

dogs
(n27)

with dogs
(n19) (n21)

(23)

U9
UPA

NP (t2)

DET (t3)    NOUN (t5)

a (t4)

NP
(n2)

DET NOUN
(n3) (n5)

a boy
(n4) (n6)

PP (t6)

PREP (t7)    NOUN (t9)

with (t8)

PP
(n7)

PREP NOUN
(n8) (n10)

with dogs
(n9) (n11)

(24)

U11
ALC

NP (t2)

DET (t3)    NOUN (t5)

a (t4)

NP
(n2)

DET NOUN
(n3) (n5)

a boy
(n4) (n6)

UPA

PP (t6)

PREP (t7)    NOUN (t9)

with (t8)

PP
(n7)

PREP NOUN
(n8) (n10)

with dogs
(n9) (n11)

(25)

# FIG.94

U4
NCR

(26)

U9
UPA

(27)

U11
ALC

UPA

(28)

# FIG.95

U4
NCR

NP(t1⊃n1)
(v=, p=3. 5)

NP(t2⊃n2)          PP(t6⊃n7)

DET(t3)  NOUN(t5)  PREP(t7)    NOUN(t9)

a(t4)            with(t8)

(29)

UPA

DET(t3)    DET        NOUN      PREP(t7)    PREP         NOUN
           (n3)       (n5)                  (n8)         (n10)
a(t4)           NOUN#(t5)              with(t8)    NOUN#(t9)
           a          boy                    with         dogs
           (n4)       (n6)                   (n9)         (n11)

(30)

U11
ALC                    UPA

DET(t3)    DET                NOUN      PREP(t7)    PREP         NOUN
           (n3)               (n5)                 (n8)         (n10)
a(t4)           NOUN(t5)                with(t8)    NOUN(t9)
           a                  boy                   with         dogs
           (n4)               (n6)                  (n9)         (n11)

(31)

U4
NCR

NP(t1⊃n1)
(v=, p=3. 5)

NP(t2⊃n2)          PP(t6⊃n7)

DET(t3⊃n3)  NOUN(t5)  PREP(t7)    NOUN(t9)

a(t4)              with(t8)

(32)

# FIG.96

U9
UPA

NOUN
(n5)

PREP (t7)          PREP
(n8)

NOUN
(n10)

NOUN (t5) ⊃          a (t4)          a
(n4)

boy
(n6)          with (t8)

with
(n9)          NOUN (t9) ⊃

dogs
(n11)

(33)

U11
ALC

NOUN
(n5)          UPA

NOUN (t5) ⊃          PREP (t7)          PREP
(n8)

NOUN
(n10)

boy
(n6)          with (t8)

with
(n9)          NOUN (t9) ⊃          a (t4)          a
(n4)

dogs
(n11)

(34)

U4
NCR

NP (t1 ⊃ n1)
(v=, p=3. 5)

NP (t2 ⊃ n2)                    PP (t6 ⊃ n7)

DET (t3 ⊃ n3)   NOUN (t5 ⊃ n5)      PREP (t7)   NOUN (t9)

a (t4)                              with (t8)

(35)

U15
NCR

NP (t1 ⊃ n1)
(v=, p=3. 5)                              TOR

NP (t2 ⊃ n2)                    PP (t6 ⊃ n7)                    NOUN
(n5)

DET (t3 ⊃ n3)   NOUN# (t5 ⊃ n5)   PREP (t7)   NOUN (t9)

a (t4)                              with (t8)                    boy
(n6)

(36)

# FIG.97

U11
ALC

PREP (t7) — PREP (n8)

with (t8) — with (n9)

UPA

NOUN (t9) — NOUN (n10) — dogs (n11)

a (t4) — a (n4)

(37)

NP (t1 ⊃ n1)
(v=, p=3.5)

NP (t2 ⊃ n2)          PP (t6 ⊃ n7)

DET (t3 ⊃ n3)   NOUN# (t5 ⊃ n5)      PREP (t7 ⊃ n8)   NOUN (t9)

a (t4)          with (t8)

(38)

U9

UPA

NOUN (t9) — NOUN (n10) — dogs (n11)

a (t4) — a (n4)

with (t8) — with (n9)

(39)

U11
ALC

NOUN (t9) — NOUN (n10) — dogs (n11)

UPA

a (t4) — a (n4)

with (t8) — with (n9)

(40)

# FIG.98

U4

NCR

```
                    NP(t1⊃n1)
                    (v=, p=3.5)

      NP(t2⊃n2)                    PP(t6⊃n7)

DET(t3⊃n3)  NOUN#(t5⊃n5)  PREP(t7⊃n8)    NOUN(t9⊃n10)
     |                         |
   a(t4)                    with(t8)
```

(41)

U15
NCR

```
                    NP(t1⊃n1)
                    (v=, p=3.5)

      NP(t2⊃n2)                    PP(t6⊃n7)

DET(t3⊃n3)  NOUN#(t5⊃n5)  PREP(t7⊃n8)    NOUN#(t9⊃n10)
     |                         |
   a(t4)                    with(t8)
```

TOR

```
⎛  NOUN    NOUN  ⎞
⎜  (n5)    (n10) ⎟
⎜   |       |    ⎟
⎜  boy     dogs  ⎟
⎝  (n6)    (n11) ⎠
```

(42)

U11

ALC

```
⎡             a  ⎤
⎢ a(t4) ⊃    (n4)⎥
⎣                ⎦
```

UPA

```
⎡                with ⎤
⎢ with(t8) ⊃     (n9) ⎥
⎣                     ⎦
```

(43)

U4

NCR

```
                 NP(t1⊃n1)
                 (v=, p=3.5)

   NP(t2⊃n2)                    PP(t6⊃n7)

DET(t3⊃n3)  NOUN#(t5⊃n5)  PREP(t7⊃n8)    NOUN#(t9⊃n10)
     |                         |
 a(t4⊃n4)                   with(t8)
```

(44)

# FIG.99

233

U11

ALC                              UPA

with(t8) ⊃ with
              (n9)

(45)

U4
NCR          NP(t1⊃n1)
             (v=, p=3.5)

    NP(t2⊃n2)                    PP(t6⊃n7)

DET(t3⊃n3)  NOUN#(t5⊃n5)   PREP(t7⊃n8)  NOUN#(t9⊃n10)

a(t4⊃n4)                   with(t8⊃n9)

(46)

# U12

SCR

    NP(t1⊃n1)                        NP(t1⊃n1)
    (v=, p=1.5)                      (v=, p=3.5)

DET(t2⊃n12)  NP#(t4⊃n14)   NP(t2⊃n2)              PP(t6⊃n7)

a(t3⊃n13)              DET(t3⊃n3)  NOUN#(t5⊃n5)  PREP(t7⊃n8)  NOUN#(t9⊃n10)

                       a(t4⊃n4)                  with(t8⊃n9)

OR

              NP
             (n14)

              OR

NOUN    PP      NOUN   PREP   NOUN        NOUN          NOUN
(n15)  (n17)   (n22)  (n24)  (n26)        (n5)          (n10)

      PREP  NOUN   boy   with   dogs
      (n18) (n20)  (n23) (n25)  (n27)      boy           dogs
                                           (n6)          (n11)

boy   with  dogs
(n16) (n19) (n21)

(47)

# FIG.100

SCR

NP(t1⊃n1)
(v=, p=1. 5)

A

NP#(t4⊃n14)

NP(t1⊃n1)
(v=, p=3. 5)

D

NOUN#(t5⊃n5)   NOUN#(t9⊃n10)

OR

X2

n14  OR

Y1   Y2   Z1   Z2   Z3   W11   W21

n26
Z31

EXC

NOUN(t1)
(v=, p=1. 0)

E

NOUN(t1)
(v=, p=1. 0)

F

(48)

U2

ALC

NOUN(t1)
(v=, p=1. 0)

E

V

n1  OR

W1   W2   X1   X2

n5        n10       n14  OR

W11       W21

Y1   Y2   Z1   Z2   Z3

n26

Z31

EXC

NOUN(t1)
(v=, p=1. 0)

F

(49)

# FIG.101

U2
ALC

NOUN(t1)
(v=, p=1.0)

(50)

## U21(First result)

ACR

NP(t1⊃n1)          NP(t1⊃n1)
(v=, p=1.5)        (v=, p=3.5)

A                  D

NP#(t4⊃n14)    NOUN#(t5⊃n5)    NOUN#(t9⊃n10)

OR

(51)

U23
ORH

OR

(52)

# FIG.102

U25
EXC

$$\left[ \begin{array}{cccccc} \text{NP(t1)} \\ \text{(v=,p=1.5)} \\ \triangle A \bullet \\ \text{NP(t4)} \end{array} \right.$$

U25
EXC

NP(t1)
(v=,p=1.5)
△ A
NP(t4) ●

NP(t1)
(v=,p=5.0)
△ B

NP(t1)
(v=,p=2.66)
△ C
NOUN(t6) ●

NP(t1)
(v=,p=3.5)
● △ D ●
NOUN(t6)  NOUN(t6)

NOUN(t1)
(v=,p=1.0)
△ E

NOUN(t1)
(v=,p=1.0)
△ F

(53)

U2
EXC

NP(t1)
(v=,p=5.0)
△ B

NP(t1)
(v=,p=2.66)
△ C
NOUN(t6) ●

NP(t1)
(v=,p=3.5)
● △ D ●
NOUN(t6)  NOUN(t6)

NOUN(t1)
(v=,p=1.0)
△ E

NOUN(t1)
(v=,p=1.0)
△ F

ALC

NP(t1)
(v=,p=1.5)
△ A ●
NP(t4)

X2 ●
n14
OR

Y1  Y2  Z1  Z2  Z3
n26
Z31

(54)

U2
ALC

NP(t1)
(v=,p=1.5)
DET(t2)   NP(t4)
|
a(t3)

NP
(n14)
|
OR

NOUN   PP        NOUN   PREP    NOUN
(n15)  (n17)     (n22)  (n24)   (n26)
                 boy    with    dogs
       PREP NOUN (n23)  (n25)   (n27)
       (n18)(n20)
       |    |
       boy  with dogs
       (n16)(n19)(n21)

(55)

**FIG.103**

U2
EXC

NP(t1)
(v=, p=2.66)

C

NOUN(t6)

NP(t1)
(v=, p=3.5)

D

NOUN(t6)  NOUN(t6)

NOUN(t1)
(v=, p=1.0)

E

NOUN(t1)
(v=, p=1.0)

F

ALC

NP(t1)
(v=, p=5.0)

B

X2

n14  OR

Y1  Y2  Z1  Z2  Z3

n26

Z31

SCR

NP(t1)
(v=, p=5.0)

B

(56)

U2

ALC

NP(t1)
(v=, p=5.0)

NOUN(t2)          PP(t4)

                PREP(t5)    NOUN(t6)

boy(t3)       with(t6)    dogs(t7)

NP
(n14)

OR

NOUN      PP          NOUN    PREP    NOUN
(n15)    (n17)        (n22)   (n24)   (n26)

         PREP  NOUN    boy     with    dogs
         (n18) (n20)   (n23)   (n25)   (n27)

boy      with  dogs
(n16)    (n19) (n21)

NCR

NP(t1)
(v=, p=5.0)

NOUN(t2)          PP(t4)

                PREP(t5)    NOUN(t6)

boy(t3)       with(t6)    dogs(t7)

(57)

# FIG.104

EP 4 567 661 A1

U4

NCR

(58)

U16

ORR

(59)

U9

UPA

(60)

U4

NCR

(61)

# FIG.105

239

U12
SCR

$$\left[\begin{array}{c} \text{NP}(\text{t1} \supset \text{n14}) \\ (\text{v=}, \text{p=5. 0}) \end{array}\right.$$

NP(t1⊃n14)
(v=, p=5. 0)

NOUN(t2⊃n15)          PP(t4⊃n17)

PREP(t5⊃n18)   NOUN(t6⊃n20)

boy(t3⊃n16)   with(t6⊃n19)  dogs(t7⊃n21)

(62)

U2

EXC

NP(t1)              NOUN(t1)              NOUN(t1)
(v=, p=3. 5)        (v=, p=1. 0)          (v=, p=1. 0)

D                   E                     F

NOUN(t6)    NOUN(t6)

ALC                                    X2                          SCR

NP(t1)                                                             NP(t1)
(v=, p=2. 66)                      n14   OR                        (v=, p=2. 66)

C                                                                  C

NOUN(t6)              Y1    Y2    Z1    Z2    Z3                    NOUN(t6)

                                              n26

                                        Z31

(63)

**FIG.106**

U2  ALC

NP(t1)
(v=, p=2.66)

NOUN(t2)   PREP(t4)   NOUN(t6)

boy(t3)    with(t5)

⊃

NP
(n14)

OR

NOUN      PP        NOUN      PREP      NOUN
(n15)     (n17)     (n22)     (n24)     (n26)

PREP  NOUN   boy       with      dogs
(n18) (n20)  (n23)     (n25)     (n27)

boy   with  dogs
(n16) (n19) (n21)

NCR

NP(t1)
(v=, p=2.66)

NOUN(t2)   PREP(t4)   NOUN(t6)

boy(t3)    with(t5)

(64)

U4

NCR

NP(t1⊃n14)
(v=, p=2.66)

NOUN(t2)   PREP(t4)   NOUN(t6)

boy(t3)    with(t5)

(65)

U16
ORR

NOUN      PP
(n15)     (n17)

PREP  NOUN
(n18) (n20)

boy   with  dogs
(n16) (n19) (n21)

OR

NOUN      PREP      NOUN
(n22)     (n24)     (n26)

boy       with      dogs
(n23)     (n25)     (n27)

(66)

# FIG.107

241

U9
UPA

$$\begin{bmatrix} \begin{array}{cccccc} \text{NOUN(t2)} & \text{NOUN(n22)} & \text{PREP(t4)} & \text{PREP(n24)} & \text{NOUN(t6)} & \text{NOUN(n26)} \\ | & | & | & | & & | \\ \text{boy(t3)} & \text{boy(n23)} & \text{with(t5)} & \text{with(n25)} & & \text{dogs(n27)} \end{array} \end{bmatrix}$$

(67)

U4

NCR     NP(t1⊃n14)        ALC                          UPA
        (v=, p=2.66)

NOUN(t2⊃n22)  PREP(t4⊃n24)  NOUN(t6⊃n26)

boy(t3⊃n23)   with(t5⊃n25)

$$\begin{bmatrix} \text{NOUN(t6)} & \text{NOUN(n26)} \\ & | \\ & \text{dogs(n27)} \end{bmatrix}$$

(68)

U15
NCR     NP(t1⊃n14)        TOR
        (v=, p=2.66)

NOUN(t2⊃n22)  PREP(t4⊃n24)  NOUN#(t6⊃n26)

boy(t3⊃n23)   with(t5⊃n25)

$$\begin{bmatrix} \text{NOUN(n26)} \\ | \\ \text{dogs(n27)} \end{bmatrix}$$

(69)

# U12

SCR                                              NP(t1⊃n14)
        NP(t1⊃n14)                               (v=, p=2.66)
        (v=, p=5.0)

NOUN(t2⊃n15)        PP(t4⊃n17)          NOUN(t2⊃n22)  PREP(t4⊃n24)  NOUN#(t6⊃n26)
                 B                                                  C
                PREP(t5⊃n18)  NOUN(t6⊃n20)   boy(t3⊃n23)   with(t5⊃n25)
boy(t3⊃n16)   with(t6⊃n19)  dogs(t7⊃n21)

OR

$$\begin{bmatrix} \text{NOUN(n5)} & \text{NOUN(n10)} & \text{NOUN(n26)} \\ | & | & | \\ \text{boy(n6)} & \text{dogs(n11)} & \text{dogs(n27)} \end{bmatrix}$$

(70)

# FIG.108

U12

SCR

NP(t1⊃n14)
(v=, p=5. 0)

B

NP(t1⊃n14)
(v=, p=2. 66)

C

NOUN#(t6⊃n26)

OR

n5

W11

n10

W21

n26

Z31

(71)

U2

EXC

NOUN(t1)
(v=, p=1. 0)

E

NOUN(t1)
(v=, p=1. 0)

F

ALC

NP(t1)
(v=, p=3. 5)

D

NOUN(t6)    NOUN(t6)

X2

n14

OR

Y1    Y2    Z1    Z2    Z3

n26

Z31

(72)

ALC

NP(t1)
(v=, p=3. 5)

NP(t2)          PP(t6)

DET(t3)   NOUN(t5)    PREP(t7)   NOUN(t9)

a(t4)                with(t8)

NP
(n14)

OR

NOUN
(n15)

PP
(n17)

NOUN
(n22)

PREP
(n24)

NOUN
(n26)

boy
(n23)

with
(n25)

dogs
(n27)

PREP        NOUN
(n18)        (n20)

boy
(n16)

with
(n19)

dogs
(n21)

(73)

# FIG.109

U2

EXC

$$\begin{bmatrix} \begin{array}{c} \text{NOUN(t1)} \\ \text{(v=, p=1.0)} \\ \triangle \\ \text{F} \end{array} \end{bmatrix}$$

ALC

NOUN(t1)
(v=, p=1.0)
△
E

⊃

NP(n14)
●
△X2
n14 OR ●

Y1  Y2  Z1  Z2  Z3
△   △   △   △   △
                  △ n26
                  Z31

(74)

U2

EXC

$$\begin{bmatrix} \\ \\ \end{bmatrix}$$

NOUN(t1)
(v=, p=1.0)
△
F

⊃

NP(n14)
●
△X2
n14 OR ●

Y1  Y2  Z1  Z2  Z3
△   △   △   △   △
                  △ n26
                  Z31

(75)

# U21

ACR

$$\left\{ \boxed{ \begin{array}{cc} \text{NP(t1} \supset \text{n1)} & \text{NP(t1} \supset \text{n1)} \end{array} } \right.$$

(v=, p=1.5)        (v=, p=3.5)

△A             △D
NP#(t4⊃n14)    NOUN#(t5⊃n5) NOUN#(t9⊃n10)

$$\boxed{ \begin{array}{cc} \text{NP(t1} \supset \text{n14)} & \text{NP(t1} \supset \text{n14)} \end{array} } \right\}$$

(v=, p=5.0)        (v=, p=2.66)

△B             △C
               NOUN#(t6⊃n26)

OR

$$\begin{bmatrix} \begin{array}{ccc} \bullet \text{n5} & \bullet \text{n10} & \bullet \text{n26} \\ \triangle & \triangle & \triangle \\ \text{W11} & \text{W21} & \text{Z31} \end{array} \end{bmatrix}$$

(76)

U23
ORH

●n5
△
W11

OR

$$\begin{bmatrix} \begin{array}{cc} \bullet \text{n10} & \bullet \text{n26} \\ \triangle & \triangle \\ \text{W21} & \text{Z31} \end{array} \end{bmatrix}$$

(77)

# FIG.110

U2

ALC

NP(t1)
(v=, p=1. 5)

△ A

NP(t4)

⊃

● NOUN(n5)

△ W11

EXC

NP(t1)
(v=, p=5. 0)

△ B

NP(t1)
(v=, p=2. 66)

△ C
NOUN(t6)

NP(t1)
(v=, p=3. 5)

△ D
NOUN(t6) NOUN(t6)

NOUN(t1)
(v=, p=1. 0)

△ E

NOUN(t1)
(v=, p=1. 0)

△ F

(78)

U2

ALC

NOUN(t1)
(v=, p=1. 0)

△ E

⊃

● NOUN(n5)

△ W11

NCR

NOUN(t1)
(v=, p=1. 0)

△ E

EXC

NOUN(t1)
(v=, p=1. 0)

△ F

(79)

U2

ALC

NOUN(t1)
(v=, p=1. 0)

|

boy(t2)

⊃

NOUN(n5)

|

boy(n6)

NCR

NOUN(t1)
(v=, p=1. 0)

|

boy(t2)

EXC

NOUN(t1)
(v=, p=1. 0)

|

dogs(t2)

(80)

U4

NCR

NOUN(t1 ⊃ n5)
(v=, p=1. 0)

|

boy(t2)

(81)

# FIG.111

U9

UPA

$$\left[\begin{array}{ccc} boy\,(t2) & \supset & boy(n6) \end{array}\right]$$

(82)

U11

ALC  boy$\,$(t2)  $\supset$  boy(n6)

(83)

U4

NCR

$$NOUN\,(t1 \supset n5)$$
$$(v=, p=1.\,0)$$

$$|$$

$$boy\,(t2 \supset n6)$$

(84)

# U12

SCR

$$\left[\begin{array}{c} NOUN\,(t1 \supset n5) \\ (v=, p=1.\,0) \\ \triangle\,E \end{array}\right]$$

(85)

U2

ALC

$$NOUN\,(t1)$$
$$(v=, p=1.\,0)$$
$$\triangle\,F$$

$$\supset$$

$$NOUN\,(n5)$$
$$\triangle\,W11$$

NCR

$$NOUN\,(t1)$$
$$(v=, p=1.\,0)$$
$$\triangle\,F$$

EXC

(86)

U2

ALC

$$NOUN\,(t1)$$
$$(v=, p=1.\,0)$$
$$|$$
$$dogs\,(t2)$$

$$\supset$$

$$NOUN(n5)$$
$$|$$
$$boy(n6)$$

NCR

$$NOUN\,(t1)$$
$$(v=, p=1.\,0)$$
$$|$$
$$dogs\,(t2)$$

EXC

(87)

# FIG.112

U4

NCR

NOUN(t1⊃n5)
(v=, p=1.0)

|

dogs(t2)

(88)

U21

ACR

NP(t1⊃n1)　　　NP(t1⊃n1)　　　NP(t1⊃n14)　NP(t1⊃n14)　　NOUN(t1⊃n5)
(v=, p=1.5)　　　(v=, p=3.5)　　　(v=, p=5.0)　(v=, p=2.66)　　(v=, p=1.0)

A　　　　　D　　　　　B　　　C　　　　E

NP#(t4⊃n14)　NOUN#(t5⊃n5)　NOUN#(t9⊃n10)　　　　NOUN#(t6⊃n26)

OR

NOUN(n10)　　　　NOUN(n26)

W21　　　　Z31

(89)

U23

ORH

NOUN(n10)

W21

OR

NOUN(n26)

Z31

(90)

U25

EXC

NP(t1)　　　NP(t1)　　　NP(t1)　　　NP(t1)　　　NOUN(t1)　　NOUN(t1)
(v=, p=1.5)　(v=, p=5.0)　(v=, p=2.66)　(v=, p=3.5)　(v=, p=1.0)　(v=, p=1.0)

A　　　　B　　　　C　　　　D　　　　E　　　　F

NP(t4)　　　　　　NOUN(t6)　NOUN(t6)　NOUN(t6)

(91)

# FIG.113

U2
ALC                                    NCR                        EXC

NOUN(t1)                              NOUN(t1)
(v=, p=1.0)          ●NOUN(n10)       (v=, p=1.0)

⟨F⟩            ⊃      ⟨W21⟩            ⟨F⟩        [          ]

(92)

U2
ALC                                    NCR
NOUN(t1)                               NOUN(t1)
(v=, p=1.0)         NOUN(n10)          (v=, p=1.0)

|                ⊃        |                 |
dogs(t2)              dogs(n11)         dogs(t2)

(93)

U4
NCR
NOUN(t1⊃n10)
(v=, p=1.0)
|
dogs(t2)

(94)

U9
UPA    [ dogs(t2)    ⊃    dogs(n11) ]

(95)

U11
ALC

dogs(t2)    ⊃    dogs(n11)

(96)

U4
NCR
NOUN(t1⊃n10)
(v=, p=1.0)
|
dogs(t2⊃n11)

(97)

# FIG.114

U12

SCR

$$\left[ \begin{array}{c} \text{NOUN} (t1 \supset n10) \\ (v=, p=1.0) \\ \triangle F \end{array} \right]$$

(98)

U21

ACR

$$\left[ \begin{array}{cccc} \boxed{\text{NP} (t1 \supset n1) \quad\quad \text{NP} (t1 \supset n1)} & \boxed{\text{NP} (t1 \supset n14) \quad \text{NP} (t1 \supset n14)} \\ (v=, p=1.5) \quad\quad (v=, p=3.5) & (v=, p=5.0) \quad\quad (v=, p=2.66) \\ \triangle A \quad\quad \triangle D & \triangle B \quad\quad \triangle C \\ \text{NP\#} (t4 \supset n14) \quad \text{NOUN\#} (t5 \supset n5) \quad \text{NOUN\#} (t9 \supset n10) & \text{NOUN\#} (t6 \supset n26) \end{array} \right.$$

$$\left[ \begin{array}{cc} \boxed{\text{NOUN} (t1 \supset n5)} & \boxed{\text{NOUN} (t1 \supset n10)} \\ (v=, p=1.0) & (v=, p=1.0) \\ \triangle E & \triangle F \end{array} \right]$$

OR

$$\left[ \begin{array}{c} \bullet \text{NOUN} (n26) \\ \triangle Z31 \end{array} \right]$$

(99)

U23

ORH

$$\begin{array}{c} \bullet \text{NOUN} (n26) \\ \triangle Z31 \end{array}$$

OR

$$\left[ \quad \right]$$

(100)

# FIG.115

U25

EXC

$$\left\{ \begin{array}{cccccc} \text{NP(t1)} & \text{NP(t1)} & \text{NP(t1)} & \text{NP(t1)} & \text{NOUN(t1)} & \text{NOUN(t1)} \\ \text{(v=, p=1.5)} & \text{(v=, p=5.0)} & \text{(v=, p=2.66)} & \text{(v=, p=3.5)} & \text{(v=, p=1.0)} & \text{(v=, p=1.0)} \end{array} \right\}$$

A    B    C    D    E    F

NP(t4)    NOUN(t6)    NOUN(t6)   NOUN(t6)

(100)

U2

ALC        NCR        EXC

NOUN(t1)        NOUN(t1)
(v=, p=1.0)      (v=, p=1.0)

F   ⊃   Z31   NOUN(n26)    F

(101)

U2   ALC            NCR

NOUN(t1)            NOUN(t1)
(v=, p=1.0)    NOUN(n26)   (v=, p=1.0)

dogs(t2)   ⊃   dogs(n27)    dogs(t2)

(102)

U4

NCR

NOUN(t1⊃n26)
(v=, p=1.0)

dogs(t2)

(103)

U9

UPA $\left[ \text{dogs(t2)} \quad ⊃ \quad \text{dogs(n27)} \right]$

(104)

# FIG.116

U11
ALC

dogs(t2)        ⊃        dogs(n27)

(105)

U4

NCR
NOUN(t1⊃n26)
(v=, p=1. 0)
|
dogs(t2⊃n27)

(106)

# U12

SCR

NOUN(t1⊃n26)
(v=, p=1. 0)

F

(107)

# U21

ACR

| NP(t1⊃n1)          NP(t1⊃n1) | | NP(t1⊃n14)   NP(t1⊃n14) |

(v=, p=1. 5)        (v=, p=3. 5)        (v=, p=5. 0)        (v=, p=2. 66)

A          D          B          C

NP#(t4⊃n14)  NOUN#(t5⊃n5)  NOUN#(t9⊃n10)          NOUN#(t6⊃n26)

NOUN(t1⊃n5)      NOUN(t1⊃n10)      NOUN(t1⊃n26)

(v=, p=1. 0)        (v=, p=1. 0)        (v=, p=1. 0)

E          F          F

OR

(108)

# FIG.117

FIG.118

<decision element of non-inclusion of forbidden tree>

(array of allele exclusive tree groups)

G.parsed tree generation module

K.maximum value tree generation unit

W.generation module of parsed tree not including forbidden tree

X.unit for detecting non-inclusion of extra-regional forbidden tree in exclusive tree

Y.element for detecting non-inclusion of forbidden tree in exclusive tree

A.composing node acquisition element

K.maximum value tree generation unit

C.maximum value tree construction unit

parsed tree generation part

(output parsed tree of input sentence)

# FIG.119

ACR

n1ACR

| NP(t1⊃n1) | NP(t1⊃n1) |

(v=
p=1.5)

△ A ●

(v=
p=3.5)

△ D ● ●

NP#(t4⊃n14)  NOUN#(t5⊃n5) NOUN#(t9⊃n10)

n14ACR

| NP(t1⊃n14) | NP(t1⊃n14) |

(v=
p=5.0)

△ B

(v=
p=2.66)

△ C ●

NOUN#(t6⊃n26)

n5ACR

| NOUN(t1⊃n5) |

(v=
p=1.0)

△ E

n10ACR

| NOUN(t1⊃n10) |

(v=
p=1.0)

△ F

n26ACR

| NOUN(t1⊃n26) |

(v=
p=1.0)

△ F

# FIG.120

NP(n1)
(v=6.5
p=1.5)

A

NP#(n14)
(v=5.0
p=5.0)

B

(1)

NP(n1)
(v=5.16
p=1.5)

A

NP#(n14)
(v=3.66
p=2.66)

C

NOUN#(n26)
(v=1.0
p=1.0)

F

(2)

NP(n1)
(v=5.5
p=3.5)

D

NOUN#(n5)          NOUN#(n10)
(v=1.0              (v=1.0
p=1.0)              p=1.0)

E                   F

(3)

# FIG.121

NP(n1)
(v=6.5
p=1.5)

DET NP(n14)
| (v=5.0
a p=5.0)

NOUN PP

PREP NOUN

boy with dogs

(1)

NP(n1)
(v=5.16
p=1.5)

DET NP(n14)
| (v=3.66
a p=2.66)

NOUN PREP NOUN(n26)
| | (v=1.0
boy with p=1.0)

dogs

(2)

NP
(v=5.5
p=3.5)

NP PP

DET NOUN(n5) PREP NOUN(n10)
| (v=1.0 (v=1.0
a p=1.0) with p=1.0)

boy dogs

(3)

# FIG.122

Anx?

$V(1)=p+Anv+Anw$ 〉 $V(2)=q$ 〉 $V(3)=r+Any+Anz=0$

nx

P
pattern
value=p

Q
pattern
value=q

R
pattern
value=r

nv        nw

ny        nz

Anv?  Anw?

(1)

Any?        Anz?

$Anx=V(1)=p+Anv+Anw$

$V(1)=p+Anv+Anw$ 〉 $V(2)=q$ 〉 $V(3)=r+Any+Anz=0$

nx

P
pattern
value=p

Q
pattern
value=q

R
pattern
value=r

nv        nw

ny        nz

Anv   Anw

(2)

Any=0        Anz

# FIG.123

An1?

| NP (n1) | NP (n1) |
|---|---|

(v=
p=1. 5)

A

NP (n14)

An14?

(v=
p=3. 5)

D

NOUN (n5)　　NOUN (n10)

An5?　An10?

(1)

An14?

| NP (n14) | NP (n14) |
|---|---|

(v=5. 0
p=5. 0)

B

(v=
p=2. 66)

C

NOUN (n26)

An26?

(2)

An26?

NOUN (n26)

(v=
p=1. 0)

F

(3)

An26=f =1.0

NOUN (n26)

(v=1. 0
p=1. 0)

F

(4)

An14=A(1)=b=5.0

A(1)=b=5.0 ⟩ A(2)=c+An26=3.66

| NP (n14) | NP (n14) |
|---|---|

(v=5. 0
p=5. 0)

B

(v=3. 66
p=2. 66)

C

NOUN (n26)

An26=f=1.0

(5)

| NP (n1) | NP (n1) |
|---|---|

(v=6. 0
p=1. 5)

A

NP (n14)

An14=b=5.0

(v=
p=3. 5)

D

NOUN (n5)　　NOUN (n10)

An5?　An10?

(6)

An5?

NOUN (n5)

(v=
p=1. 0)

E

(7)

An5=1.0

NOUN (n5)

(v=1. 0
p=1. 0)

E

(8)

An1?

| NP (n1) | NP (n1) |
|---|---|

(v=6. 0
p=1. 5)

A

NP (n14)

An14=b=5.0

(v=
p=3. 5)

D

NOUN (n5)　　NOUN (n10)

An5=e=1.0　An10?

(9)

An10?

NOUN (n10)

(v=
p=1. 0)

F

(10)

An10=1.0

NOUN (n10)

(v=1. 0
p=1. 0)

F

(11)

An1=A(1)=b+a=6.5

A(1)=b+a=6.0 ⟩ A(2)=e+f+d==5.5

| NP (n1) | NP (n1) |
|---|---|

(v=6.5
p=1. 5)

A

NP (n14)

An14=b=5.0

(v=5. 5
p=3. 5)

D

NOUN (n5)　　NOUN (n10)

An5=e=1.0　An10=f=1.0

(12)

NP (n1)
(v=6. 0
p=1. 5)

A

NP (n14)
(v=5. 0
p=5. 0)

B

(13)

# FIG.124

## algorithm of maximum value tree generation unit

K1  designation from upper layer

OR tree node number nu which calls current OR tree number nx is given by upper layer nu. Relying on nx, exclusive trees group at item nxACR concerning to node nx of allelic exclusive tree register ACR is extracted from ACR and introduced in exclusive tree register nxACR.

K12 completion of allelic exclusive tree group

Exclusive trees in processing register nxPACR are placed to the left to right in the descending order of their v values. Exclusive tree with 0 v value is eliminated. Attribute f is attached to the leftmost tree which is selected exclusive tree and whose value v is selected value Anx. When there is no exclusive tree in nxPACR, one single node with 0 Anx value is left in nxPACR. Exclusive trees thus arranged are stored in exclusive tree register nxACR overwriting former data.

K2  decision over antecedent treatment

1st exclusive tree in exclusive tree register ACR has attribute f.          yes

K3 decision over existence of untreated tree          no

no          terms remain in nxACR

K4 output of 1st term of nxACR  yes

1st exclusive tree in exclusive tree register nxACR is introduced in holding memory nxTPD. Pattern value is introduced to accumulation memory nxACC. After resetting nxLCR,lower border array is composed in lower border array nxLCR.

K5 decision over existence of lower border array

terms remain in nxLCR.          no

yes

K6 decision over existence of unprocessed lower border tree

terms remain in nxLCR.          no

K7 instruction to lower node   yes

Tree number of 1st exclusive tree of tree array stored in lower border array nxLCR is extracted and indication of operation is issued to the flow chart of lower layer treating tree number extracted."

(operation at lower maximum value tree generation unit called by current layer)

K8 decision over existence of lower null tree

Lower Anx value is 0.          yes

K9 addition of lower value  no

This process adds the lower selected value to the value in accumulation memory nxACC.

K11 completion of exclusive tree

After introducing value stored in nxACC to column v of tree in nxTPD, the tree is introduced to the right of meaningful data in processing register nxPACR. Registers nxTPD, nxLCR and memory nxACC are reset.

K10 zero value setting

value in nxACC is set to 0.

K13  response to upper layer

Information of termination of operation concerning to current OR node number nx together with Anx value obtained as value v of leftmost tree in exclusive tree register nxACR are reported to the upper layer of node number nu which called current layer. Allelic exclusive tree group in exclusive tree register nxACR is introduced ,without altering group shape, to nxACR wich is an item representing node nx of allelic exclusive tree resister ACR overwriting former contents.

# FIG.125

FIG.126

n26ACR

$$\left[\begin{array}{c} \text{(f)NOUN(t1} \supset \text{n26)} \\ \text{(v=1.0} \\ \text{p=1.0)} \\ \triangle F \end{array}\right]$$

(10)

An26=1.0 ➡ n14

(11)

n26ACR

NOUN(t1 ⊃ n26)
(v=
p=1.0)
△ F

(f)NOUN(t1 ⊃ n26)
(v=1.0
p=1.0)
△ F

➡

(12)

n14ACC
3.66

(13)

n14TPD

NP(t1 ⊃ n14)
(v=3.66
p=2.66)
△ C ●
NOUN#(t6 ⊃ n26)

(14)

n14PACR

$$\left[\begin{array}{cc} \text{NP(t1} \supset \text{n14)} & \text{NP(t1} \supset \text{n14)} \\ \text{(v=5.0} & \text{(v=3.66} \\ \text{p=5.0)} & \text{p=2.66)} \\ \triangle B & \triangle C \bullet \\ & \text{NOUN\#(t6} \supset \text{n26)} \end{array}\right]$$

(15)

n14ACR

$$\left[\begin{array}{cc} \text{(f)NP(t1} \supset \text{n14)} & \text{NP(t1} \supset \text{n14)} \\ \text{(v=5.0} & \text{(v=3.66} \\ \text{p=5.0)} & \text{p=2.66)} \\ \triangle B & \triangle C \bullet \\ & \text{NOUN\#(t6} \supset \text{n26)} \end{array}\right]$$

(16)

An14=5.0 ➡ n1

(17)

n14ACR

NP(t1 ⊃ n14)  NP(t1 ⊃ n14)
(v=
p=5.0)       p=2.66)
△ B          △ C ●
             NOUN#(t6 ⊃ n26)

➡

(f)NP(t1 ⊃ n14)  NP(t1 ⊃ n14)
(v=5.0           (v=3.66
p=5.0)           p=2.66)
△ B              △ C ●
                 NOUN#(t6 ⊃ n26)

(18)

# FIG.127

n1ACC          n1TPD

6.5          NP(t1⊃n1)
            (v=6.5
            p=1.5)

     △ A ●

            NP#(t4⊃n14)

(19)          (20)

n1PACR

[ NP(t1⊃n1)
  (v=6.5
  p=1.5)

  △ A ●

  NP#(t4⊃n14) ]

(21)

n1TPD          n1ACC          n1LCR

NP(t1⊃n1)          3.5          (n5 n10)
(v=
p=3.5)

△ D ● ●

NOUN#(t5⊃n5)   NOUN#(t9⊃n10)

(22)

n5ACR

[ NOUN(t1⊃n5)
  (v=
  p=1.0)

  △ E ]

(23)

n5TPD

NOUN(t1⊃n5)
(v=
p=1.0)

△ E

n5ACC     n5LCR

1.0          ( )

(24)

n5PACR

[ NOUN(t1⊃n5)
  (v=1.0
  p=1.0)

  △ E ]

(25)

n5ACR

[ (f)NOUN(t1⊃n5)
  (v=1.0
  p=1.0)

  △ E ]

(26)

An5=1.0 ➡ n1

(27)

n5ACR

( NOUN(t1⊃n5) )
(v=
p=1.0)

△ E

➡

( (f)NOUN(t1⊃n5) )
(v=1.0
p=1.0)

△ E

(28)

n1ACC          n10ACR

4.5

[ NOUN(t1⊃n10)
  (v=
  p=1.0)

  △ F ]

(29)          (30)

n10TPD          n10ACC   n10LCR

NOUN(t1⊃n10)          1.0          ( )
(v=
p=1.0)

△ F

(31)

# FIG.128

n10PACR

$$\left\{ \begin{array}{c} \text{NOUN}(t1 \supset n10) \\ (v=1.0 \\ p=1.0) \\ \triangle F \end{array} \right\}$$

(32)

n10ACR

$$\left\{ \begin{array}{c} (f)\text{NOUN}(t1 \supset n10) \\ (v=1.0 \\ p=1.0) \\ \triangle F \end{array} \right\}$$

(33)

An10=1.0 → n1

(34)

n10ACR

$$\boxed{\text{NOUN}(t1 \supset n10)} \quad (v= \\ p=1.0) \quad \triangle F$$

→

$$\boxed{(f)\text{NOUN}(t1 \supset n10)} \quad (v=1.0 \\ p=1.0) \quad \triangle F$$

(35)

n1ACC

5.5

(36)

n1TPD

$$\text{NP}(t1 \supset n1) \\ (v=5.5 \\ p=3.5) \\ \triangle D \\ \text{NOUN\#}(t5 \supset n5) \quad \text{NOUN\#}(t9 \supset n10)$$

(37)

n1PACR

$$\left\{ \begin{array}{cc} \text{NP}(t1 \supset n1) & \text{NP}(t1 \supset n1) \\ (v=6.5 & (v=5.5 \\ p=1.5) & p=3.5) \\ \triangle A & \triangle D \\ \text{NP\#}(t4 \supset n14) & \text{NOUN\#}(t5 \supset n5) \quad \text{NOUN\#}(t9 \supset n10) \end{array} \right\}$$

(38)

n1ACR

$$\left\{ \begin{array}{cc} (f)\text{NP}(t1 \supset n1) & \text{NP}(t1 \supset n1) \\ (v=6.5 & (v=5.5 \\ p=1.5) & p=3.5) \\ \triangle A & \triangle D \\ \text{NP\#}(t4 \supset n14) & \text{NOUN\#}(t5 \supset n5) \quad \text{NOUN\#}(t9 \supset n10) \end{array} \right\}$$

(39)

n1ACR

$$\left\{ \boxed{\text{NP}(t1 \supset n1) \qquad \text{NP}(t1 \supset n1)} \\ (v= \qquad\qquad (v= \\ p=1.5) \qquad p=3.5) \\ \triangle A \qquad\qquad \triangle D \\ \text{NP\#}(t4 \supset n14) \quad \text{NOUN\#}(t5 \supset n5) \quad \text{NOUN\#}(t9 \supset n10) \right\}$$

→

n1ACR

$$\boxed{(f)\text{NP}(t1 \supset n1) \qquad \text{NP}(t1 \supset n1)} \\ (v=6.5 \qquad\qquad (v=5.5 \\ p=1.5) \qquad\qquad p=3.5) \\ \triangle A \qquad\qquad \triangle D \\ \text{NP\#}(t4 \supset n14) \quad \text{NOUN\#}(t5 \supset n5) \quad \text{NOUN\#}(t9 \supset n10)$$

(40)

# FIG.129

ACR

(f)NP(t1⊃n1)　　　NP(t1⊃n1)

(v=6.5
p=1.5)

A

NP#(t4⊃n14)　NOUN#(t5⊃n5)　NOUN#(t9⊃n10)

(v=5.5
p=3.5)

D

(f)NP(t1⊃n14)　　　NP(t1⊃n14)

(v=5.0
p=5.0)

B

(v=3.66
p=2.66)

C

NOUN#(t6⊃n26)

(f)NOUN(t1⊃n5)

(v=1.0
p=1.0)

E

(f)NOUN(t1⊃n10)

(v=1.0
p=1.0)

F

(f)NOUN(t1⊃n26)

(v=1.0
p=1.0)

F

# FIG.130

ACR

NP(t1⊃n1)          NP(t1⊃n1)

(v=
p=1.5)

(v=
p=3.5)

A

D

NP#(t4⊃n14)    NOUN#(t5⊃n5)  NOUN#(t9⊃n10)

n14ACR

NP(t1⊃n14)

(v=
p=2.66)

C

NOUN#(t6⊃n26)

n5ACR

NOUN(t1⊃n5)

(v=
p=1.0)

E

n10ACR

NOUN(t1⊃n10)

(v=
p=1.0)

F

n26ACR

NOUN(t1⊃n26)

(v=
p=1.0)

F

# FIG.131

ACR

(f)NP(t1⊃n1)    NP(t1⊃n1)    (f)NP(t1⊃n14)
(v=5.5         (v=5.16        (v=3.66
 p=3.5)         p=1.5)         p=2.66)

D      A      C

NOUN#(t5⊃n5) NOUN#(t9⊃n10)    NP#(t4⊃n14)    NOUN#(t6⊃n26)

(f)NOUN(t1⊃n5)    (f)NOUN(t1⊃n10)    (f)NOUN(t1⊃n26)
(v=1.0            (v=1.0             (v=1.0
 p=1.0)            p=1.0)             p=1.0)

E      F      F

# FIG.132

(f)NP(t1⊃n1)
(v=6.5
p=1.5)

A

NP#(t4⊃n14)   ≡

(f)NP(t1⊃n14)
(v=5.0
p=5.0)

B

NP(n1)

DET — NP(n14)

a

NOUN — PP

boy

PREP — NOUN

with   dogs

(1)

(f)NP(t1⊃n1)
(v=5.5
p=3.5)

D

NOUN#(t5⊃n5)   NOUN#(t9⊃n10)   ≡

(f)NOUN(t1⊃n5)   (f)NOUN(t1⊃n10)
(v=1.0           (v=1.0
p=1.0)           p=1.0)

E               F

NP(n1)

NP — PP

DET — NOUN(n5)   PREP — NOUN(n10)

a   boy   with   dogs

(2)

# FIG.133

K12-11

Tree value array extracted from exclusive tree array recorded in processing register nxPACR together with start indication are given from outside of this sub-program.

K12-12

i and j are set as j = 1 i=n.

K12-13

j ≧ n

yes

no

K12-14

i > j

no

yes

K12-18

value of j is increased by 1 and setting of i=n is done.

K12-15

E (i-1)< E(i)

no

yes

K12-16

Order alternation is applied between E(i-1) and E(i).

K12-19

End of operation. Input order number is arranged in the descending order of tree value of exclusive trees composing output of sub-program.

K12-17

Value of variable i is decreased by 1.

# FIG.134

C1 input of allelic exclusive tree

Output of maximum value tree generation unit which is allelic exclusive tree group is introduced and stored in allelic exclusive register ICR. This allelic exclusive tree group has a selected tree with highest tree value and attribute "f" together with other exclusive trees which are placed after the selected tree and are arranged in descending order of their accumulated tree values . The selected tree having designated node as topmost node is introduced in assembly register TCR. The node designated as topmost node of maximum tree value tree is called topmost node of maximum tree value tree.

C2   decision over completion
of construction          symbol "#" exists in TCR.          no

C3   node merge          yes

(1)The node having least node number among nodes with symbol # stored in assembly register TCR is chosen as processing object. (2)The exclusive tree having topmost node whose node number is identical with the node number of processing object and ,moreover, having attribute "f" is chosen from trees in allelic exclusive tree register ICR. The copy of chosen exclusive tree is obtained from ICR without altering the data in ICR. (3)The node consisting processing object and the topmost node of exclusive tree obtained from ICR are merged together. Symbo "#" and attribute "f" are removed from merged node.

C4   output of assembled tree with
maximum tree value

A tree in assembly resister TCR is output as the output of maximum tree value tree construction unit.

# FIG.135

TCR

(f)NP(t1⊃n1)
(v=6.5
p=1.5)

A

NP#(t4⊃n14)

(1)

1st portion of group n14
in allele exclusive register ICR

(f)NP(t1⊃n14)
(v=5.0
p=5.0)

B

(2)

TCR
(f)NP(t1⊃n1)
(v=6.5
p=1.5)

A

B

(3)

# FIG.136

**FIG.137**

NP(t1⊃n1)
(v=6. 5
p=1. 5)

DET(t2⊃n12)                    NP#(t4⊃n14)

(A)
NOUN(t2⊃n15)            PP(t4⊃n17)

(B)    PREP(t5⊃n18)    NOUN(t6⊃n20)

a(t3⊃n13)        boy(t3⊃n16)    with(t6⊃n19)    dogs(t7⊃n21)

# FIG.138

NP
$(t1 \supset n1)$
|
OR

NP
(n2)

PP
(n7)

DET
$(t2 \supset n12)$

NP
$(t4 \supset n14)$
|
OR

DET    NOUN
(n3)    (n5)

PREP    NOUN
(n8)    (n10)

NOUN
$(t2 \supset n15)$

PP
$(t4 \supset n17)$

NOUN    PREP    NOUN
(n22)    (n24)    (n26)

PREP    NOUN
$(t5 \supset n18)$    $(t6 \supset n20)$

a    boy
(n4)    (n6)

with    dogs
(n9)    (n11)

a
$(t3 \supset n13)$

boy
$(t3 \supset n16)$

with
$(t6 \supset n19)$

dogs
$(t7 \supset n21)$

boy
(n23)

with
(n25)

dogs
(n27)

# FIG.139

TCR        1st portion of group n5 in          TCR        1st portion of group n10        TCR
            allele exclusive register ICR                  in allele exclusive register ICR

(f)NP(t1⊃n1)      (f)NOUN(t1⊃n5)    (f)NP(t1⊃n1)      (f)NOUN(t1⊃n10)      (f)NP(t1⊃n1)
(v=5.5           (v=1.0            (v=5.5           (v=1.0              (v=5.5
p=3.5)           p=1.0)            p=3.5)           p=1.0)              p=3.5)

$D$              $E$               $D$              $F$                 $D$

NOUN#  NOUN#                       NOUN#                                $E$  $F$
(t5⊃n5)  (t9⊃n10)                  $E$  (t9⊃n10)

(1)              (2)               (3)              (4)                 (5)

# FIG.140

NP(t1⊃n1)
(v=5. 5
p=3. 5)

NP(t2⊃n2)          (D)          PP(t6⊃n7)

DET(t3⊃n3)   NOUN#(t5⊃n5)   PREP(t7⊃n8)   NOUN#(t9⊃n10)
                    (E)                              (F)

a(t4⊃n4)   boy(t2⊃n6)   with(t8⊃n9)   dogs(t2⊃n11)

# FIG.141

ACR

(f)NP(t1⊃n1)     NP(t1⊃n1)

(v=6.5      (v=5.5
p=1.5)      p=3.5)

△ A        △ D ● ●

NP#(t4⊃n14)  NOUN#(t5⊃n5)  NOUN#(t9⊃n10)

(f)NP(t1⊃n14)     NP(t1⊃n14)

(v=5.0      (v=3.66
p=5.0)      p=2.66)

△ B        △ C ●

NOUN#(t6⊃n26)

(f)NOUN(t1⊃n5)

(v=1.0
p=1.0)

△ E

(f)NOUN(t1⊃n10)

(v=1.0
p=1.0)

△ F

(f)NOUN(t1⊃n26)

(v=1.0
p=1.0)

△ F

# FIG.142

NP(t1⊃n1)　　　　　　　NP(t1⊃n1)
(v=6.5　　　　　　　　(v=5.5
p=1.5)　　　　　　　　p=3.5)

DET(t2⊃n12)　NP#(t4⊃n14)　　NP(t2⊃n2)　　　　　　PP(t6⊃n7)

a(t3⊃n13)　(A)　　DET(t3⊃n3)　NOUN#(t5⊃n5)　PREP(t7⊃n8)　NOUN#(t9⊃n10)

a(t4⊃n4)　(D)　with(t8⊃n9)

NP(t1⊃n14)　　　　　　　　　　NP(t1⊃n14)
(v=5.0　　　　　　　　　　　　(v=3.66
p=5.0)　　　　　　　　　　　　p=2.66)

NOUN(t2⊃n15)　PP(t4⊃n17)　　NOUN(t2⊃n22)　PREP(t4⊃n24)　NOUN#(t6⊃n26)

(B)　PREP(t5⊃n18)　NOUN(t6⊃n20)　boy(t3⊃n23)　with(t5⊃n25)　(C)

boy(t3⊃n16)　with(t6⊃n19)　dogs(t7⊃n21)

NOUN(t1⊃n5)　　　NOUN(t1⊃n10)　　　NOUN(t1⊃n26)
(v=1.0　　　　　　(v=1.0　　　　　　(v=1.0
p=1.0)　　　　　　p=1.0)　　　　　　p=1.0)

(E)　　　　　　(F)　　　　　　(F)
boy(t2⊃n6)　　　dogs(t2⊃n11)　　　dogs(t2⊃n27)

# FIG.143

**FIG.144**

NP(t1⊃n1)　　　　　　　　　NP(t1⊃n1)

(v=6.5　　　　　　　　　　　(v=5.5
p=1.5)　　　X3　　　　　　　p=3.5)

DET(t2⊃n12)　NP#(t4⊃n14)　NP(t2⊃n2)　　　　　　PP(t6⊃n7)

　　　　　　　　　(A)　　NP(t2⊃n2)　　PREP(t7⊃n8)　NOUN#(t9⊃n10)

a(t3⊃n13)　　　　　DET(t3⊃n3)　NOUN#(t5⊃n5)

　　　　　　　　　　　　　　　　　　　　　(D)　　with(t8⊃n9)

　　　　　　　　　　　a(t4⊃n4)

NP(t1⊃n14)　　　　　　　　　　　NP(t1⊃n14)

X1　　(v=5.0　　　　　　　　　　(v=3.66
　　　p=5.0)　　　　　　　　　　p=2.66)

NOUN(t2⊃n15)　　PP(t4⊃n17)　NOUN(t2⊃n22)　PREP(t4⊃n24)　NOUN#(t6⊃n26)

NOUN(t2⊃n15)　　　　　　　　　　　　　　　　　　　(C)

　　　　　　　　　　　　　　boy(t3⊃n23)　with(t5⊃n25)

　　　(B)　PREP(t5⊃n18)　NOUN(t6⊃n20)

boy(t3⊃n16)　with(t6⊃n19)　NOUN(t6⊃n20)

　　　　　　　　　　　　dogs(t7⊃n21)

　　　　　　　NOUN(t1⊃n5)　　NOUN(t1⊃n10)　　NOUN(t1⊃n26)

　　　　　　　(v=1.0　　　　　(v=1.0　　　　　(v=1.0
X2　　　　　　p=1.0)　　　　　p=1.0)　　　　　p=1.0)

　　　　　　　　　(E)　　　　　　(F)　　　　　　(F)

　　　　　　boy(t2⊃n6)　　dogs(t2⊃n11)　　dogs(t2⊃n27)

# FIG.145

NP(t1⊃n1)  NP(t1⊃n1)
(v=6.5  (v=5.5
p=1.5)  p=3.5)

DET(t2⊃n12)  NP#(t4⊃n14)  NP(t2⊃n2)  PP(t6⊃n7)

(A)  DET(t3⊃n3)  NOUN#(t5⊃n5)  PREP(t7⊃n8)  NOUN#(t9⊃n10)

a(t3⊃n13)  (D)

a(t4⊃n4)  with(t8⊃n9)

NP(t1⊃n14)  NOUN(t1⊃n5)  NOUN(t1⊃n10)  NOUN(t1⊃n26)
(v=3.66  (v=1.0  (v=1.0  (v=1.0
p=2.66)  p=1.0)  (E)  p=1.0)  (F)  p=1.0)  (F)

NOUN(t2⊃n22)  PREP(t4⊃n24)  NOUN#  boy(t2⊃n6)  dogs(t2⊃n11)  dogs(t2⊃n27)
(C)  (t6⊃n26)

boy(t3⊃n23)  with(t5⊃n25)

(1)

NP(t1⊃n1)  NP(t1⊃n14)
(v=6.5  (v=3.66
p=1.5)  p=2.66)

DET(t2⊃n12)  NP#(t4⊃n14)  NOUN(t2⊃n22)  PREP(t4⊃n24)  NOUN#(t6⊃n26)

(A)  (C)

a(t3⊃n13)  boy(t3⊃n23)  with(t5⊃n25)

NOUN(t1⊃n10)  NOUN(t1⊃n26)
(v=1.0  (v=1.0
p=1.0)  p=1.0)
(F)  (F)

dogs(t2⊃n11)  dogs(t2⊃n27)

(2)

# FIG.146

NP(t1⊃n1)
(v=6.5
p=1.5)

DET(t2⊃n12)          NP(t1⊃n14)
          (A)         (v=5.0
                       p=5.0)
a(t3⊃n13)

                NOUN(t2⊃n15)          PP(t4⊃n17)

                          (B)    PREP(t5⊃n18)    NOUN(t6⊃n20)

                boy(t3⊃n16)    with(t6⊃n19)    dogs(t7⊃n21)

(1)

NP(t1⊃n1)
(v=5.5
p=3.5)

NP(t2⊃n2)                          PP(t6⊃n7)

DET(t3⊃n3)    NOUN(t1⊃n5)    PREP(t7⊃n8)    NOUN(t1⊃n10)
              (v=1.0                          (v=1.0
a(t4⊃n4)       p=1.0)        with(t8⊃n9)       p=1.0)

                    (E)

              boy(t2⊃n6)                      dogs(t2⊃n11)

(2)

NP(t1⊃n1)
(v=5.16
p=1.5)

DET(t2⊃n12)          NP(t1⊃n14)
                      (v=3.66
a(t3⊃n13)             p=2.66)

          NOUN(t2⊃n22)    PREP(t4⊃n24)          NOUN(t1⊃n26)
                                       (C)       (v=1.0
          boy(t3⊃n23)    with(t5⊃n25)            p=1.0)

(3)                                             dogs(t2⊃n27)

# FIG.147

```
              NP
          ┌────┴────┐
         DET        NP
          │     ┌────┴────┐
          a   NOUN       PP   (A)
                      ┌───┴───┐
                    PREP     NOUN
                      │
                    with
```

# FIG.148

Y1 : start of operation

An introduced exclusive tree and a forbidden tree is united into a pair. The pair is introduced in unprocessed pair array UPA and processing unit CPU. This process initiates the operation.

Y2 : detection over coincidence of topmost node names

no

Topmost node names are identical.

Y3 : decision over existence of child node in forbidden tree

yes

Forbidden tree has child node.

no

Y4 : survey on border node

yes

Exclusive tree node is border node.

yes

Y5 : survey on child node

no

Exclusive tree has child node.

no

Y6 : detection over coincidence of topmost nodes

yes

no

arrays of topmost nodes of child trees are identical

Y7 : border node pair recording

Y8 : composition of child tree array

yes

Concerning two arrays composed of child trees directly under topmost nodes of exclusive tree and forbidden tree respectively, each exclusive tree side element is united into pair with forbidden side element of the same order. These pairs are introduced to the leftmost position of unprocessed pair array UPA keeping original order in child tree arrays.

Extra-regional forbidden tree is placed at the right of existing trees in border node register BNR after border node number is given to its topmost node. This process sets border flag ON to memorize that this operation is once activated.

Y9 : decision over existence of unprocessed pair

yes

Y11 : survey on border node

Unprocessed pair array UPA is empty.

no

Y10 : taking out of processing object

Border flag is ON.

no

Y12 : output of locally yes

Y14 : output of locally uncertain

yes

Y13 : output of locally no

1st pair of UPA is taken out and introduced into processing unit CPU,

Locally yes information is output

Locally uncertain information is output. Data in border node register BNR is ouput. Border flag is set to OFF.

Locally no information is output

**FIG.149**

UPA、CPU

NP(n1) ▬ ▬ ▬ ▬ NP

DET(n12) NP#(n14)    DET    NP

a(n13)   (A)          a    NOUN   PP

                          PREP   NOUN

                          with

(1)

UPA

DET(n12) ▬ DET    NP#(n14) ▬ NP

a(n13)      a           NOUN   PP

                         PREP   NOUN

                         with

(2)

CPU          UPA

DET(n12) ▬ DET    NP#(n14) ▬ NP

a(n13)      a      NOUN   PP

                    PREP   NOUN

                    with

(3)

UPA

a(n13) ▬ a    NP#(n14) ▬ NP

              NOUN   PP

               PREP   NOUN

               with

(4)

CPU          UPA

a(n13) ▬ a    NP#(n14) ▬ NP

              NOUN   PP

               PREP   NOUN

               with

(5)

CPU          UPA

NP#(n14) ▬ NP

NOUN   PP

 PREP   NOUN

 with

(6)

BNR

NP(n14)          + Bflag=ON    locally uncertain +   NP(n14)

NOUN   PP                                          NOUN   PP

 PREP   NOUN                                        PREP   NOUN

 with                                               with

(7)                                                (8)

# FIG.150

UPA、CPU

NP(n14) ━ ━ ━ ━ NP(n14)

NOUN(n15)　　PP(n17)　　　NOUN　PP

　　　　(B)　PREP(n18)　NOUN(n20)　　PREP　NOUN

boy(n16)　with(n19)　dogs(n21)　with

(1)

UPA

NOUN(n15)━NOUN　　PP(n17)━ ━ ━ ━ PP

boy(n16)　PREP(n18)　NOUN(n20)　PREP　NOUN

with(n19)　dogs(n21)　with

(2)

CPU　　　　UPA

NOUN(n15)━NOUN　　PP(n17)━ ━ ━ PP

boy(n16)　PREP(n18)　NOUN(n20)　PREP　NOUN

with(n19)　dogs(n21)　with

(3)

CPU　　　　　　　　UPA

PP(n17)━ ━ ━ PP

PREP(n18)　NOUN(n20)　PREP　NOUN

with(n19)　dogs(n21)　with

(4)

UPA

PREP(n18)━PREP　NOUN(n20)━NOUN

with(n19)　with　dogs(n21)

(5)

CPU　　　　　　　UPA

PREP(n18)━PREP　　NOUN(n20)━NOUN

with(n19)　with　　dogs(n21)

(6)

UPA

with(n19)━with　NOUN(n20)━NOUN

dogs(n21)

(7)

UPA

with(n19)━with　　NOUN(n20)━NOUN

dogs(n21)

(8)

CPU　　　UPA

NOUN(n20)━NOUN

dogs(n21)

(9)

UPA　　　locally no

(10)

# FIG.151

NP (n14) ▬ ▬ ▬ ▬ ▬ ▬ ▬ NP (n14)       locally yes

NOUN (n22)      PREP (n24)       NOUN# (n26)      NOUN      PP

boy (n23)       with (n25)  (C)                        PREP    NOUN

                                                       with

(1)                                                          (2)

# FIG.152

unit for detecting non inclusion of extra-regional forbidden tree(topmost node type)

X1 : start of operation

This layer receives forbidden tree having ,at its topmost node, the layer number ni of this layer. This layer also receives layer number ni and depth of higher layer calling this layer. After introducing the copy of allelic exclusive tree group having layer number ni stored in global memory GTM into allele exclusive tree register CMR(ni), cursor is placed at the left end of CMR(ni). New depth value is calculated as a value lager than 1 of input depth value and accommodated in depth memory S(ni).

X2:decision over absence of exclusive tree — CMR(ni) is empty. — yes / no

X3:input of pair of exclusive tree and forbidden tree

A pair composed from exclusive tree of CMR(ni) on which cursor is placed and forbidden tree whose topmost node is affiliated with node number ni is made and introduced to decision element of non inclusion of forbidden tree.

Y:decision of non inclusion of forbidden tree — P — locally uncertain

locally no — Forbidden tree is not included. — Y

locally yes

X7 : deletion of exclusive tree Q

Exclusive tree which is stored in allelic exclusive tree register CMR(ni) and on which cursor is positioned is deleted. Exclusive trees situated after the deleted tree are moved leftward by one position. The cursor is moved leftward by one position unless cursor is positioned at the right end.

X8 : decision over absence of exclusive tree

yes — CMR(ni) is empty. — no

XS:decision of methodology — R

Depth is smaller than threshold. — no / yes

X9 : survey over cursor position

no — Cursor is on the end of CMR(ni). — yes

X10 : move of cursor

Cursor in CMR(ni) is moved 1 place rightward.

X4 : input of border forbidden tree

Group made of extra-regional exclusive trees whose topmost nodes are respective leaf border nodes which are accommodated in border node register BNR of Y(element for detecting non-inclusion of forbidden tree in exclusive tree) is introduced in border register BOD(ni). To the topmost node of each extra-regional exclusive tree, the node number is affiliated by the effect of process Y7(border node pair recording)."

X5:decision over emptiness of border register

yes — BOD(ni) is empty. — no

X6 : call of lower layer

Extra-regional forbidden tree positioned first at border register BOD(ni) is taken out and given to lower layer together with node number ni which becomes upper node number to lower layer.

(detection unit of non inclusion of forbidden tree with extra-regional extension situated lower)

Operation of "detection unit of non inclusion of forbidden tree with out of range extension" situated lower is conducted here. Input is out of range forbidden tree having topmost node with OR tree node number of border node. Output is decision of non inclusion of forbidden tree (yes) or negation of non inclusion (no). In case of yes, allele exclusive group after modification or in case of no, value null is ,in common, introduced to the portion belonging to input border node number of global memory GTM overwriting former data.

yes / no

X11 : output of yes

Decision of yes meaning success of non inclusion of forbidden tree is output to the layer of higher node number from which current layer is called. The trees in allele exclusive tree resister CMR(ni) overwrites former data in the portion of ni in global memory GTM.

**FIG.153**

X12 : output of no

Decision of no meaning failure of non inclusion of forbidden tree is output to the layer of higher node number from which current layer is called. Single node with tree value 0 overwrites former data in the portion of ni in global memory GTM.

GTM

NP (n1)    NP (n1)

DET (n12)    NP# (n14)    NP (n2)    (D)    PP (n7)

(A)    DET (n3)    NOUN# (n5)    PREP (n8)    NOUN# (n10)

a (n13)

a (n4)    with (n9)

NP (n14)    NP (n14)

NOUN (n15)    PP (n17)    NOUN (n22)    PREP (n24)    NOUN# (n26)

(B)    PREP (n18)    NOUN (n20)    boy (n23)    (C)    with (n25)

boy (n16)    with (n19)    dogs (n21)

NOUN (n5)    NOUN (n10)    NOUN (n26)

(E)    (F)    (F)

boy (n6)    dogs (t2⊃n11)    dogs (t2⊃n27)

# FIG.154

# FIG.155

FIG.156

**FIG.157**

NP(n1) ▬ ▬ ▬ ▬ ▬ ▬ ▬ NP(n1)

NP(n2)          PP(n7)          DET     NP

DET(n3)  NOUN#(n5)    PREP(n8)  NOUN#(n10)    a    NOUN    PP
         (D)                                        PREP  NOUN

a(n4)                 with(n9)                       with

(12)

# FIG.158

NP(t1⊃n1)                                              NP(t1⊃n1)
(v=5. 5                                                (v=5. 16
p=3. 5)                                                p=1. 5)

NP(t2⊃n2)                    PP(t6⊃n7)          DET(t2⊃n12)   NP#(t4⊃n14)

DET(t3⊃n3)   NOUN#(t5⊃n5)   PREP(t7⊃n8)  NOUN#(t9⊃n10)   a(t3⊃n13)   (A)
                    (D)

a(t4⊃n4)                    with(t8⊃n9)


NP(t1⊃n14)            NOUN(t1⊃n5)   NOUN(t1⊃n10)   NOUN(t1⊃n26)
(v=3. 66             (v=1. 0       (v=1. 0       (v=1. 0
p=2. 66)             p=1. 0)       p=1. 0)       p=1. 0)

NOUN(t2⊃n22) PREP(t4⊃n24) NOUN#(t6⊃n26)   (E)           (F)           (F)
                    (C)
                              boy(t2⊃n6)   dogs(t2⊃n11)  dogs(t2⊃n27)
boy(t3⊃n23)  with(t5⊃n25)

# FIG.159

NP(t1⊃n1)
(v=5. 5
p=3. 5)

NP(t2⊃n2)　　　D　　　PP(t6⊃n7)

DET(t3⊃n3)　NOUN(t1⊃n5)　　PREP(t7⊃n8)　NOUN(t1⊃n10)
　　　　　　　　(v=1. 0　　　　　　　　　　　　(v=1. 0
a(t4⊃n4)　　p=1. 0)　　　with(t8⊃n9)　p=1. 0)

　　　　　　　　　　(E)

boy(t2⊃n6)　　　　　　　　　　　dogs(t2⊃n11)

# FIG.160

P · ○ start of decision

Y:decision of non inclusion
of forbidden tree

locally yes ◇ Forbidden tree is not included. ◇ locally no
Y

X4 : input of border
forbidden tree

locally uncertain

Group made of extra-regional exclusive trees whose topmost
nodes are respective leaf border nodes which are accommodated
in border node register BNR of Y(element for detecting non-
inclusion of forbidden tree in exclusive tree) is introduced in
border register BOD(ni). To the topmost node of each extra-
regional exclusive tree, the node number is affiliated by the
effect of process Y7(border node pair recording)."

yes
R ○

no
○ Q

X5:decision over
emptiness of border
register ◇ BOD(ni) is empty. ◇ yes

no

X6 : call of lower layer

Out of range forbidden tree positioned
first at border register BOD(ni) is
taken out and transmitted to lower flow
chart together with node number ni which
becomes upper node number to lower layer.

XD:main P
decision
process

R ≡

Decision of
non inclusion
of forbidden
tree at currently
treated
exclusive tree
and call of
lower layer is
conducted.

Q
no

yes

(detection unit of non inclusion
of forbidden tree with out of
range extension situated lower)

Operation of "detection unit of non
inclusion of forbidden tree with out of
range extension" situated lower is
conducted here. Input is out of range
forbidden tree having topmost node with OR
tree node number of border node. Output is
decision of non inclusion of forbidden tree
(yes) or negation of non inclusion (no). In
case of yes, allele exclusive group after
modification or in case of no, value null is
,in common, introduced to the portion
belonging to input border node number of
global memory GTM overwriting former data.

yes

no

# FIG.161

unit for detecting non-inclusion of extra-regional forbidden tree including abbreviation of main decision process

X1 : start of operation

This layer receives forbidden tree having ,at its topmost node, the information that layer number of this layer is ni. This layer also receives layer number and depth of higher layer calling this layer. After introducing the copy of allele exclusive tree group having layer number ni stored in global memory GTM into allele exclusive tree register CMR(ni), cursor is placed at the left end of CMR(ni). Depth value is obtained as a value lager than 1 of input depth value and memorized in depth memory S(ni).

X2:decision over absence of exclusive tree

CMR(ni) is empty. — yes

no

assigning part of pair to be processed

X3:input of pair of exclusive tree and forbidden tree

X7 : deletion of exclusive tree    Q

Exclusive tree which is stored in allele exclusive tree register CMR(ni) and on which cursor is positioned is deleted. Exclusive trees situated after the deleted tree are moved leftward by one position. The cursor is moved leftward by one position unless cursor is positioned at the right end.

A pair composed from exclusive tree of CMR(ni) on which cursor is placed and forbidden tree whose topmost node is affiliated with node number ni is made and introduced to decision element of non inclusion of forbidden tree.

X8 : decision over absence of exclusive tree

yes    CMR(ni) is empty.

no

XS:decision of methodology

yes    Depth is smaller than threshold.

no

X9 : decision over cursor position

no    Cursor is on the end of CMR(ni).

yes

XD:main decision process    P

Decision of non inclusion of forbidden tree at currently treated exclusive tree and call of lower layer is conducted.

R
yes    Q
no

X10 : move of cursor

Cursor in CMR(ni) is moved 1 place rightward.

X11 : output of yes

Decision of yes meaning success of non inclusion of forbidden tree is output to the layer of higher node number from which current layer is called. The trees in allele exclusive tree resister CMR(ni) overwrite former data in the portion of ni in global memory GTM.

X12 : output of no

Decision of yes meaning failure of non inclusion of forbidden tree is output to the layer of higher node number from which current layer is called. Single node with tree value 0 overwrites former data in the portion of ni in global memory GTM.

# FIG.162

unit to detect non inclusion of extra-regional forbidden including abbreviation of main decision
process

X1 : start of operation

This layer receives forbidden tree having ,at its topmost node, the information that layer number of this layer is ni. This layer also receives layer number and depth of higher layer calling this layer. After introducing the copy of allelic exclusive tree group having layer number ni stored in global memory GTM into allelic exclusive tree register CMR(ni), cursor is placed at the left end of CMR(n1). Depth value is obtained as a value lager than 1 of input depth value and memorized in depth memory S(n1).

X2:decision over absence of exclusive tree

CMR(ni) is empty. — yes / no

X20:acquisition of composing node

Composing nodes other than leaf nodes of exclusive tree which is accommodated in allelic exclusive tree register CMR(ni) A and on which cursor is placed are acquired and introduced to component node register MCR.

X7 : deletion of exclusive tree Q

Exclusive tree which is stored in allele exclusive tree register CMR(ni) and on which cursor is positioned is deleted. Exclusive trees situated after the deleted tree are moved leftward by one position. The cursor is moved leftward by one position unless cursor is positioned at the right end.

X21 : decision over absence of component nodes

yes

MCR is empty.

no

X22:composition of decision pair

X8 : decision over absence of exclusive tree

yes

CMR(ni) is empty.

no

XS:decision of methodology

Depth is smaller than threshold. — no / yes

X9 : decision over cursor position

no

Cursor is on the end of CMR(ni).

yes

X10 : move of cursor

Cursor in CMR(ni) is moved 1 place rightward.

The node number which is accommodated in component node register MCR and on which cursor is placed is obtained. From the tree which is stored in exclusive tree register CMR(n1) and on which cursor is placed, the partial tree having topmost node number obtained from MCR is extracted. Moreover, the node number obtained from MCR is filled in to the topmost node of forbidden tree. The pair made of thus obtained partial tree and forbidden tree is introduced to main decision process XD.

X11 : output of yes P

R / yes

Decision of non inclusion of forbidden tree at currently treated exclusive tree and call of lower layer is conducted. Q / no

X23:move of node

Cursor of MCR is moved 1 position forward.

X11 : output of yes

Decision of yes meaning success of non inclusion of forbidden tree is output to the layer of higher node number from which current layer is called. The trees in allele exclusive tree resister CMR(ni) overwrite former data in the portion of ni in global memory GTM.

X12 : output of no

Decision of yes meaning failure of non inclusion of forbidden tree is output to the layer of higher node number from which current layer is called. Single node with tree value 0 overwites former data in the portion of ni in global memory GTM.

# FIG.163

NP (n1)

DET          NOUN

a            boy

# FIG.164

cursor

CMR(n1)

NP (n1)

DET (n12)　　NP# (n14)
(A)
a (n13)

NP (n1)

NP (n2)　　　　　　　　PP (n7)

DET (n3)　　NOUN# (n5)　　PREP (n8)　　NOUN# (n10)
(D)
a (n4)　　　　　　　　with (n9)

(1)

NP (n1)

DET (n12)　NP# (n14)
(A)
a (n13)

(2)

NP (n1)

DET　NOUN

a　boy

(3)

MCR
[ n1　n12 ]

(4)

NP (n1) ▬ ▬ ▬ NP (n1)

DET (n12)　NP# (n14)　　DET　NOUN
(A)
a (n13)　　　　　　a　boy

(5)

MCR
[ n12 ]

(6)

DET (n12) ▬ ▬ ▬ NP (n12)

a (n13)　　　DET　NOUN

a　boy

(7)

MCR
[　]

(8)

cursor

GMR (n1) : fs (n1) =ON

NP (n1)

DET (n12)　　NP# (n14)
(A)
a (n13)

NP (n1)

NP (n2)　　　　　　　　PP (n7)

DET (n3)　　NOUN# (n5)　　PREP (n8)　　NOUN# (n10)
(D)
a (n4)　　　　　　　　with (n9)

(9)

# FIG.165

MCR(n1)

[ n1  n2  n3  n7  n8 ]

(10)

NP(n1) ━ ━ ━ ━ ━ ━ NP(n1)

NP(n2)          PP(n7)          DET    NOUN

DET(n3) NOUN#(n5)   PREP(n8) NOUN#(n10)   a    boy
           (D)

a(n4)              with(n9)

(11)

MCR(n1)

[ n2  n3  n7  n8 ]

(12)

NP(n2) ━ ━ ━ NP(n2)

DET(n3) NOUN#(n5)  DET   NOUN

a(n4)              a    boy

(13)

BOD(n1)

NOUN(n5)

boy

(14)

BOD(n1)

NOUN(n5)

boy

(15)

cursor

CMR(n5)

NOUN(n5)
    (E)
boy(n6)

(16)

NOUN(n5) ━ ━ NOUN(n5)

boy(n6)        boy

(17)

cursor

CMR(n5)

(18)

GTM

NP(n1)                    NP(n1)

DET(n12)  NP#(n14)    NP(n2)      (D)      PP(n7)
       (A)
a(n13)          DET(n3) NOUN#(n5)   PREP(n8) NOUN#(n10)

                a(n4)              with(n9)

NP(n14)                   NP(n14)

NOUN(n15)   PP(n17)     NOUN(n22)  PREP(n24)  NOUN#(n26)
        (B)                        (C)
boy(n16)  PREP(n18) NOUN(n20)  boy(n23) with(n25)

        with(n19) dogs(n21)

NULL(n5)      NOUN(n10)        NOUN(n26)

           dogs(t2⊃n11) (F)   dogs(t2⊃n27) (F)

(19)

# FIG.166

GMR(n1):fs(n1)=ON

cursor

NP(n1)

DET(n12)      NP#(n14)

           (A)

a(n13)

(20)

GMR(n1)

cursor

NP(n1)

DET(n12)      NP#(n14)

           (A)

a(n13)

(21)

GTM

NP(n1)

DET(n12)      NP#(n14)

           (A)

a(n13)

NP(n14)                          NP(n14)

NOUN(n15)        PP(n17)          NOUN(n22)      PREP(n24)      NOUN#(n26)

       (B)     PREP(n18)   NOUN(n20)   boy(n23)      (C)

boy(n16)                              with(n25)

       with(n19)   dogs(n21)

NULL(n5)         NOUN(n10)                NOUN(n26)

              (F)                      (F)

           dogs(t2⊃n11)            dogs(t2⊃n27)

(22)

# FIG.167

(n1)

(n2)

(n3)    (n5)

(n4)

(n7)

(n8)    (n10)

(n9)

# FIG.168

N1 : start of operation

This layer receives layer number of upper layer
calling this layer and input exclusive tree
having topmost node with node number ni
which is current layer number. Array of child
trees of input exclusive tree are introduced in
child tree register LCR(ni).

N2:decision over existence
of child trees

Terms exist in LCR(ni) — no

N3:appending a
node to output array

yes

Node ni is appended to the right of meaningful
information in node output register MCR.

N4:survey of
residual child
trees — Terms exist in LCR(ni) — no

N5:instruction
to lower layer

yes

The first partial tree in child tree child tree
register LCR(mn) is taken out and given to layer
of the topmost node of taken out tree together
with the information that the calling layer is
layer ni. After taking out, the data in register
LCR(ni) is shifted by 1 position to the left."

Node acquisition at lower
node number is conducted.

N6:Response to
upper node
number

Response to upper node
numberis done.

# FIG.169

(n1)
├── (n2)
│    ├── (n3)
│    │    └── (n4)
│    └── (n5)
└── (n7)
     ├── (n8)
     │    └── (n9)
     └── (n10)

(1)

MCR [n1]

(2)                                    (3)

LCR (n1)

(n2)
├── (n3)
│    └── (n4)
└── (n5)

(n7)
├── (n8)
│    └── (n9)
└── (n10)

(4)

(n2)
├── (n3)
│    └── (n4)
└── (n5)

(5)

LCR (n2)

(n3)
└── (n4)      (n5)

(6)

[n1 n2]

(n3)
└── (n4)

(7)

LCR (n2)

(n5)

(8)

(n3)
└── (n4)

(9)

LCR (n3)

(n4)

(10)

MCR [n1 n2 n3]

(11)

LCR (n3)

(n4)

(12)

(n4)

(13)

LCR (n4)

(14)

LCR (n2)

(n5)

(15)

(n5)

(16)

LCR (n5)

(17)

(n7)
├── (n8)
│    └── (n9)
└── (n10)

LCR (n1)

(18)

(n7)
├── (n8)
│    └── (n9)
└── (n10)

(19)

# FIG.170

LCR(n7)

$$\begin{bmatrix} (n8) & (n10) \\ & \\ (n9) & \end{bmatrix}$$

(20)

MCR
[n1 n2 n3 n7]

(21)

LCR(n7)

$$\begin{pmatrix} (n8) & (n10) \\ & \\ (n9) & \end{pmatrix}$$

(22)

$$\begin{pmatrix} (n8) \\ \\ (n9) \end{pmatrix}$$

(23)

LCR(n8)

$$\begin{pmatrix} (n9) \\ \\ \end{pmatrix}$$

(24)

MCR
[n1 n2 n3 n7 n8]

(25)

(n9)

LCR(n8)

$$\begin{pmatrix} \\ \\ \end{pmatrix}$$

(26)

(n9)

(27)

LCR(n9)

$$\begin{pmatrix} \\ \\ \end{pmatrix}$$

(28)

(n10) LCR(n7)

$$\begin{pmatrix} \\ \\ \end{pmatrix}$$

(29)

(n10)

(30)

LCR(n10)

$$\begin{pmatrix} \\ \\ \end{pmatrix}$$

(31)

# FIG.171

<generation module of parsed tree not including forbidden tree>

W1 : start of operation

Total allelic exclusive groups each one of which has array of allelic exclusive trees arranged in decreasing order of accumulated tree value is introduced to global allelic tree register GAR in which each element allelic exclusive group is separated each other and arranged in increasing order of OR tree number and accessible through GAR cursor. The node number of leftmost allelic exclusive group which represents topmost node of OR tree is registered for the purpose of survey on success or failure of analysis. Then GAR cursor is placed at rightmost exclusive tree group which represents one of leaf nodes of OR tree.

W2:preparation for application of forbidden tree

Cursor in forbidden tree register FBR is moved to one position to the left of leftmost position of FBR.

W5:decision over completion of reading GAR

GAR cursor is at lleft end.

yes          no

W6:introduction of next allelic tree group

W3:decision over end of forbidden tree

W4:introduction of next forbidden tree

no    FBR cursor is on rightmost position.    yes

Cursor of forbidden tree register FBR is moved 1 position to the right to introduce next forbidden tree. Pair composed of forbidden tree introduced and allelic exclusive tree on which cursor of GAR is placed become survey object of forbidden-tree-free.

GAR cursor is moved to tree group situated next to the left.

W7:intermediate maximum value tree generation

Maximum value tree generation unit is operated on allelic tree groups situated at and to the left of GAR cursor.          K

X:decision over non-inclusion of forbidden tree

IN

OUT-NC

Operation of decision element of non inclusion of forbidden tree is conducted.
Y

Operation of composition node acquisition element is conducted.
A

Operation of unit for yes detecting non-inclusion of extrara regional forbidden tree in exclusive tree is conducted.
X

OUT-C

yes          no

W8:final maximum value tree generation

Maximum value tree generation unit is operated on entire tree groups in GAR These tree groups become to be free of forbidden trees.          K

W9:survey on analysis success

yes    A exclusive tree exists at the leftmost position of GAR. The position has been registered at operation W1.    no

W10:construction of analysis tree

Operation of maximum value tree construction unit is applied to the tree at the leftmost GAR position. This operation constructs output analysis tree.          C

W11:output of analysis tree

W12:output of analysis failure

Information of analysis success is output. Analysis tree generated at maximum value tree construction unit together with entire trees in GAR is output.

Information of analysis failure is output. Entire trees in GAR is output.

# FIG.172

NP(t1⊃n1)　　　　　　　　　NP(t1⊃n1)
(v=6.5　　　　　　　　　　　(v=5.5
p=1.5)　　　　　　　　　　　p=3.5)

DET(t2⊃n12)　NP#(t4⊃n14)　NP(t2⊃n2)　　　　　　　PP(t6⊃n7)

　　　a(t3⊃n13)　　(A)　　　DET(t3⊃n3)　NOUN#(t5⊃n5)　PREP(t7⊃n8)　NOUN#(t9⊃n10)

　　　　　　　　　　　　　　　　a(t4⊃n4)　　(D)　　　　with(t8⊃n9)

NP(t1⊃n14)　　　　　　　　　　　　　　　　NP(t1⊃n14)
(v=5.0　　　　　　　　　　　　　　　　　　　(v=3.66
p=5.0)　　　　　　　　　　　　　　　　　　　p=2.66)

NOUN(t2⊃n15)　PP(t4⊃n17)　　　NOUN(t2⊃n22)　PREP(t4⊃n24)　NOUN#(t6⊃n26)

　　　　(B)　　PREP(t5⊃n18)　NOUN(t6⊃n20)　boy(t3⊃n23)　with(t5⊃n25)　(C)

boy(t3⊃n16)　with(t6⊃n19)　dogs(t7⊃n21)

NOUN(t1⊃n5)　　　NOUN(t1⊃n10)　　　NOUN(t1⊃n26)
(v=1.0　　　　　　(v=1.0　　　　　　(v=1.0
p=1.0)　　　　　　p=1.0)　　　　　　p=1.0)
　　　(E)　　　　　　　(F)　　　　　　　(F)
boy(t2⊃n6)　　　dogs(t2⊃n11)　　　dogs(t2⊃n27)

# FIG.173

```
        NP( )                      NP( )
       /     \                    /     \
     DET      NP                DET      NOUN
      |      /  \                |         |
      a    NOUN  PP              a        boy
              /    \
           PREP    NOUN
             |
           with
```

# FIG.174

cursor(5)

⬇

GAR

NP(t1⊃n1)　　　　　　　　NP(t1⊃n1)

(v=6.5　　　　　　　　　(v=5.5
p=1.5)　　　　　　　　　p=3.5)

DET(t2⊃n12)　NP#(t4⊃n14)　　NP(t2⊃n2)　　　　　　PP(t6⊃n7)

a(t3⊃n13)　　(A)　　DET(t3⊃n3)　NOUN#(t5⊃n5)　PREP(t7⊃n8)　NOUN#(t9⊃n10)

a(t4⊃n4)　(D)　　with(t8⊃n9)

cursor(4)

⬇

NP(t1⊃n14)　　　　　　　　NP(t1⊃n14)

(v=5.0　　　　　　　　　　(v=3.66
p=5.0)　　　　　　　　　　p=2.66)

NOUN(t2⊃n15)　　PP(t4⊃n17)　　NOUN(t2⊃n22)　PREP(t4⊃n24)　NOUN#(t6⊃n26)

(B)　PREP(t5⊃n18)　NOUN(t6⊃n20)　boy(t3⊃n23)　with(t5⊃n25)　(C)

boy(t3⊃n16)　with(t6⊃n19)　dogs(t7⊃n21)

cursor(3)　　　　　cursor(2)　　　　　cursor(1)

⬇　　　　　　　　⬇　　　　　　　　⬇

NOUN(t1⊃n5)　　　NOUN(t1⊃n10)　　　NOUN(t1⊃n26)

(v=1.0　　　　　　(v=1.0　　　　　　(v=1.0
p=1.0)　　　　　　p=1.0)　　　　　　p=1.0)

(E)　　　　　　　(F)　　　　　　　(F)

boy(t2⊃n6)　　　dogs(t2⊃n11)　　　dogs(t2⊃n27)

(1)

# FIG.175

FBR    cursor

NP ( )
DET    NP
a    NOUN    PP
PREP    NOUN
with

NP ( )
DET    NOUN
a    boy

(2)

cursor

FBR

NP ( )
DET    NP
a    NOUN    PP
PREP    NOUN
with

NP ( )
DET    NOUN
a    boy

(3)

NOUN(t1⊃n26)
(v=1.0
p=1.0)
|    (F)
dogs(t2⊃n27)

NP ( )
DET    NP
a    NOUN    PP
PREP
with

(4)

NOUN(t1⊃n26) ▬ ▬ NP ( )
(v=1.0
p=1.0)
|    (F)
dogs(t2⊃n27)
DET    NP
a    NOUN    PP
PREP    NOUN
with

(5)

cursor

FBR

NP ( )
DET    NP
a    NOUN    PP
PREP    NOUN
with

NP ( )
DET    NOUN
a    boy

(6)

# FIG.176

NOUN(t1⊃n26)
(v=1.0
p=1.0)
(F)
dogs(t2⊃n27)

NP( )
DET          NOUN
a            boy

(7)

NOUN(t1⊃n26) ─ ─ ─ NP( )
(v=1.0
p=1.0)
(F)
dogs(t2⊃n27)

DET          NOUN
a            boy

(8)

NP(t1⊃n14)                          NP(t1⊃n14)
(v=5.0                              (v=3.66
p=5.0)                              p=2.66)

NOUN(t2⊃n15)   PP(t4⊃n17)      NOUN(t2⊃n22) PREP(t4⊃n24) NOUN#(t6⊃n26)
                                                              (C)
          PREP(t5⊃n18)  NOUN(t6⊃n20)  boy(t3⊃n23)  with(t5⊃n25)
(B)
boy(t3⊃n16)  with(t6⊃n19)  dogs(t7⊃n21)

NP( )
DET    NP
a   NOUN  PP
      PREP NOUN
        with

(9)

NP(t1⊃n14) ─ ─ ─ ─ ─ NP( )
(v=5.0
p=5.0)

NOUN(t2⊃n15)   PP(t4⊃n17)

              (B)     PREP(t5⊃n18)   NOUN(t6⊃n20)

boy(t3⊃n16)  with(t6⊃n19)   dogs(t7⊃n21)

DET    NP
a   NOUN  PP
      PREP NOUN
        with

(10)

NP(t1⊃n14) ─ ─ ─ ─ ─ NP( )
(v=3.66
p=2.66)

NOUN(t2⊃n22)  PREP(t4⊃n24)   NOUN#(t6⊃n26)
                                  (C)
boy(t3⊃n23)   with(t5⊃n25)

DET    NP
a   NOUN  PP
      PREP NOUN
        with

(11)

# FIG.177

(12)

(13)

(14)

(15)

# FIG.178

FIG.179

NP(t1⊃n1)　　　　NP(t1⊃n1)
(v=6.5　　　　　　(v=5.5
p=1.5)　　　　　　p=3.5)

DET(t2⊃n12) NP#(t4⊃n14)　NP(t2⊃n2)　　　　PP(t6⊃n7)

a(t3⊃n13)　(A)　　DET(t3⊃n3) NOUN#(t5⊃n5) PREP(t7⊃n8)　NOUN#(t9⊃n10)

(D)

a(t4⊃n4)　　　　　　with(t8⊃n9)

NP( )

DET　NOUN

a　　boy

(19)

NP(t1⊃n1) ▬ ▬ ▬ NP( )
(v=6.5
p=1.5)　　　　　DET　NOUN

DET(t2⊃n12)　NP#(t4⊃n14)　a　boy

a(t3⊃n13)　(A)

(20)

NP(t1⊃n1) ▬ ▬ ▬ ▬ ▬ ▬ NP( )
(v=5.5
p=3.5)　　　　　　　　　　　　DET　NOUN

NP(t2⊃n2)　　　　PP(t6⊃n7)　a　boy

DET(t3⊃n3) NOUN#(t5⊃n5) PREP(t7⊃n8)　NOUN#(t9⊃n10)

(D)

a(t4⊃n4)　　　　with(t8⊃n9)

(21)

cursor(5)

GAR

NP(t1⊃n1)　　　NP(t1⊃n14)　　NULL(n5)　　NOUN(t1⊃n10)　　NOUN(t1⊃n26)
(v=6.5　　　　　(v=3.66　　　　　　　　　　(v=1.0　　　　　　(v=1.0
p=1.5)　　　　　p=2.66)　　　　　　　　　　p=1.0)　　　　　　p=1.0)

DET(n12) NP#(n14) NOUN(n22) PREP(n24) NOUN#(n26)　　(F)　　　　(F)
(A)　　　　　　　　　　　　　(C)　　　dogs(t2⊃n11)　dogs(t2⊃n27)

a(n13)　　　　　boy(n23) with(n25)

(22)

GAR

NP(t1⊃n1)　　　NP(t1⊃n14)　　NULL(n5)　　NOUN(t1⊃n10)　　NOUN(t1⊃n26)
(v=5.16　　　　(v=3.66　　　　　　　　　　(v=1.0　　　　　　(v=1.0
p=1.5)　　　　　p=2.66)　　　　　　　　　　p=1.0)　　　　　　p=1.0)

DET(t2⊃n12) NP#(n14) NOUN(n22) PREP(n24) NOUN#(n26)　(F)　　　　(F)
(A)　　　　　　　　　　　　　　(C)　　dogs(t2⊃n11)　dogs(t2⊃n27)

a(n13)　　　　　boy(n23) with(n25)

(23)

# FIG.180

NP(t1⊃n1)
(v=5. 16
p=1. 5)

DET(n12)                    NP#(n14)

                NOUN(n22)    PREP(n24)    NOUN#(n26)
                                    (C)              (F)
a(n13)          boy(n23)    with(n25)    dogs(t2⊃n27)

# FIG.181

NP(t1⊃n1)
(v=6. 5
p=1. 5)

DET(t2⊃n12)            NP#(t4⊃n14)

(A)
NOUN(t2⊃n15)            PP(t4⊃n17)

(B)            PREP(t5⊃n18)  NOUN(t6⊃n20)

a(t3⊃n13)      boy(t3⊃n16)  with(t6⊃n19)  dogs(t7⊃n21)

# FIG.182

NP(t1⊃n1)
(v=5.5
p=3.5)

NP(t2⊃n2)　　　　D　　PP(t6⊃n7)

DET(t3⊃n3)　NOUN(t1⊃n5)　PREP(t7⊃n8)　NOUN(t1⊃n10)

(E)　　　　　　　　　　　　(F)

a(t4⊃n4)　boy(t2⊃n6)　with(t8⊃n9)　dogs(t2⊃n11)

# FIG.183

## FIG.184

**FIG.185**

(1)

$$\alpha_t(j) = \frac{\exp((H_j, h_t))}{\displaystyle\sum_{j=1}^{n}\exp((H_j, h_t))}$$

(2)

$$c_t = \sum_{j=1}^{n}\alpha_t(j)\times H_j$$

(3)

$$\sum_{j=1}^{n}\exp((H\ ,h\ ))\times H$$
$$=(\sum_{j=1}^{n}\exp((H_j, h_t)))\times\sum_{j=1}^{n}(\alpha_t\times H_j)$$
$$=(\sum_{j=1}^{n}\exp((H_j, h_t)))\times c_t$$

(4)

# FIG.186

**FIG.187**

parent node

1st child portion    2nd child    – –    Nth child portion
portion

(1)

(parent node 1st child portion 2nd child portion
- - - - - Nth child portion)

(2)

a   parent node

b    c    d   3rd child portion

1st child portion    2nd child portion   e    f

(3)

( a    b    c    d   e    f )

(4)

d   e    f

(5)

( d    e    f )

(6)

( a    b    c ( d    e    f ) )

(7)

# FIG.188

```
                                        (NP
        NP                                 (DET  a)
 DET          NP                           (NP  (NOUN  boy)
           NOUN    PP                           (PP  (PREP  with)
                PREP   NOUN                          (NOUN  dogs))))
  a        boy  with   dogs
           (1)                                    (2)
```

```
                                        (NP
             NP                            (OR
             OR                               [  (NOUN  boy)
    NOUN       PP                                (PP
           PREP  NOUN  NOUN  PREP  NOUN              (PREP  with)
                                                    (NOUN  dogs)
     boy   with  dogs   boy  with  dogs          )
              (3)                             ]
                                             [  (NOUN  boy)
                                                (PREP with)
                                                (NOUN dogs)
                                             ]
                                           )
                                        )
```

# FIG.189

$y_k$ (output analysis tree)

(NP
  (DET a)
  (NP (NOUN boy)
    (PP (PREP with)
      (NOUN dogs) ) ) )

=

```
            NP
         /      \
       DET       NP
        |      /     \
        |   NOUN      PP
        |    |      /    \
        |    |   PREP   NOUN
        |    |    |      |
        a   boy  with   dogs
```

KATE:analysis result selection
apparatus in example sentence
driven machine translation

ETP:example
tree pool

$X$ (input sentence)

a    boy    with    dogs

# FIG.190

FIG.191

coincident partial tree

(NP (NOUN boy)
    (PP (PREP with)
        (NOUN dogs) ) )

procedure to generate coincident
partial tree
(1)Generally plural number of perfectly
coincident word array expression are
generated by generation part of perfectly
coincident partial word array CCS from word
array expressions of trees $y_k$ and $y_s$.
(2)From perfect coincident word array
expression generated at CCS, front portion
positioned before first open parenthesis
erased. From remaining rear portion,
generally plural number of portions having
the same number of open and close
parenthesis are cut out. These are
coincident partial trees consisting output
of partial tree cutting out unit PTC,

$$= \quad \text{NP tree: NOUN (boy), PP (PREP with, NOUN dogs)}$$

PTC:partial tree cutting out unit

a)
(NP (NOUN boy)
    (PP (PREP with)
        (NOUN dogs) ) ) )

CCS:generation part of perfectly coincident partial word sequence

(NP
    (DET a)
    (NP (NOUN boy)
        (PP (PREP with)
            (NOUN dogs) ) ) )

$$= \quad \text{NP tree: DET (a), NP [NOUN (boy), PP (PREP with, NOUN dogs)]}$$

$\uparrow y_k$

(NOUN
    (ADJ a)
    (NP (NOUN boy)
        (PP (PREP with)
            (NOUN dogs) ) ) )

$$= \quad \text{NOUN tree: ADJ (a), NP [NOUN (boy), PP (PREP with, NOUN dogs)]}$$

$\uparrow y_s$

KATE:analysis result
selection apparatus in
example sentence driven
machine translation

ETP:example
tree pool

STS : seq2seq translation system
(Training concerning trees in
example pool ETF has
accomplished

estimation phase

x

a    boy    with    dogs

# FIG.192

NP

NOUN    PP

PREP NOUN

boy  with   dogs

coincident partial tree CT

PTC:partial tree cutting out unit

$Z$

CCS:generation part of perfectly coincident partial word sequence

ETP:example tree pool

$y_k$

$y_s$

KATE:analysis result selection apparatus in example sentence driven machine translation

STS : seq2seq translation system
(Training over trees in example pool ETF has been accomplished.)

estimation phase

$x$

(1)

NP

NOUN    PP

PREP NOUN

boy  with   dogs

coincident partial tree CT

ETP:example tree pool

$y'_k$

KATE:analysis result selection apparatus in example sentence driven machine translation

$x$

(2)

# FIG.193

AETP:pool of additional example trees

┌ ─ ─ ─ ─ ─ ─ ─ ─ ┐
│ screening by human hand │
└ ─ ─ ─ ─ ─ ─ ─ ─ ┘

$Z$

PTC:partial tree cutting out unit

CCS:generation part of perfectly coincident partial word sequence

ETP:example tree pool

$y_k$

KATE:analysis result selection apparatus in example sentence driven machine translation

$y_s$

STS : seq2seq translation system (Training over trees in example pool ETF has been accomplished.

estimation phase

$x$

Xpool:group of example sentences not included in example tree pool ETF

(1)

AETP:pool of additional example trees $+$ ETP:example tree pool

→ ETP:exmple tree pool (newly augmented)

(2)

**FIG.194**

output of seq2seq

bj

|  |  |  | 0 | 1 c 0 | 2 a 0 | 3 b 0 | 4 c 0 | 5 a 0 |
|---|---|---|---|---|---|---|---|---|
| 1 | a | 0 | | 0 | ① | 0 | 0 | ① |
| 2 | b | 0 | | 0 | 0 | ① | 0 | 0 |
| 3 | c | 0 | | ① | 0 | 0 | ① | 0 |
| 4 | a | 0 | | 0 | ① | 0 | 0 | ① |
| 5 | c | 0 | | ① | 0 | 0 | ① | 0 |

output of analysis result selection apparatus in example sentence driven machine translation $a_i$

(1)

| output of analysis result selection apparatus in example sentence driven machine translation | (a | b | c | a) | c |
|---|---|---|---|---|---|
| output of seq2seq | c | (a | b | c | a) |

(2)

# FIG.195

H1

Initial value of row parameter i is set to 1.

H51

Current i value and j value is stored in IJ memory IJM.

H52

Word ai is appended after data stored so far in processing list CCSL.

H2

Condition of i = I + 1 is met.   yes

H3   no

j value is set to 1.

H53

Value of element pi+1,j+1 is 1   no

H54   yes

Alternation of i=i+1,j=j+1 is made.

H4

Condition of j = J+ 1 is met.   yes

H5   no

Value of element pi,j is 1 and value of element , pi-1,j-1 is 0.   yes

no

H55

Condition of element number of CCS≧m is met.   no

H56   yes

Blank letter is inserted to perfectly coincident word sequence register CCSR and subsequently data in CCSL is output to CCSR. i value and j value are restored to the values in IJ memory IJM.

H57

i value and j value are restored to the values in IJ memory IJM.

H7

1 is added to i value.

H6

1 is added to j value.

H8

Word string in perfectly coincident word string register CCSR is introduced to partial tree cutting out unit PTC.

# FIG.196

F1

Operation begins.

F2

A perfectly coincident word string is picked up and introduced
to input register INR in alignment of left justification.

F3

Continuous leftward move ,accompanying discard operation
of words passing leftmost position of input register INR, of
words in INR is conducted until an open parenthesis reaches
to leftmost position of INR or until INR becomes empty.

F4    Input register
INR is empty    yes

no

F5

Counter COT is reset to 0.

F6

A word is taken out of input register INR
and introduced to the rightmost position of
processing register CPR. When input word
is open parenthesis counter COP is
counted up by 1 and when close
parenthesis COT is counted down by 1.

F7    Input register
INR is empty    yes

no

F8    Figure in counter
COT is 0.    yes

no

F9

Words in processing register CPR is aligned to
left justification. Words in CPR is introduced
to the position next to the meaningful data of
output register OUTR. Consequently a blank
is introduced to OUTR. CPR is reset.

F10

Generally plural
number of
coincident partial
tree are output.

# FIG.197

INR                                          INR

a)
(NP (NOUN boy)                          (NP (NOUN boy)
    (PP (PREP with)                         (PP (PREP with)
        (NOUN dogs))))                          (NOUN dogs))))

(1)                                          (2)


INR         CPR                    INR     CPR         OUTR

)     (NP (NOUN boy)                                (NP (NOUN boy)
          (PP (PREP with)          )       NULL         (PP (PREP with)
              (NOUN dogs)))                                 (NOUN dogs)))__

(3)                                          (4)


INR      CPR           OUTR                           NP
                                                 ┌────┴────┐
                   (NP (NOUN boy)               DET        NP
NULL     NULL          (PP (PREP with)           │     ┌────┴────┐
                          (NOUN dogs)))          │   NOUN       PP
                                                 │    │     ┌────┴────┐
                                                 │    │   PREP     NOUN
                                                 │    │    │         │
                                                 a   boy  with      dogs

(5)                                          (6)


# FIG.198

| | 1 | 2 | 3 | 4 | 5 | 6 | 7 |
|---|---|---|---|---|---|---|---|
| 1 | There | * | a | $ | about | (N) | skiing |
| 2 | | | the | | | — | (N) |

(1)

| 1 | 2 | 3 | 4 | 5 | 6 | 7 |
|---|---|---|---|---|---|---|
| But(CONJ) | there(THERE) | be(past,sgl)(BE) | a(DET) | excitement(N) | about(P) | game(pl)(N) |

(2)

# FIG.199

There ← (1)1
(2)1
there(THERE) ← (3)2
(4)T

(a)

* ← (1)2 (1)1
(2)1 (2)1
be(past,sgl)(BE) ← (3)3 (3)2
(4)F (4)T

(b)

a ← (1)3 (1)2 (1)1
(2)1 (2)1 (2)1
a(DET) ← (3)4 (3)3 (3)2
(4)T (4)F (4)T

(c)

$ ← (1)4 (1)3 (1)2 (1)1
(2)1 (2)1 (2)1 (2)1
excitement(N) ← (3)5 (3)4 (3)3 (3)2
(4)F (4)T (4)F (4)T

(d)

about ← (1)5 (1)4 (1)3 (1)2 (1)1
(2)1 (2)1 (2)1 (2)1 (2)1
about(P) ← (3)6 (3)5 (3)4 (3)3 (3)2
(4)F (4)F (4)T (4)F (4)T

(e)

(N) ← (1)6 (1)5 (1)4 (1)3 (1)2 (1)1
(2)1 (2)1 (2)1 (2)1 (2)1 (2)1
game(pl)(N) ← (3)7 (3)6 (3)5 (3)4 (3)3 (3)2
(4)F (4)F (4)F (4)T (4)F (4)T

(f)

about ← (1)5 (1)4 (1)3 (1)2 (1)1
(2)1 (2)1 (2)1 (2)1 (2)1
about(P) ← (3)6 (3)5 (3)4 (3)3 (3)2
(4)F (4)F (4)T (4)F (4)T

(g)

− ← (1)6 (1)5 (1)4 (1)3 (1)2 (1)1
(2)2 (2)1 (2)1 (2)1 (2)1 (2)1
game(pl)(N) ← (3)7 (3)6 (3)5 (3)4 (3)3 (3)2
(4)F (4)F (4)F (4)T (4)F (4)T

(h)

(N) ← (1)7 (1)6 (1)5 (1)4 (1)3 (1)2 (1)1
(2)2 (2)2 (2)1 (2)1 (2)1 (2)1 (2)1
game(pl)(N) ← (3)7 (3)7 (3)6 (3)5 (3)4 (3)3 (3)2
(4)F (4)F (4)F (4)F (4)T (4)F (4)T

(i)

There  *  a  $  about  −  (N)

(k)

# FIG.200

Indication of operation start is given.
(1)

Operation of total upper covering is conducted.
(2)

Request of operation is given to lower layer.
(3)

Operation at lower layer is conducted.
(4)

Cover and maximum structure is constructed.
(5)

Cover and maximum structures are arranged in order of tree value.
(6)

Object of processing is chosen.
(11)

1st forbidden tree is introduced.
(12)

1st term is deleted.(Next term becomes 1st term)
(9)

covering range extension out of exclusive tree

First term of array is processed.
(10)

Forbidden tree is applied.
(8)

covering range limited to inside of exclusive tree

non occurrence of covering

Next forbidden tree is introduced.
(14)

Detection of last forbidden tree is conducted.
(13)

not last term

last term

Synthetic maximum tree value expansion tree is output.
(7)

# FIG.201

(1)

(2)

# FIG.202

$P_{n1}$

$P_{n2}$

Hx1

Hx2

$H_{x3}$

$H_{x4}$

# FIG.203

synthetic maximum tree value expansion tree hsm

FIG.204

(1)

(2)

# FIG.205

FIG.206

EP 4 567 661 A1

FIG.207

341

(10)

(10')

$P_{n1}$

$P_{m1}$

$P_{m3}$

$h_{y1sm}$

$h_{y2sm}$

$h_{y5sm}$

$h_{y6sm}$

# FIG.208

(1)

(2)

(3)

(4)

# FIG.209

X1 : start of operation ⦵A

This layer receives forbidden tree having ,at its topmost node, the information that layer number of this layer is ni. This layer also receives layer number and depth of higher layer calling this layer. After introducing the copy of allele exclusive tree group having layer number ni stored in global memory GTM into allele exclusive tree register CMR(ni), cursor is placed at the left end of CMR(ni). Depth value is obtained as a value lager than 1 of input depth value and memorized in depth memory S(ni).

X2:decision over absence of exclusive tree

CMR(ni) is empty. — yes / no

X3:input of pair of exclusive tree and forbidden tree

A pair composed from exclusive tree of CMR(ni) on which cursor is placed and forbidden tree whose topmost node is affiliated with node number ni is made and introduced to decision element of non inclusion of forbidden tree.

Y:decision of non inclusion of forbidden tree

Forbidden tree is not included. — locally uncertain / locally no / locally yes
Y

X7 : deletion of exclusive tree

Exclusive tree which is stored in allele exclusive tree register CMR(ni) and on which cursor is positioned is deleted. Exclusive trees situated after the deleted tree are moved leftward by one position. The cursor is moved leftward by one position unless cursor is positioned at the right end.

X4 : input of border forbidden tree

Group made of out of range exclusive trees whose topmost nodes are respective lowest border nodes (output of border node register BNR generated by Y:decision of non inclusion of forbidden tree at preceding position) is introduced into border register BOD(ni).

X8 : decision over absence of exclusive tree

CMR(ni) is empty. — yes / no

X5:decision over emptiness of border register

BOD(ni) is empty. — yes / no

X9 : survey over cursor position

Cursor is on the end of CMR(ni). — no / yes

X10 : move of cursor

Cursor in CMR(ni) is moved 1 place rightward.

X6 : call of lower layer

Out of range forbidden tree positioned first at border register BOD(ni) is taken out and transmitted to lower flow chart together with node number ni which becomes upper node number to lower layer.

(detection unit of non inclusion of forbidden tree with out of range extension situated lower) A

X11 : output of yes

Decision of yes meaning success of non inclusion of forbidden tree is output to the layer of higher node number from which current layer is called. The trees in allele exclusive tree resister CMR(ni) overwrite former data in the portion of ni in global memory GTM.

Operation of "detection unit of non inclusion of forbidden tree with out of range extension" situated lower is conducted here. Input is out of range forbidden tree having topmost node with OR tree node number of border node. Output is decision of non inclusion of forbidden tree (yes) or negation of non inclusion (no). In case of yes, allele exclusive group after modification or in case of no, value null is ,in common, introduced to the portion belonging to input border node number of global memory GTM overwriting former data.

B — yes / no — C

W3:Decision over end of forbideen tree ⦵B

W4:introduction of next forbidden tree

FBR cursor is on rightmost position. — no / yes

Cursor of forbidden tree register FBR is moved 1 position to the right to introduce next forbidden tree. The forbidden tree introduced and allele exclusive group on which cursor of GAR is placed become survey object of non inclusion of forbidden tree.

X12 : output of no

Decision of yes meaning failure of non inclusion of forbidden tree is output to the layer of higher node number from which current layer is called. Single node with tree value 0 overwrites former data in the portion of ni in global memory GTM.

To W6:introduction of next allele tree group

# FIG.210

⦵C

To W5:Decision over completion of reading global allele tree register GAR

GTM

NP (n1)                  NP (n1)

DET (n12)    NP# (n14)        NP (n2)    (D)        PP (n7)

              (A)      DET (n3)   NOUN# (n5)    PREP (n8)   NOUN# (n10)

a (n13)                    a (n4)               with (n9)

NP (n14)                  NP (n14)

NOUN (n15)    PP (n17)       NOUN (n22)   PREP (n24)   NOUN# (t6 ⊃ n26)

      (B)    PREP (n18)   NOUN (n20)                (C)

boy (n16)                    boy (n23)    with (n25)

         with (n19)   dogs (n21)

NOUN (n5)         NOUN (n10)         NOUN (n26)

    (E)               (F)              (F)

boy (n6)        dogs (t2 ⊃ n11)     dogs (t2 ⊃ n27)

# FIG.211

# FIG.212

**FIG.213**

FIG.214

NP(t1⊃n1)
(v=5.5
p=3.5)

NP(t2⊃n2)　　D　　PP(t6⊃n7)

DET(t3⊃n3)　NOUN(t1⊃n5)　PREP(t7⊃n8)　NOUN(t1⊃n10)
　　　|　　　(v=1.0　　　　　　　　　　(v=1.0
　a(t4⊃n4)　p=1.0)　　with(t8⊃n9)　p=1.0)
　　　　　　　|(E)
　　　　　boy(t2⊃n6)　　　　　　　dogs(t2⊃n11)

(1)

NP(t1⊃n1)
(v=5.16
p=1.5)

DET(t2⊃n12)　　　　　NP(t1⊃n14)
　　|　　　　　　　　(v=3.66
a(t3⊃n13)　　　　　　p=2.66)

NOUN(t2⊃n22)　PREP(t4⊃n24)　NOUN(t1⊃n26)
　　|　　　　　|　(C)　　　　(v=1.0
boy(t3⊃n23)　with(t5⊃n25)　p=1.0)
　　　　　　　　　　　　　　　|
　　　　　　　　　　　　　dogs(t2⊃n27)

(2)

# FIG.215

seq2seq

Index trading is a common form of program trading. ⟶

shisu saiteitorihiki wa purogurramu torihiki no hitotsuno ippankei desu。

(1)

```
                                TEXT
            CL                                          END
  **1 NP              VP
       NOUN      VP1              NP
  NOUN    NOUN         **2 NP              PP
                        DET    NOUN    PREP      NP **3
                              ADJ  NOUN            NOUN
                                              NOUN    NOUN
  index  arbitrage  is   a  common form  of  program  trading   .
```

(2)

```
            TEXT                      NP**1          NP**2              NP**3
      CL            END                NP             NP                 NP
   NPE    VP                          NOUN        DET    NOUN           NOUN
       VP1     NP                  NOUN  NOUN         ADJ  NOUN      NOUN    NOUN
            NPE     PP
                 PREP  NPE
   NP**1 be NP**2 of NP**3  .     index arbitrage  a common form   program trading
```

(3)

NP**1 is NP**2 of NP**3 .      NP**1  index arbitrage      NP**2  an common form      NP**3  program trading

(4)

seq2seq
NP**1 is NP**2 of NP**3 . ⟶ NPT**1 wa NPT**3 no NPT**2 desu。

seq2seq
NP**1  index arbitrage ⟶ NPT**1  shisu saiteitorihiki

seq2seq
NP**2  a common form ⟶ NPT**2  hitotuno ippankei

seq2seq
NP**3  program trading ⟶ NP**3 puroguramu torihiki

(5)

shisu saiteitorihiki wa purogurramu torihiki no hitotsuno ippankei desu。

(6)

# FIG.216

TEXT
CL
NP#5
VP
NOUN
VP1
NP#25
NOUN    NOUN
NP#27
PP
DET    NOUN
PREP    NP#51
ADJ    NOUN
NOUN
END
NOUN    NOUN

index    arbitrage#18    is    a    common    form#44    of    program    trading#64/#66    .

(1)

```
(TEXT#2
    (CL
        (NP#6
            (NOUN#8
                (NOUN index)#12
                (NOUN arbitrage)))#18
        (VP#20
            (VP1 is)
            (NP#26
                (NP#28
                    (DET  a)
                    (NOUN
                        (ADJ common)
                        (NOUN form)))#44
                (PP#46
                    (PREP  of)
                    (NP#52
                        (NOUN#54
                            (NOUN program)
                            (NOUN trading)))#64
            ))#66
    ))
        (END  .)) #73
```

(2)

# FIG.217

B1    start of operation

**NPE matrix filling in begins.**

B2    initialization

Cursor is placed to the left of word sequence and word counter WCN is set to 0.

B3 cursor move

Cursor is moved 1 position to the left and 1 is added to WCN value.

B4 NP detection

Cursor is on NP.  —yes→

B5 NPE generation

An NPE is generated and is placed to the right of existing lower NPE situated 1 row lower of lowest open NPE when the lower NPE exists or is placed directly under the lowest open NPE when absence of the lower NPE. When there exists no open NPE, generated NPE is placed at the 1st row of the column one column to the right of the rightmost column having existing NPE. The fields of "begin", "count" and "span" are respctively filled in by the value less than 1 of current WCN value, 1 and 0.

no

B6 open parenthesis detection

Cursor is on (.  —yes→

no

B7 count value increase

Values of fields "count" of entire open NPE's are increased by 1.

B8 close parenthesis detection

Cursor is on ).  —yes→

no

B9 treatment of close parenthesis

Values of fields "count" of entire open NPE's are reduced by 1. When the value in the field of "count" of an NPE becomes 0 by the reduction, the field of "end point" is filled in by current WCN value changing the state of the PNE to "close". Hereafter, field values of the NPE are kept the same.

B10 leaf word detection

Previous word exists and is other than (.  —yes→

no

B11    treatment of leaf word

Values of fields "span" of entire open NPE's are increased by 1.

B12 detection of S expression end

no — WCN value reaches total word number.

yes

B13 end of operation

**NPE matrix filling-in ends.**

# FIG.218

**#5**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | | | | | | | | | | | | |
| 2 | | | | | | | | | | | | |

(1)

**#6**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 1 | 0 | | | | | | | | | |
| 2 | | | | | | | | | | | | |

(2)

**#17**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 1 | 2 | | | | | | | | | |
| 2 | | | | | | | | | | | | |

(3)

**#18**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 0 | 2 | 18 | | | | | | | | |
| 2 | | | | | | | | | | | | |

(4)

**#26**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 0 | 2 | 18 | 25 | 1 | 0 | | | | | |
| 2 | | | | | | | | | | | | |

(5)

**#27**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 0 | 2 | 18 | 25 | 2 | 0 | | | | | |
| 2 | | | | | | | | | | | | |

(6)

**#28**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 0 | 2 | 18 | 25 | 2 | 0 | | | | | |
| 2 | | | | | 27 | 1 | 0 | | | | | |

(7)

**#44**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 0 | 2 | 18 | 25 | 1 | 3 | | | | | |
| 2 | | | | | 27 | 0 | 3 | 44 | | | | |

(8)

**#52**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 0 | 2 | 18 | 25 | 3 | 4 | | | | | |
| 2 | | | | | 27 | 0 | 3 | 44 | 51 | 1 | 0 | |

(9)

**#64**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 0 | 2 | 18 | 25 | 2 | 6 | | | | | |
| 2 | | | | | 27 | 0 | 3 | 44 | 51 | 0 | 2 | 64 |

(10)

**#66**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 0 | 2 | 18 | 25 | 0 | 6 | 66 | | | | |
| 2 | | | | | 27 | 0 | 3 | 44 | 51 | 0 | 2 | 64 |

(11)

**#73**

| | 1st NPE column | | | | 2nd NPE column | | | | 3rd NPE column | | | |
|---|---|---|---|---|---|---|---|---|---|---|---|---|
| | begin | count | span | end | begin | count | span | end | begin | count | span | end |
| 1 | 5 | 0 | 2 | 18 | 25 | 0 | 6 | 66 | | | | |
| 2 | | | | | 27 | 0 | 3 | 44 | 51 | 0 | 2 | 64 |

(12)

**FIG.219**

## (1)

| | 1st NPE column | | | | | 2nd NPE column | | | | | 3rd NPE column | | | | |
|---|---|---|---|---|---|---|---|---|---|---|---|---|---|---|---|
| | begin | count | span | end | number | begin | count | span | end | number | begin | count | span | end | number |
| 1 | 5 | 0 | 2 | 18 | 1 | 25 | 0 | 6 | 66 | | | | | | |
| 2 | | | | | | 27 | 0 | 3 | 44 | 2 | 51 | 0 | 2 | 64 | 3 |

(1)

## (2)

TEXT

CL — END

NPE — VP

VP1 — NP

NPE — PP

PREP — NPE

NP**1   is   NP**2   of   NP**3   •

NP**1 — NP — NOUN — NOUN / NOUN — index / arbitrage

NP**2 — NP — DET / NOUN — ADJ / NOUN — a / common / form

NP**3 — NP — NOUN — NOUN / NOUN — program / trading

(2)

## (3)

| | 1st NPE column | | | | | 2nd NPE column | | | | | 3rd NPE column | | | | |
|---|---|---|---|---|---|---|---|---|---|---|---|---|---|---|---|
| | begin | count | span | end | number | begin | count | span | end | number | begin | count | span | end | number |
| 1 | 5 | 0 | 2 | 18 | 1 | 25 | 0 | 6 | 66 | 2 | | | | | |
| 2 | | | | | | 27 | 0 | 3 | 44 | | 51 | 0 | 2 | 64 | |

(3)

## (4)

TEXT

CL — END

NPE — VP

VP1 — NPE

NP**1   is   NP**2   •

NP**1 — NP — NOUN — NOUN / NOUN — index / arbitrage

NP**2 — NP — NP / PP — DET / NOUN — ADJ / NOUN — a / common / form — PREP / NP — of — NOUN — NOUN / NOUN — program / trading

(4)

# FIG.220

```
(TEXT#2
  (CL
  (NP#6
      (NOUN#8
        (NOUN index)#12
        (NOUN arbitrage)))#18
    (VP#20
      (VP1 is)
      (NP#26
        (NP#28
            (DET  a)
            (NOUN
              (ADJ common)
              (NOUN form)))#44
            (PP#46
              (PREP  of)
              (NP#52
                (NOUN#54
                  (NOUN program)
                  (NOUN trading)
          ))#64
        ))#66
      ))
    (END .)) #73
```

(1)

|  | 1st NPE column | | | | | 2nd NPE column | | | | | 3rd NPE column | | | | |
|---|---|---|---|---|---|---|---|---|---|---|---|---|---|---|---|
|  | begin | count | span | end | number | begin | count | span | end | number | begin | count | span | end | number |
| 1 | 5 | 0 | 2 | 18 | 1 | 25 | 0 | 6 | 66 |  |  |  |  |  |  |
| 2 |  |  |  |  |  | 27 | 0 | 3 | 44 | 2 | 51 | 0 | 2 | 64 | 3 |

(2)

```
#5[(PNE   NP**1)  NP**1    #18]

#27[(PNE   NP**2)  NP**2   #44]

#51[(PNE   NP**3   NP**3   #64]
```

(3)

```
                              (TEXT#2
                                (CL
        #5[(PNE NP**1)  NP**1(NP#6
                                (NOUN#8
                                  (NOUN index)#12
                                  (NOUN arbitrage)))]#18
                              (VP#20
                                (VP1 is)
                                (NP#26
        #27[(PNE NP**2)  NP**2(NP#28
                                    (DET  a)
                                    (NOUN
                                      (ADJ common)
                                      (NOUN form)))]#44
                                    (PP#46
                                      (PREP  of)
        #51[(PNE   NP**3)    NP**3(NP#52
                                        (NOUN#54
                                          (NOUN program)
                                          (NOUN trading)
                                  ))]#64
                              ))#66
                            ))
                            (END .)) #73
```

(4)

# FIG.221

```
(TEXT                    NP**1 (NP              NP**2 (NP              NP**3 (NP
  (CL                            (NOUN                   (DET  a)                (NOUN
    [(NPE NP**1)]                  (NOUN index)          (NOUN                    (NOUN program)
    (VP                            (NOUN arbitrage)        (ADJ common)           (NOUN trading)
      (VP1 is)                   ))                        (NOUN form)          ))
      (NP                                                ))
        [(NPE NP**2)]
        (PP
          (PREP  of)
          [(NPE NP**3)]
      ))

  ))
    (END  .)
)
```

(1)

```
(TEXT                          NP**1              NP**2                    NP**3
  (CL                    (NP                (NP                      (NP
    (NPE NP**1)            (NOUN             (DET  a)                 (NOUN
    (VP                      (NOUN index)    (NOUN                     (NOUN program)
      (VP1 is)               (NOUN arbitrage)  (ADJ common)           (NOUN trading)
      (NP                  ))                  (NOUN form)            ))
        (NPE NP**2)                          ))
        (PP
          (PREP  of)
          (NPE NP**3)
      ))

  ))
    (END  .)
)
```

(2)

(NP**1 is NP**2 of NP**3.)    NP**1 (index arbitrage)    NP**2 (a common form)    NP**3 (program trading)

(3)

# FIG.222

seq2seq

NP**1 is NP**2 of NP**3 . ➡ NPT**1 wa NPT**3　no　NPT**2 desu 。

seq2seq

NP**1　index arbitrage ➡ NPT**1　shisu saiteitorihiki

seq2seq

NP**2　a common form ➡ NPT**2　hitotuno ippankei

seq2seq

NP**3　program trading ➡ NP**3 puroguramu torihiki

(1)

shisu saiteitorihiki wa purogurramu torihiki no hitotsuno ippankei desu。

(2)

# FIG.223

## INTERNATIONAL SEARCH REPORT

| International application No. |
| --- |
| **PCT/JP2023/028984** |

| A. | CLASSIFICATION OF SUBJECT MATTER |
| --- | --- |

*G06F 40/45*(2020.01)i; *G06F 40/44*(2020.01)i
FI:   G06F40/45; G06F40/44

According to International Patent Classification (IPC) or to both national classification and IPC

| B. | FIELDS SEARCHED |
| --- | --- |

Minimum documentation searched (classification system followed by classification symbols)

G06F40/45; G06F40/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | 白井清昭 他3名, PGLR法を用いた構文木付きコーパスの自動構築, 第５７回（平成１０年後期）全国大会講演論文集（２）, 05 October 1998, pp. 2-213 to 2-214. (SHIRAI, Kiyoaki et al., Automatic Construction of a Structural Annotated Corpus using the PGLR mode, non-official translation (57th (1998 2nd term) National Convention Lecture Manuscripts) pp. 2-213, left column, lines 17-20 | 11 |
| Y | JP 4389332 B2 (INCORPORATED EDUCATIONAL INST MEISEI) 24 December 2009 (2009-12-24) claim 1 | 11 |
| A | | 1-10, 12-13 |
| X | JP 11-161648 A (OKI BUSINESS CO., LTD.) 18 June 1999 (1999-06-18) claim 1 | 14 |
| A | | 15 |

[✓] Further documents are listed in the continuation of Box C.    [✓] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 October 2023** | **31 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
|---|---|
| | **PCT/JP2023/028984** |

### C.    DOCUMENTS CONSIDERED TO BE RELEVANT

| Category* | Citation of document, with indication, where appropriate, of the relevant passages | Relevant to claim No. |
|---|---|---|
| A | 榊博史, コンピュータ翻訳技術, 電子情報通信学会, December 1993, pp. 116-150, (Institute of Electronics, Information and Communication Engineers), non-official translation (SAKAKI, Hiroshi. Machine Translation Technology) <br> entire text, all drawings | 1-10, 12-13 |

Form PCT/ISA/210 (second sheet) (January 2015)

## INTERNATIONAL SEARCH REPORT

| International application No. |
| --- |
| **PCT/JP2023/028984** |

**Box No. III  Observations where unity of invention is lacking (Continuation of item 3 of first sheet)**

This International Searching Authority found multiple inventions in this international application, as follows:

The claims are classified into the following seven inventions.

(Invention 1) Claims 1-2
Claims 1-2 are classified as invention 1 as a result of having the special technical feature in which "an adjacent element parent child relationship is constituted in a match matrix, identical elements are fused to constitute one tree, and only column number information of path elements in the constituted tree is arranged".

(Invention 2) Claims 3-5
Claims 3-5 do not share the special technical feature of invention 1, and there are also no other identical or corresponding special technical features between claims 3-5 and claim 1.
Furthermore, claims 3-5 do not depend from claim 1. Additionally, claims 3-5 are not substantially identical to or similarly closely related to any of the claims classified as invention 1.
Therefore, claims 3-5 cannot be classified as invention 1.
Claims 3-5 are classified as invention 2 as a result of having the special technical feature in which "a temporary exclusive tree is acquired by deleting nodes other than the nodes on the path to the dominant node from the matching word or second + additional contact, and sibling nodes of the nodes on said path".

(Invention 3) Claims 6-9
Claims 6-9 do not share the special technical feature of invention 1 or 2, and there are also no other identical or corresponding special technical features between claims 6-9 and claim 1 or 3.
Furthermore, claims 6-9 do not depend from claim 1 or 3. Additionally, claims 6-9 are not substantially identical to or similarly closely related to any of the claims classified as invention 1 or 2.
Therefore, claims 6-9 cannot be classified as invention 1 or 2.
Claims 6-9 are classified as invention 3 as a result of having the special technical feature in which "accumulated tree values for all conflict exclusive trees of the conflict exclusive tree group are found, and arrangement is performed in descending order of the accumulated tree values".

(Invention 4) Claim 10
Claim 10 does not share the special technical feature of invention 1, 2, or 3, and there are also no other identical or corresponding special technical features between claim 10 and claim 1, 3, or 6.
Furthermore, claim 10 does not depend from claim 1, 3, or 6. Additionally, claim 10 is not substantially identical to or similarly closely related to any of the claims classified as invention 1, 2, or 3.
Therefore, claim 10 cannot be classified as invention 1, 2, or 3.
Claim 10 is classified as invention 4 as a result of having the special technical feature in which "with the conflict exclusive trees as the starting point, fusing, to one exclusive tree, a selection tree having the maximum tree value, the selection tree found in the conflict exclusive tree group of the same OR tree number, at a lower connection node of the one exclusive tree, in a repeated manner to assemble an output analysis tree".

(Invention 5) Claim 11
Claim 11 does not share the special technical feature of invention 1, 2, 3, or 4, and there are no other identical or corresponding special technical features between claim 11 and claim 1, 3, 6, or 10.
Furthermore, claim 11 does not depend from claim 1, 3, 6, or 10. Additionally, claim 11 is not substantially identical to or similarly closely related to any of the claims classified as invention 1, 2, 3, or 4.
Therefore, claim 11 cannot be classified as invention 1, 2, 3, or 4.
Claim 11 is classified as invention 5 as a result of having the special technical feature in which "a sentence analysis tree obtained from an input sentence is manually revised as needed and introduced to the sentence example tree accumulation".

(Invention 6) Claims 12-13
Claims 12-13 do not share the special technical feature of invention 1, 2, 3, 4, or 5, and there are also no other identical or corresponding special technical features between claims 12-13 and claim 1, 3, 6, 10, or 11.
Furthermore, claims 12-13 do not depend from claim 1, 3, 6, 10, or 11. Additionally, claims 12-23 are not substantially identical to or similarly closely related to any of the claims classified as invention 1, 2, 3, 4, or 5.
Therefore, claims 12-13 cannot be classified as invention 1, 2, 3, 4, or 5.
Claims 12-13 are classified as invention 6 as a result of having the special technical feature in which "a matching sub-tree between the KATE output and STS output obtained by adding the same input sentence is acquired, and the acquired matching sub-tree is added to the above-mentioned sentence example tree".

(Invention 7) Claims 14-15

Form PCT/ISA/210 (continuation of first sheet) (January 2015)

## INTERNATIONAL SEARCH REPORT

International application No.

**PCT/JP2023/028984**

**Box No. III    Observations where unity of invention is lacking (Continuation of item 3 of first sheet)**

Claims 14-15 do not share the special technical feature of the above-mentioned invention 1, 2, 3, 4, 5, or 6, and there are no other identical or corresponding special technical features between claims 14-15 and claim 1, 3, 6, 10, 11, or 12.

Furthermore, claims 14-15 do not depend from claim 1, 3, 6, 10, 11, or 12. Additionally, claims 14-15 are not substantially identical to or similarly closely related to any of the claims classified as invention 1, 2, 3, 4, 5, or 6.

Therefore, claims 14-15 cannot be classified as invention 1, 2, 3, 4, 5, or 6.

Claims 14-15 are classified as invention 7 as a result of having the special technical feature in which "a noun phrase is extracted from an original language sentence, seq2seq language conversion is performed using word string conversion using a neural network on each body sentence that includes the extracted noun phrase and the noun phrase trace after noun phrase extraction, and thereafter each extracted noun phrase word string conversion result is introduced to the extracted noun phrase trace section of the body sentence word string conversion result including said noun phrase trace".

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2023/028984**

| Patent document cited in search report | Publication date (day/month/year) | Patent family member(s) | Publication date (day/month/year) |
|---|---|---|---|
| JP 4389332 B2 | 24 December 2009 | (Family: none) | |
| JP 11-161648 A | 18 June 1999 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4389332 B

**Non-patent literature cited in the description**

- **HIROSHI SAKAKI**. Computer translation technique. The Institute of Electronics, Information and Communication Engineers, CORONA PUBLISHING CO., LTD, 10 December 1992, 138-149
- **HIROYUKI SHINNOU**. PyTorch Natural language processing - Japanese text analysis with word2-vec/LSTM/seq2seq/BERT ! (impress top gear). *Impress*, 18 March 2021
- **TERUO HIKITA**. Algorithm wrtten in C - Comuputer Today Library 17. SHINSEI-SHA Co.,Ltd, 01 December 1995
- Computer translation technique. **HIROSHI SAKAKI**. The Institute of Electronics, Information and Communication Engineers. CORONA PUBLISHING CO., LTD, 10 December 1992, 138-149
- Computer translation technique. **HIROSHI SAKAKI**. The Institute of Electronics, Information and Communication Engineers. CORONA PUBLISHING CO., LTD, 10 December 1992, 182-228